# EUROPEAN PATENT APPLICATION

(11) **EP 0 590 763 A1**
(43) Date of publication of application: **06.04.1994**
(21) Application number: 93305730.9
(22) Date of filing: 21.07.1993
(51) Int. Cl.: H04N 1/40

(54) **Electronic separation scanner**

(30) Priority: 27.07.1992 US 920035
(71) Applicant: SCITEX CORPORATION LTD., Herzliya 46103 (IL)
(72) Inventor: Ossia, Yoav, Tel Aviv 63265 (IL)
(74) Representative: Hillier, Peter

(57) **Abstract**

An electronic separation scanner including a tool library including a plurality of tools, each individual one of the plurality of tools including a user interface operative to prompt a user to select values for at least one tone enhancement parameter, an optical-mechanical scanning unit operative to electronically scan a color image in accordance with at least one user-selected tone enhancement parameter value and a selective tool disabler operative to selectively disable access of the user to at least one of the plurality of tools.

## Description

### FIELD OF THE INVENTION

The present invention relates to methods and apparatus for scanning images.

### BACKGROUND OF THE INVENTION

Many electronic color separation scanners are currently on the market. Conventional scanners suffer from the disadvantage that they are relatively difficult to operate, particularly because the operator is repeatedly confronted with a wide variety of possible courses of actions, some of which may be incompatible relative to previously selected courses of action.

For example, a user prescans an image, using an electronic color separation scanner such as the Smart Scanner, commercially available from Scitex Corporation, Herzlia, Israel. The prescanned image is displayed to the user who selects a point in the prescanned image to serve as a white point. The selected point is then transformed to "absolute white". The user then corrects the color cast of the highlights. For example, the user may think that the light grays have a yellow cast, i.e., are too yellow and make an appropriate correction. However, this correction affects his previous selection of the white point by reducing the yellow component of the white point, thereby giving a bluish tone to the absolute white locations of the picture.

Another example is that a user may first increase the brightness level of a color image. The user subsequently selects a relatively non-bright point as the white point because the selected relatively non-bright point, according to the context of the picture, should be white. This operation results in brightening of all points somewhat less bright than the selected point which causes the entire picture to appear too bright.

### SUMMARY OF THE INVENTION

The present invention seeks to provide an improved apparatus and method for scanning images in which a professionally designed workflow is built into the electronic color separation scanner.

There is thus provided in accordance with a preferred embodiment of the present invention an electronic separation scanner including a tool library including a plurality of tools, each individual one of the plurality of tools including a user interface operative to prompt a user to select values for at least one tone enhancement parameter, an optical-mechanical scanning unit operative to electronically scan a color image in accordance with at least one user-selected tone enhancement parameter value and a selective tool disabler operative to selectively disable access of the user to at least one of the plurality of tools.

Further in accordance with a preferred embodiment of the present invention, the selective tool disabler includes a set of rules determining a relationship between use of at least one first tool and disabling of a corresponding set of at least one second tools, and a user selection monitor operative to receive an indication of use of a first tool and to disable access of the user to the corresponding set of at least one second tools.

Still further in accordance with a preferred embodiment of the present invention, the selective tool disabler includes a set of rules determining a relationship between type of usage of individual first tools and disabling of a corresponding set of at least one second tools, and a tool usage monitor operative to receive a characterization of usage of a user-selected first tool and to disable access of the user to the corresponding set of at least one second tool in accordance with the set of rules.

Still further in accordance with a preferred embodiment of the present invention, the selective tool disabler includes a tool sequence generator operative to determine a tool sequence in which at least first and second tools are sequentially presented to the user, the first tool including an indication prompting the user to select values for a first set of first tone enhancement parameters and the second tool including an indication prompting the user to select values for a second set of second tone enhancement parameters.

Additionally in accordance with a preferred embodiment of the present invention, the optical-mechanical scanning unit includes a sequence of transformation units operative to provide a corresponding sequence of representations of the color image, the tool library includes a first tool for selecting values of a tone enhancement parameter of an individual transformation unit in the transformation unit sequence and a second tool for selecting values of a tone enhancement parameter of a later transformation unit in the transformation unit sequence, and the first tool precedes the second tool in the tool sequence.

Further in accordance with a preferred embodiment of the present invention, a user querying unit is provided which is operative to prompt a user to enter a user evaluation of at least one characteristic of the color image and to transmit user evaluation information to the tool sequence generator, and the tool sequence generator determines the tool sequence at least partly in accordance with the user evaluation information.

Still further in accordance with a preferred embodiment of the present invention, a query sequence generator is provided which is operative to receive a user response to an individual query from the user querying unit and to determine, at least partly in accordance therewith, a sequence of further queries to be presented to the user by the user querying unit.

Additionally in accordance with a preferred embodiment of the present invention, a query sequence generator is provided which is operative to automatically analyze at least one characteristic of the color image and to determine, at least partly in accordance therewith, a sequence of queries to be presented to the user by the user querying unit.

Further in accordance with a preferred embodiment of the present invention, the query sequence generator is operative to automatically analyze at least one characteristic of the color image and to determine, at least partly in accordance therewith, the sequence of further queries.

Still further in accordance with a preferred embodiment of the present invention, a user expertise level coding system is provided which includes, for each of a plurality of users, a stored indication of an expertise level code value, and the query sequence generator determines the sequence of queries presented to an individual user at least partly in accordance with the user's ordinal expertise level code value.

Additionally in accordance with a preferred embodiment of the present invention, the expertise level code value for each individual user includes an indication of a subset of the plurality of tools to be disabled for the individual user.

Further in accordance with a preferred embodiment of the present invention, the user querying unit prompts a user to evaluate at least one color image characteristic as satisfactory and the tool sequence generator is operative to determine a tool sequence which excludes at least one tool which affects the satisfactory color image characteristic.

Further in accordance with a preferred embodiment of the present invention, an automatic image analyzer is provided which is operative to automatically analyze at least one characteristic of the color image, and the tool sequence generator determines the tool sequence at least partly in accordance with the automatically analyzed characteristic.

For example, each of the first and second sets of first tone enhancement parameters may include an individual one of the following set of tone enhancement parameters: brightness/darkness of white point, brightness/darkness of dark point, global image brightness/darkness, color balance of white point, color balance of dark point and global image color balance.

Additionally in accordance with a preferred embodiment of the present invention, a current image display is provided which is operative to provide a real-time indication of the appearance of the image as scanned in accordance with current user-selected tone enhancement parameter values.

Still further in accordance with a preferred embodiment of the present invention, a user expertise level coding system is provided which includes, for each of a plurality of users, a stored indication of an ordinal expertise level code value, and, for each expertise level code value, a stored indication of a subset of the plurality of tools to be disabled by the selective tool disabler.

Additionally in accordance with a preferred embodiment of the present invention, the user expertise level coding system also includes an automatic expertise level updating system.

Further in accordance with a preferred embodiment of the present invention, the automatic expertise level updating system includes, for each expertise level code value, a stored indication of at least one prerequisite for advancing a user at the individual expertise level code value to the next expertise level code value.

Still further in accordance with a preferred embodiment of the present invention, the at least one prerequisite includes at least one of the following types of prerequisite: time accumulated at the individual expertise level, quantity of work experience at the individual expertise level, full utilization of the subset of tools which is not disabled by the selective tool disabler, quality level of scanned images generated by a user, and correctness of user's habitual work processes.

There is also provided in accordance with another preferred embodiment of the present invention a tone enhancement tool access control system for controlling user access to tools which allow user selection of tone enhancement parameter values according to which a color image is electronically scanned, the system including a tool library including a plurality of tools, each individual one of the plurality of tools including a user interface operative to prompt a user to select values for at least one tone enhancement parameter, and a selective tool disabler operative to selectively disable access of a user to at least one of the plurality of tools.

There is also provided, in accordance with another preferred embodiment of the present invention, an electronic separation scanning method including the steps of providing a tool library including a plurality of tools, each individual one of the plurality of tools including a user interface operative to prompt a user to select values for at least one tone enhancement parameter, selectively disabling access of the user to at least one of the plurality of tools, and electronically scanning a color image in accordance with at least one user-selected tone enhancement parameter value.

Further in accordance with a preferred embodiment of the present invention, the selectively disabling step includes the steps of providing a set of rules determining a relationship between use of at least one first tool and disabling of a corresponding set of at least one second tools, and receiving an indication of use of a first tool and disabling access of the user to the corresponding set of at least one second tools in accordance with the set of rules.

Further in accordance with a preferred embodiment of the present invention, the selectively disabling step includes the steps of providing a set of rules determining a relationship between type of usage of individual first tools and disabling of a corresponding set of at least one second tools, and receiving a characterization of usage of a user-selected first tool and disabling access of the user to the corresponding set of at least one second tools in accordance with the set of rules.

Still further in accordance with a preferred embodiment of the present invention, the disabling step includes the step of determining a tool sequence in which at least first and second tools are sequentially presented to the user, the first tool including an indication prompting the user to select values for a first set of first tone enhancement parameters and the second tool including an indication prompting the user to select values for a second set of second tone enhancement parameters.

Additionally in accordance with a preferred embodiment of the present invention, the step of electronically scanning includes the step of performing a sequence of color transformations, thereby to provide a sequence of representations of the color image, the tool library includes a first tool for selecting values of a tone enhancement parameter of an individual transformation in the transformation sequence and a second tool for selecting values of a tone enhancement parameter of a later transformation in the transformation sequence, and the first tool precedes the second tool in the tool sequence.

Still further in accordance with a preferred embodiment of the present invention, the method also includes the steps of prompting a user to enter a user evaluation of at least one characteristic of the color image, and determining the tool sequence at least partly in accordance with the user evaluation information.

Additionally in accordance with a preferred embodiment of the present invention, the method also includes the steps of receiving a user response to an individual query and determining, at least partly in accordance therewith, a sequence of further queries to be presented to the user.

Further in accordance with a preferred embodiment of the present invention, the method also includes the steps of automatically analyzing at least one characteristic of the color image, and determining, at least partly in accordance therewith, a sequence of queries to be presented to the user.

Still further in accordance with a preferred embodiment of the present invention, the step of determining includes the step of automatically analyzing at least one characteristic of the color image and determining, at least partly in accordance therewith, the sequence of further queries.

Additionally in accordance with a preferred embodiment of the present invention, the method also includes the step of storing, for each of a plurality of users, an indication of an expertise level code value, and the sequence of queries presented to an individual user is determined at least partly in accordance with the user's ordinal expertise level code value.

Further in accordance with a preferred embodiment of the present invention, the expertise level code value for each individual user includes an indication of a subset of the plurality of tools to be disabled for the individual user.

Still further in accordance with a preferred embodiment of the present invention, the step of prompting includes the step of prompting a user to evaluate at least one color image characteristic as satisfactory, and generating a tool sequence which excludes at least one tool which affects the satisfactory color image characteristic.

Additionally in accordance with a preferred embodiment of the present invention, the method also includes the steps of automatically analyzing at least one characteristic of the color image, and determining the tool sequence at least partly in accordance with the automatically analyzed characteristic.

Further in accordance with a preferred embodiment of the present invention, each of the first and second sets of first tone enhancement parameters includes an individual one of the following set of tone enhancement parameters: brightness/darkness of white point, brightness/darkness of dark point, global image brightness/darkness, color balance of white point, color balance of dark point, and global image color balance.

Still further in accordance with a preferred embodiment of the present invention, the method also includes the step of providing a real-time indication of the appearance of the image as scanned in accordance with current user-selected tone enhancement parameter values.

Still further in accordance with a preferred embodiment of the present invention, the method also includes the steps of storing, for each of a plurality of users, an indication of an ordinal expertise level code value, and, for each expertise level code value, storing an indication of a subset of the plurality of tools to be disabled by the selective tool disabler.

Additionally in accordance with a preferred embodiment of the present invention, the step of storing also includes the step of automatically updating expertise levels of individual users.

Further in accordance with a preferred embodiment of the present invention, the step of storing includes the step of storing, for each expertise level code value, an indication of at least one prerequisite for advancing a user at the individual expertise level code value to the next expertise level code value.

Still further in accordance with a preferred embodiment of the present invention, the at least one prerequisite includes at least one of the following types of prerequisites: time accumulated at the individual expertise level, quantity of work experience at the individual expertise level, full utilization of the subset of tools which is not disabled by the selective tool disabler, quality level of scanned images generated by a user, and correctness of user's habitual work processes.

There is also provided in accordance with another preferred embodiment of the present invention, a tone enhancement tool access control method for controlling user access to tools which allow user selection of tone enhancement parameter values according to which a color image is electronically scanned, the method including the steps of providing a tool library including a plurality of tools, each individual one of the plurality of tools including a user interface operative to prompt a user to select values for at least one tone enhancement parameter, and selectively disabling access of a user to at least one of the plurality of tools.

Further in accordance with a preferred embodiment of the present invention, the user evaluation of at least one color image characteristic defines a query sequence of at least one queries and the query sequence and the tool sequence are interspersed.

Still further in accordance with a preferred embodiment of the present invention, the step of prompting defines a query sequence of at least one queries and the query sequence and the tool sequence are interspersed.

### BRIEF DESCRIPTION OF THE DRAWINGS

The present invention will be understood and appreciated from the following detailed description, taken in conjunction with the drawings in which:
Fig. 1 is a simplified block diagram of an electronic separation scanner constructed and operative in accordance with a preferred embodiment of the present invention;
Fig. 2 is a simplified flowchart type diagram of a workflow provided in accordance with a preferred embodiment of the present invention;
Fig. 3 is a simplified flowchart type diagram of a collapsed variation of the workflow illustrated in Fig. 2 which may be provided instead of or in addition to the workflow illustrated in Fig. 2; and
Fig. 4 is a simplified block diagram of user status unit 28 of Fig. 1.

### DETAILED DESCRIPTION OF PREFERRED EMBODIMENTS

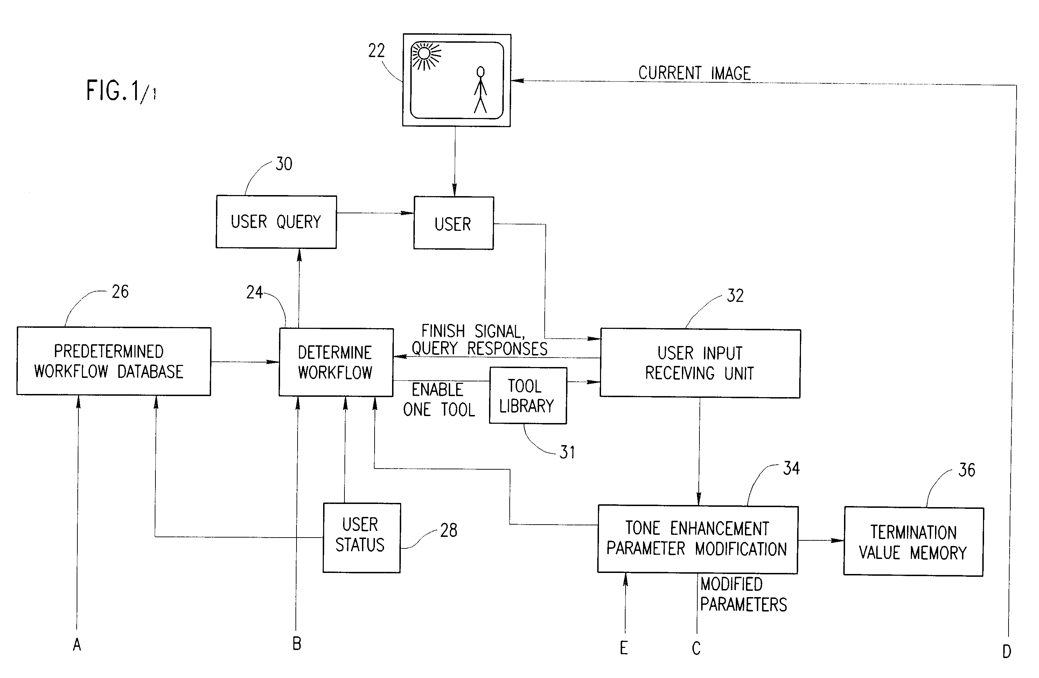

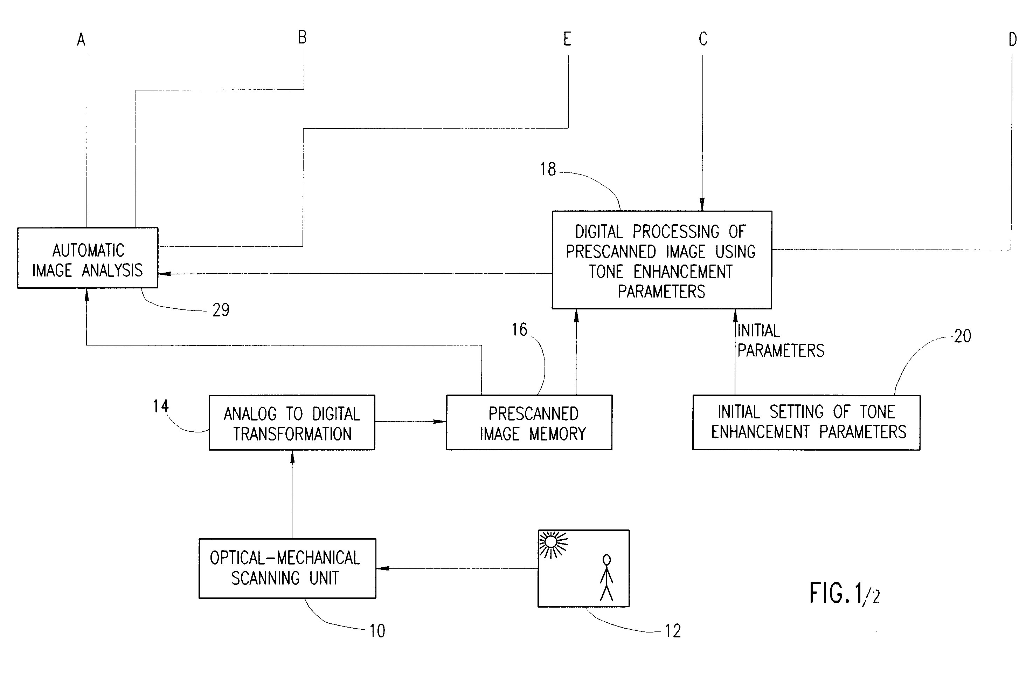

Reference is now made to Fig. 1 which is a simplified block diagram illustration of an electronic color separation scanner constructed in accordance with a preferred embodiment of the present invention.

The electronic color separation scanner of Fig. 1 comprises an optical-mechanical scanning unit 10 including all mechanical and optical components required to electronically prescan an analog representation 12 of a color image such as a transparency. Analog output signals generated by optical-mechanical scanning unit 10 are provided to an analog-to-digital hardware unit 14 which transforms these signals into digital signals defined in an input color space such as RGB. The input digital signals are stored in a digital prescanned image memory 16 such as a disk.

The prescanned image from prescanned image memory 16 is digitally enhanced by an image processing unit 18, in accordance with tone enhancement parameters which characterize at least one digital-to-digital transformation of the input digital signals of prescanned image 16. For example, the digital-to-digital transformations performed on prescanned image 16 may comprise the following sequence of transformations:
a. transformations, within the input color space, of the prescanned image, such as transformations of 12-bit input color space values, e.g. 12-bit RGB values, into 8-bit input color space values, e.g. 8-bit RGB values;
b. transformations from the input color space to an output color space, such as transformations from 8-bit RGB values to 8-bit CMYK values;
c. transformations within the output color space, such as transformations from 8-bit CMYK to 8-bit CMYK.

Initially, tone enhancement parameter values are set by an initial parameter setting unit 20. Unit 20 may comprise a database of tone enhancement parameter values which are predetermined or may be automatically determined as a function of characteristics of the prescanned image such as the characteristics which are automatically analyzed by unit 29, as explained below. The prescanned image as currently preprocessed by unit 18 is displayed to a user of the system by a display unit 22 which may comprise a CRT.

The user may now interact with the system in accordance with a well-defined work-flow in order to further modify the prescanned image. The user interaction workflow is determined by a workflow determining unit 24. Typically, the user interaction workflow comprises a sequence of queries which are directed at the user, some of which are followed by enablement of a specific image modification tool.

Each image modification tool typically includes a user interface which prompts a user to select values for one or more tone enhancement parameters. It is appreciated that the method shown and described herein for defining a workflow including a plurality of tools, may also be employed to define a within-tool workflow, for tools which enable a user to select values for more than one tone enhancement parameter. In this way, a tool which gives a user unguided freedom to modify two, three or more related tone enhancement parameters may be replaced by a tool in which the user is guided by a well-defined workflow in which tone enhancement parameters are modified sequentially.

At least one initial stage of the workflow employed by workflow determining unit 24 is determined by a database 26 which stores a predetermined initial workflow. According to a preferred embodiment of the present invention, the initial stage of the workflow, as well as subsequent stages thereof, are affected by the status of the user, as received by a user status input unit 28. Typically, user status input unit 28 allows a user's level of expertise to be classified by means of human input which may be provided by the user's supervisor. Supervisor input may be provided in any suitable form. For example, supervisor input may include, for each user and each tool in a tool library 31, an indication of whether or not the user is entitled to use the tool.

Preferably, the initial stage of the workflow, as well as subsequent stages thereof, are affected by at least one characteristic of the image which is analyzed by an automatic image analyzer 29. The characteristics which are automatically analyzed for an individual image preferably include tone enhancement parameters such as:
a. a color value which can serve as the white point of the image. This color value, and all brighter color values, are candidates for transformation to a user-defined "white point" color value.
b. a color value which can serve as the dark point of the image. This color value, and all darker color values, are candidates for transformation to a user-defined "dark point" color value.

Automatic analysis may initially be carried out on the prescanned image in memory 16 and may subsequently be carried out on the prescanned image as currently processed by unit 18. Preferably, the results of the automatic analysis at least partly determine the workflow.

A first query is presented to the user by means of a query presentation unit 30. The user's response to the query is received by workflow determination unit 24 via a user input receiving unit 32. In accordance with the contents of the response, workflow determination unit 24 then either presents a further query to the user via query presentation unit 30 or enables a single image modification tool from a library 31 of tools via user input receiving unit 32.

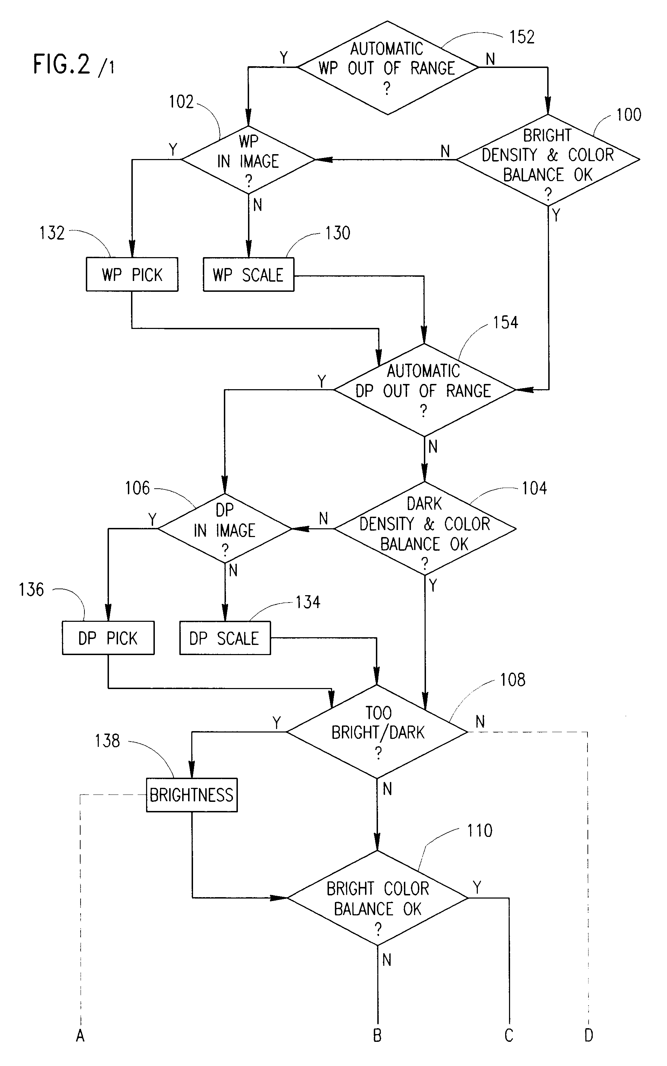

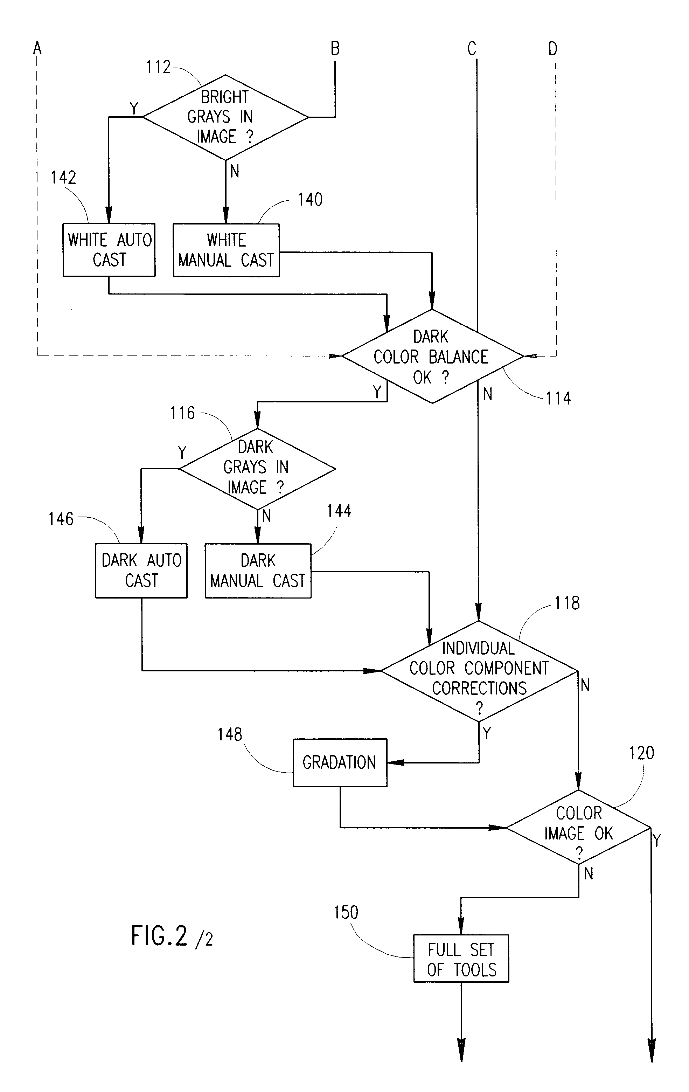

Tool library 31 may include a variety of tools such as the tools described hereinbelow with reference to Fig. 2. Each tool is a user interface prompting a user to select values for one or more tone enhancement parameters such as the tone enhancement parameters which were initially analyzed automatically by automatic image analysis unit 29, as explained above.

User input receiving unit 32 presents the single enabled image modification tool to the user, thereby prompting the user to set values for one or more input parameters of the tool. User input receiving unit 32 typically provides a finish signal to workflow determining unit 24, indicating that the user has completed use of the tool and, therefore, that a further query can be presented to the user.

A tone enhancement parameter modification unit 34 is operative to modify the values of one or more tone enhancement parameters in accordance with the user-selected input parameters for the enabled tool. Preferably, tone enhancement parameter modification unit 34 is also operative to modify the values of one or more tone enhancement parameters in accordance with automatic analysis of the current image received from automatic analysis unit 29.

The modified tone enhancement parameters are received by image processor 18 which reprocesses the prescanned image in accordance with the modified tone enhancement parameters. The reprocessed image is then presented to the user via display unit 22 and the next query or tool is presented. Preferably, reprocessing is carried out in real time, that is, as each tone enhancement parameter is modified, the image is reprocessed accordingly and the reprocessed image is displayed to the user so that the user will be up-to-date when handling the next query or tool.

Preferably, portions of the workflow are at least partly by analyzing the user's interactions with tools presented in preceding portions of the workflow. The analysis of past user-tool interactions are preferably provided by tone enhancement parameter modification unit 34 to workflow determining unit 24.

Eventually, the workflow reaches termination. The termination values of the tone enhancement parameters may be stored in a suitable form such as look-up-table (LUT) form, on a suitable memory 36 such as a hard disk. The termination values may be subsequently employed when performing the final scan of the transparency 12. In the course of the final scan, the termination values may be employed to control digital-to-digital transformations or, alternatively, may be adapted to be suitable for controlling analog-to-analog, analog-to-digital or digital-to-analog transformations performed in the course of the final scan.

According to a preferred embodiment of the present invention, the apparatus of Fig. 1 may be implemented by employing a computer listing appended hereto and referenced Appendix A, in conjunction with the Smart Scanner, commercially available from Scitex Corporation, Herzlia, Israel. The computer listing of Appendix A may be employed in conjunction with the Smart Scanner by following a procedure which is described in Appendix B, appended hereto.

Figs. 2 - 3 are flowchart-type illustrations of sample workflows for the apparatus of Fig. 1. Tools appear as rectangles, queries and branch points appear as diamonds, and arrows indicate the workflow.

Reference is now made specifically to Fig. 2. The workflow of Fig. 2 includes the following queries:

Query 100: "Are the contrast and color balance of the bright areas of the image satisfactory?"
term "contrast" refers to the extent to which relatively bright areas of the image differ from relatively non-bright areas of the image.

The term "color balance" refers to the relative magnitudes of a plurality of color components and determines the hue of the color image.

Query 102: "Is there a location in the image which can serve as a white point?"

Query 104: "Are the contrast and color balance of the dark areas of the image satisfactory?"

Query 106: "Is there a location in the image which can serve as a dark point?"

Query 108: "Is the image too bright or too dark?"

Query 110: "Is the color balance of the bright areas of the image satisfactory?"

Query 112: "Are there bright areas of the image which should be gray, but, in fact, appear to be colored?"

Query 114: "Is the color balance of the dark areas of the image satisfactory?"

Query 116: "Are there dark areas of the image which should be gray, but, in fact, appear to be colored?"

Query 118: "Consider each of the color components separately. Are there color corrections to be made on individual color-components?"

Query 120: "Is the color image now satisfactory?"

The workflow of Fig. 2 includes the following tools:

Tool 130 -- "WP scale": The New Density and Lumin Mask options of the White Point function, and also the Level suboption of the New Point option of the White Point function, all described on page 5-4 onward of the user guide of the Smart Scanner, commercially available from Scitex Corporation, Herzlia, Israel, the disclosure of which is incorporated herein by reference.

Tool 132 -- "WP pick": The Both suboption of the New Point option of the White Point function described on pages 5-4 and 5-5 of the Smart Scanner user guide. This suboption is also termed the White suboption.

Tool 134 -- "DP scale": The New Density and Lumin Mask options of the Dark Point function, and also the Level suboption of the New Point option of the Dark Point function, all described on page 5-19 onward of the Smart Scanner user guide.

Tool 136 -- "DP pick": The Both suboption of the New Point option of the Dark Point function described on pages. 5-19 onward of the Smart Scanner user guide. This suboption is also termed the Dark suboption.

Tool 138 -- "Brightness": The Brightness function described on page 5-34 of the Smart Scanner user guide.

Tool 140 -- "White manual cast": A tool which enables a user to select a bright color image location and to change the color balance thereof. Typically, the user-selected change in the color balance also affects other color image locations and particularly color image locations whose color is similar to the selected bright color image location.

Tool 142 -- "White auto cast": A tool which enables a user to select a bright color image location to be transformed to gray. The system selects the gray which is closest to the color value of the selected location and transforms the color value of the selected location to the system-selected gray color value. Typically, this transformation also affects other color image locations and particularly color image locations whose color is similar to the selected bright color image location.

Tool 144 -- "Dark manual cast": A tool which enables a user to select a dark color image location and to change the color balance thereof. Typically, the user-selected change in the color balance also affects other color image locations and particularly color image locations whose color is similar to the selected dark color image location.

Tool 146 -- "Dark auto cast": A tool which enables a user to select a dark color image location to be transformed to gray. The system selects the gray which is closest to the color value of the selected location and transforms the color value of the selected location to the system-selected gray color value. Typically, this transformation also affects other color image locations and particularly color image locations whose color is similar to the selected dark color image location.

Tool 148 -- "Gradation": The Gradation function described on page 5-20 of the Smart Scanner user guide.

Tools 150: According to one embodiment of the present invention, only some of the tools in the tool library are included in the guided workflow of Fig. 2. If an operator completes the workflow of Fig. 1 and remains unsatisfied with the scanned product (query 120), a tool menu is displayed to the user which may include all tools in the tool library, preferably including the tools described above, or alternatively all tools which the user is entitled to employ, taking into account his status.

According to a preferred embodiment of the present invention, user responses to individual queries at least partly determine the workflow. For example, in Fig. 2, if the user answers "Yes" to query 102, then queries 110 and 112 and tools 140 and 142 are eliminated from the workflow, as indicated by the dotted lines.

According to a preferred embodiment of the present invention, the workflow may branch depending upon an image characteristic which has been automatically analyzed by automatic image analyzer 29 of Fig. 1. For example, diamond 152 is a branch point which is operative as follows: if an automatically analyzed white point falls outside of a predetermined range of "reasonable" white points, the system may prevent the user from disregarding the white point by eliminating query 100 in Fig. 2. The first query to be presented is then query 102.

Similarly, diamond 154 is a branch point which is operative as follows: if an automatically analyzed dark point falls outside of a predetermined range of "reasonable" dark points, the system may prevent the user from disregarding the dark point by eliminating query 104 in Fig. 2. In this case, query 106 is presented directly after query 100 is negatively responded to, or directly after tool 130 or tool 132 is used.

According to one embodiment of the present invention, messages are provided to the user which indicate considerations of the system in determining the workflow.

According to a preferred embodiment of the present invention, queries may be presented differently to users of different levels of expertise.

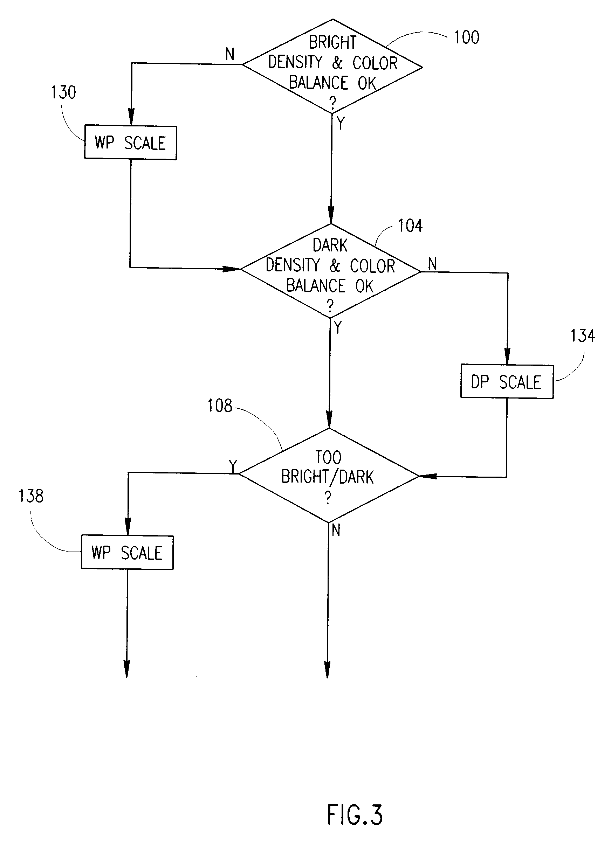

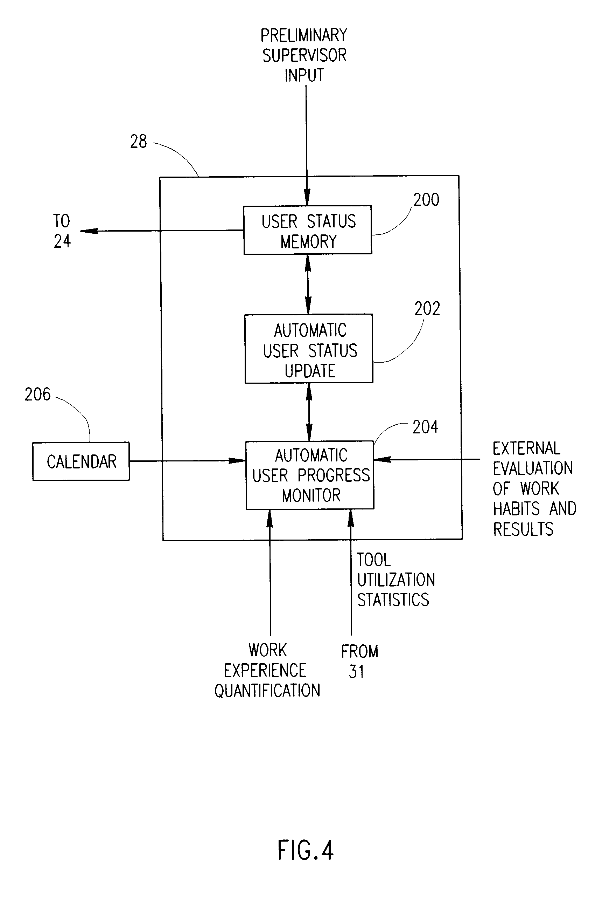

Reference is made to Fig. 3 which is a variation on the workflow of Fig. 2, suitable for a user who is only entitled to use tools 130, 134 and 138 of Fig. 2. The workflow of Fig. 3 is similar to Fig. 2 except that tools other than tools 130, 134 and 138 are not presented and except for the following omitted queries:
a. Query 102 is omitted since its purpose is to channel users to one of tools 130 and 132. Since only tool 130 is enabled, and not tool 132, query 102 is superfluous for the workflow of Fig. 3.
b. Query 106 is omitted since its purpose is to channel users to one of tools 134 and 136. Since only tool 134 is enabled, and not tool 136, query 106 is superfluous for the workflow of Fig. 3.
c. Queries 114, 116, 118 and 120 are omitted since their purpose is to channel users to tools which the user is not entitled to use, i.e. tools 140, 142, 144, 146 and 148, and tool menu 150. It is appreciated that the workflows shown and described hereinabove with reference to Figs. 2 and 3 are only exemplary and are not intended to be limiting. More generally, a workflow may include any suitable set of tone enhancement tools and, optionally, any suitable set of queries which may be interspersed in any suitable order between the tone enhancement tools. Branches in the workflow may be provided at any point in the workflow and may depend upon any one of the following or upon any predefined interaction therebetween:
   user's use of tools up until the branch point;
   user's responses to queries up until the branch point;
   automatically analyzed image characteristics; and
   stored indications of user expertise. Reference is now made to Fig. 4 which is a generalized block diagram illustration of user status input unit 28, constructed and operative in accordance with a preferred embodiment of the present invention. As shown, user status input unit 28 includes a user status memory 200 which is accessible by workflow determining unit 24 of Fig. 1 and which stores an indication of the current status, such as the current expertise level, of each user.

The status of a user may be determined by supervisor input from outside the system. However, preferably, users' status is automatically updated by an automatic update unit 202. Automatic update unit 202 preferably stores an indication of at least one prerequisite for advancing a user at an individual expertise level to a more advanced expertise level. Prerequisites may include some or all of the following:
a. time accumulated at the individual expertise level;
b. quantity of work experience at the individual expertise level;
c. full utilization of the subset of tools which is not disabled by the selective tool disabler;
d. quality level of scanned images generated by a user; and
e. correctness of user's habitual work processes.

Information indicating whether or not an individual user has fulfilled prerequisites is provided by an automatic user progress monitor 204 which may monitor user progress by receiving, for each user, some or all of the following types of input:
a. an indication of days or weeks accumulated at an individual expertise level, which may be provided by a calendar unit 206;
b. a quantification of the work experience accumulated at an individual expertise level, such as an indication of number of log-ons, and/or an indication of total log-on time.
c. An indication of the extent of utilization of the subset of tools which the user is entitled to due to his expertise level. These tool utilization statistics may be generated by monitoring access of each user to tool library 31 of Fig. 1.d. An external evaluation of the quality of work products generated by a user and/or of the quality of the user's work habits. Such an evaluation may be provided by a supervisor or may be generated automatically.

It is appreciated that although the preferred embodiments of the present invention shown and described herein are based on the Scitex Smart Scanner, this not need be the case. More generally, the present invention may be based upon existing tools of any conventional electronic separation scanner.

It will be appreciated by persons skilled in the art that the present invention is not limited to what has been particularly shown and described hereinabove. Rather, the scope of the present invention is defined only by the claims that follow:

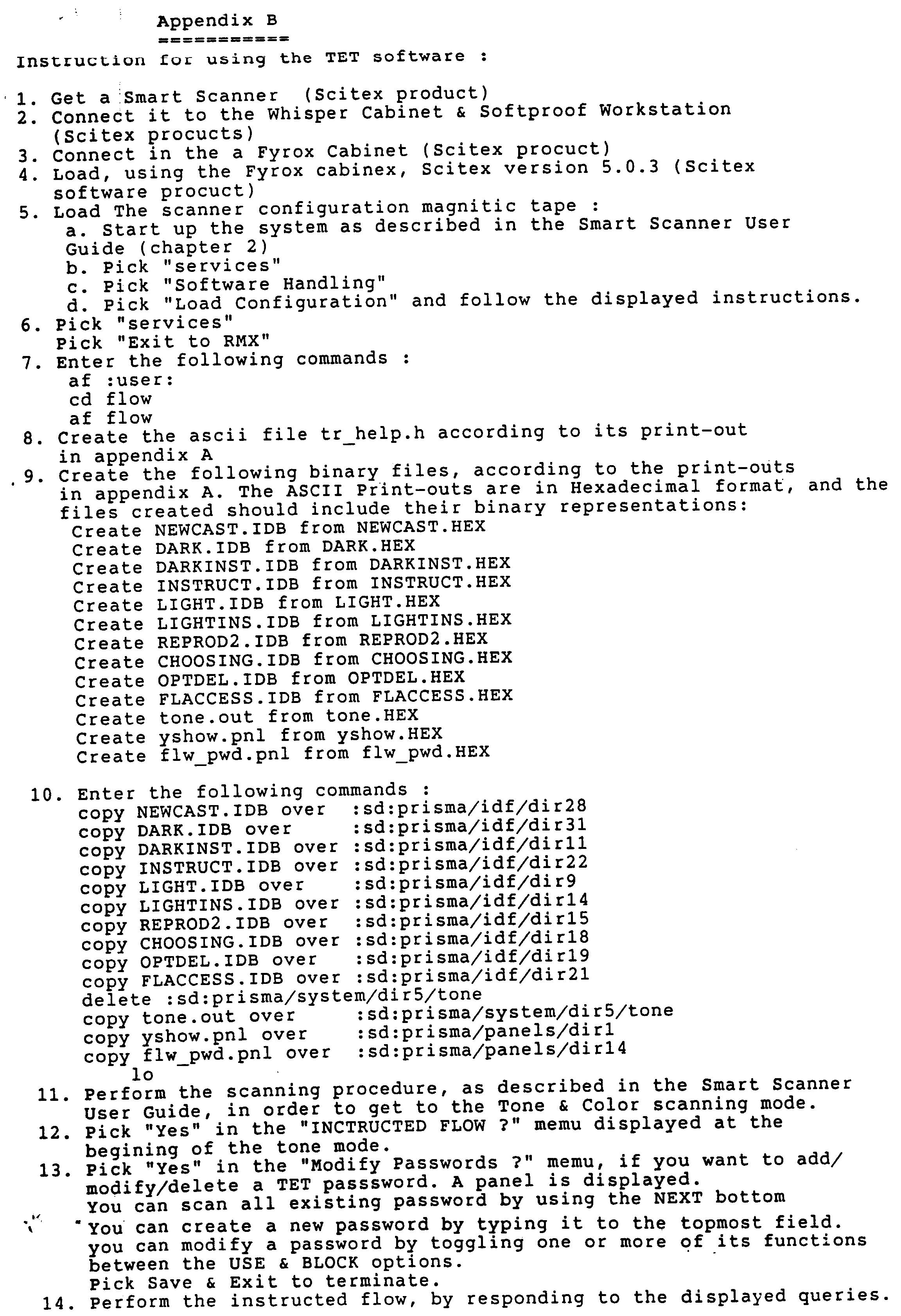

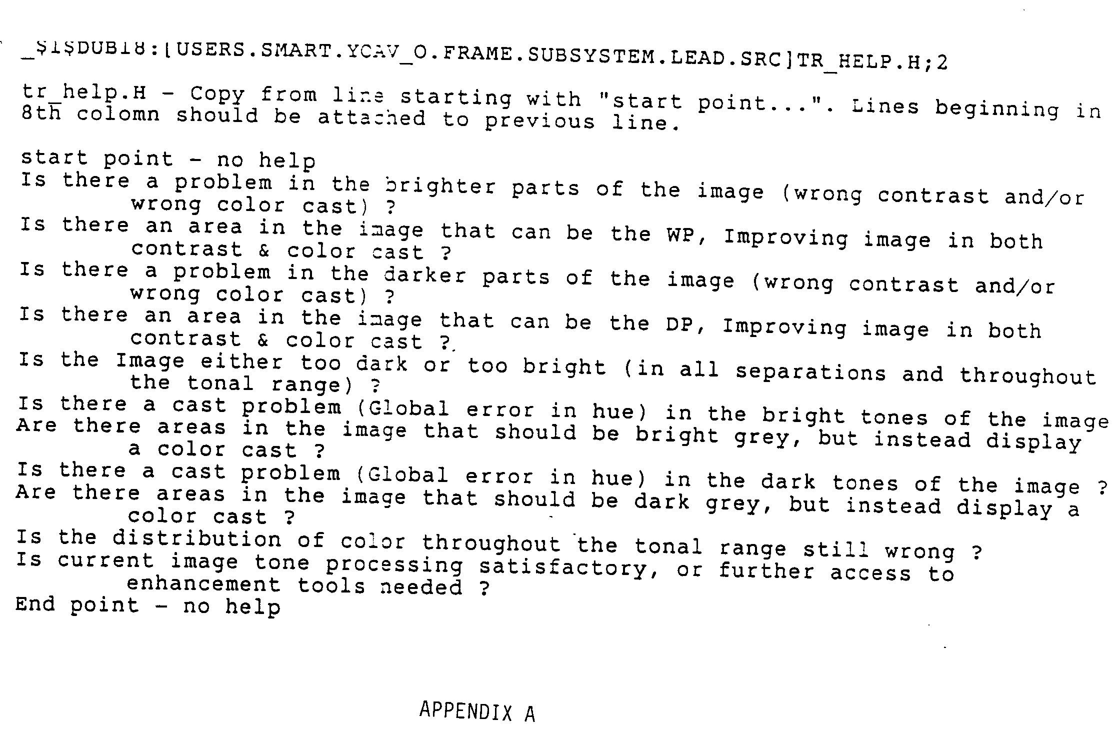

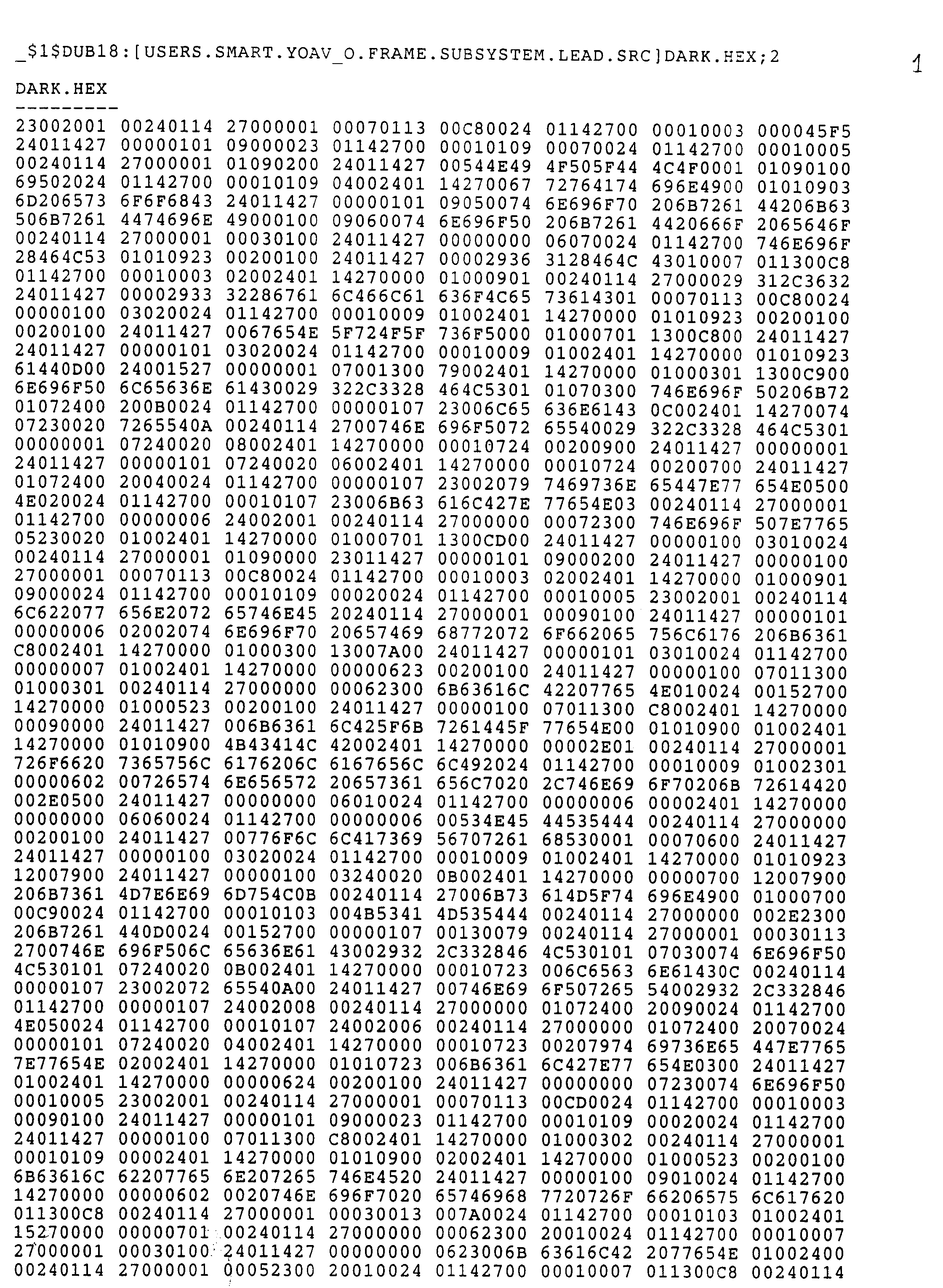

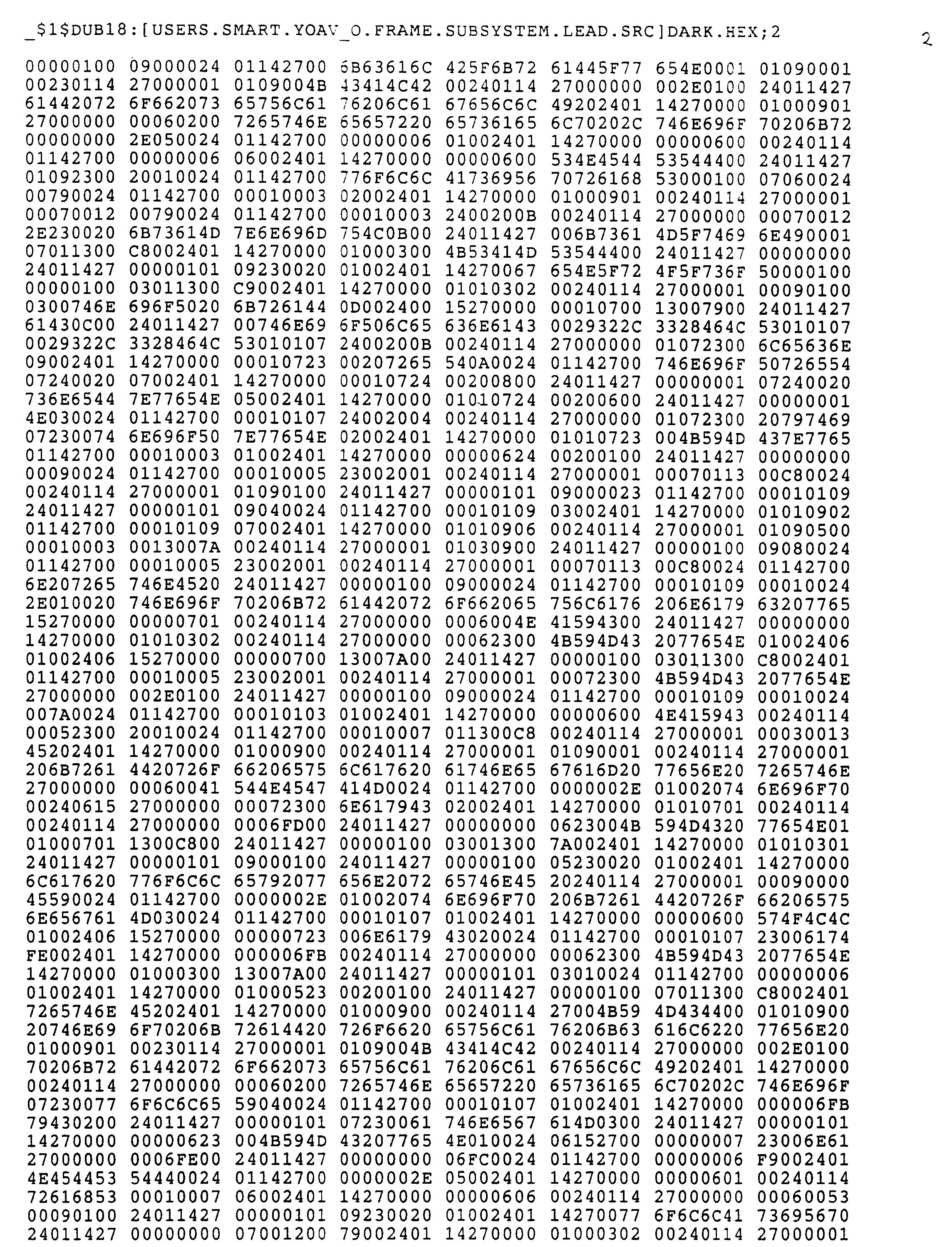

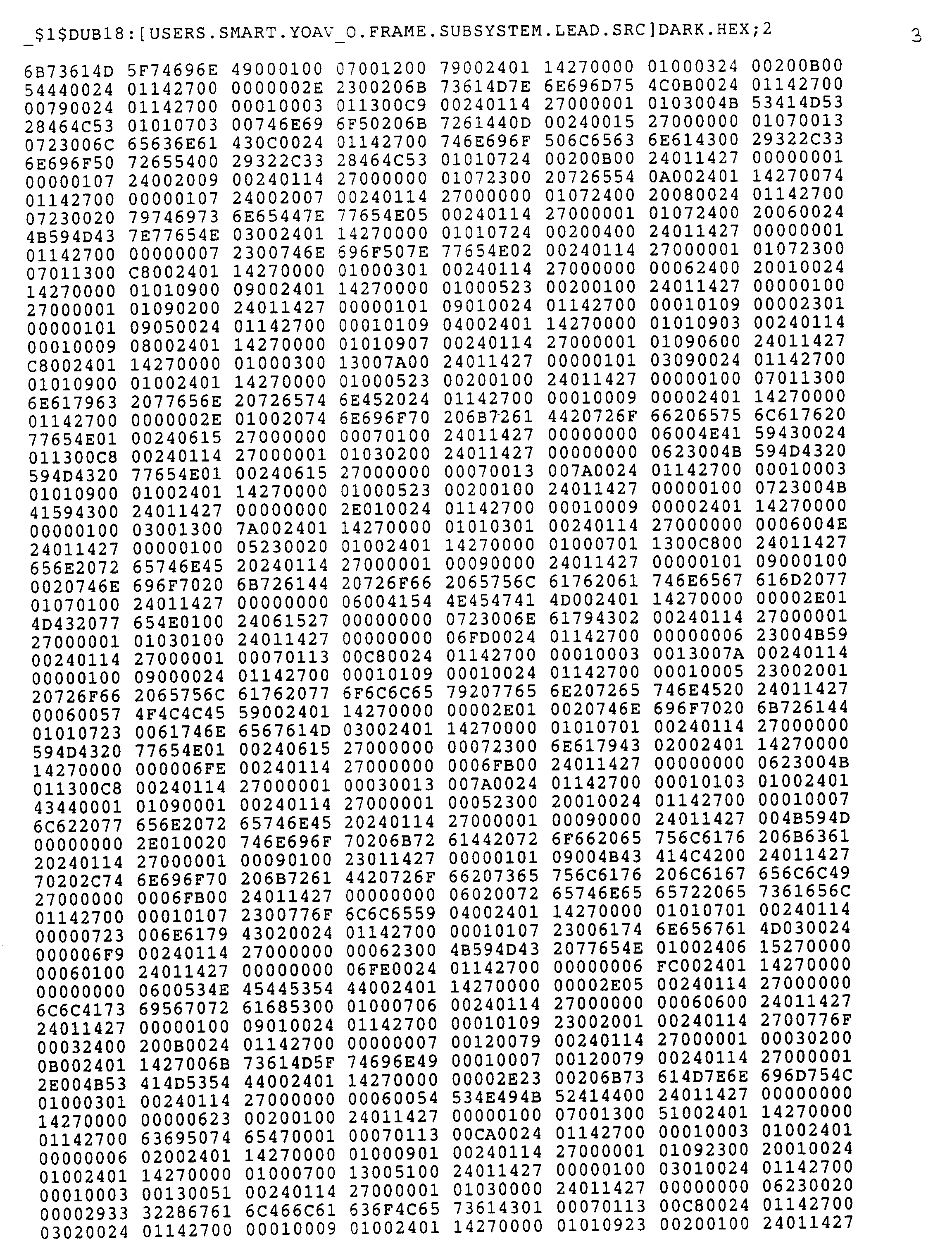

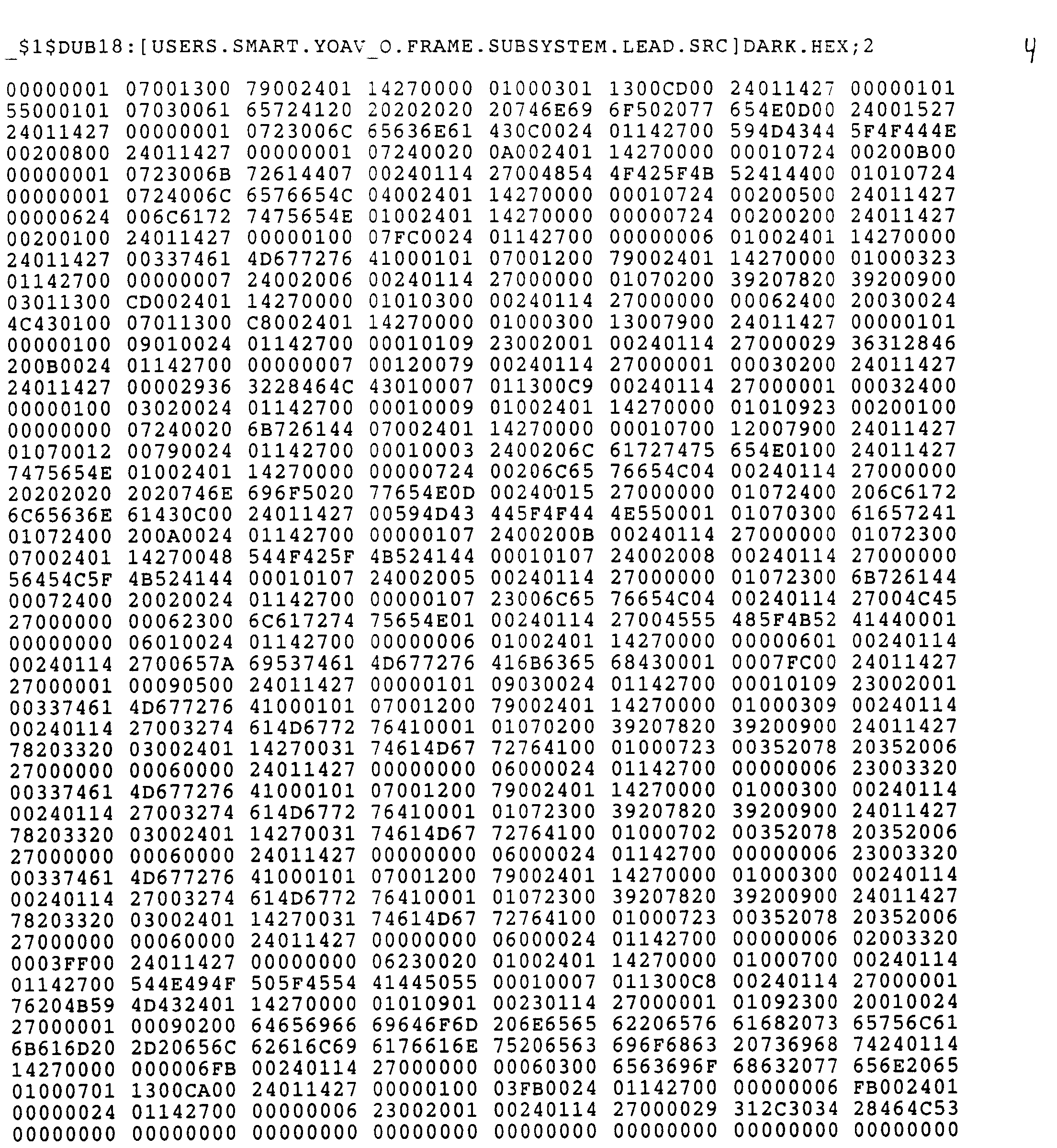

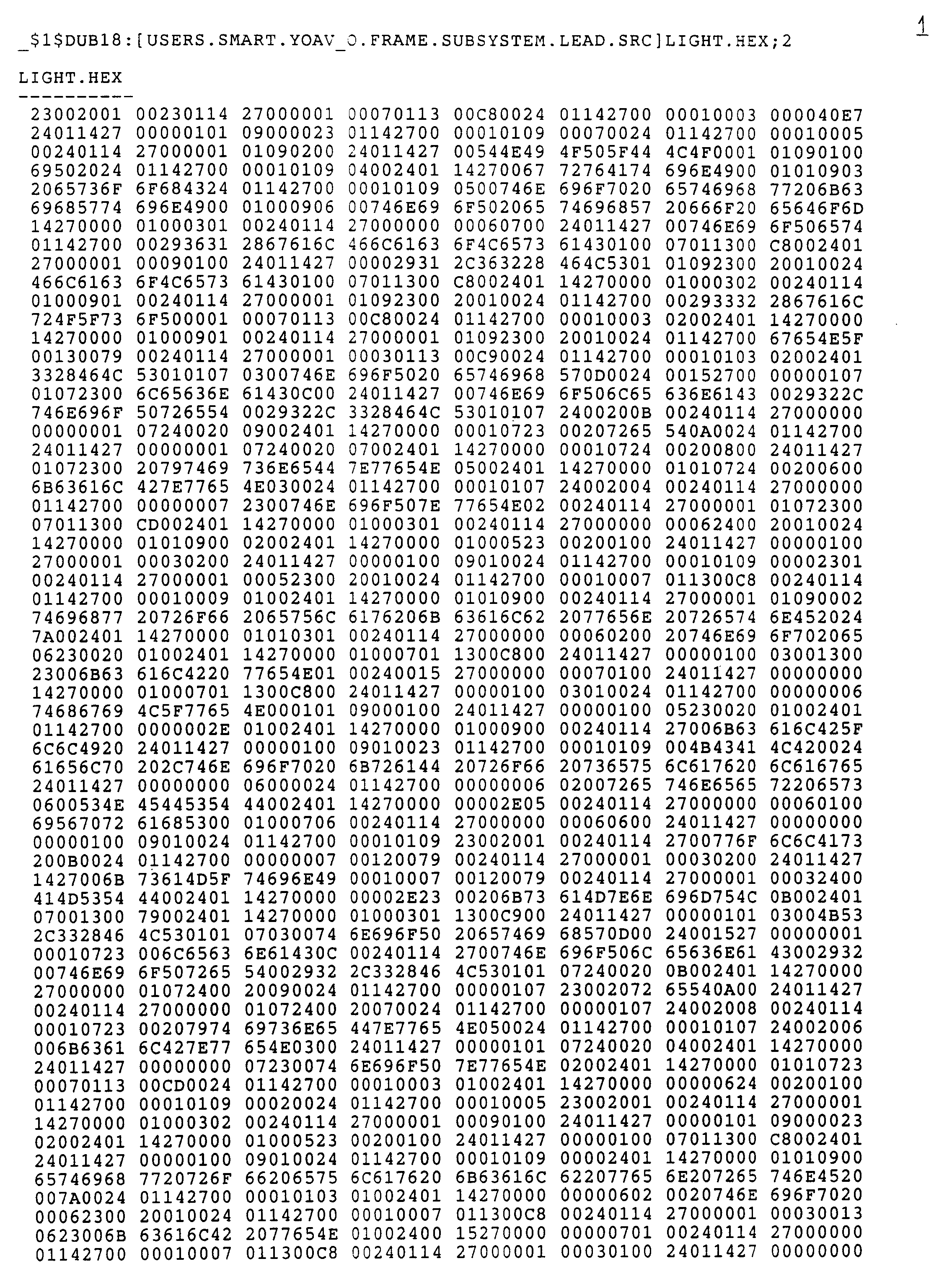

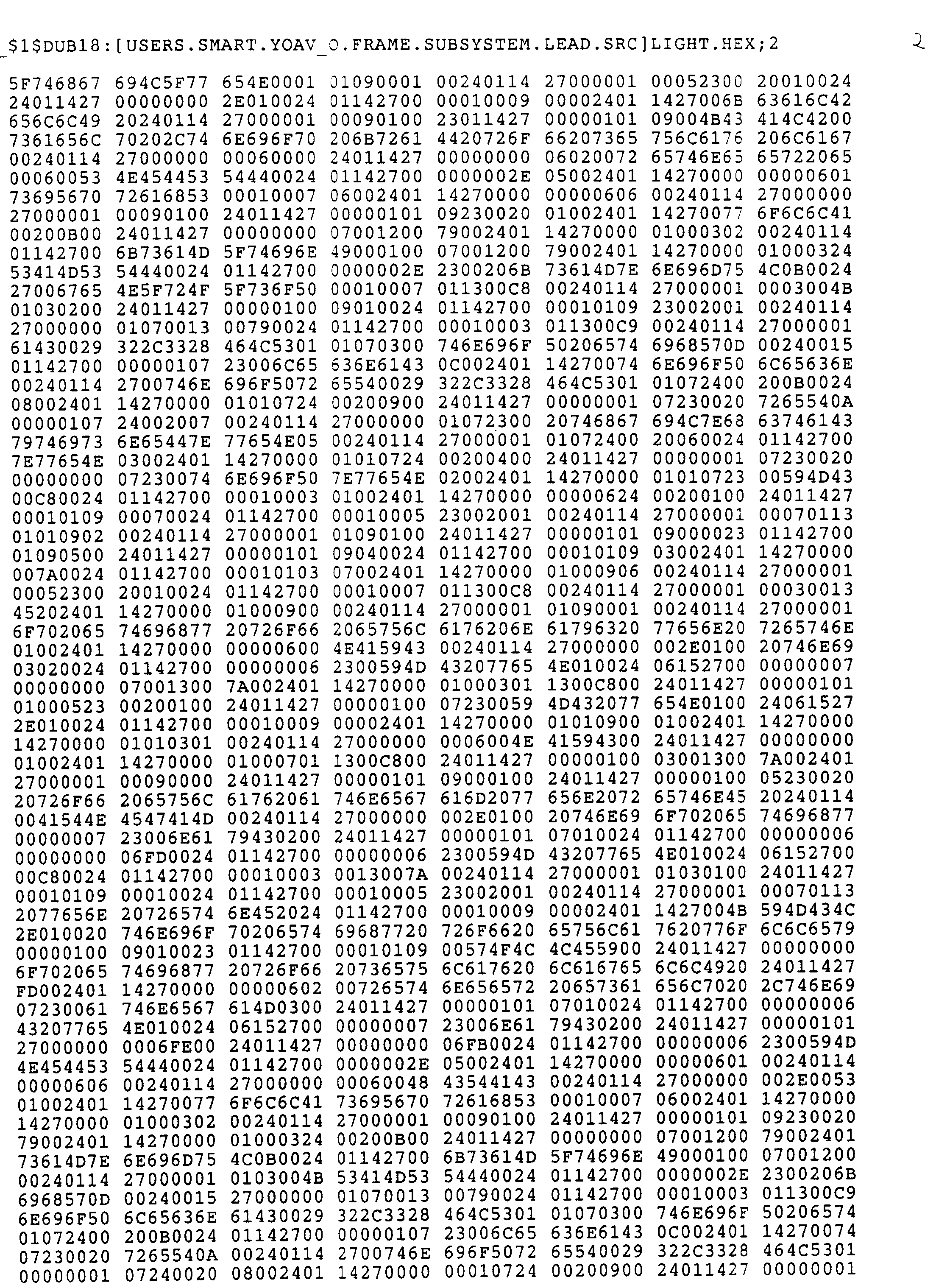

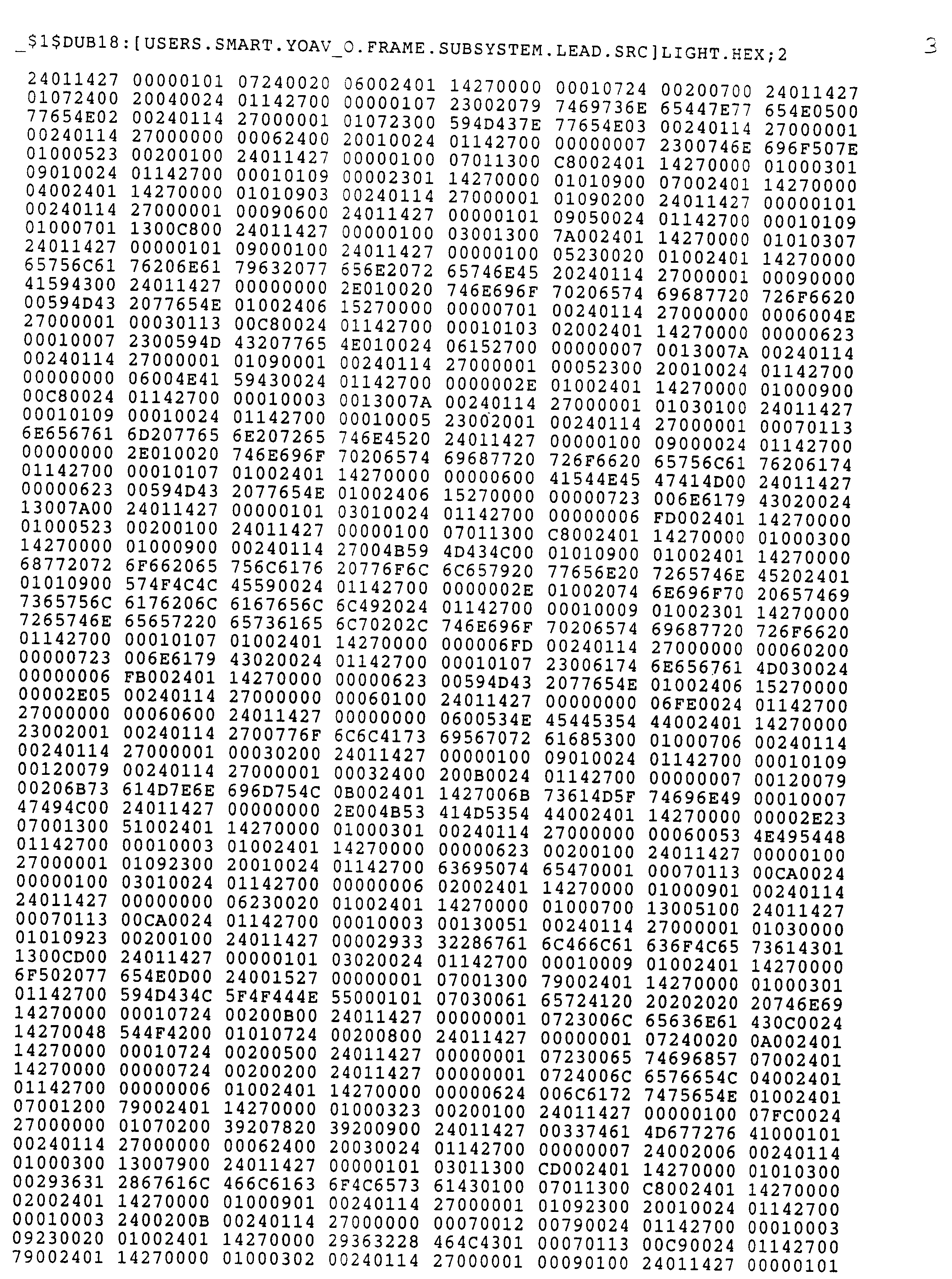

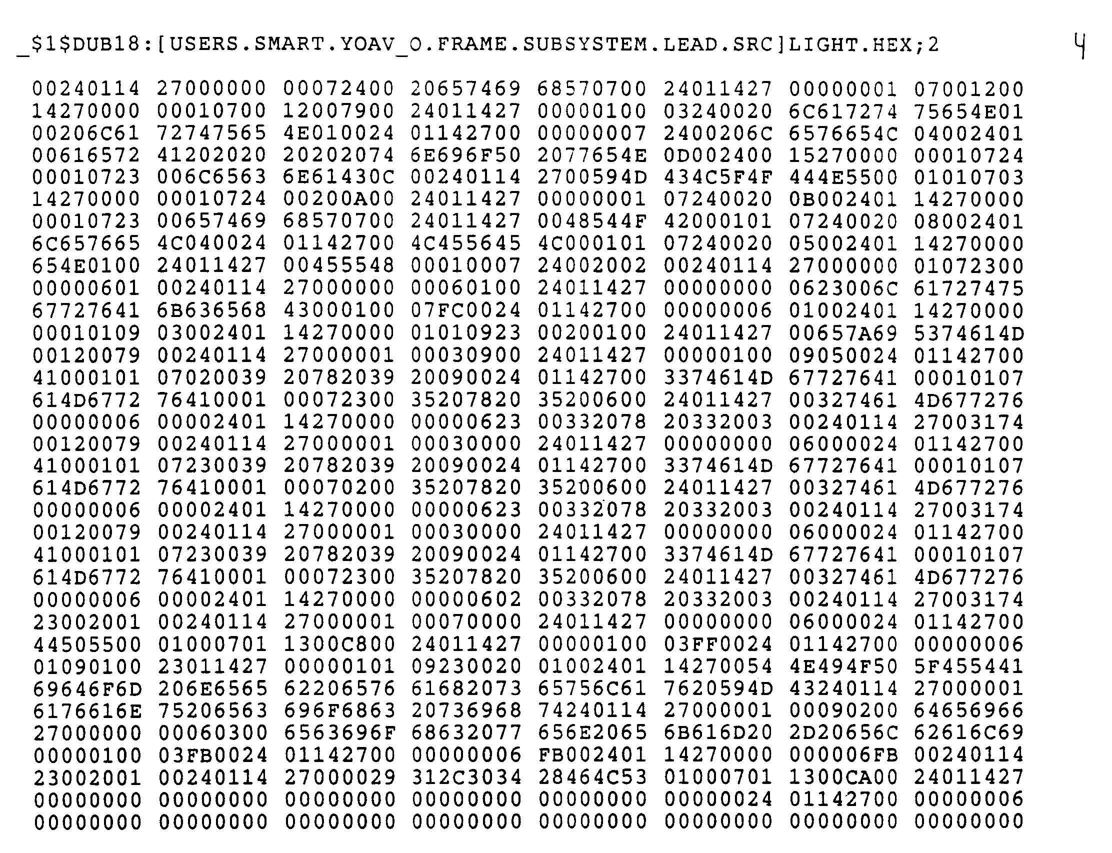

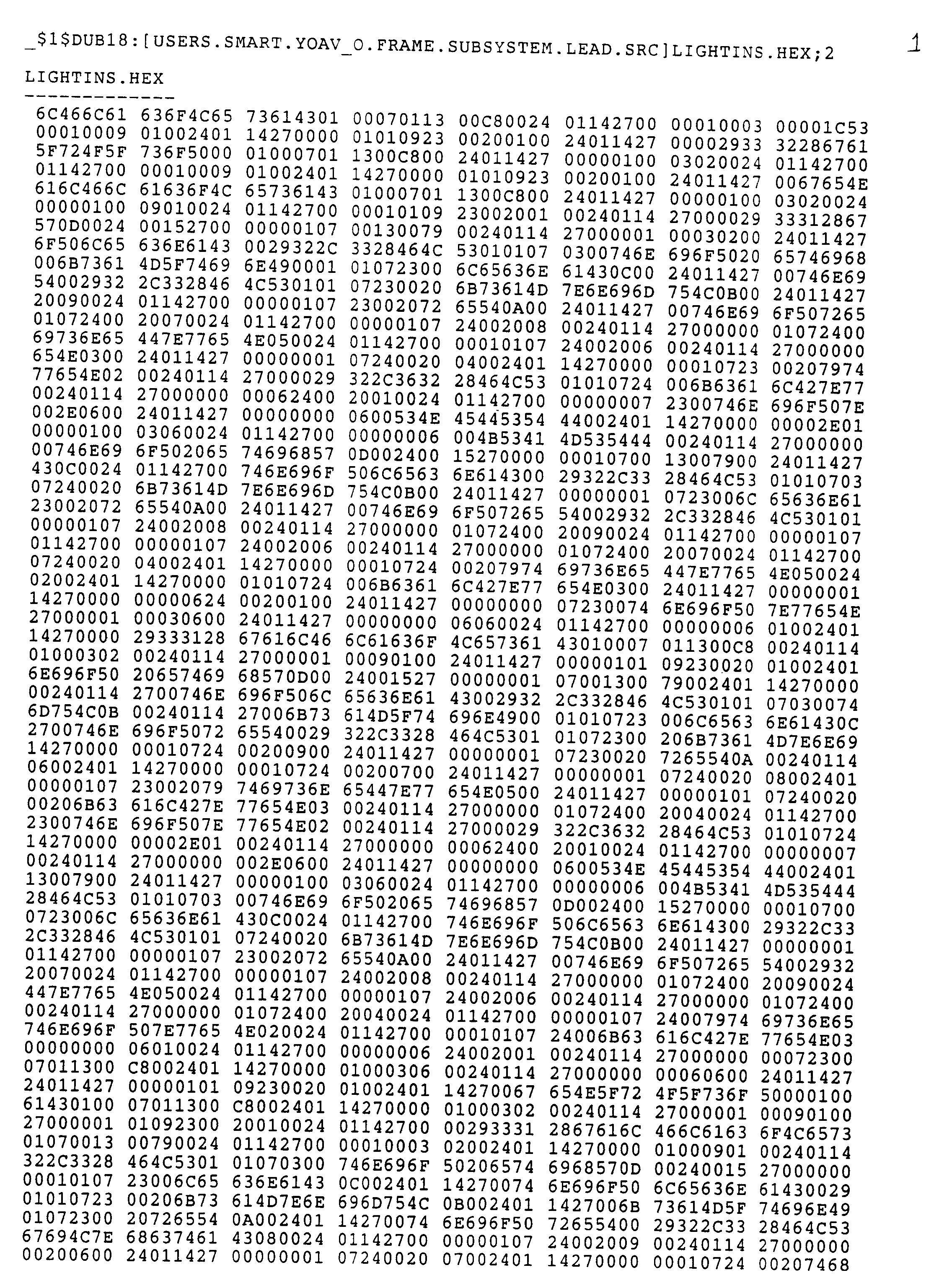

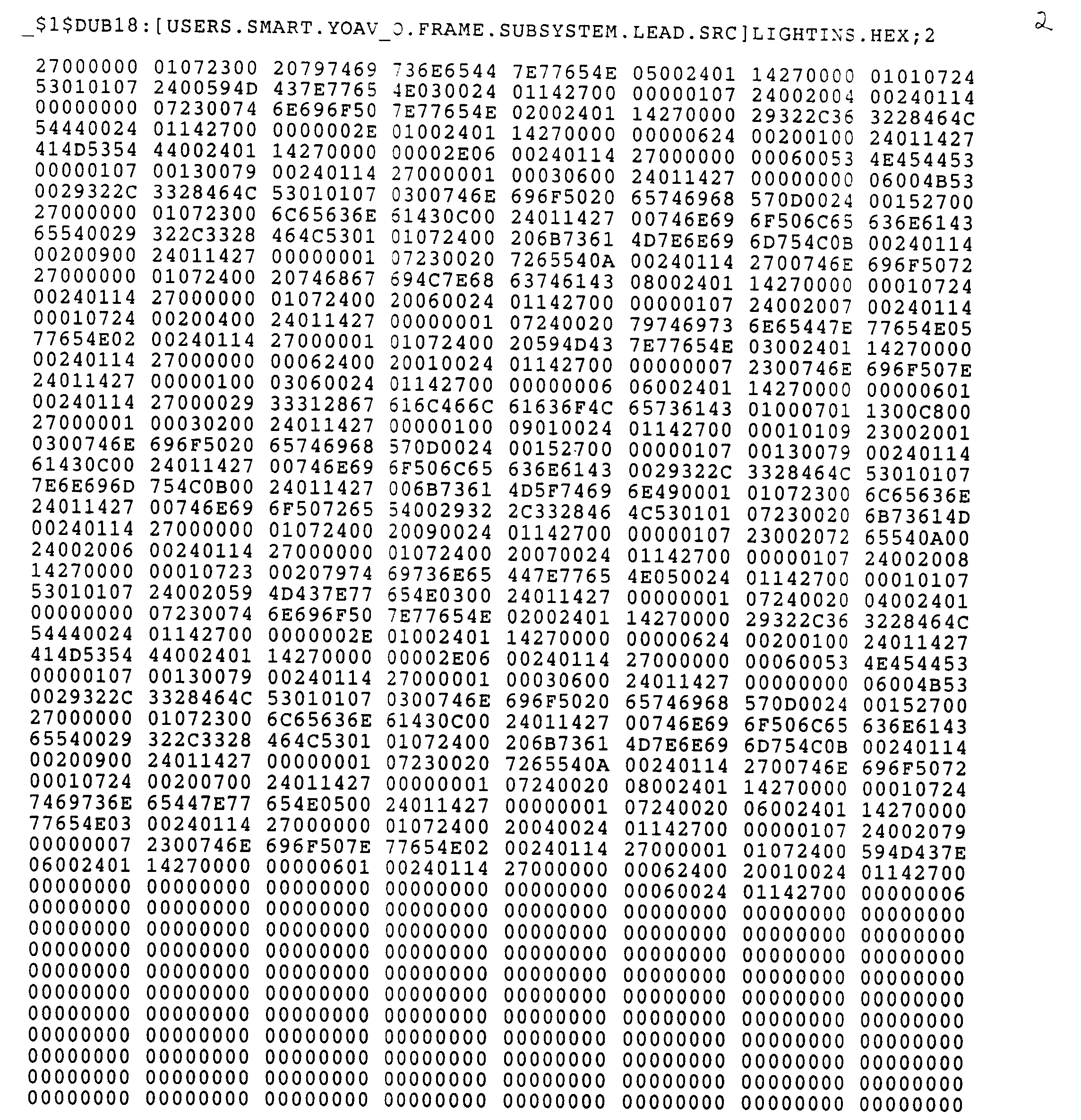

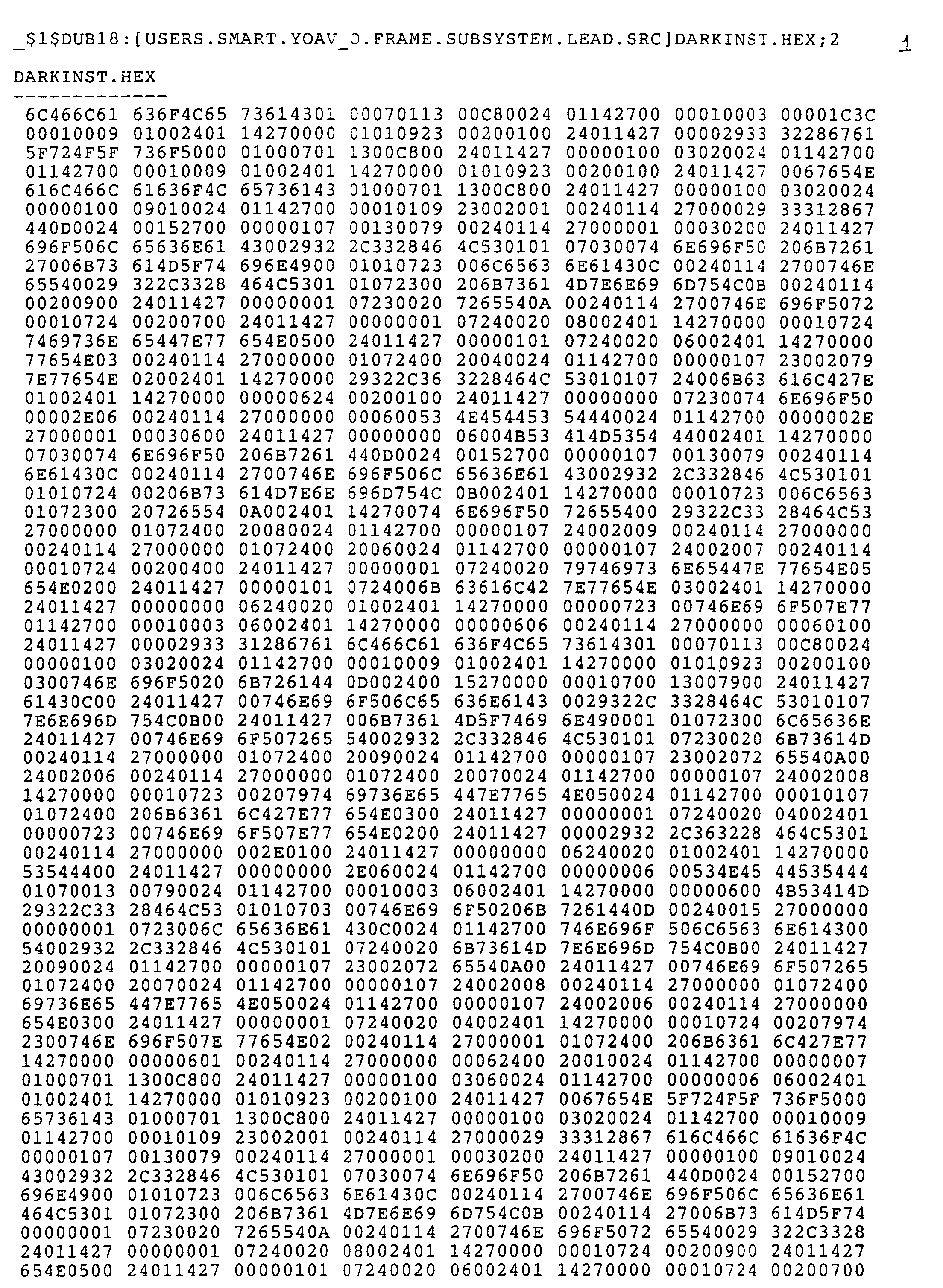

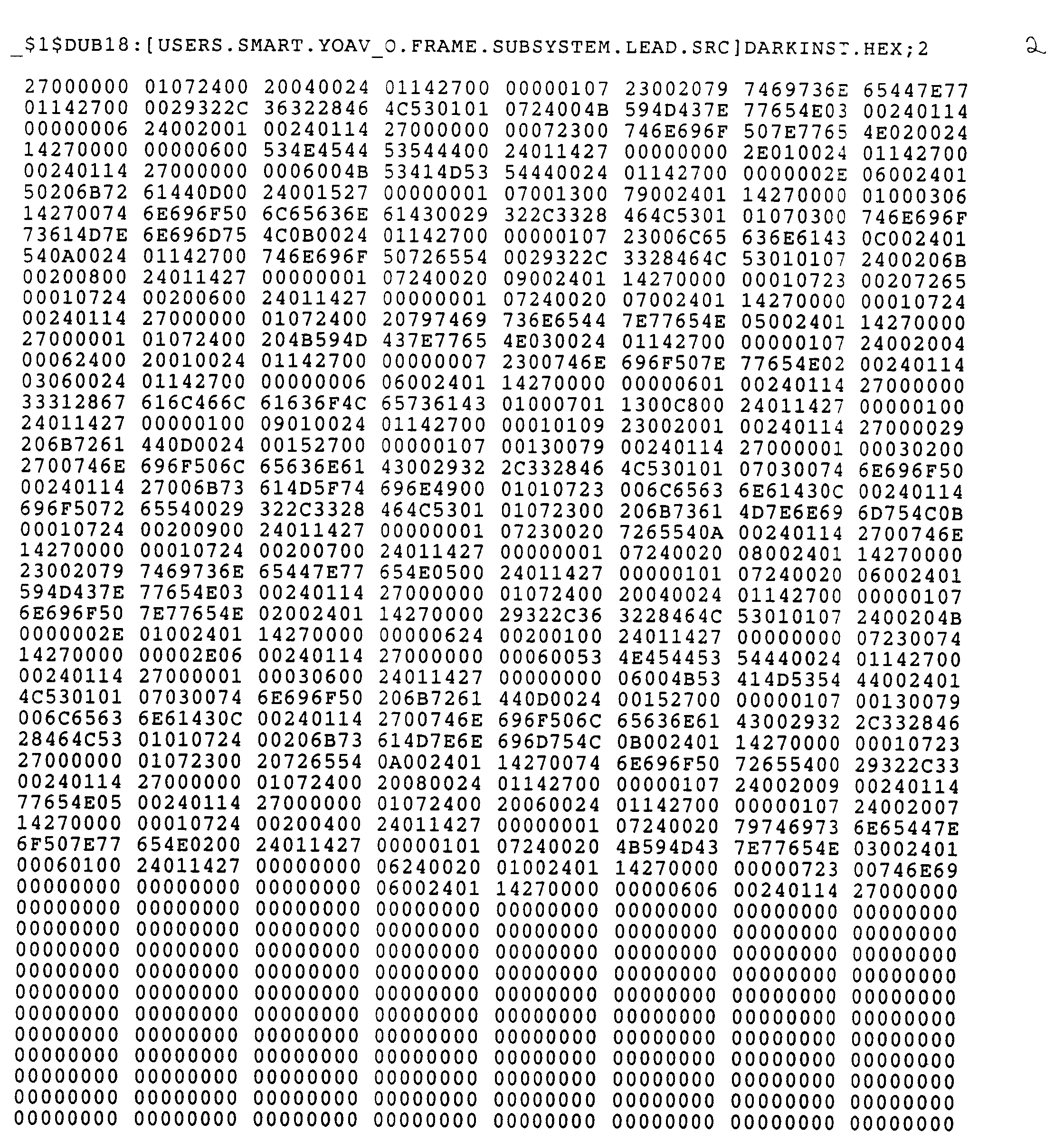

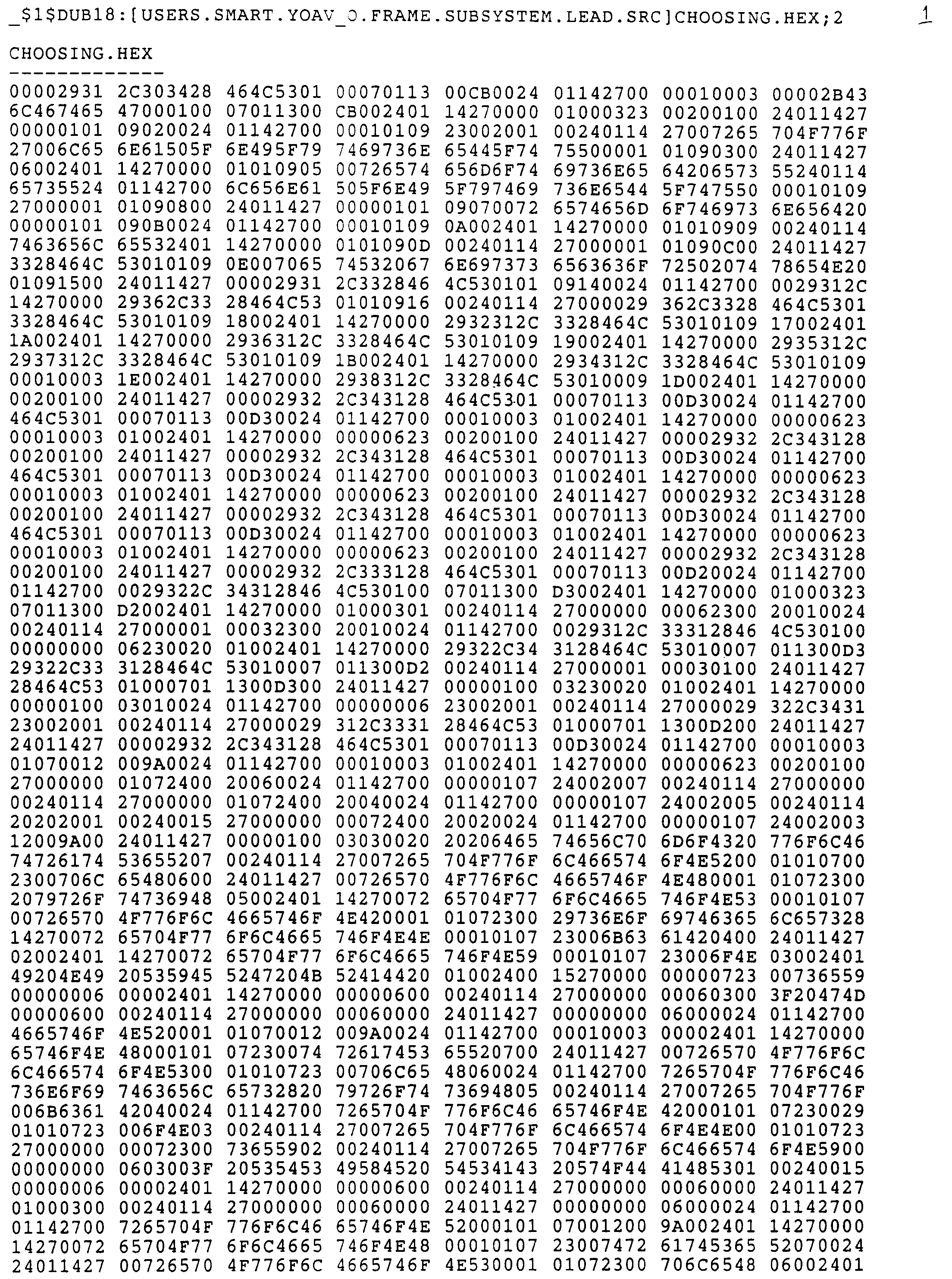

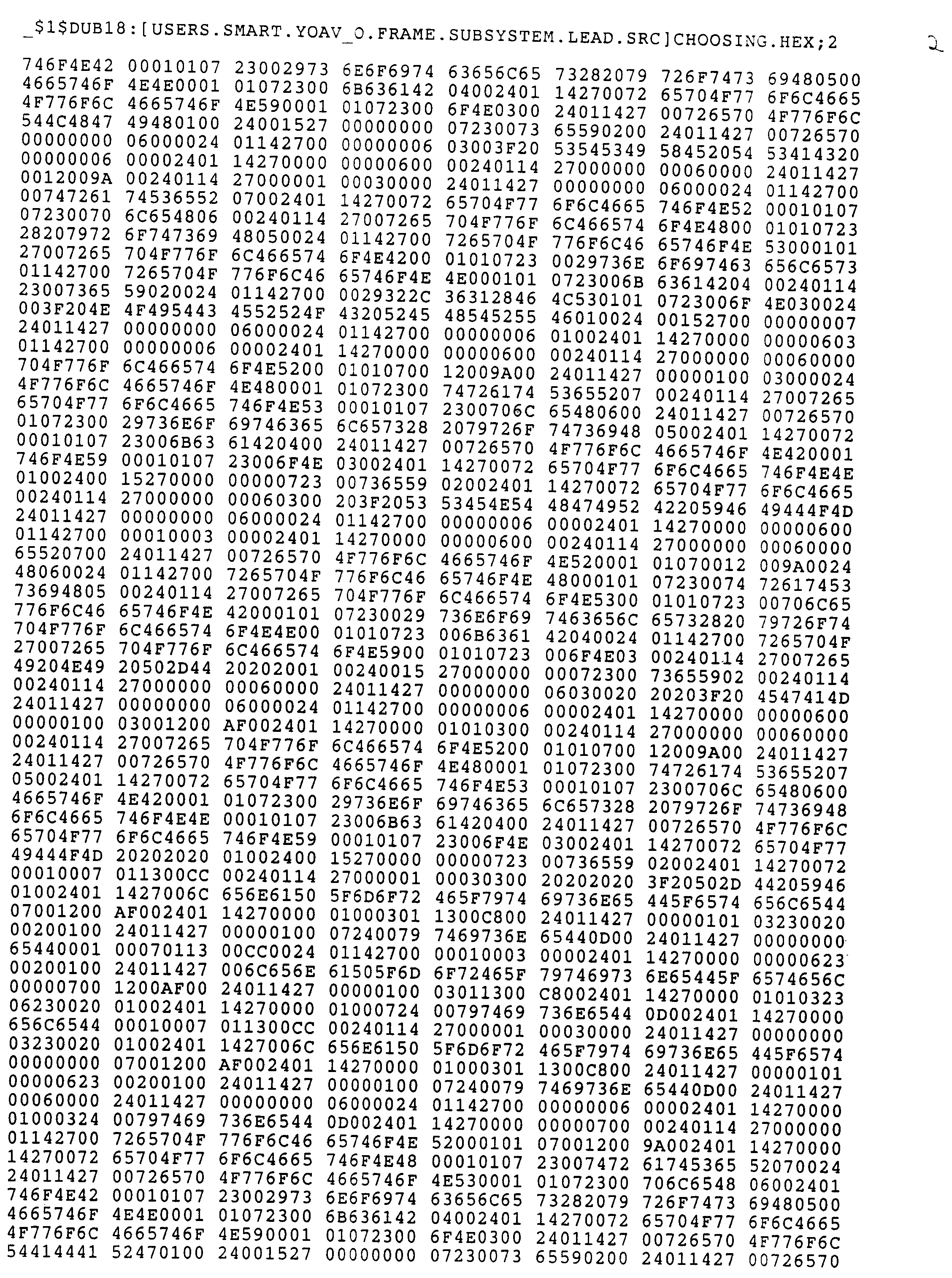

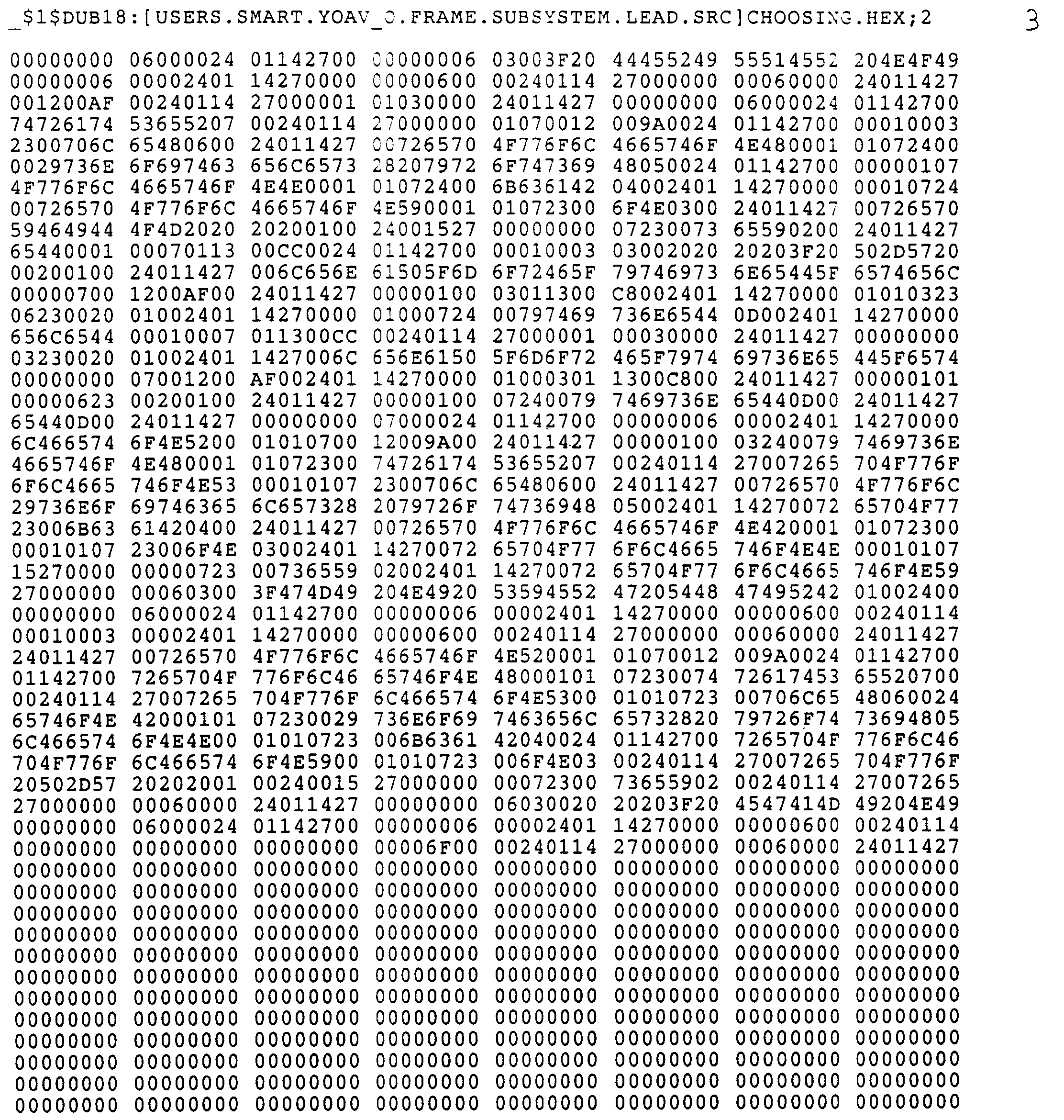

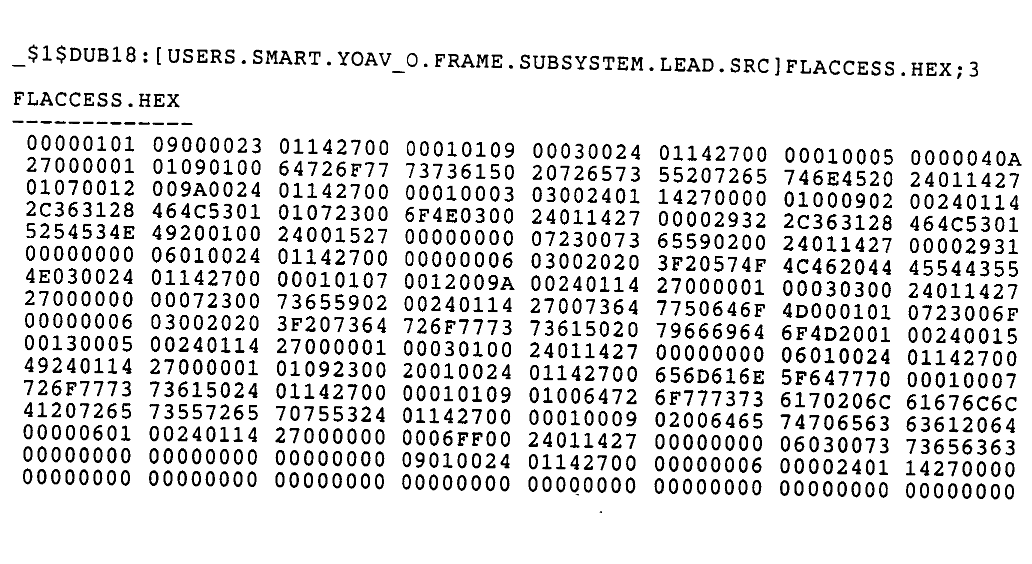

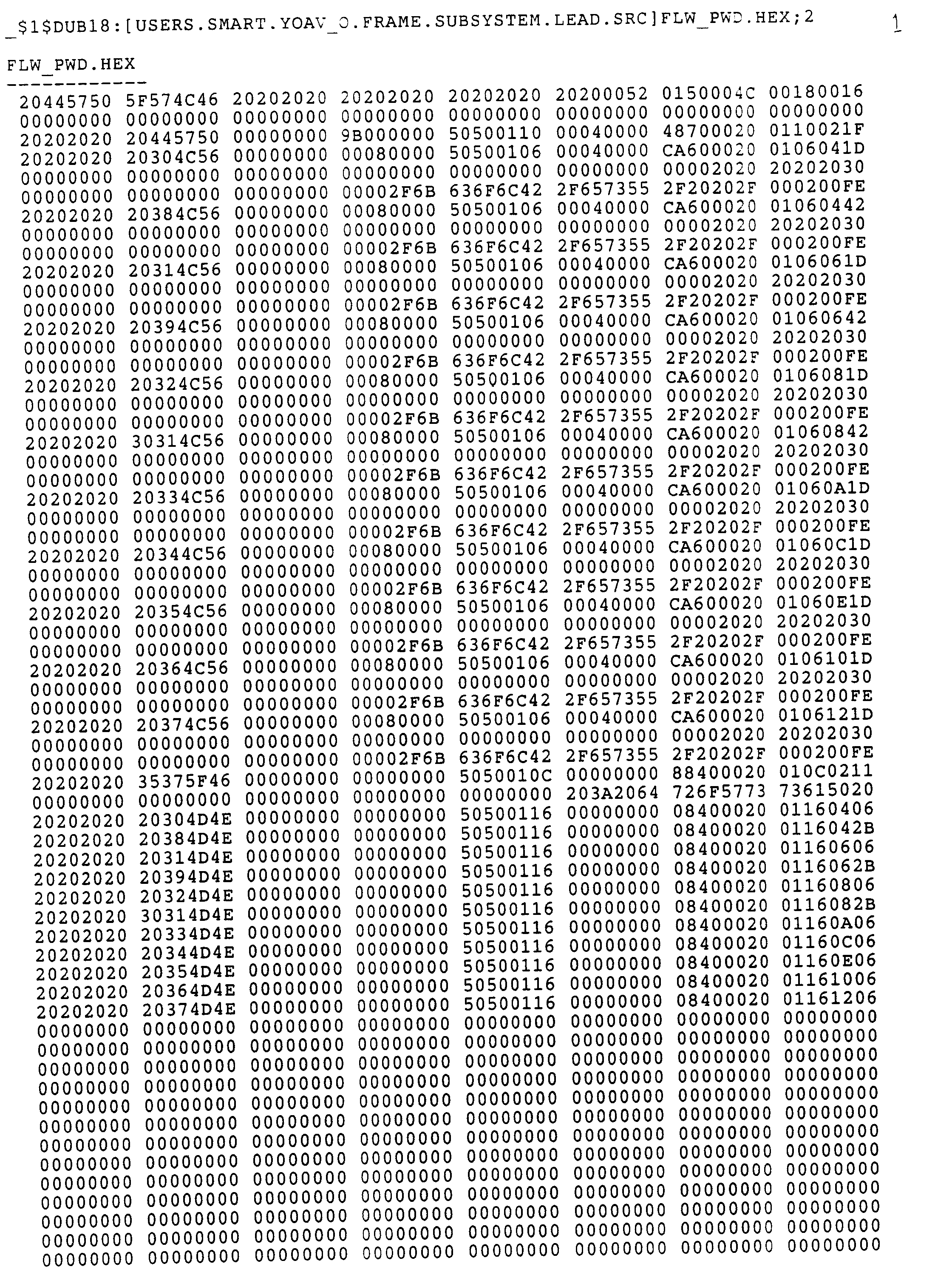

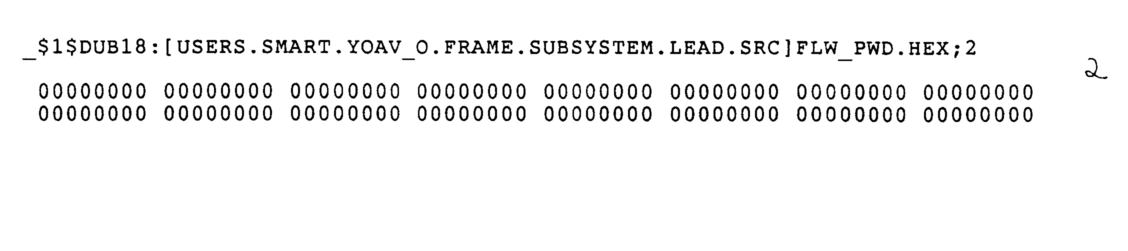

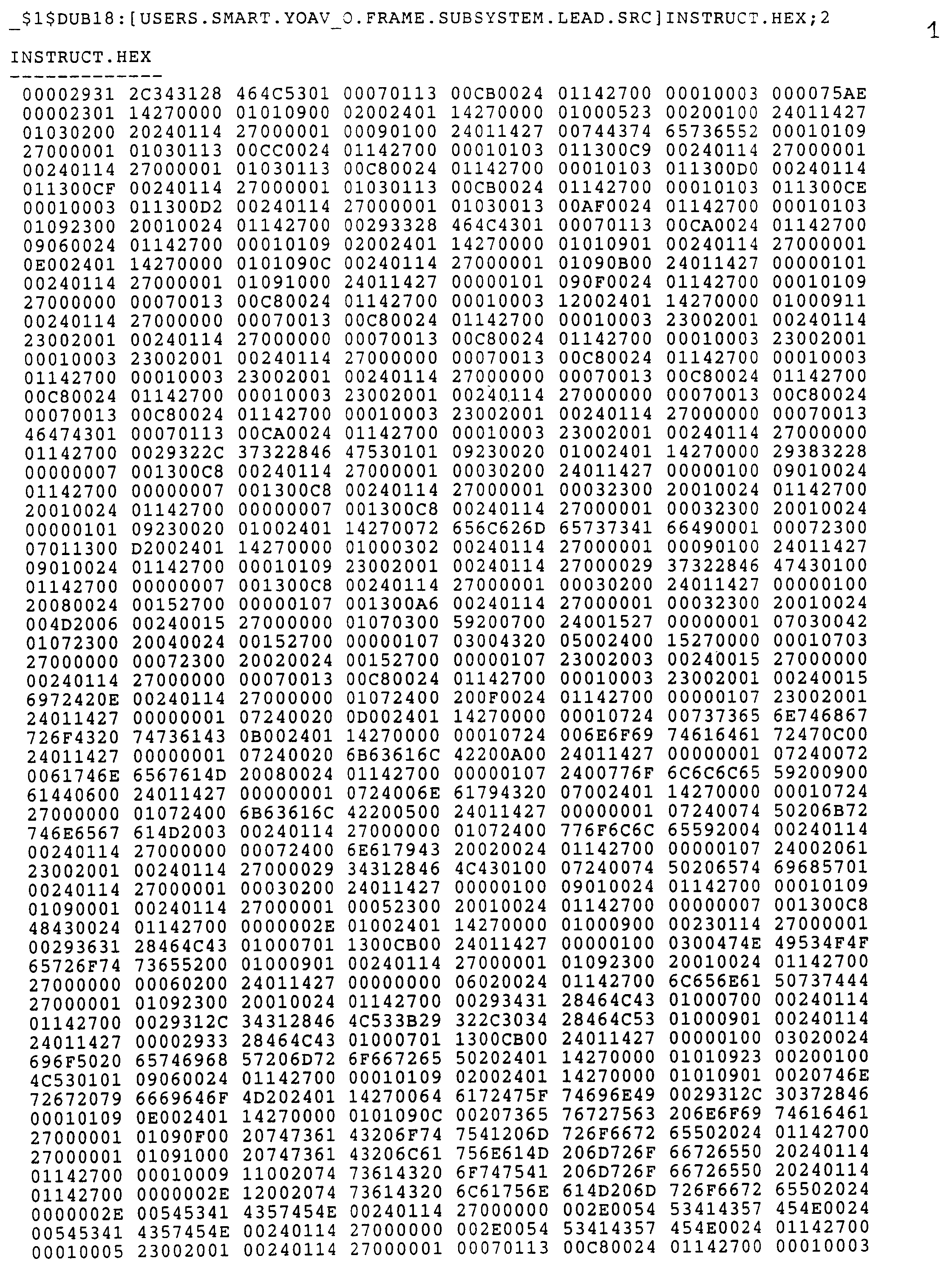

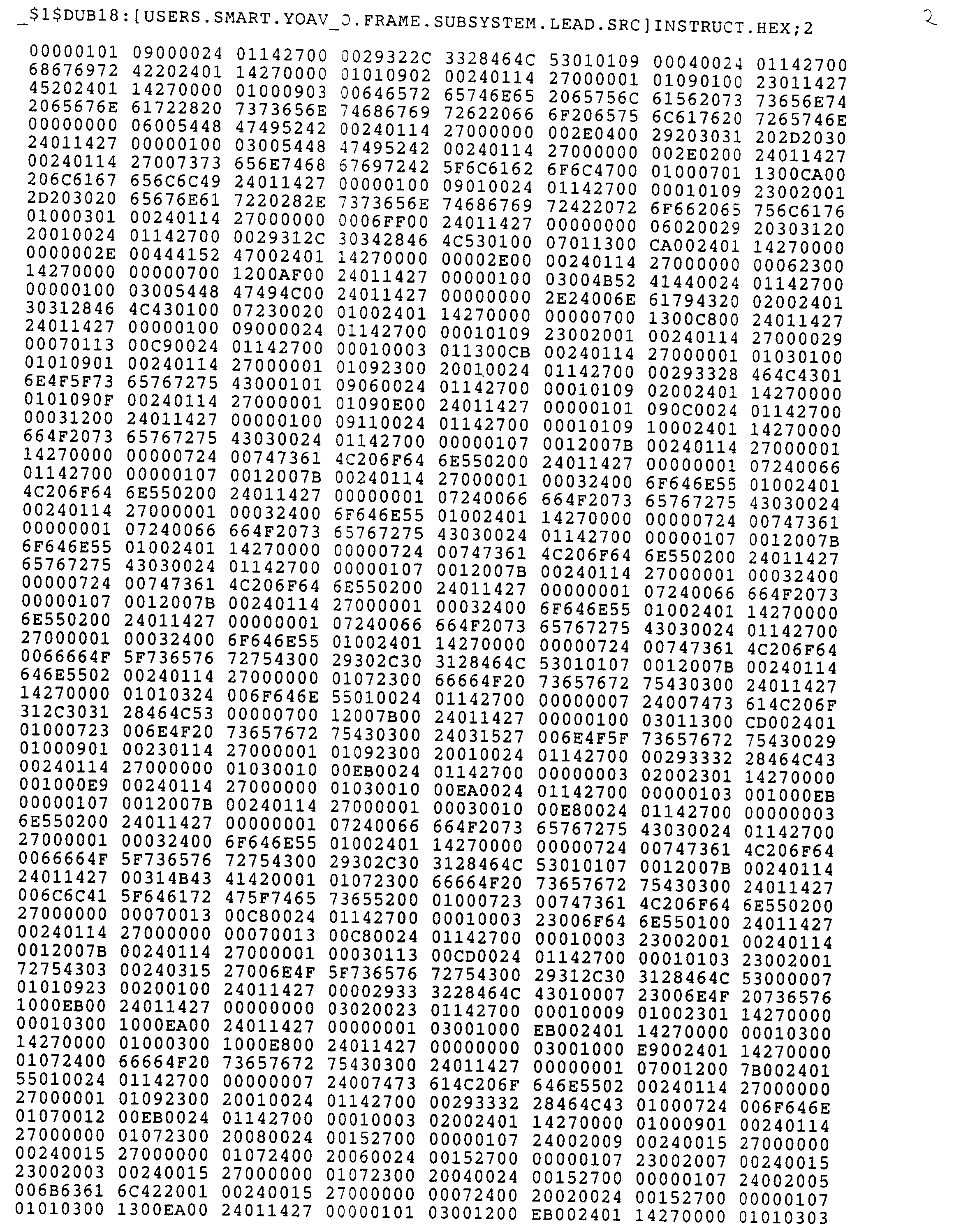

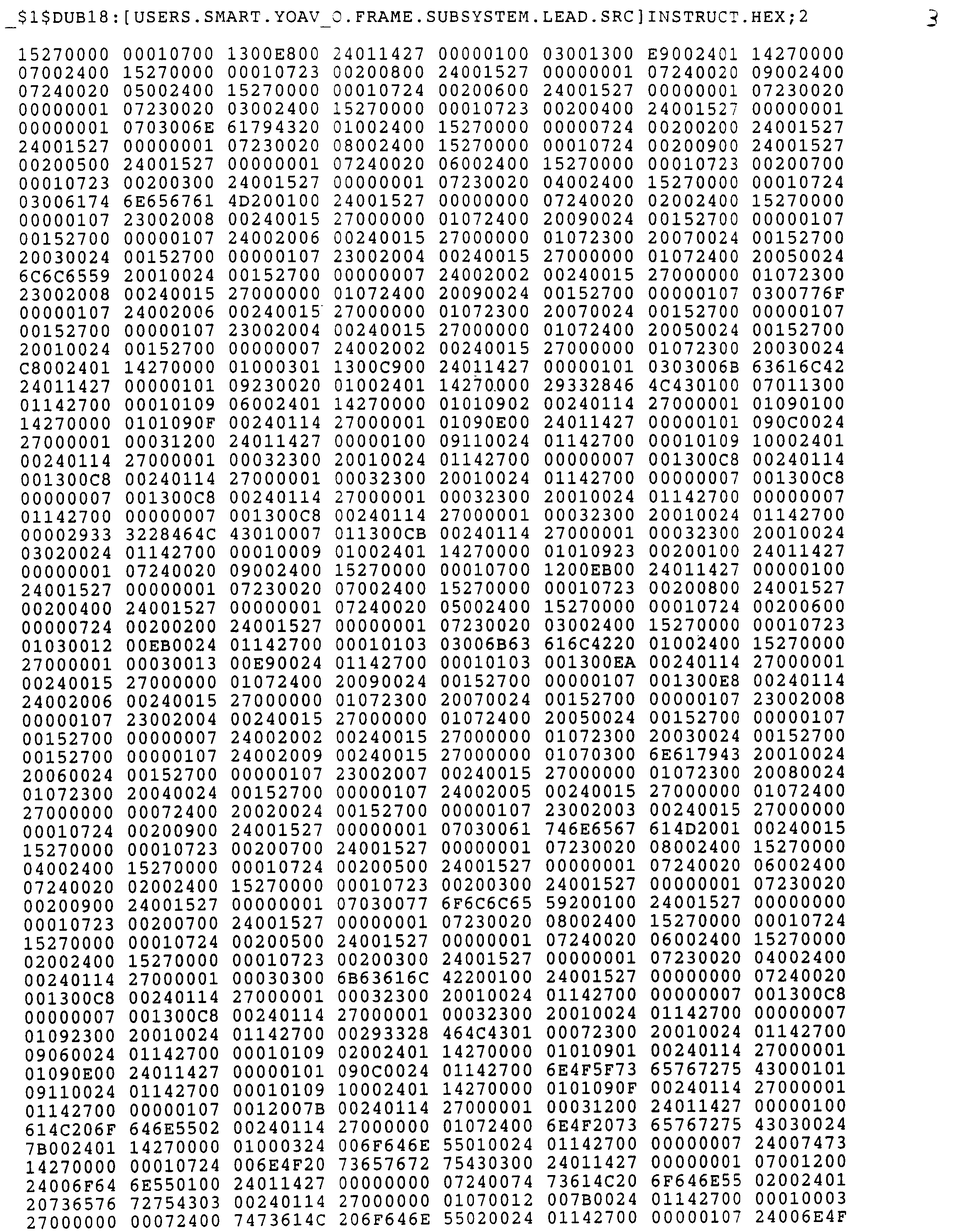

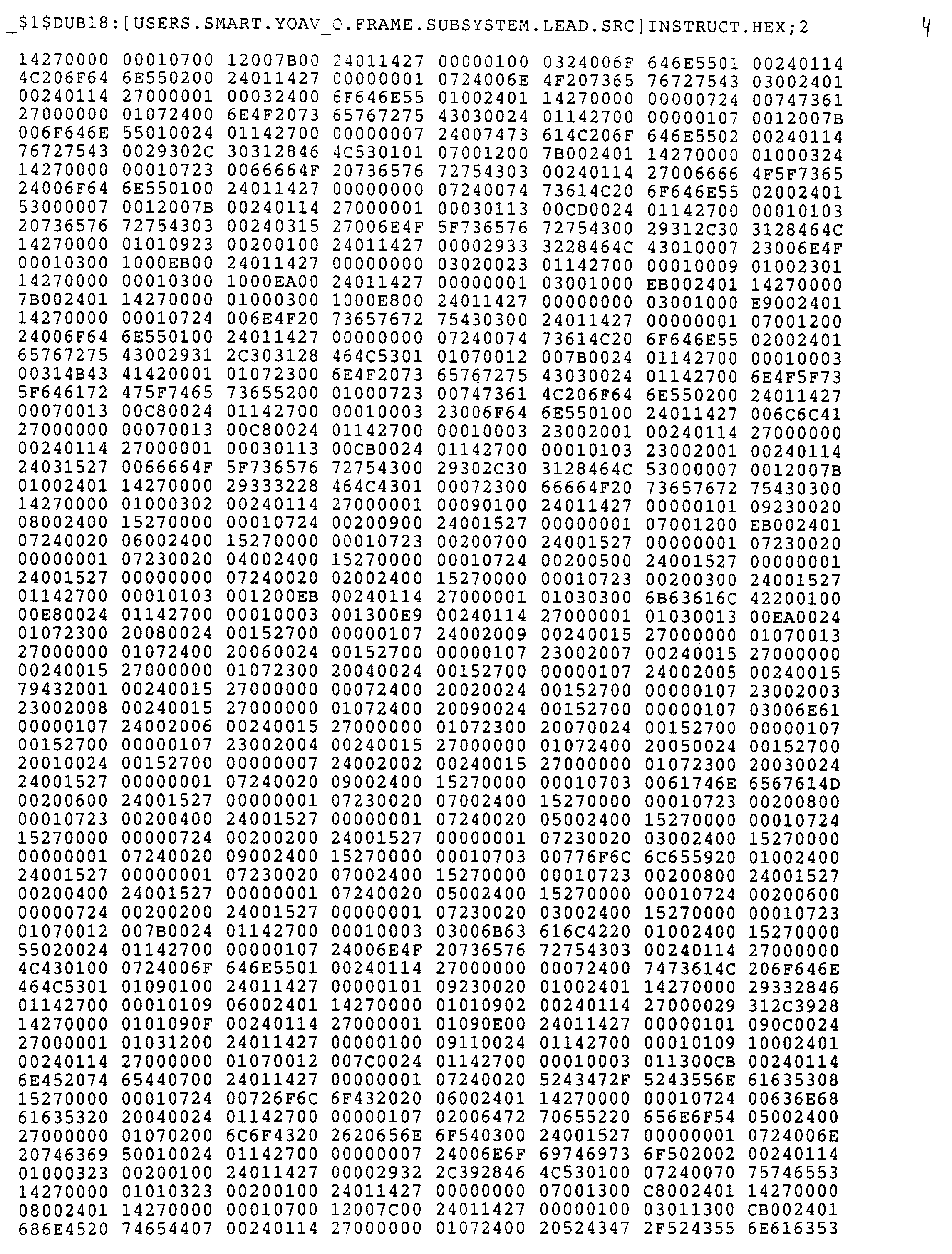

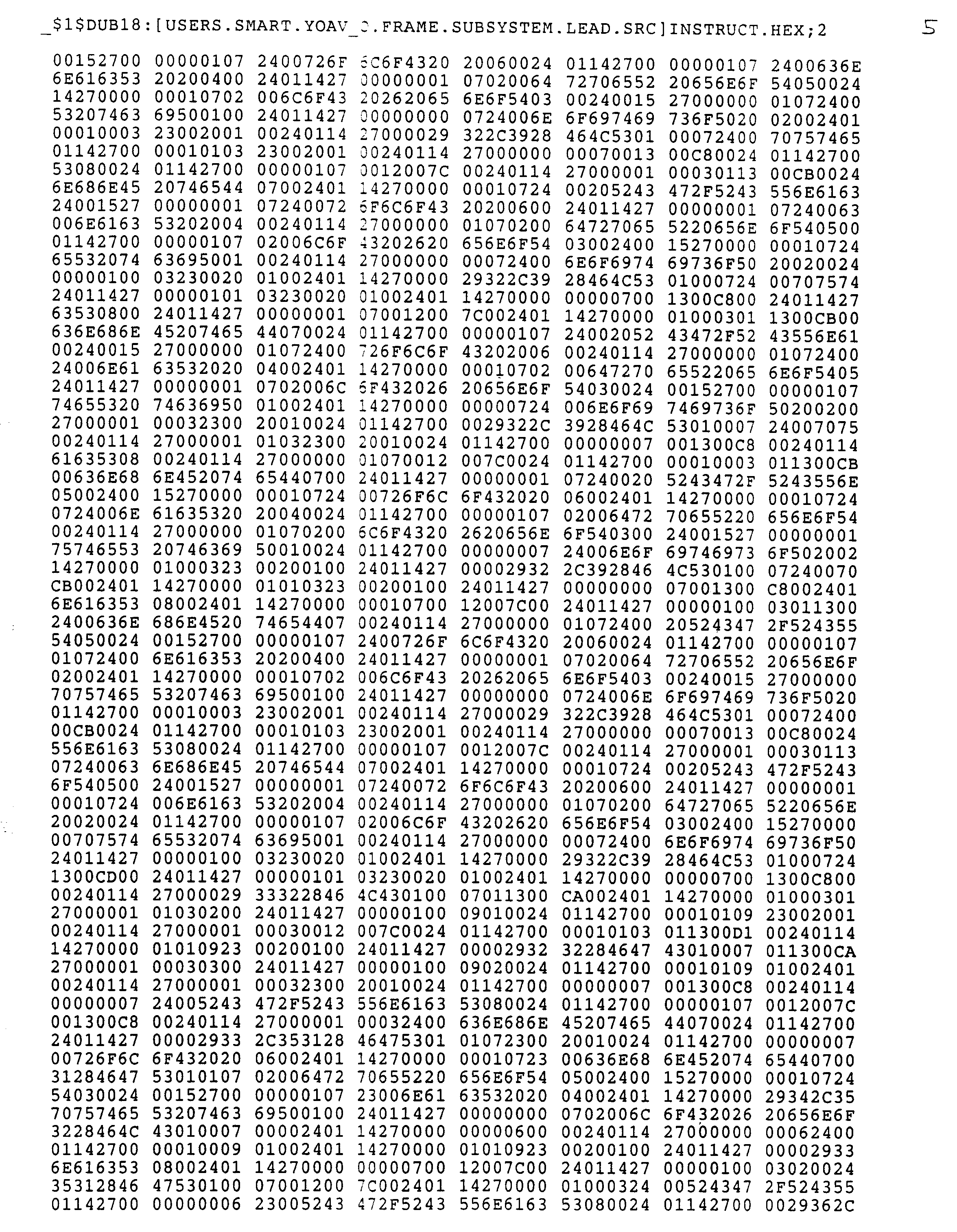

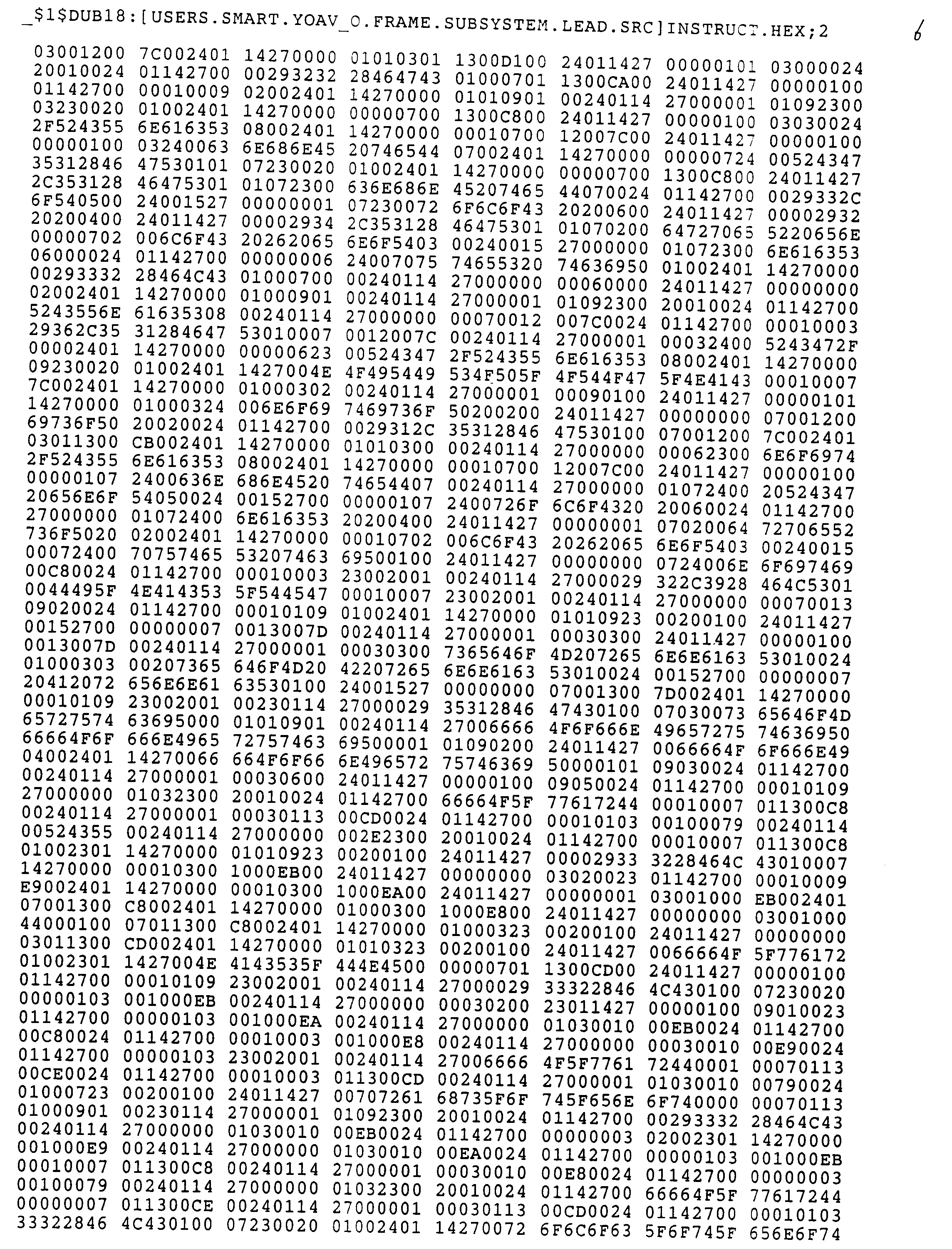

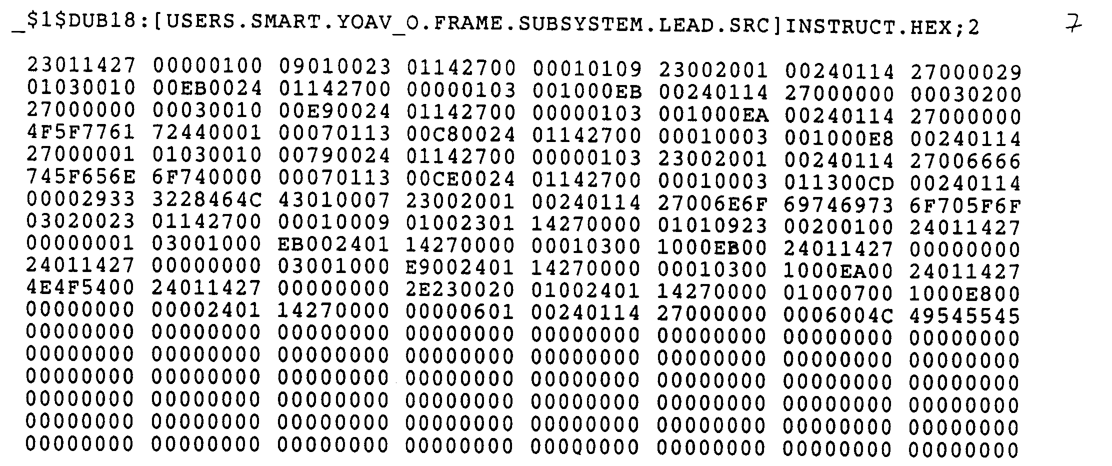

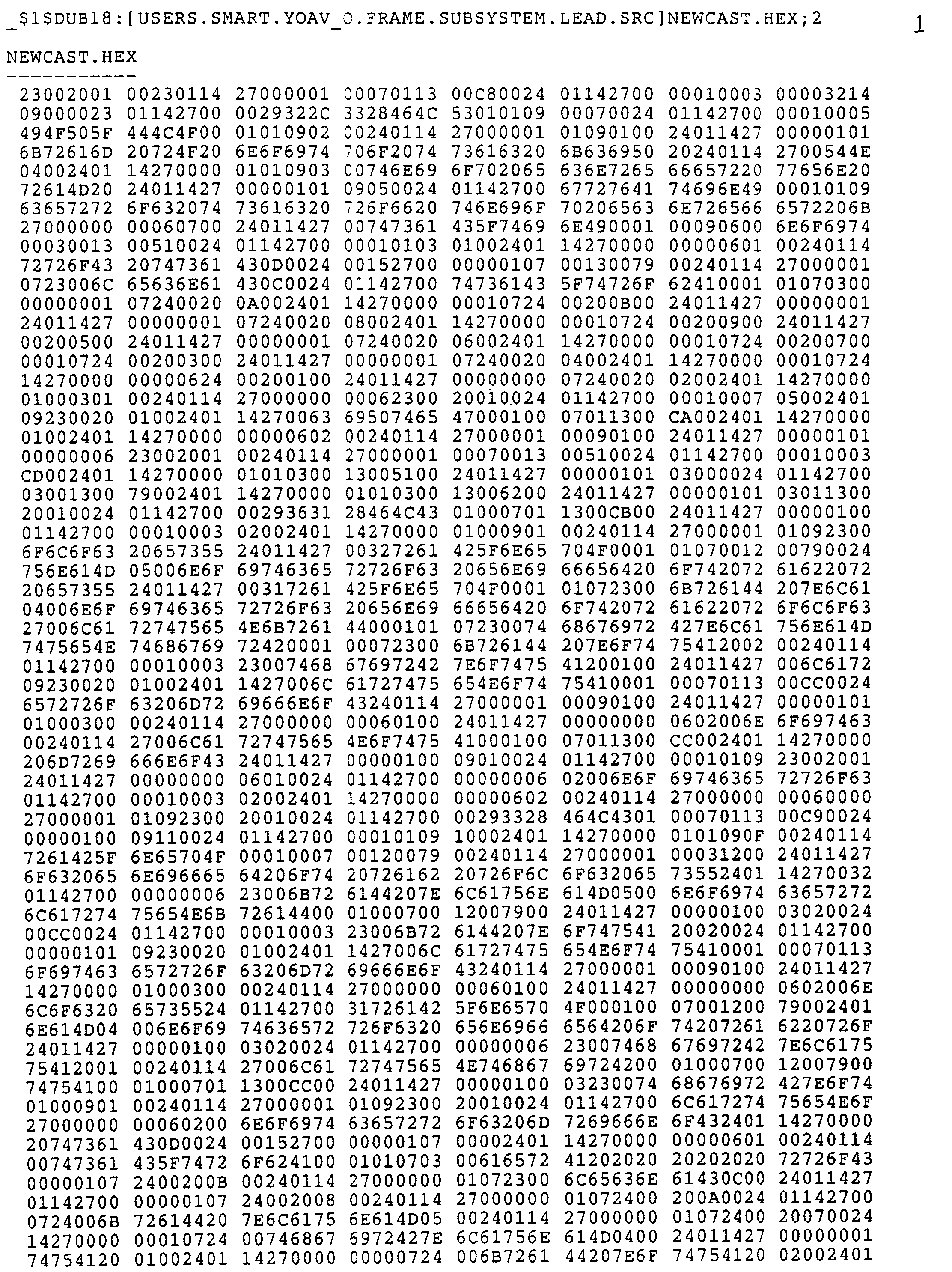

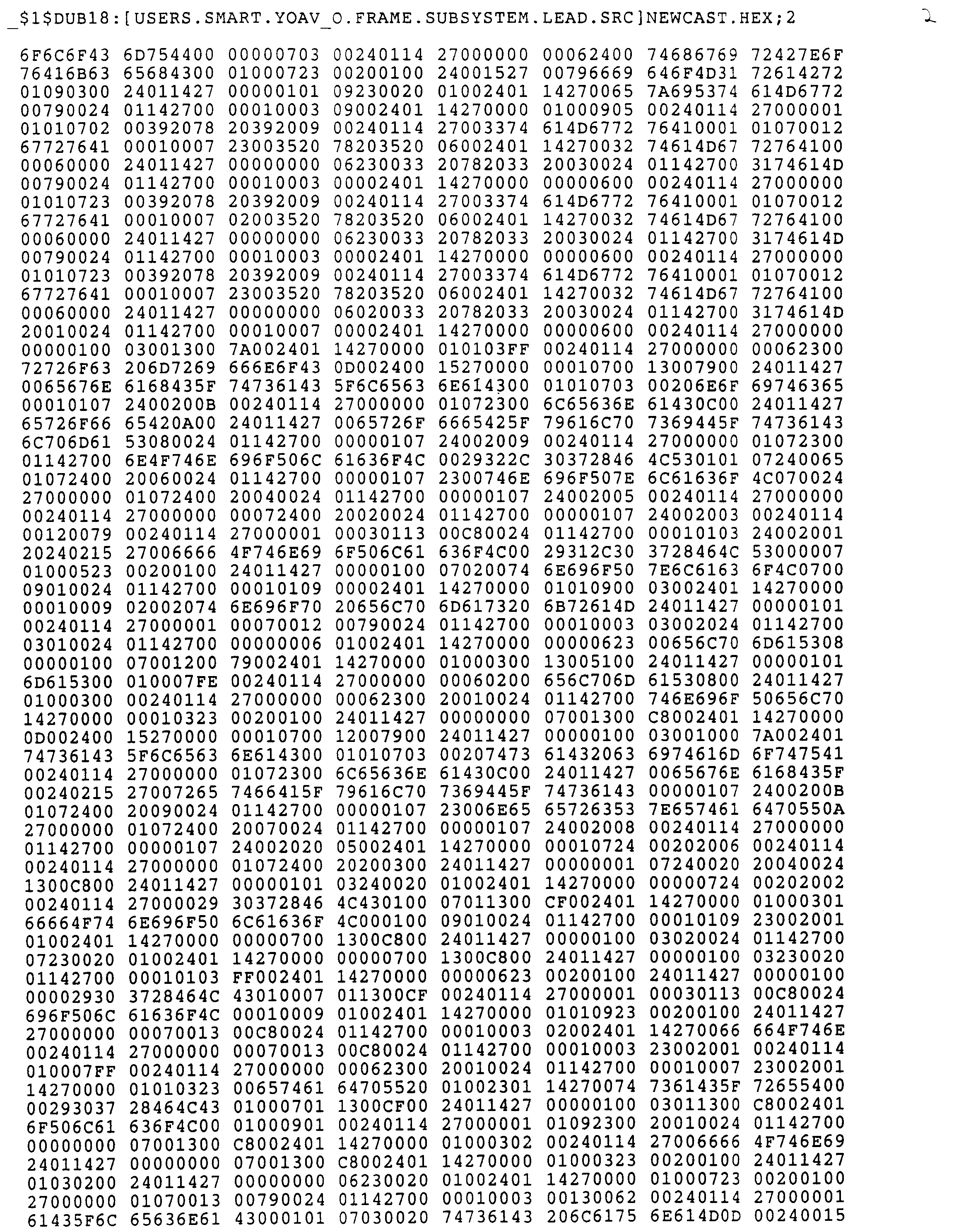

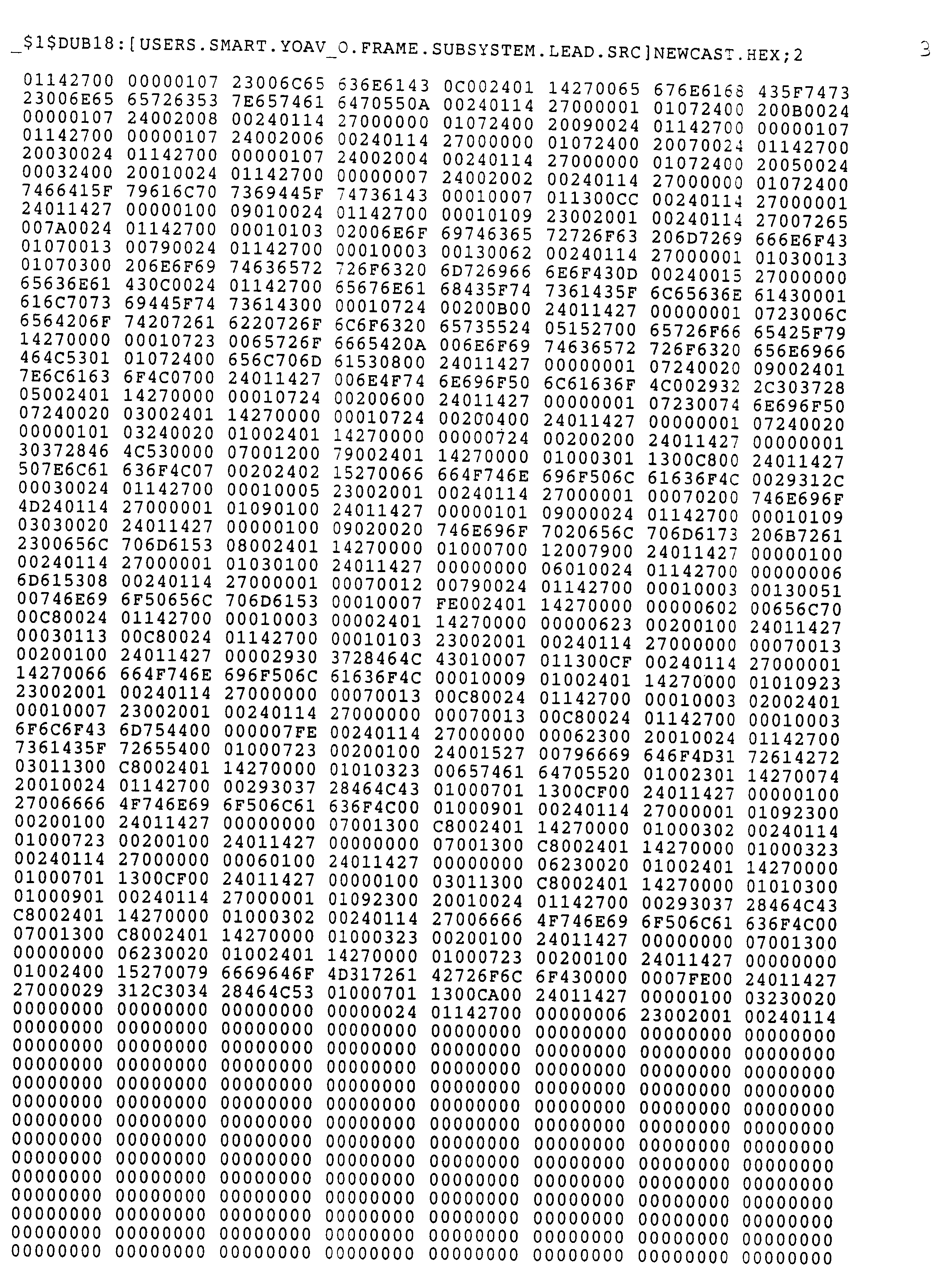

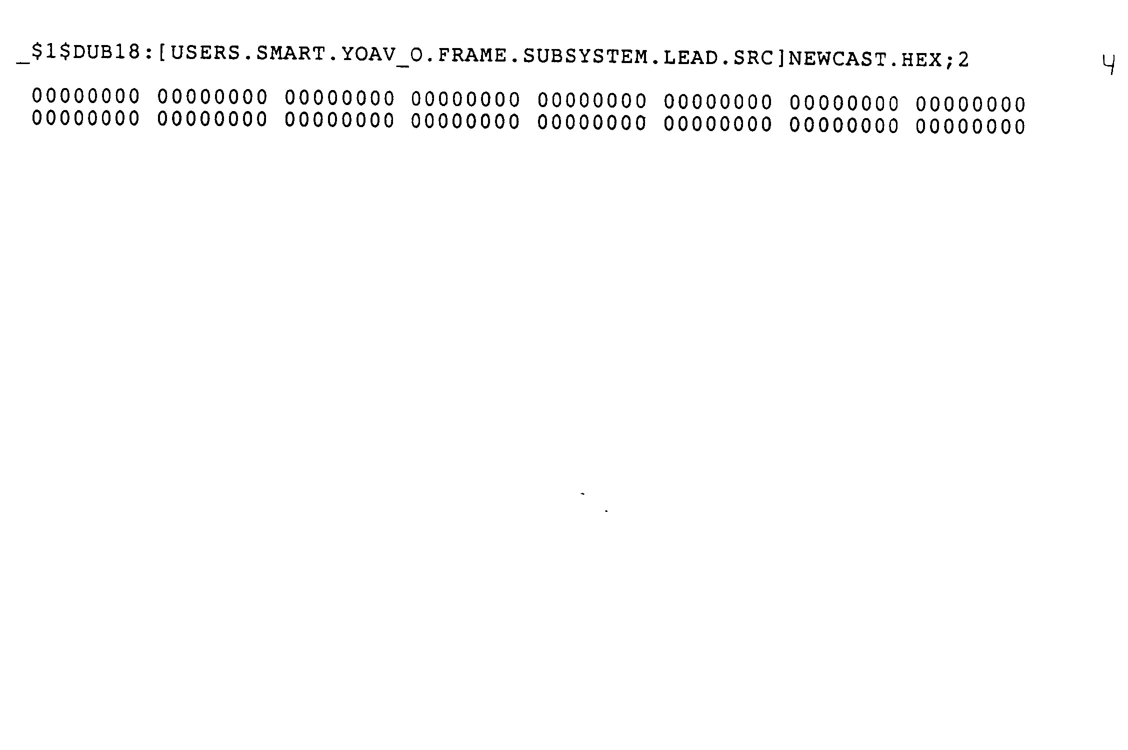

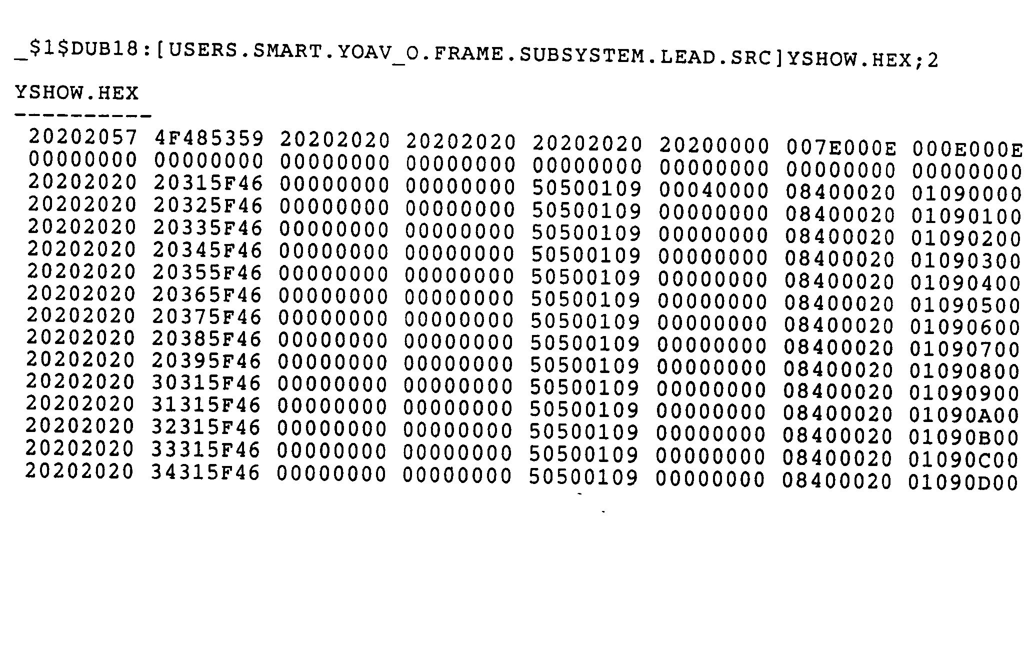

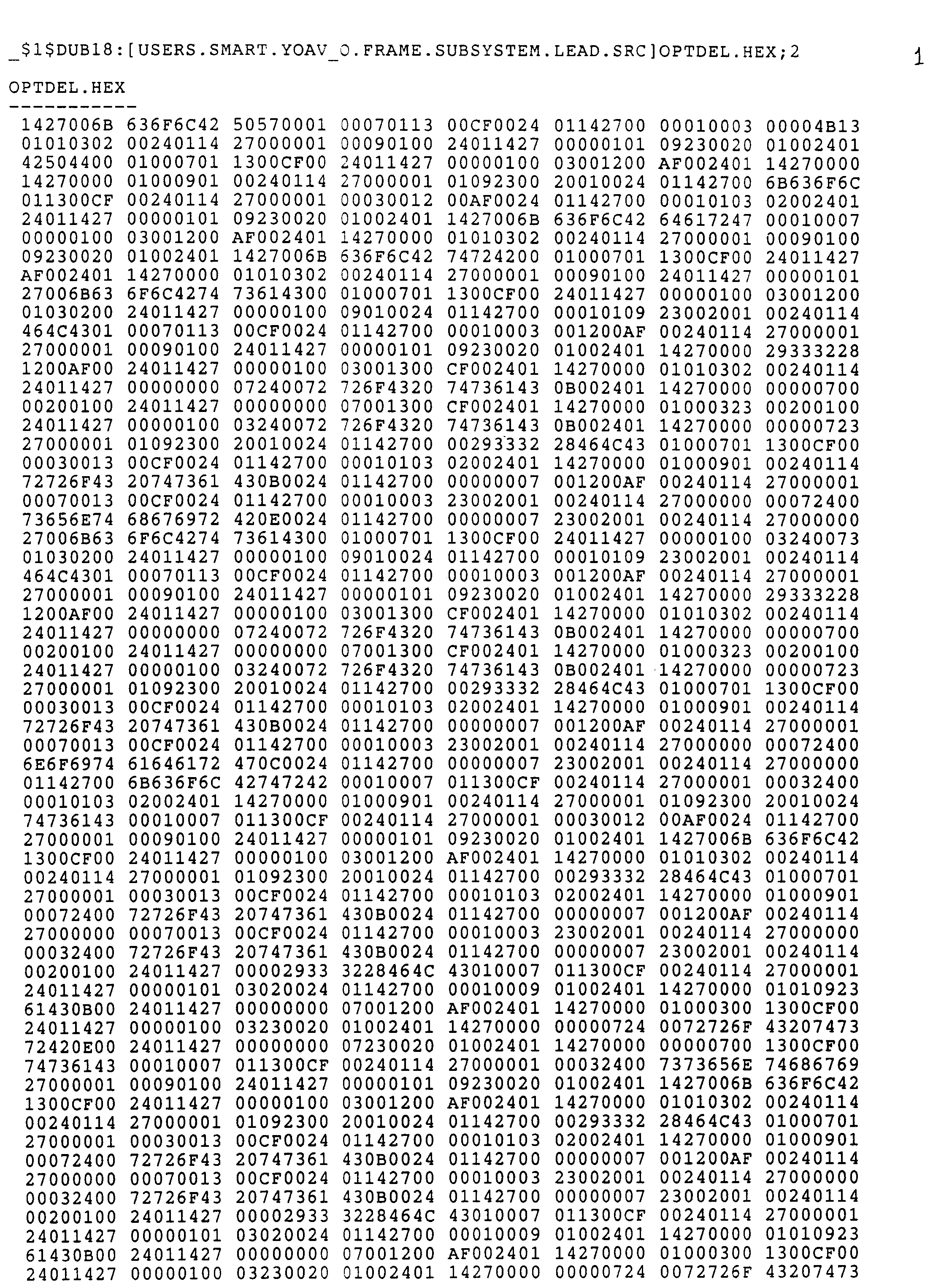

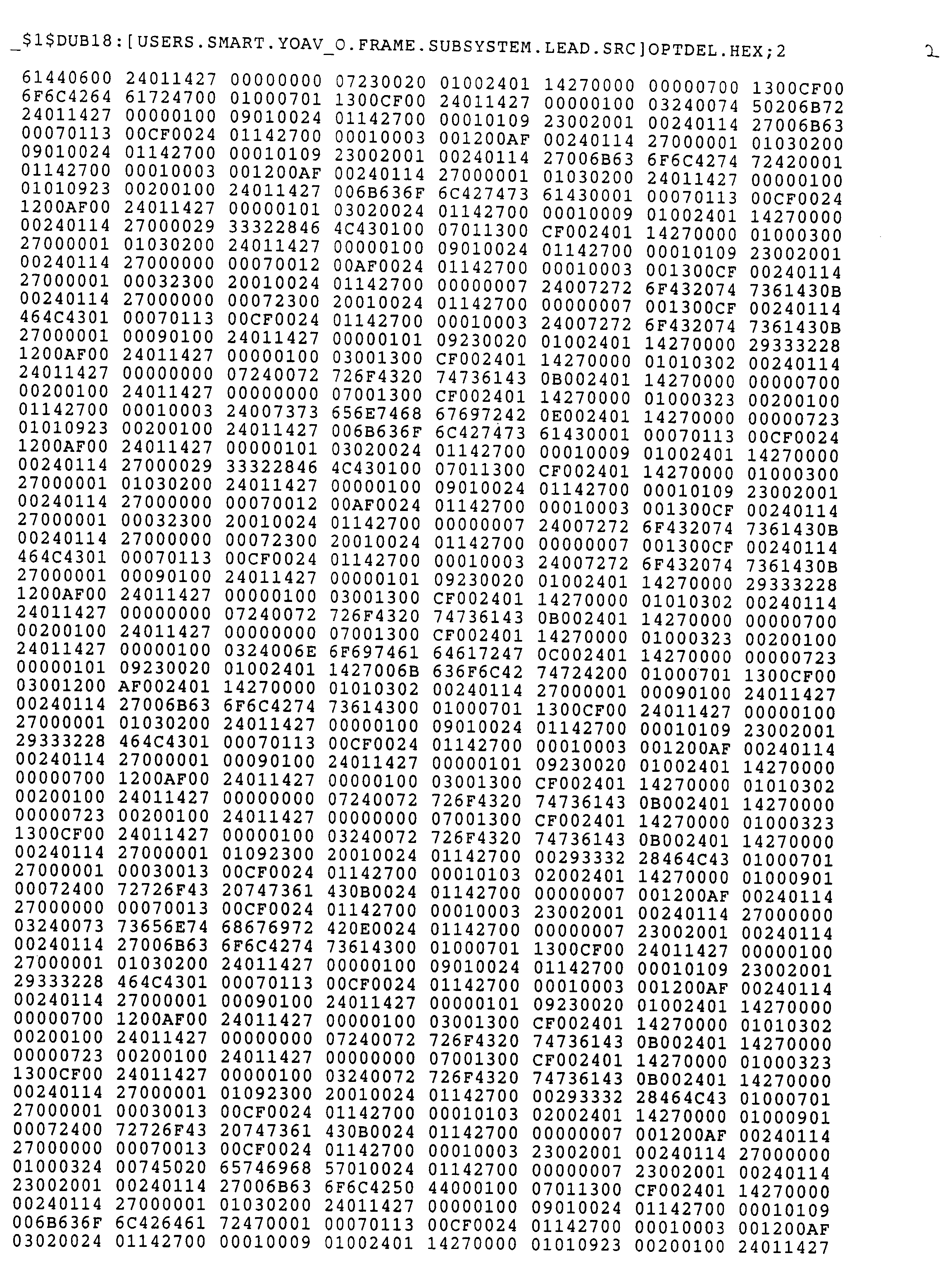

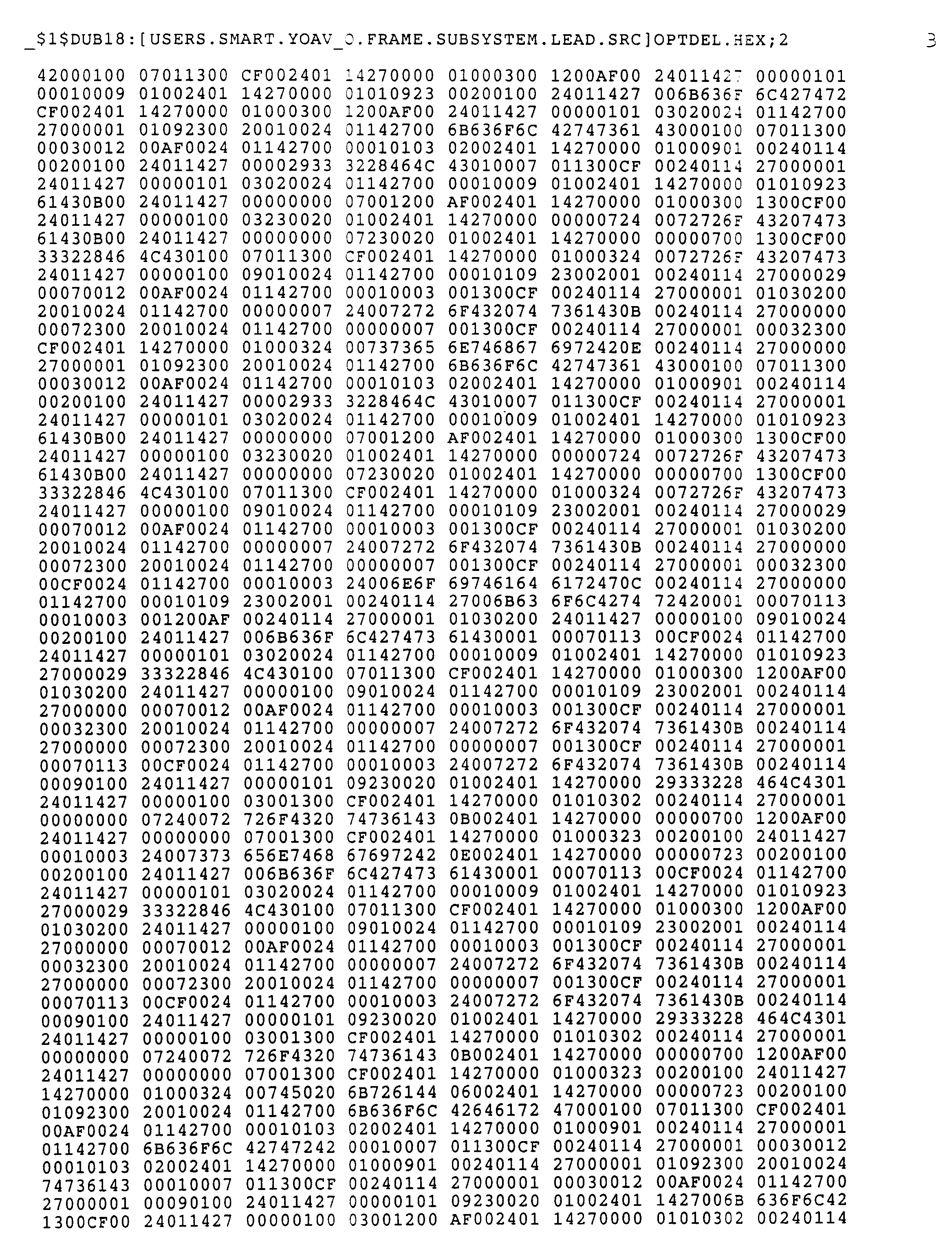

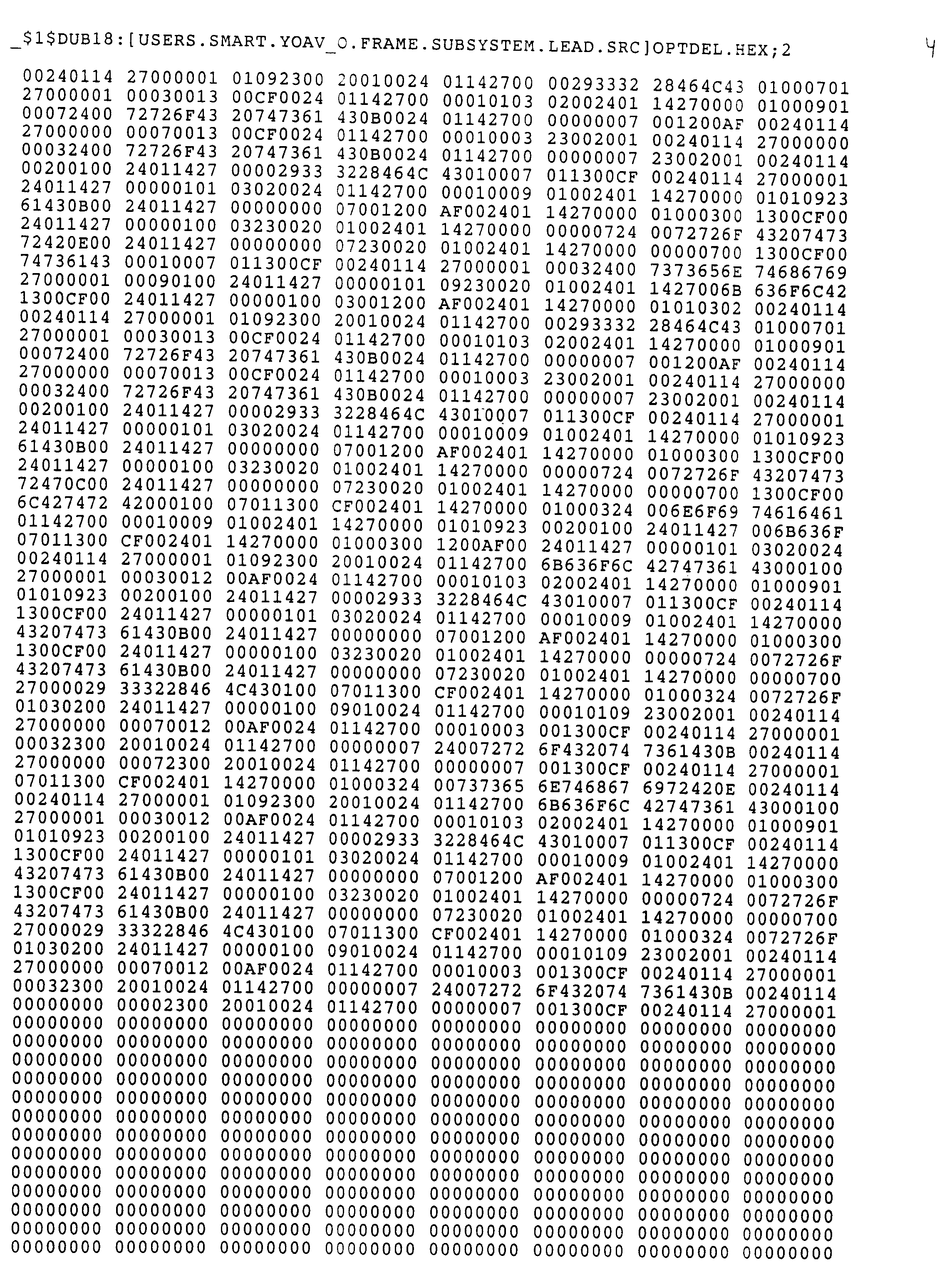

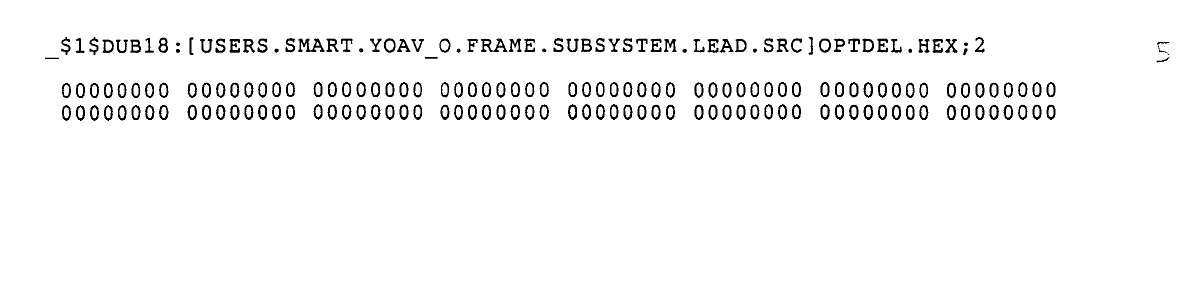

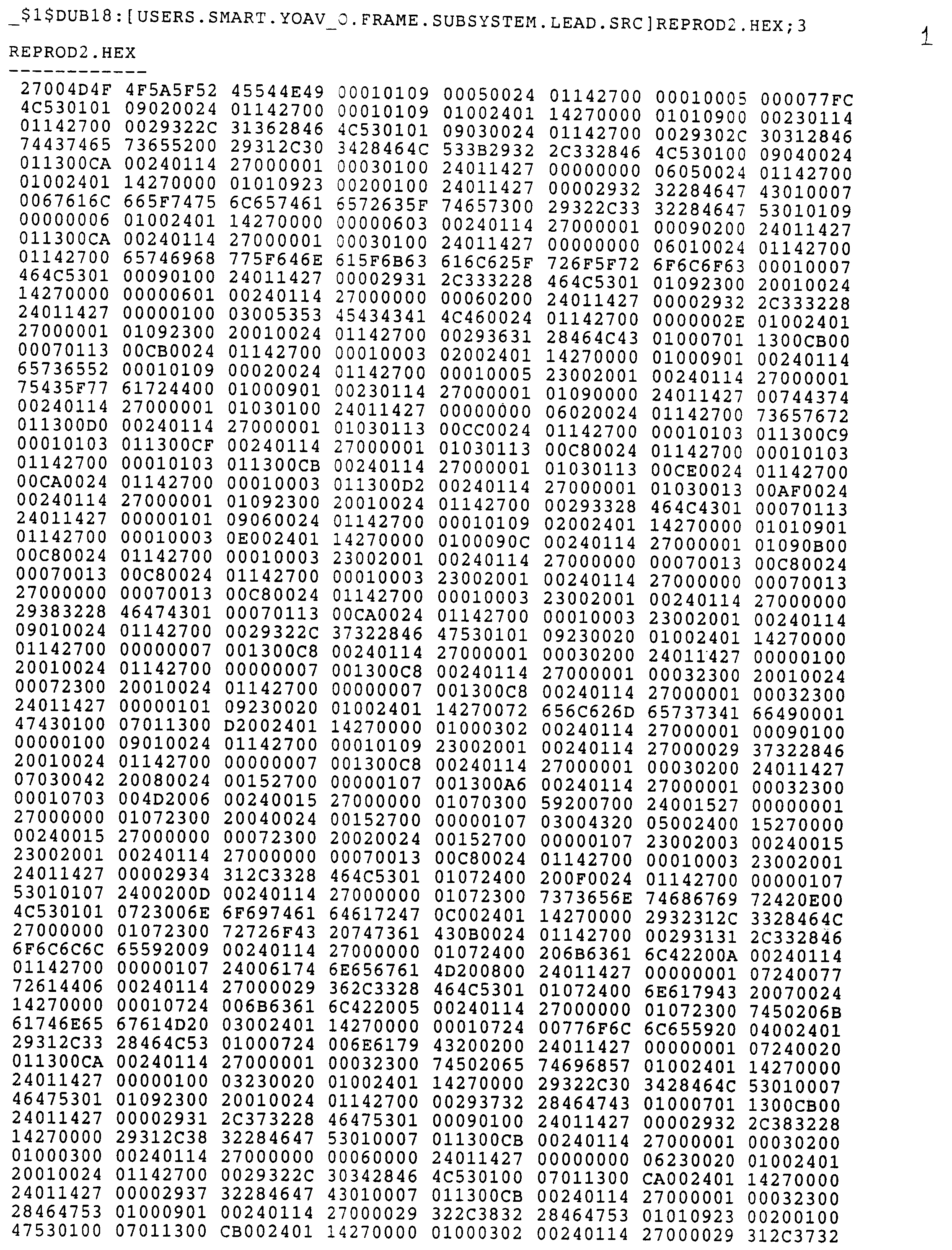

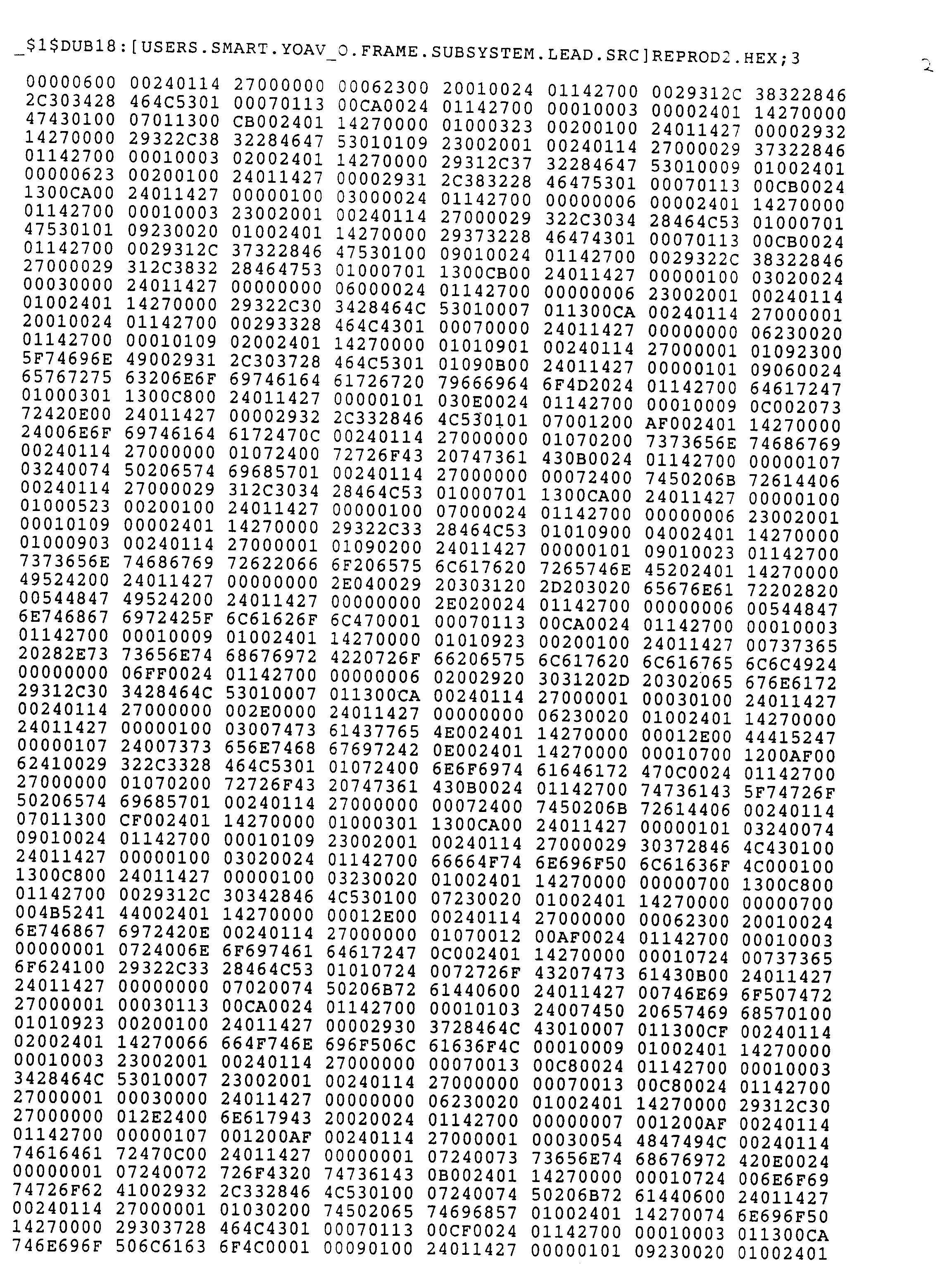

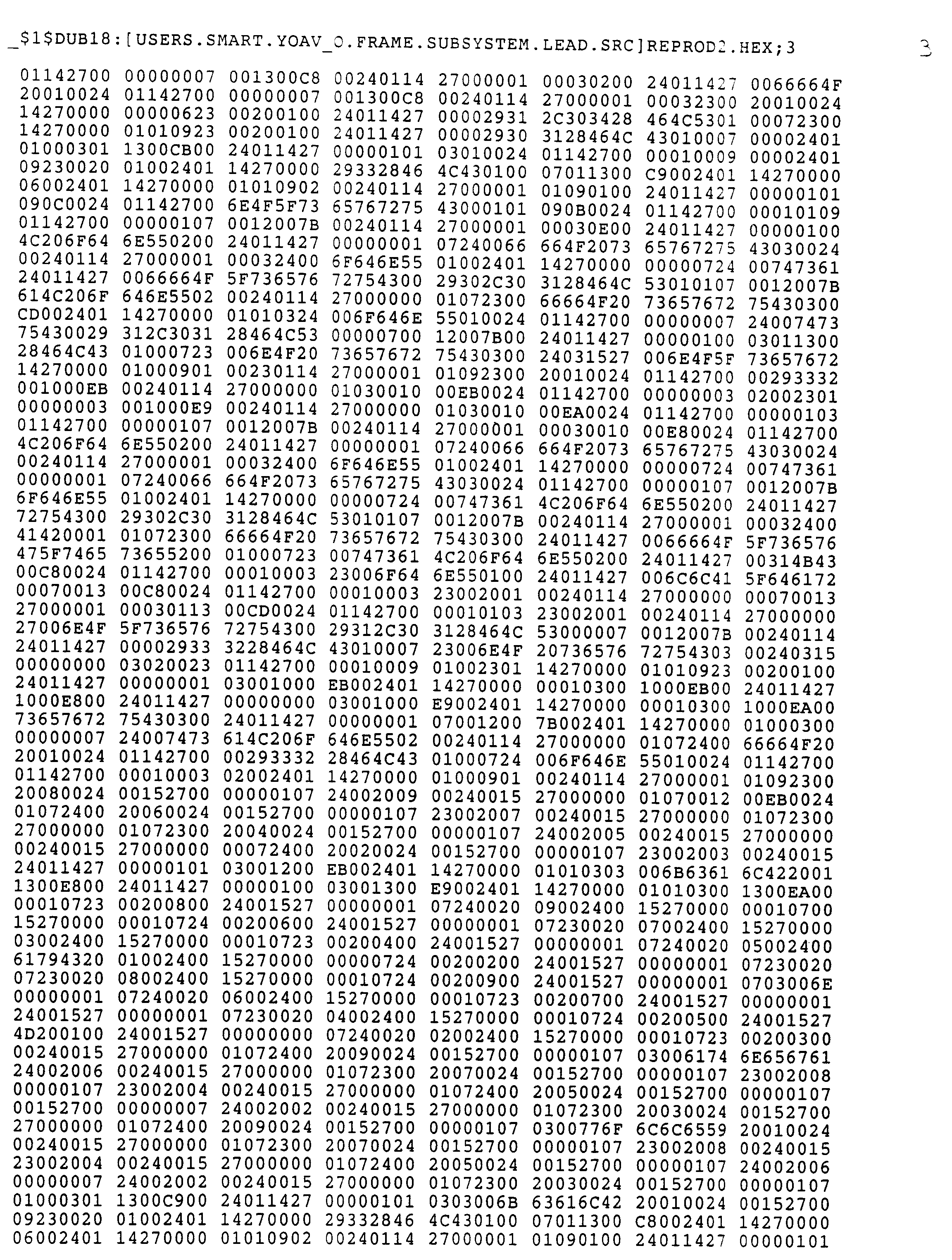

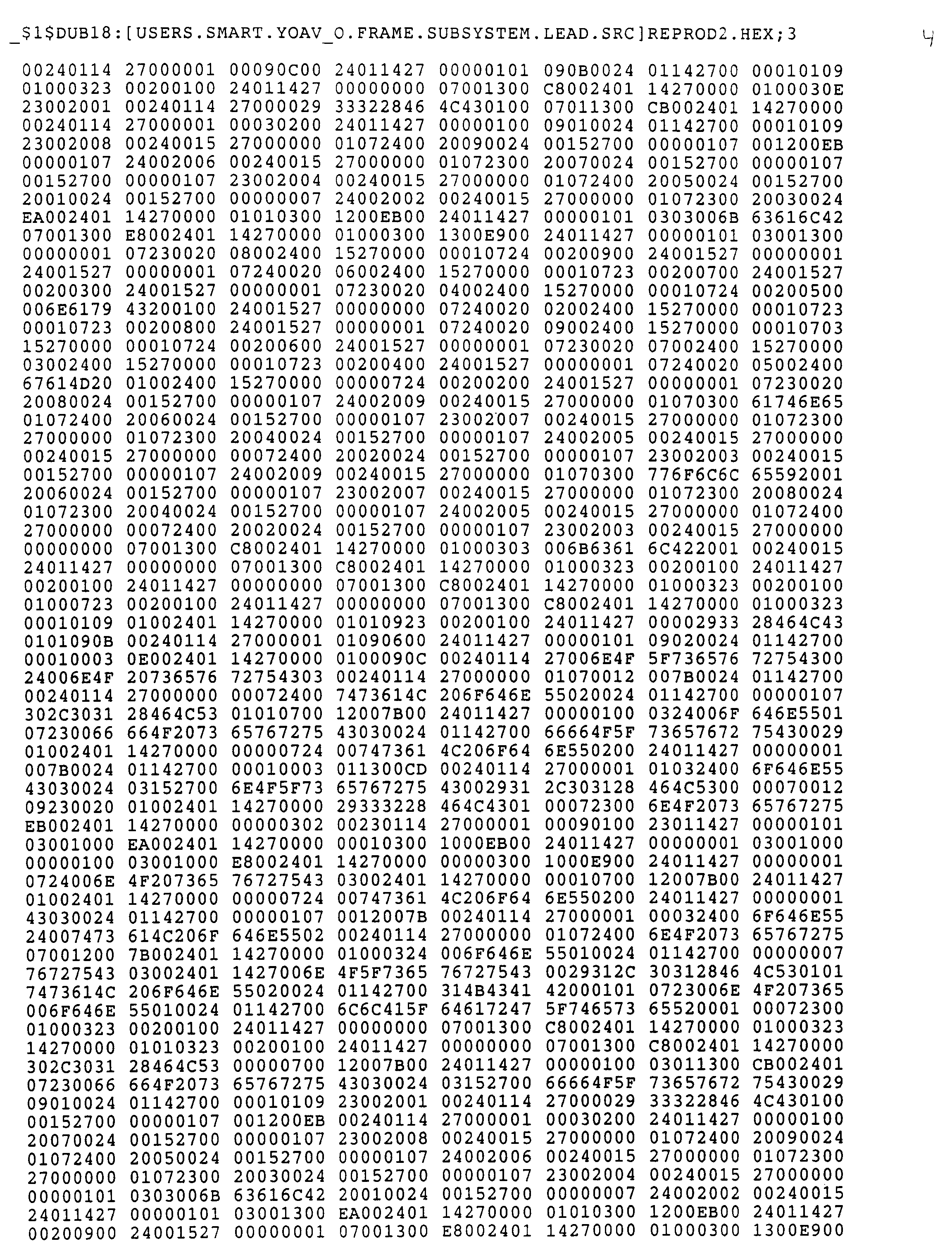

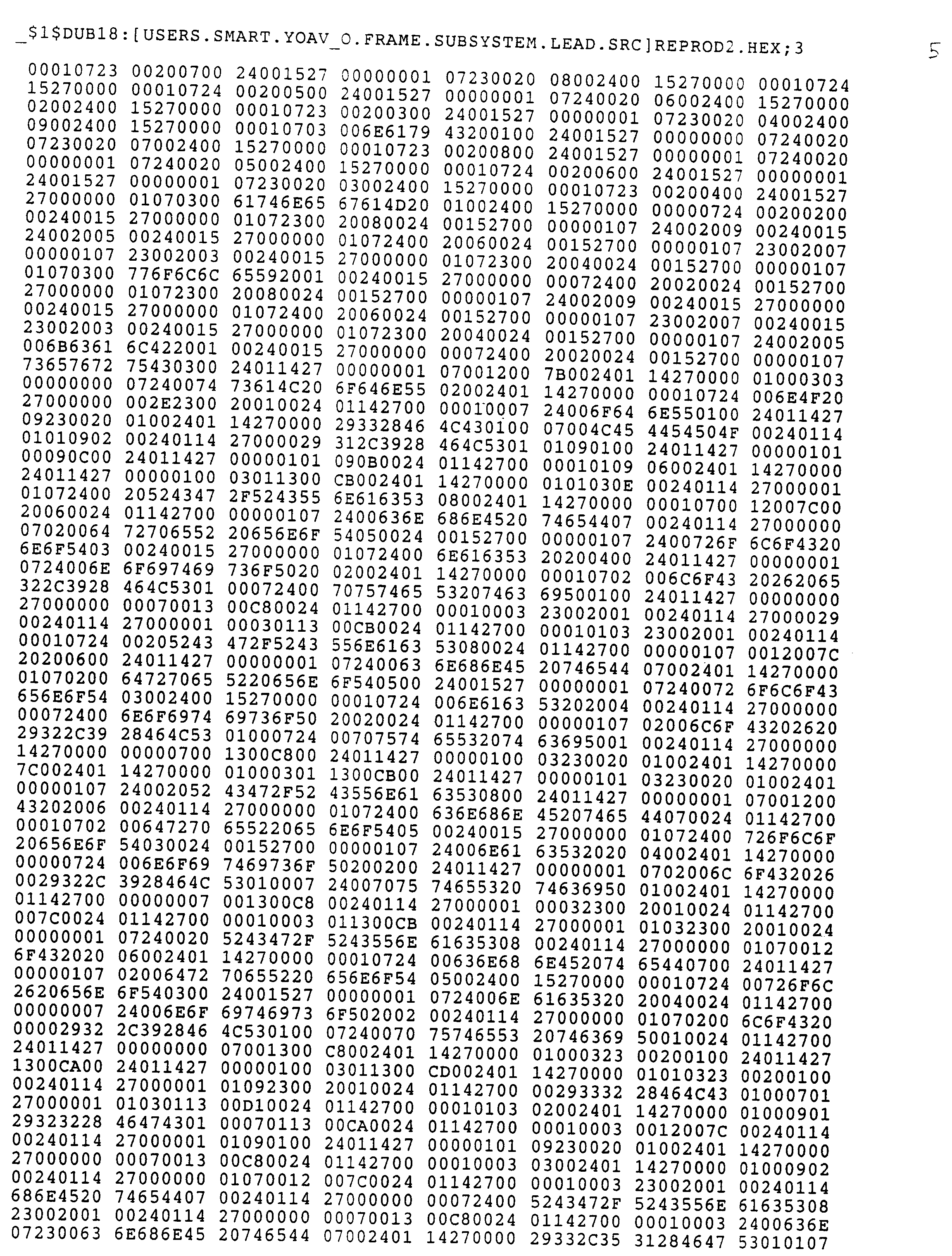

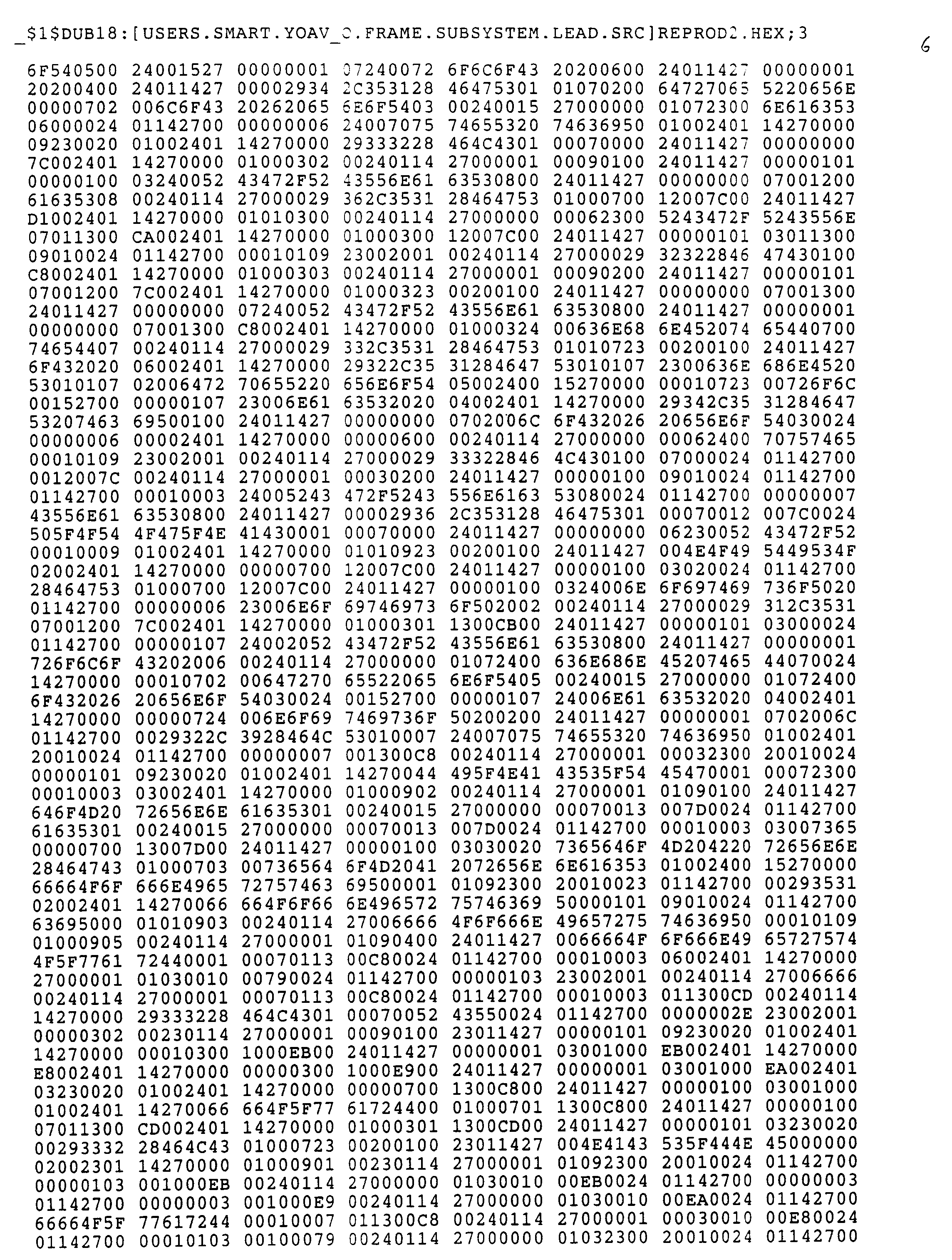

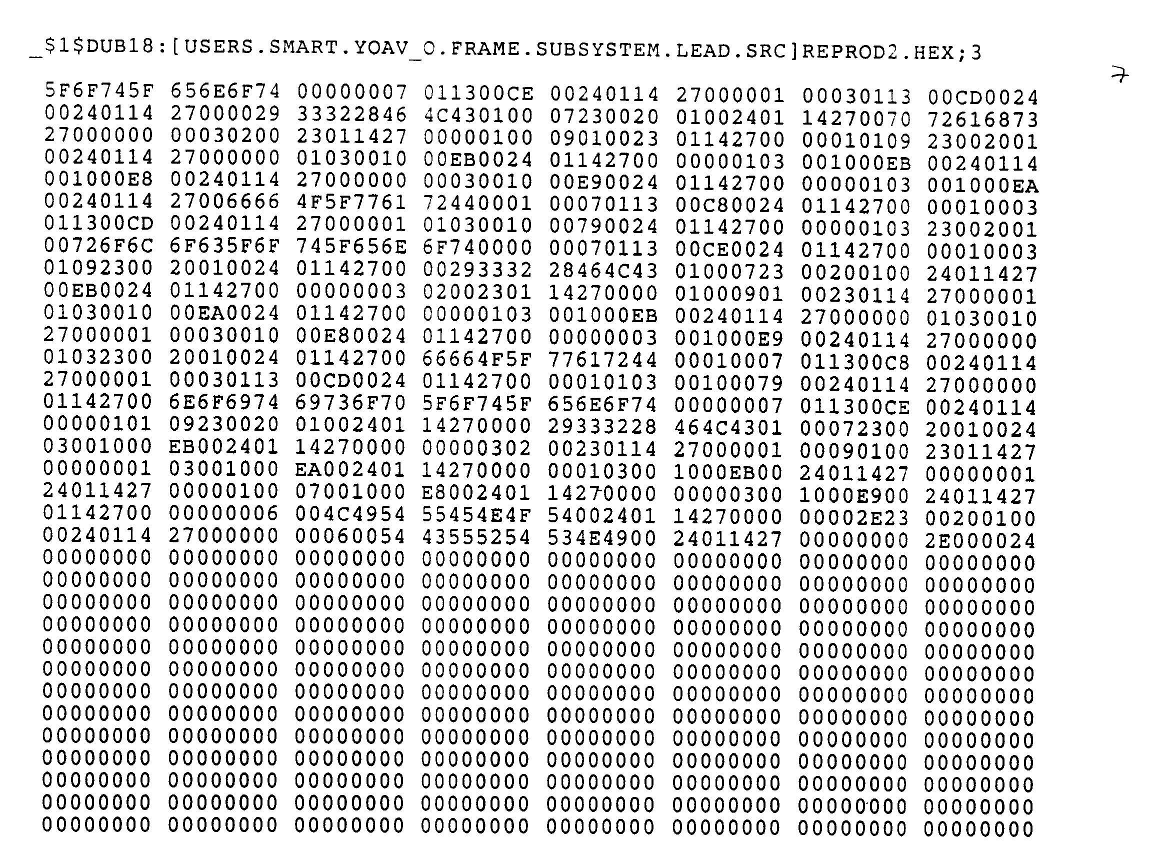

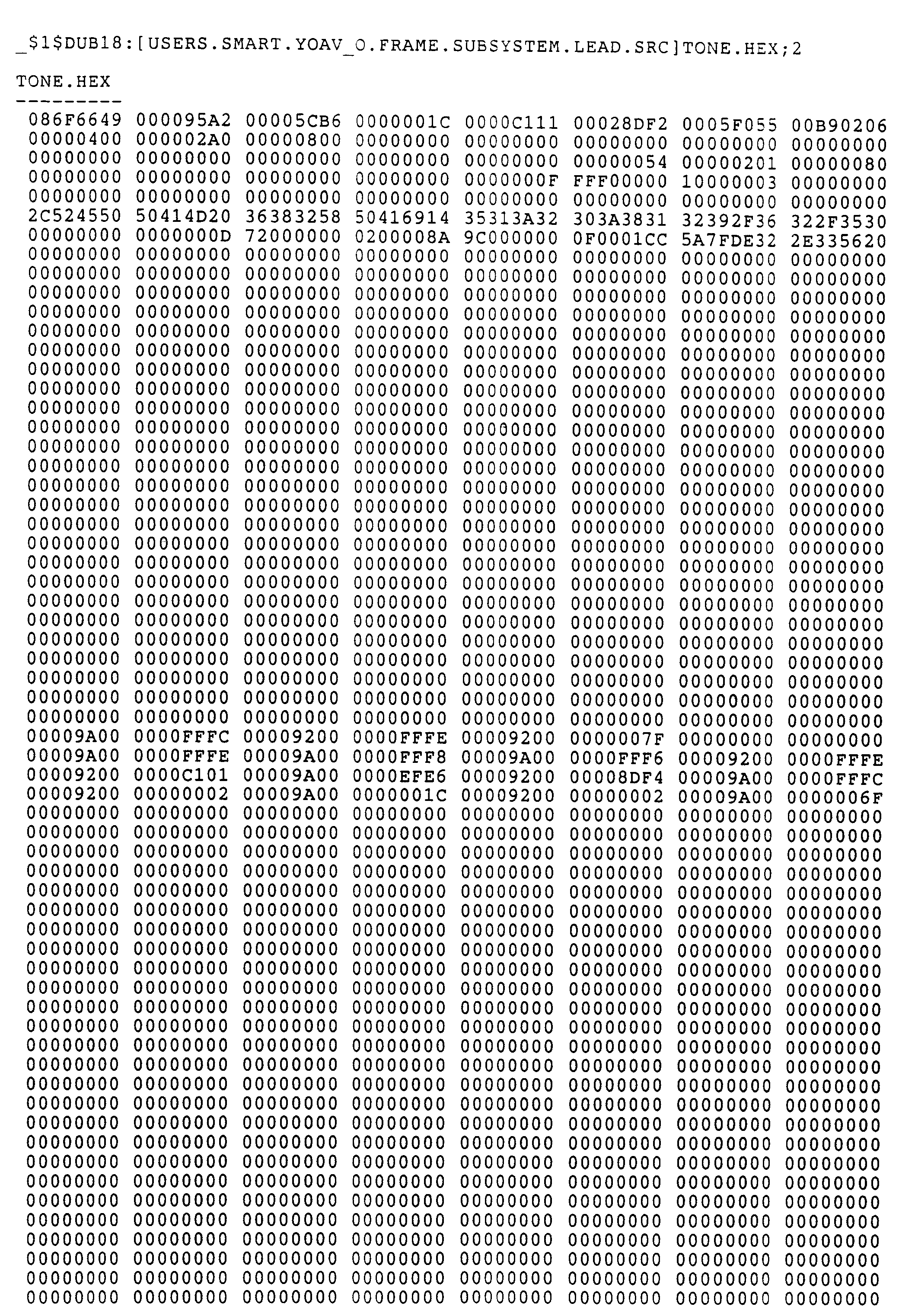

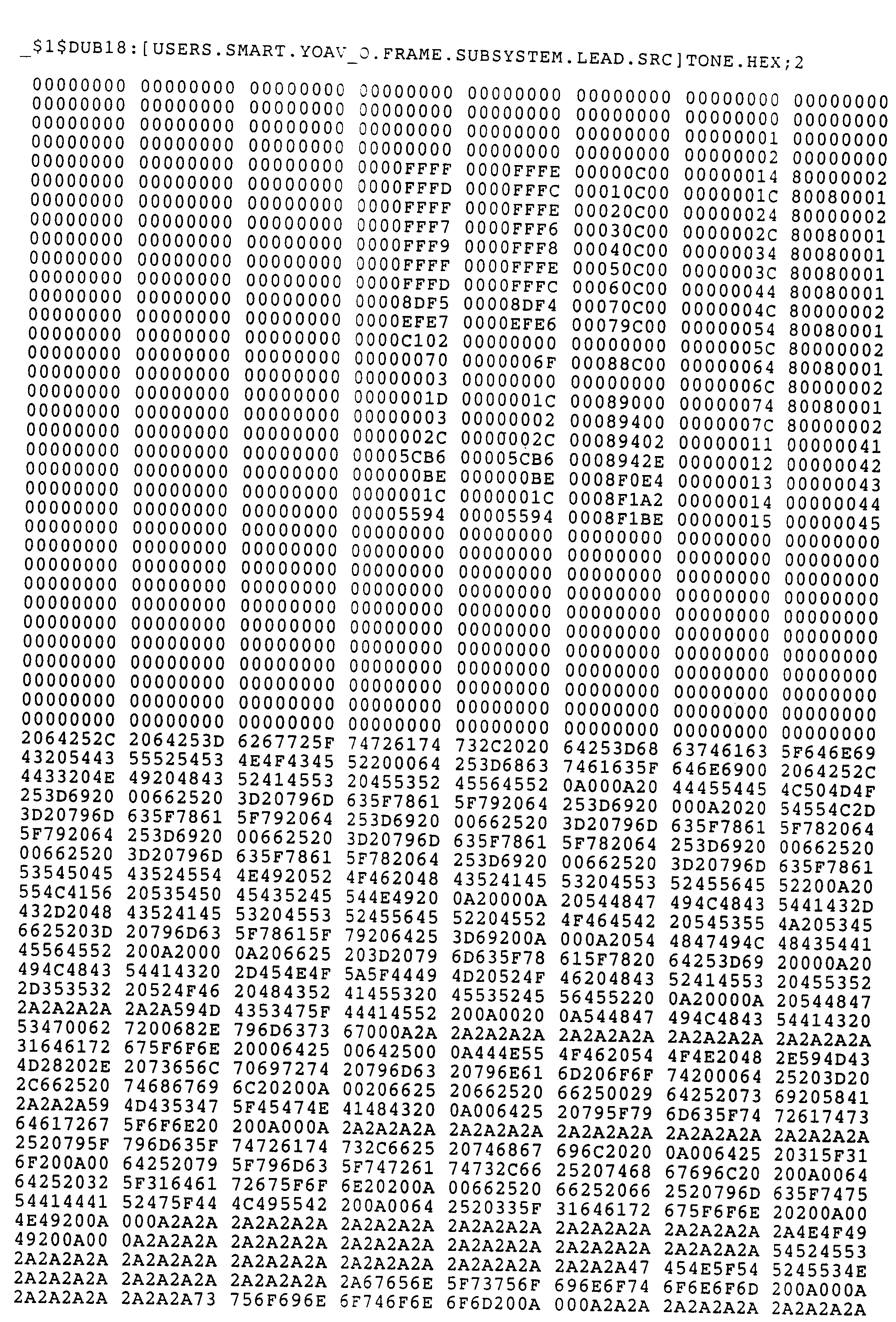

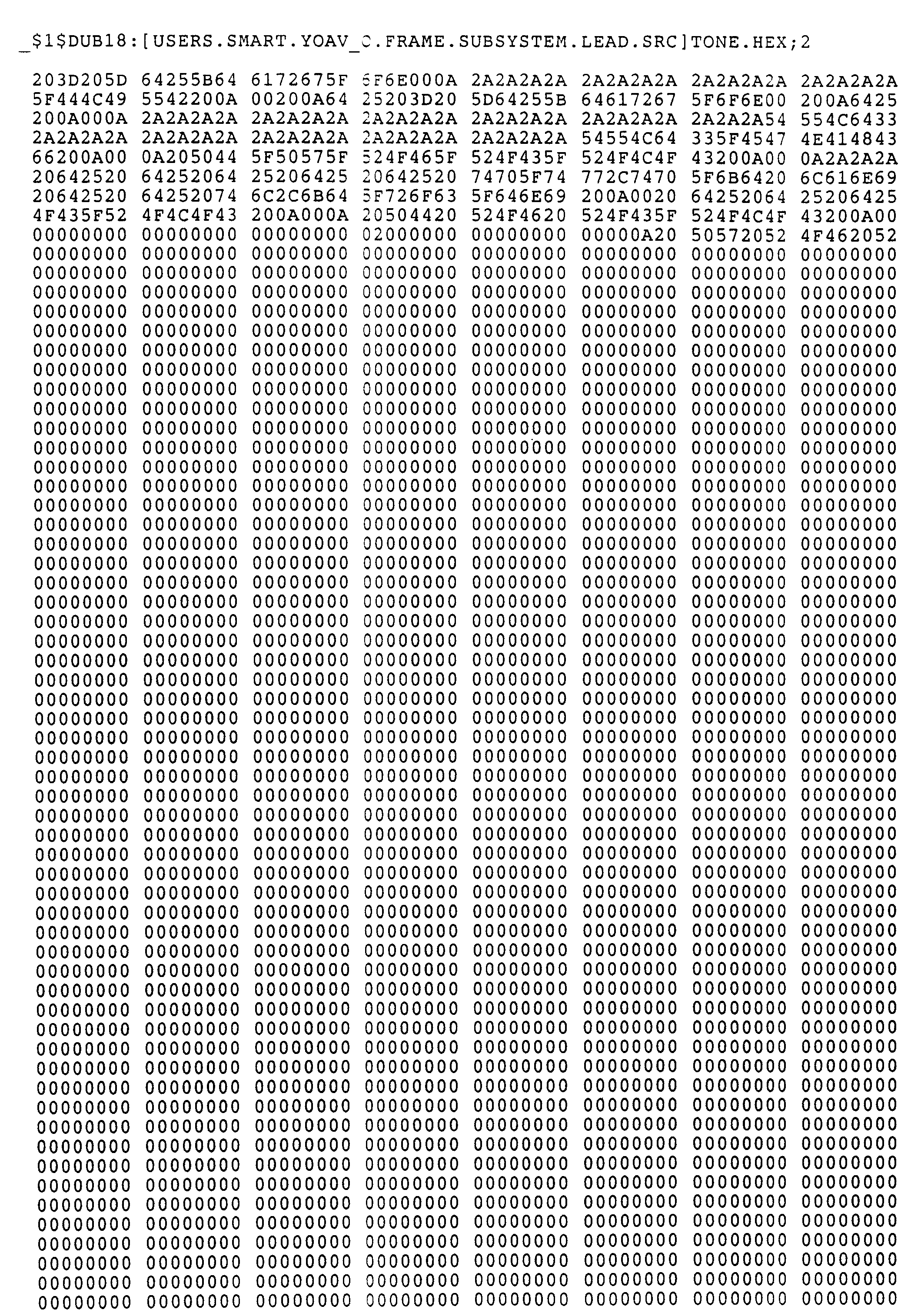

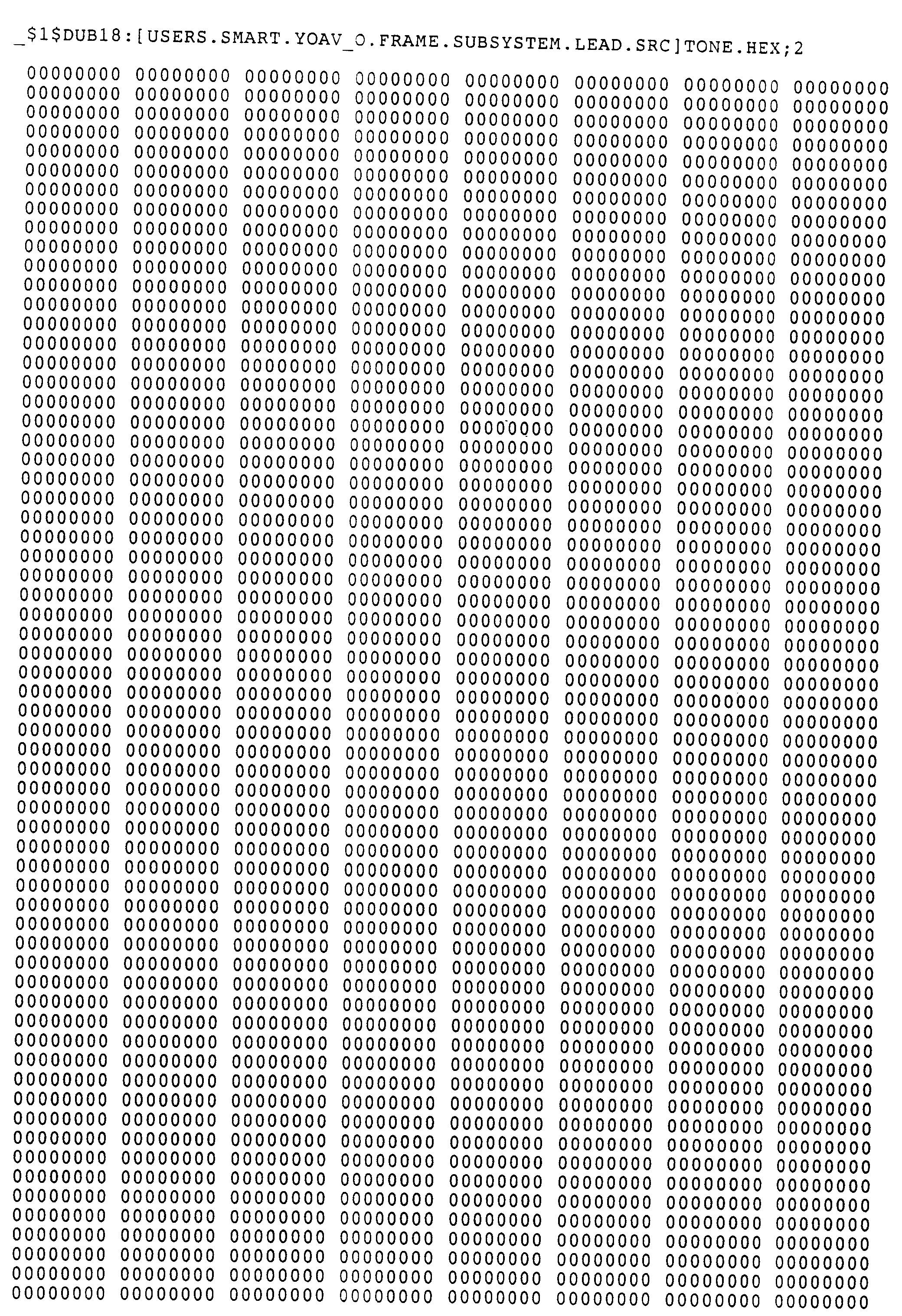

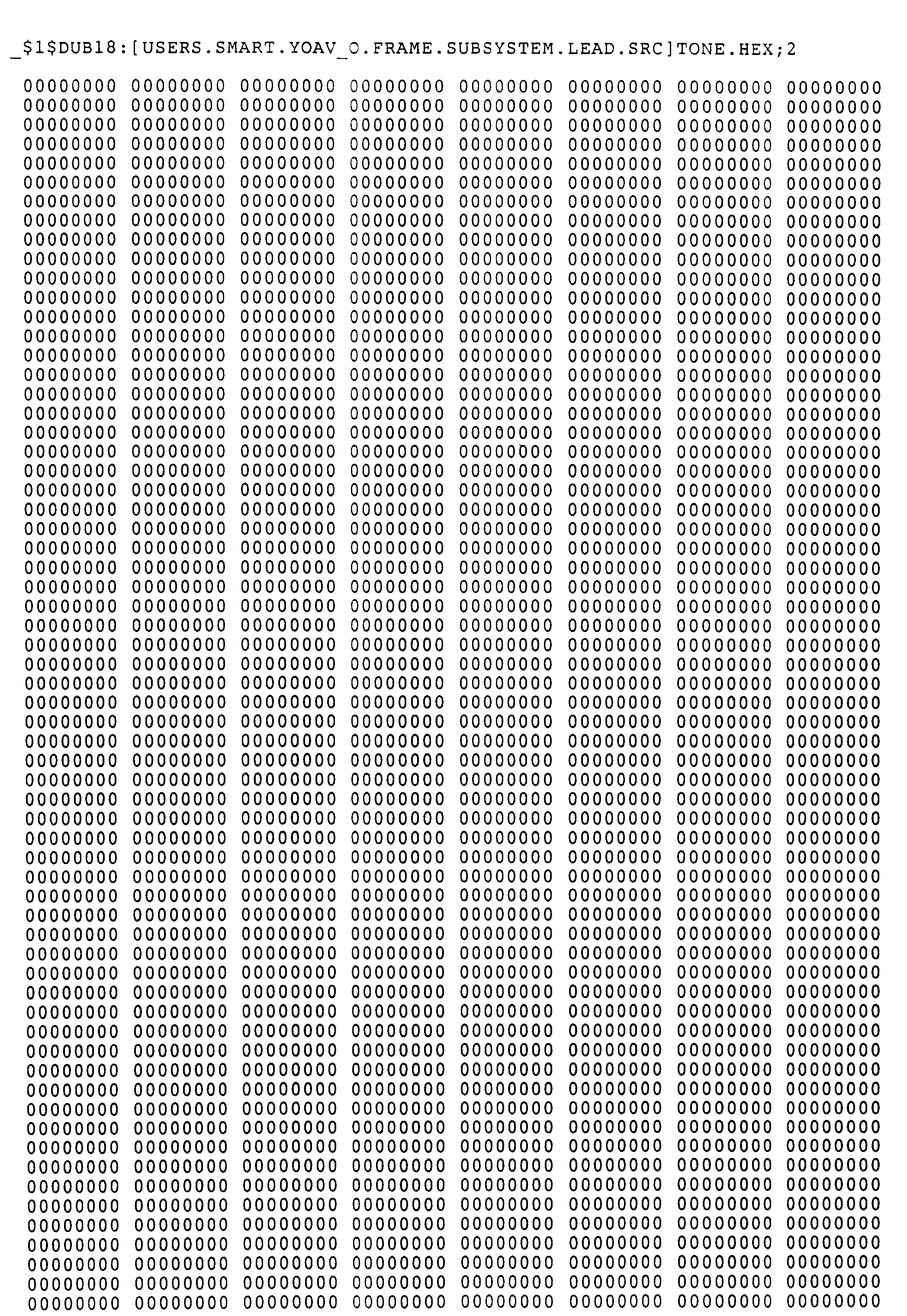

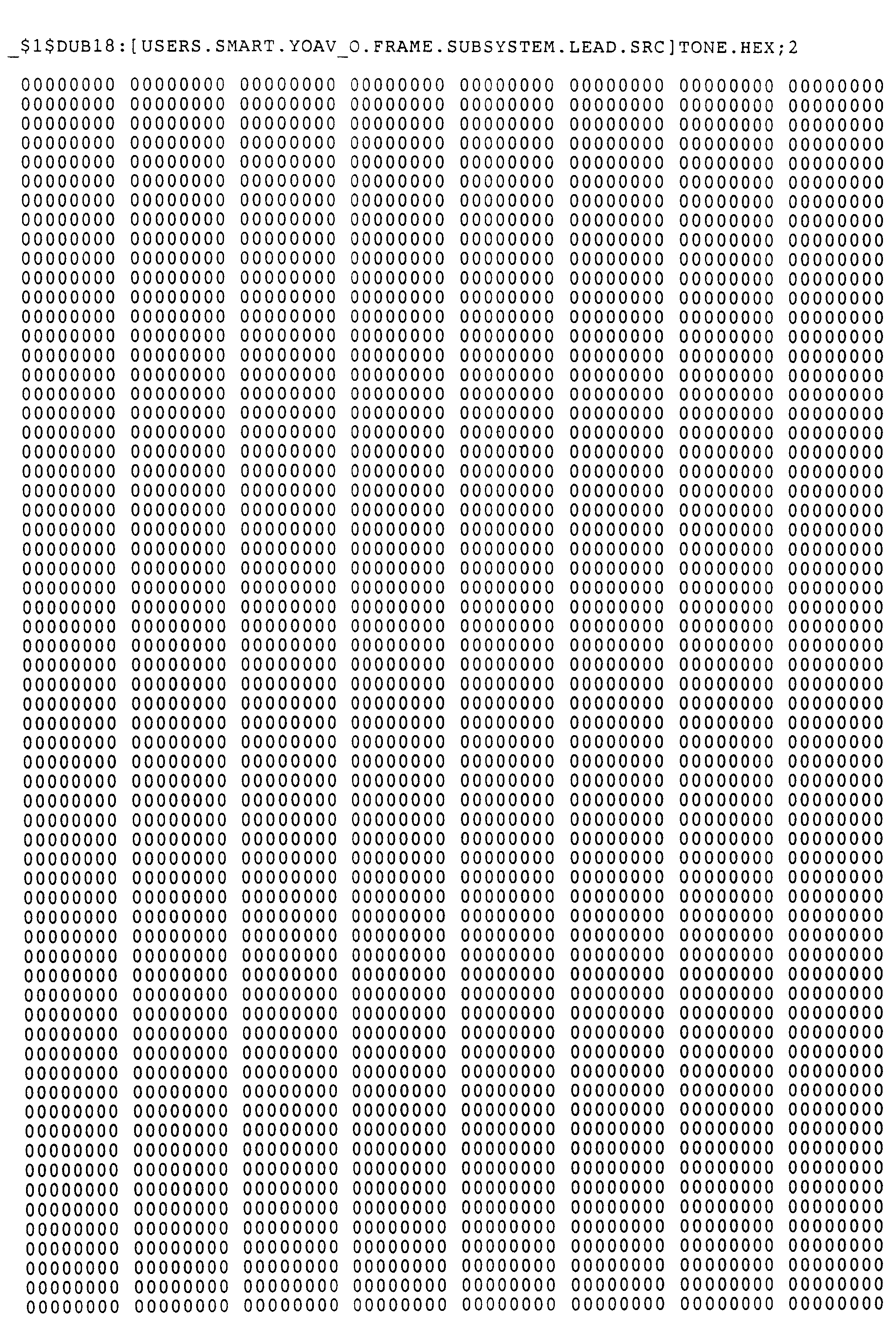

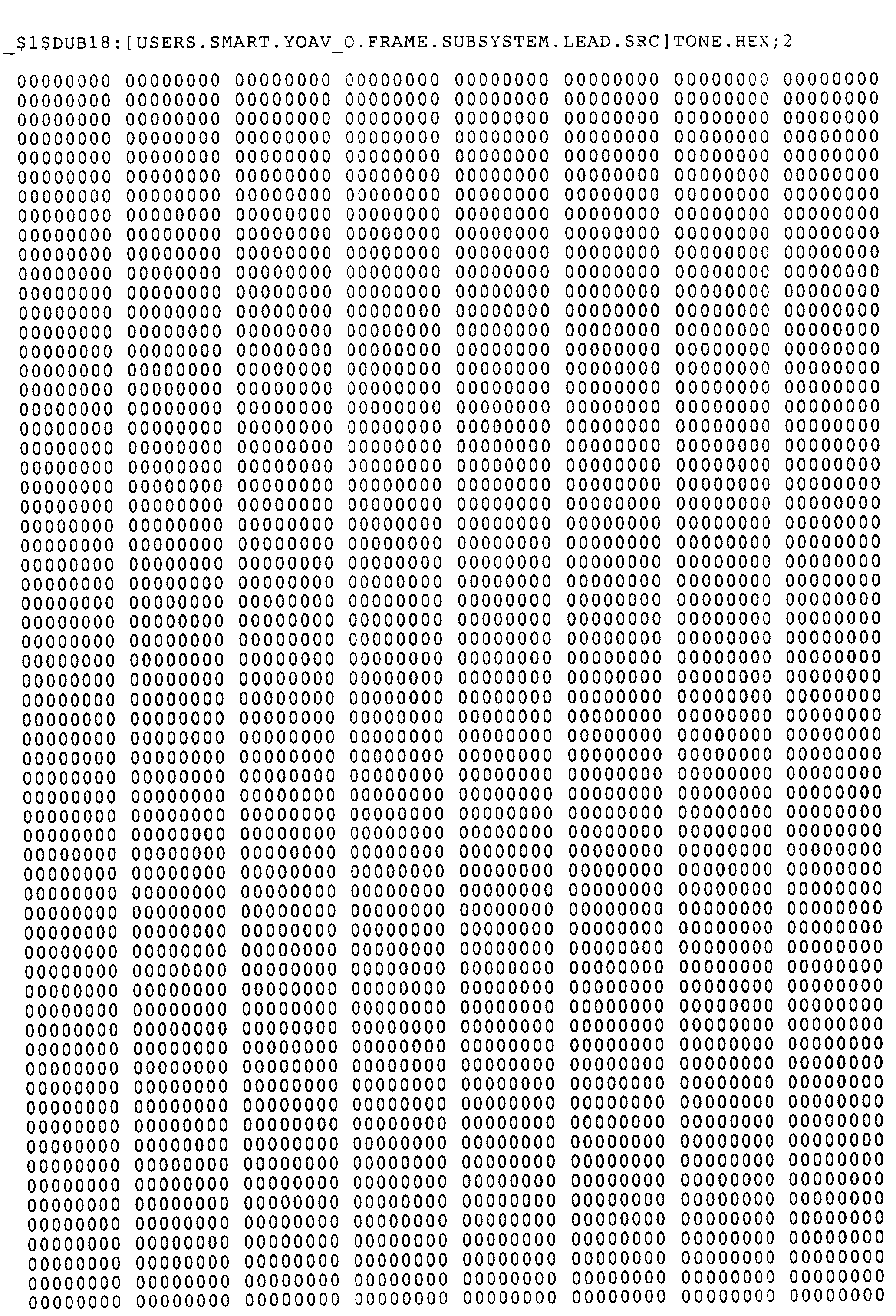

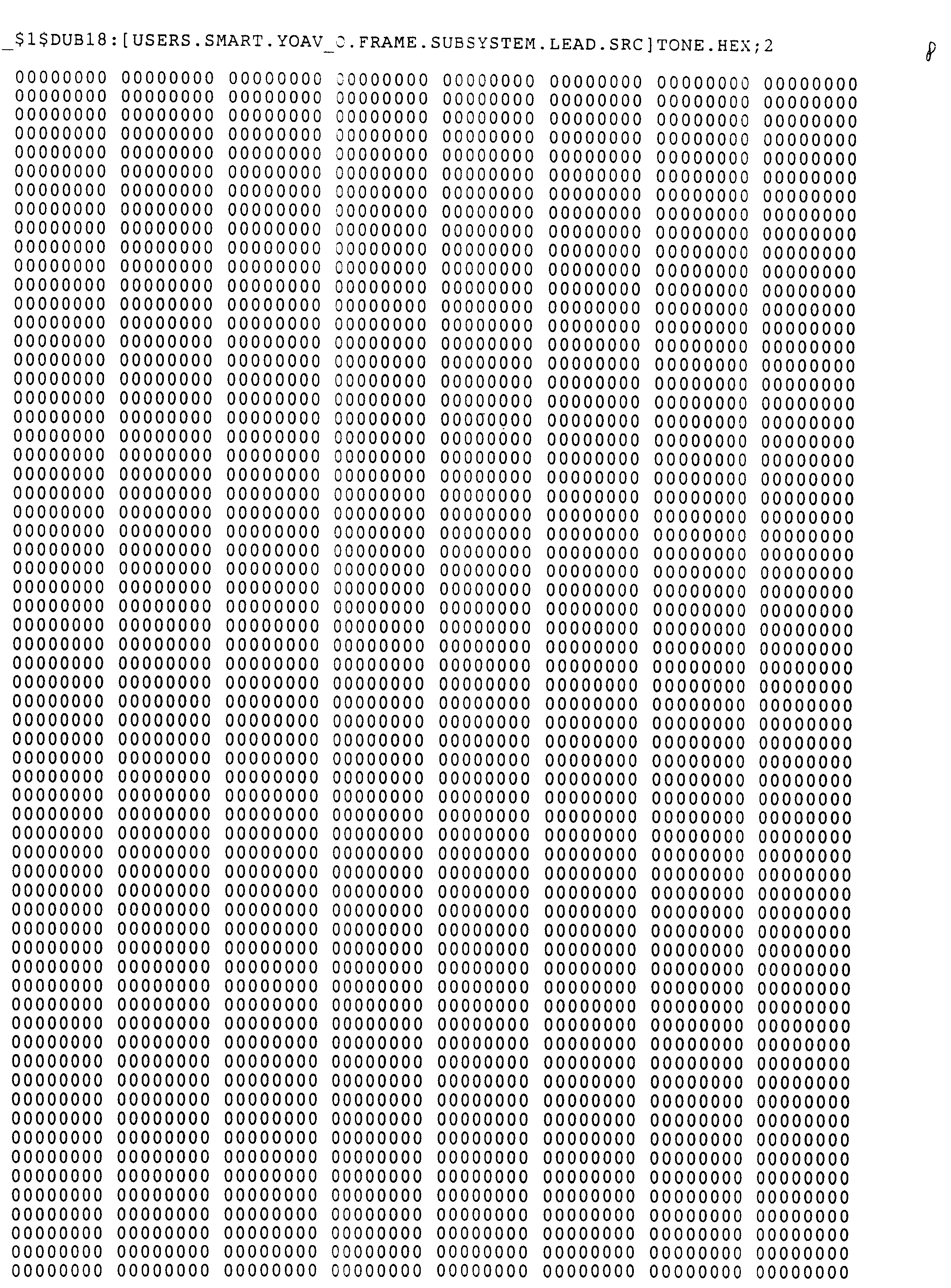

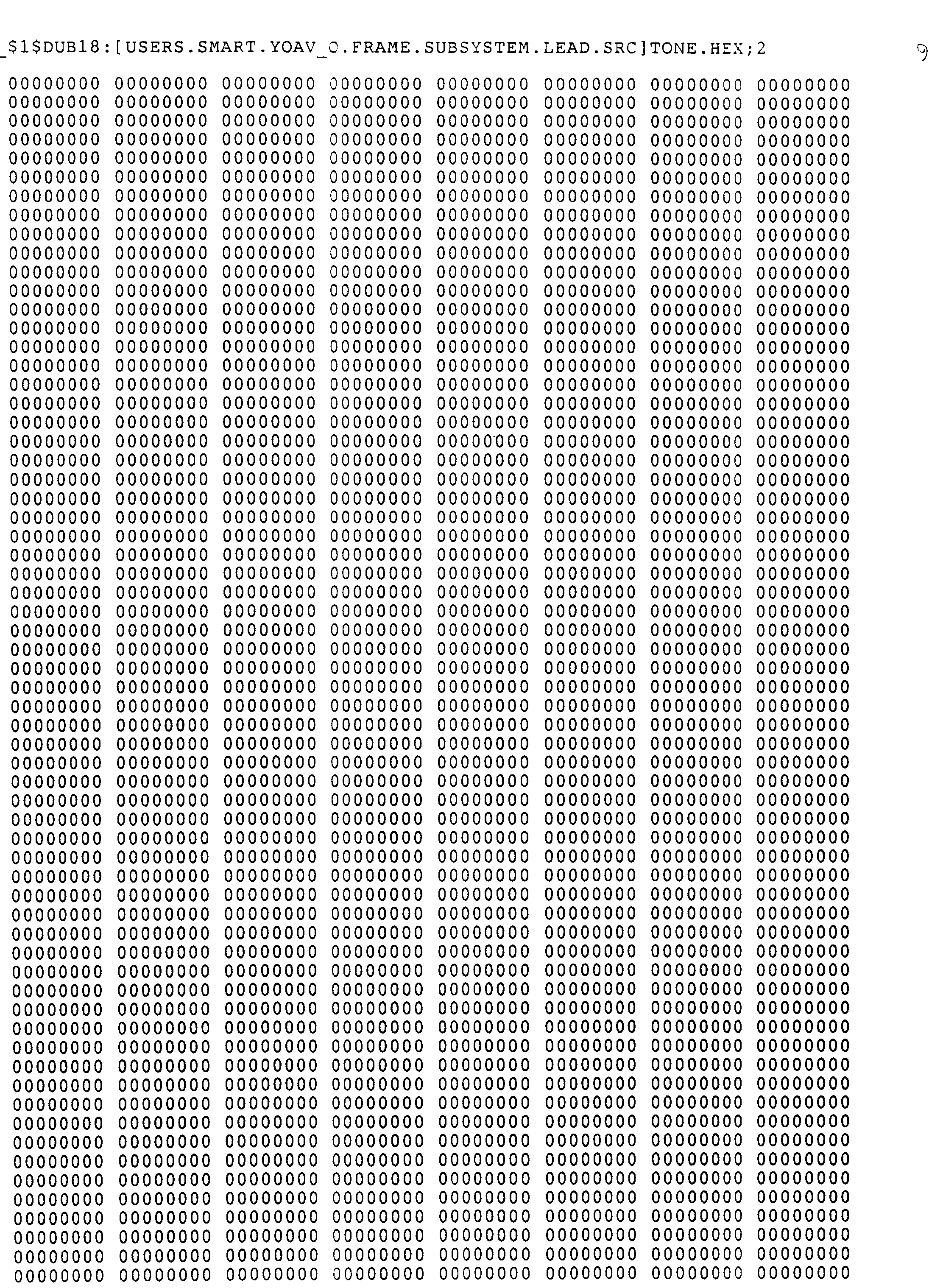

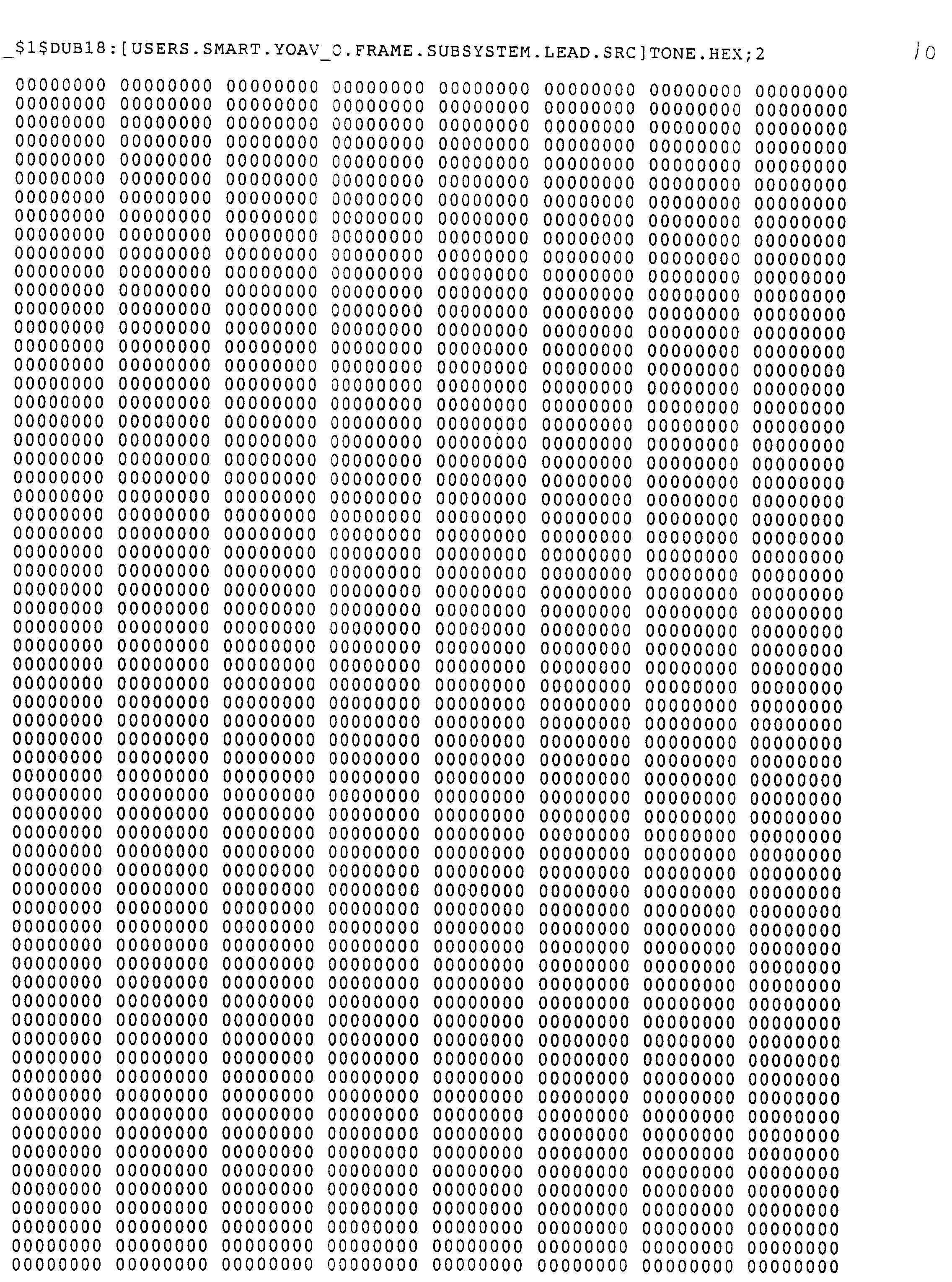

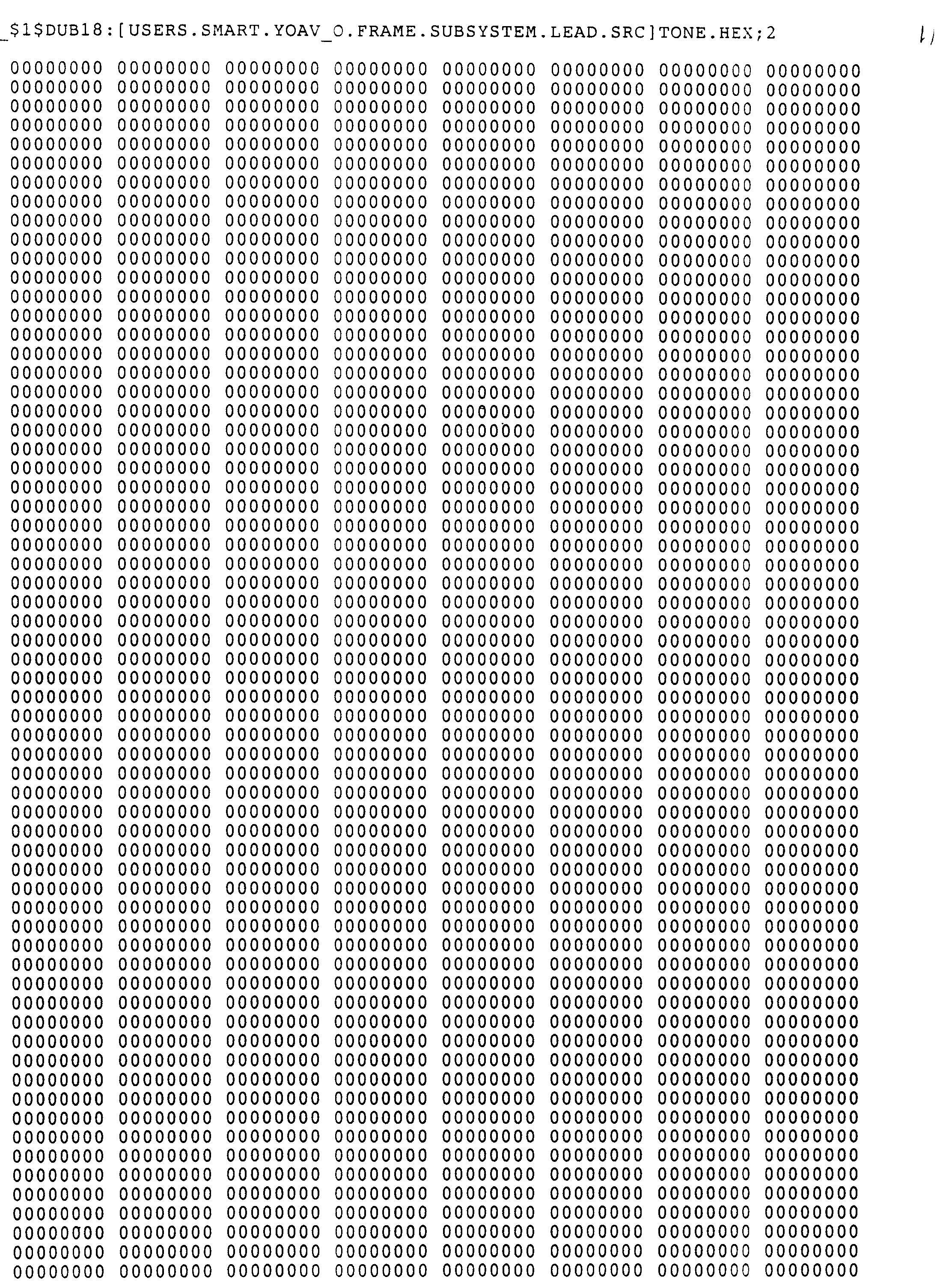

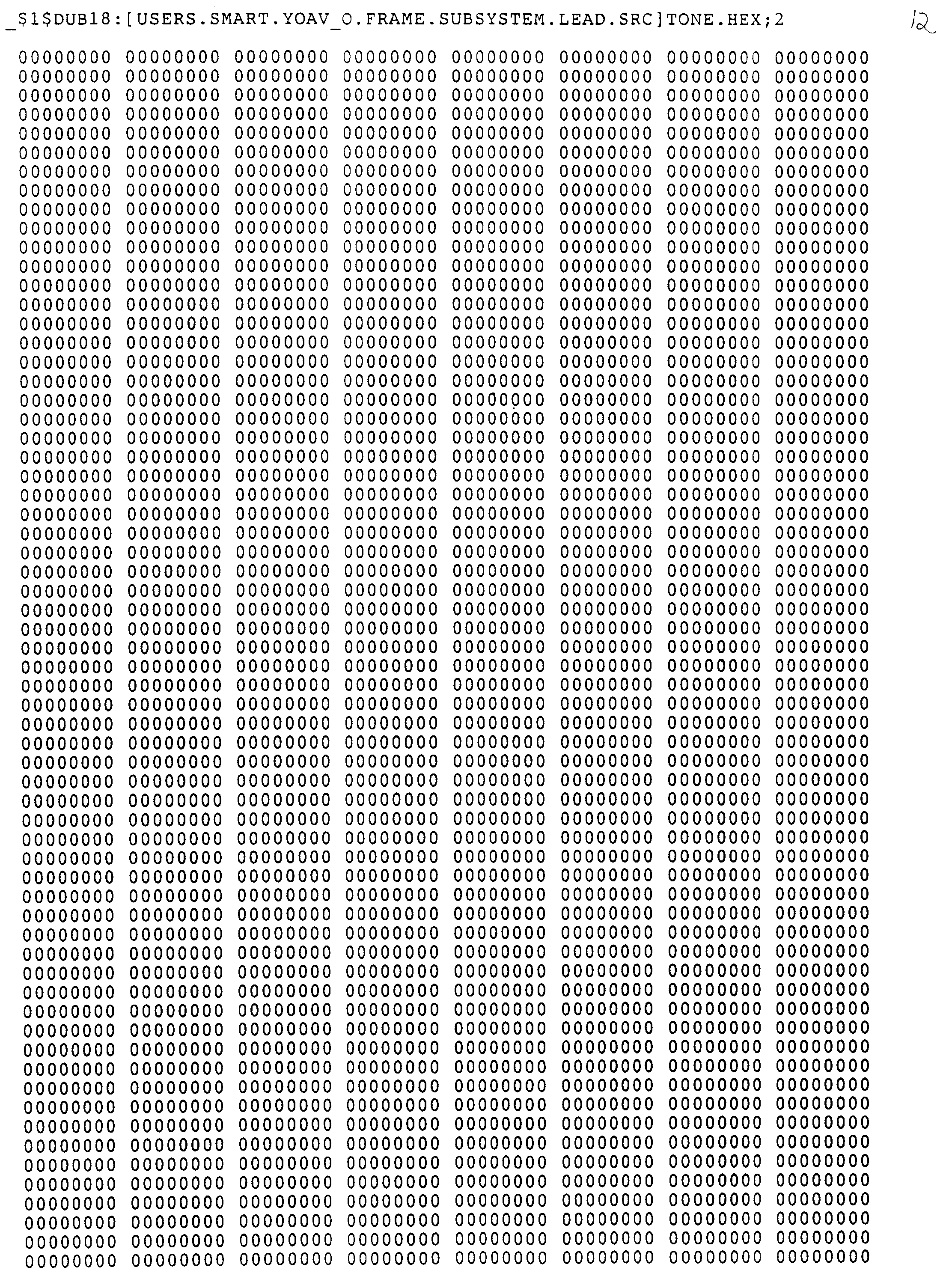

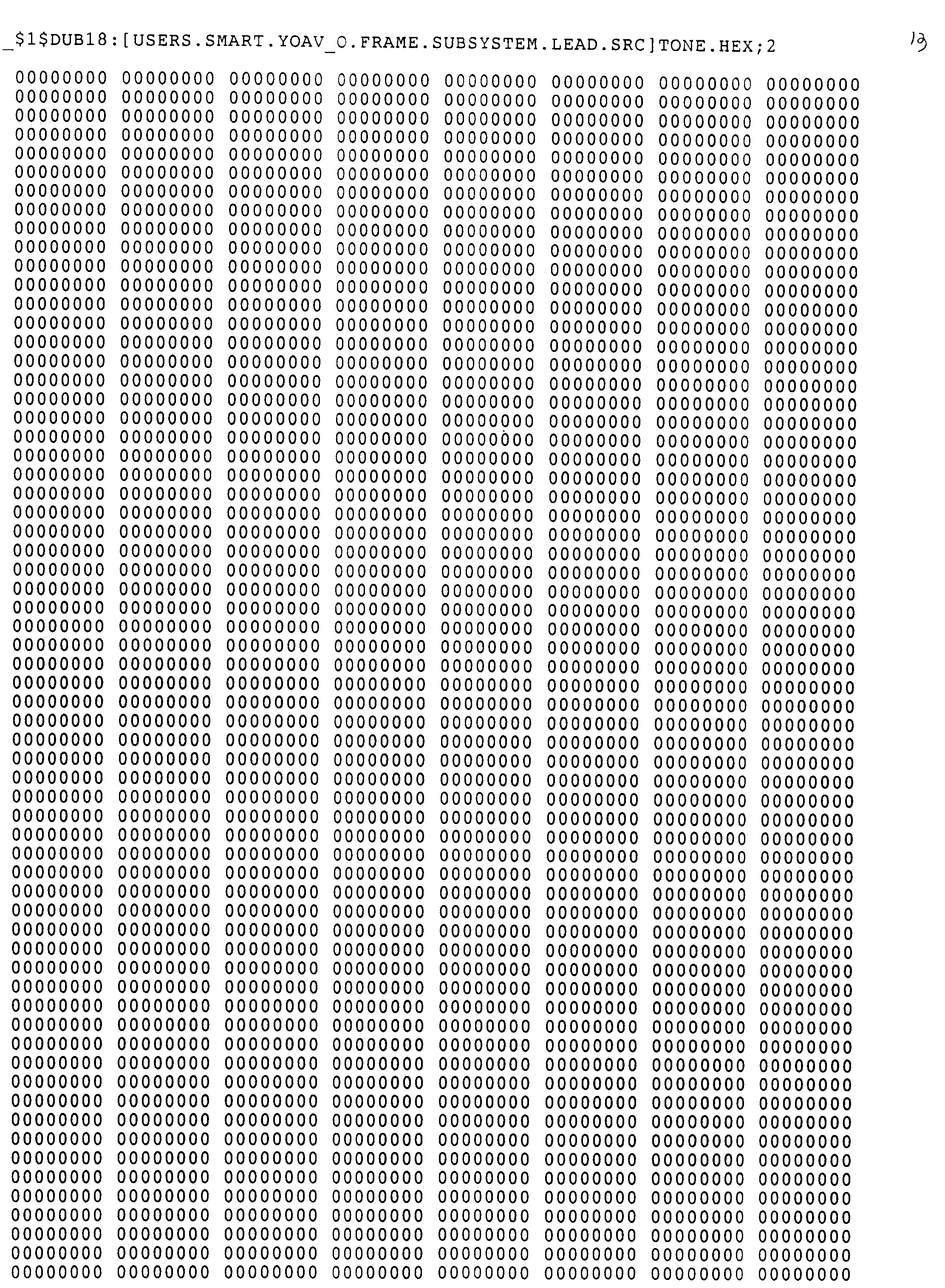

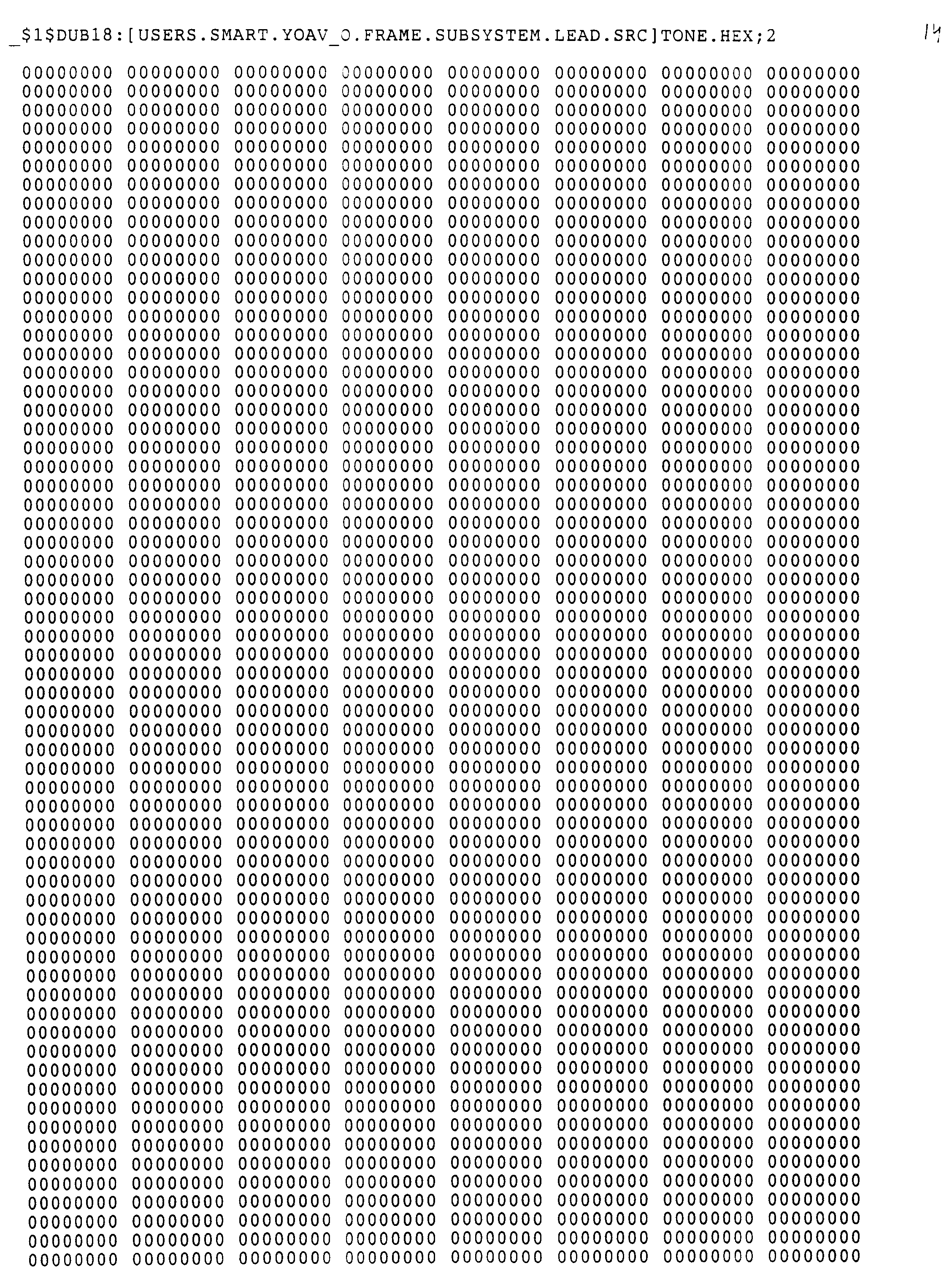

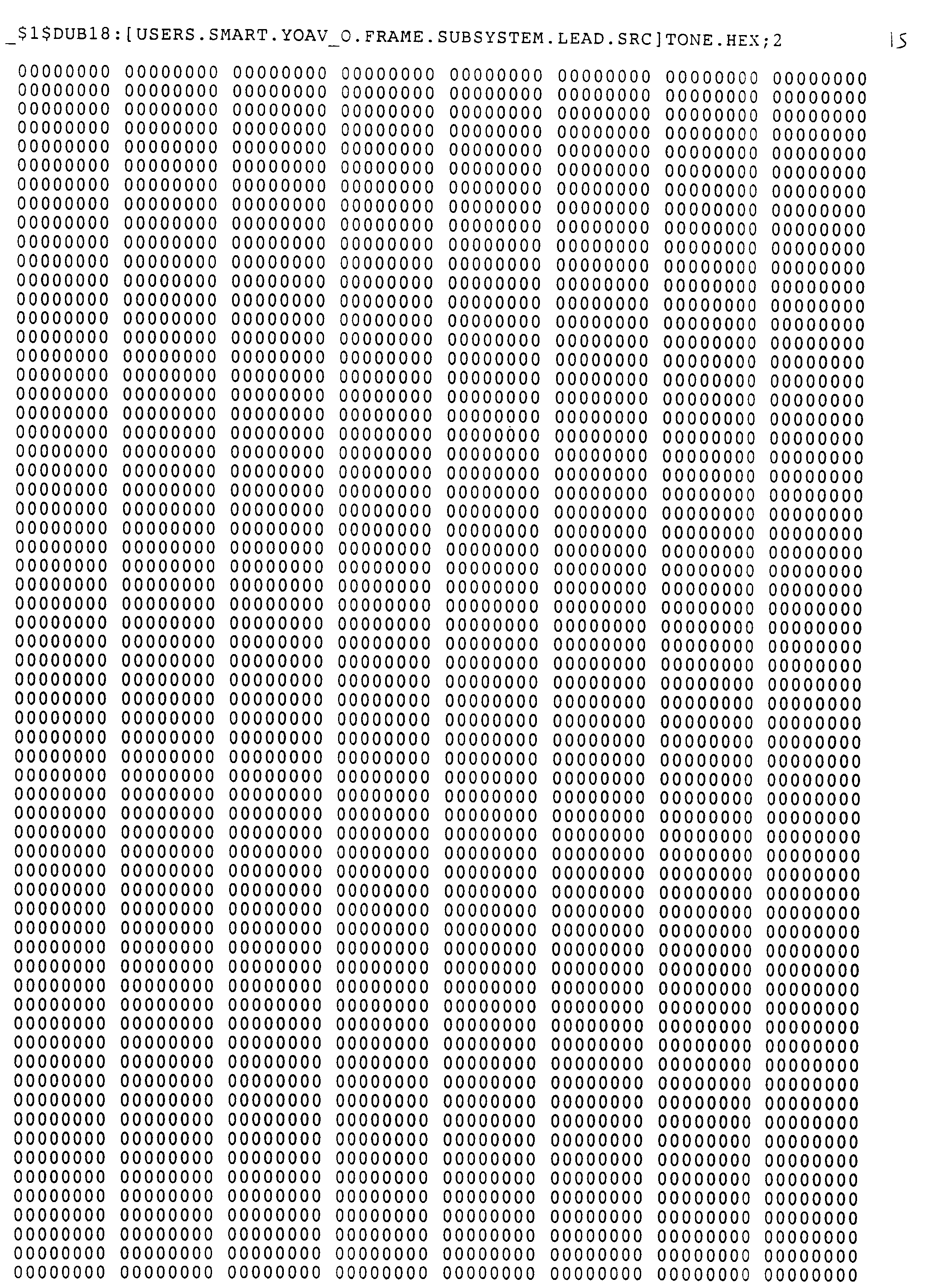

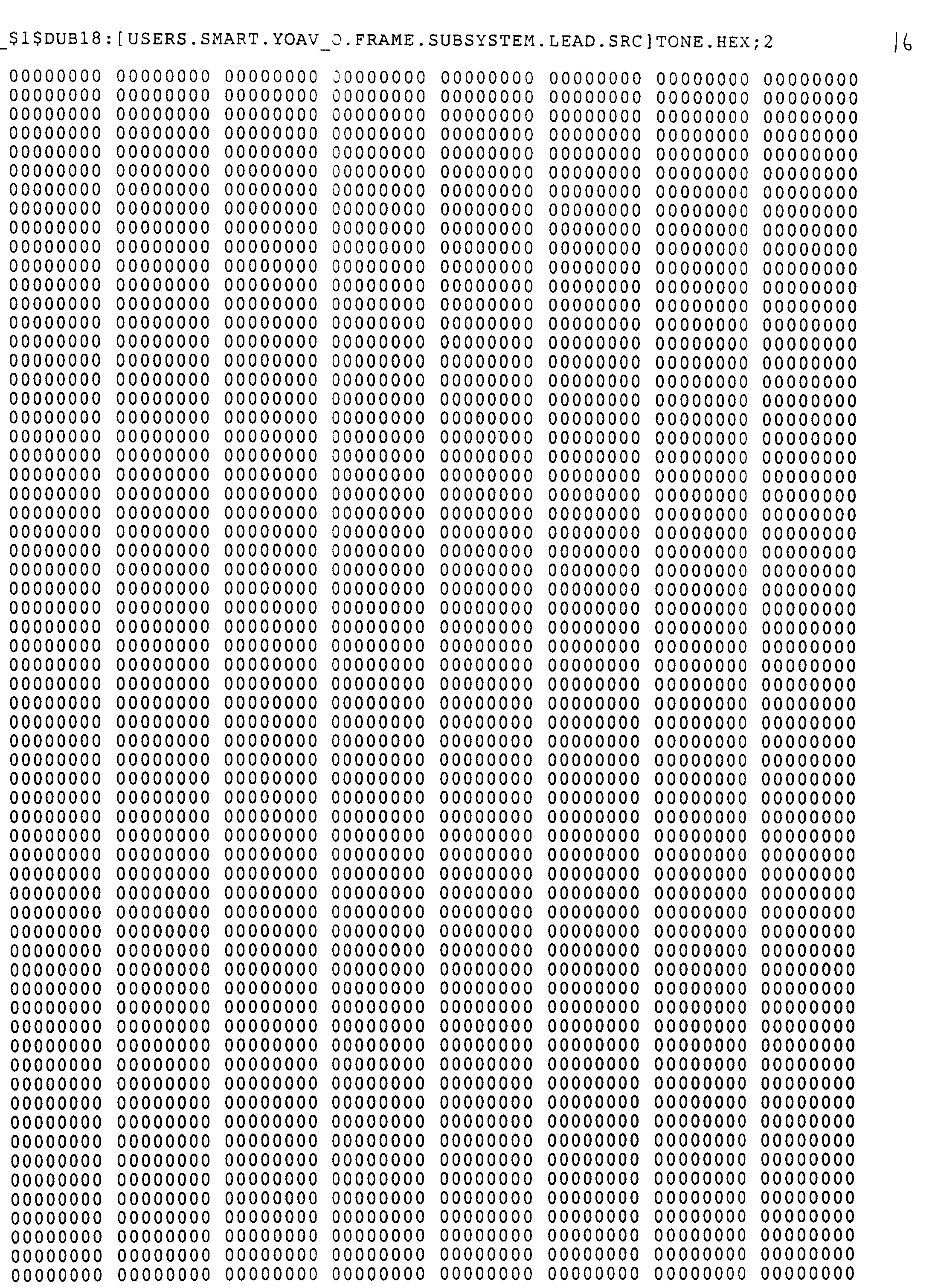

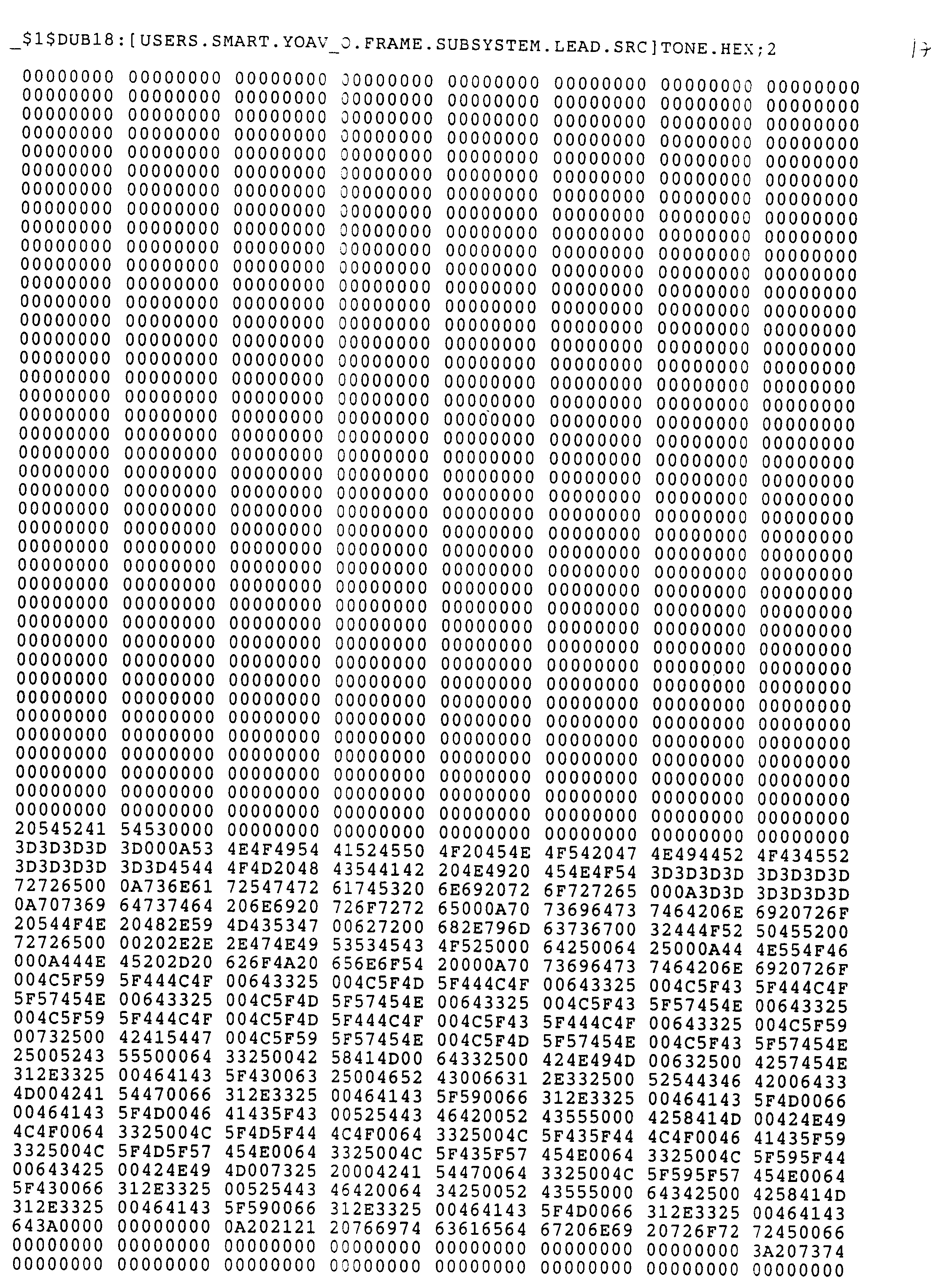

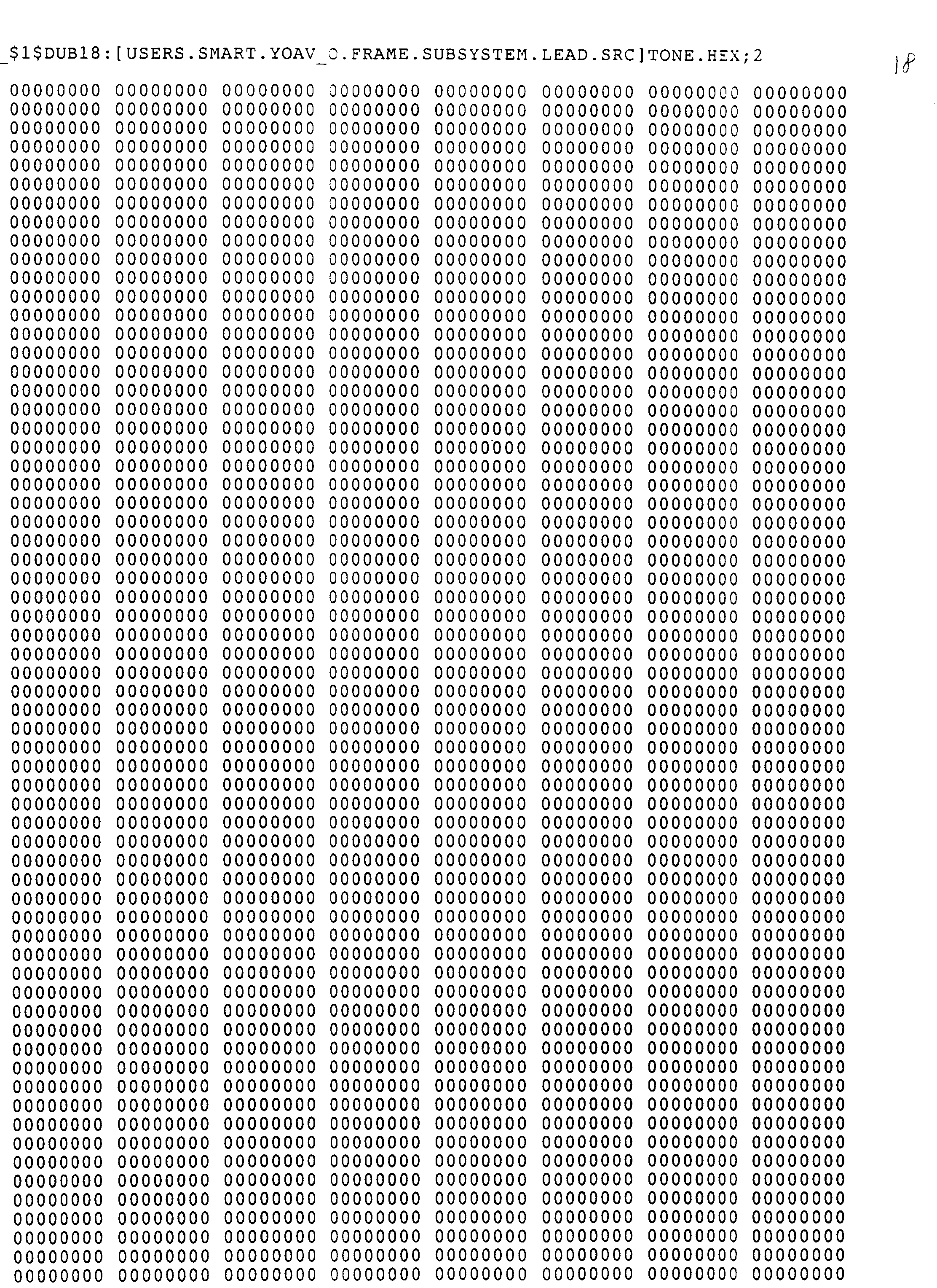

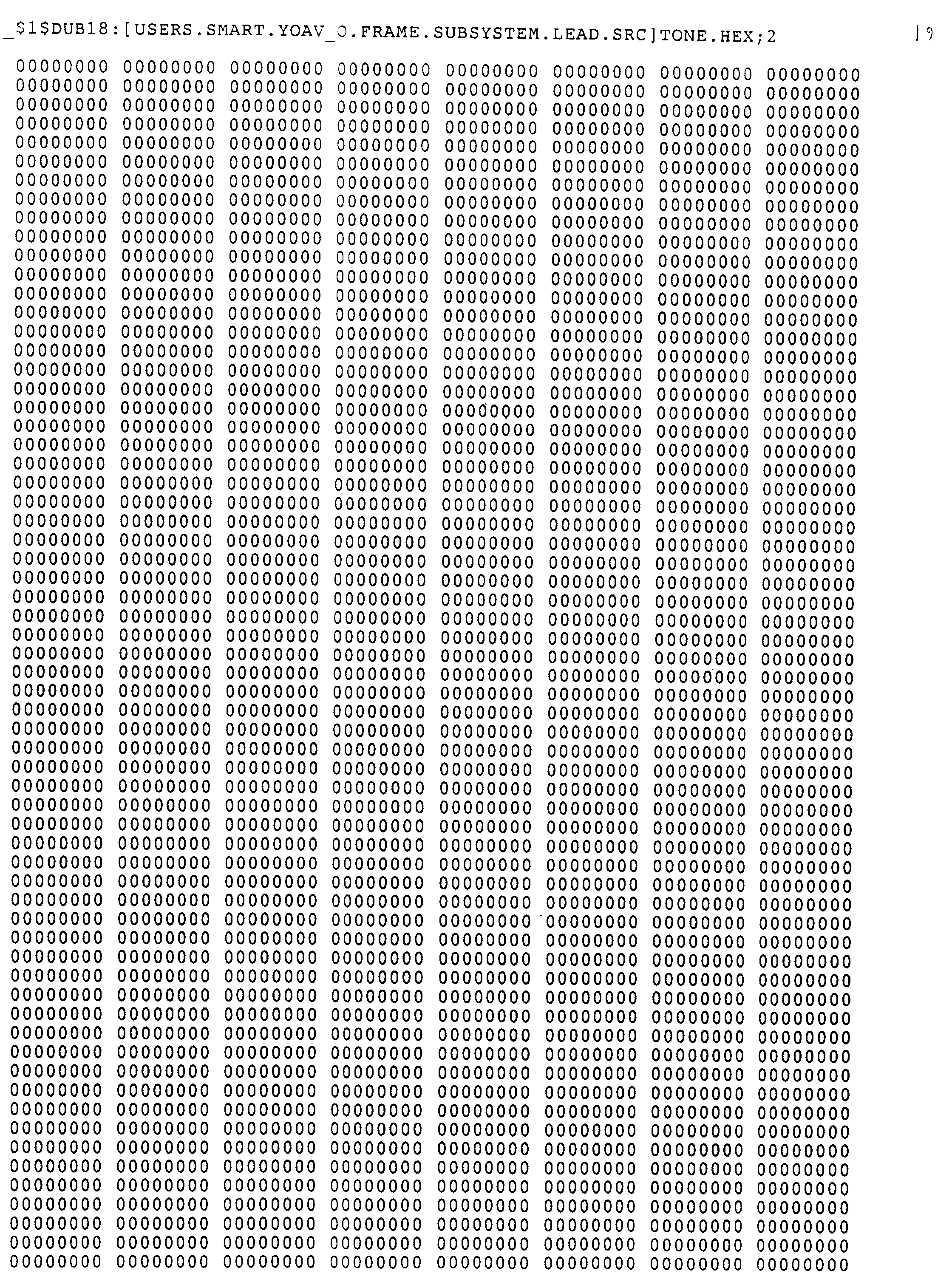

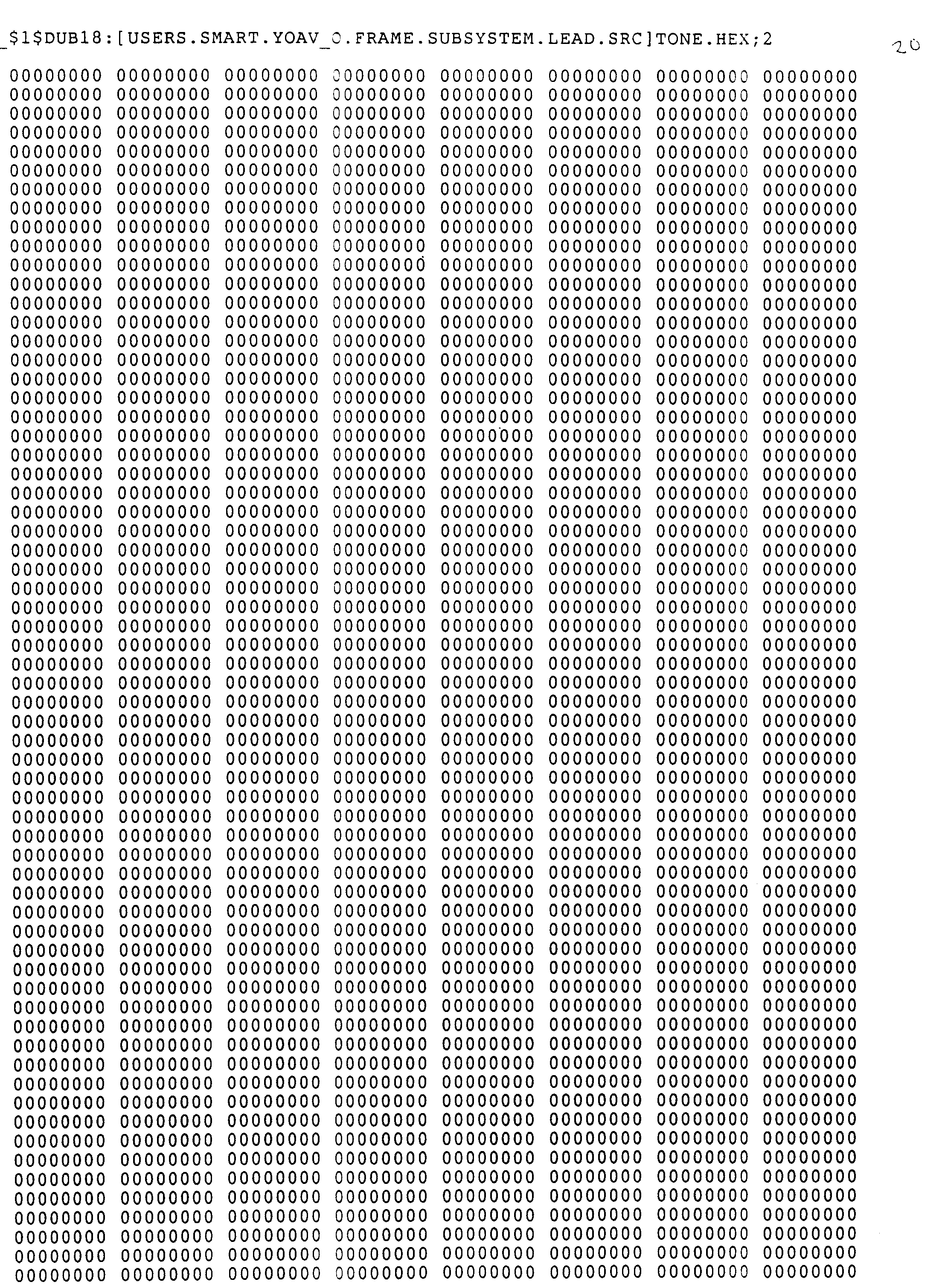

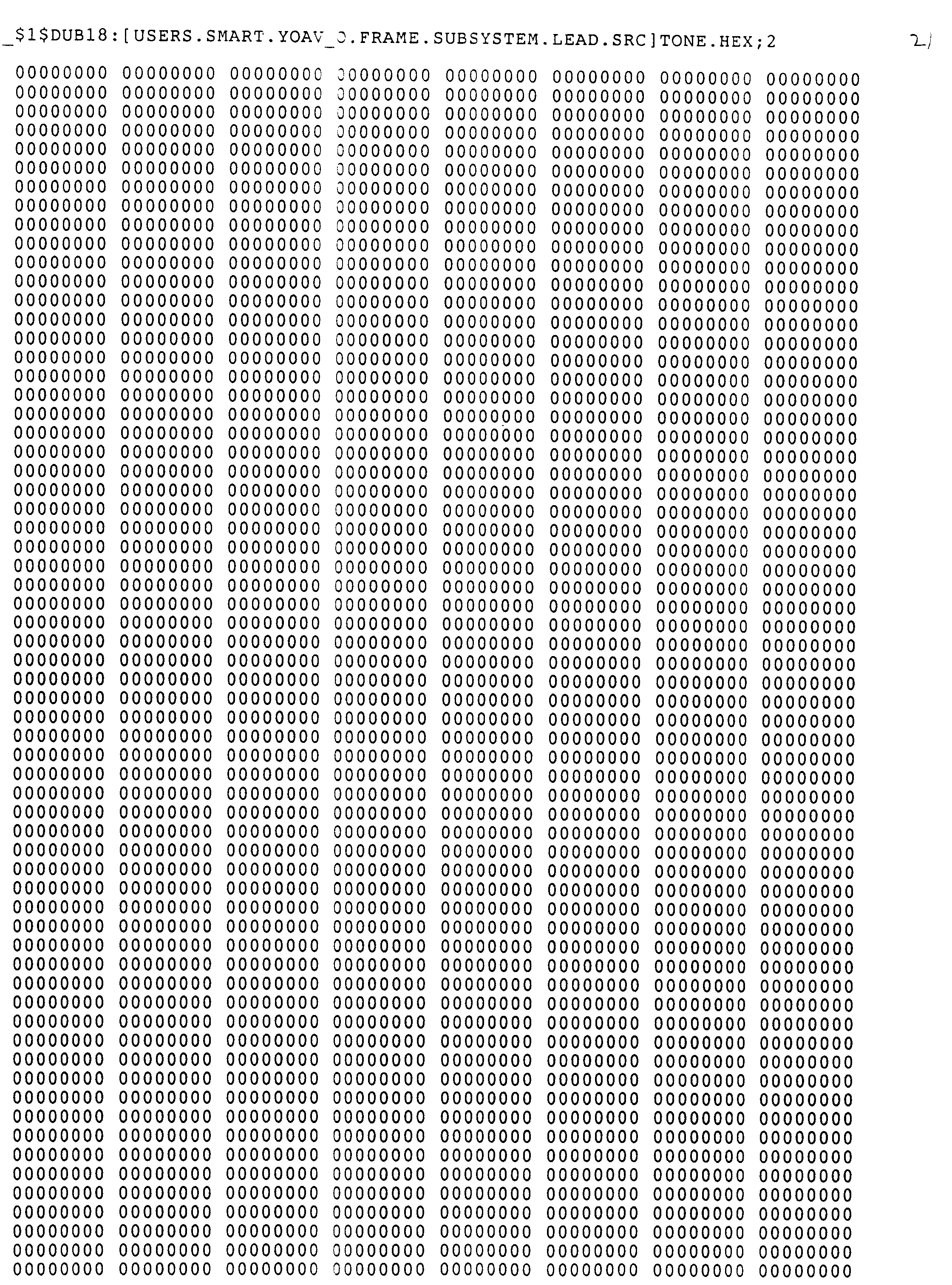

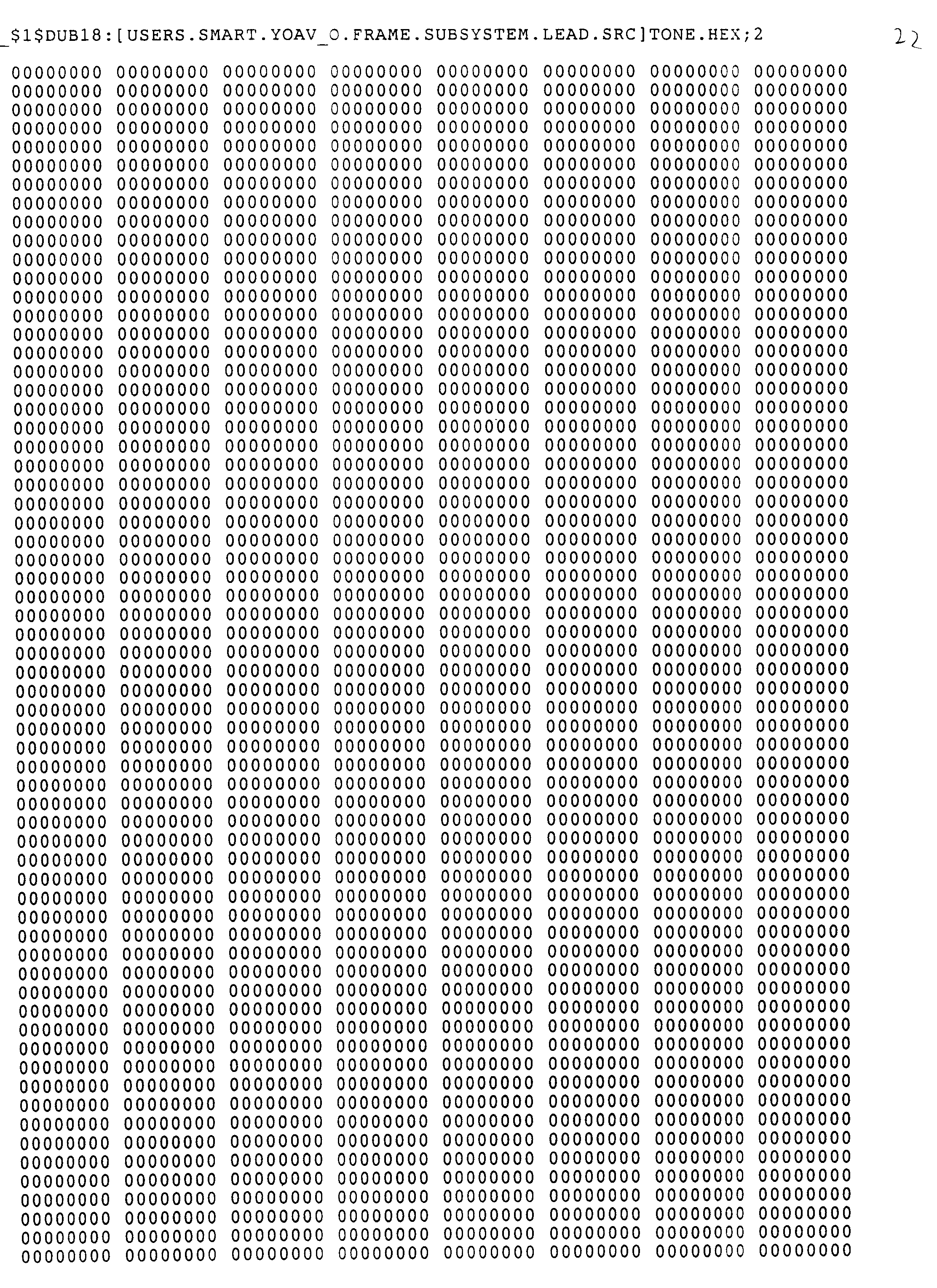

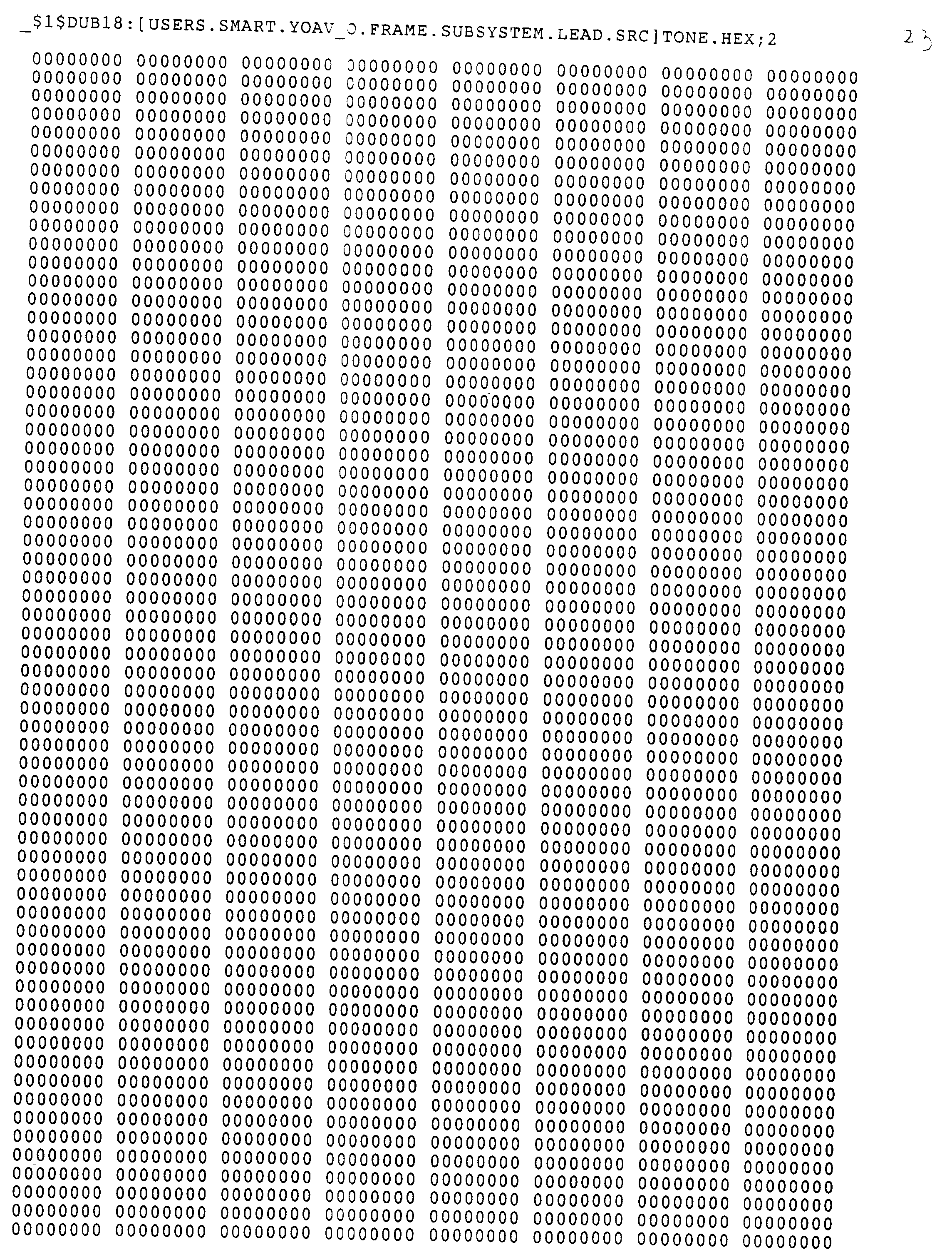

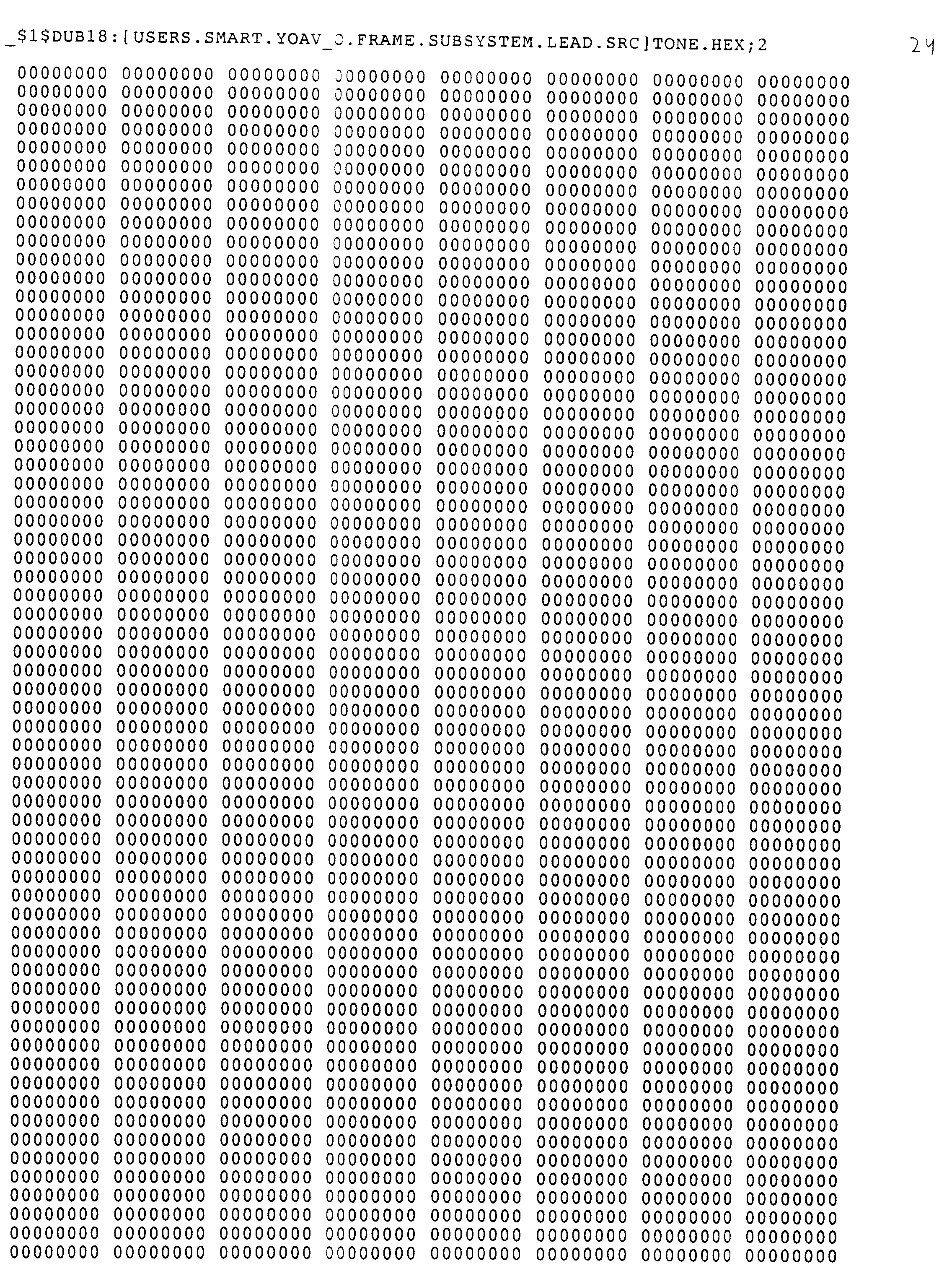

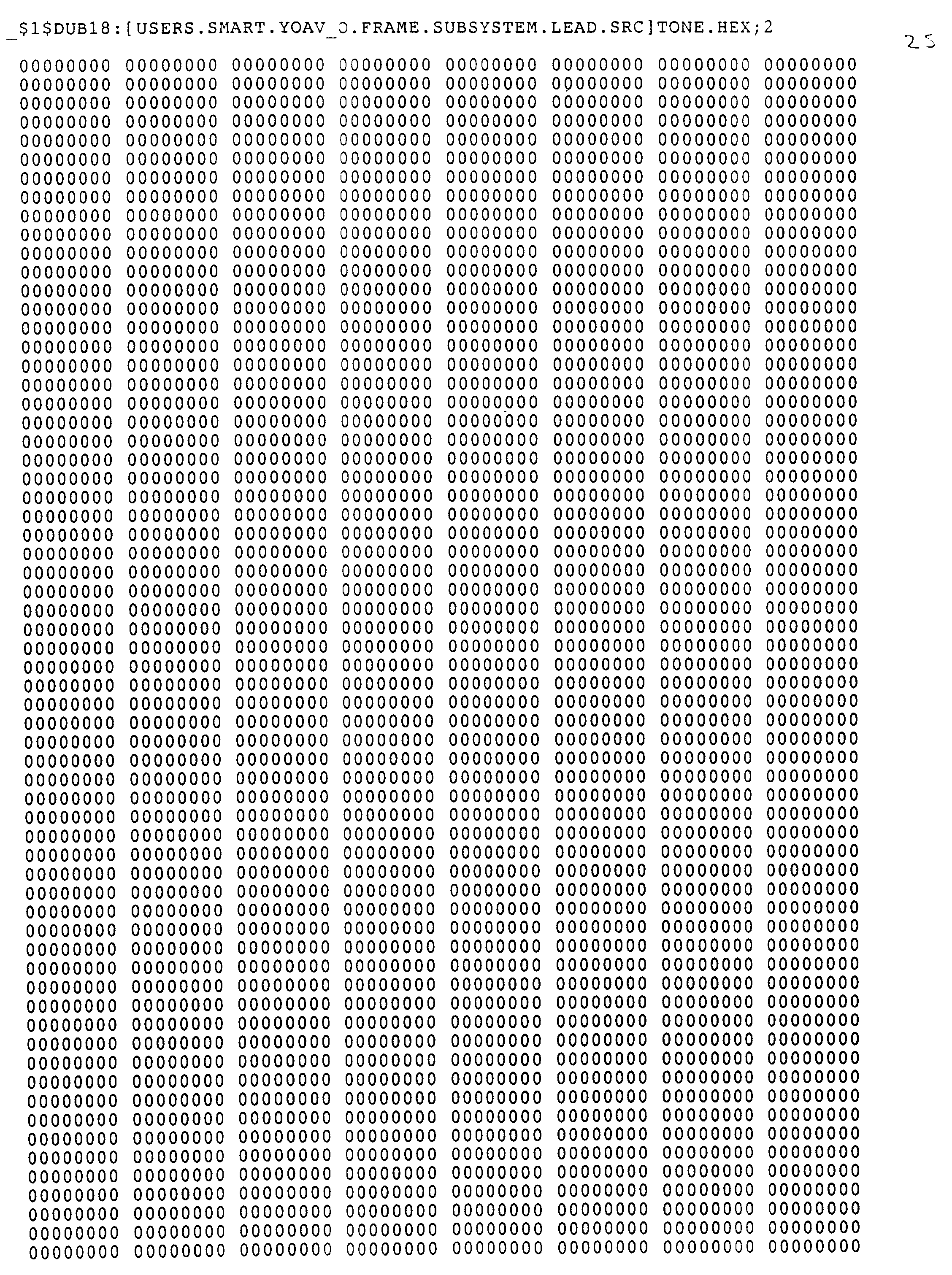

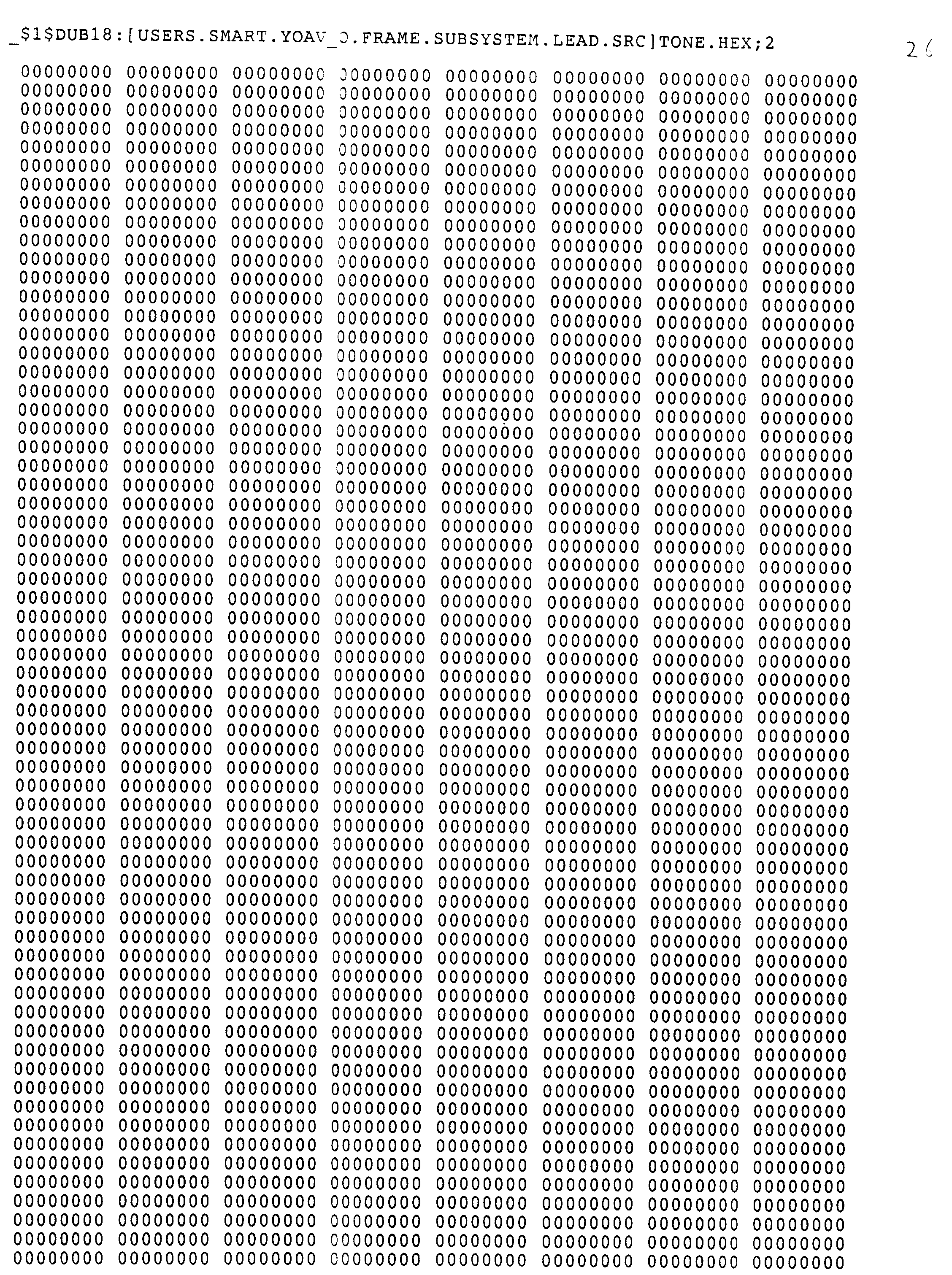

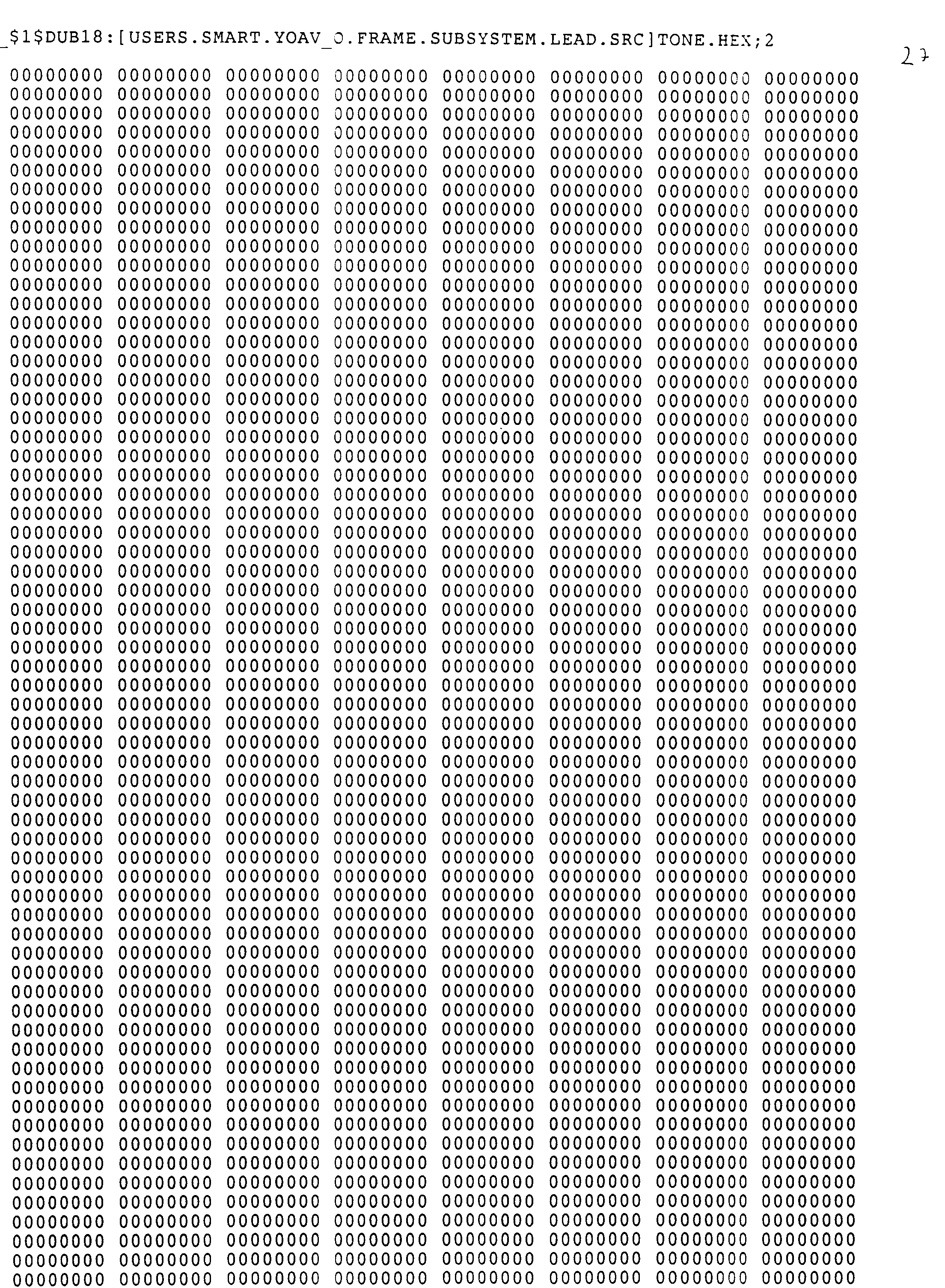

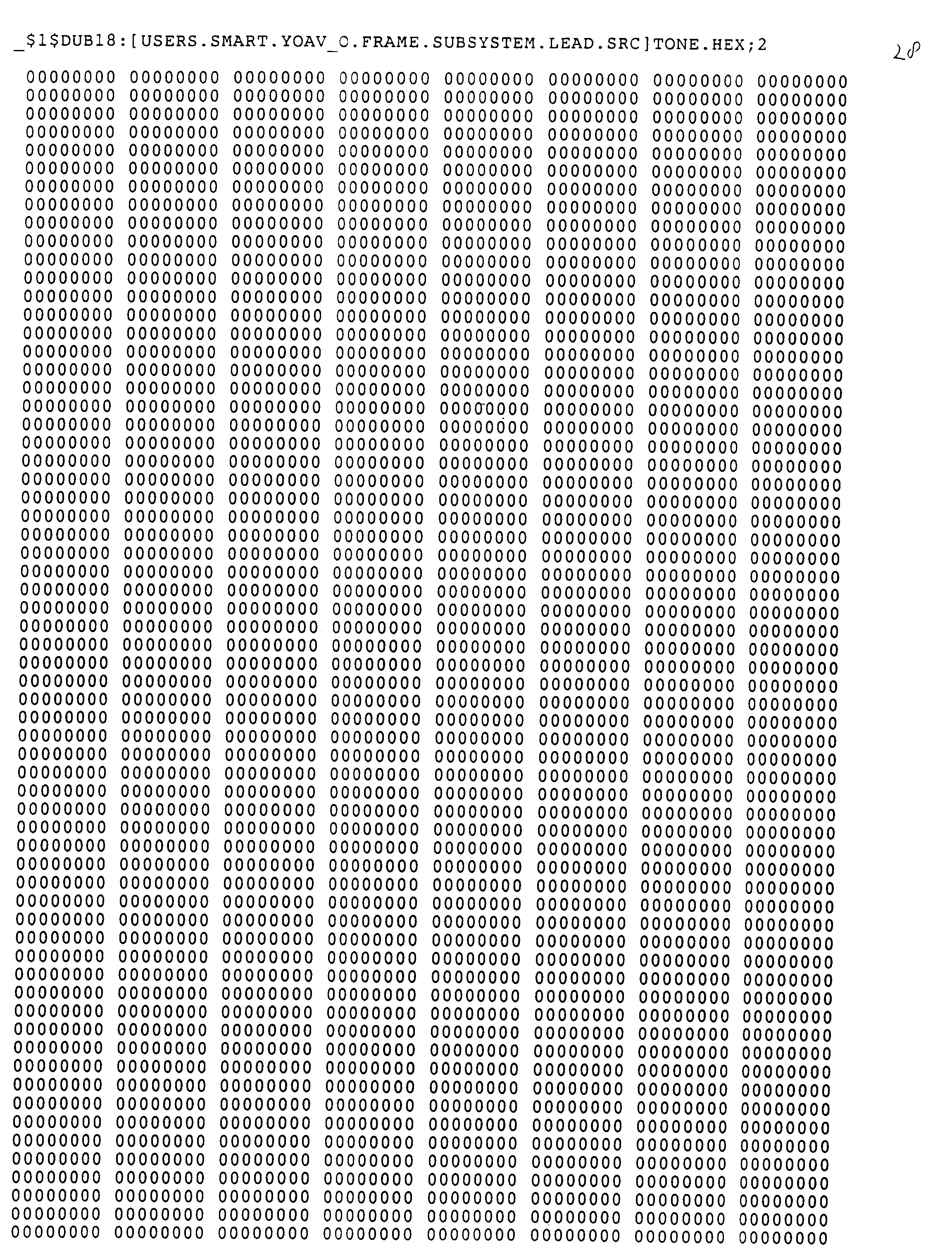

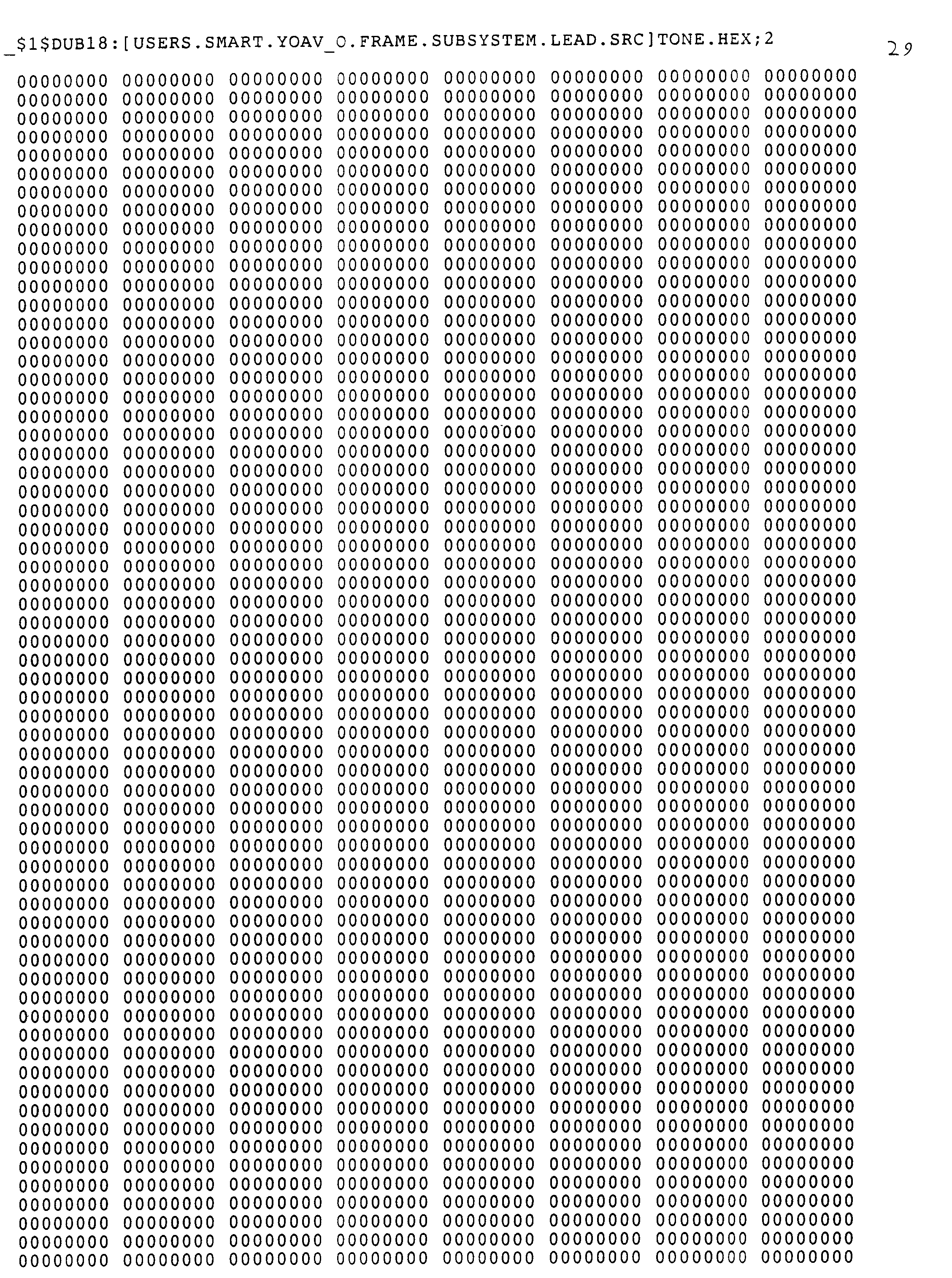

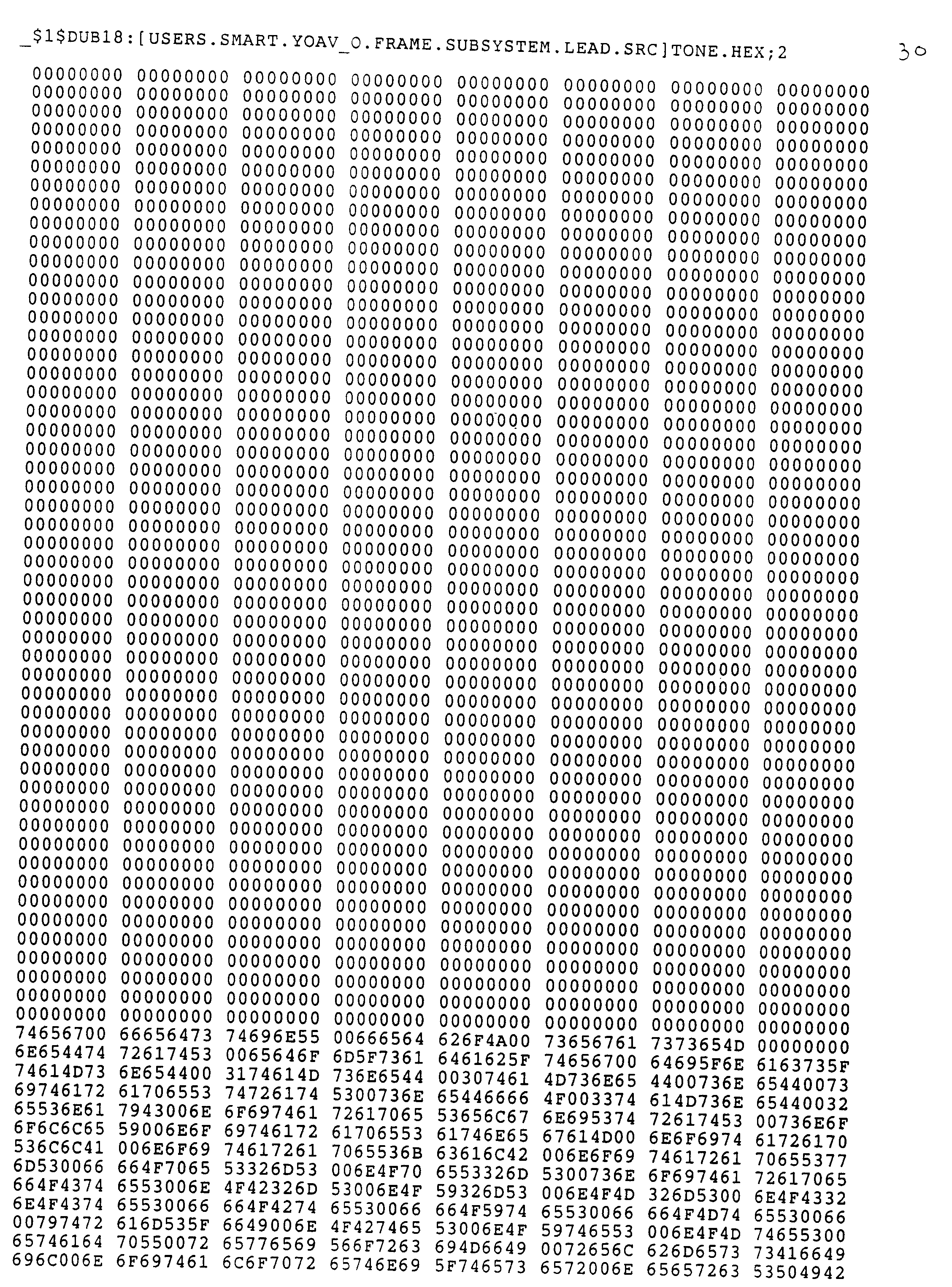

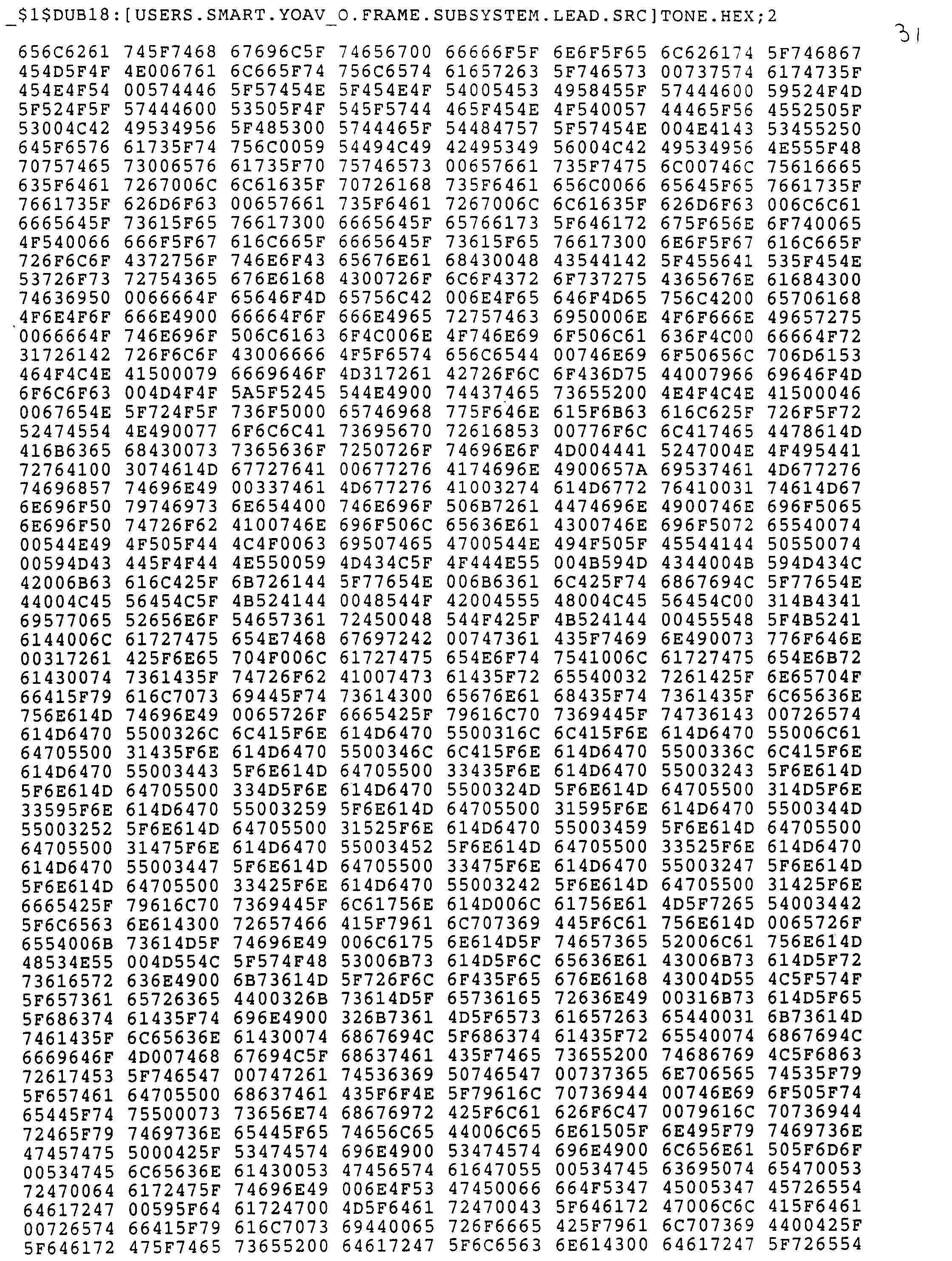

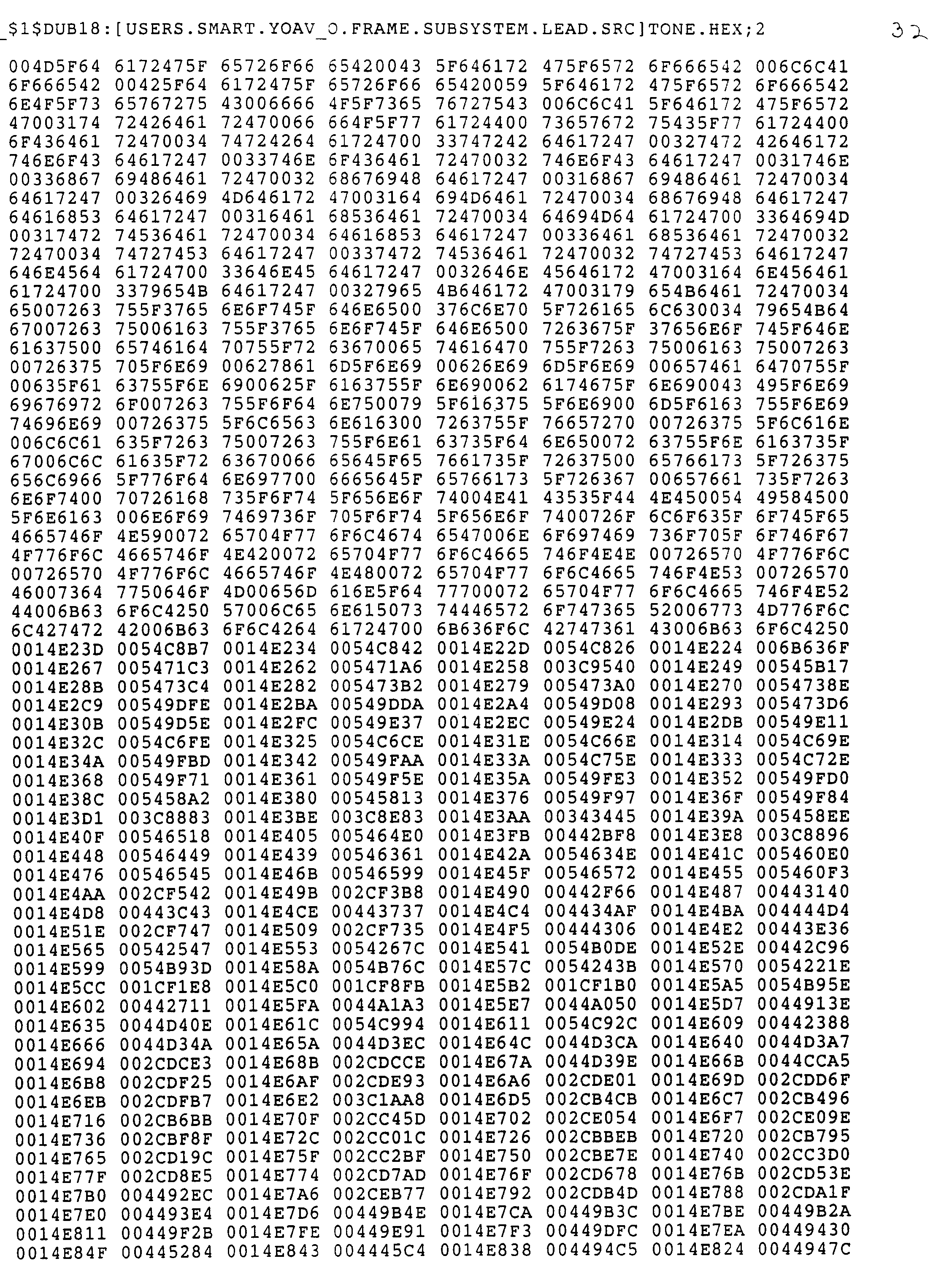

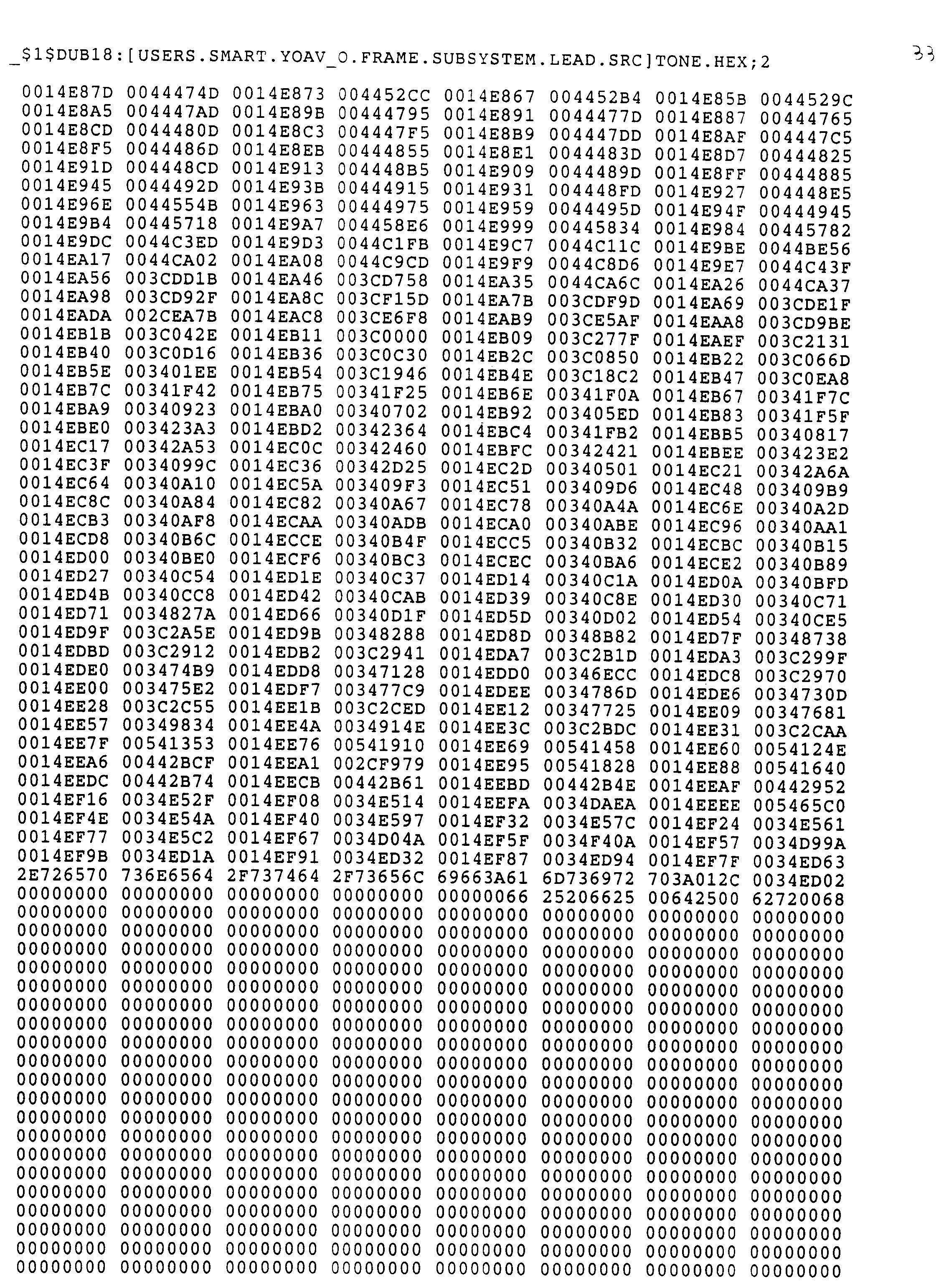

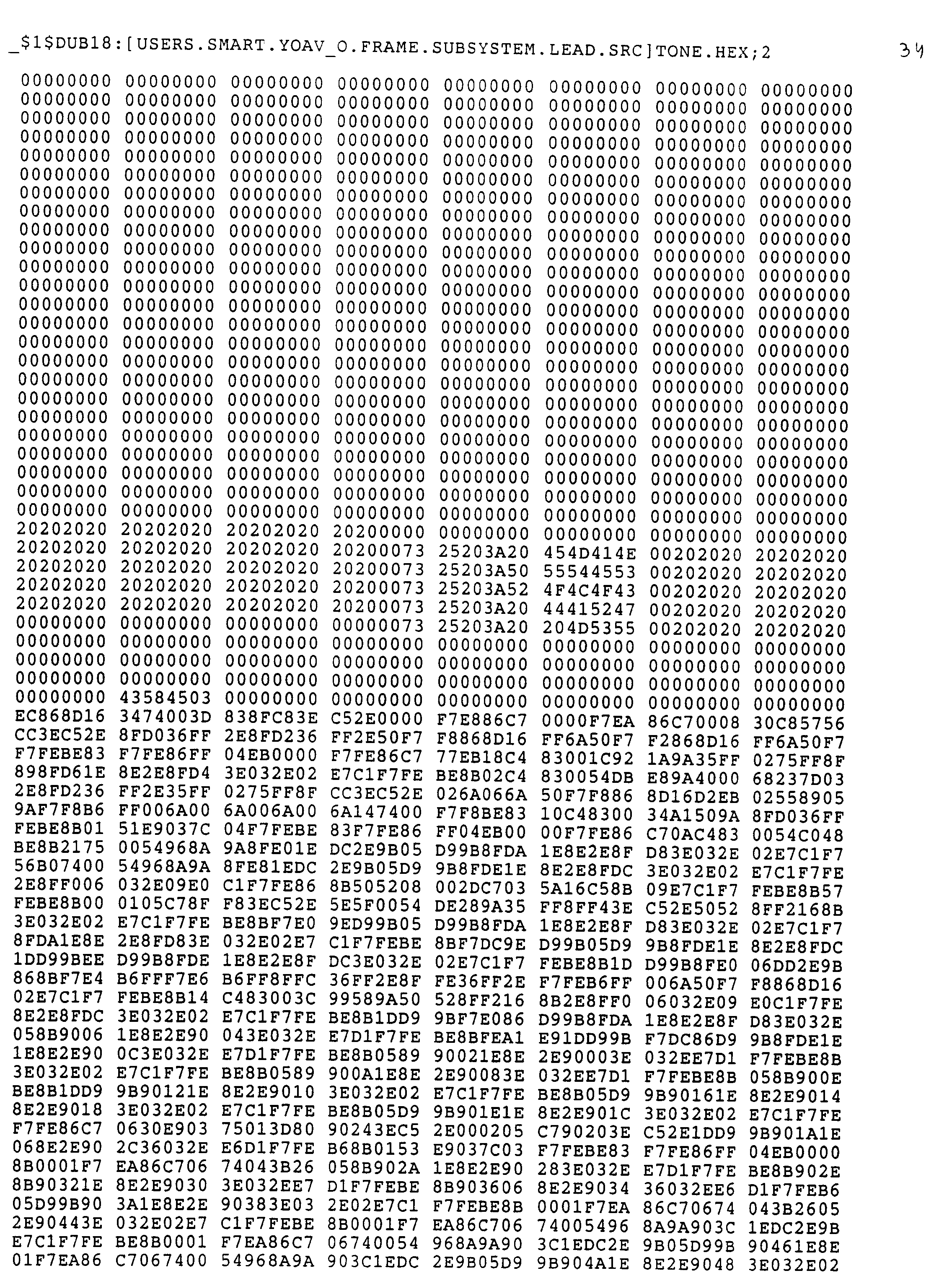

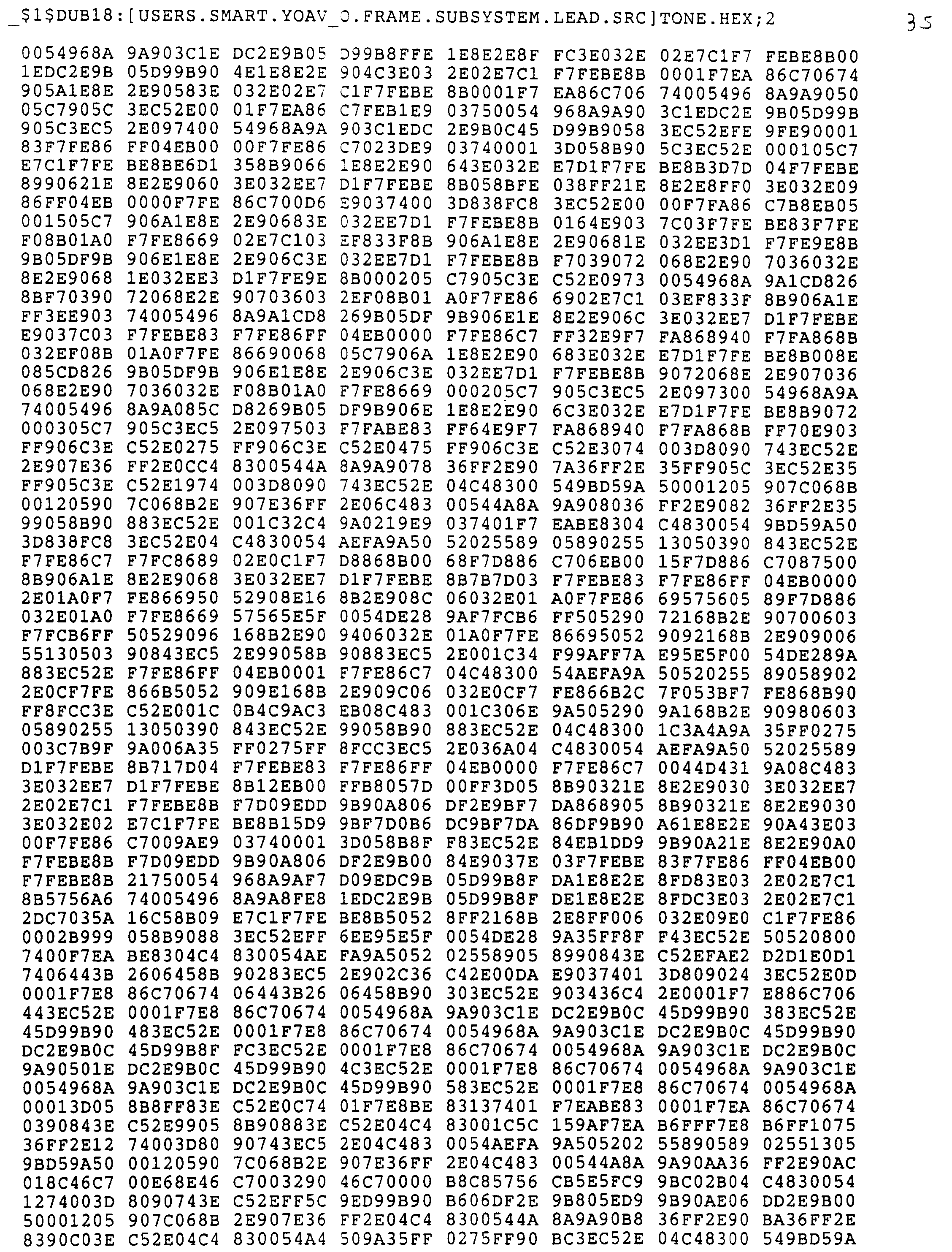

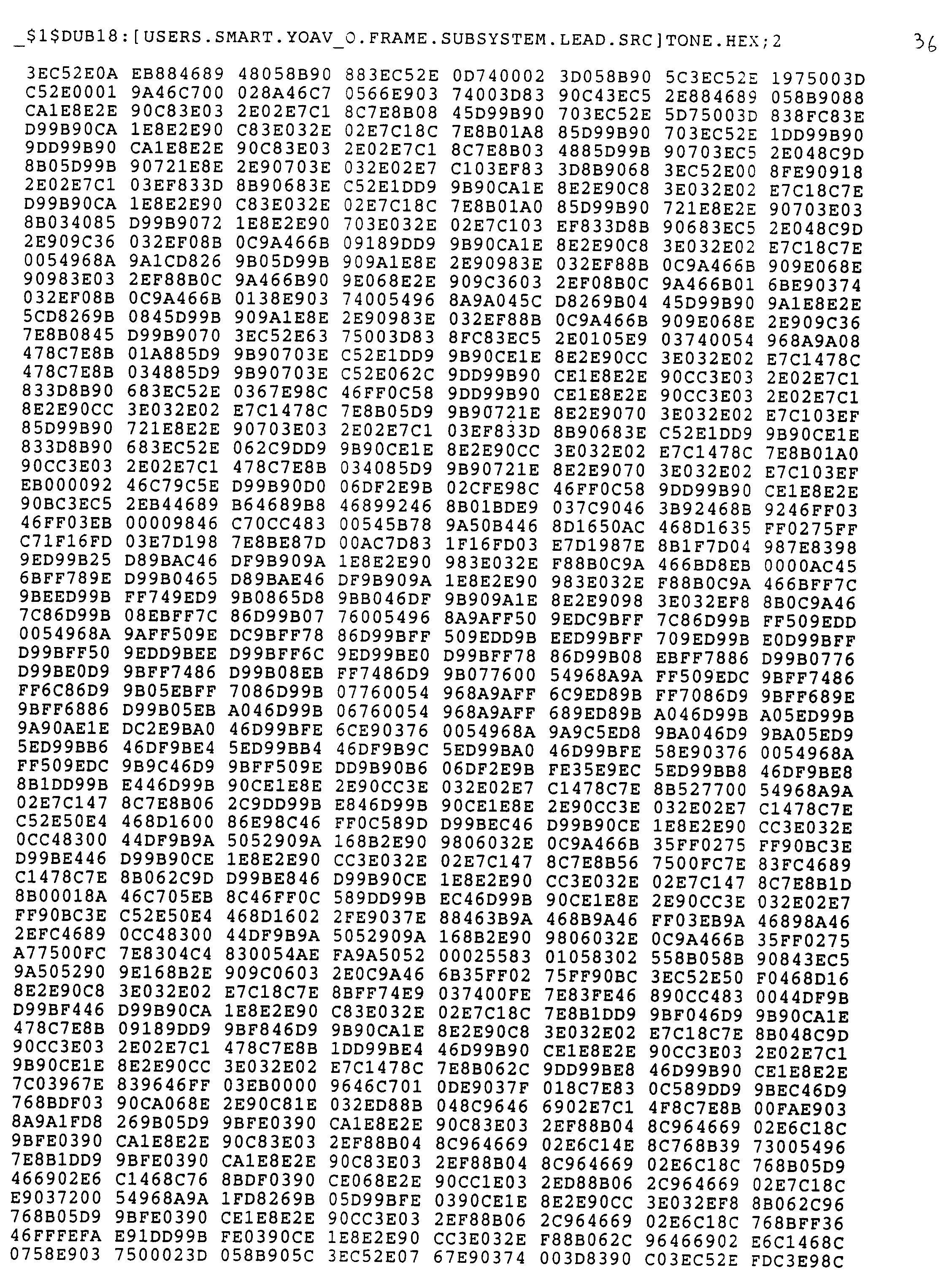

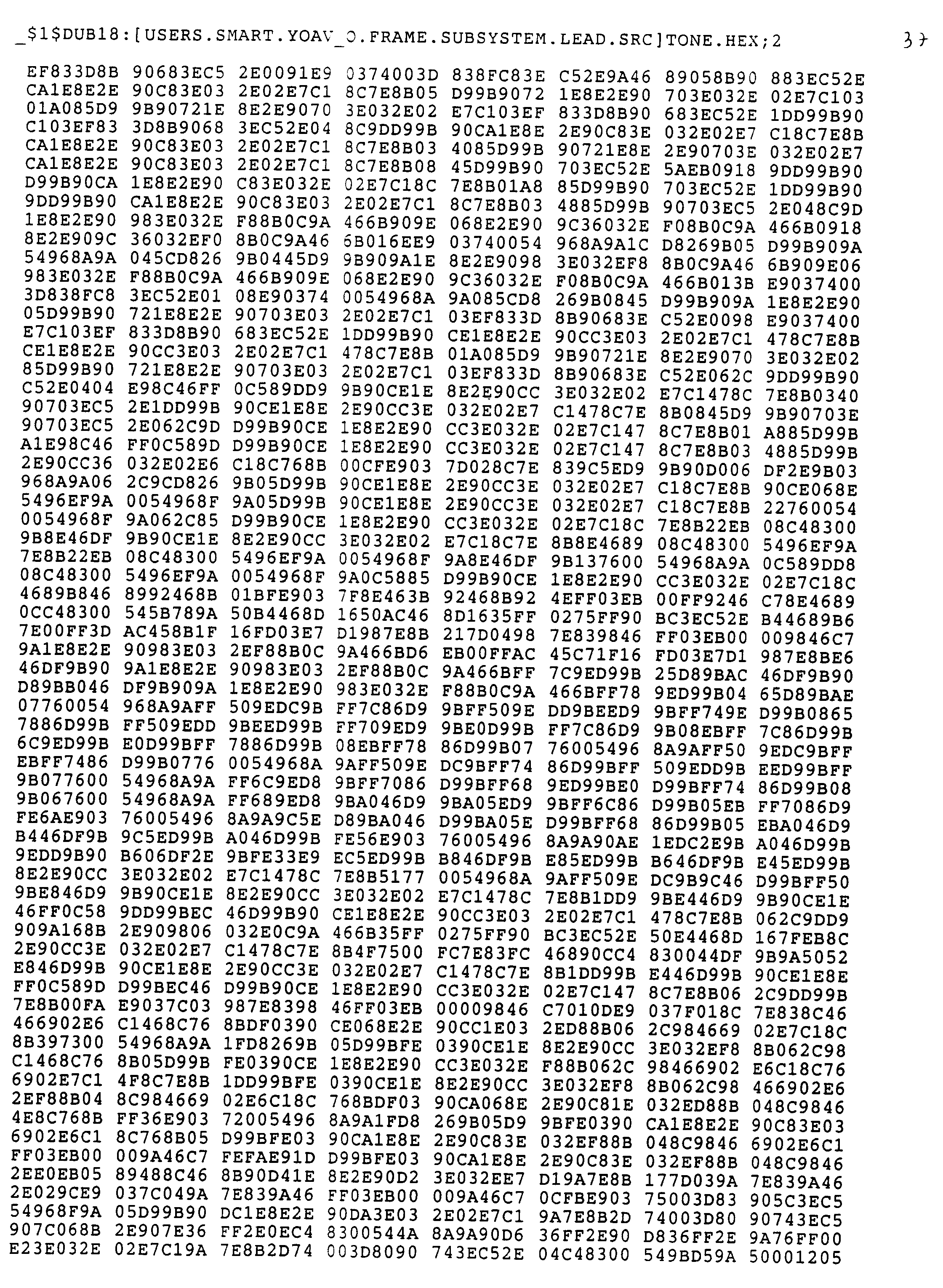

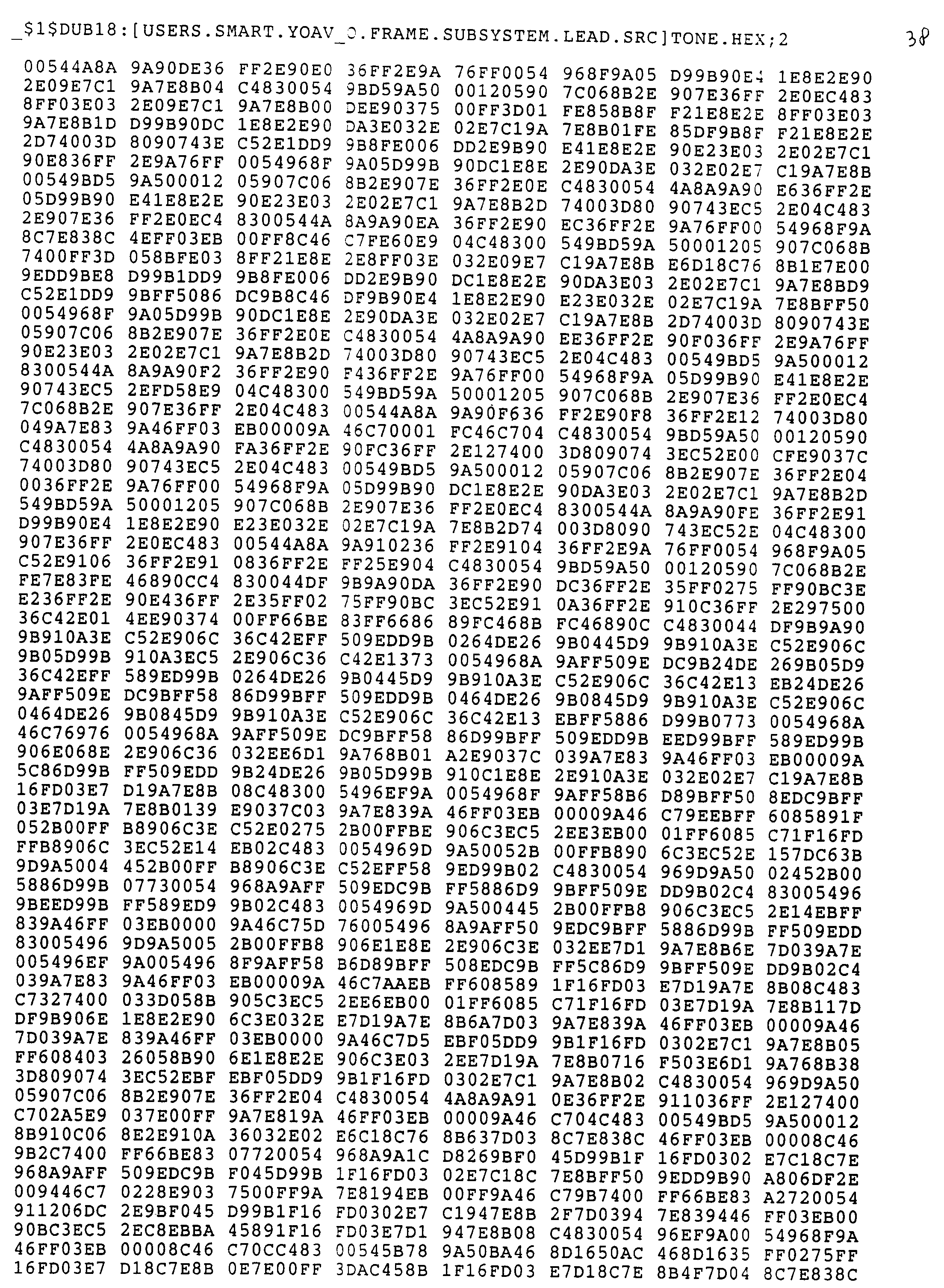

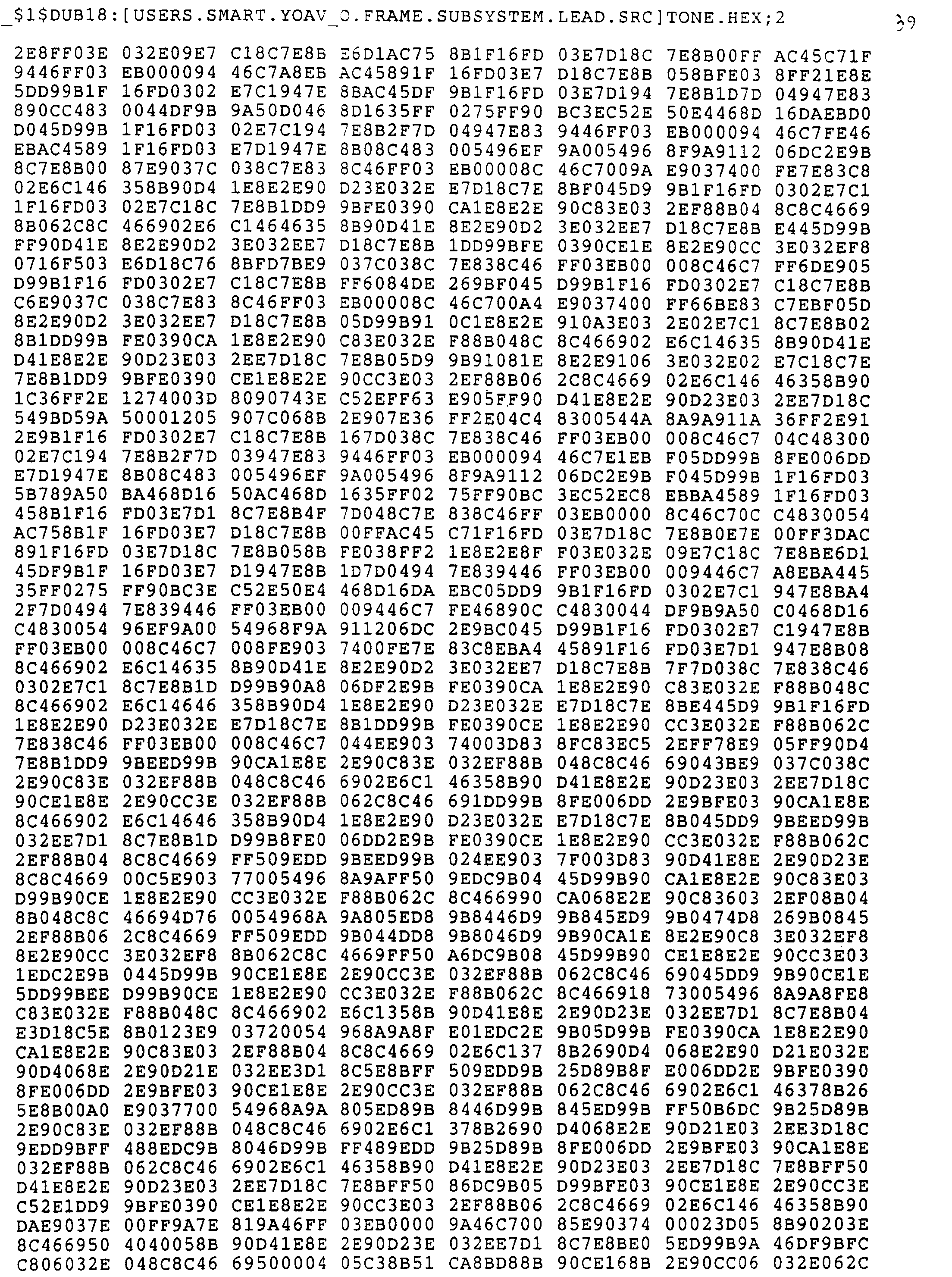

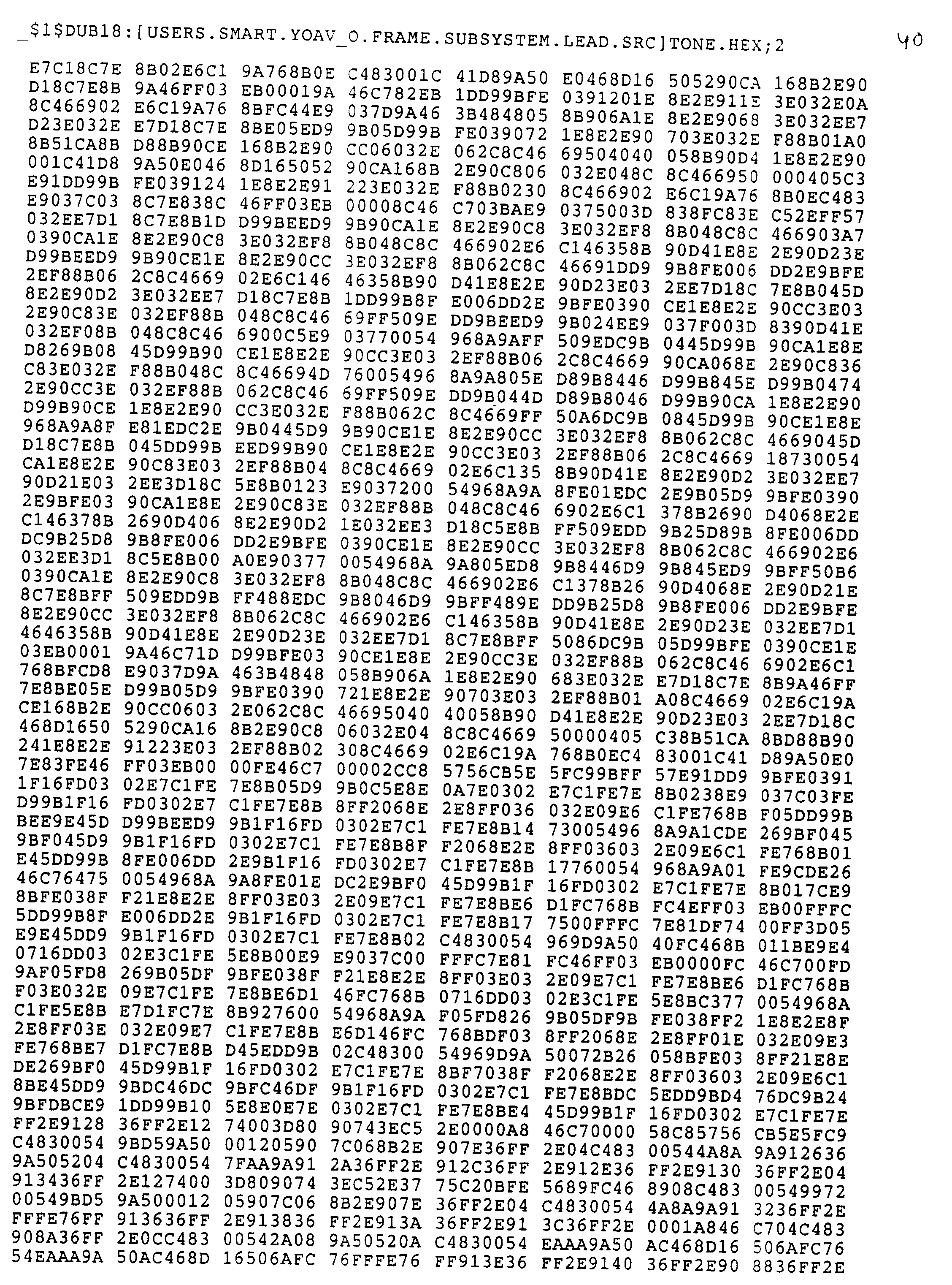

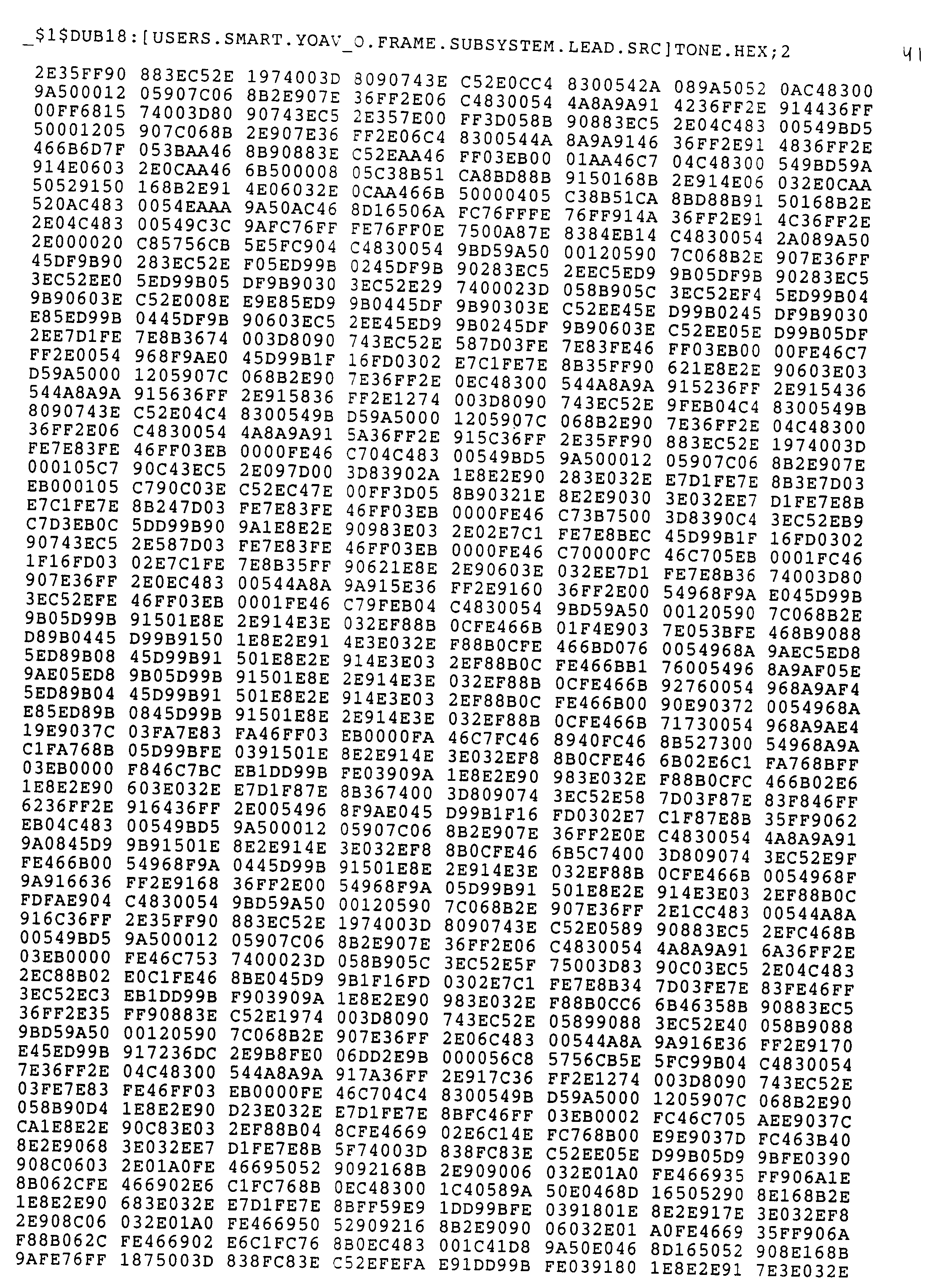

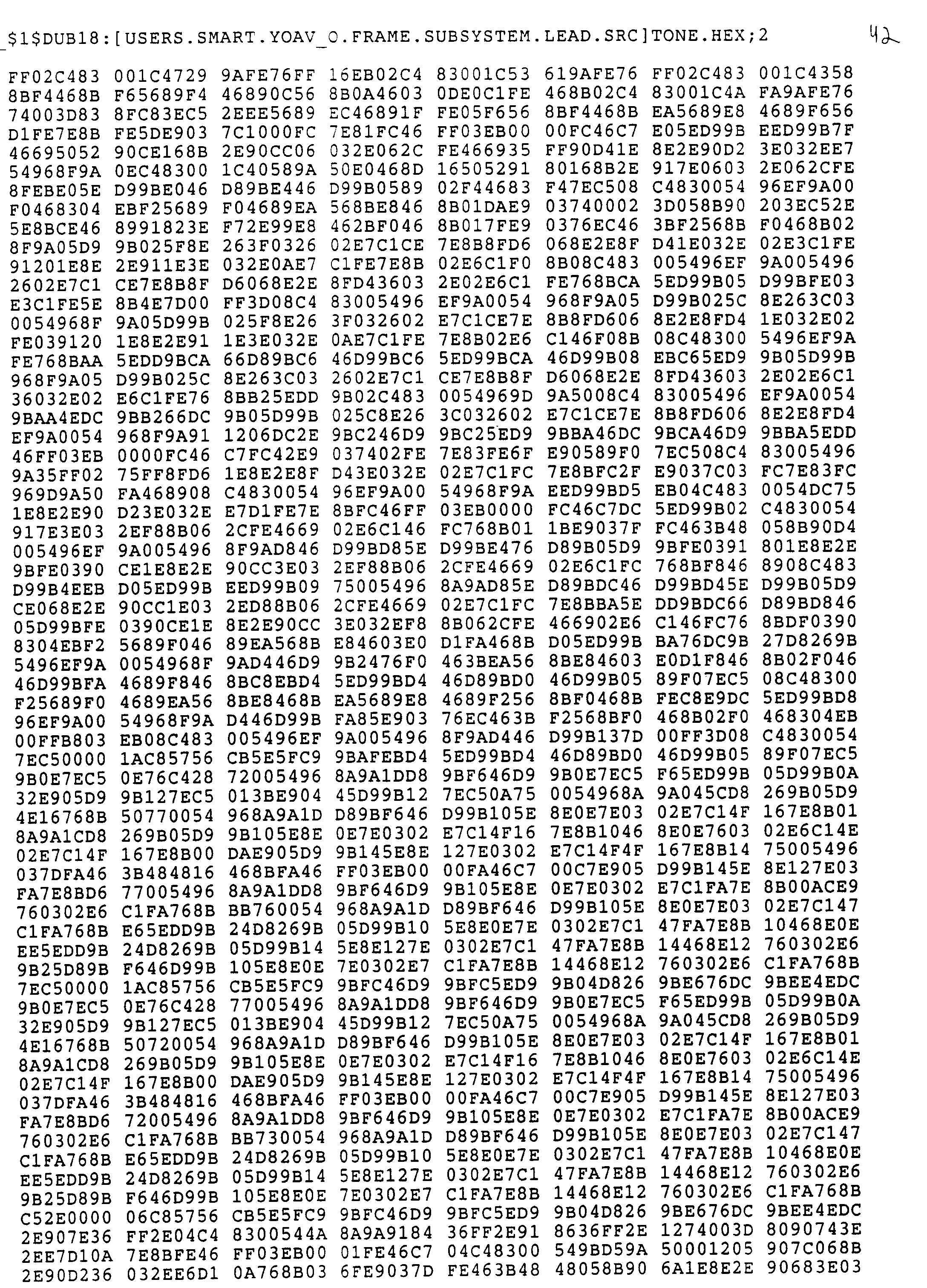

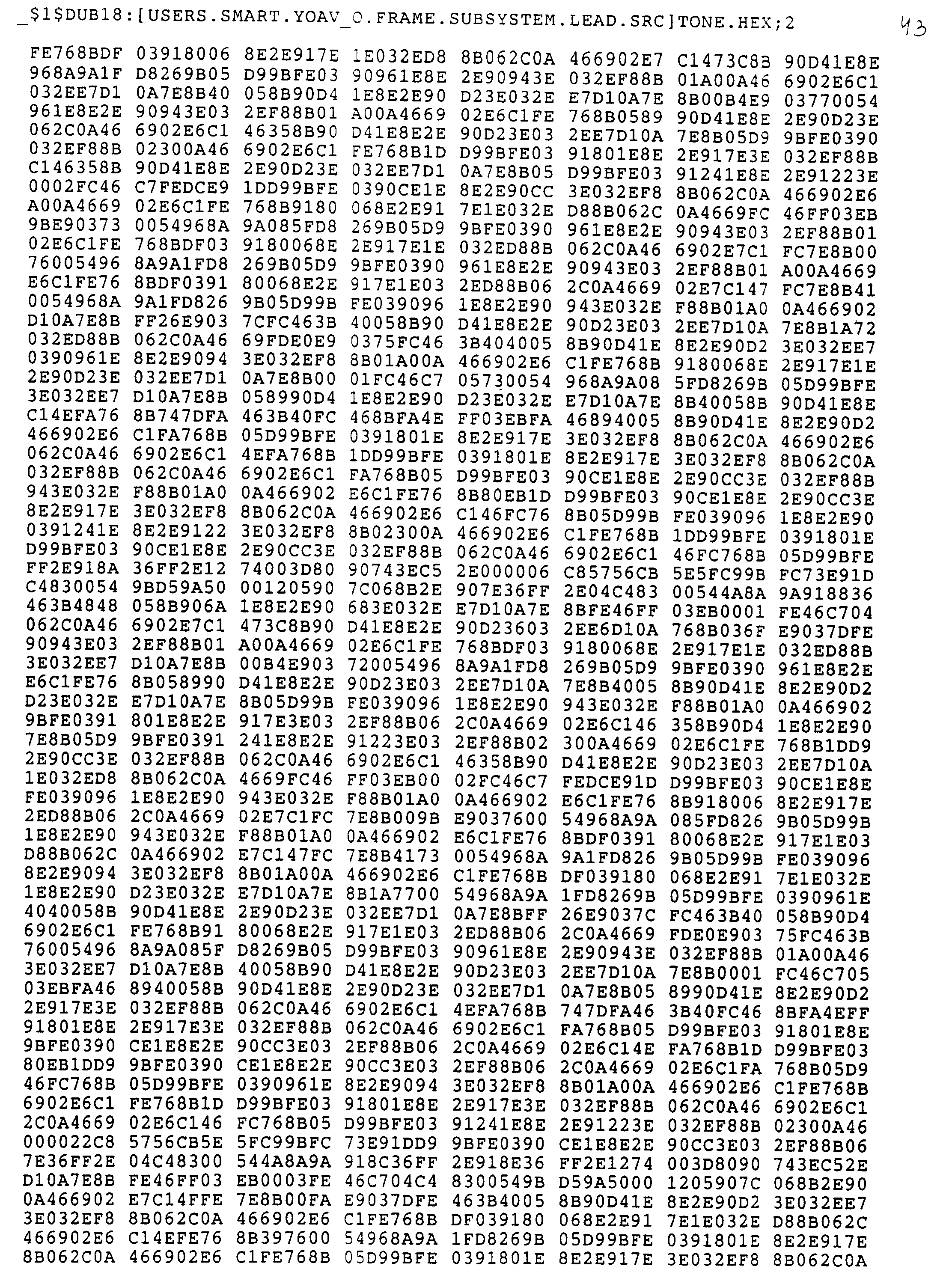

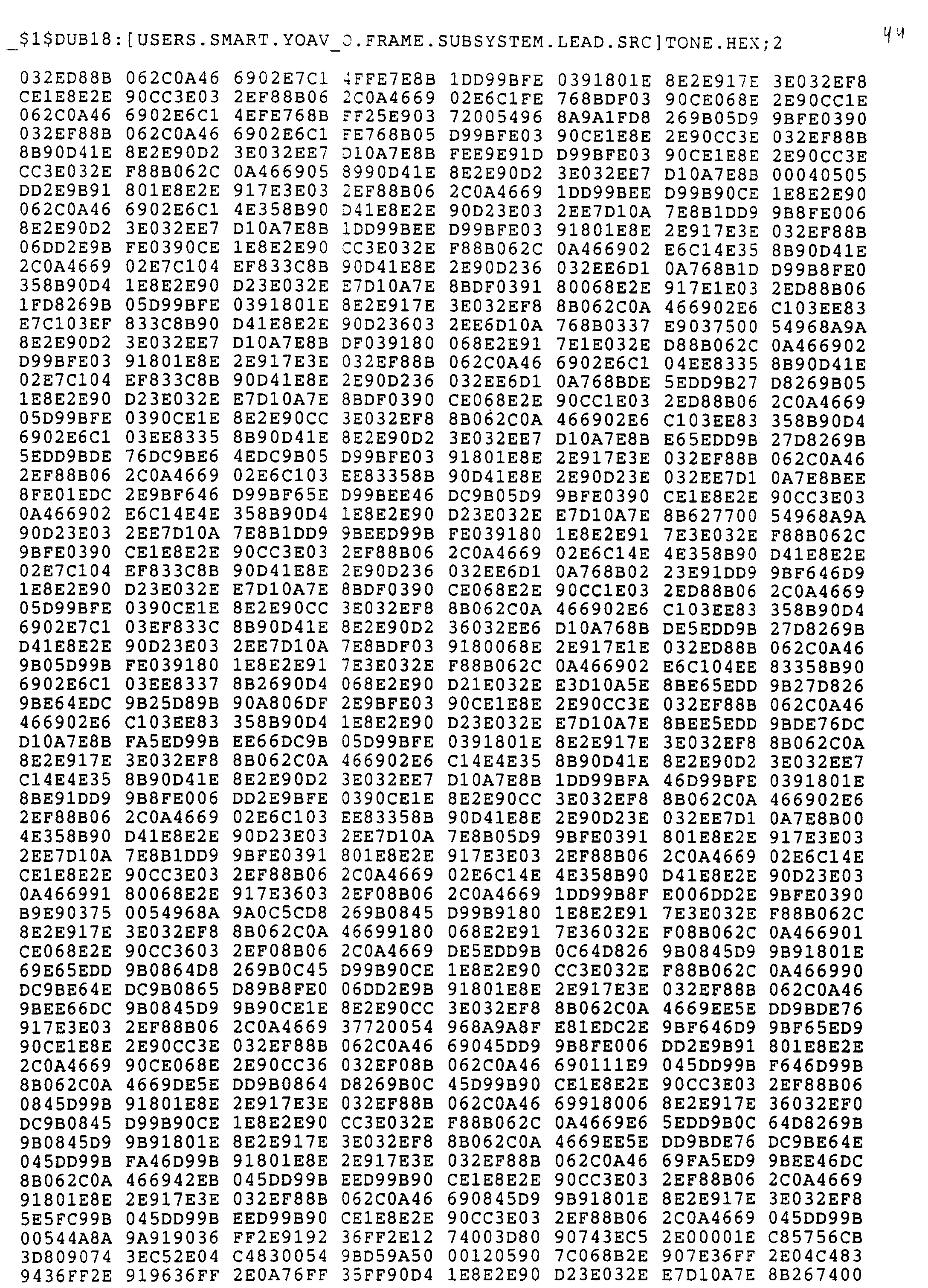

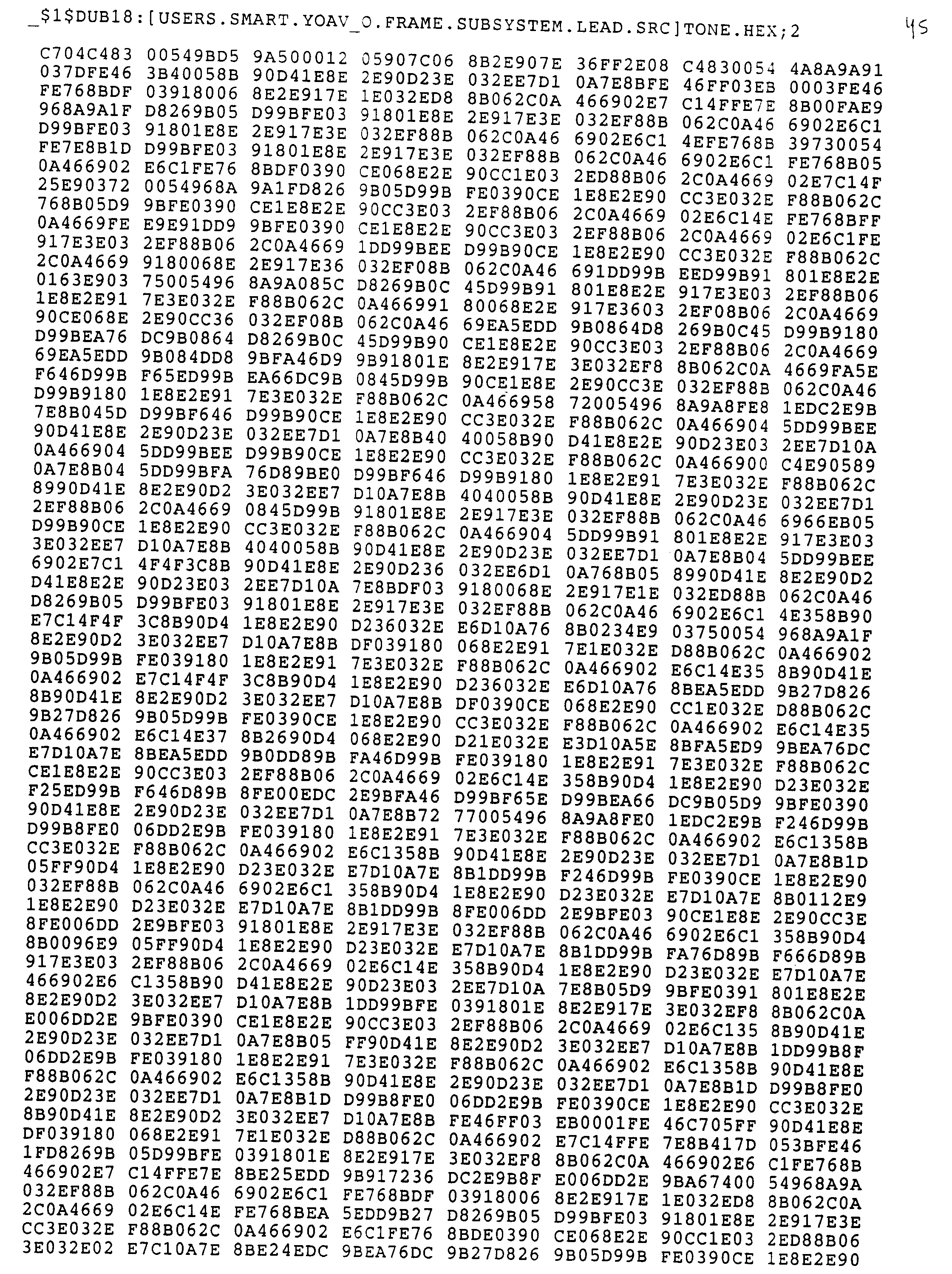

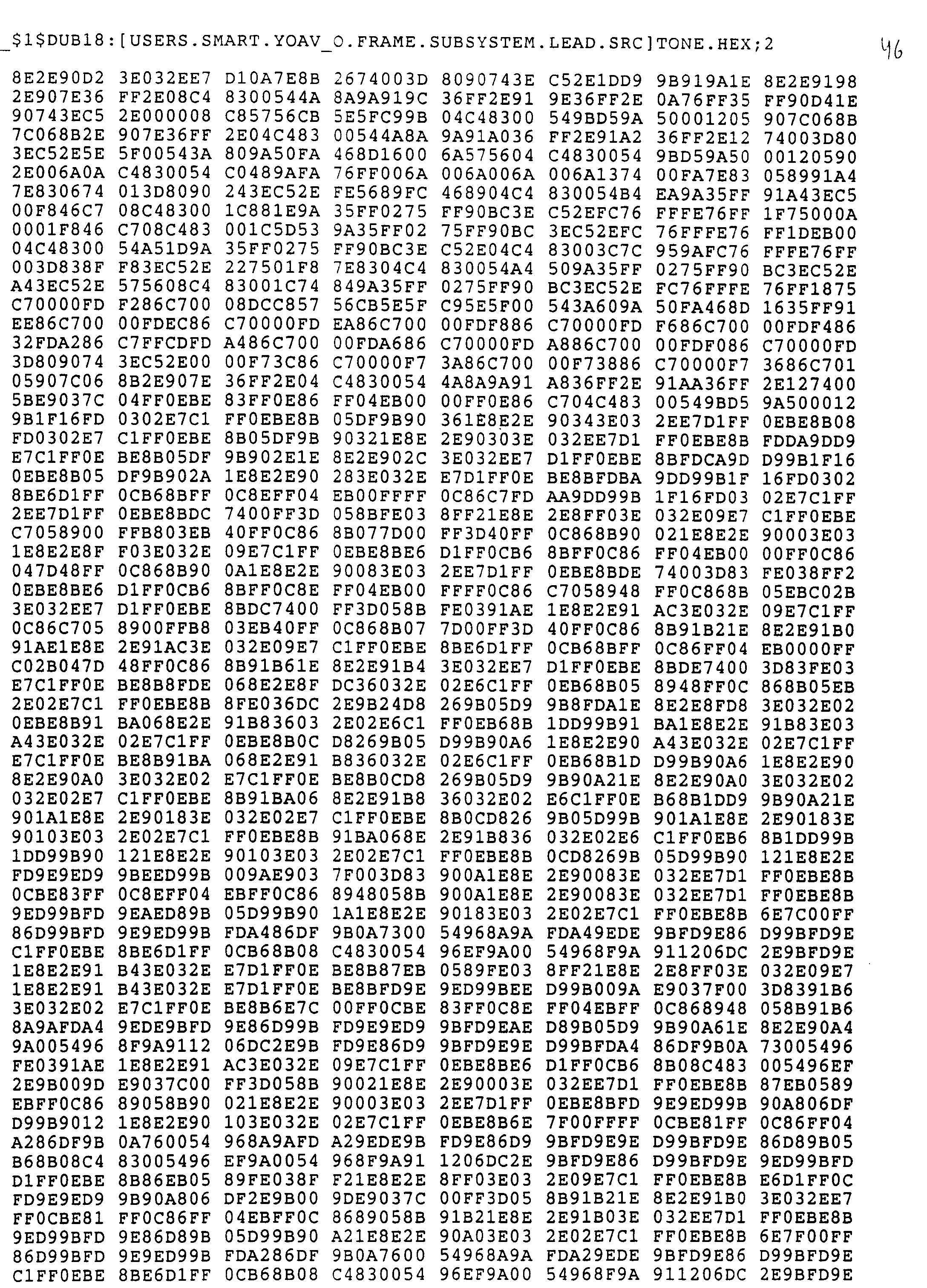

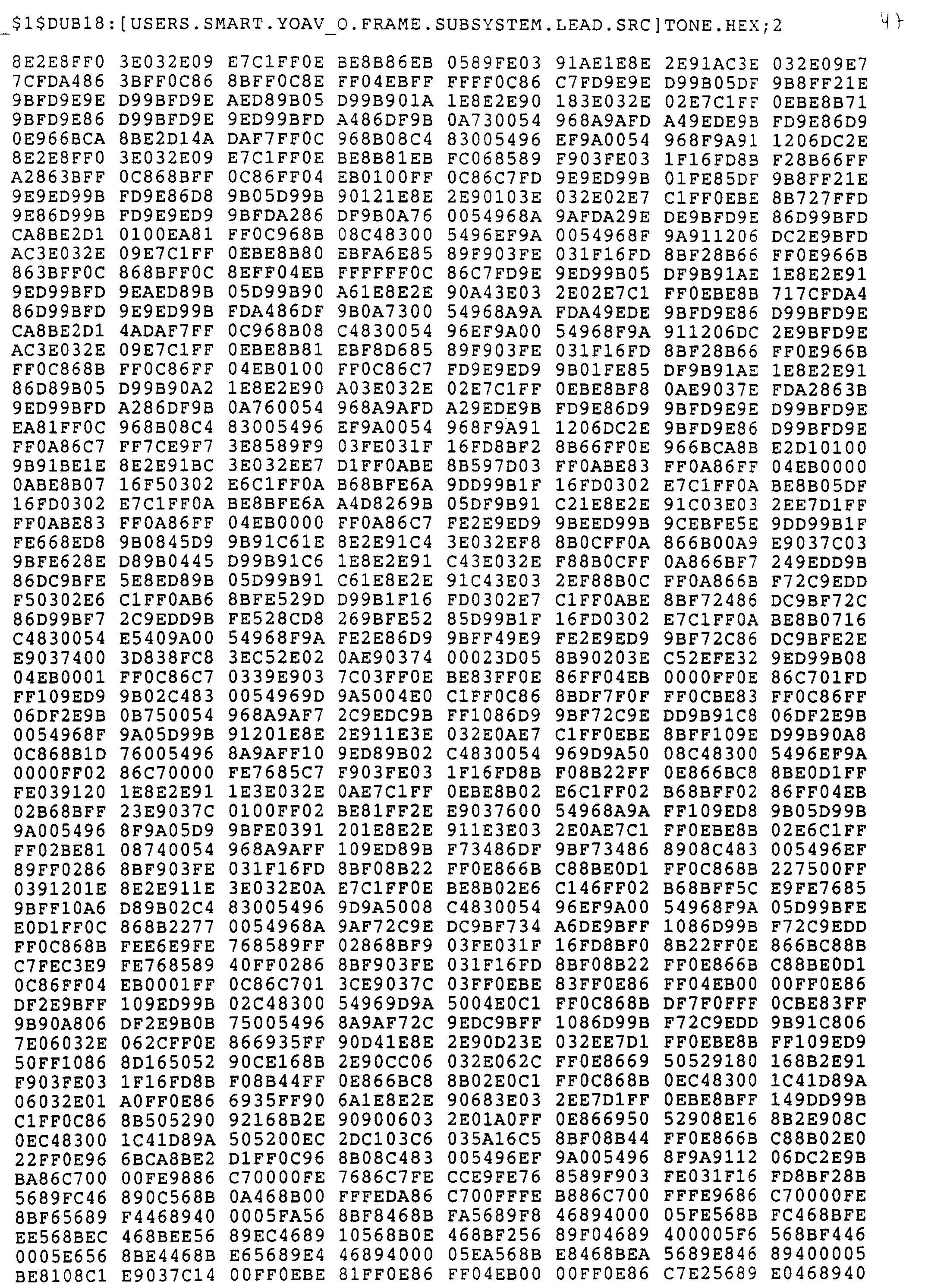

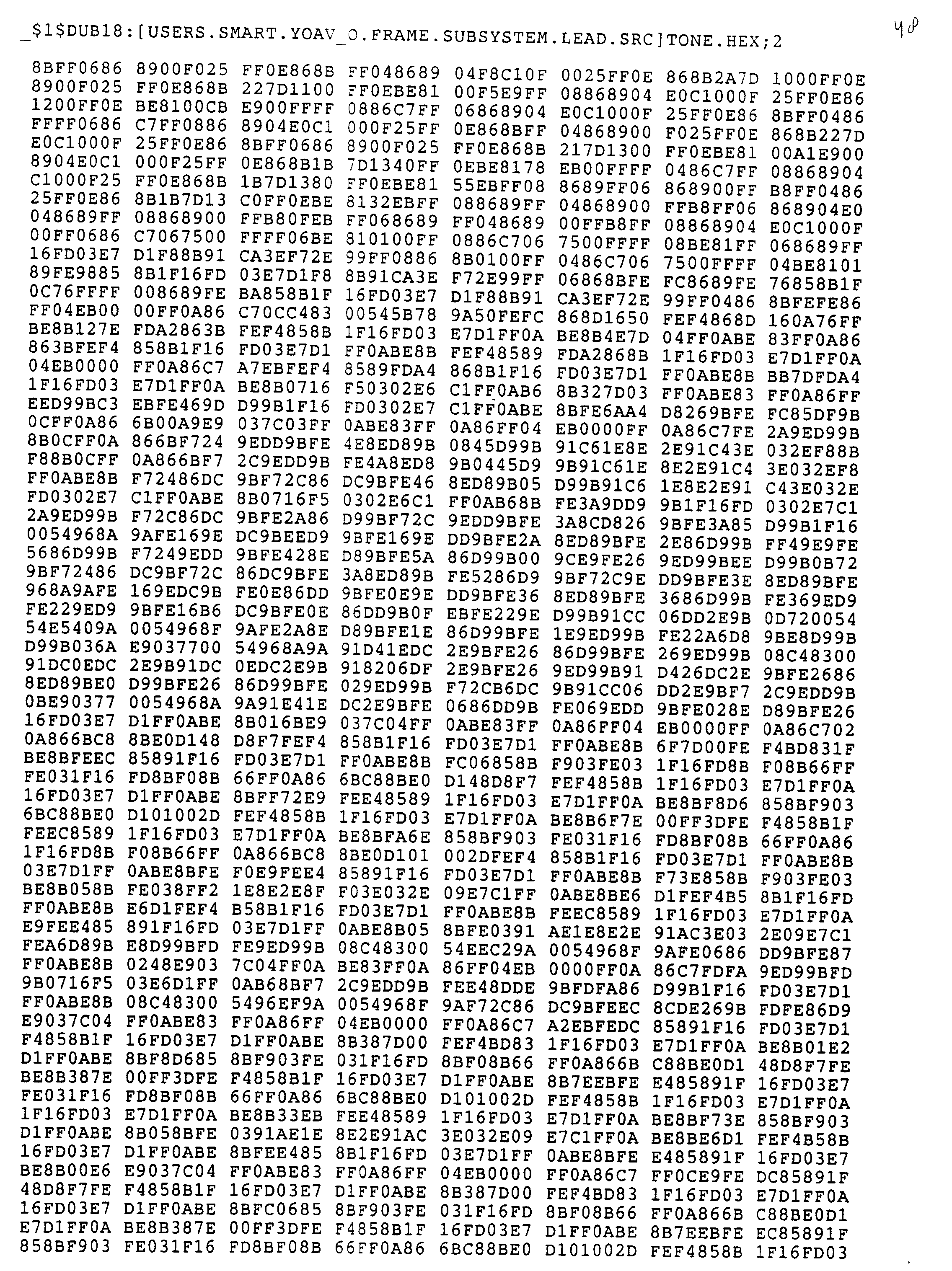

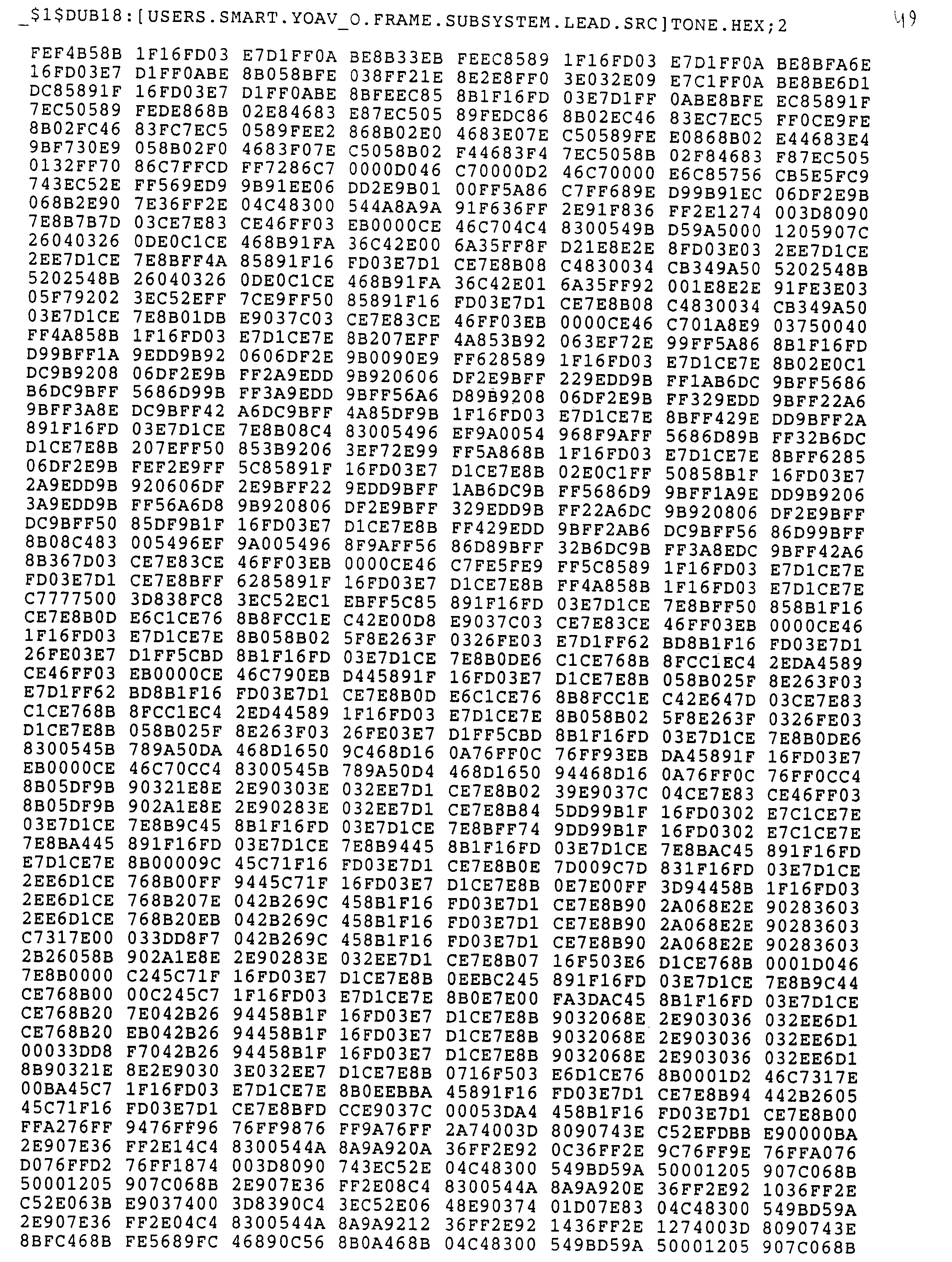

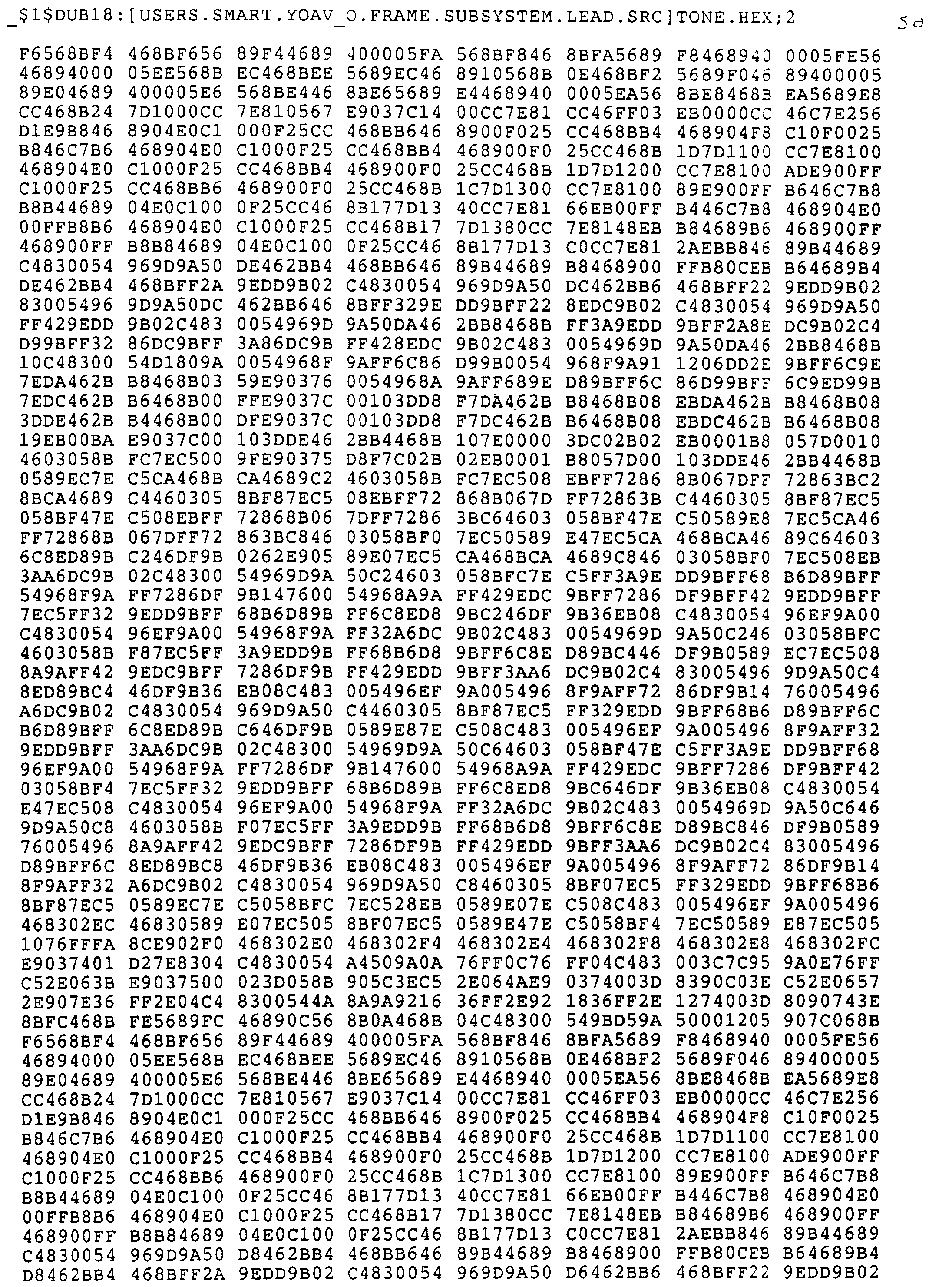

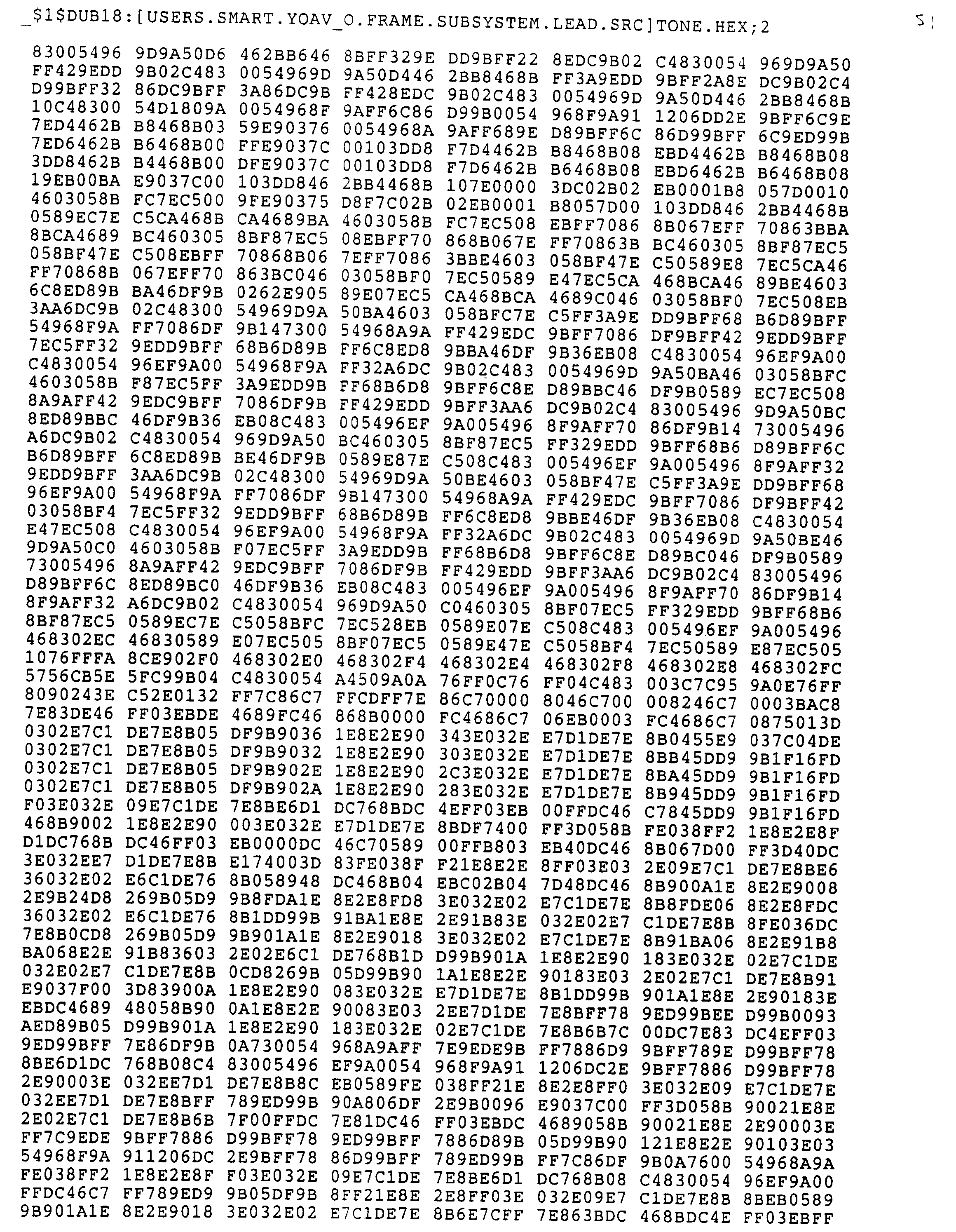

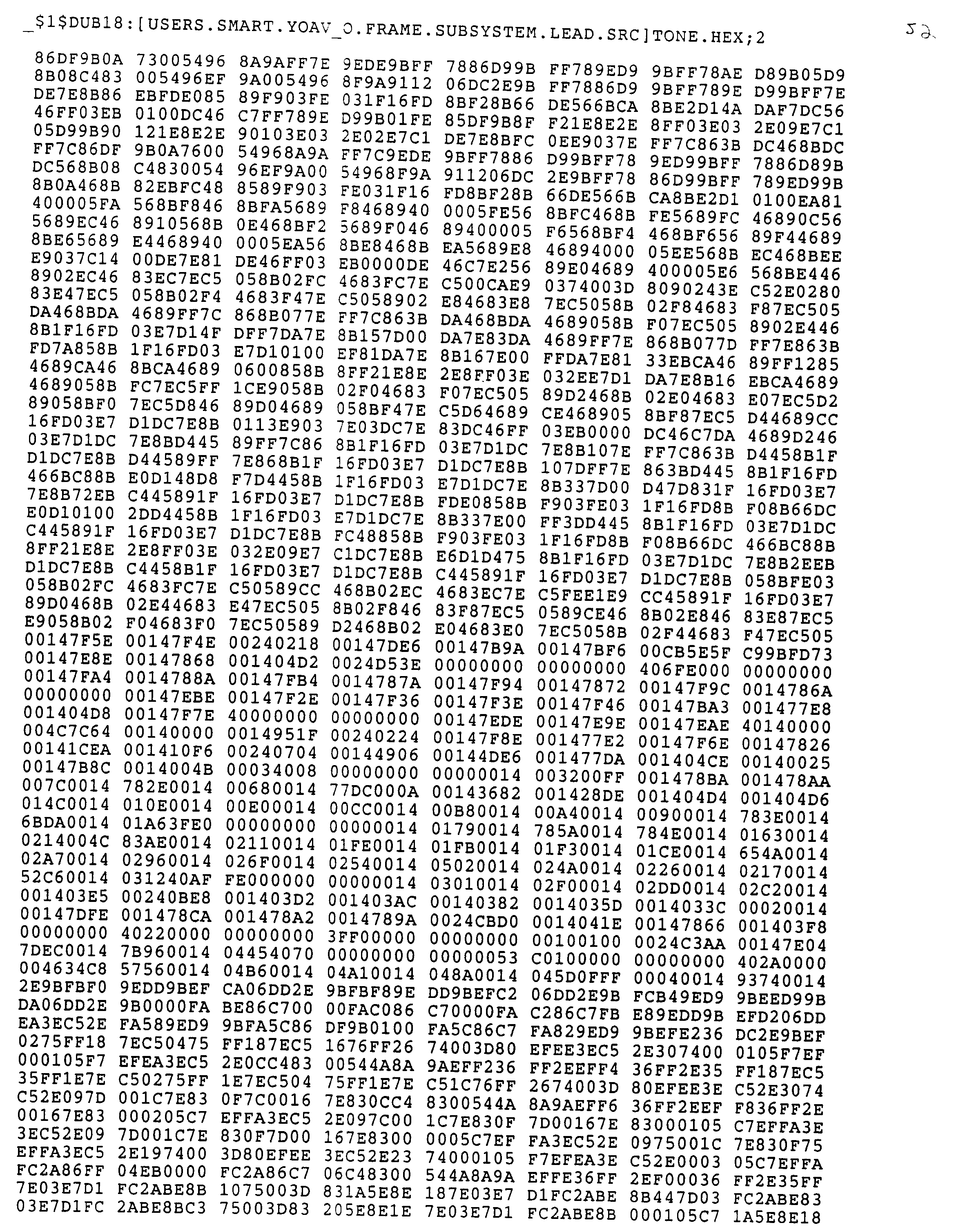

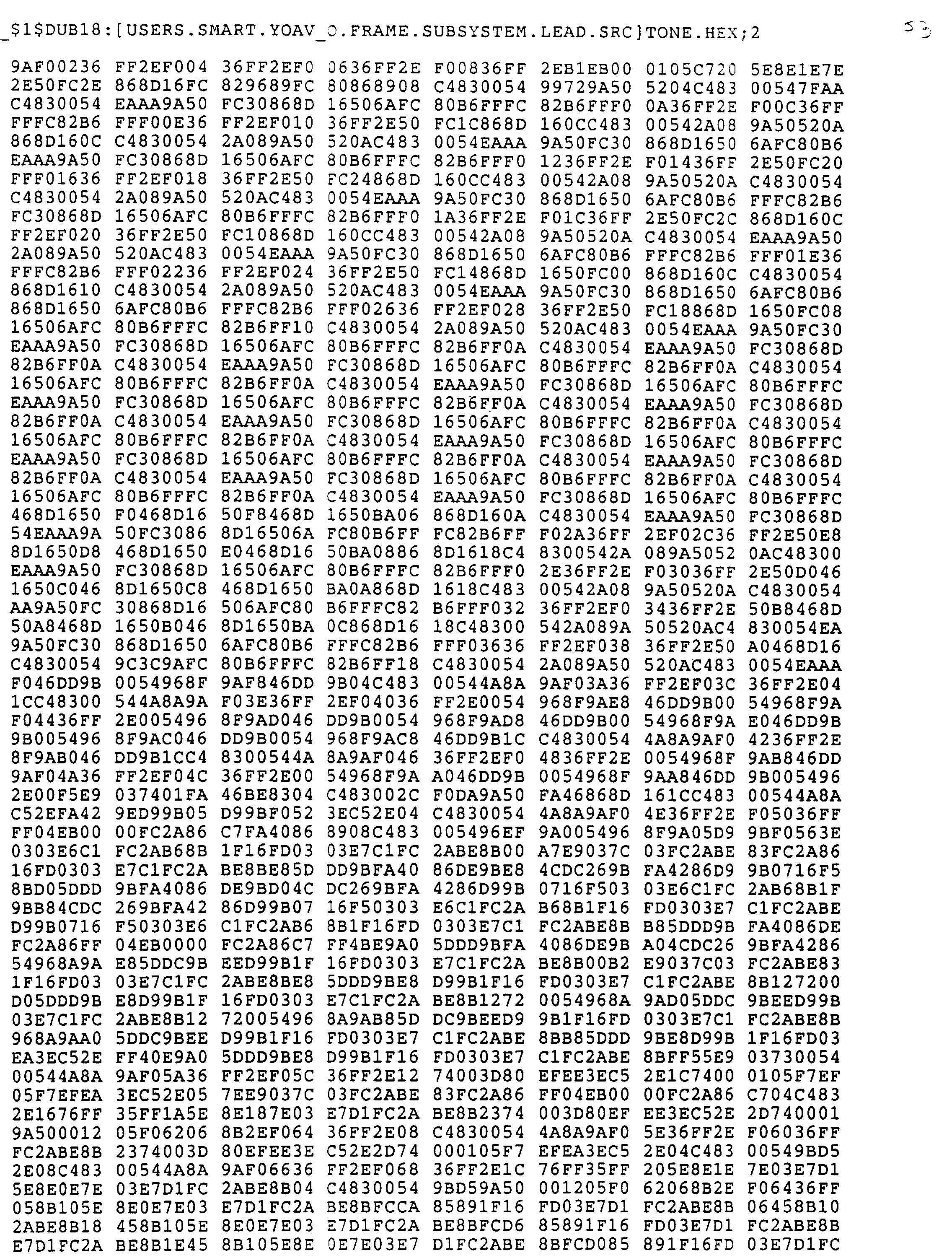

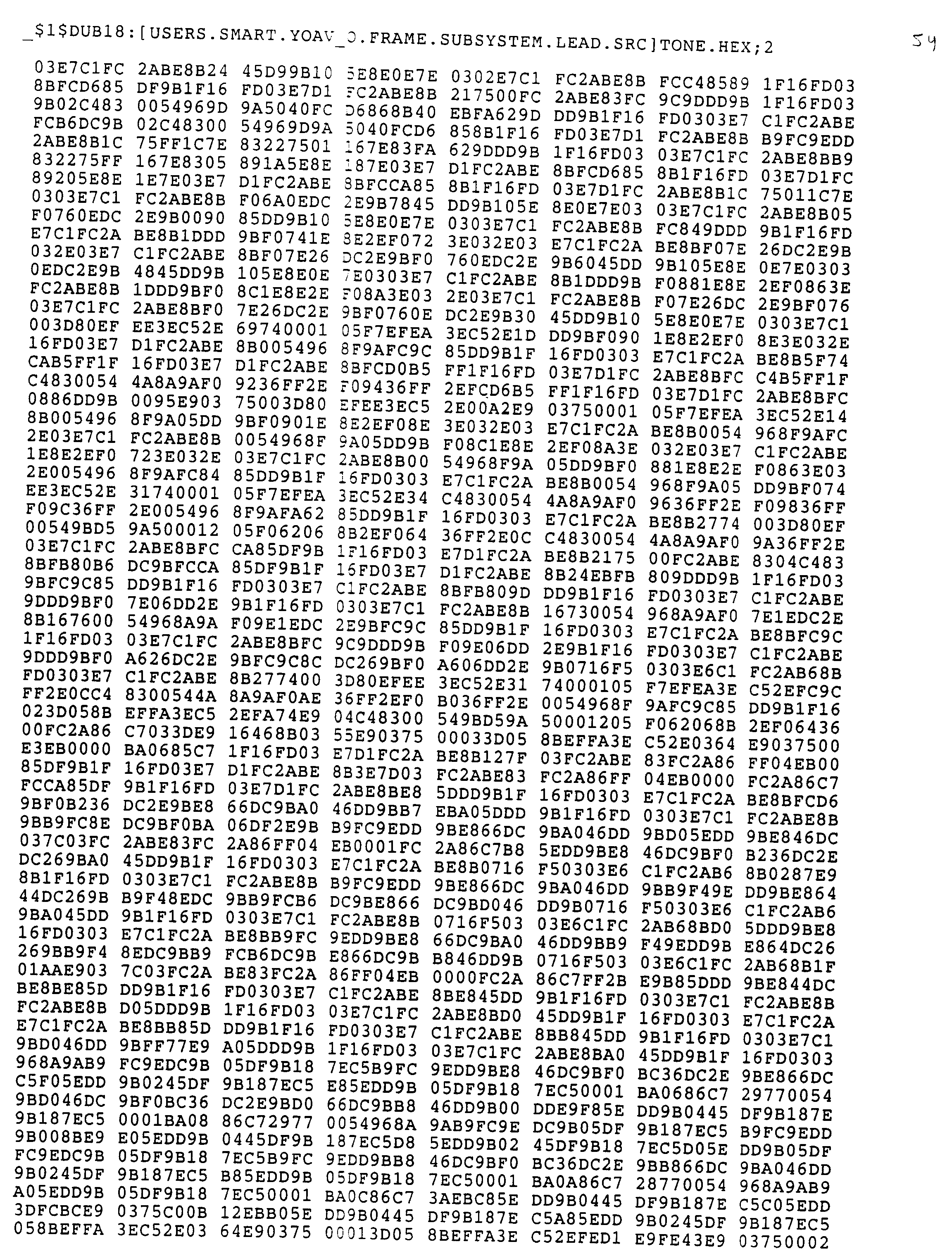

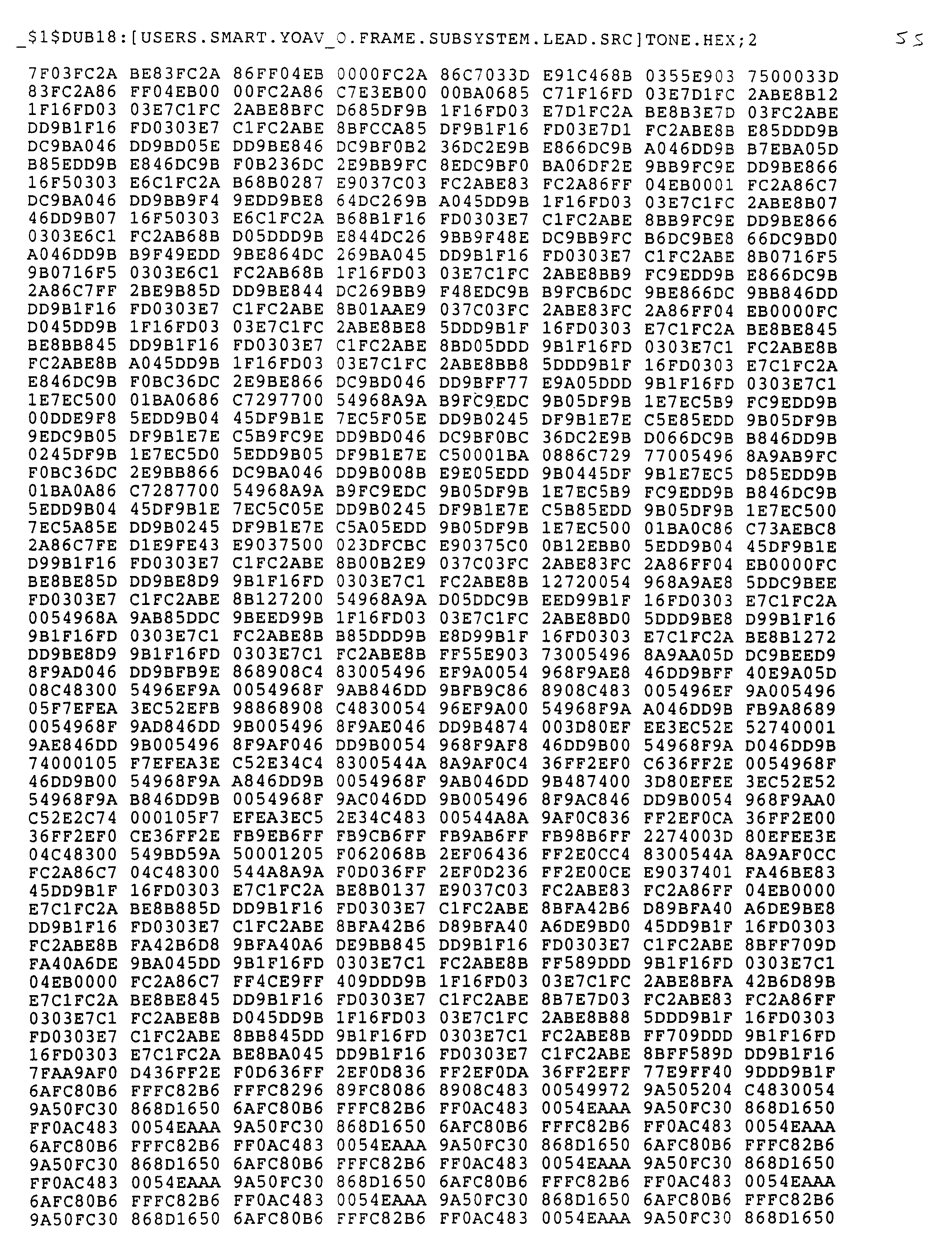

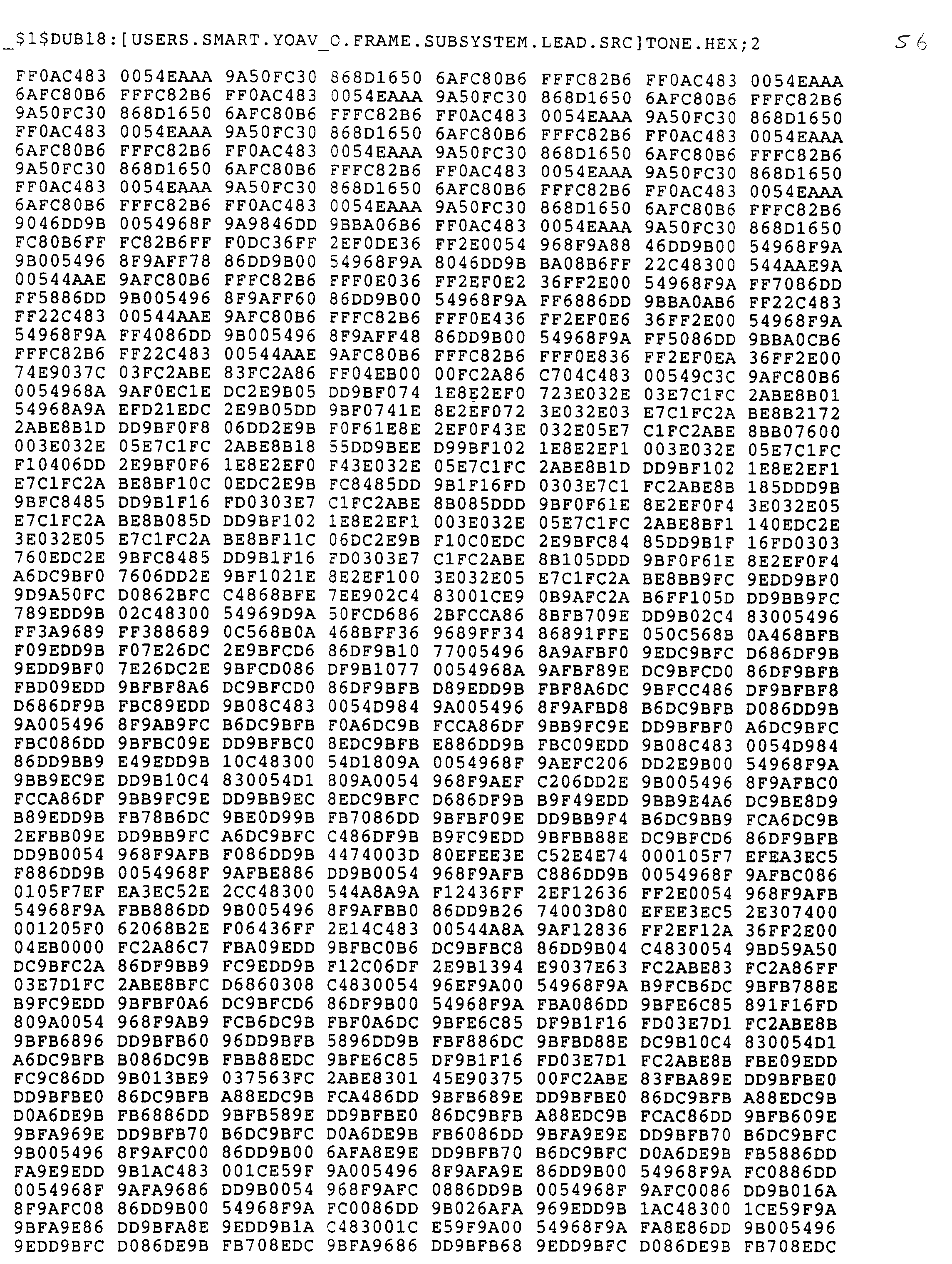

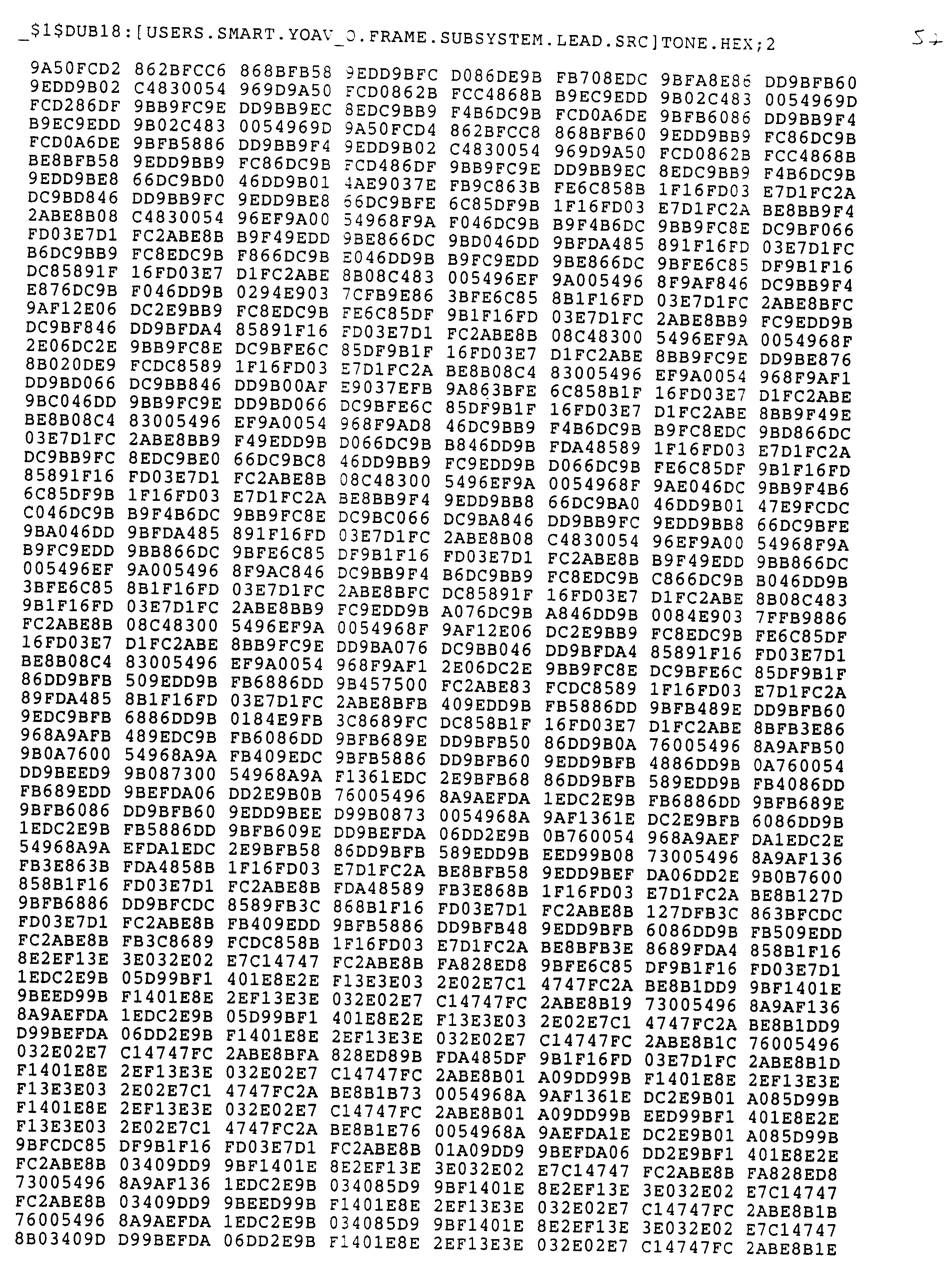

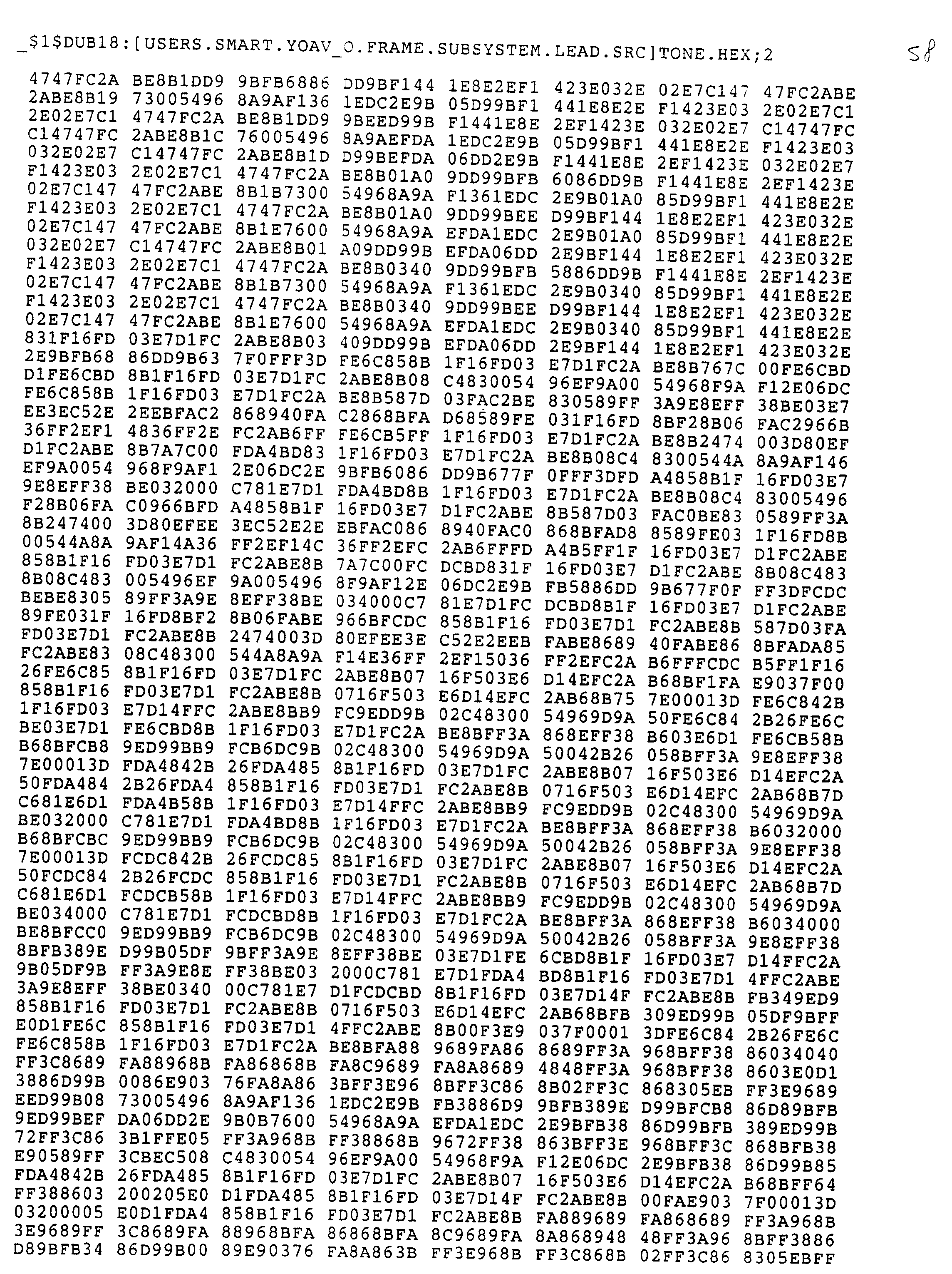

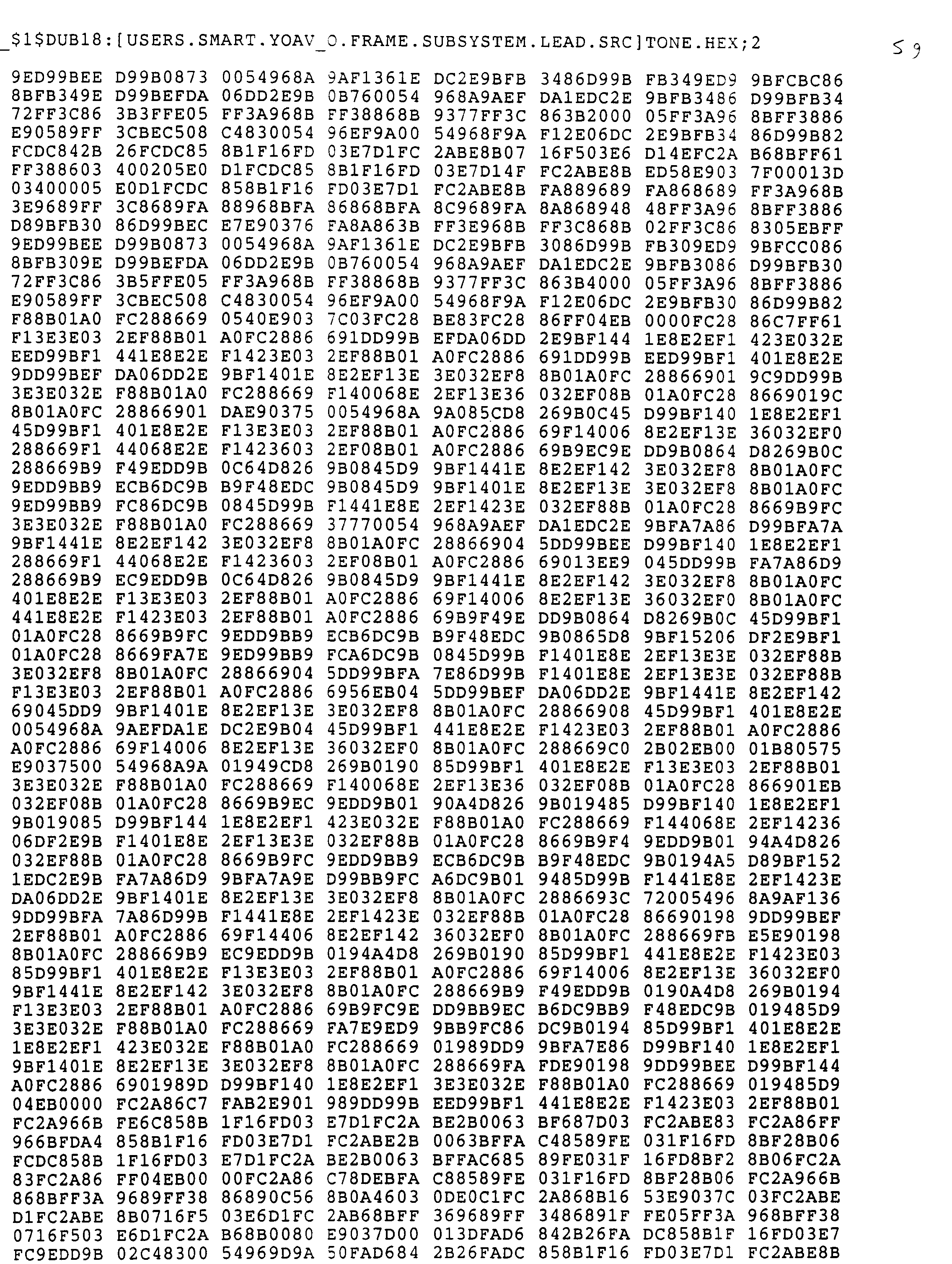

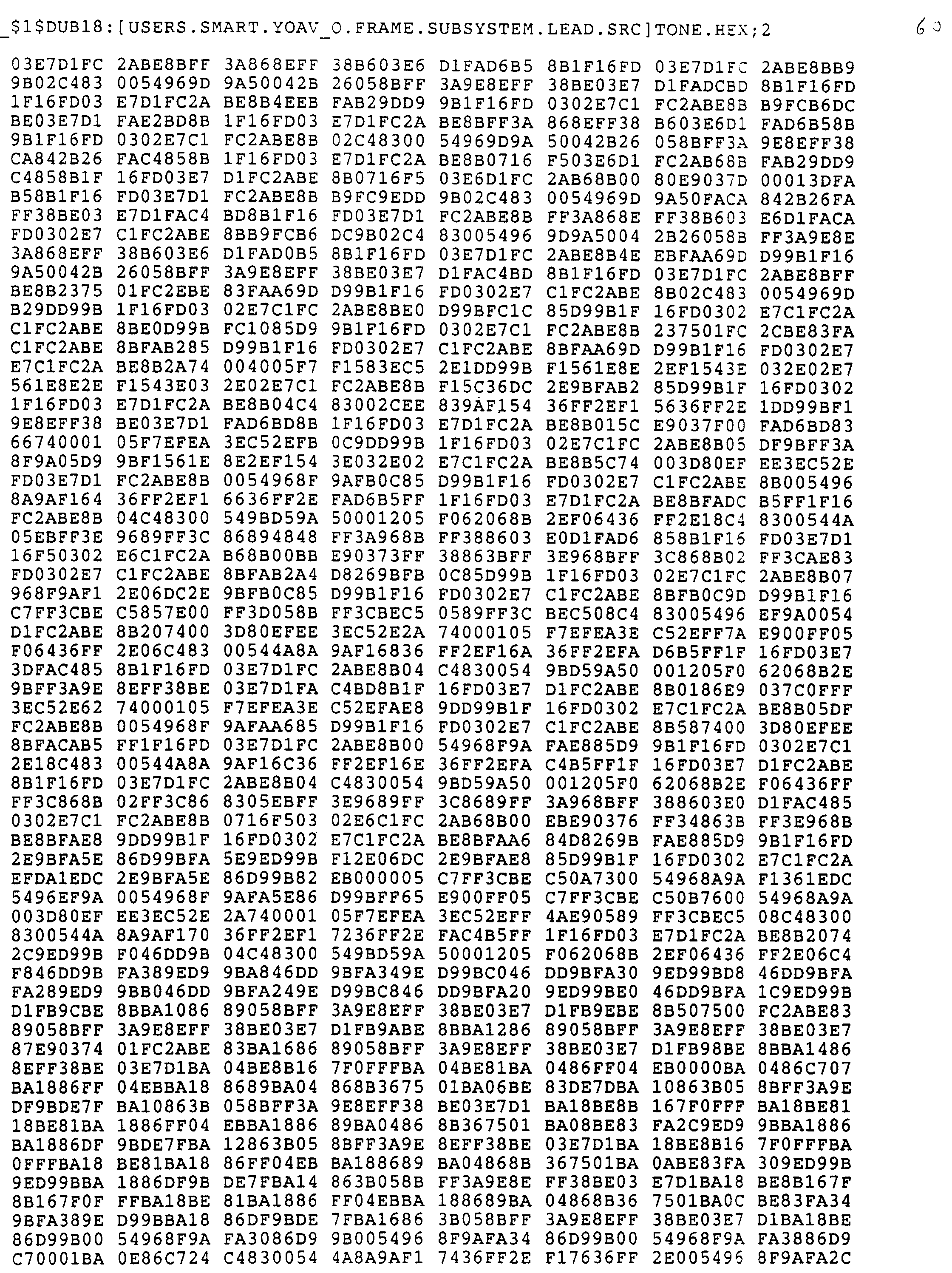

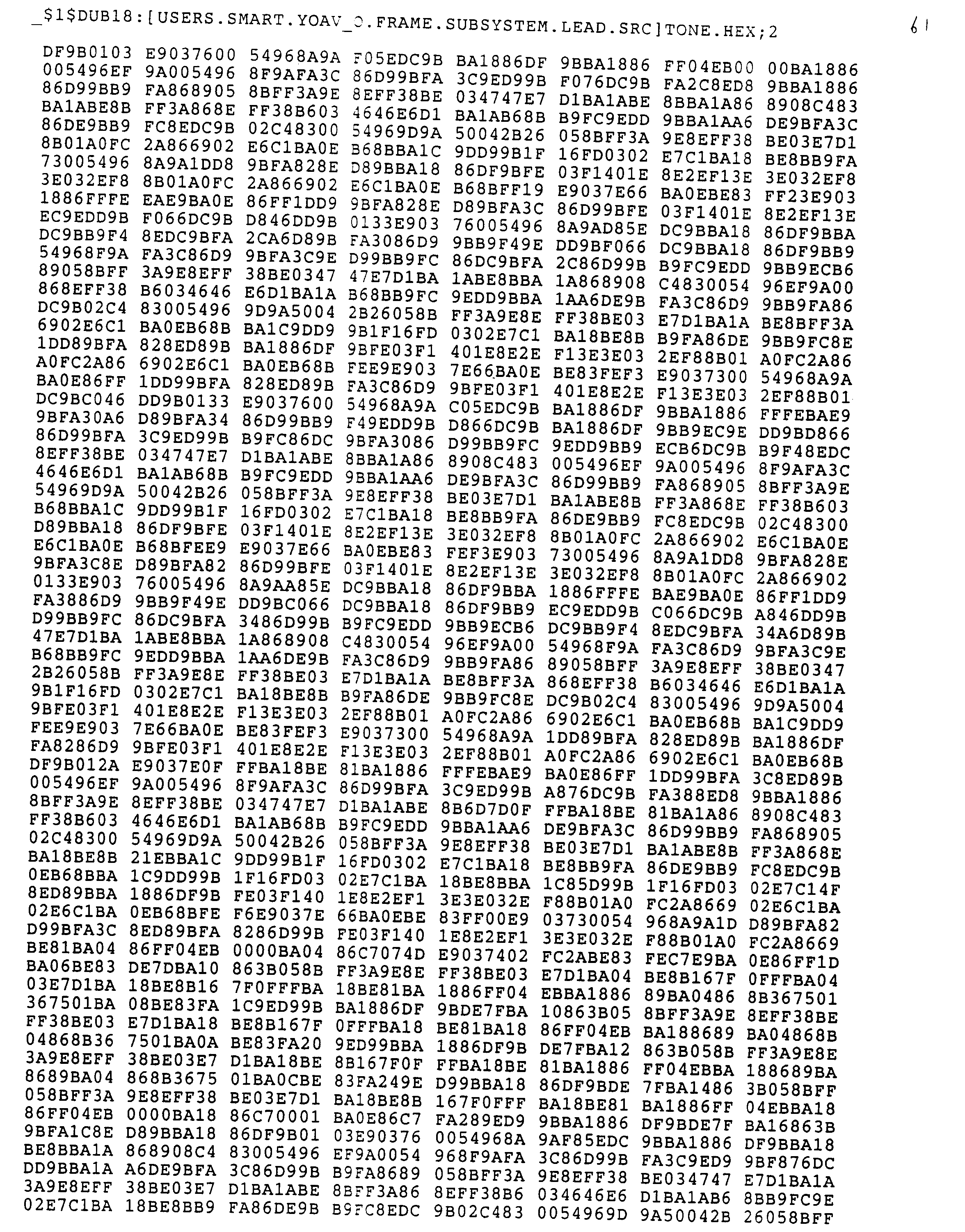

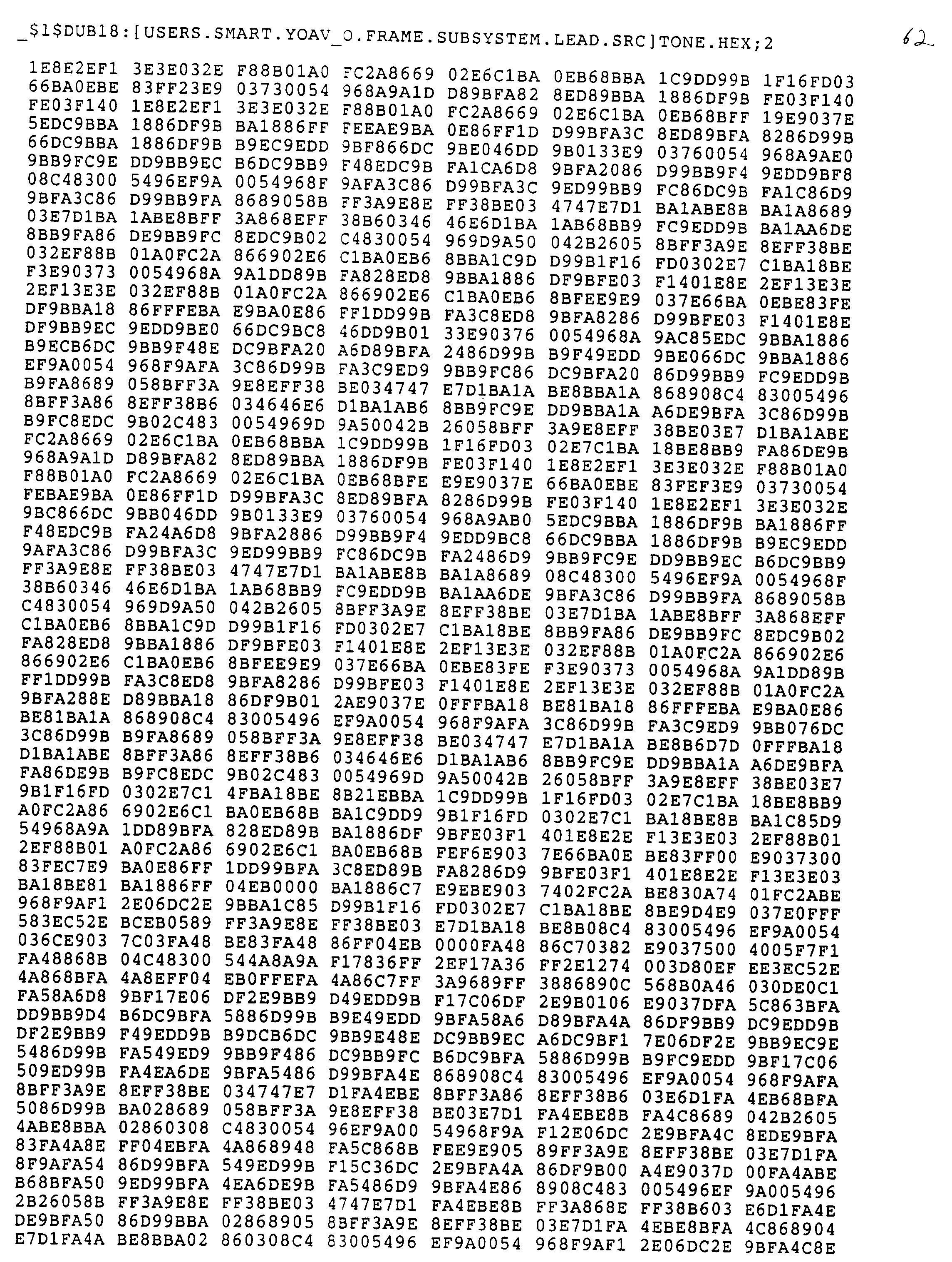

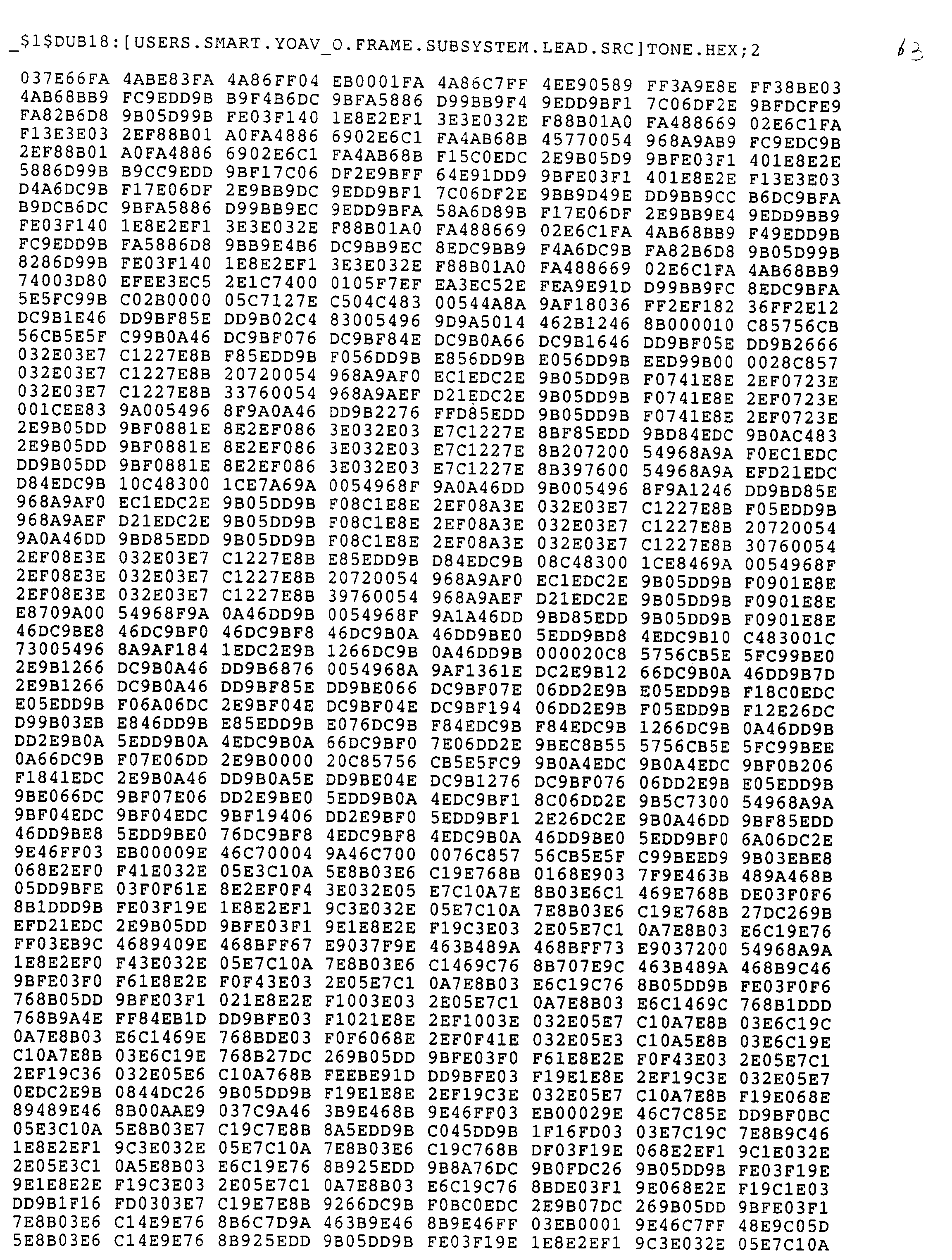

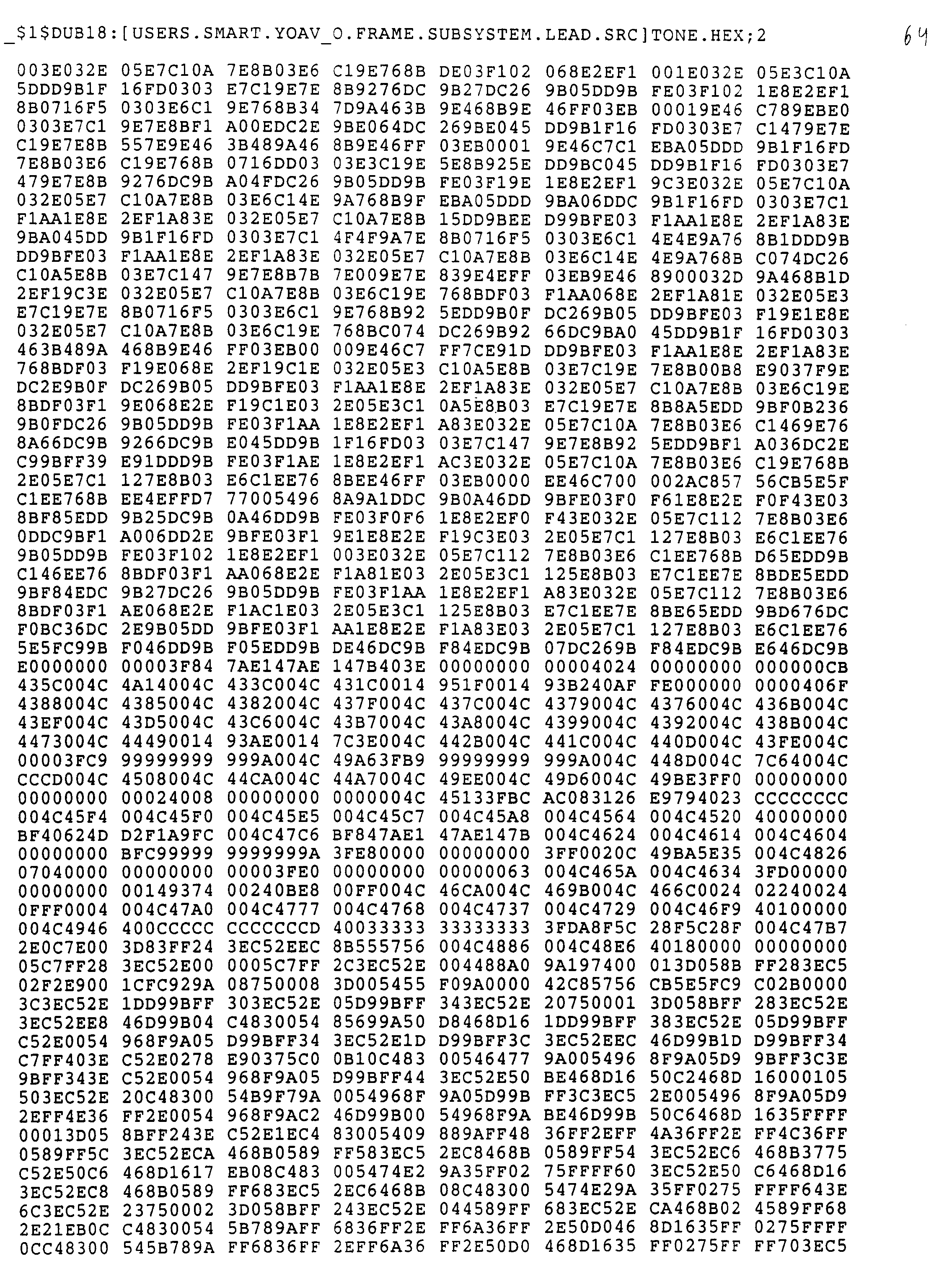

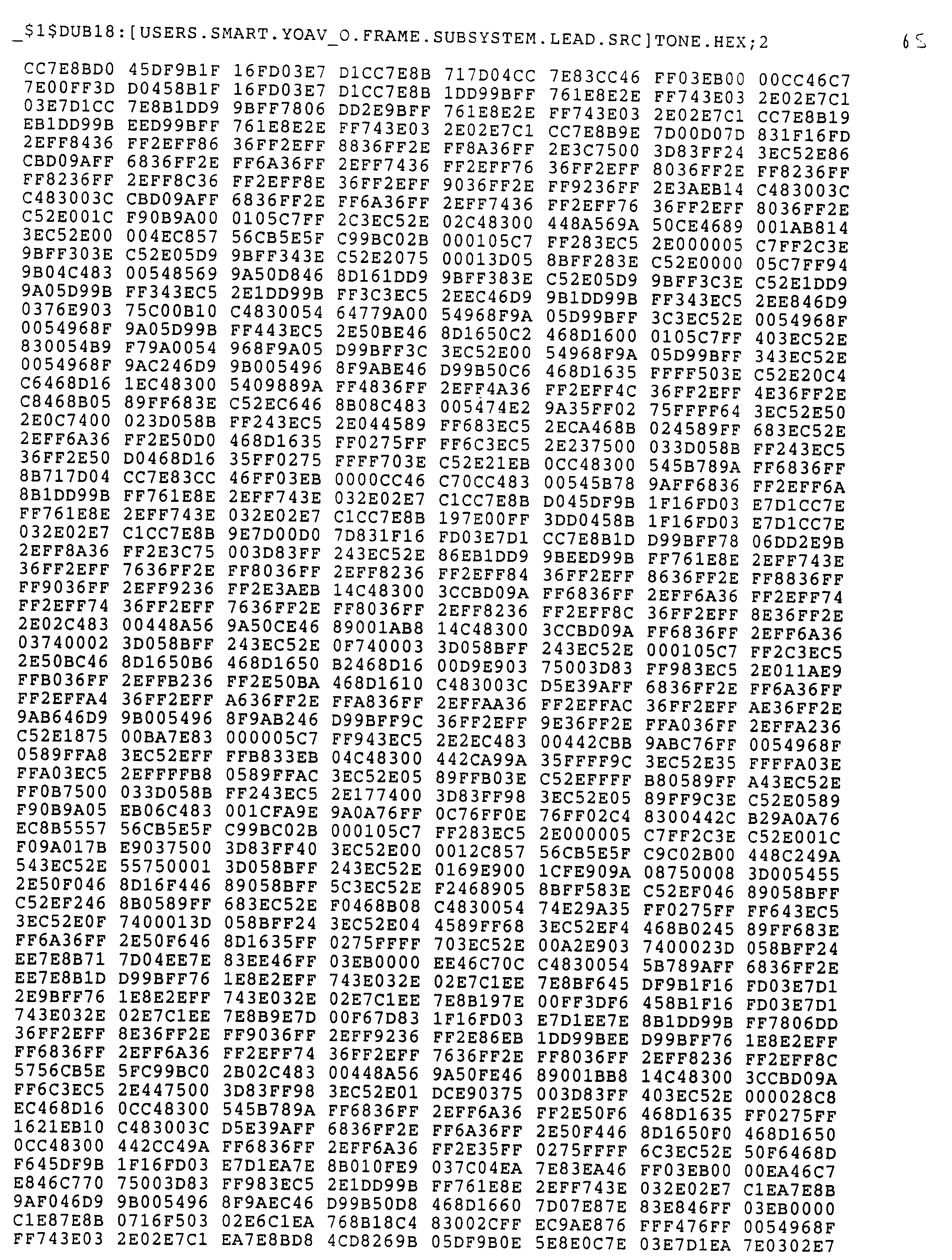

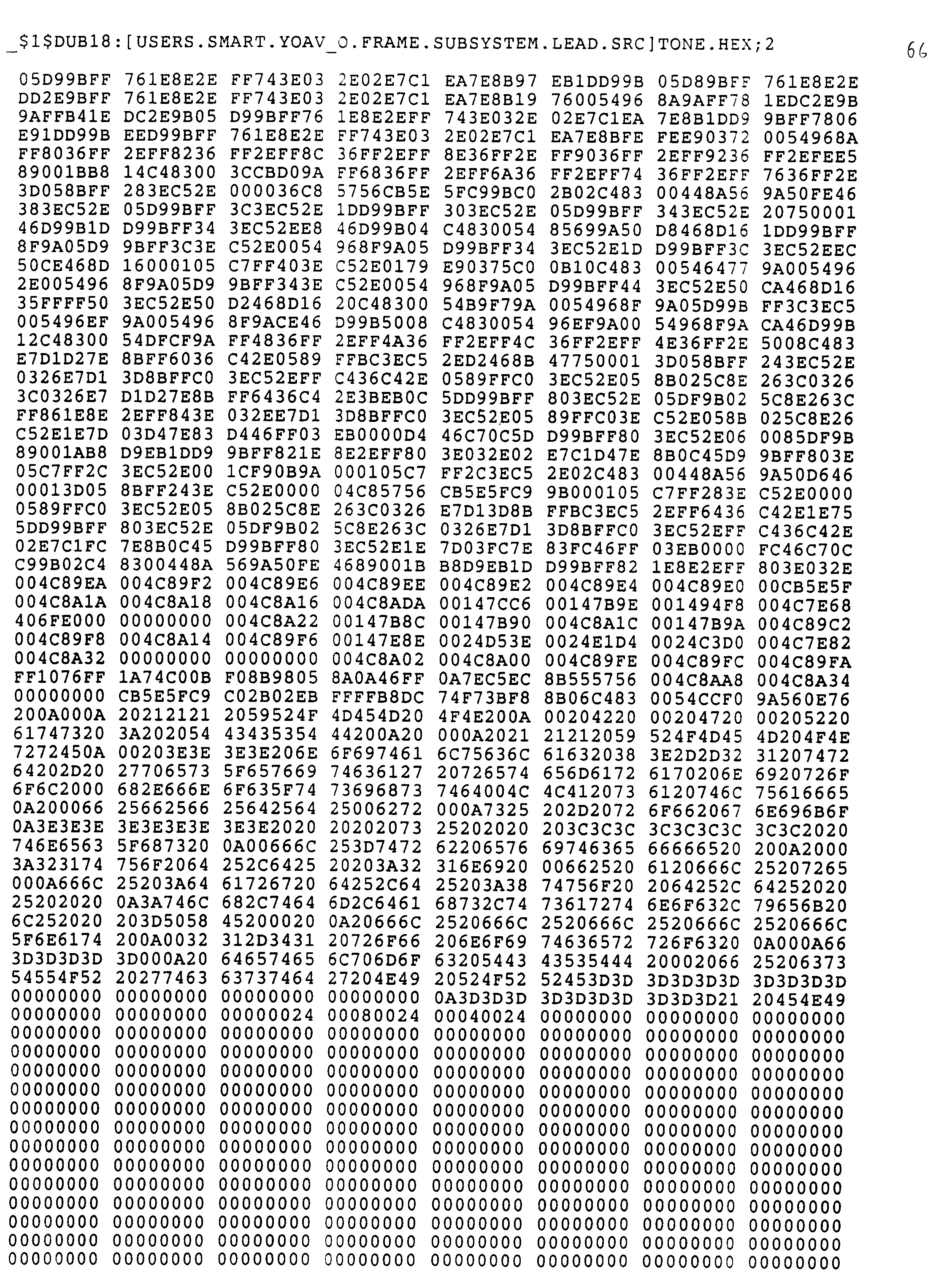

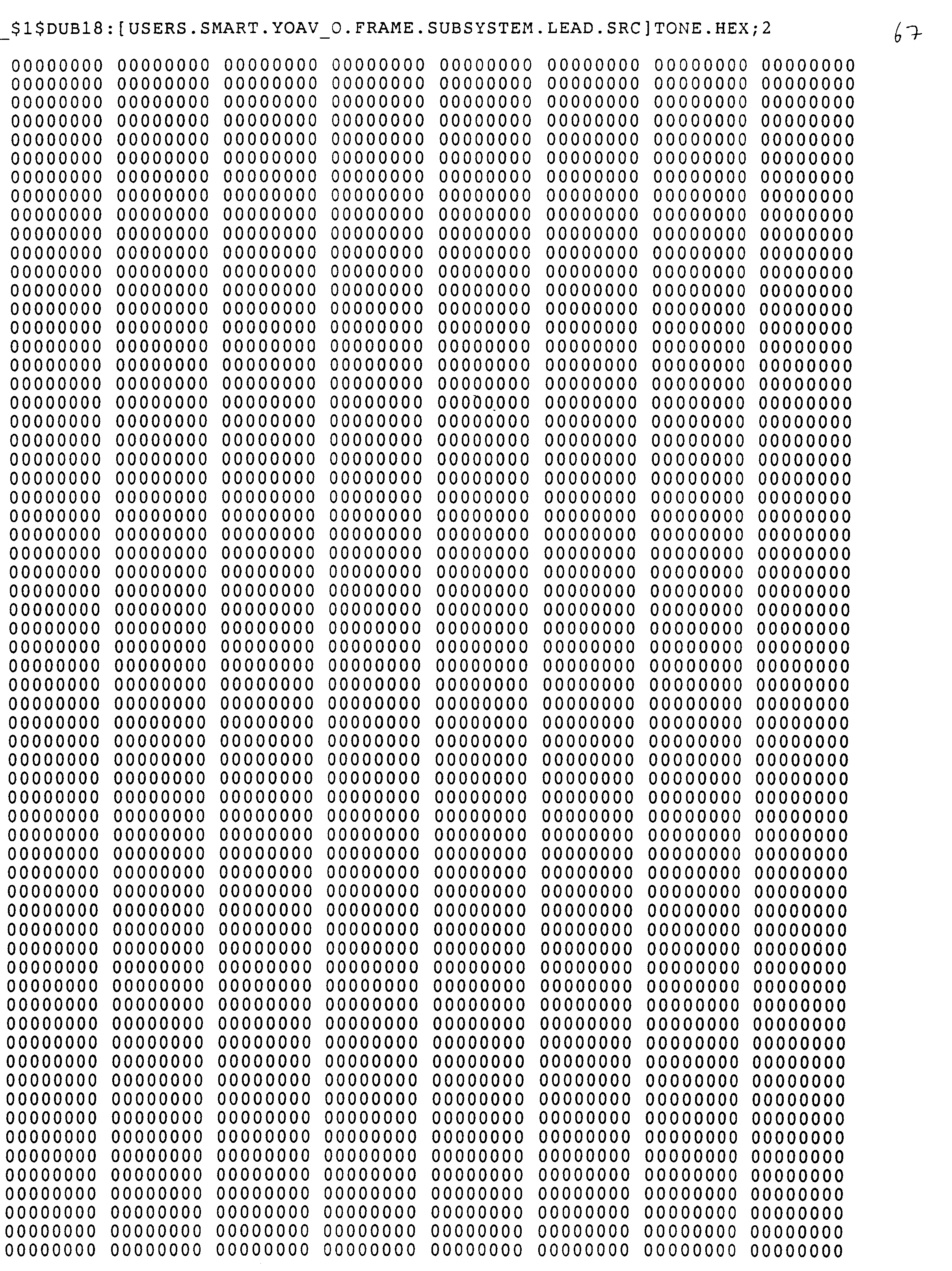

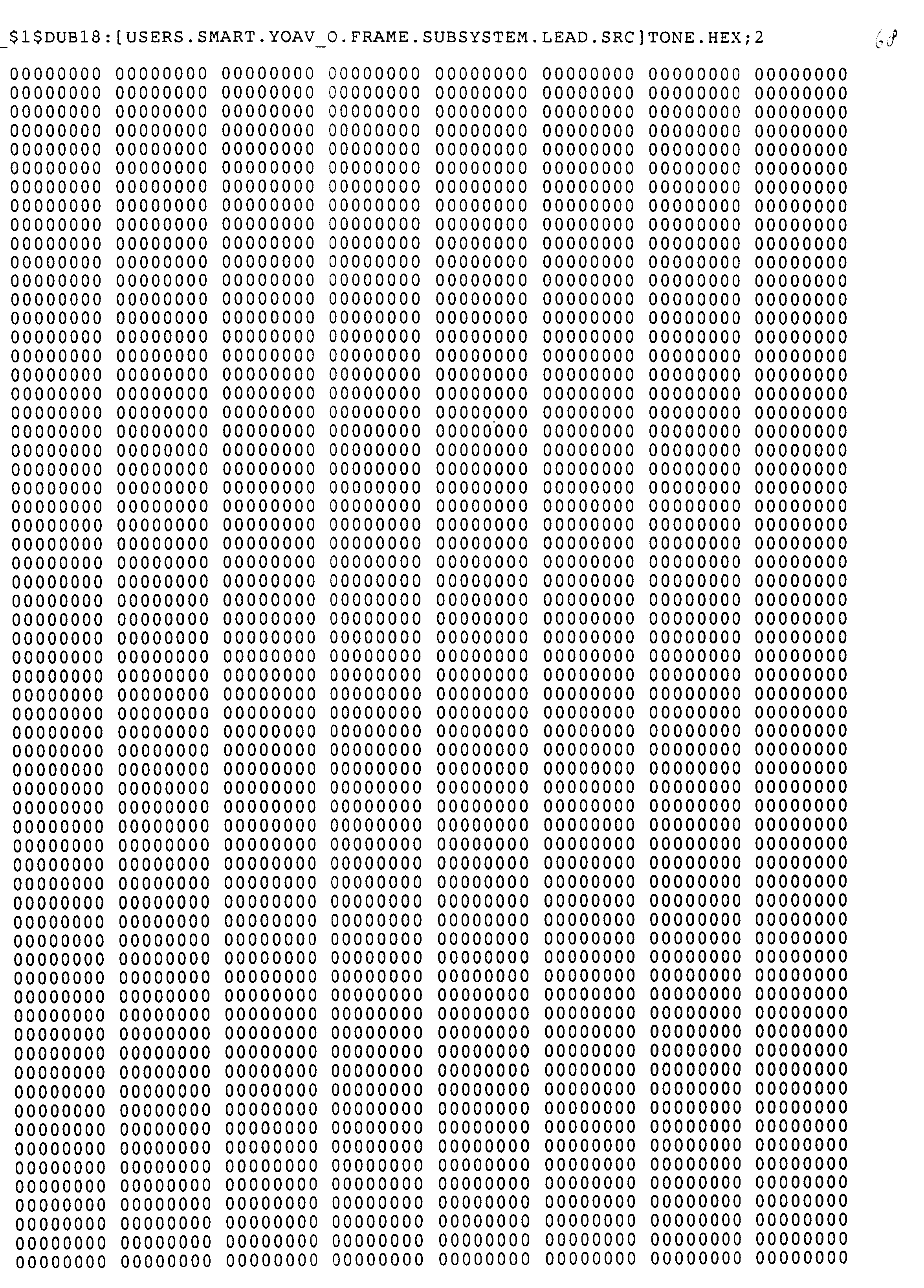

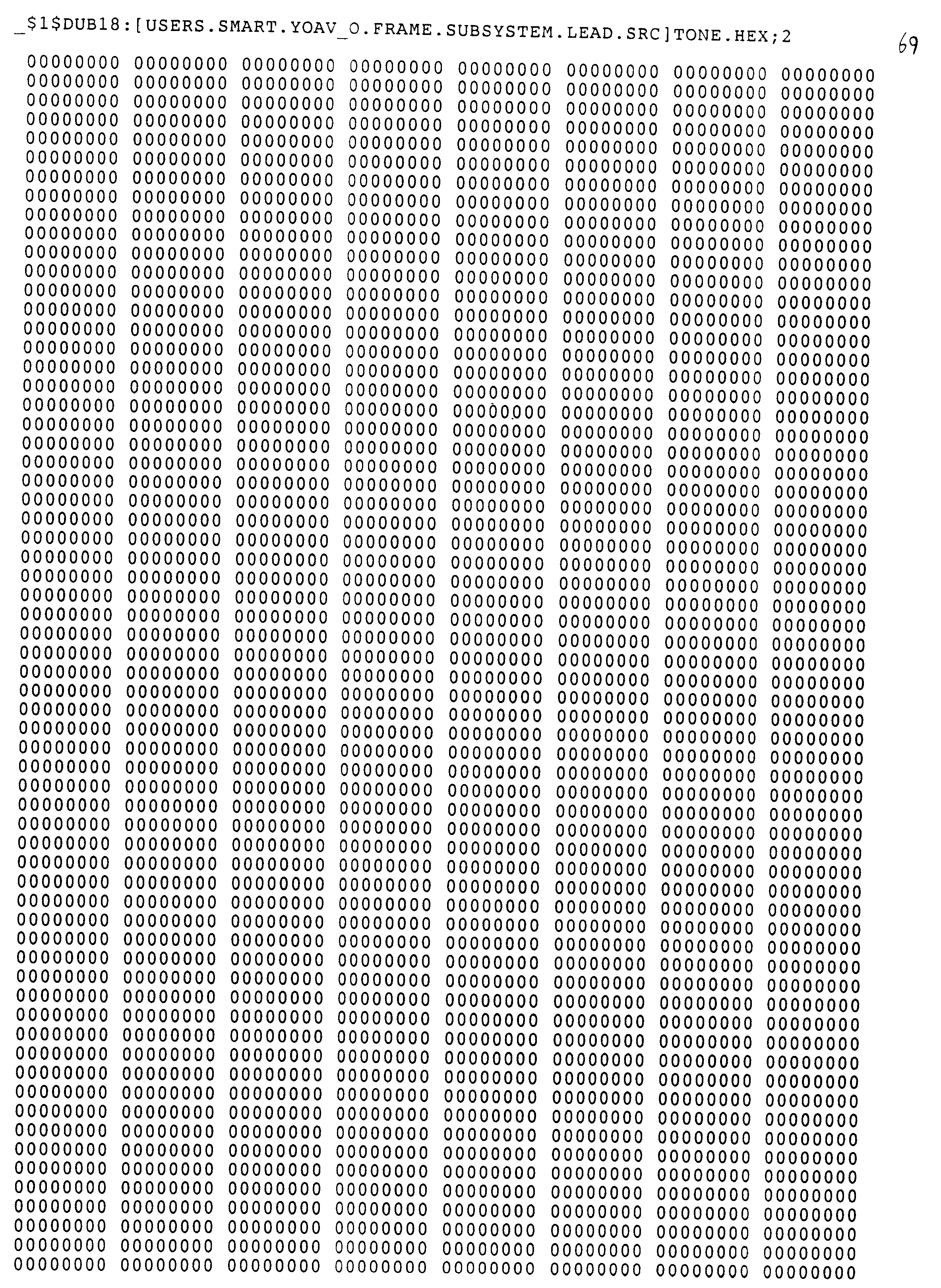

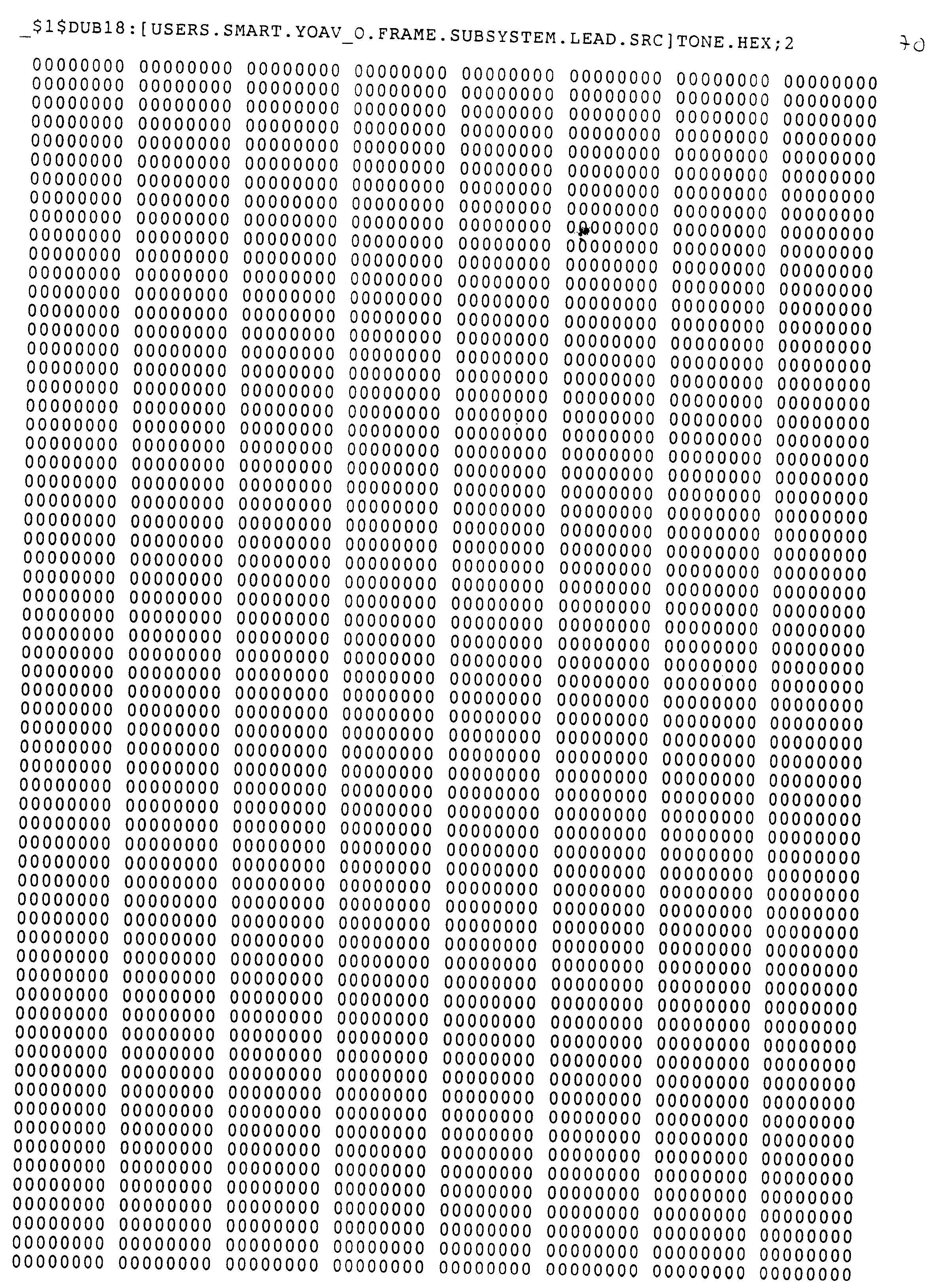

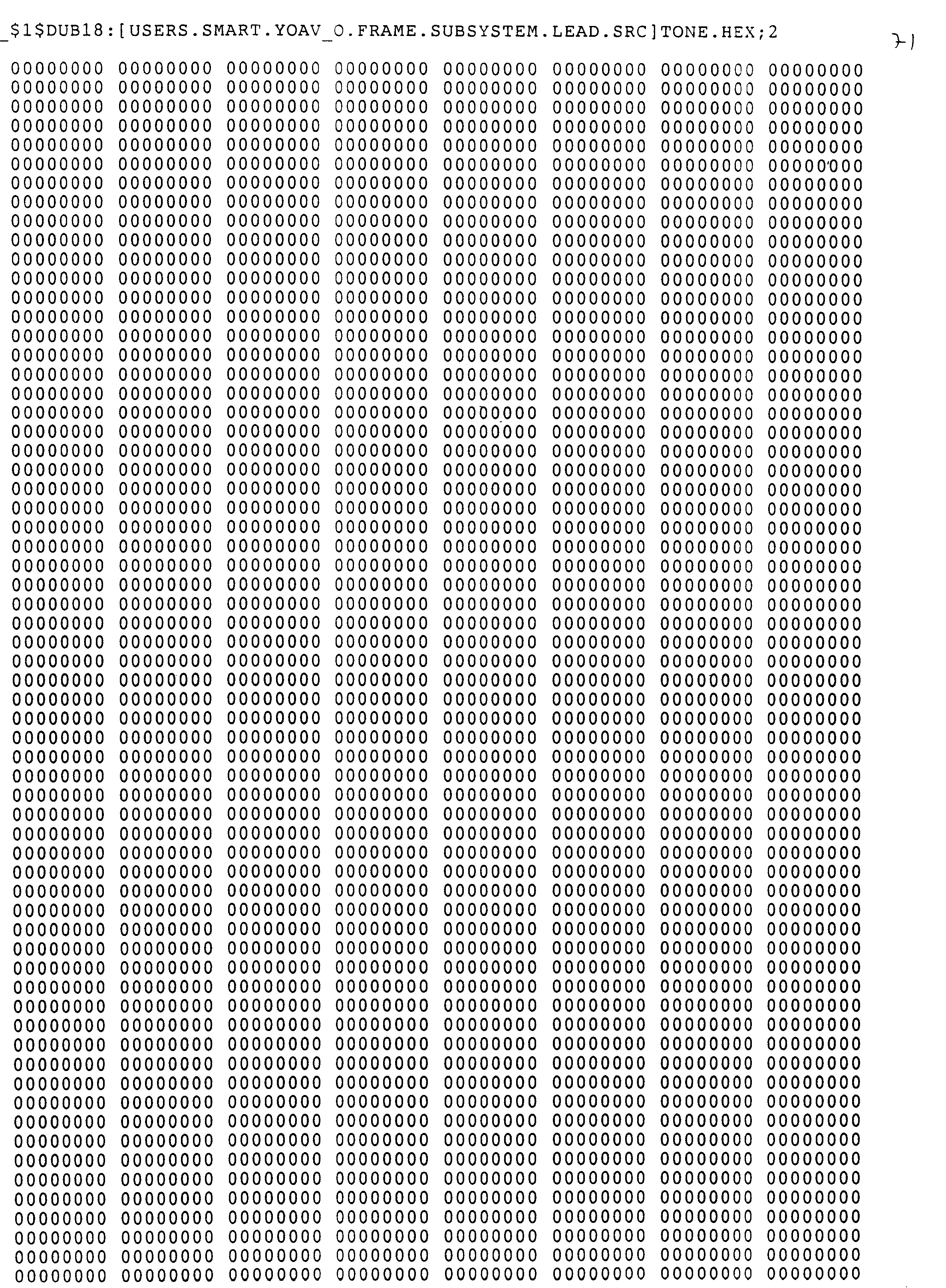

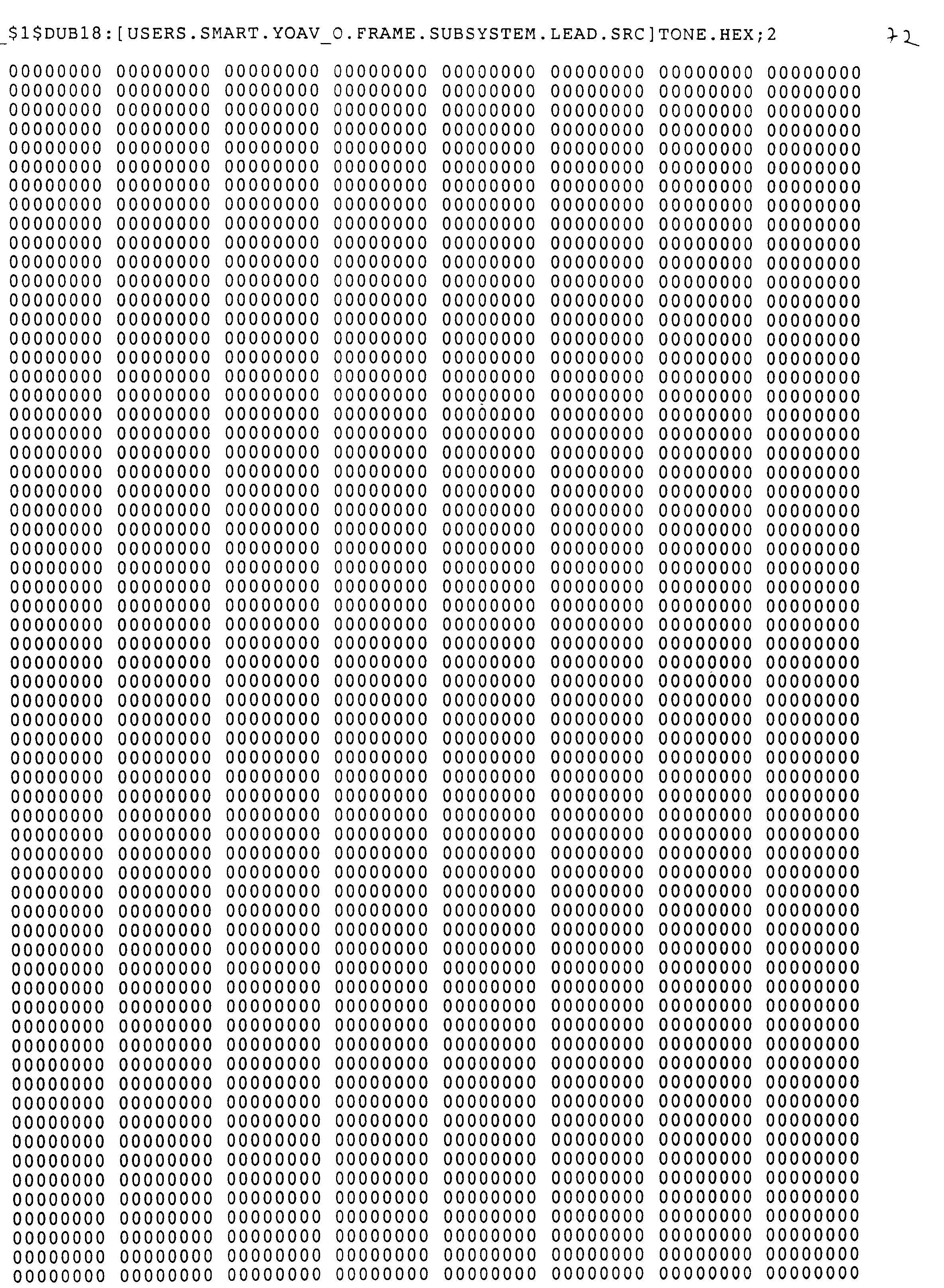

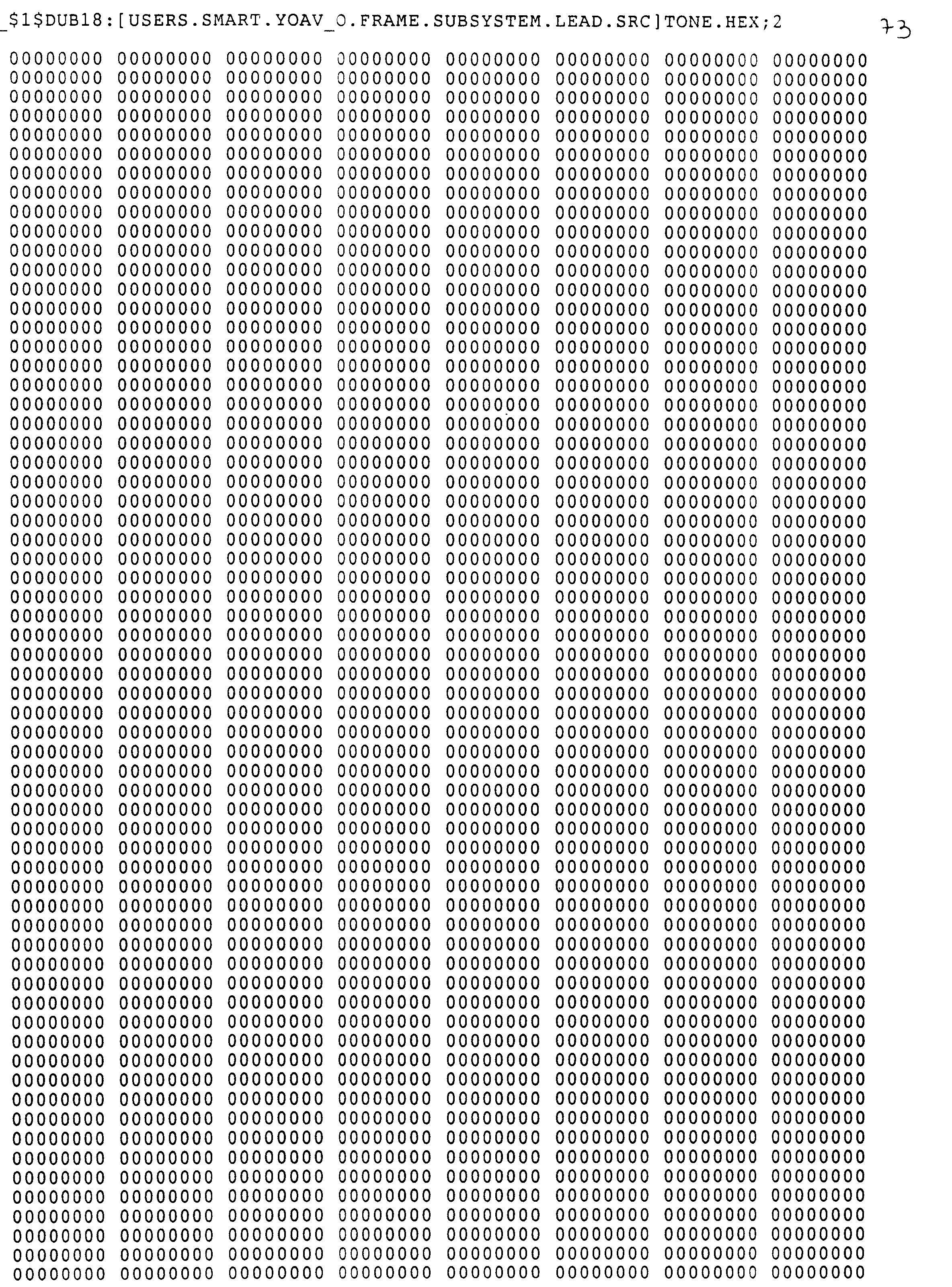

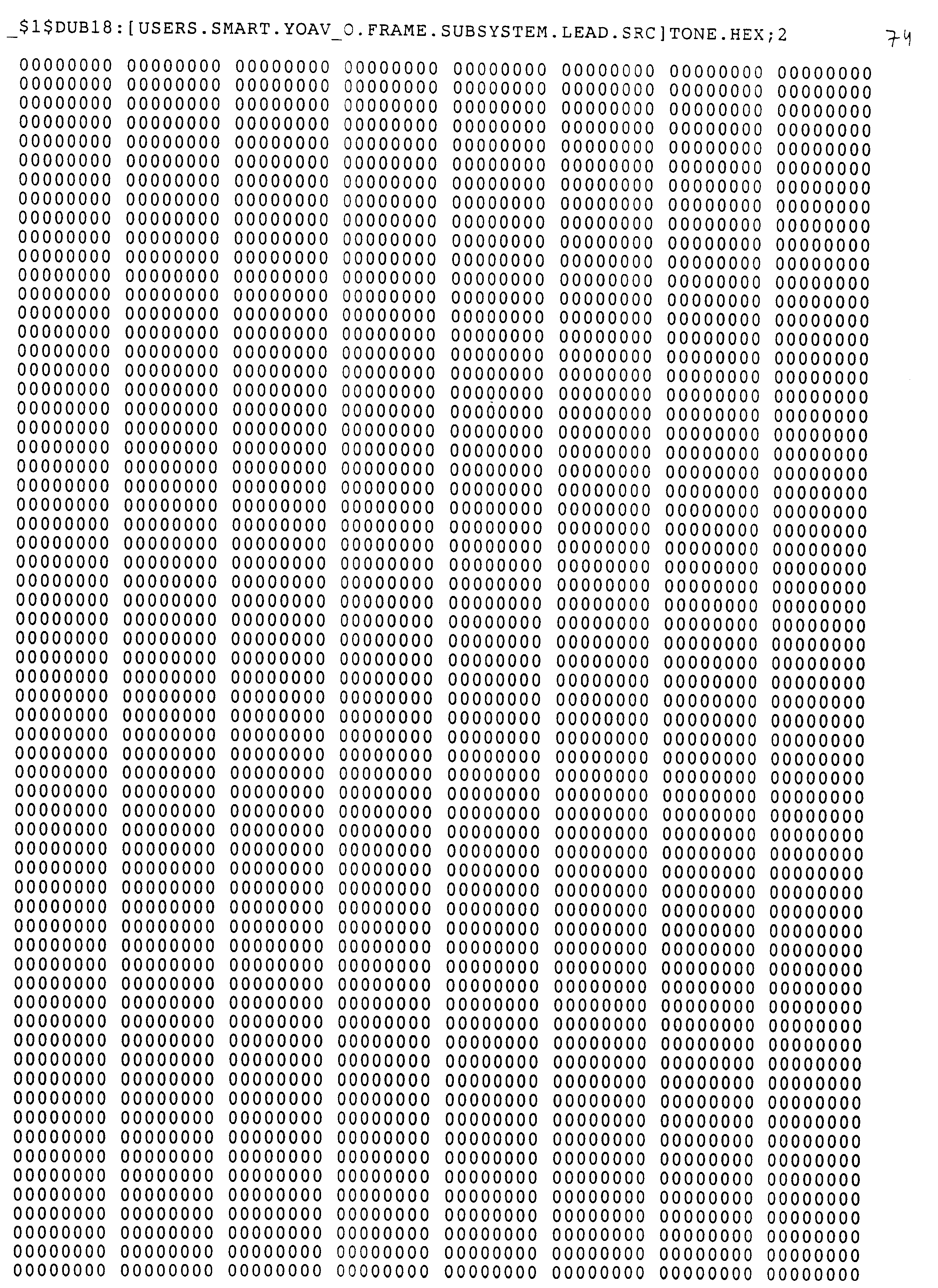

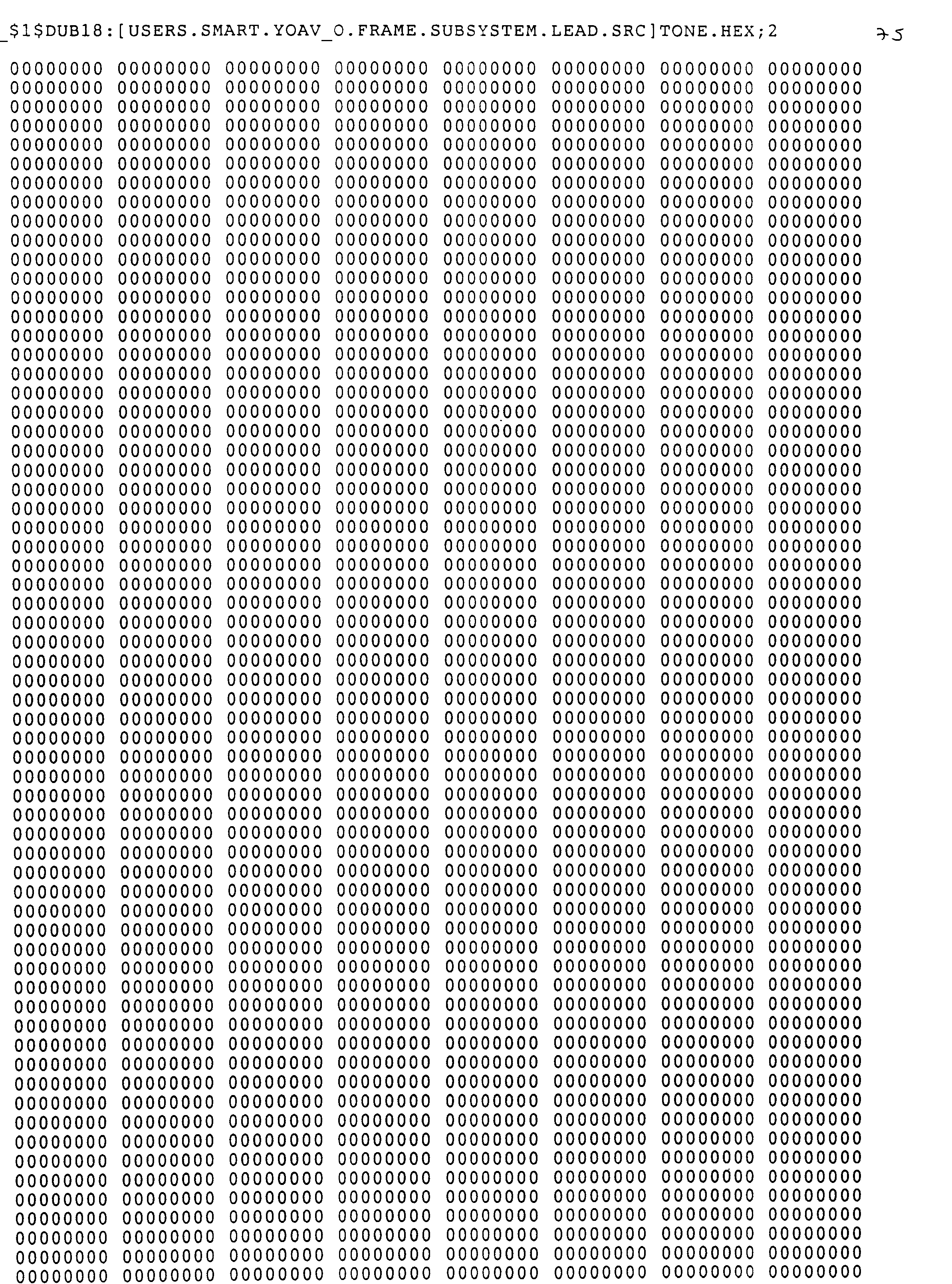

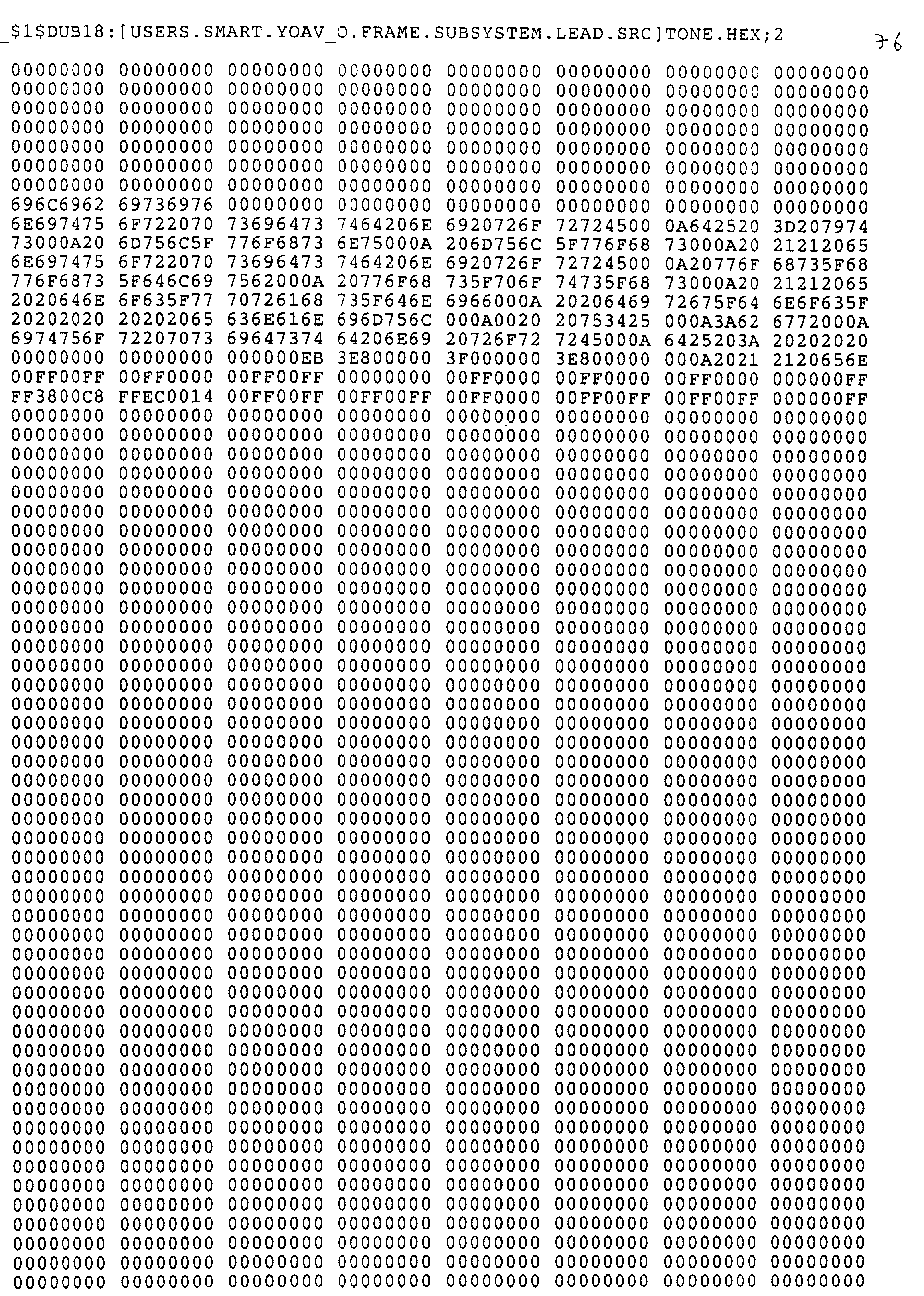

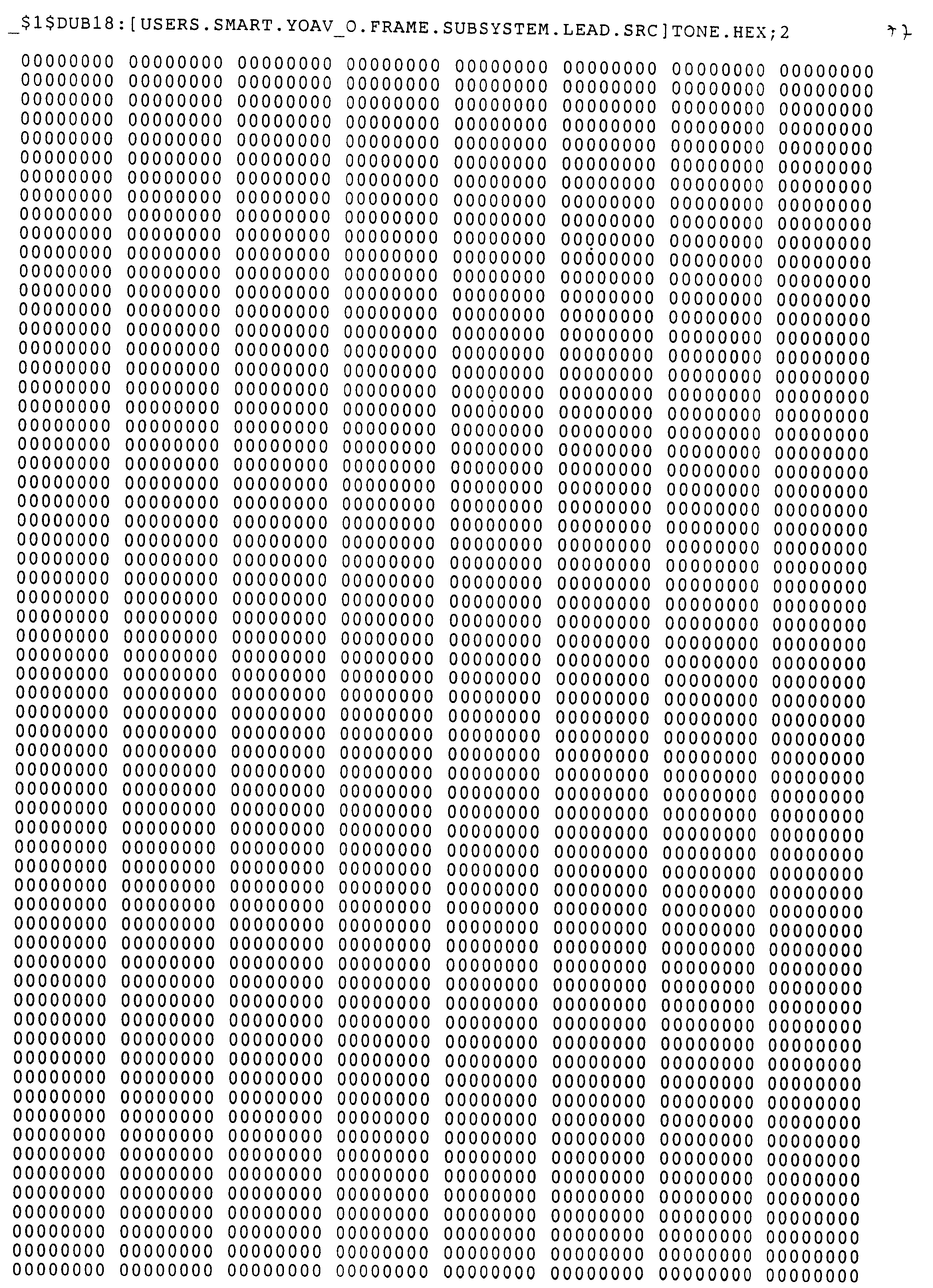

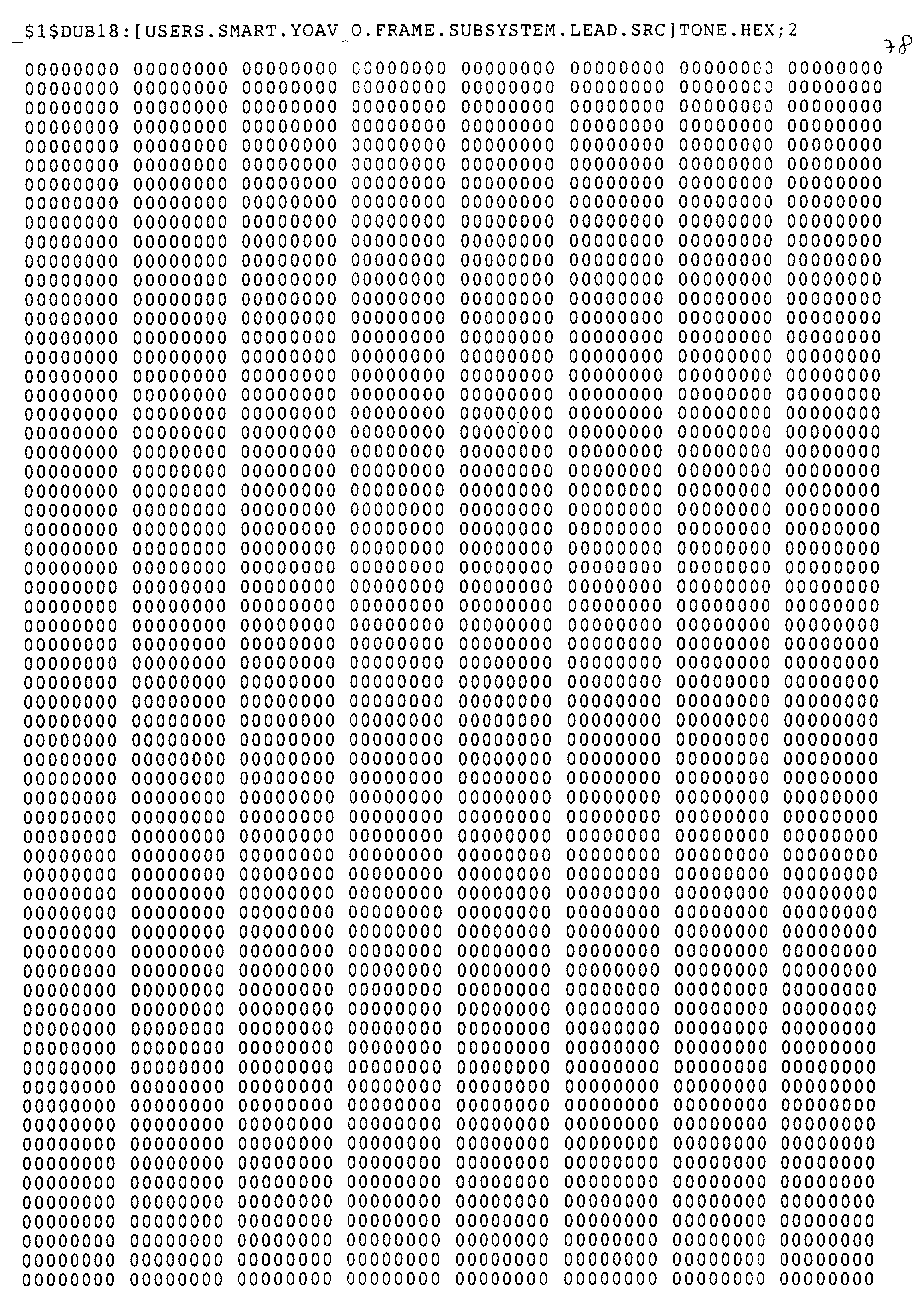

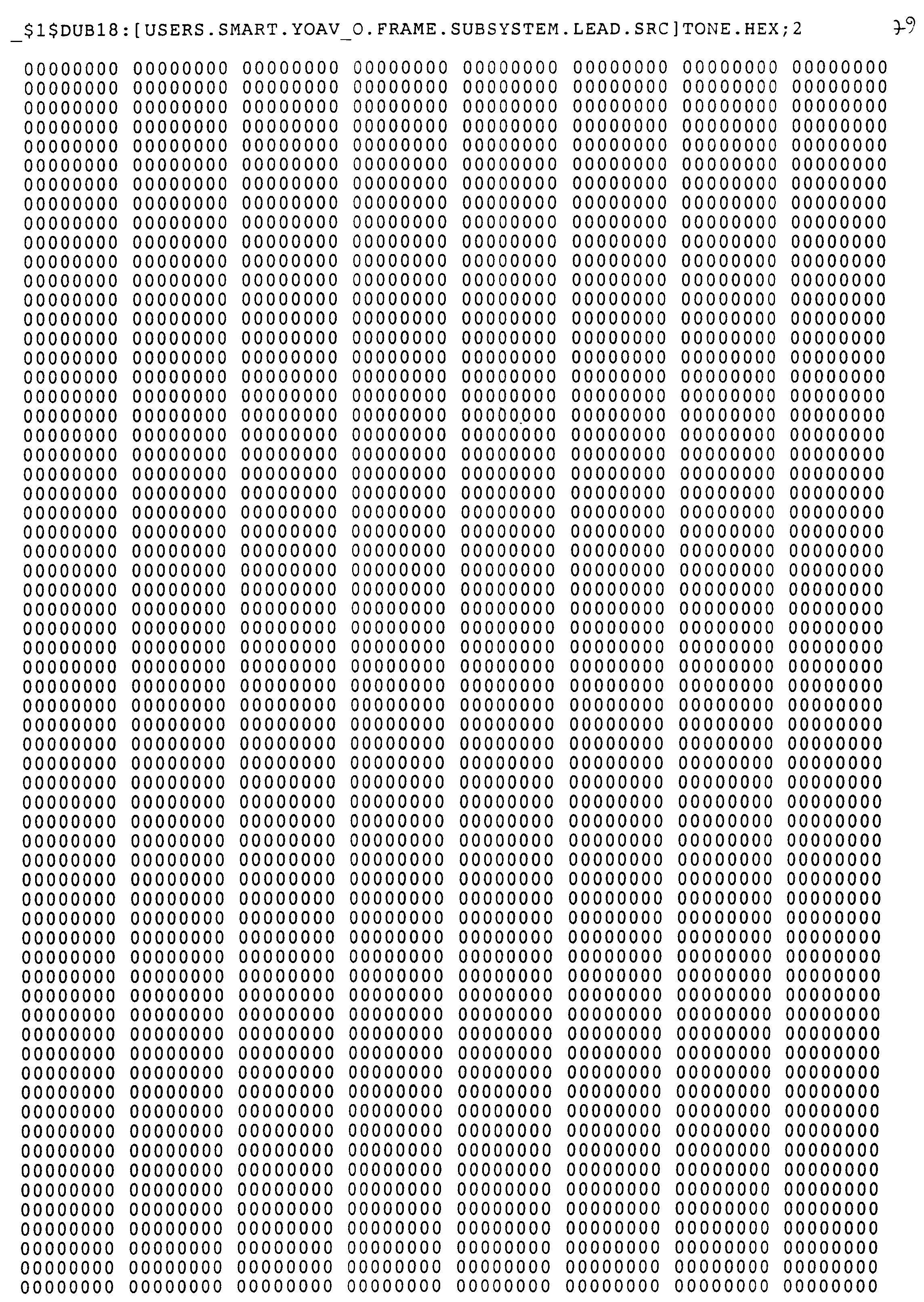

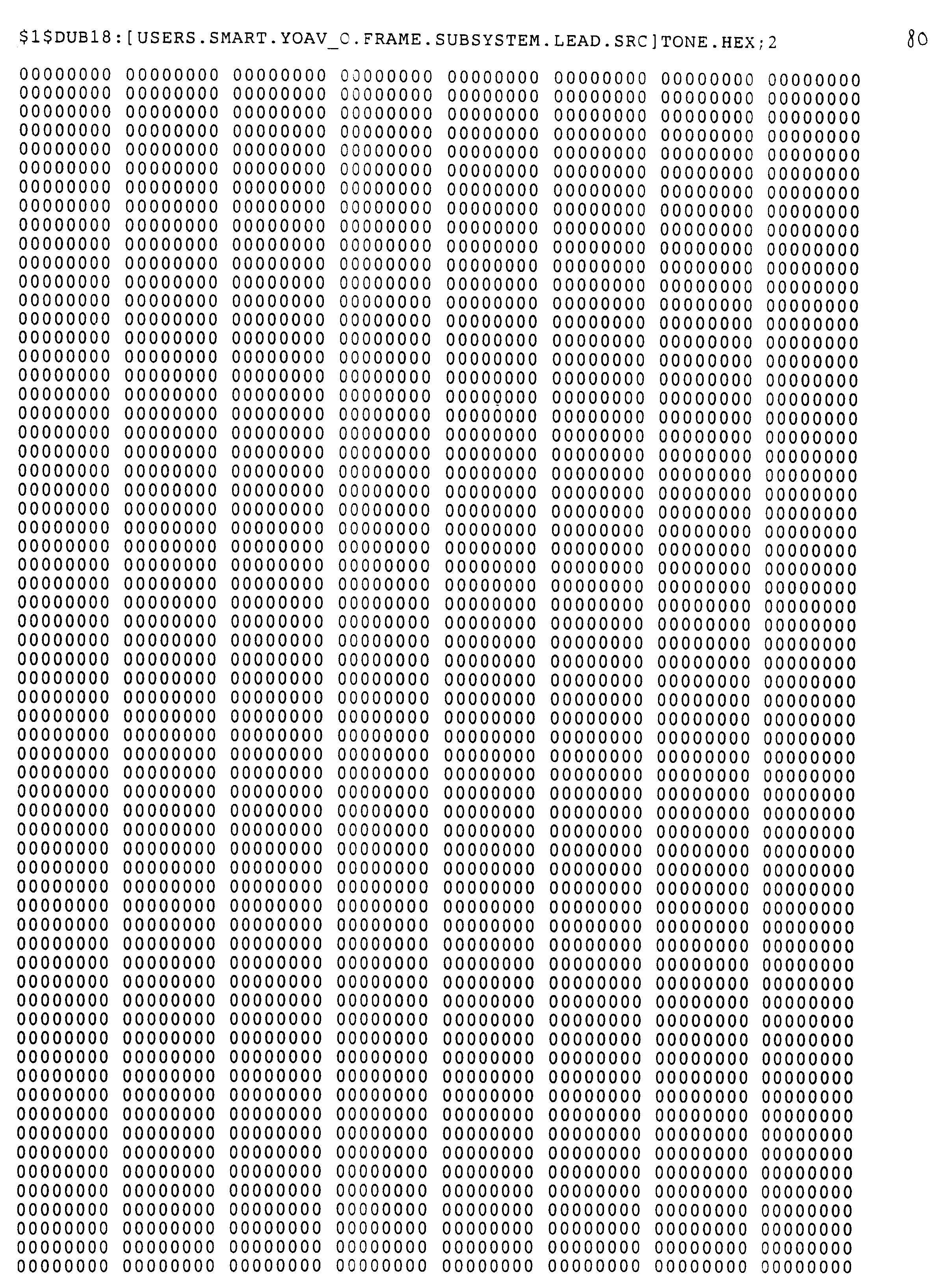

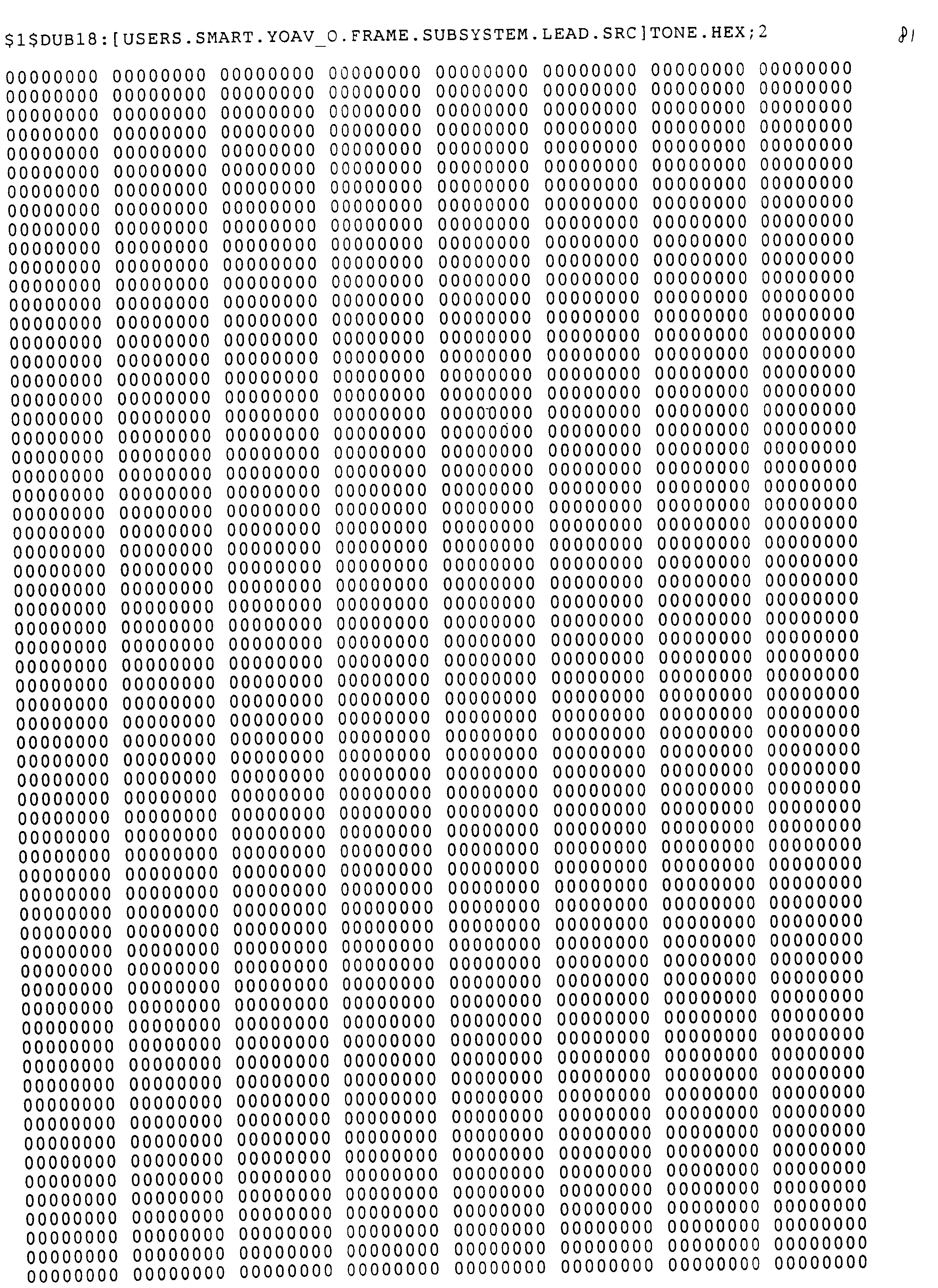

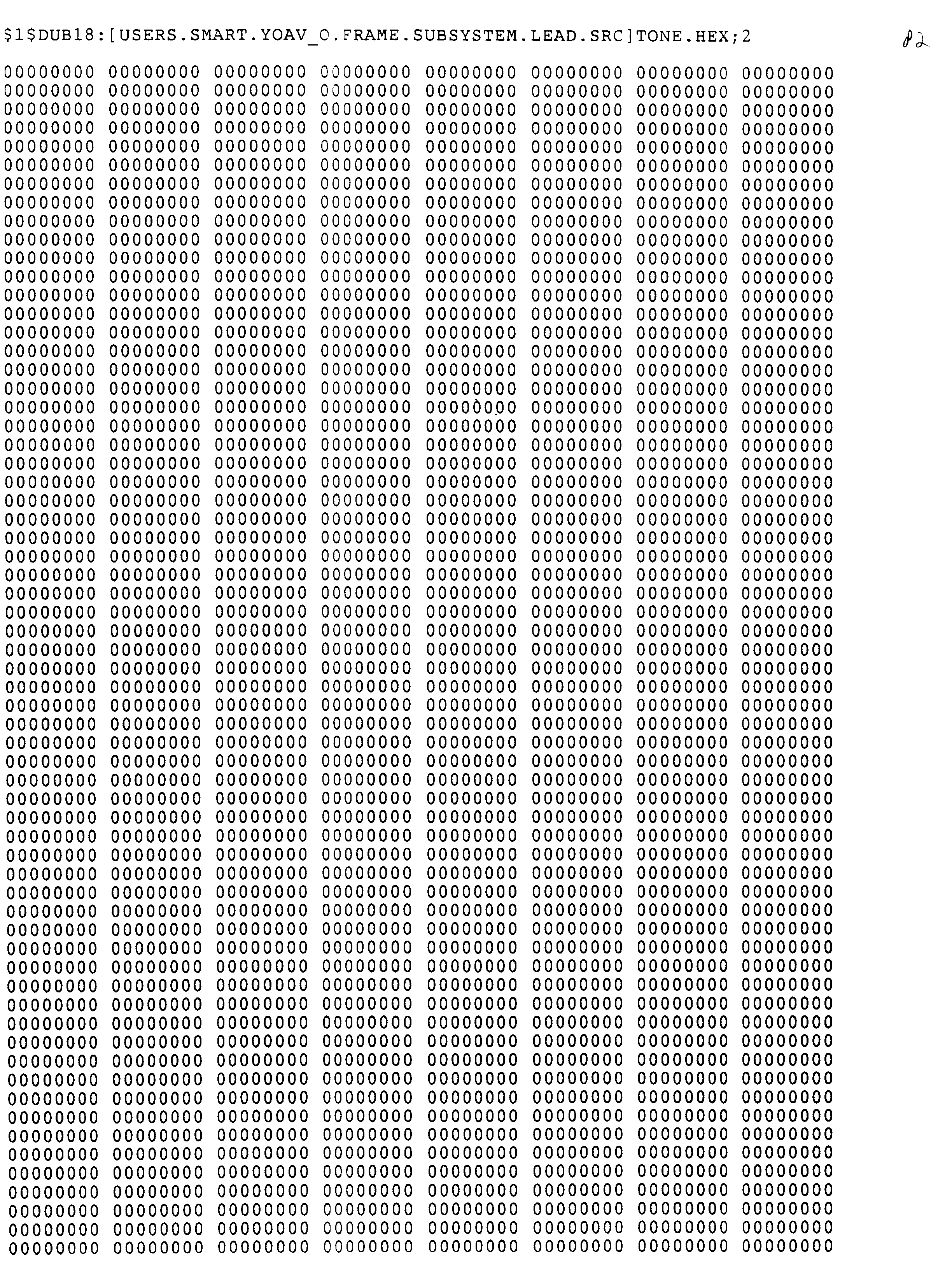

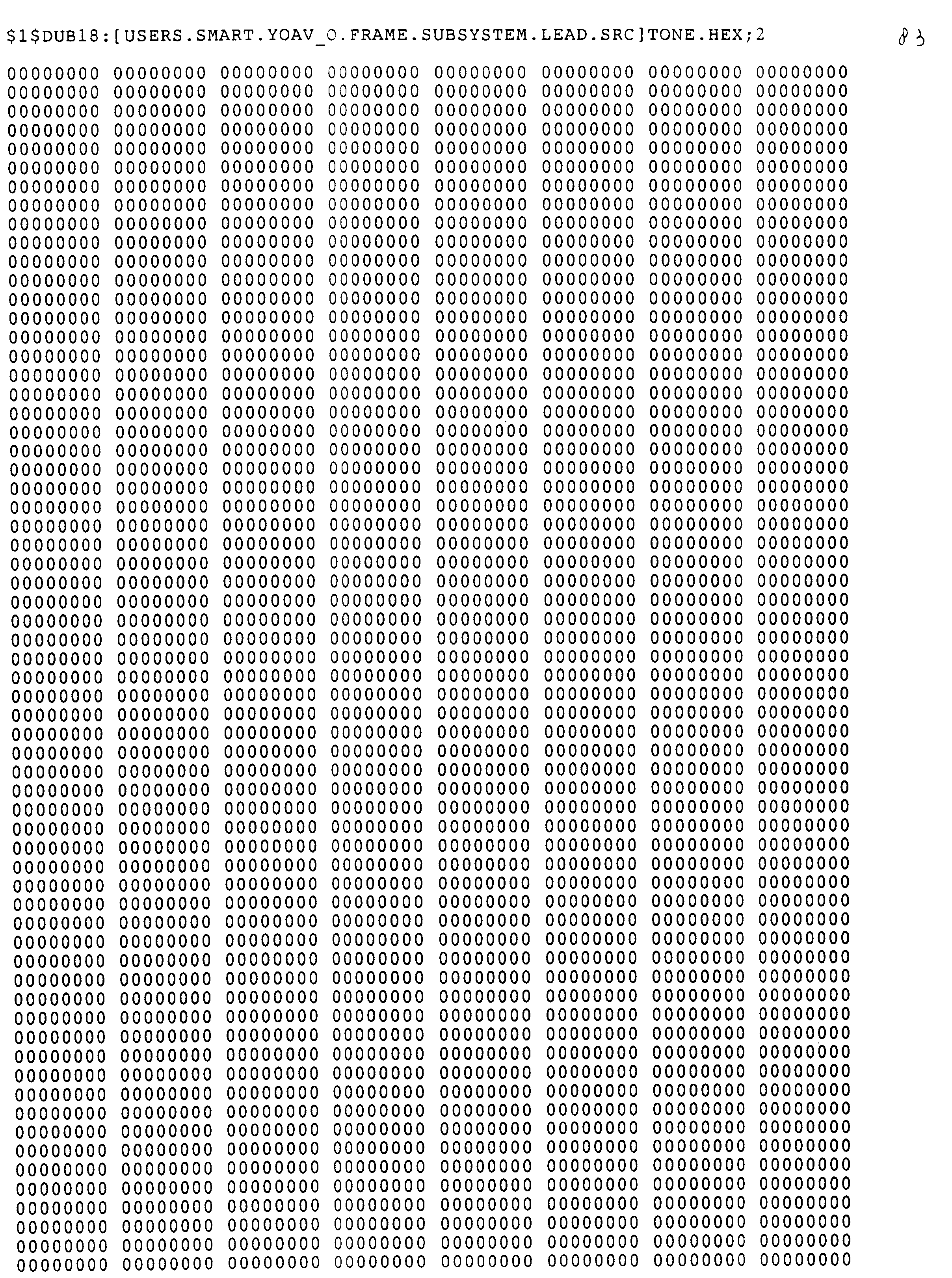

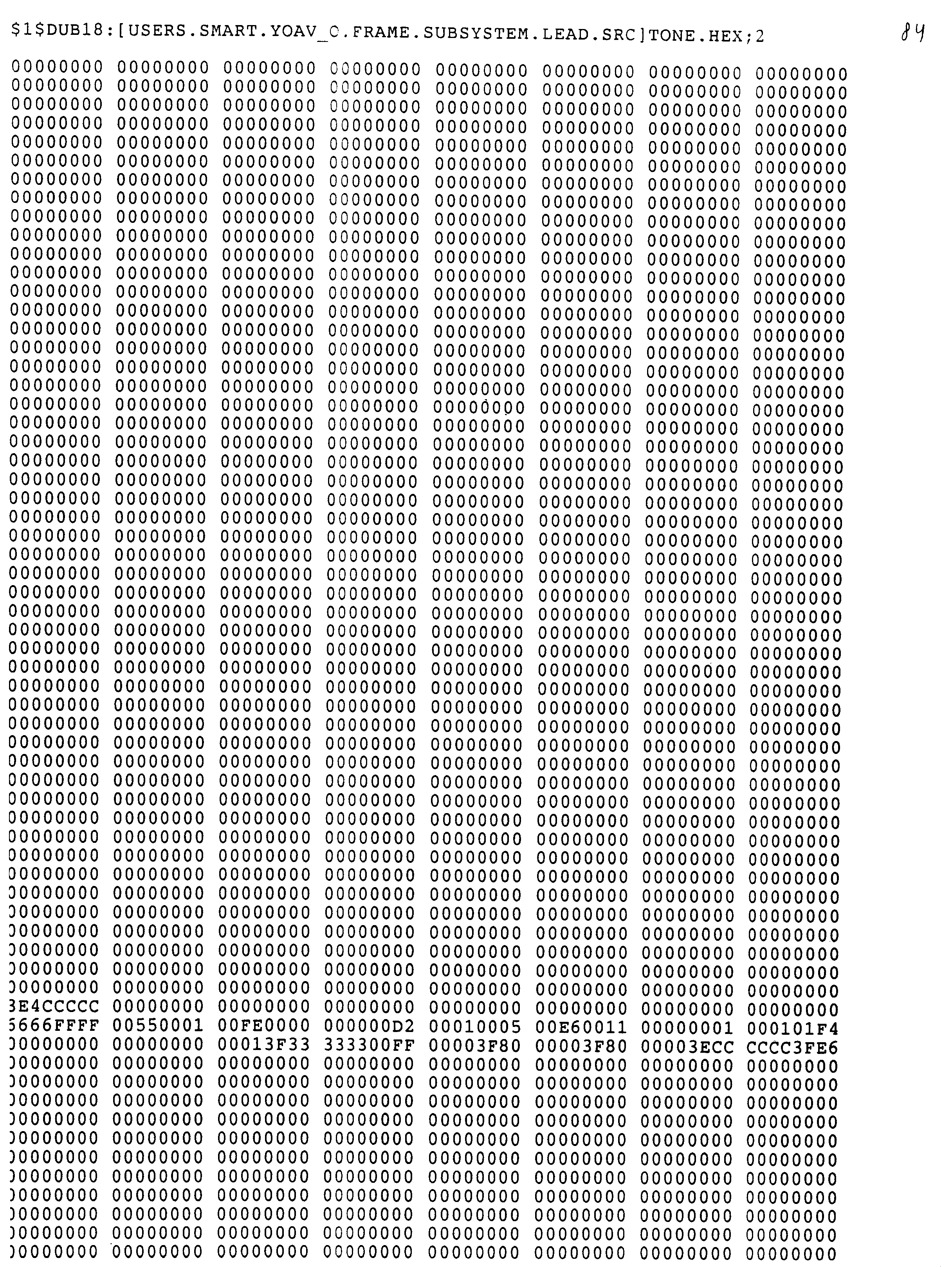

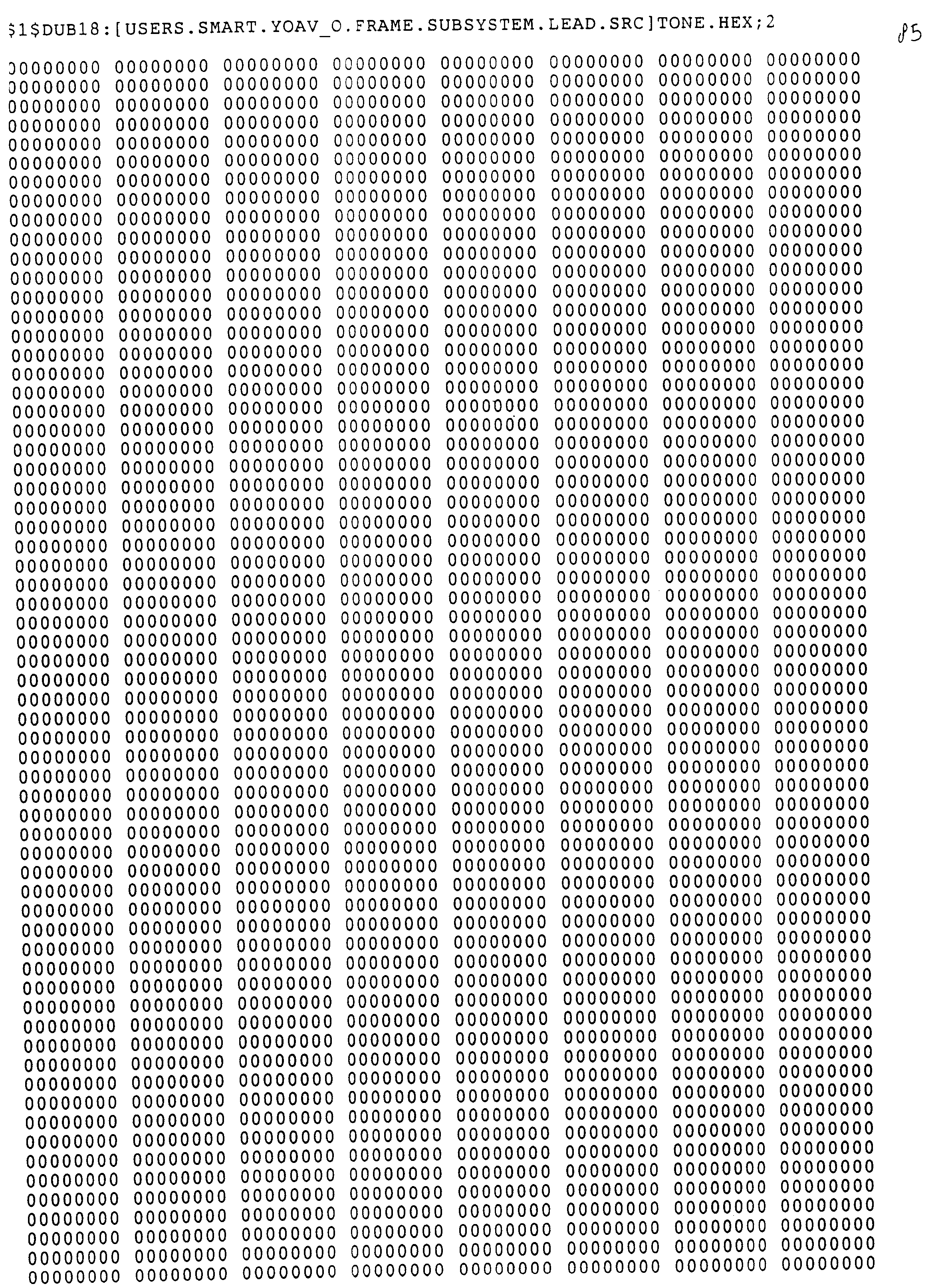

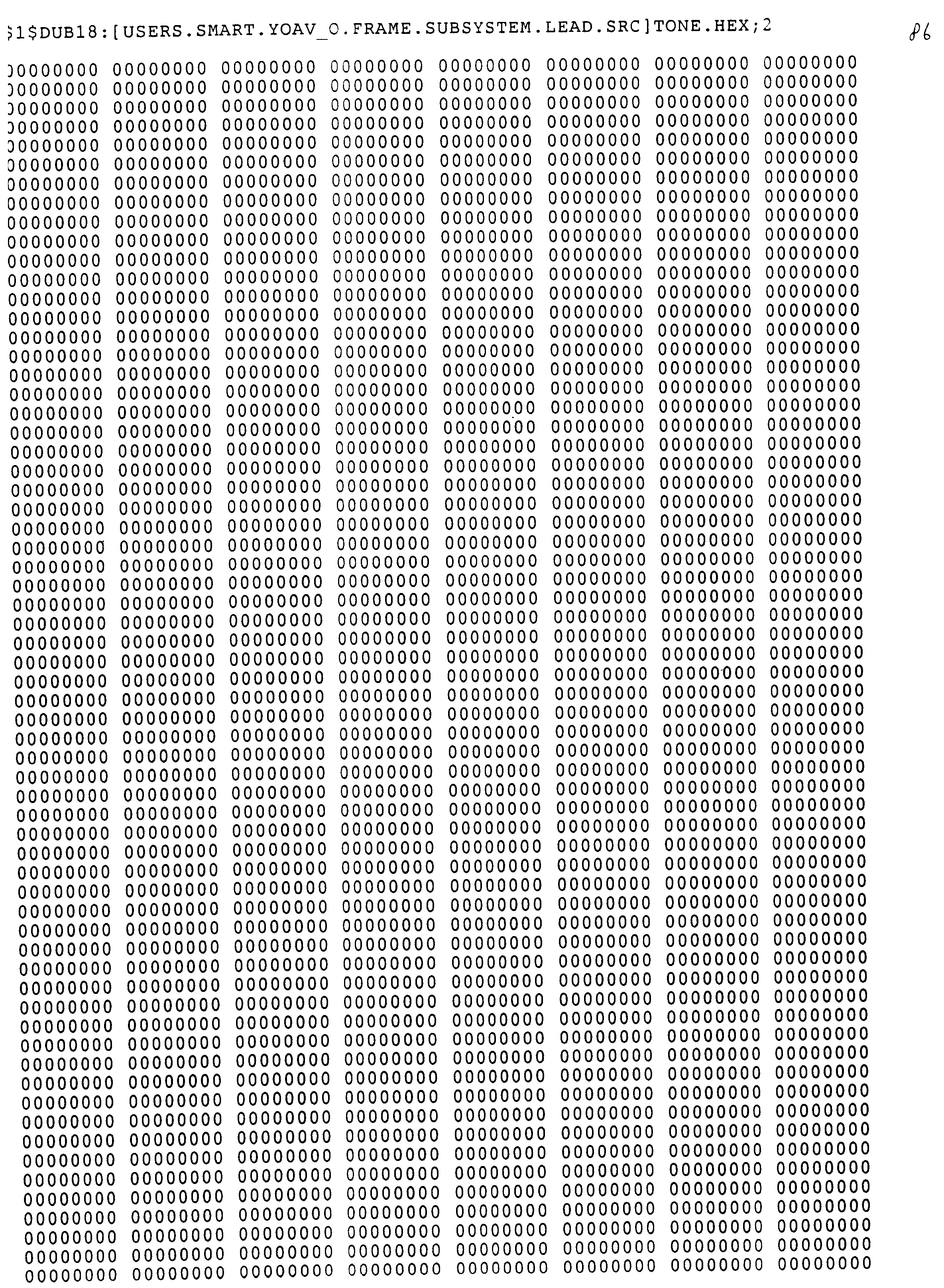

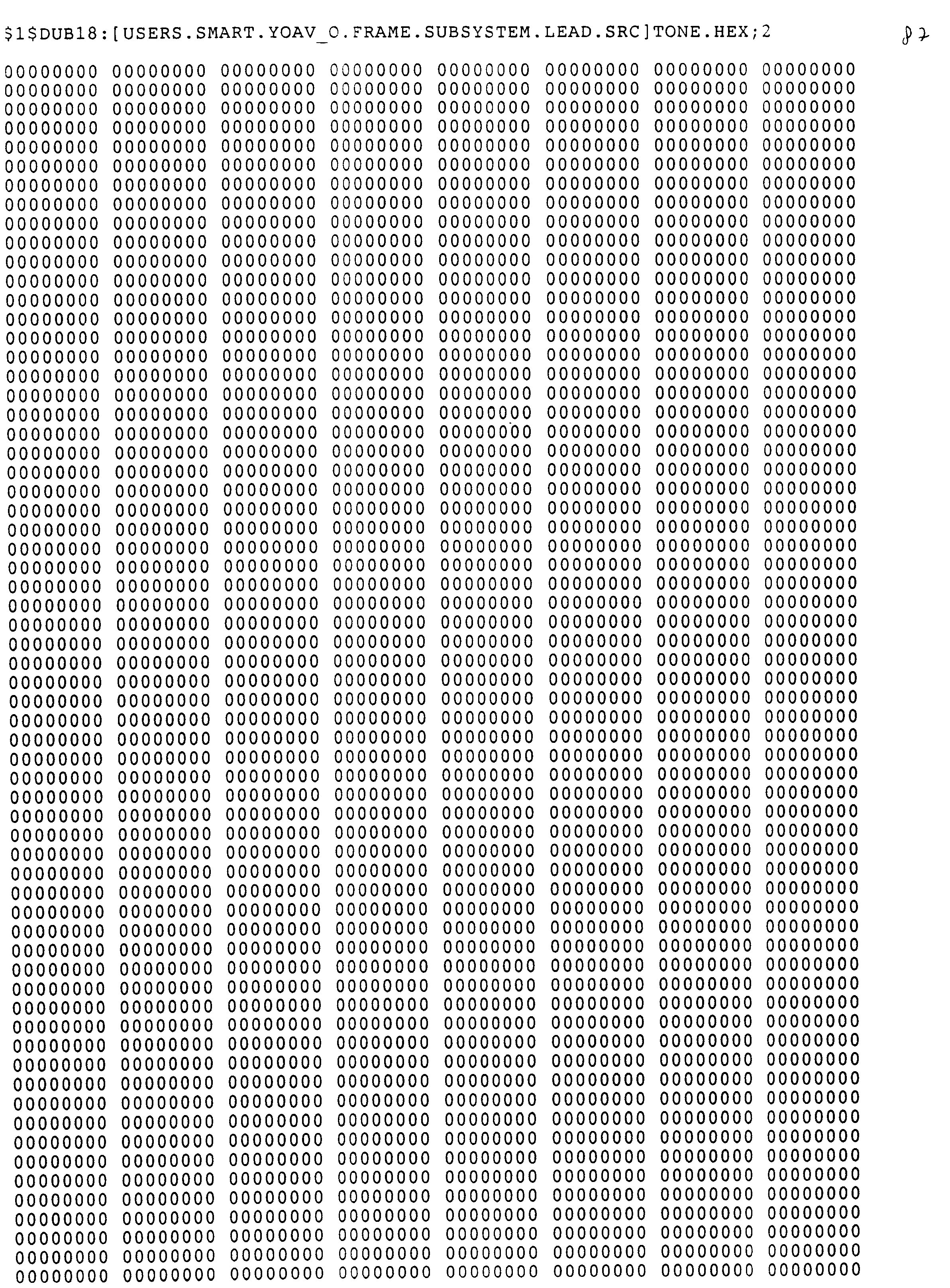

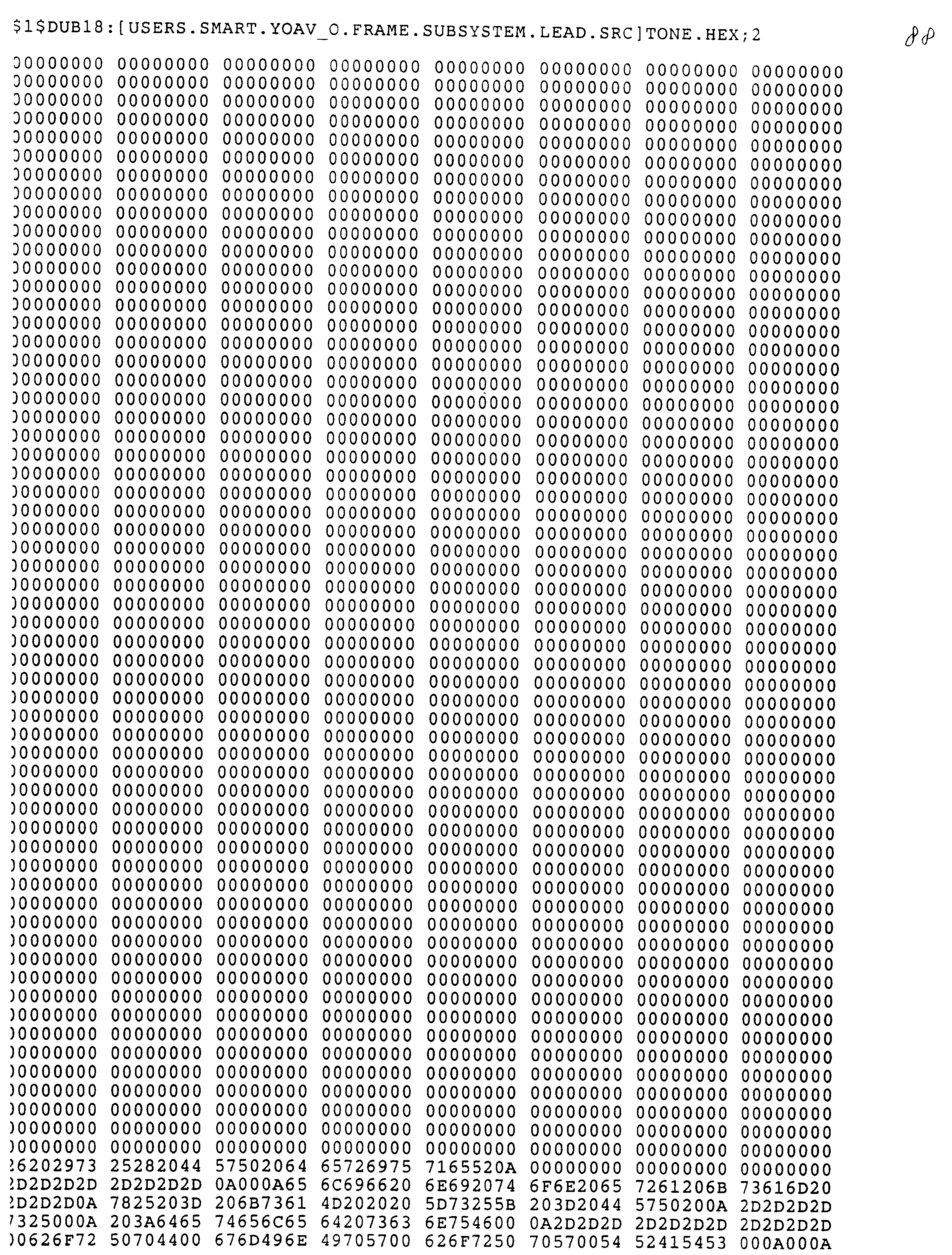

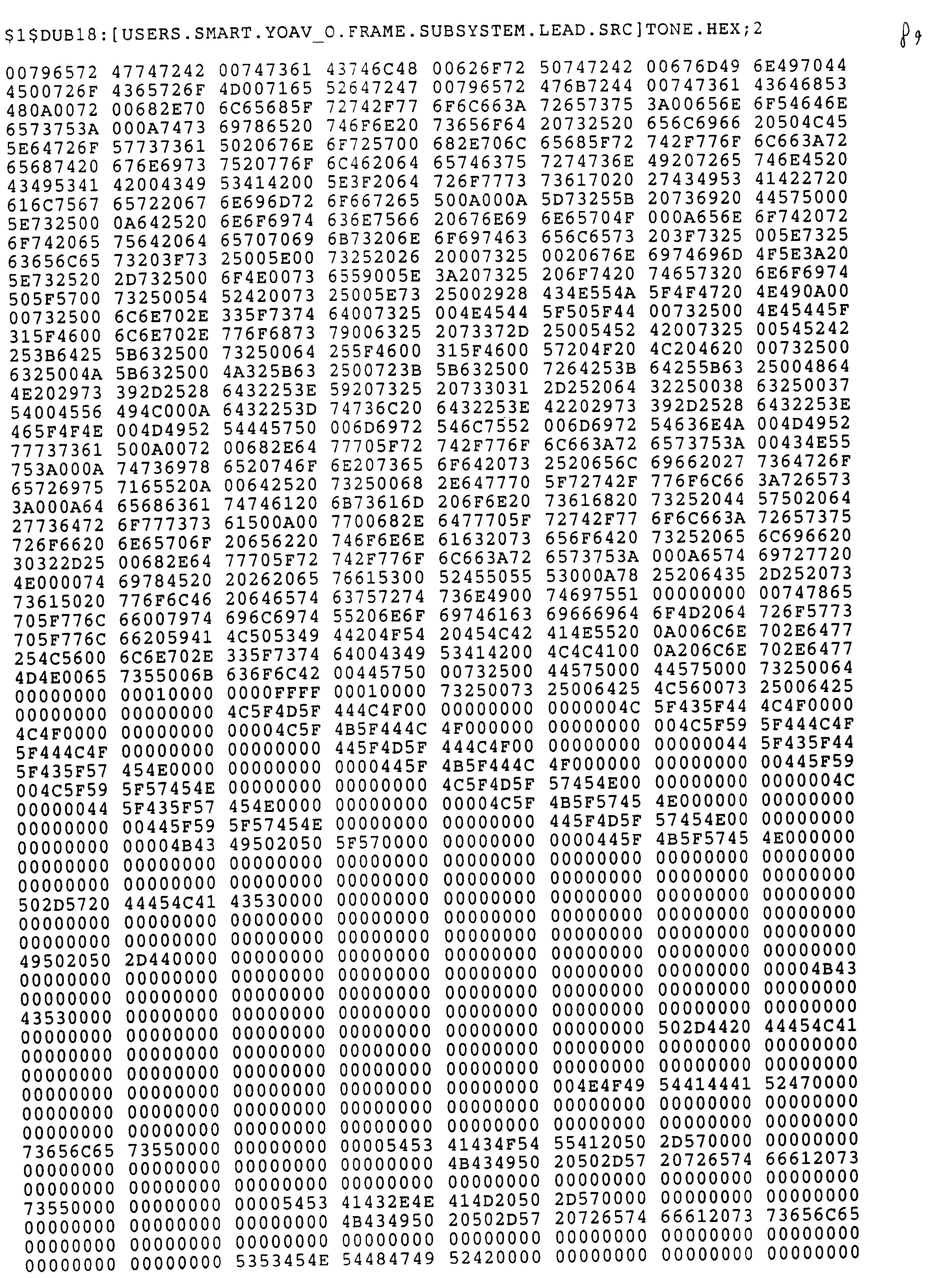

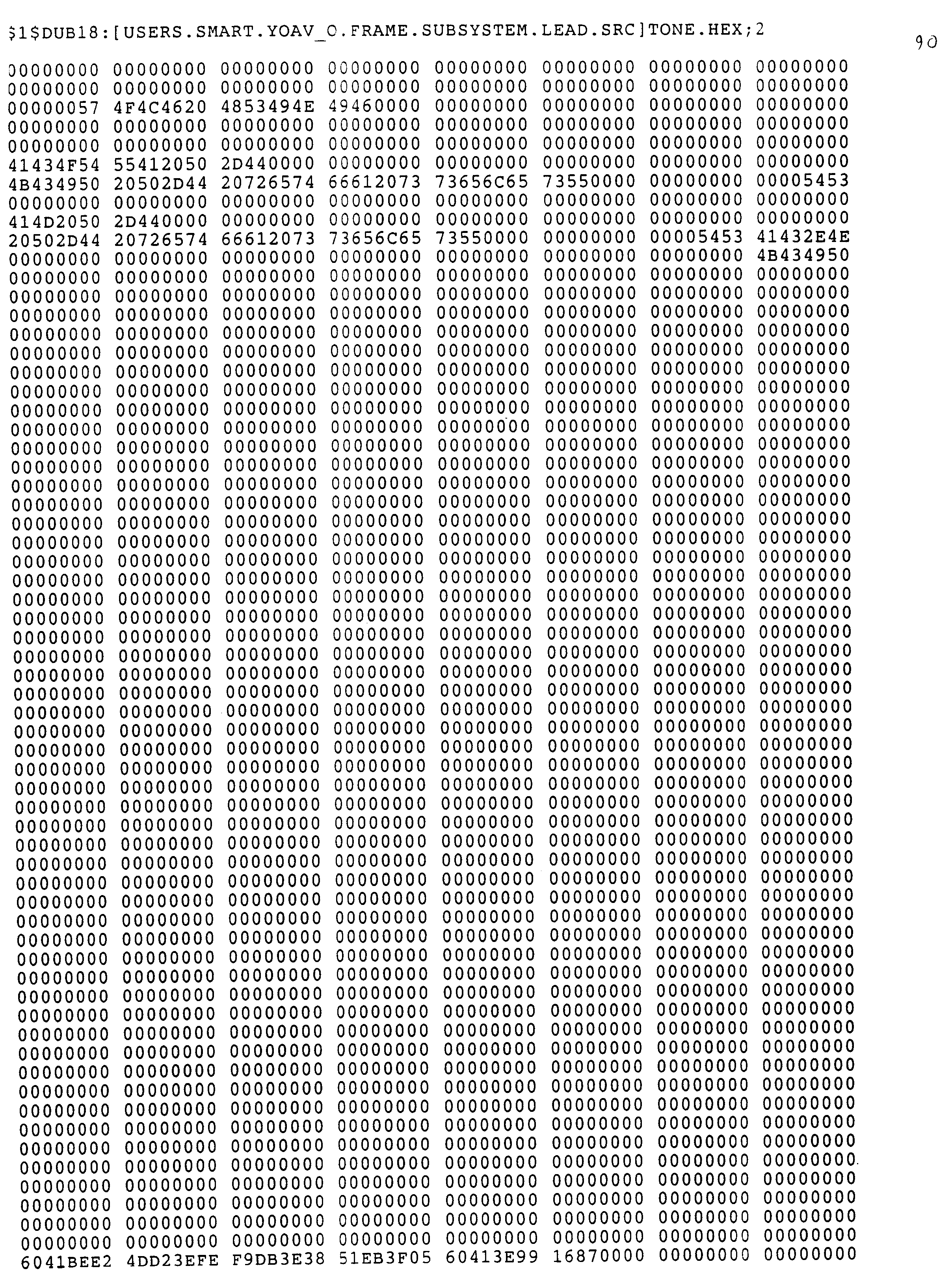

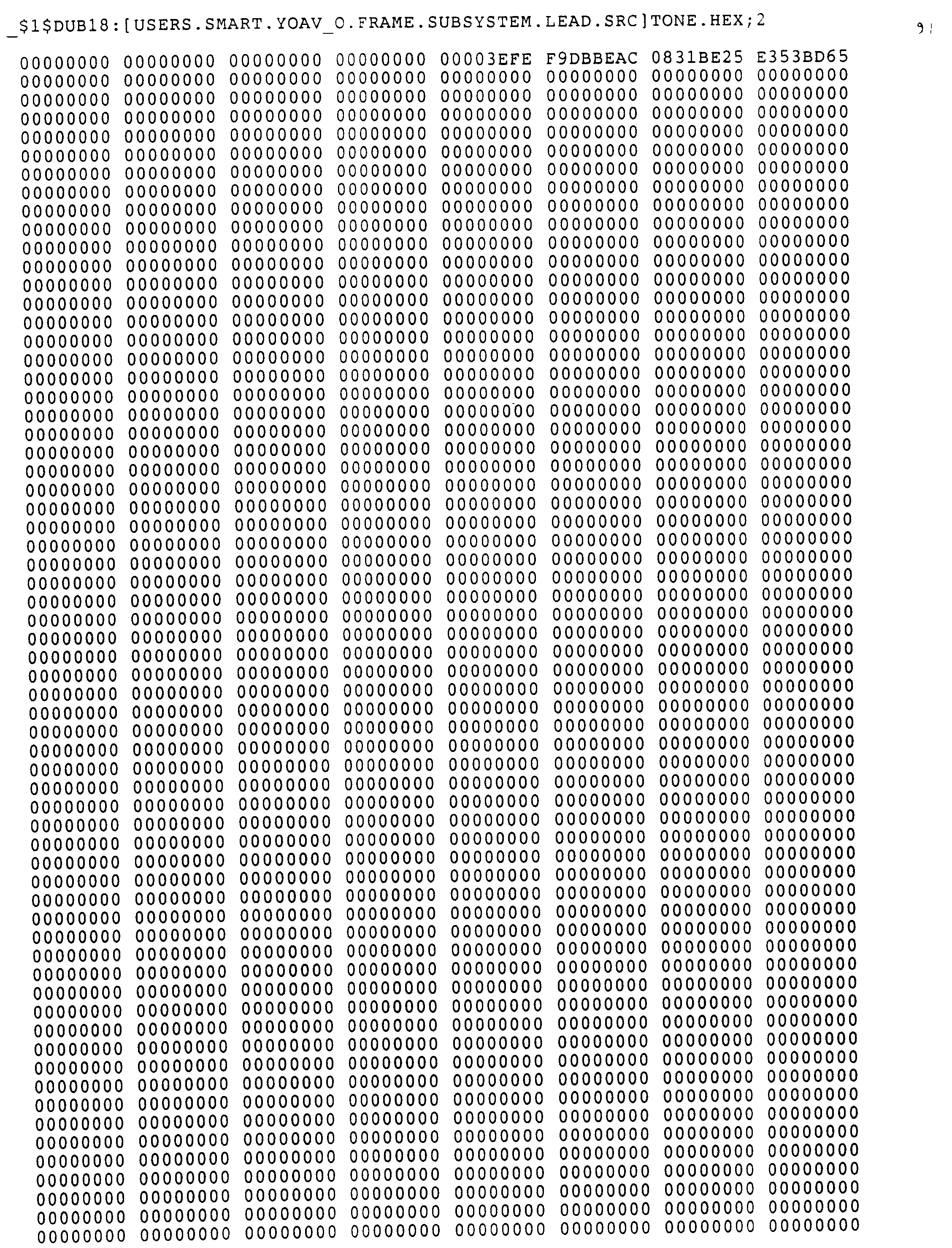

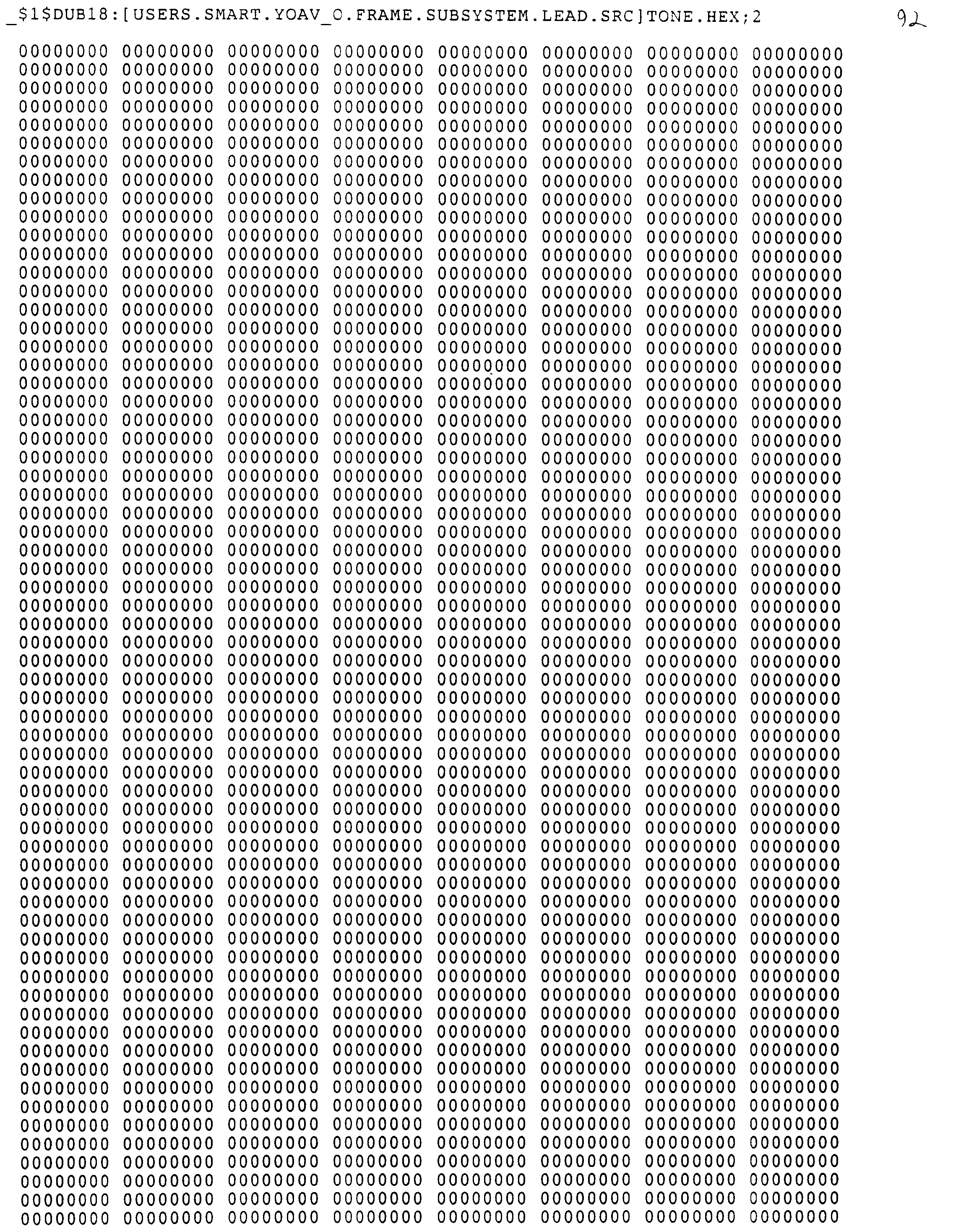

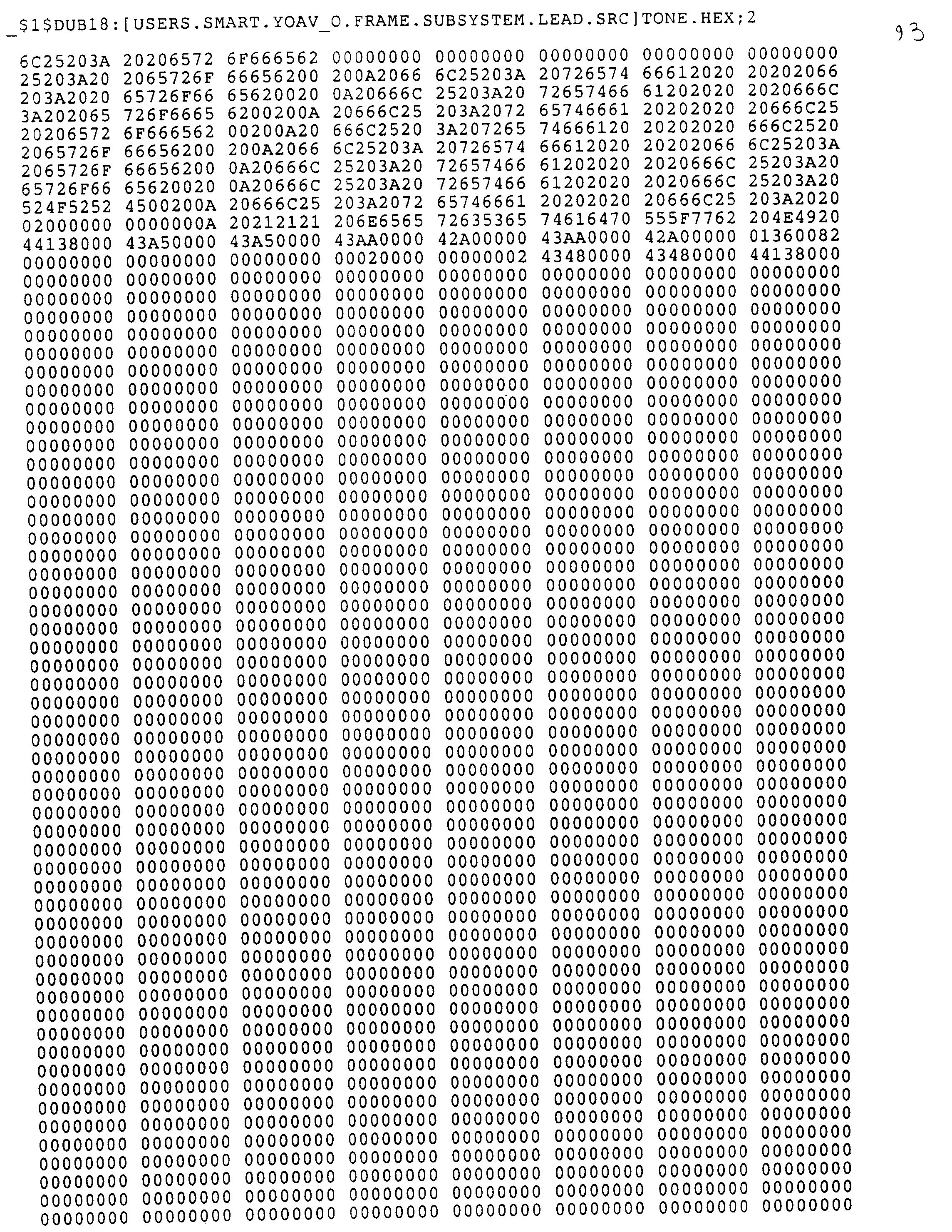

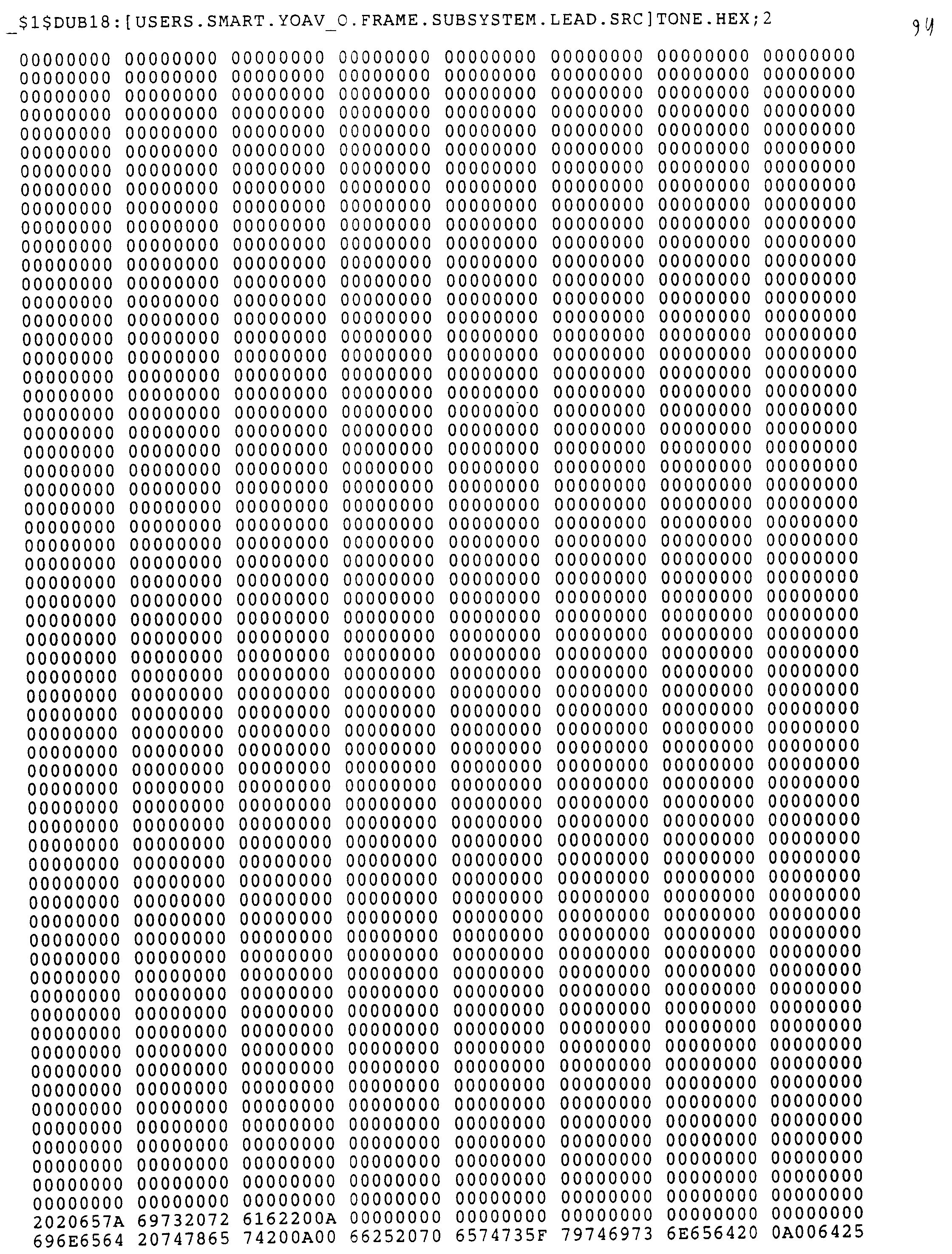

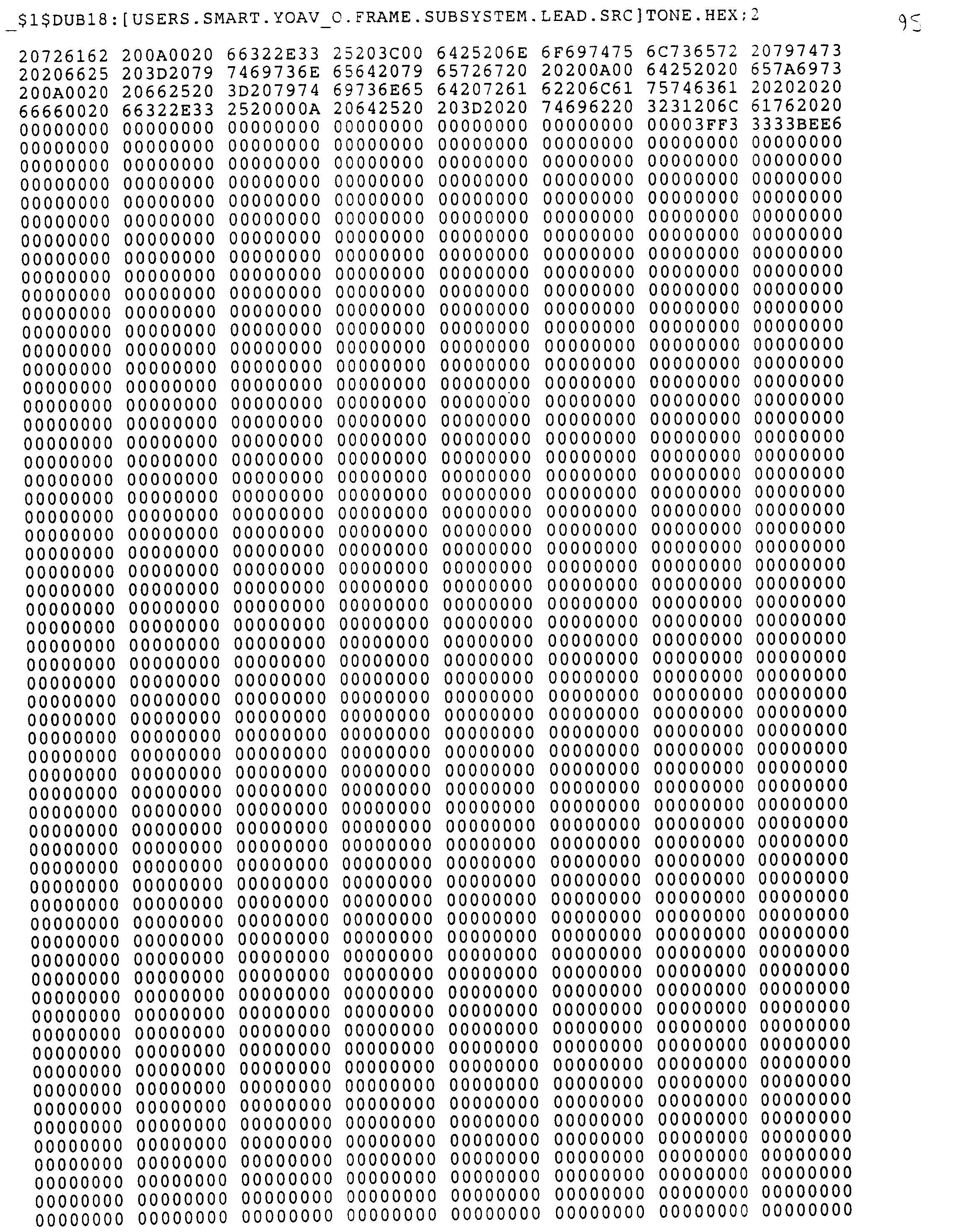

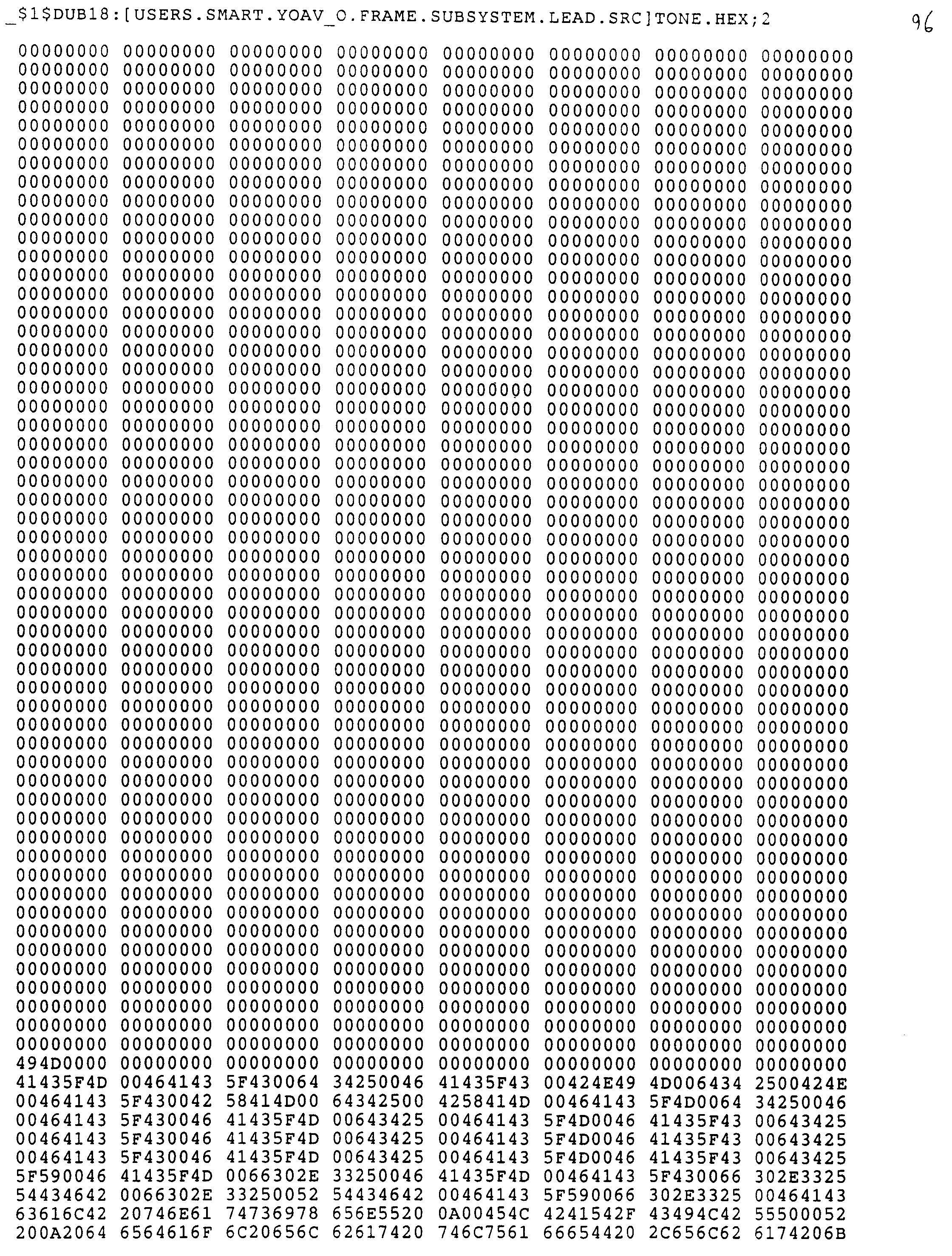

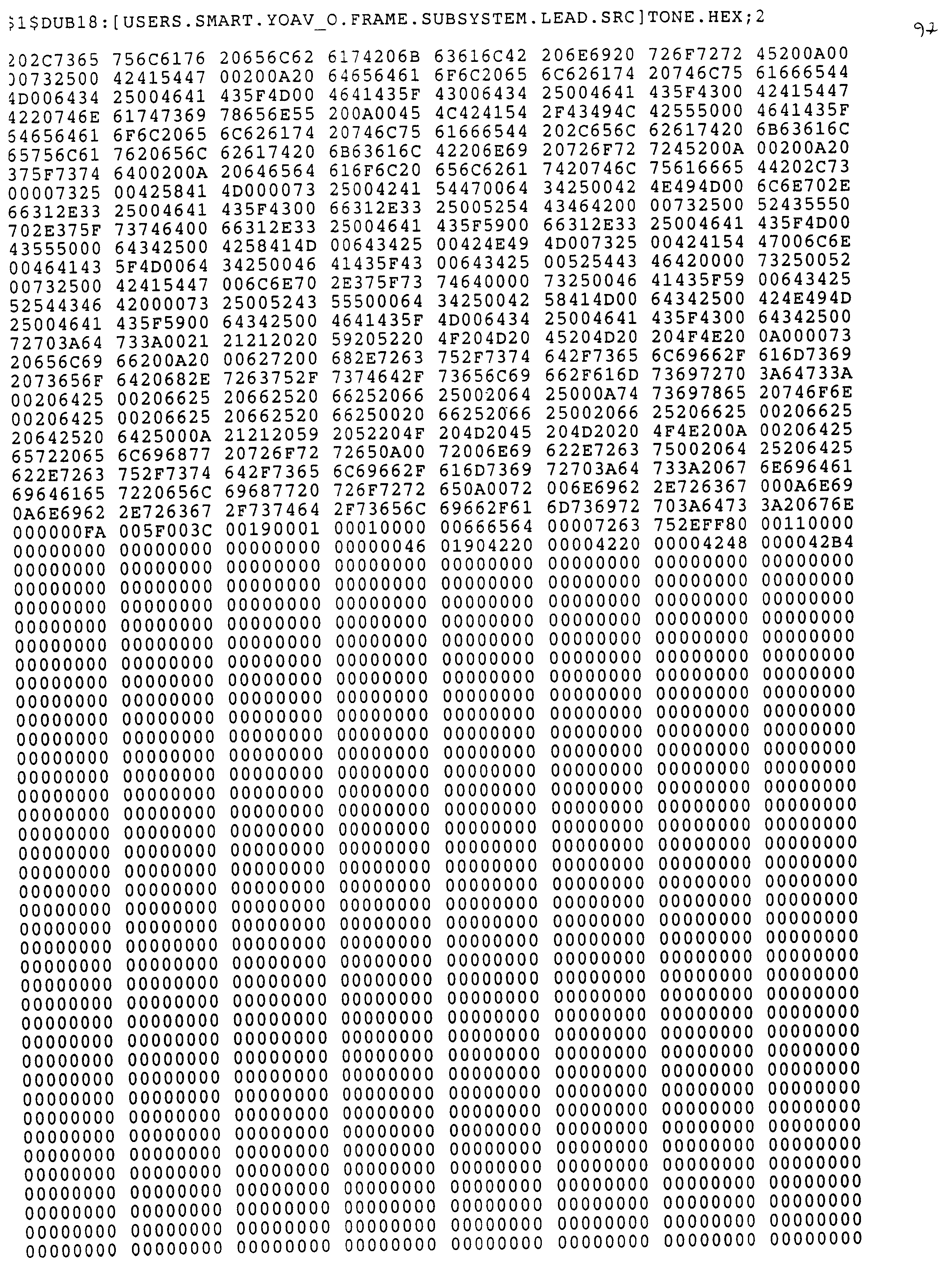

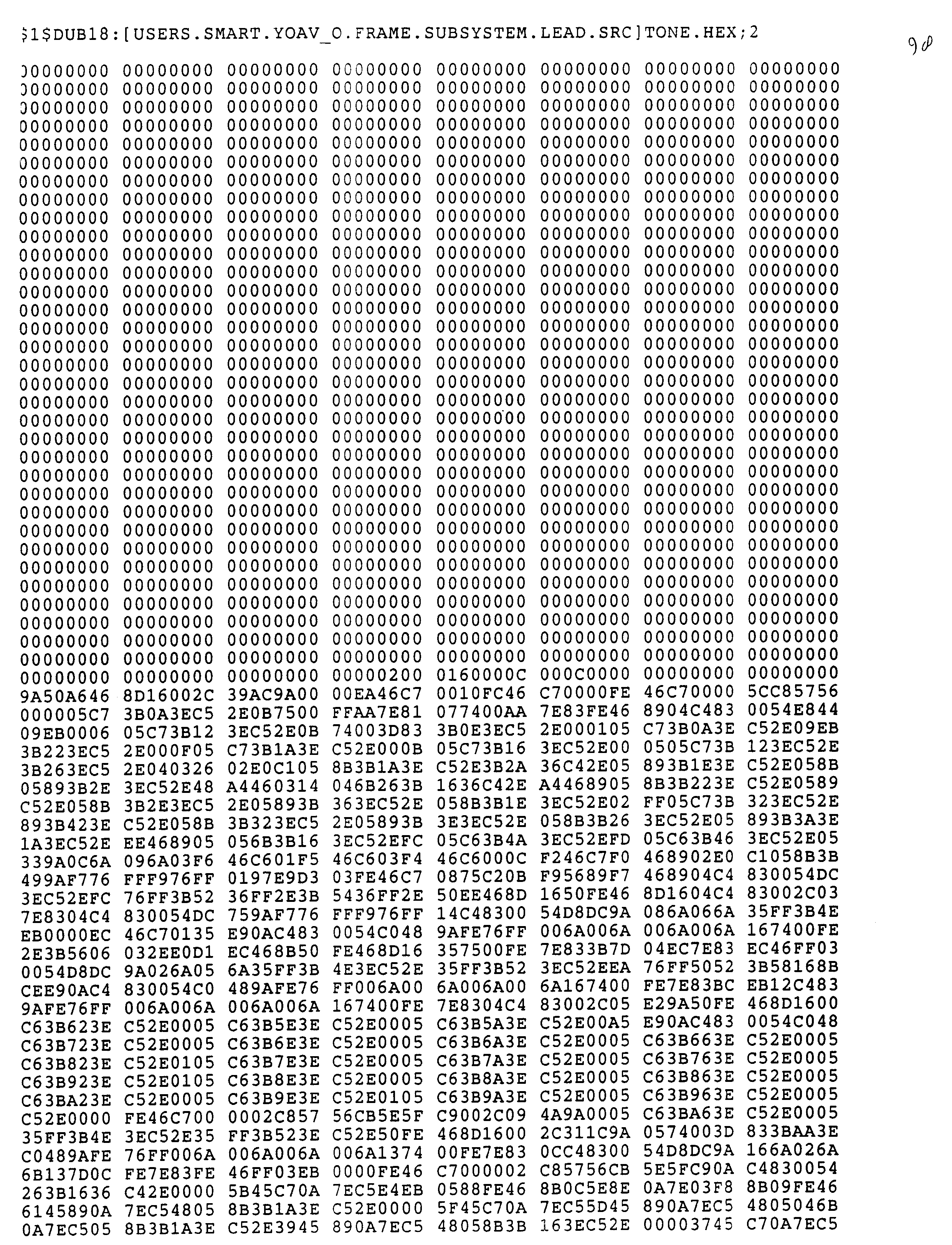

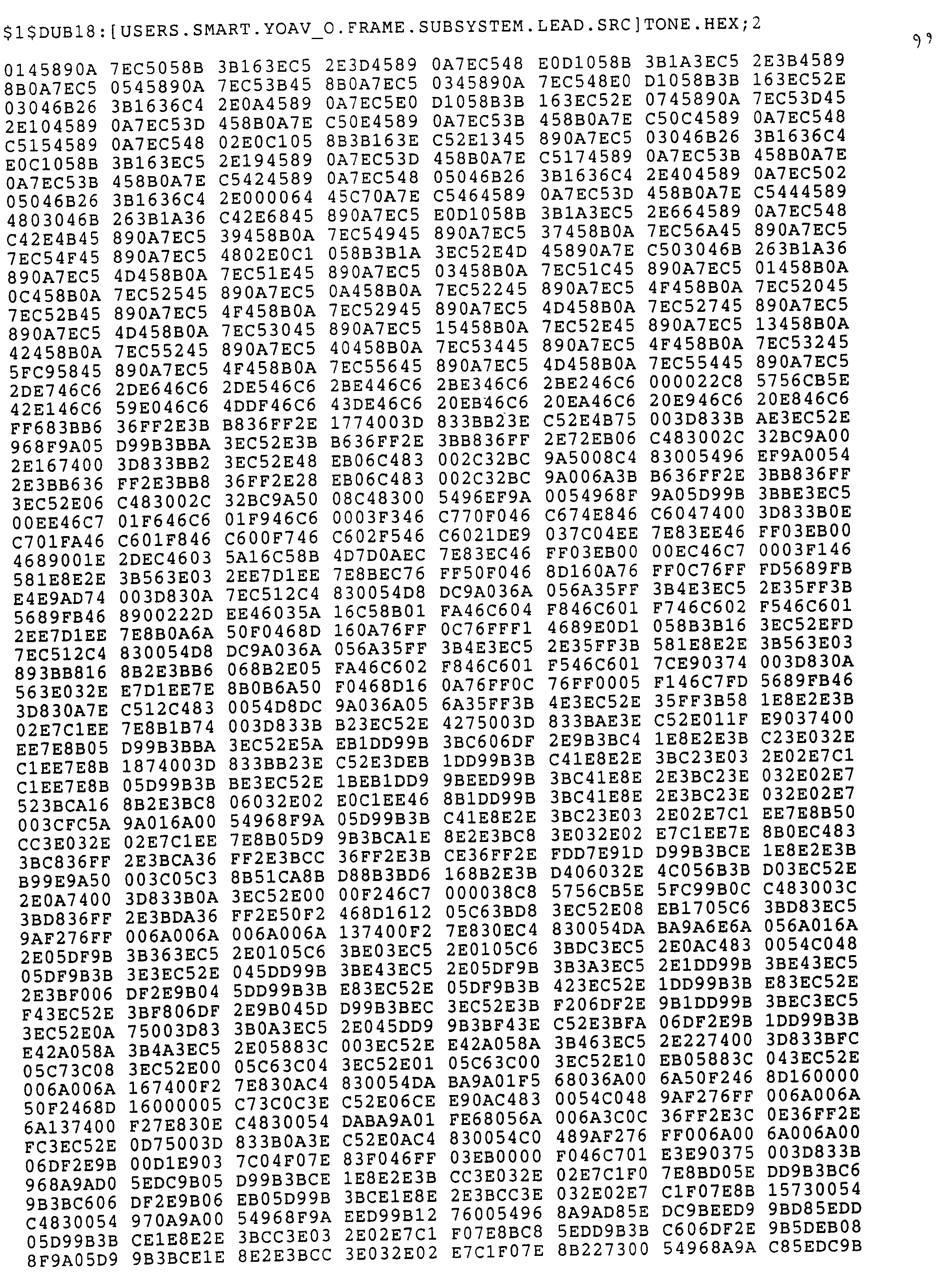

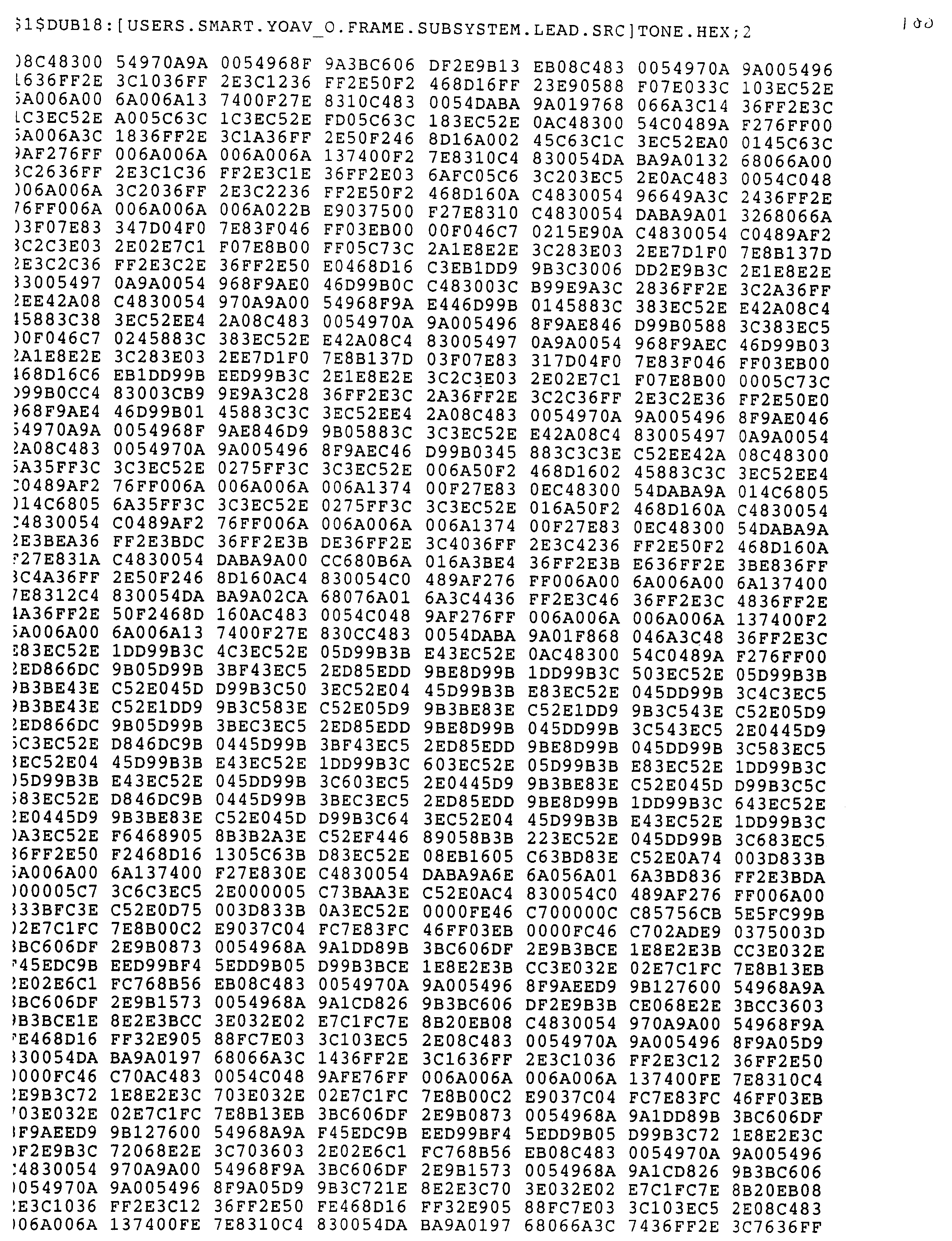

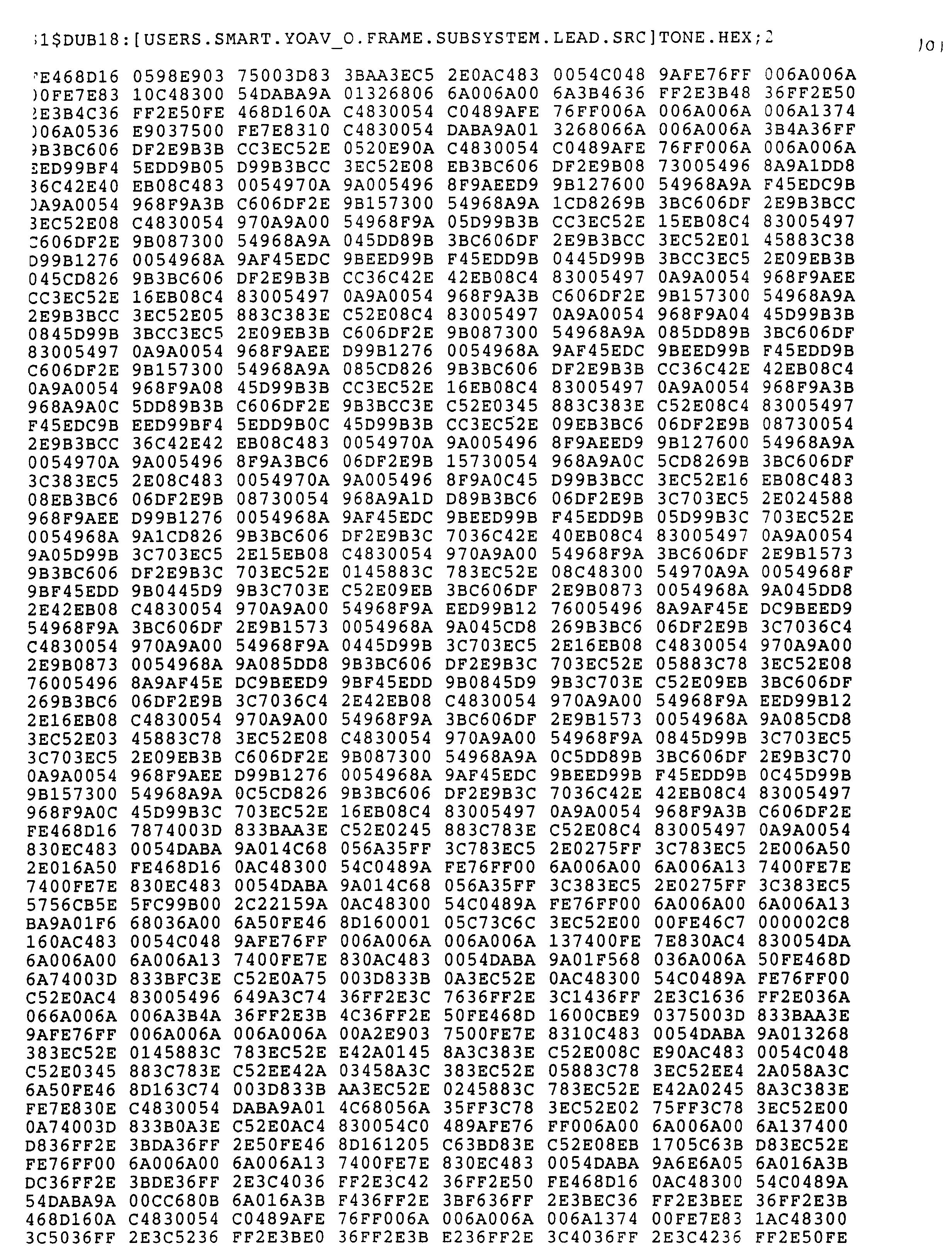

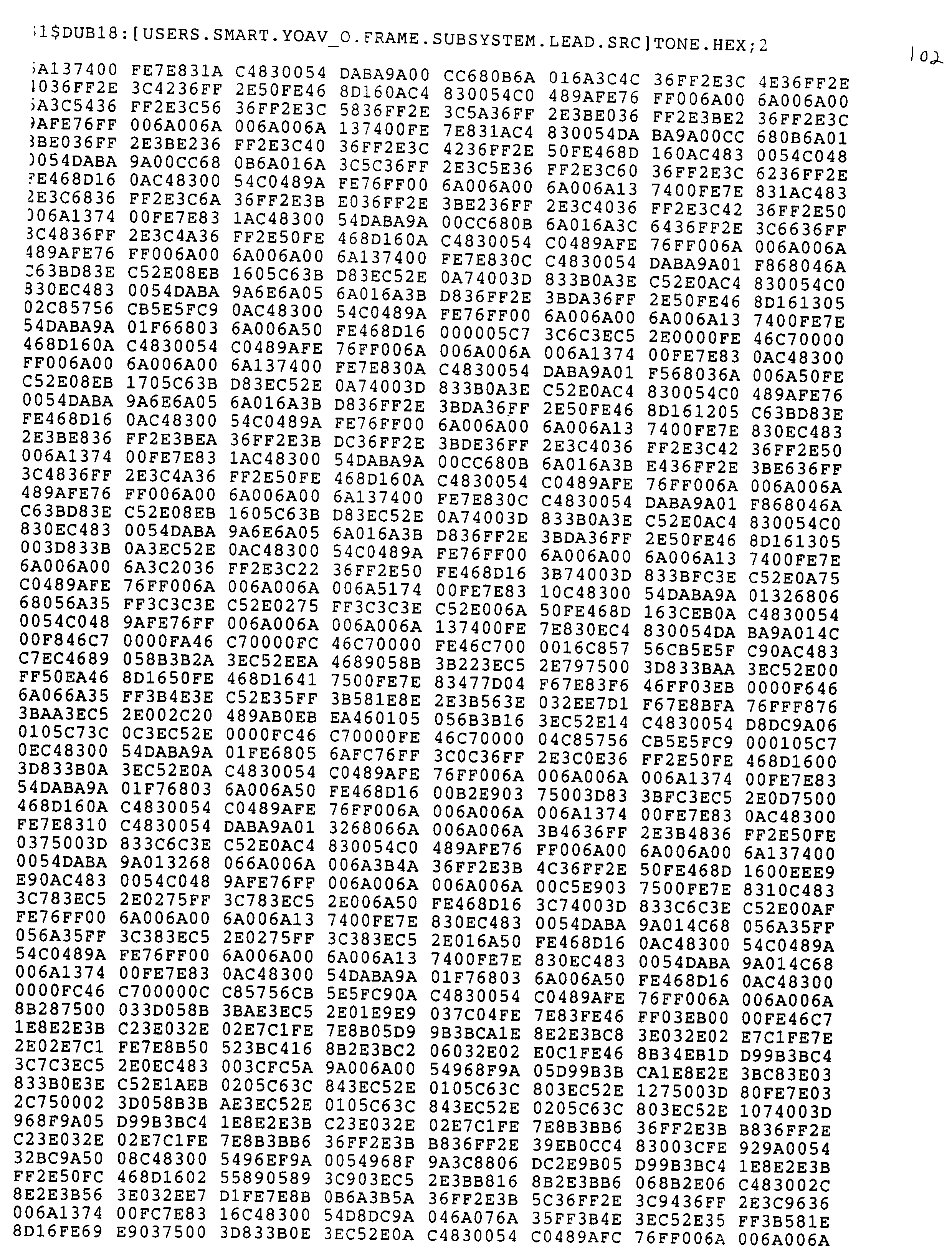

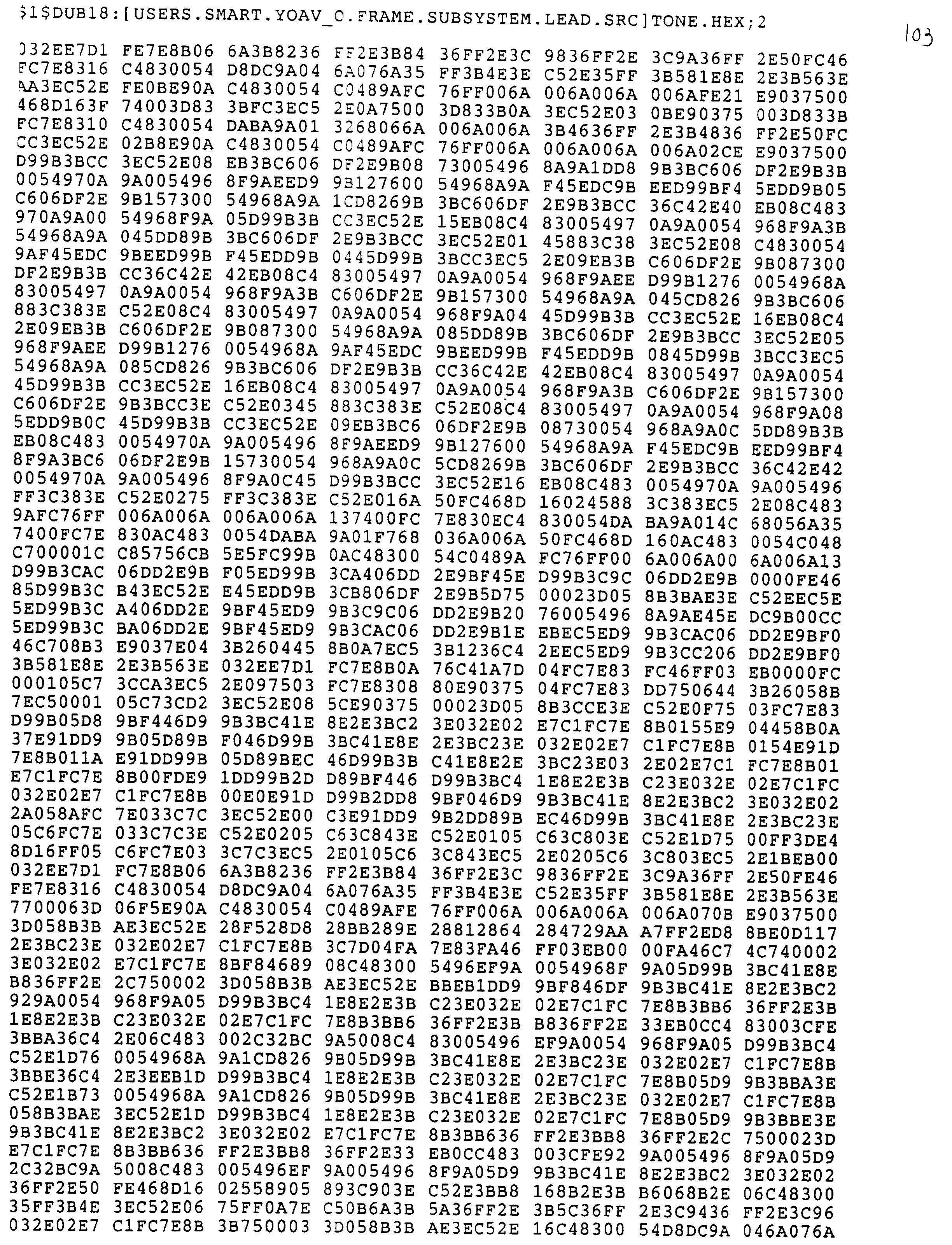

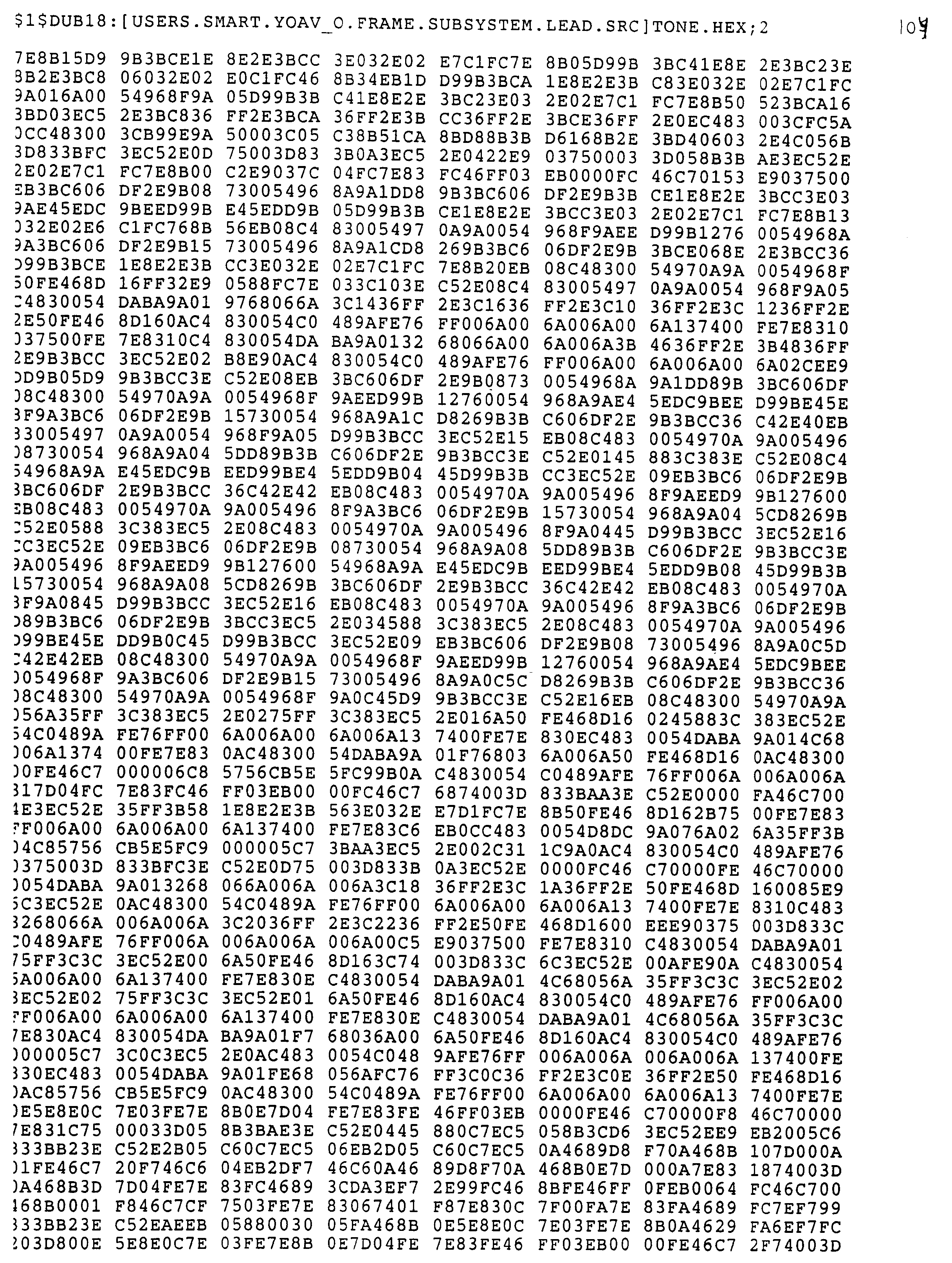

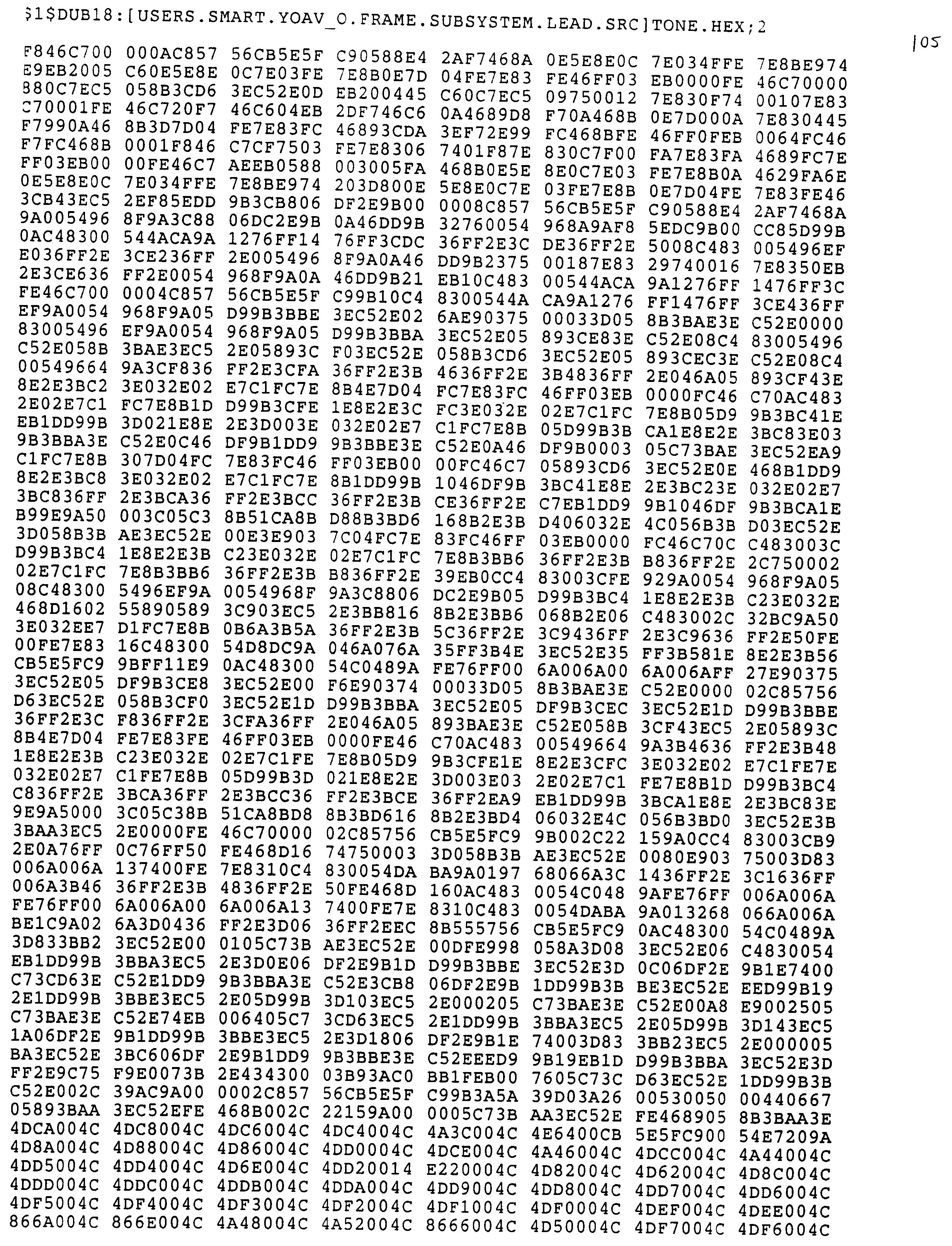

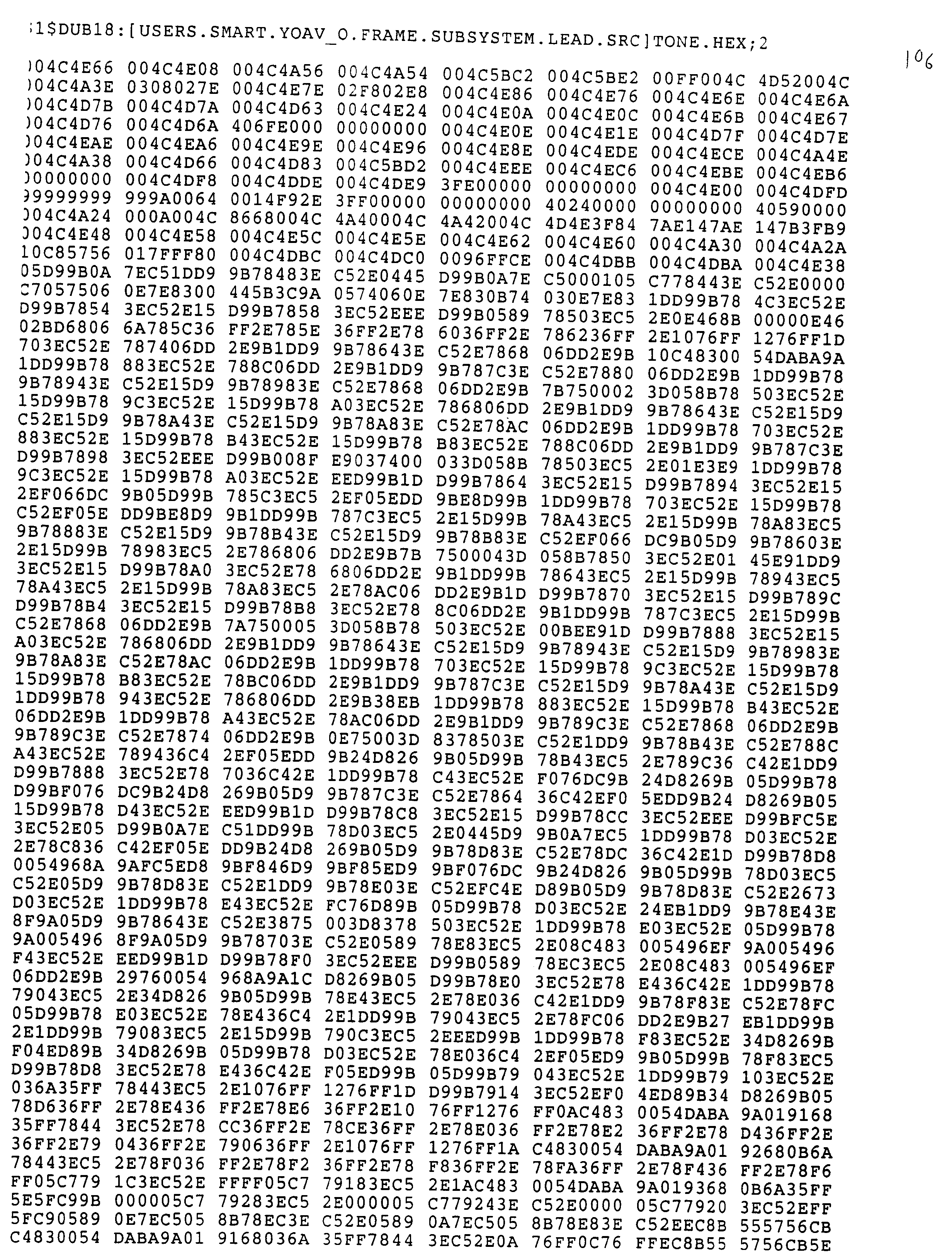

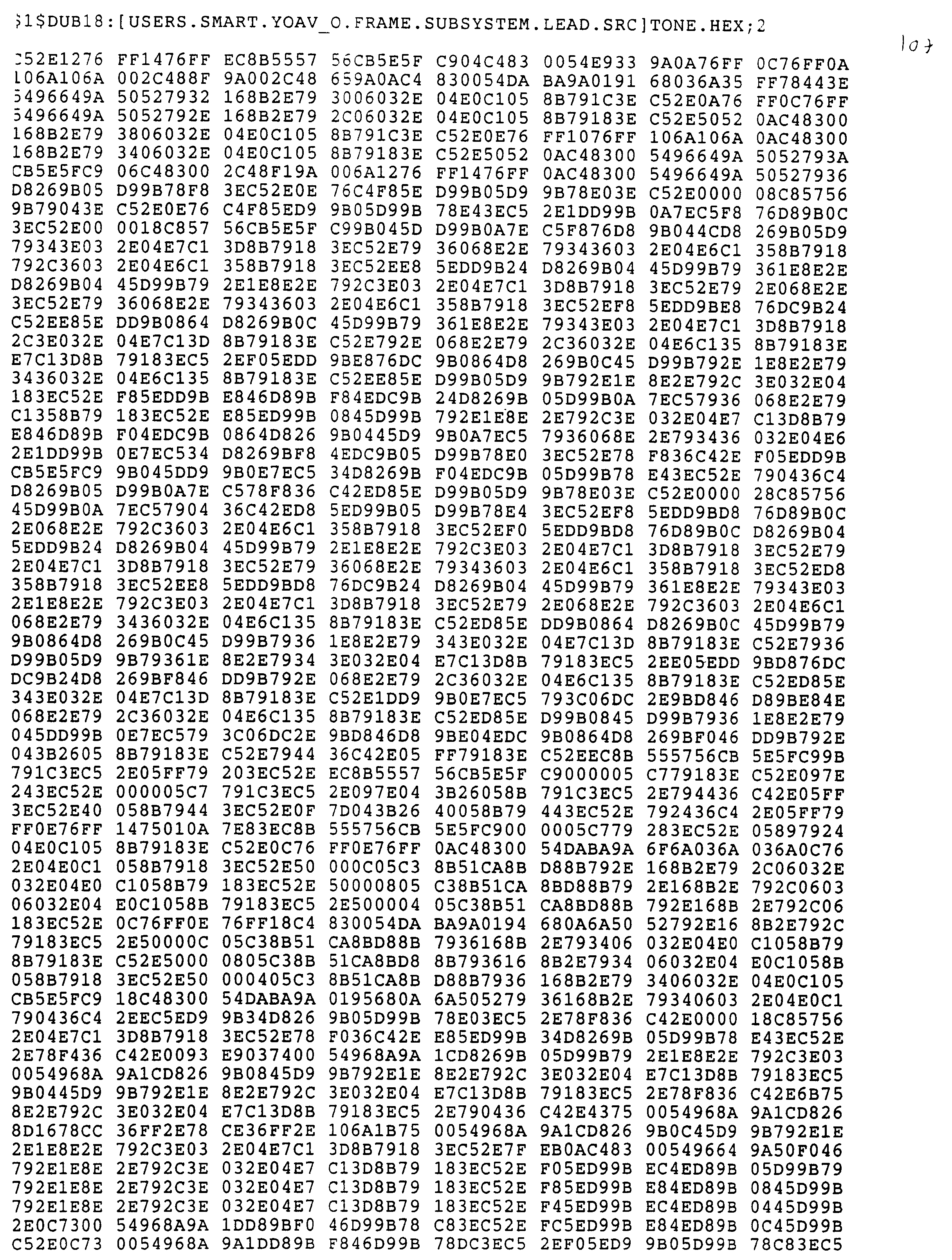

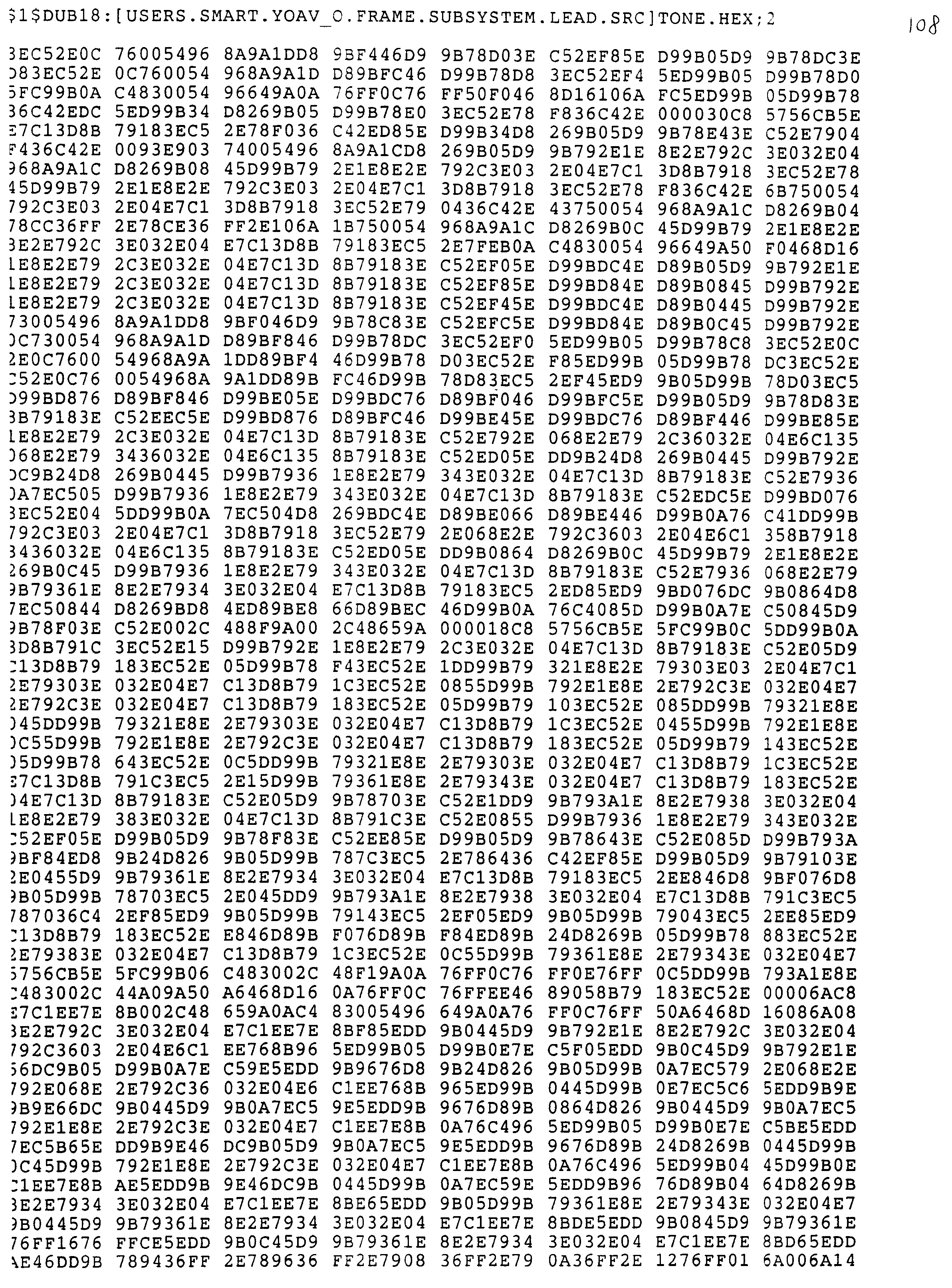

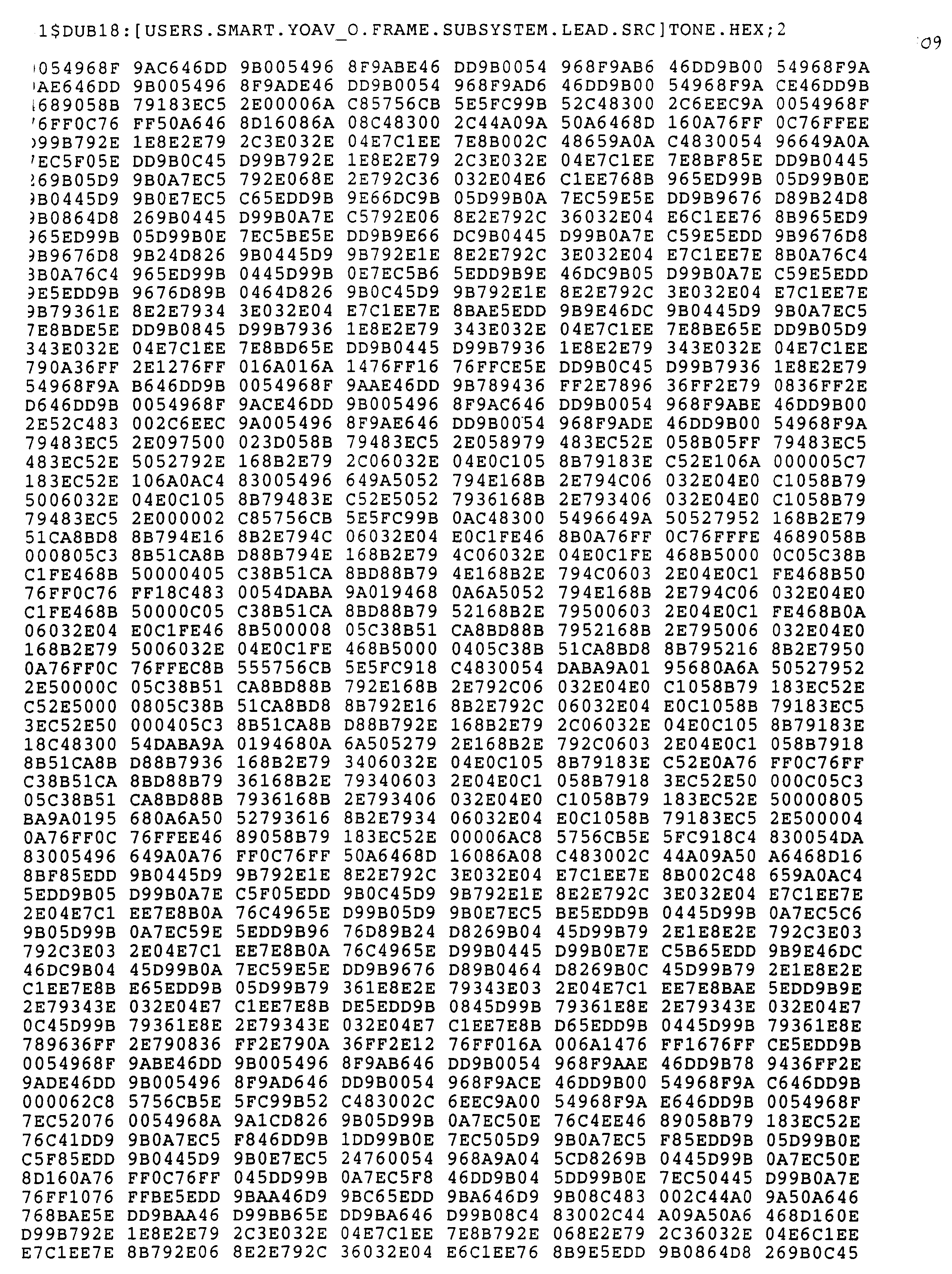

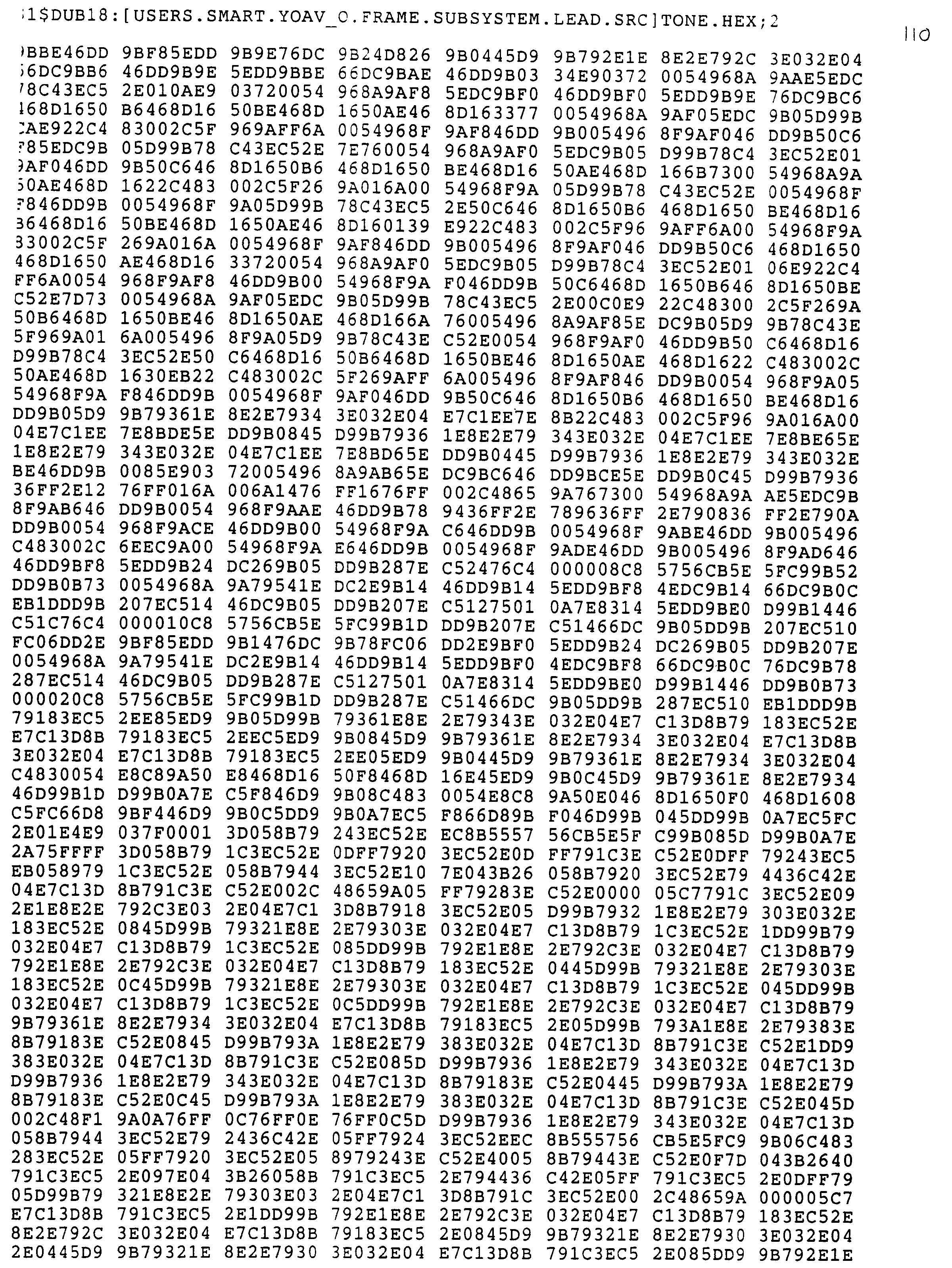

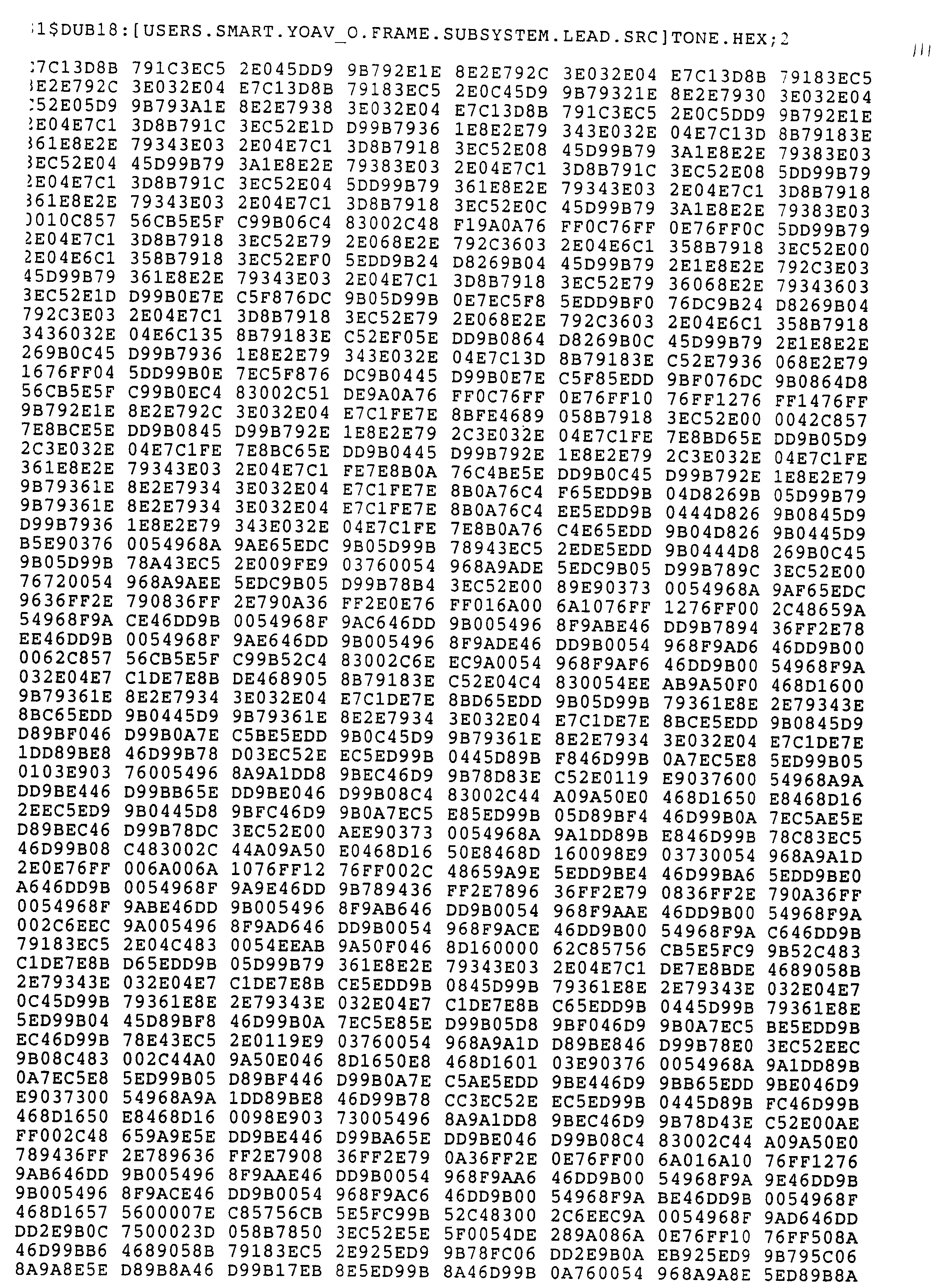

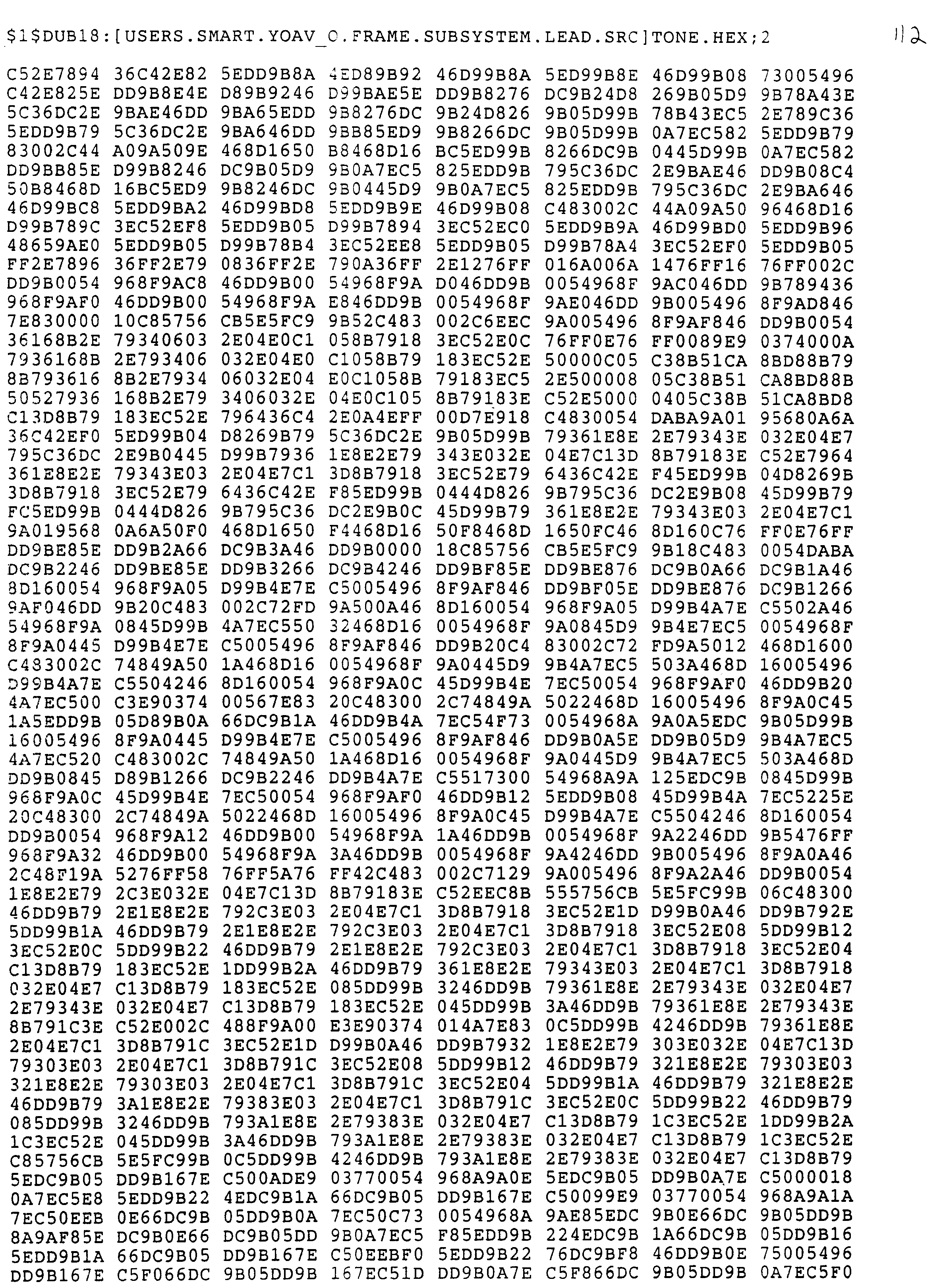

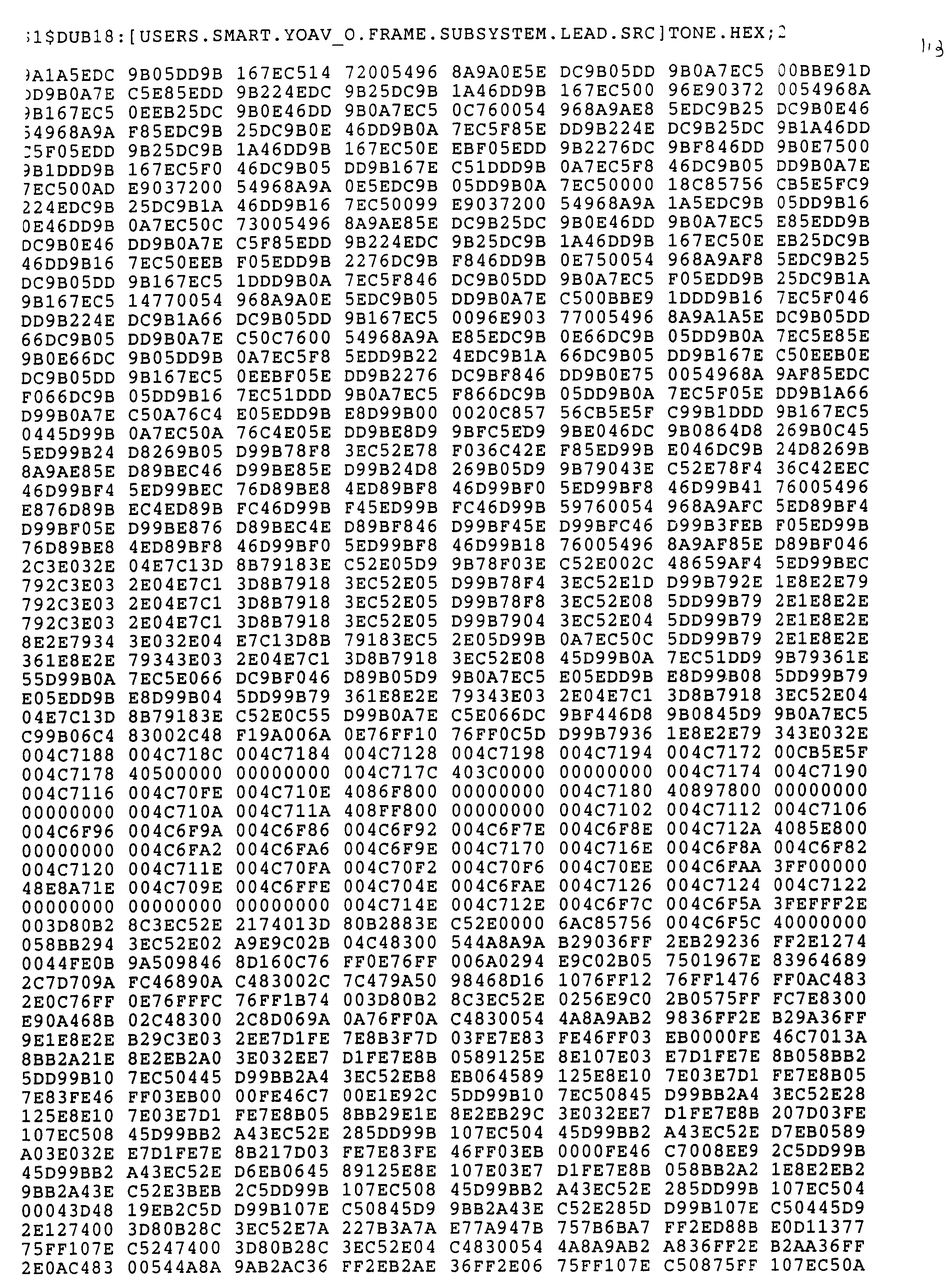

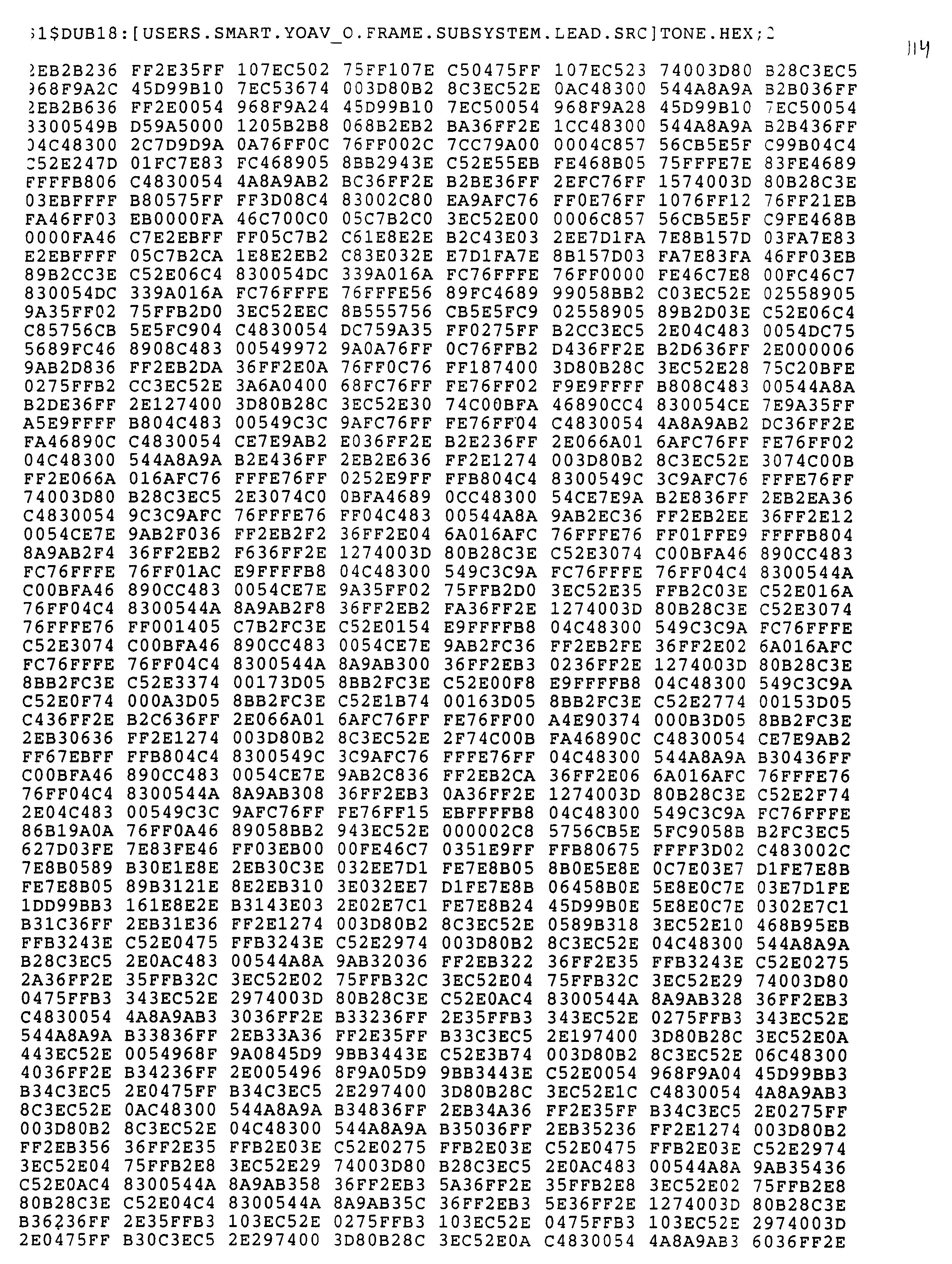

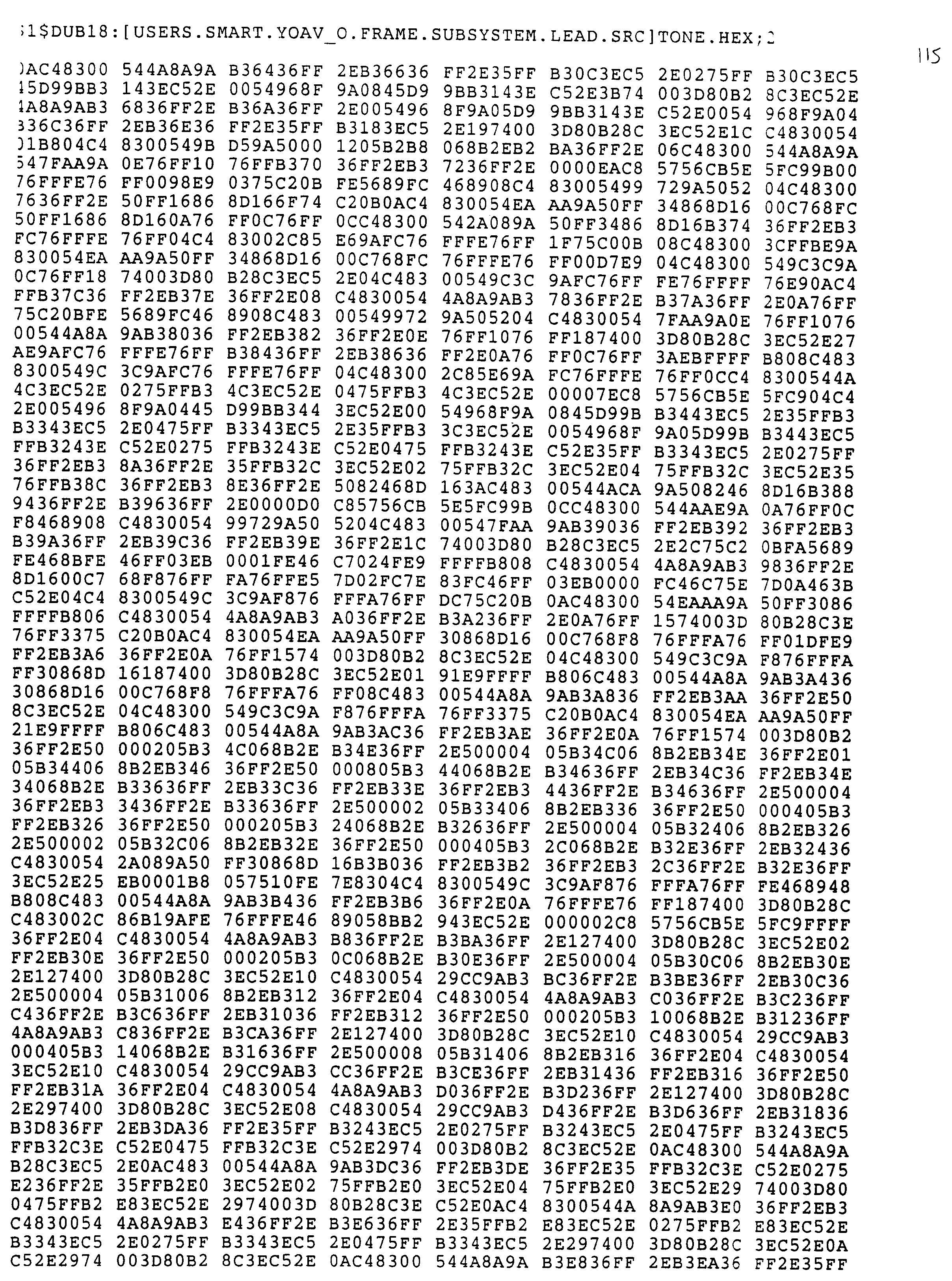

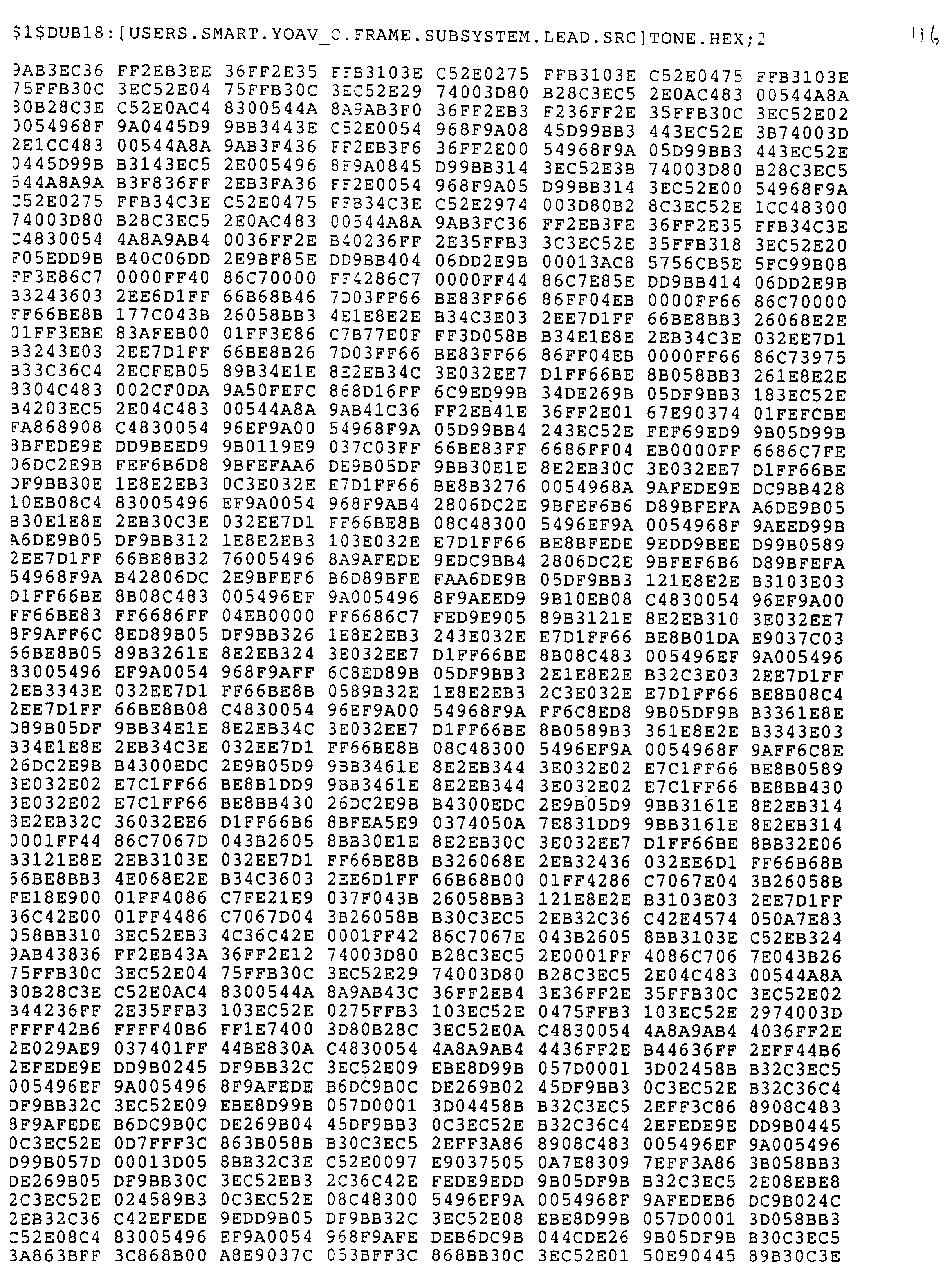

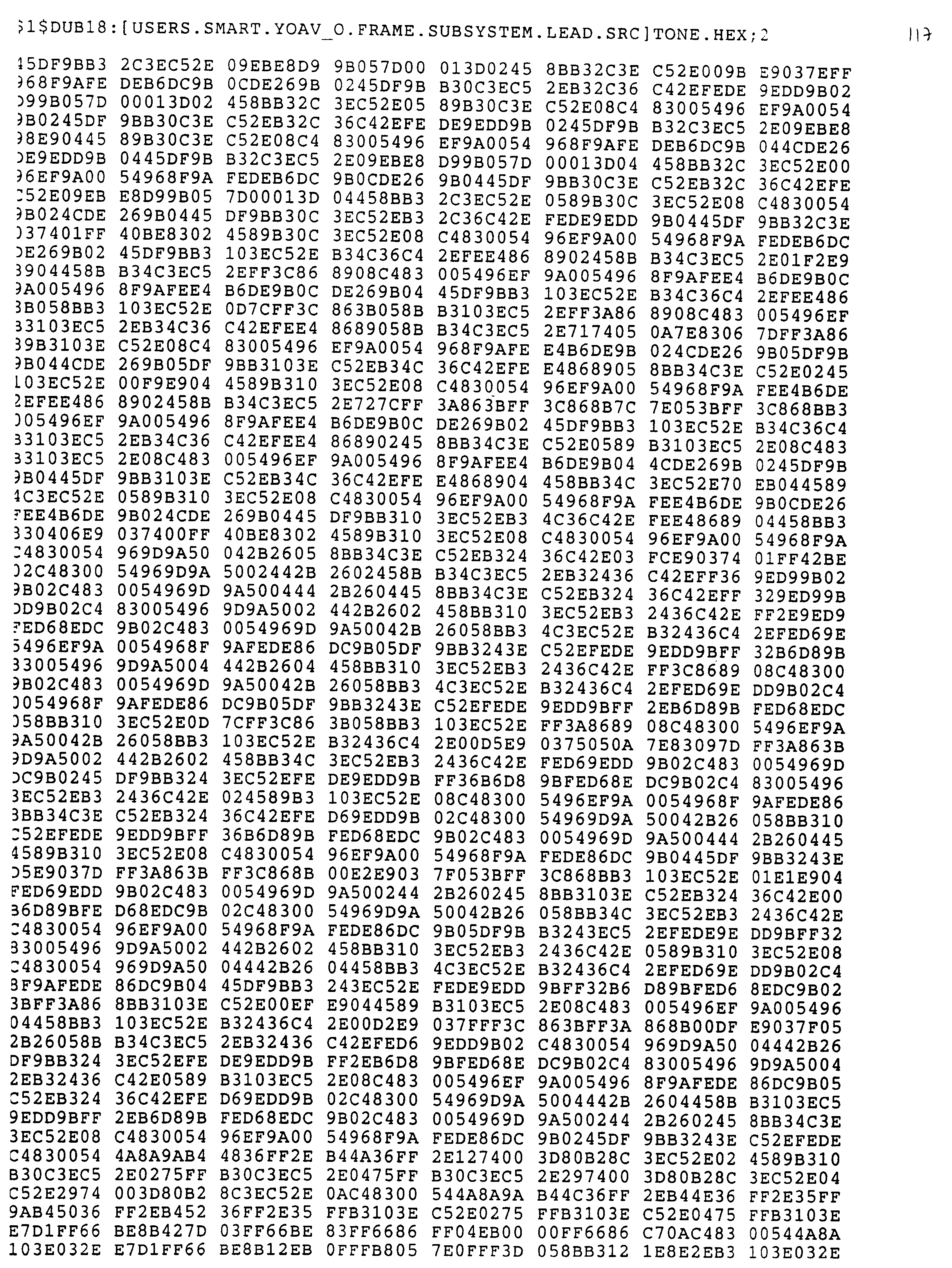

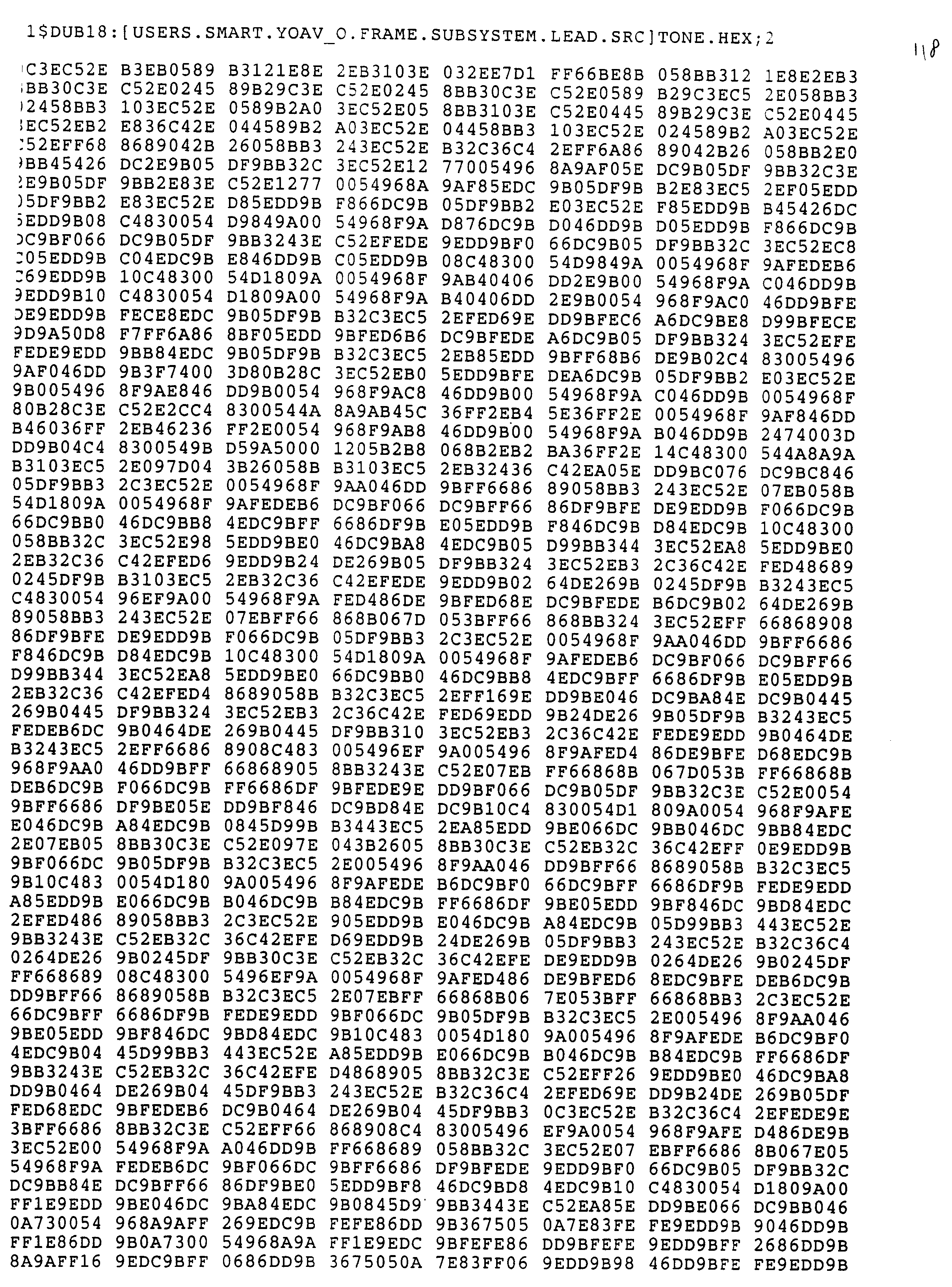

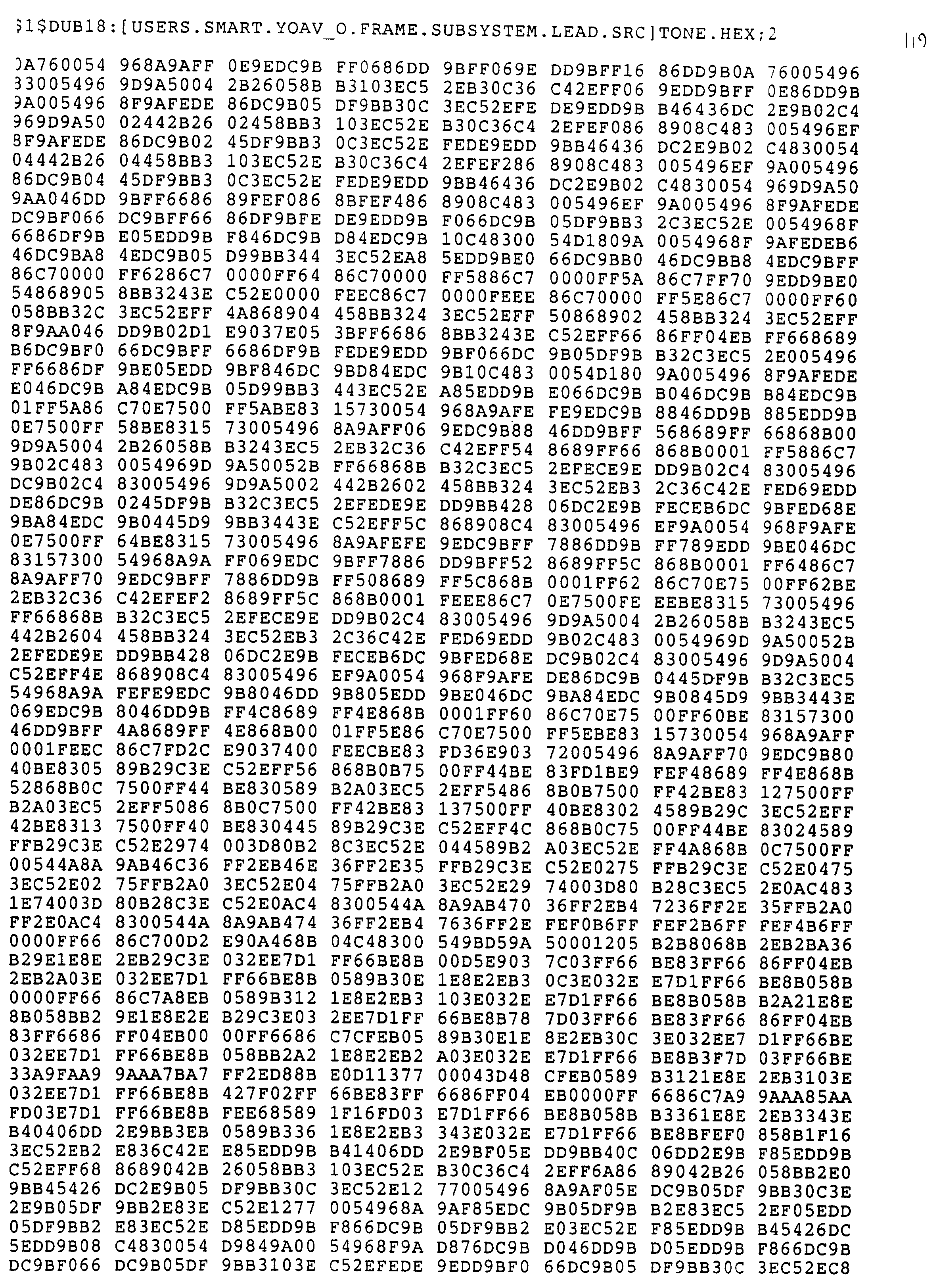

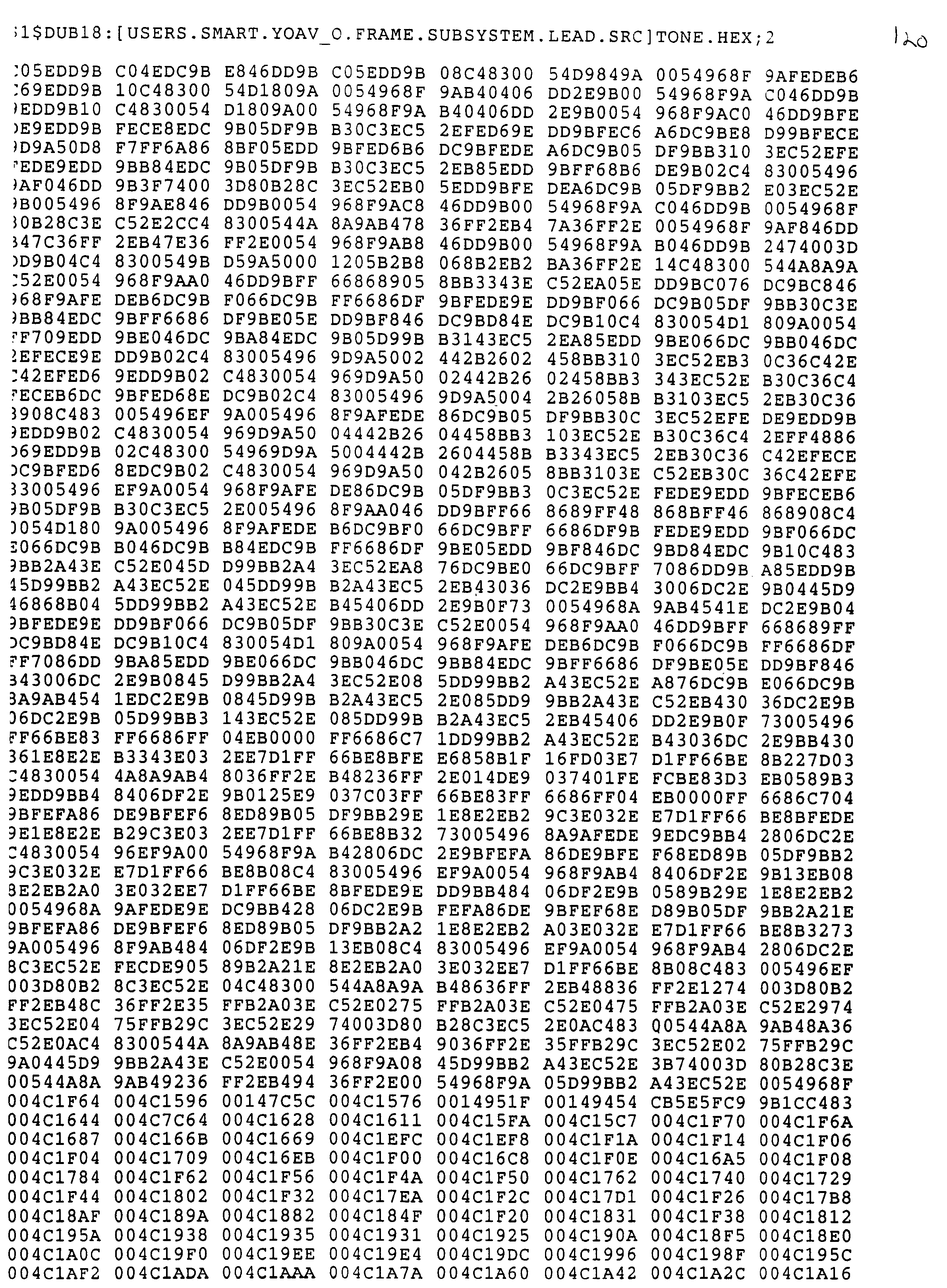

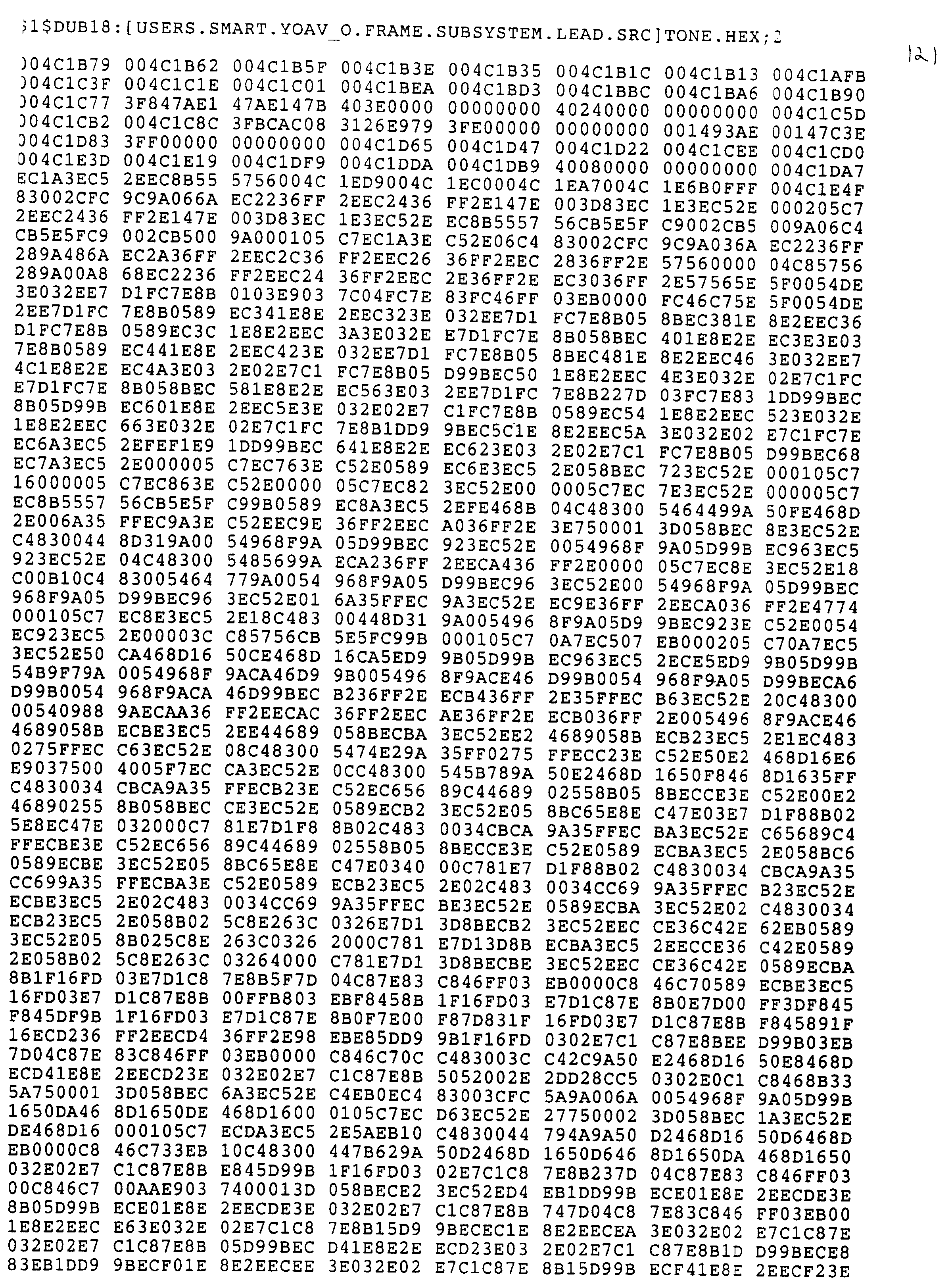

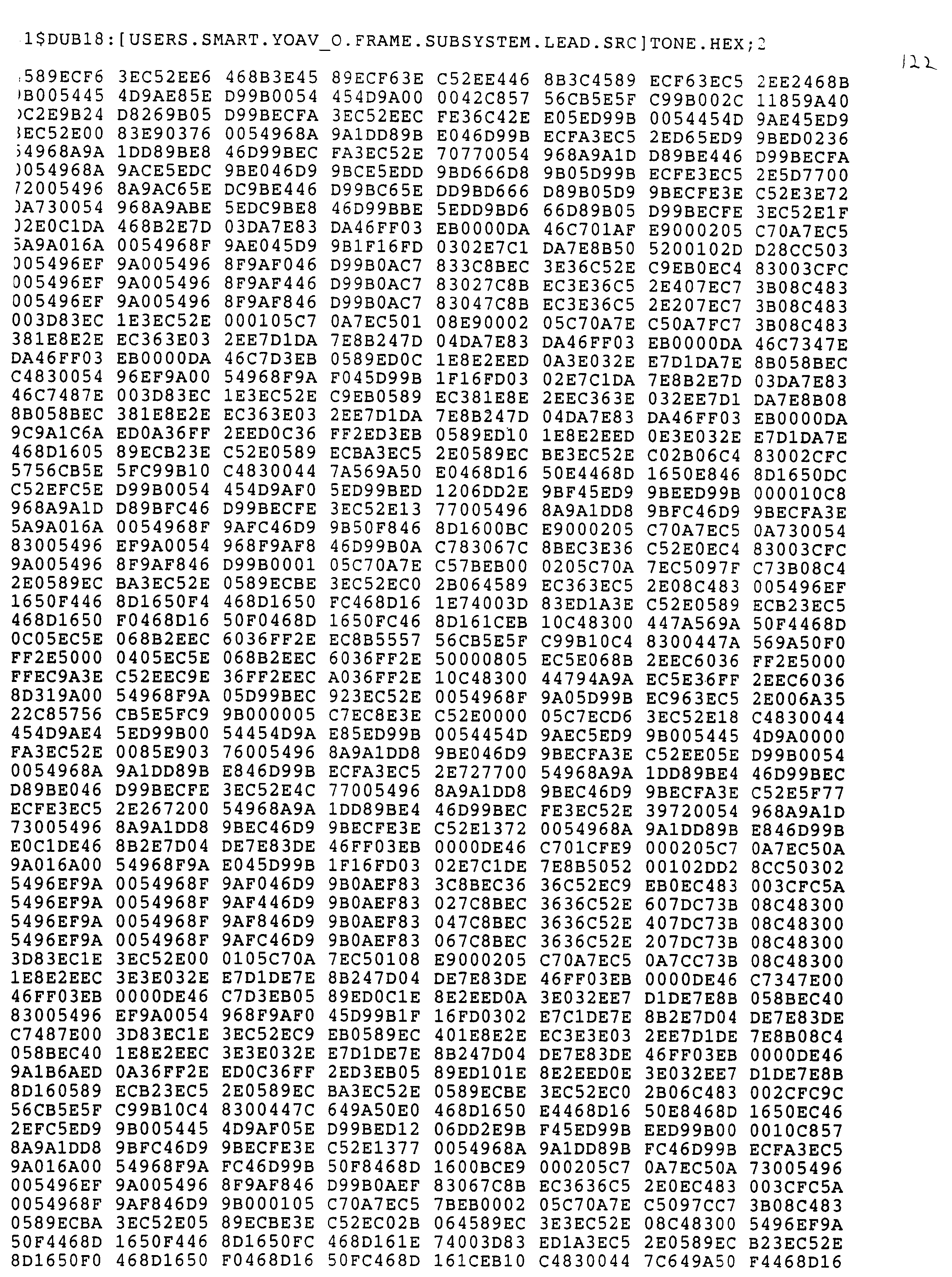

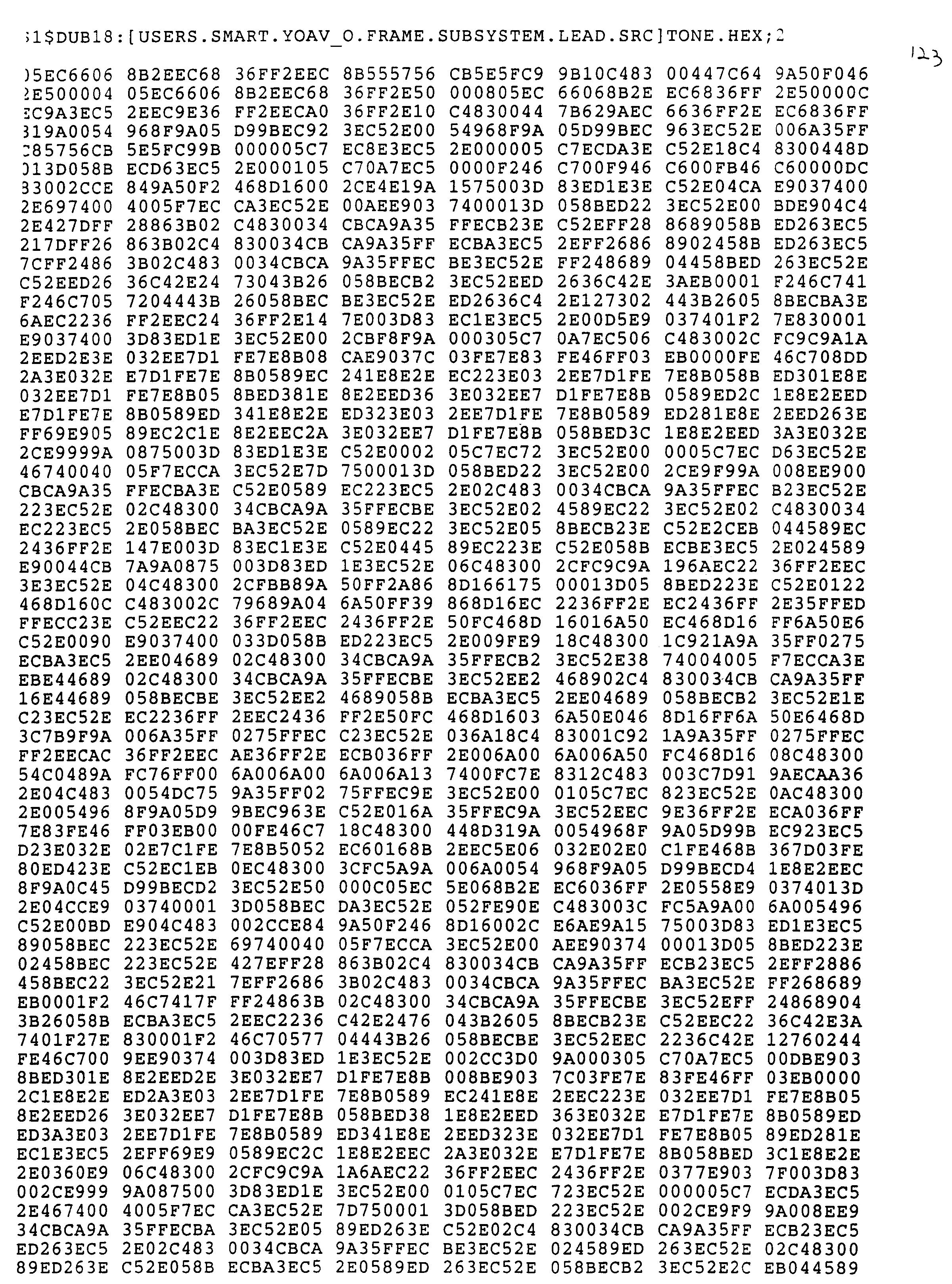

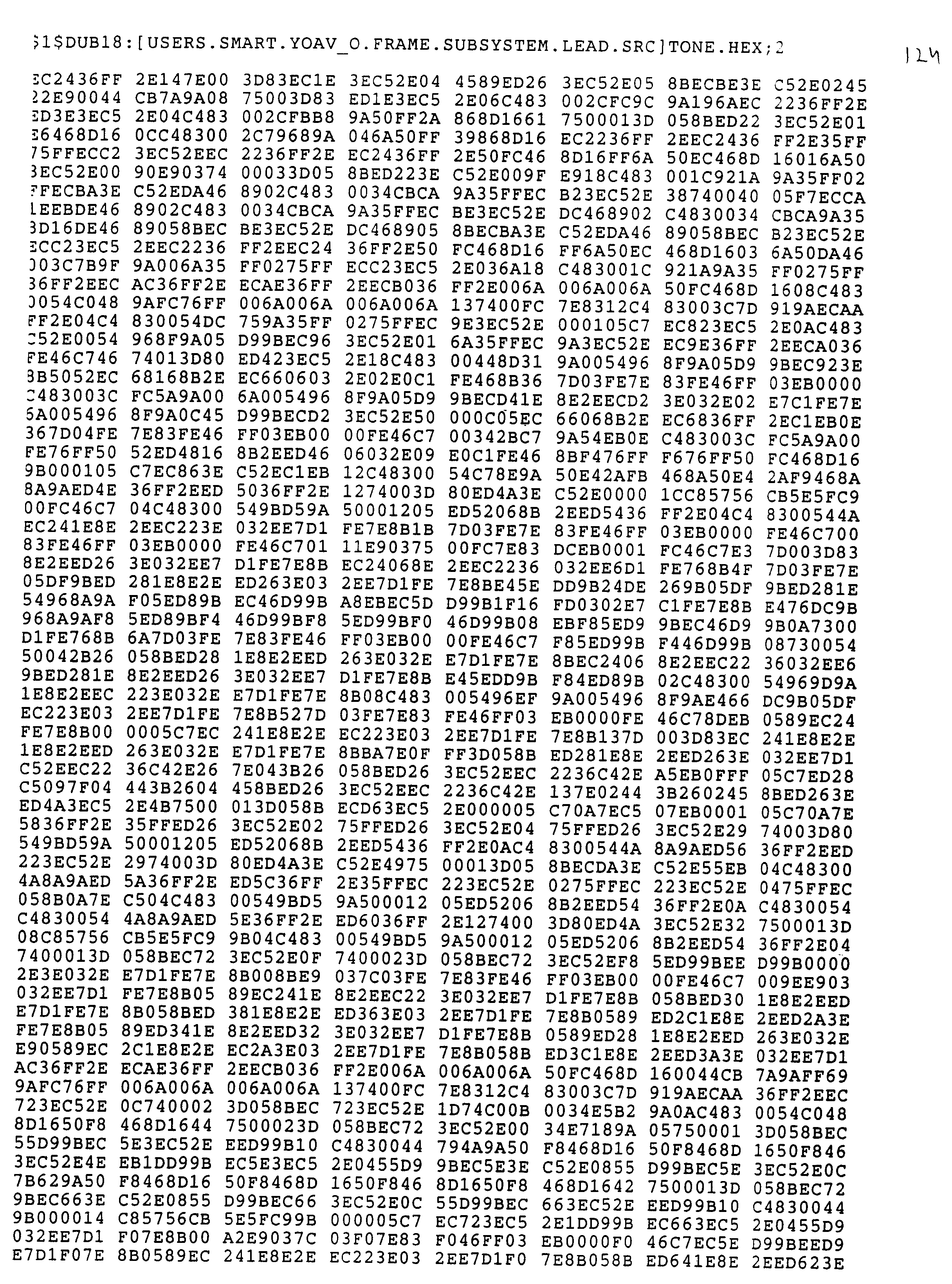

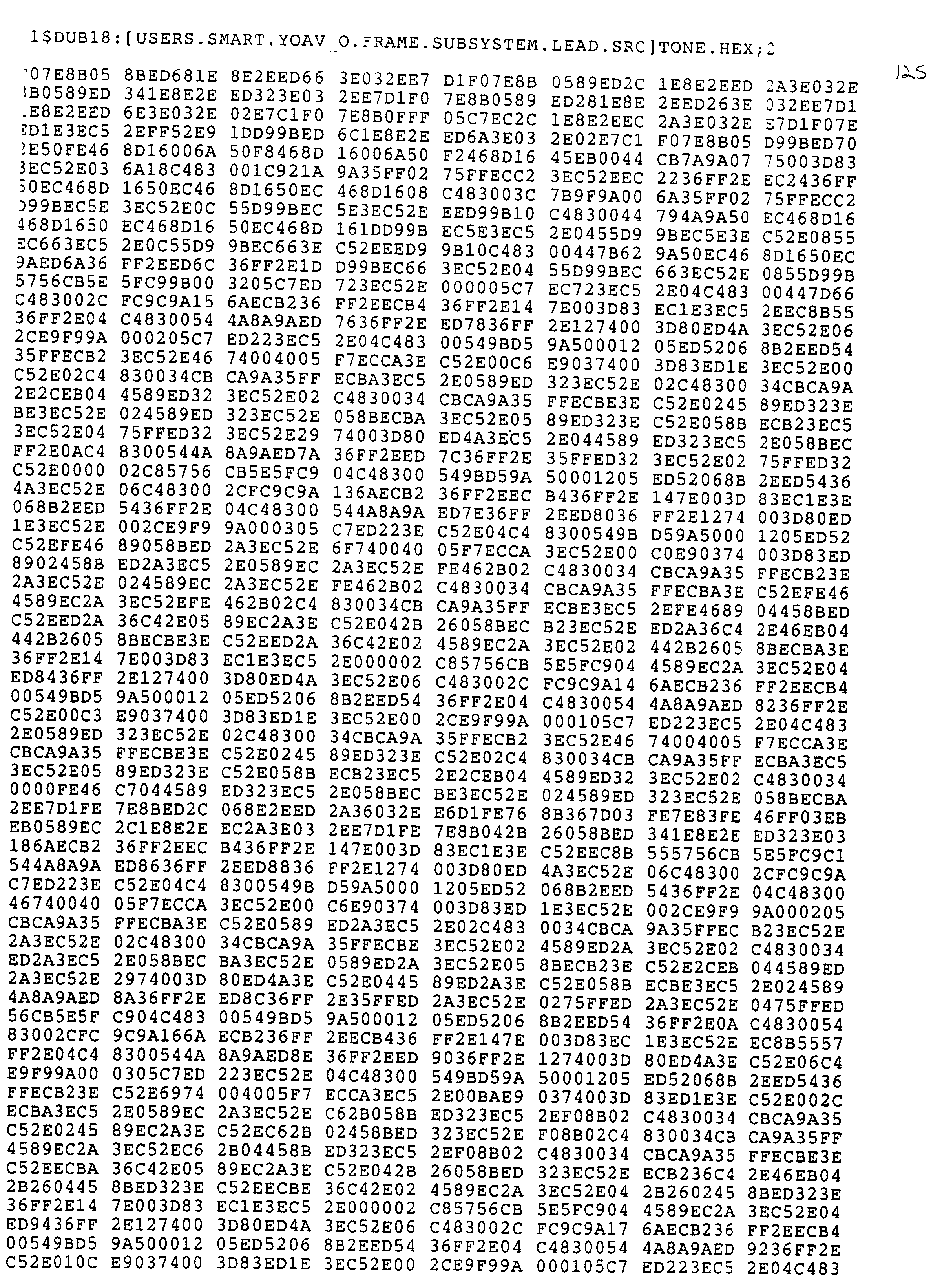

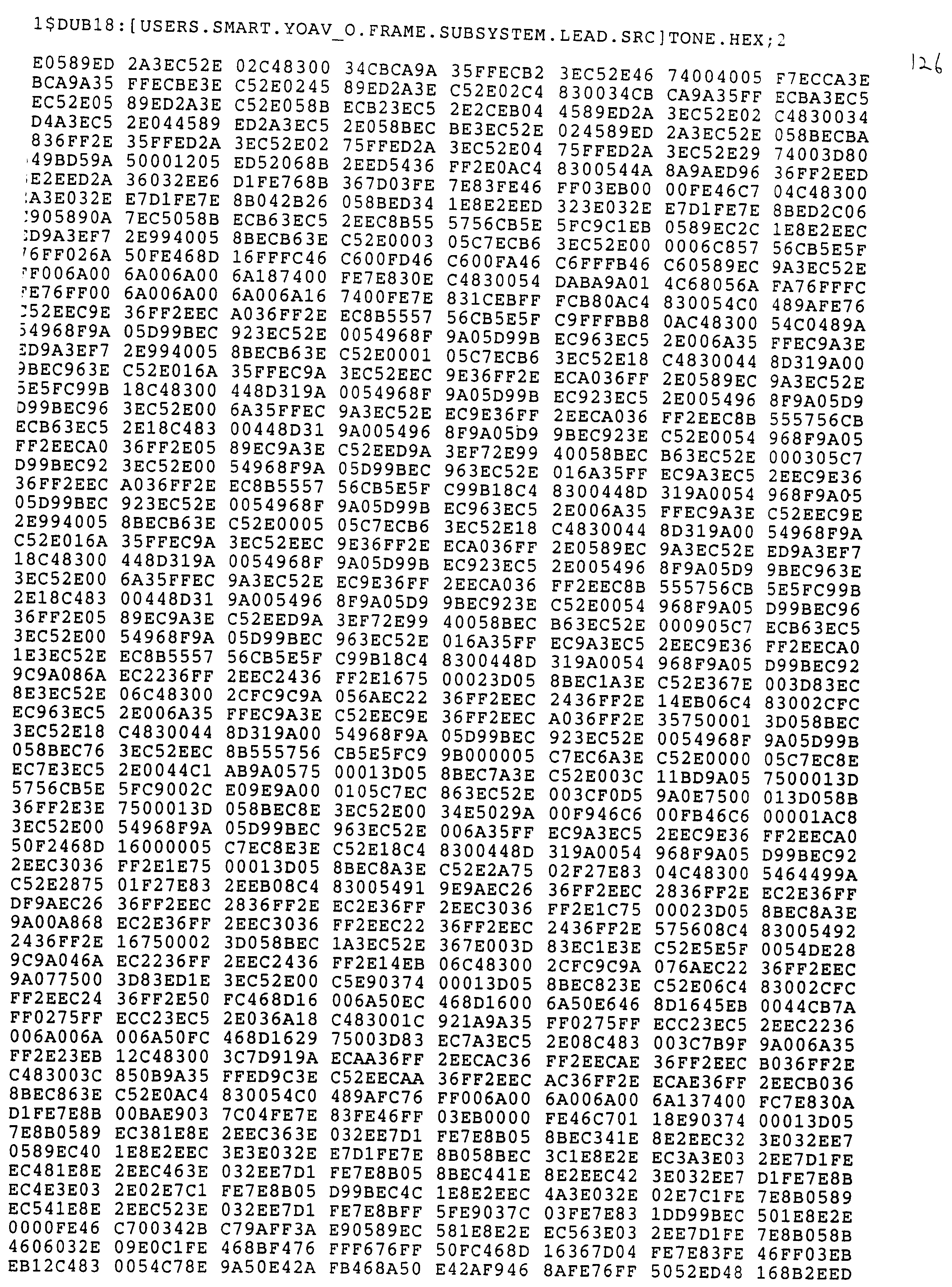

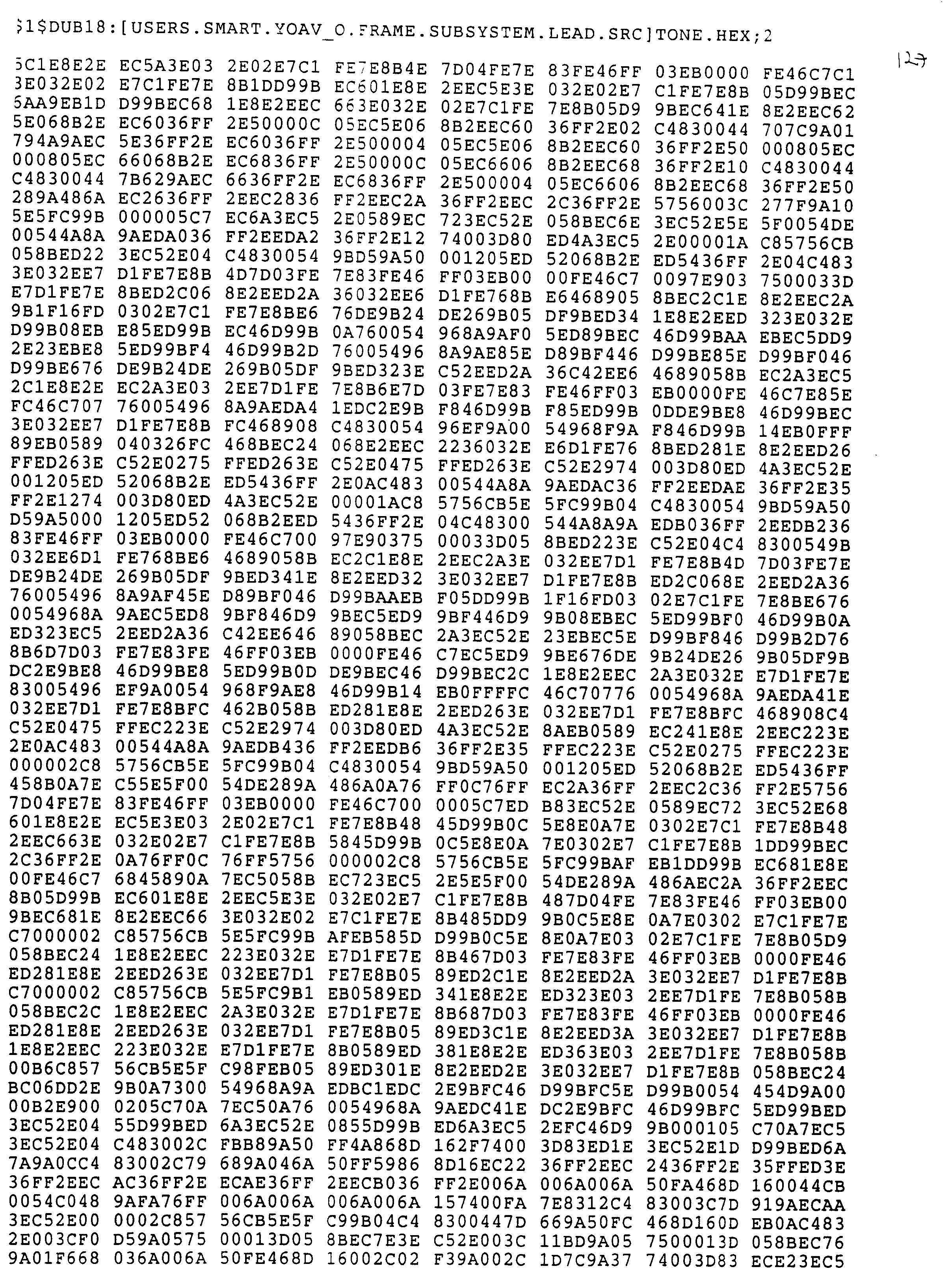

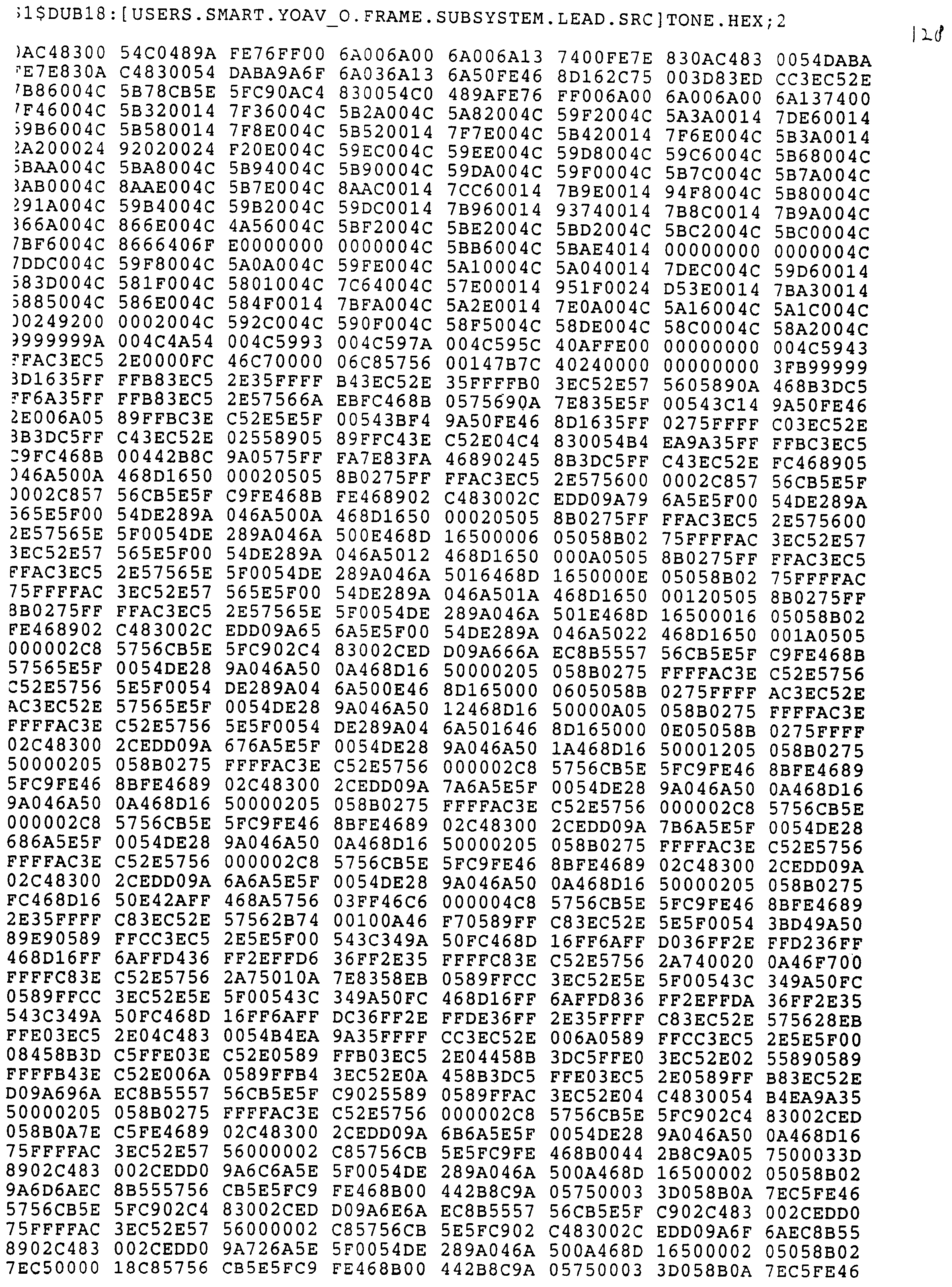

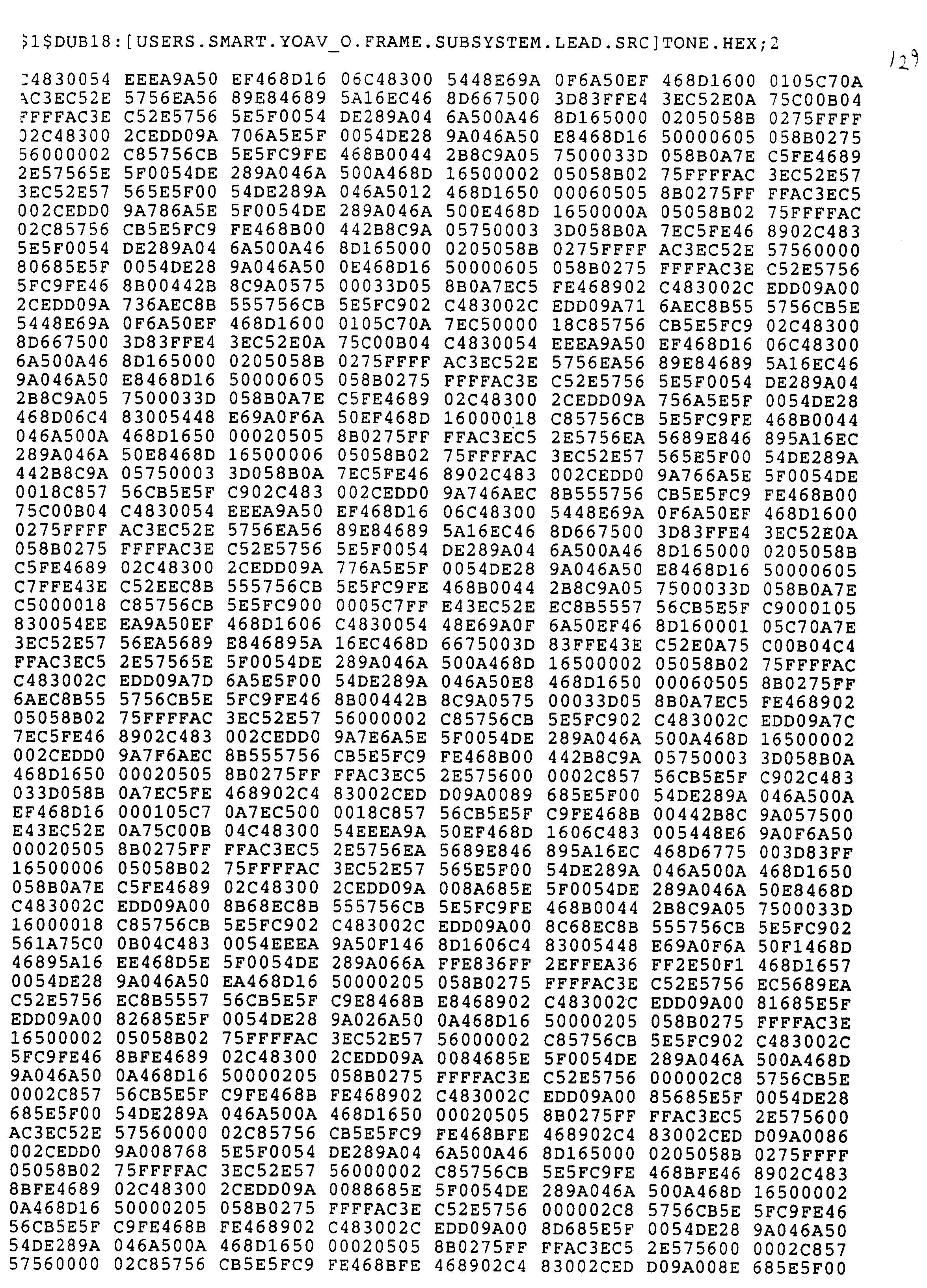

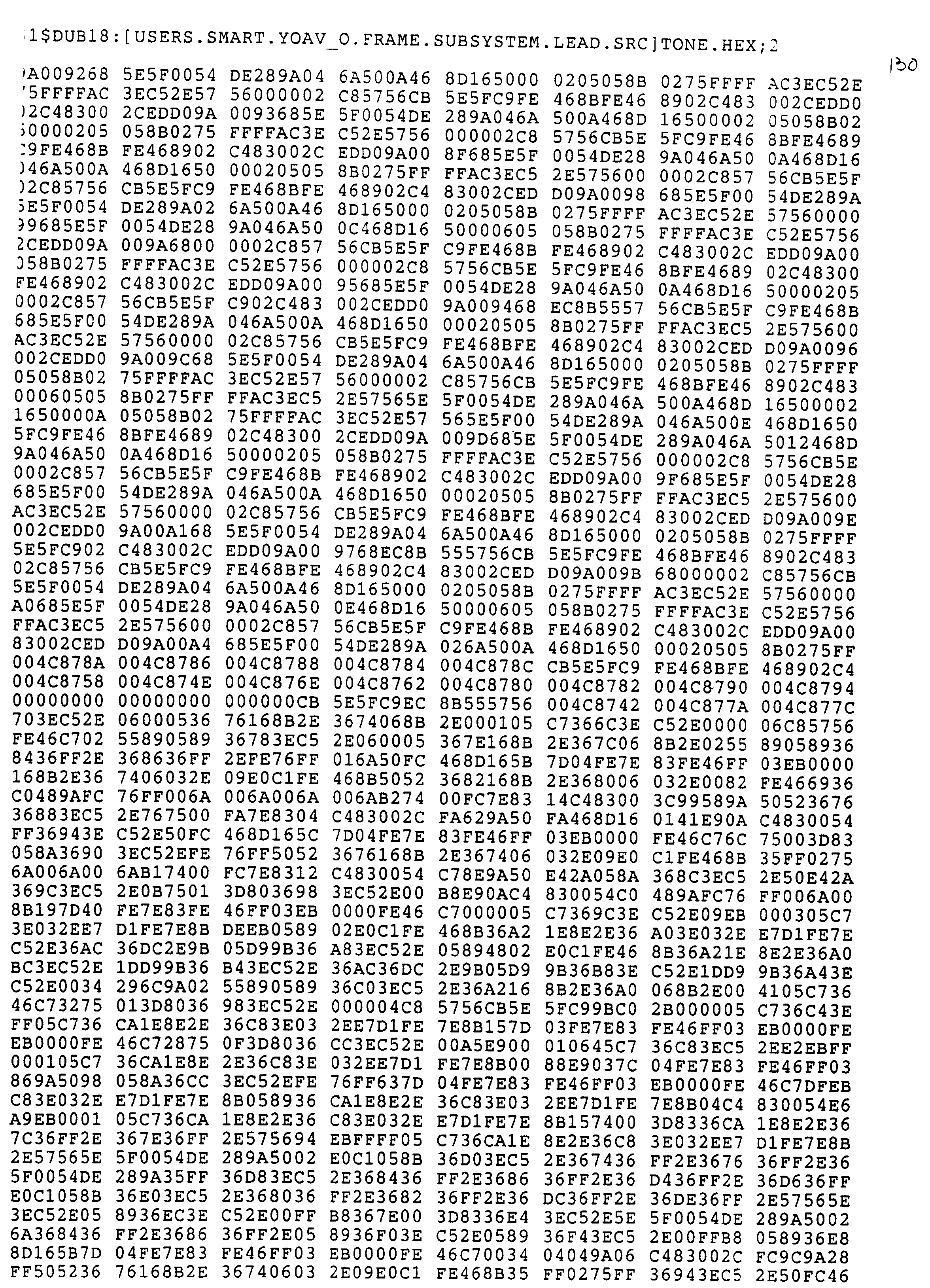

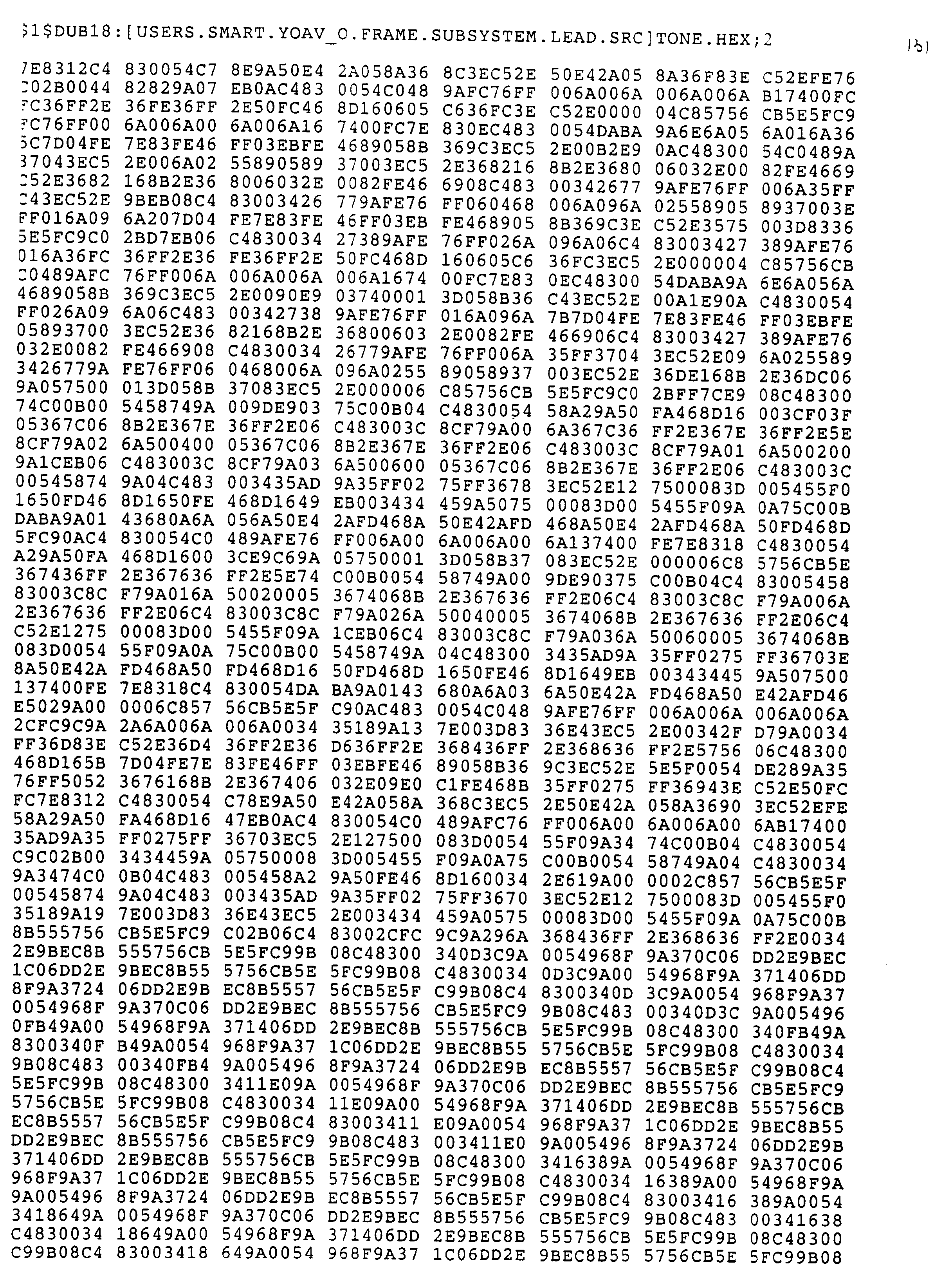

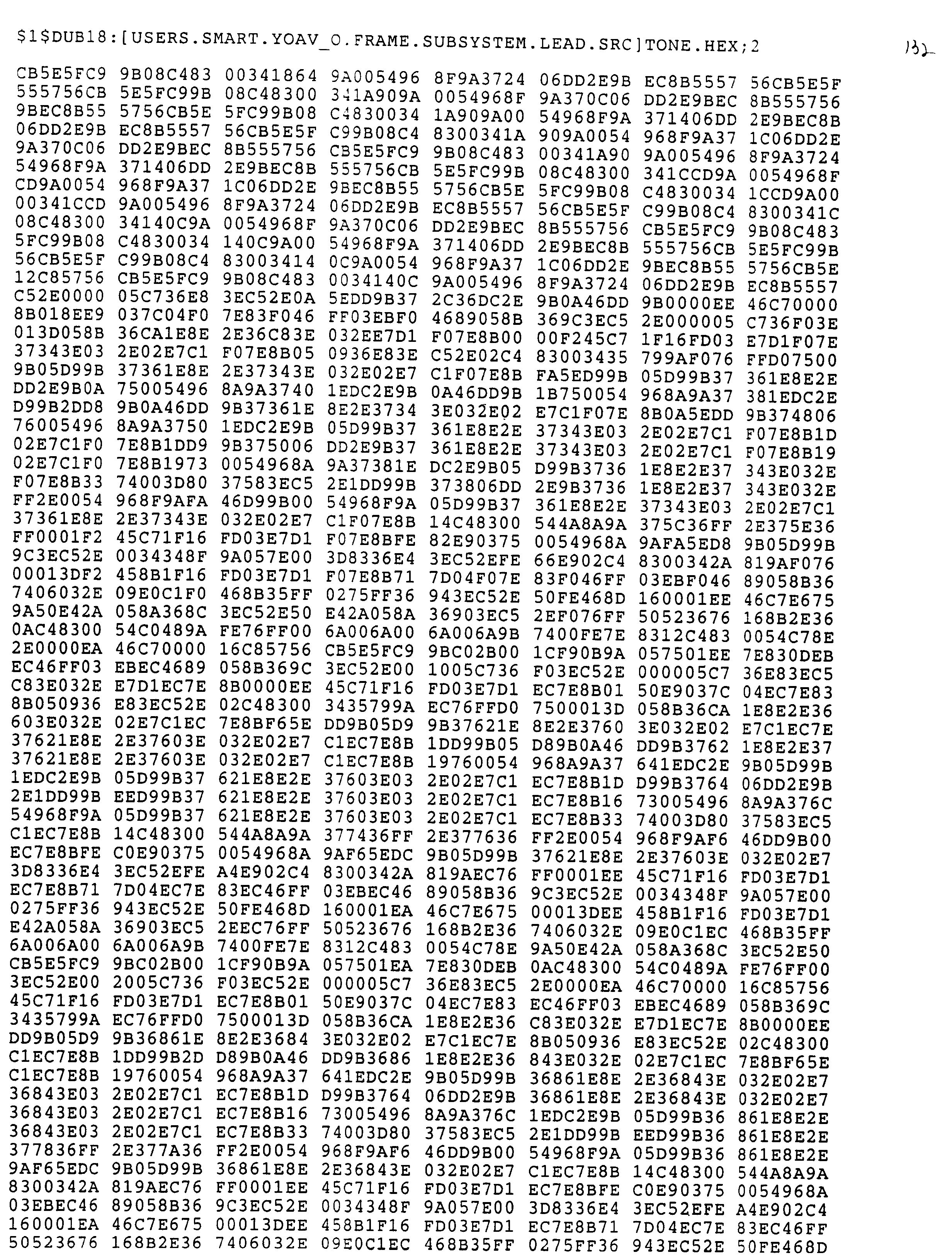

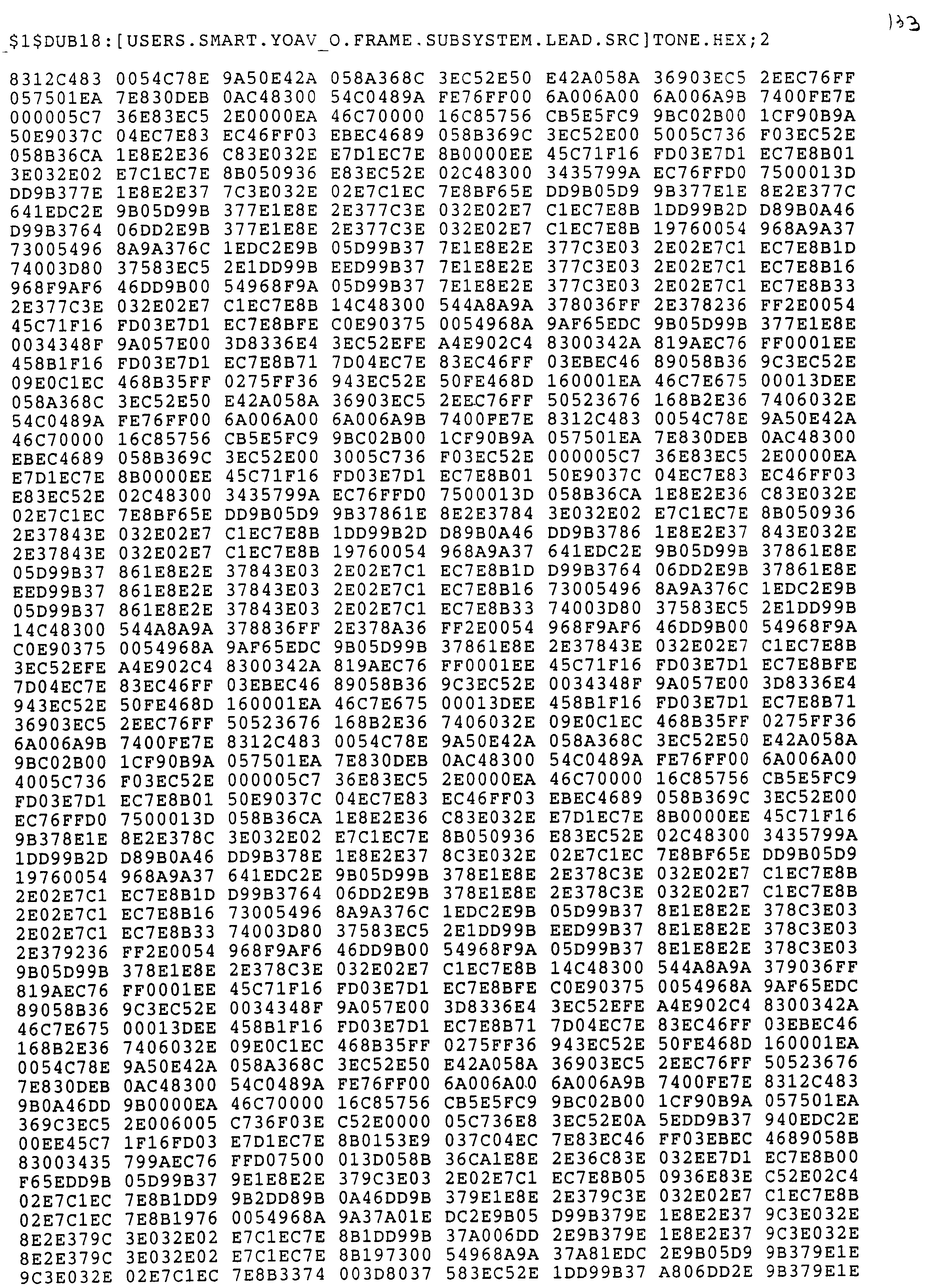

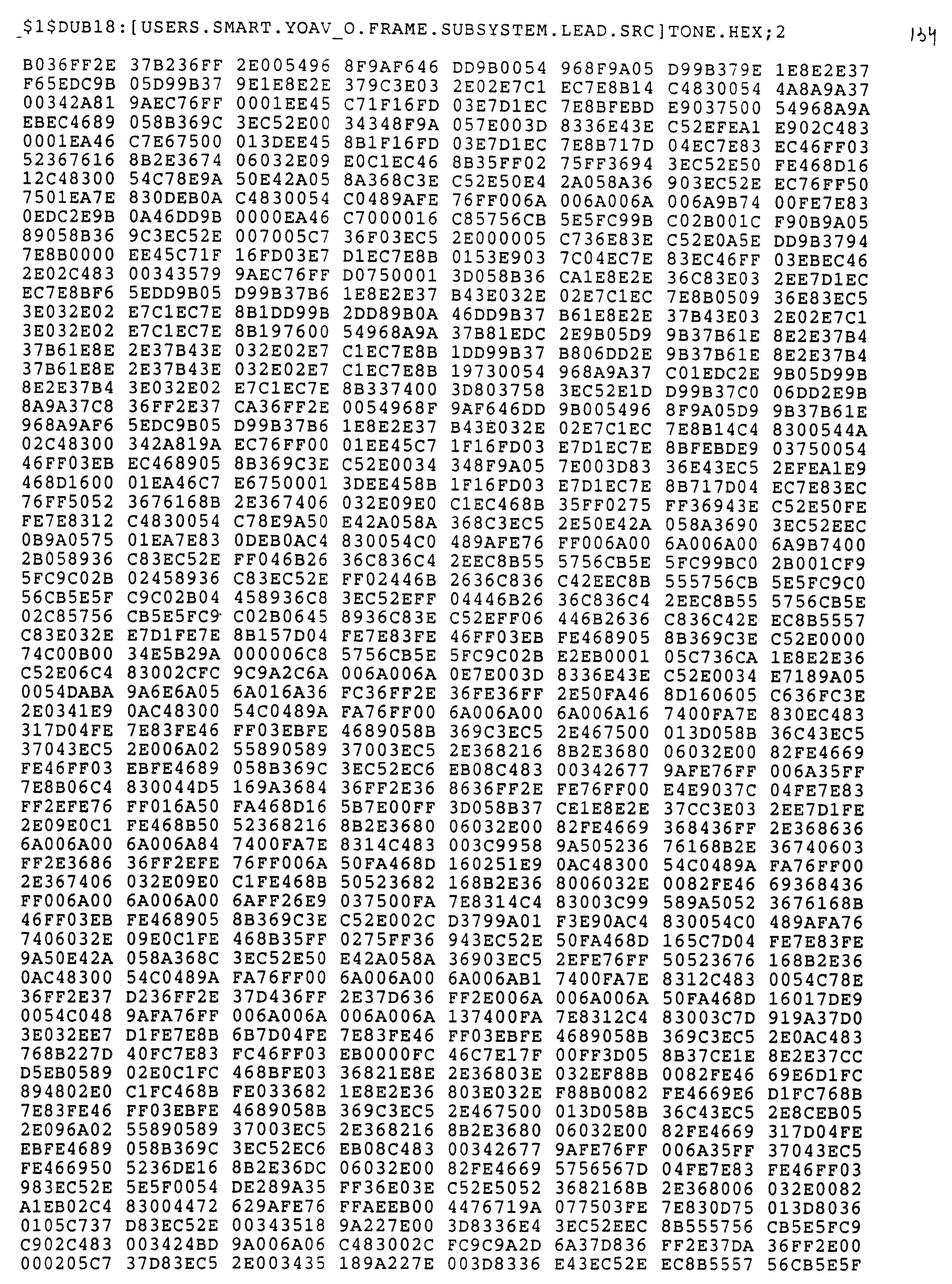

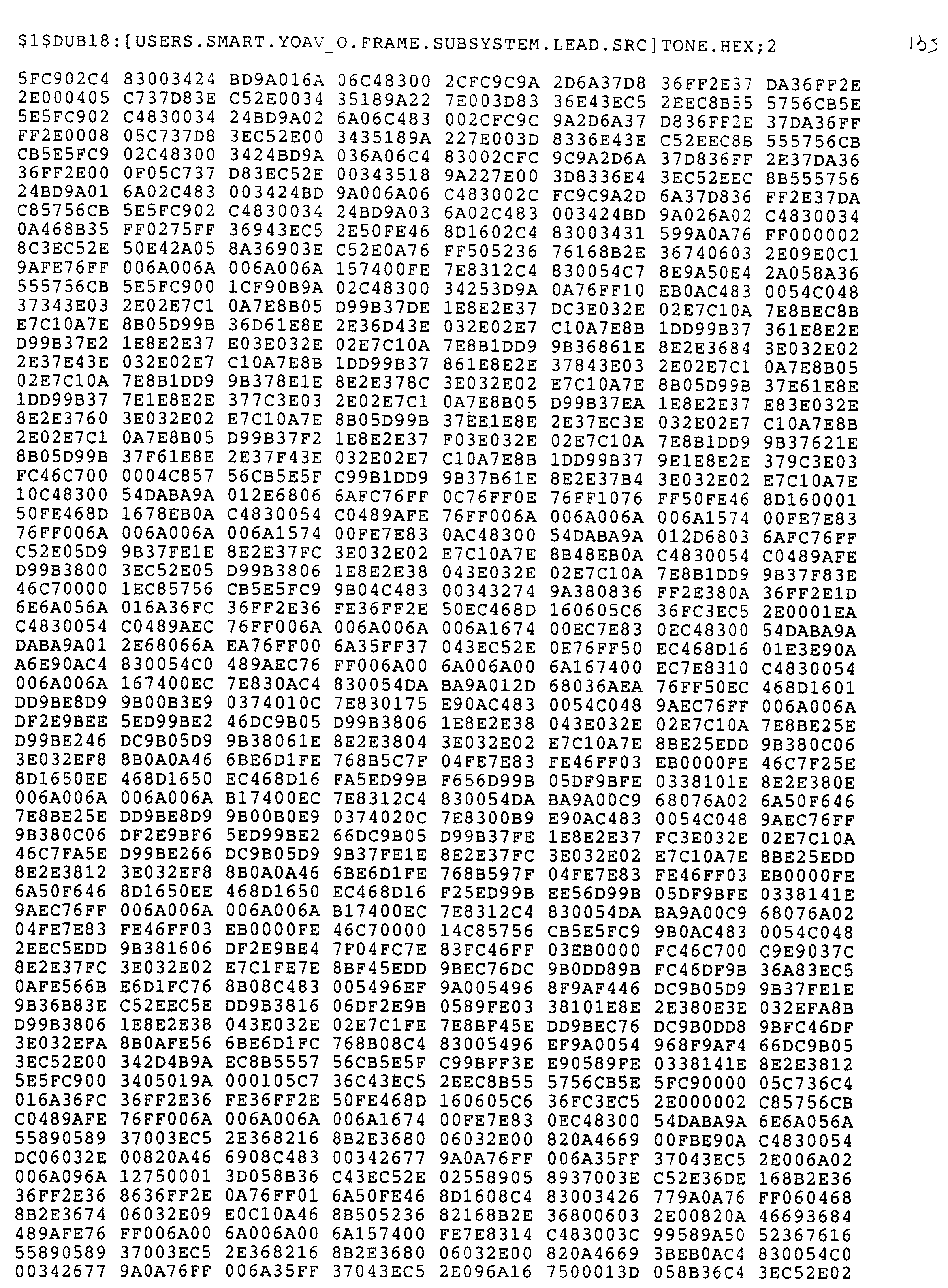

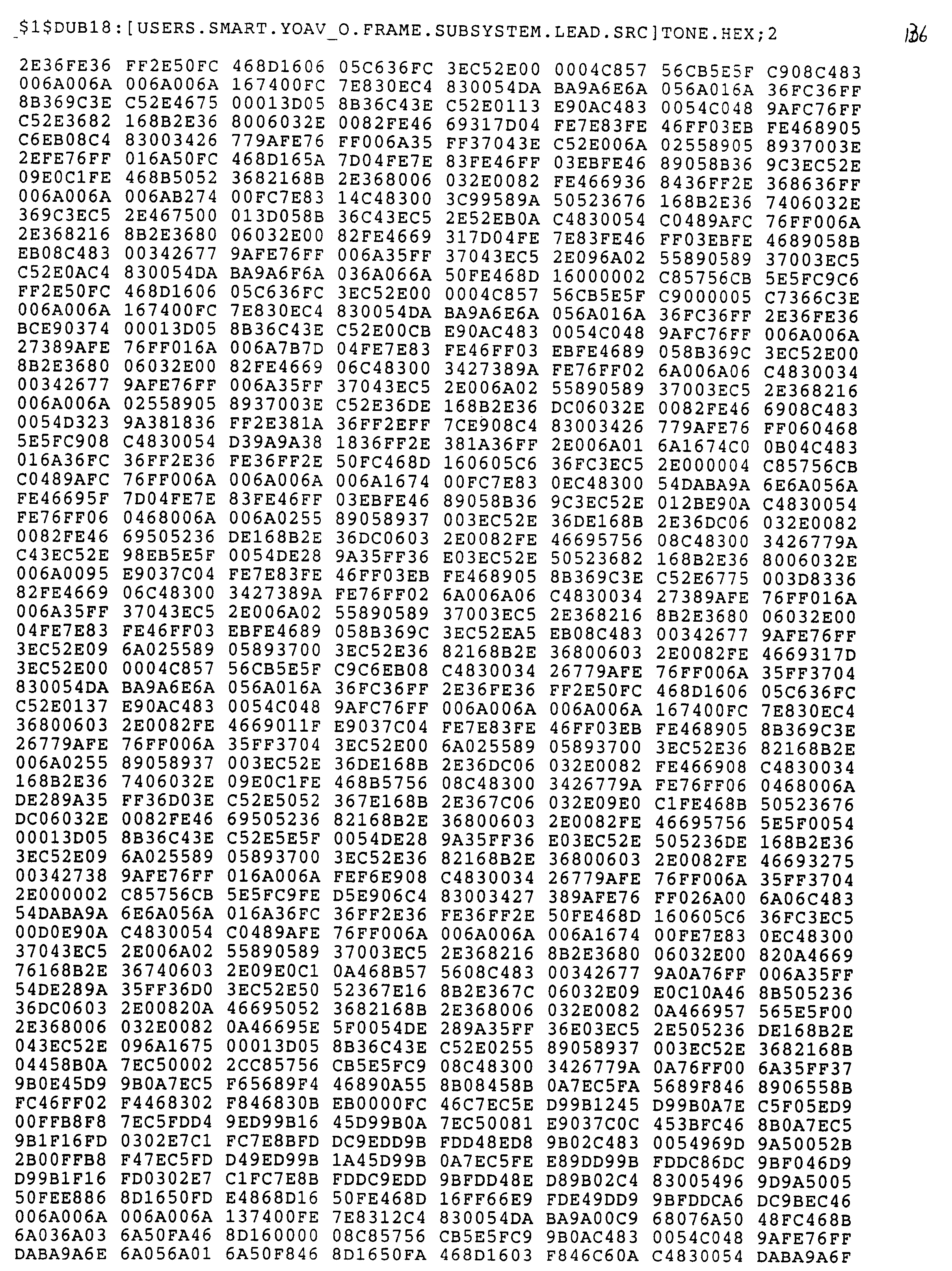

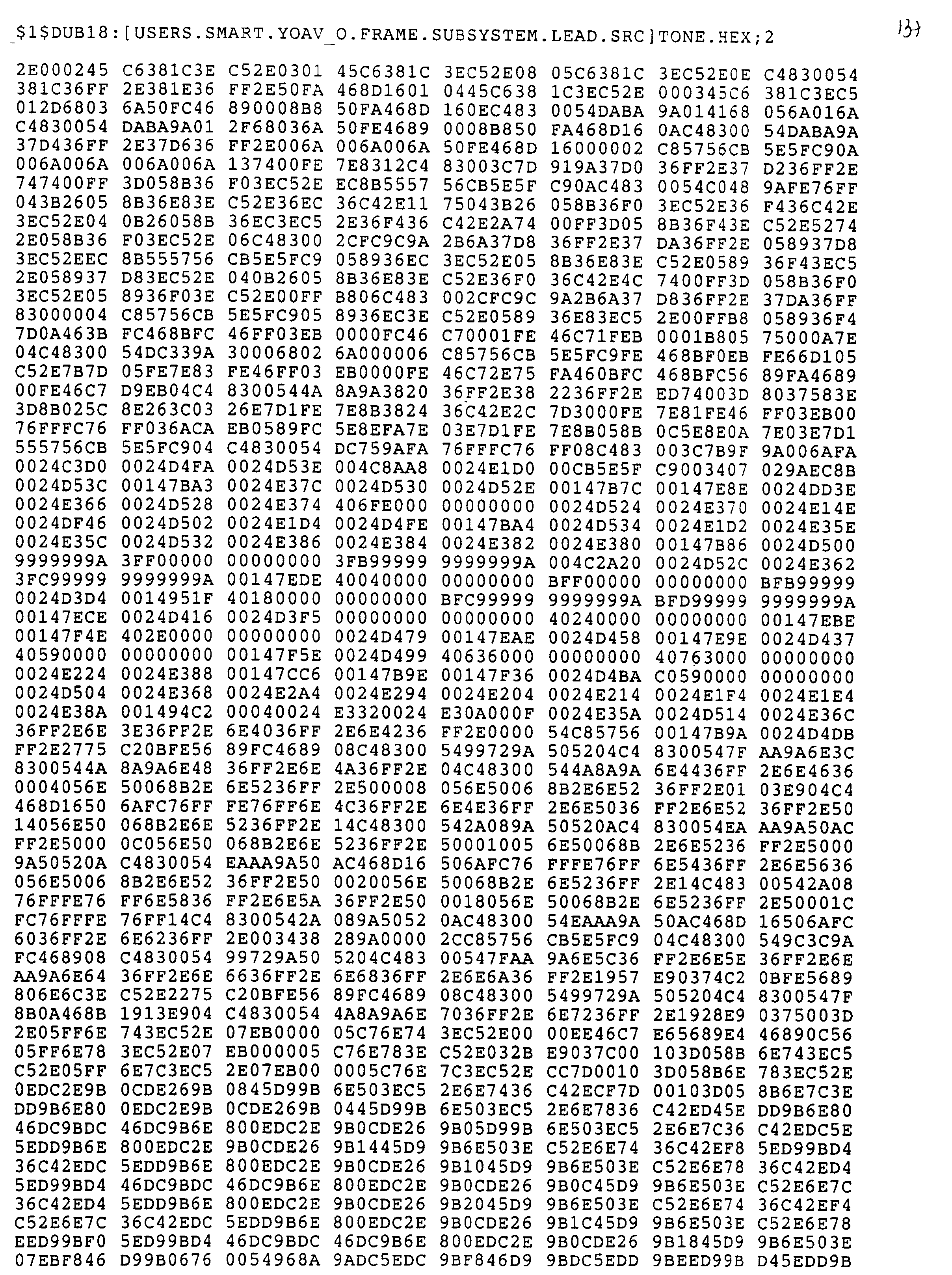

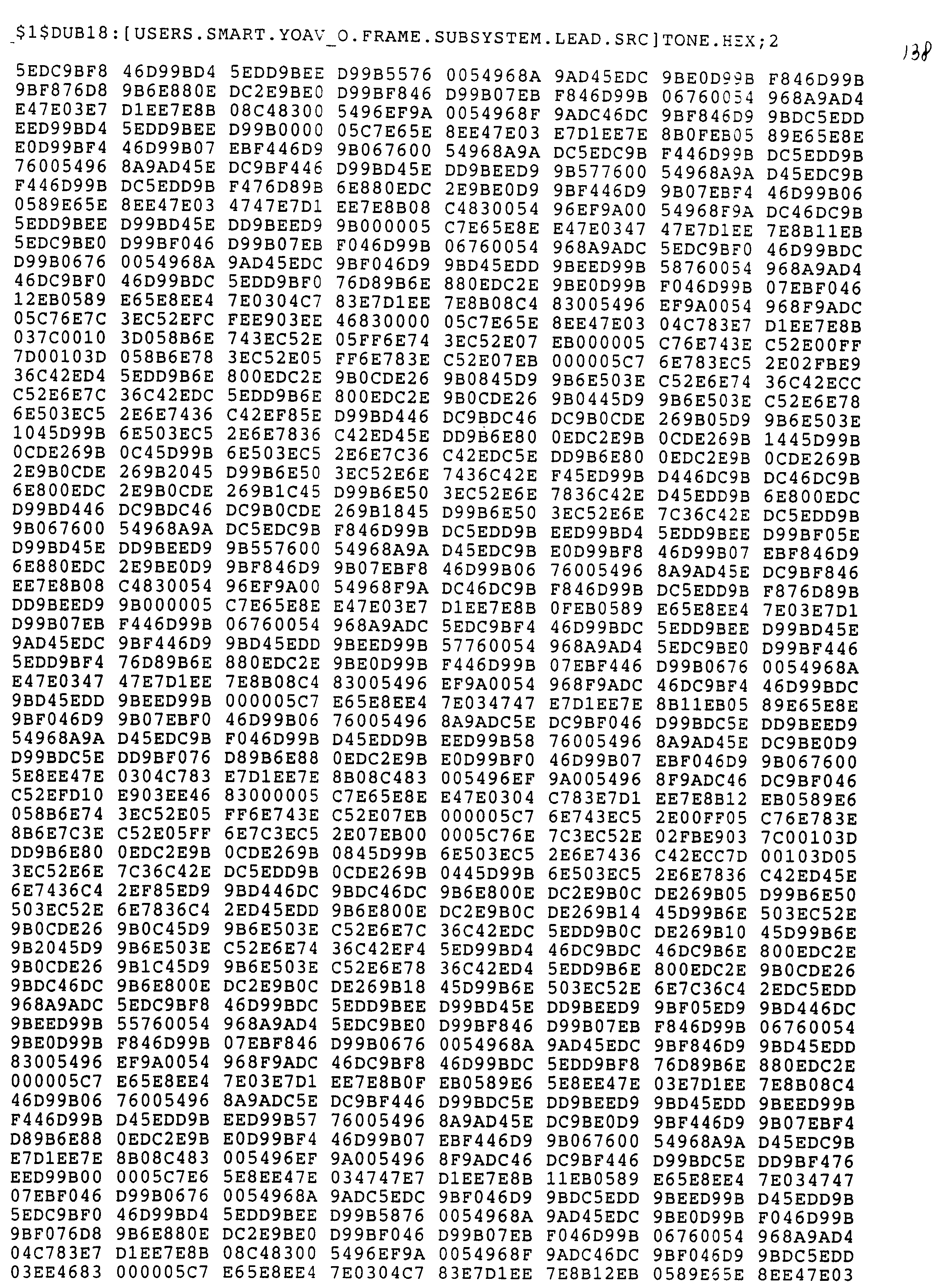

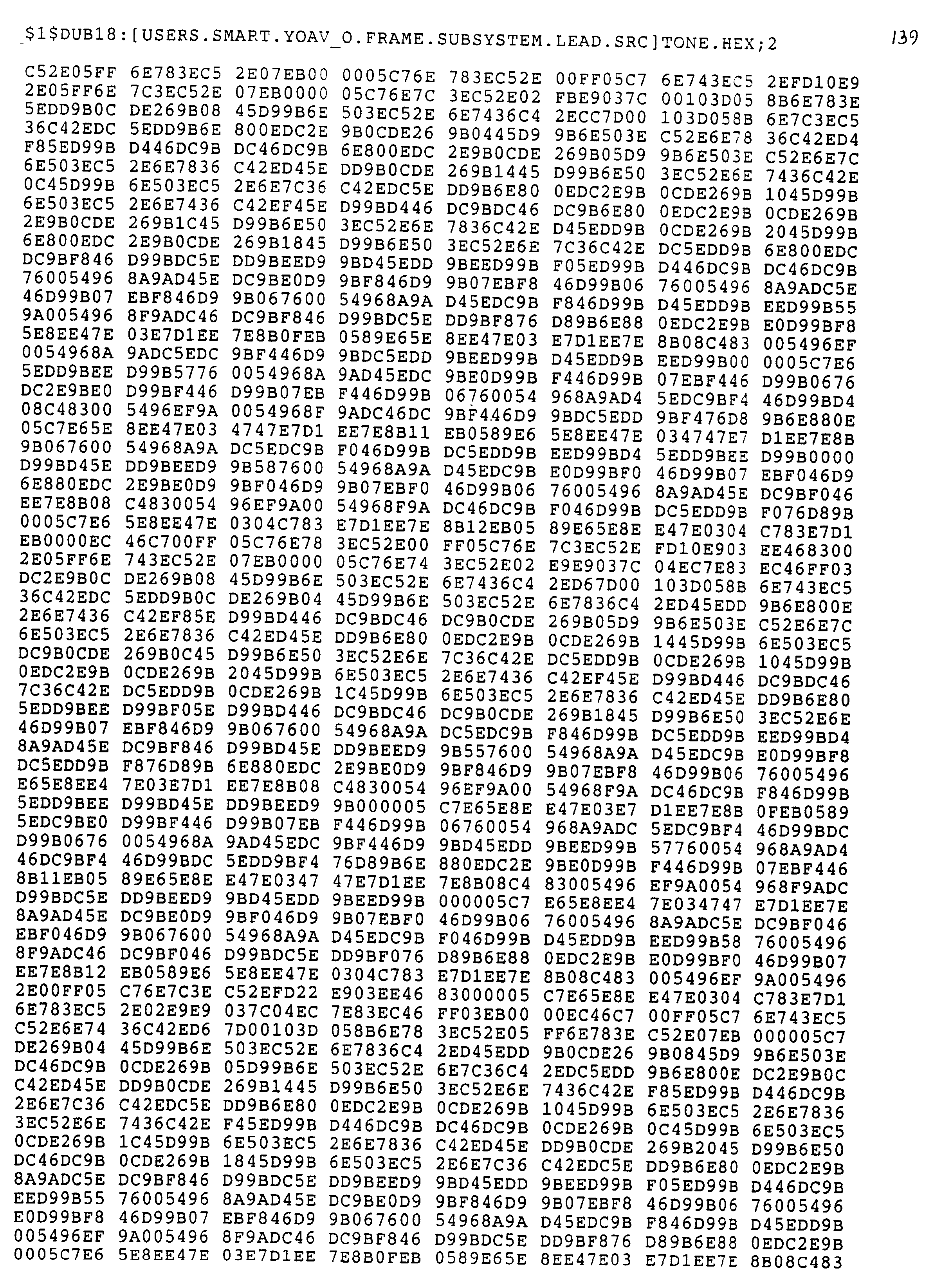

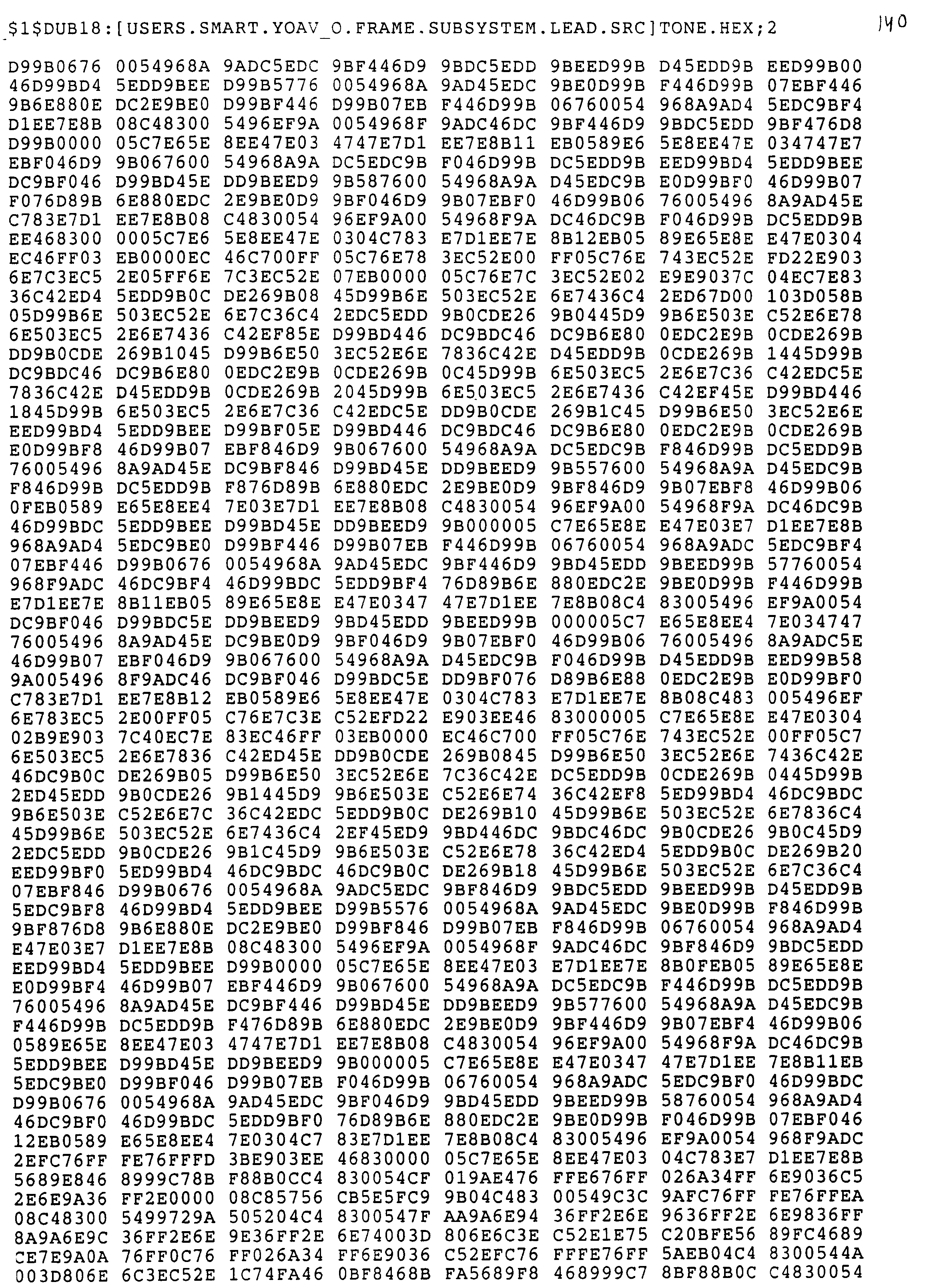

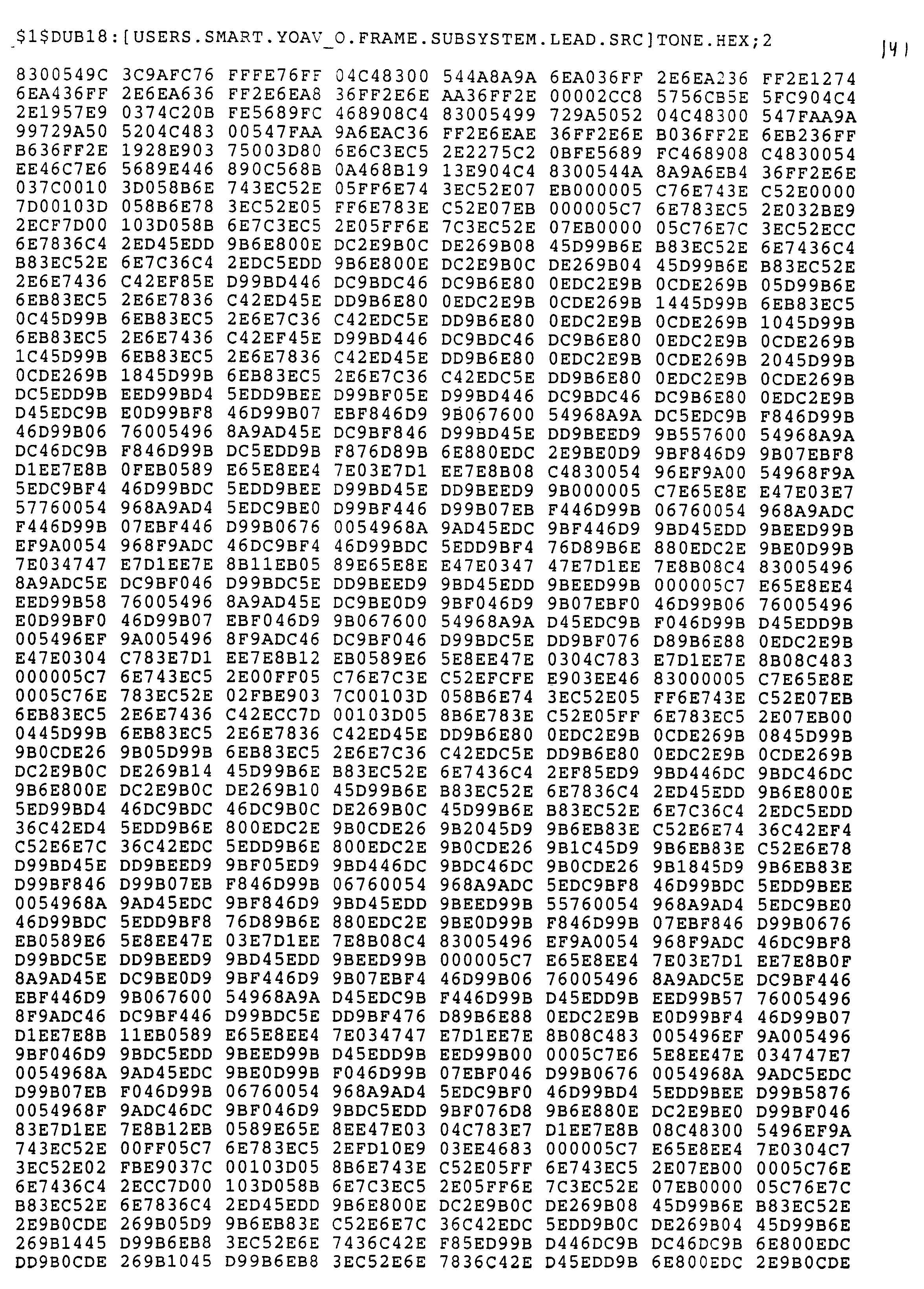

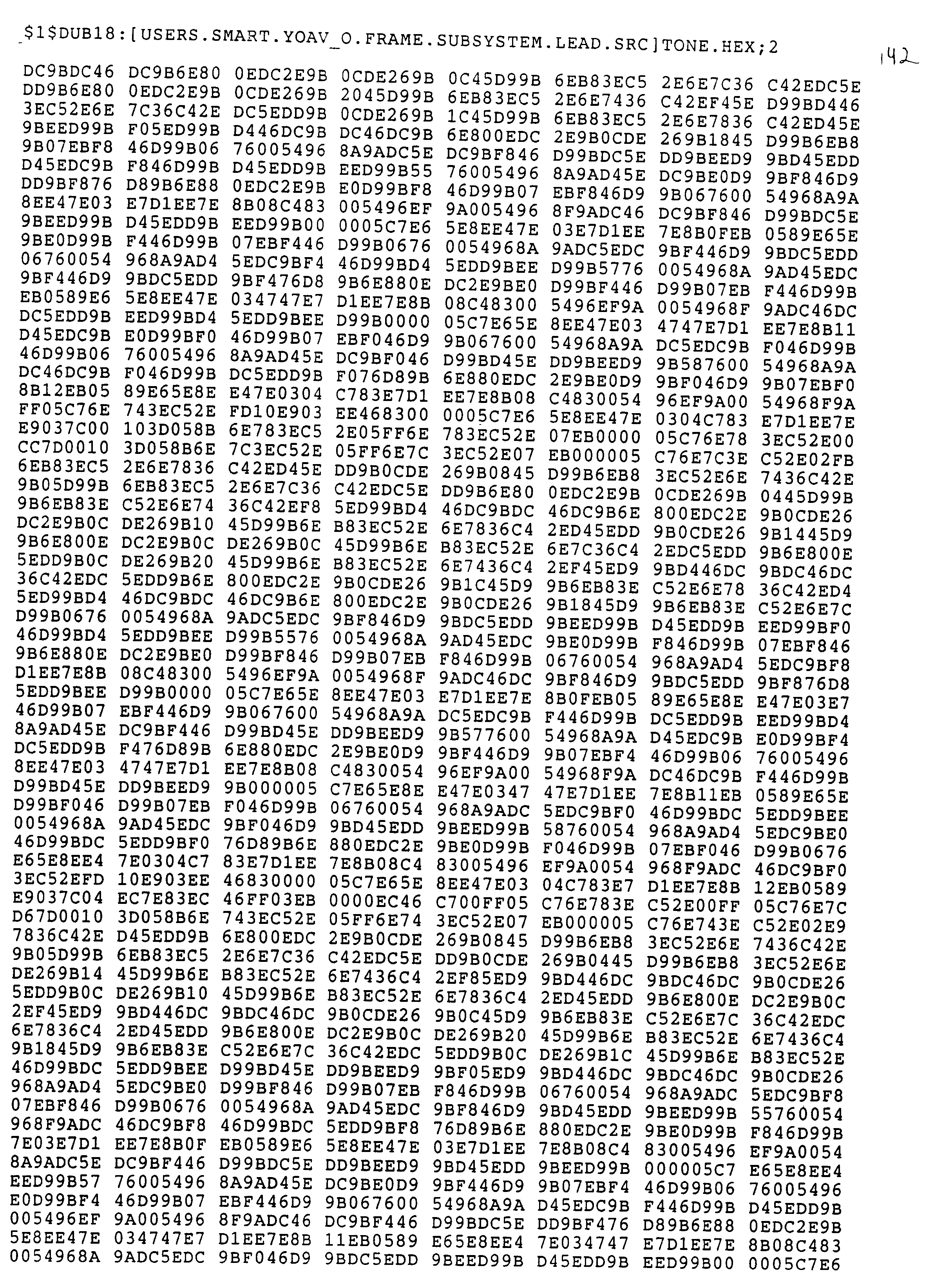

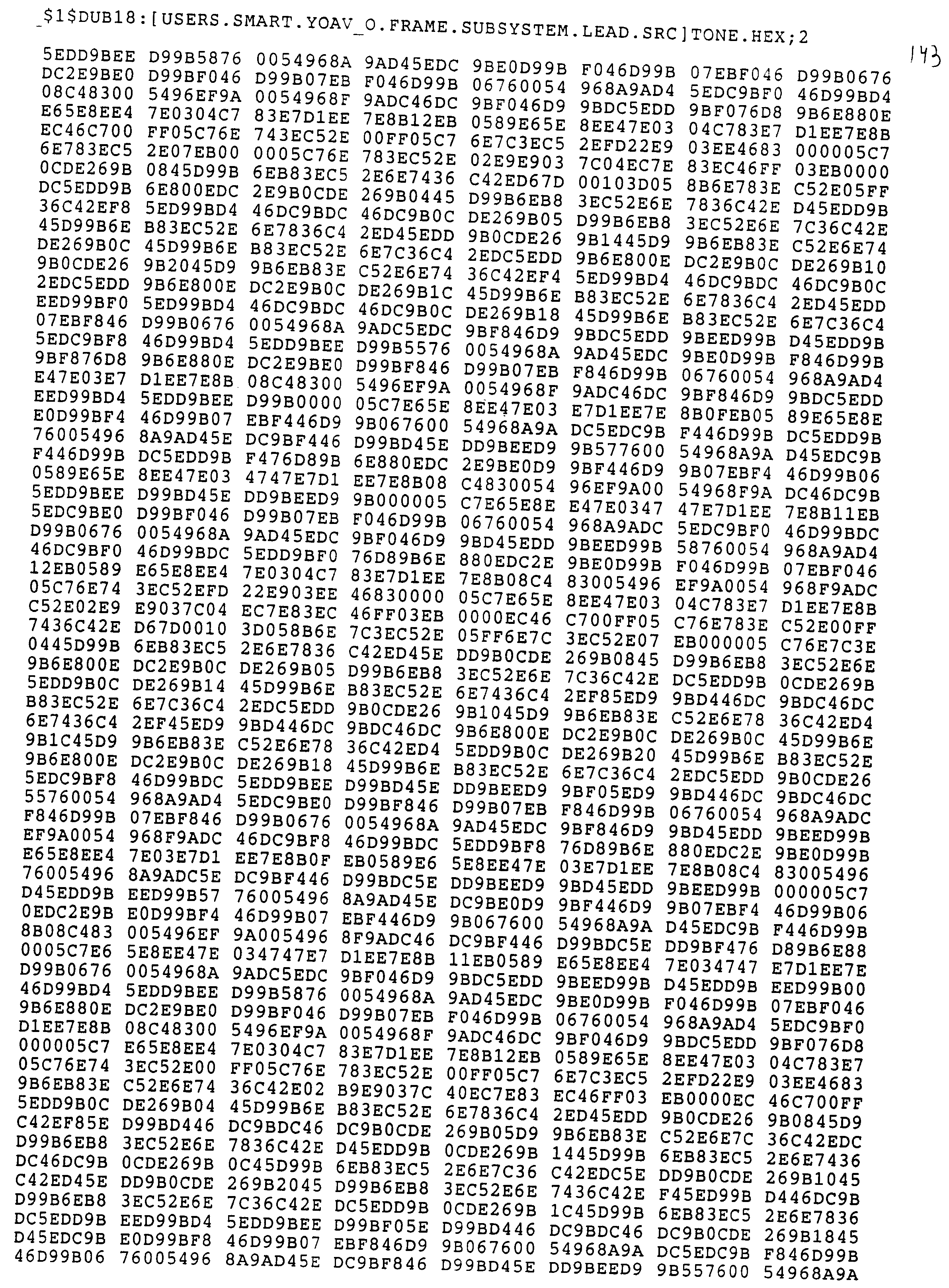

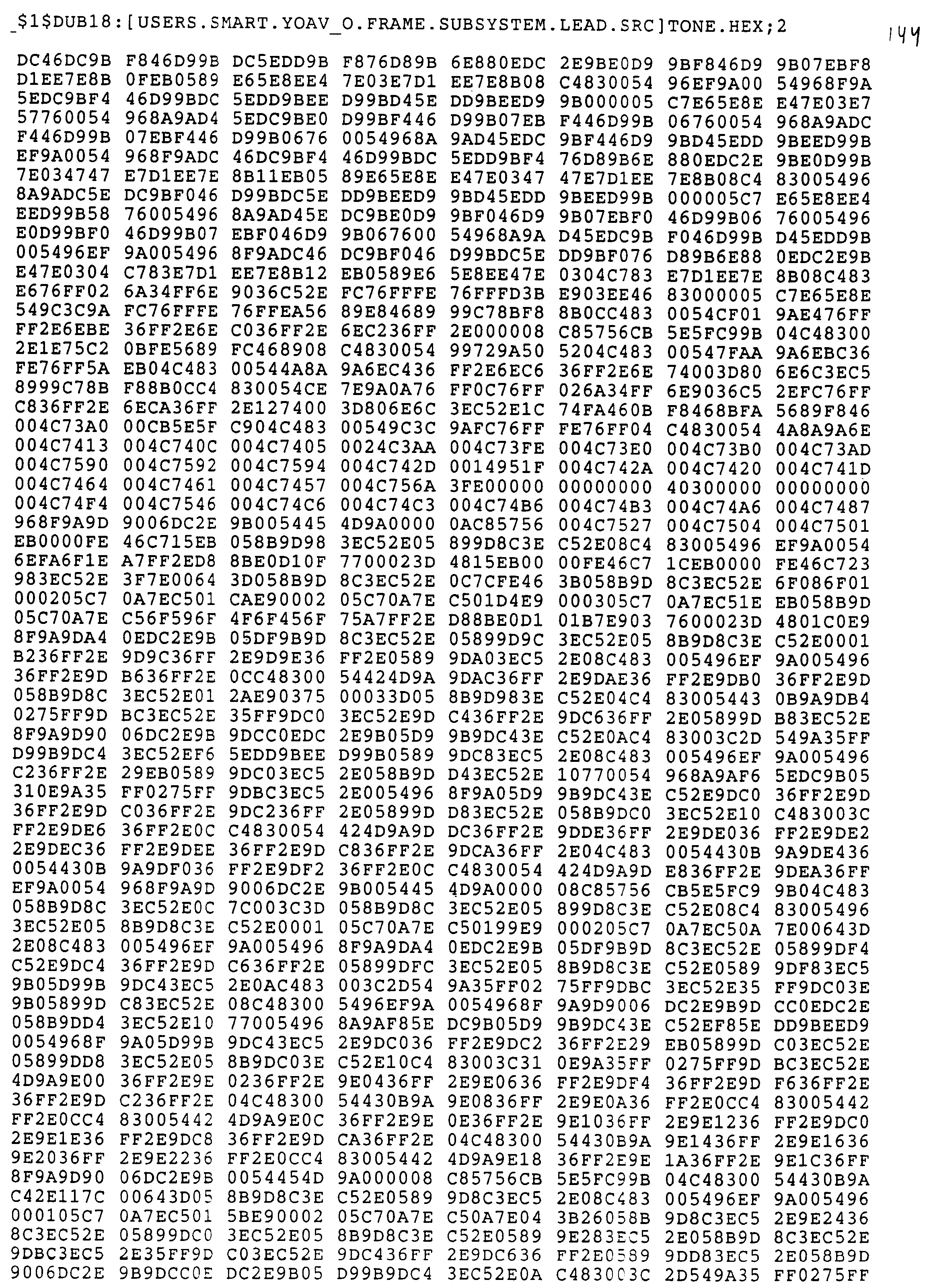

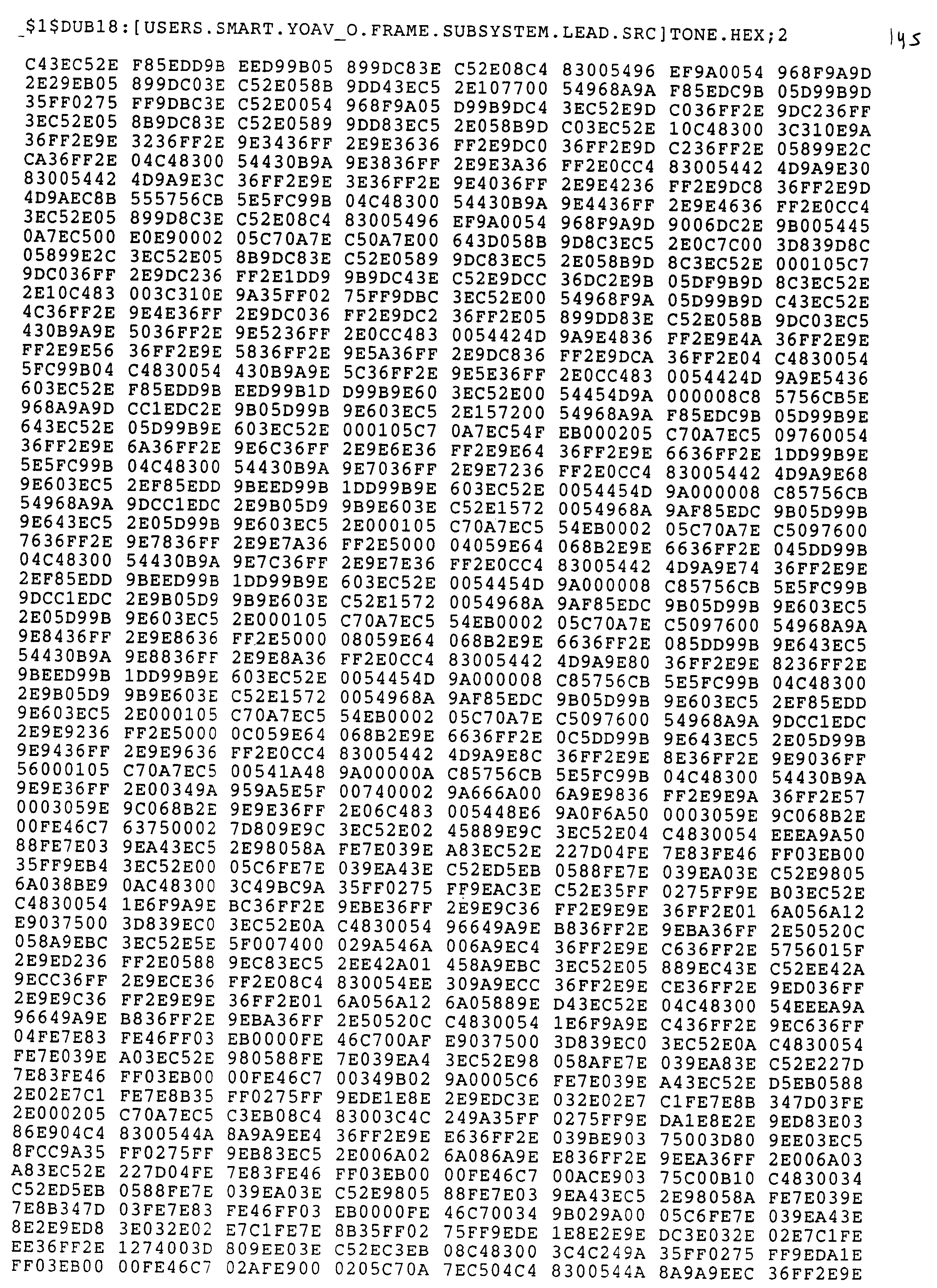

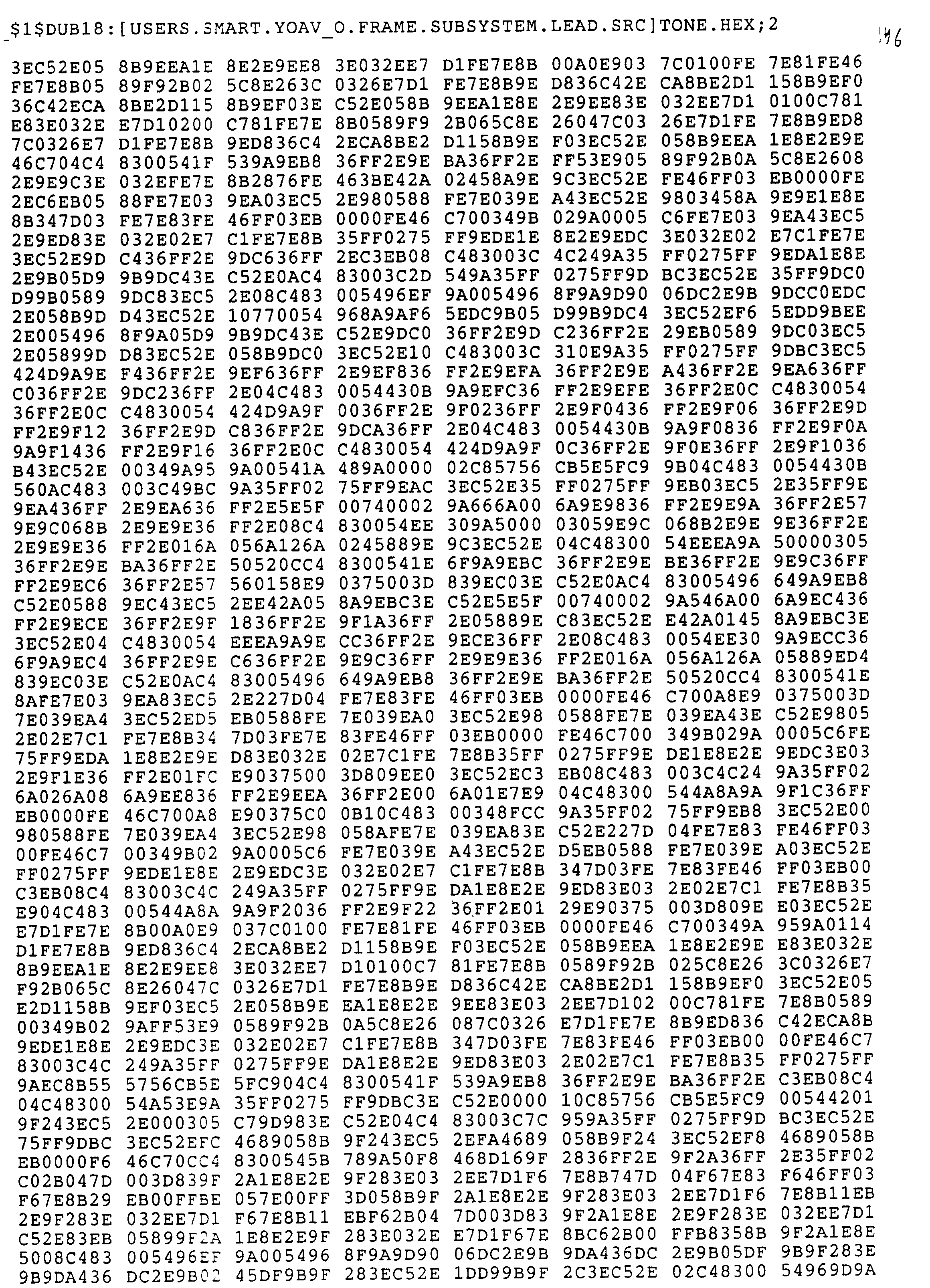

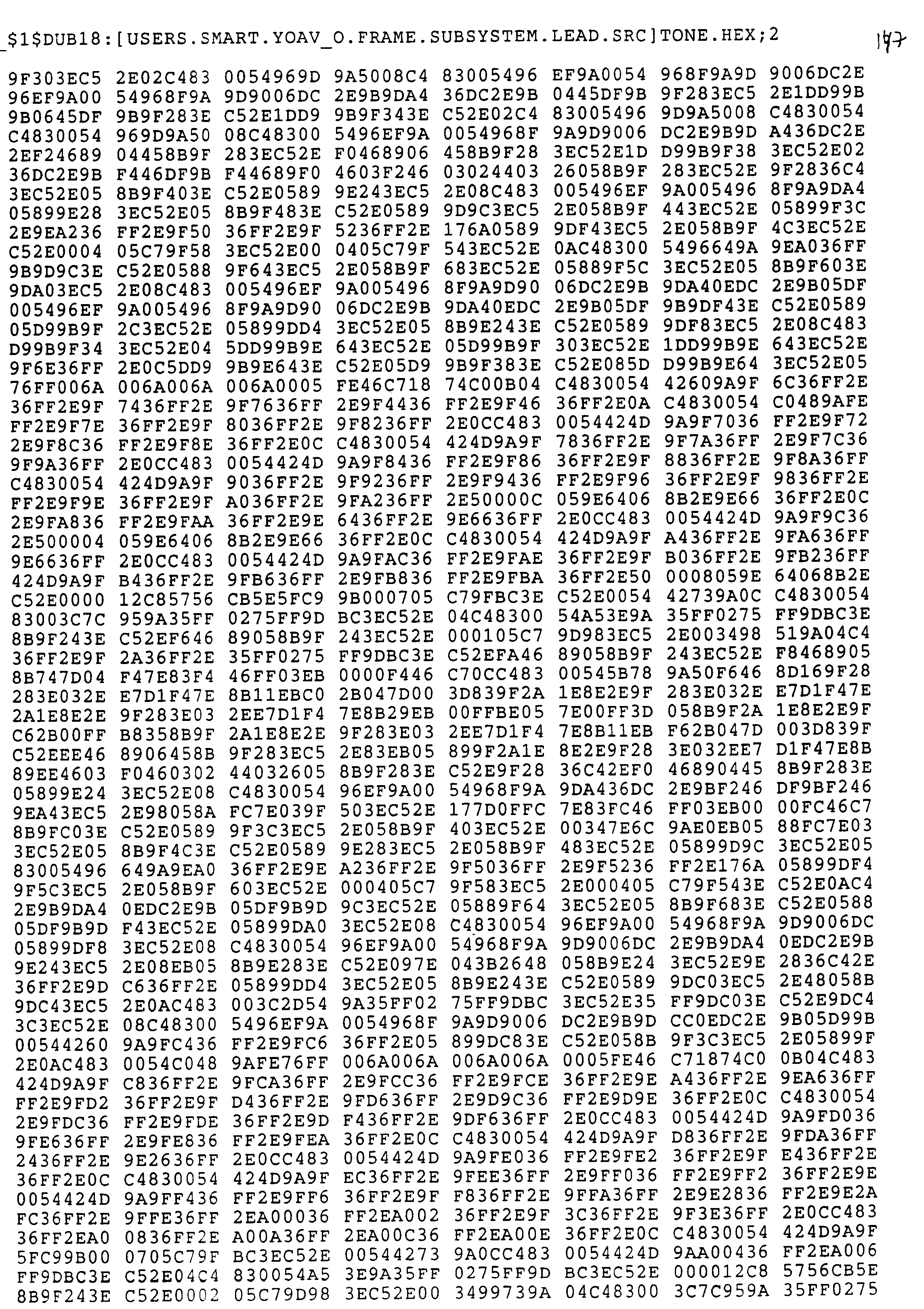

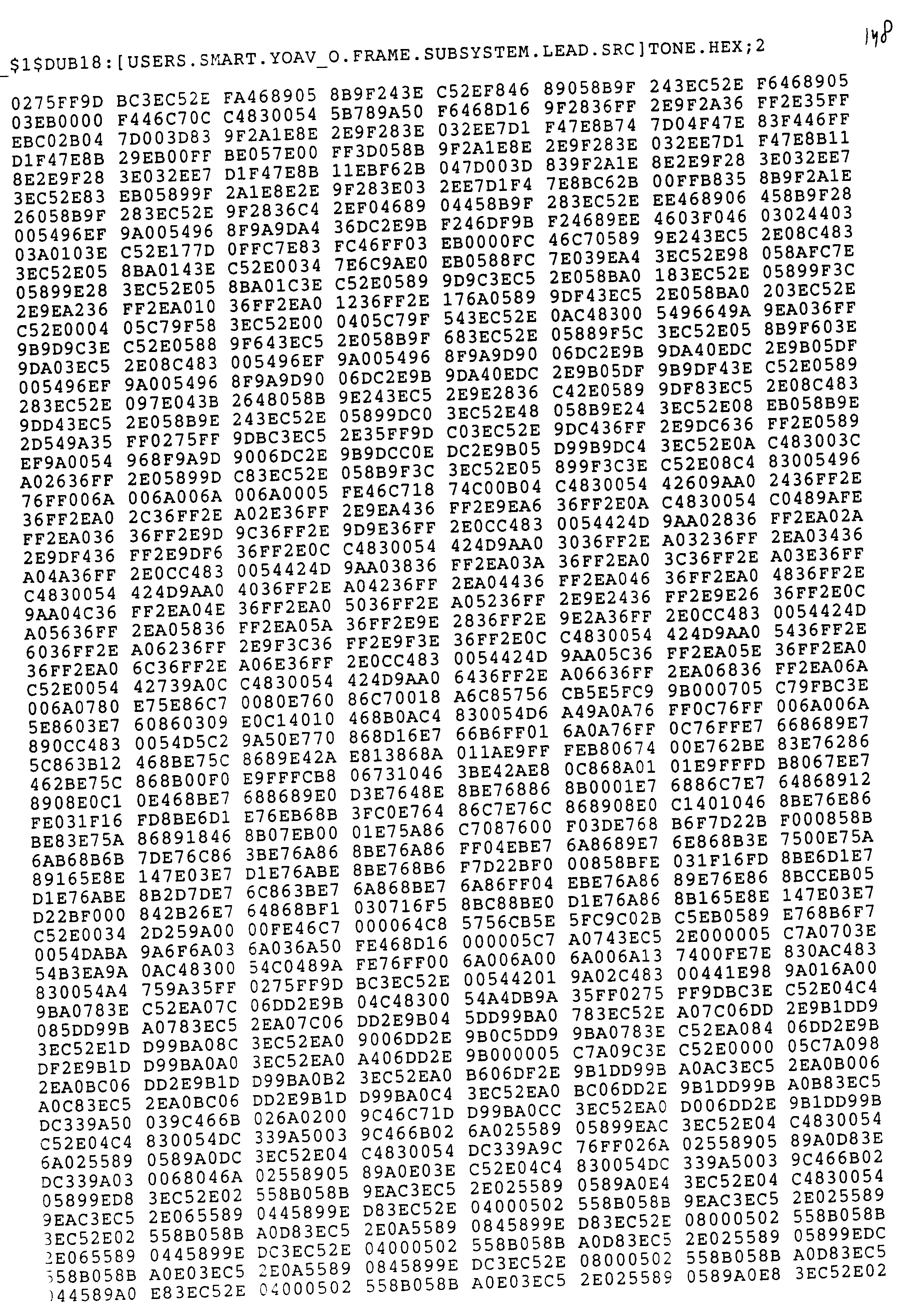

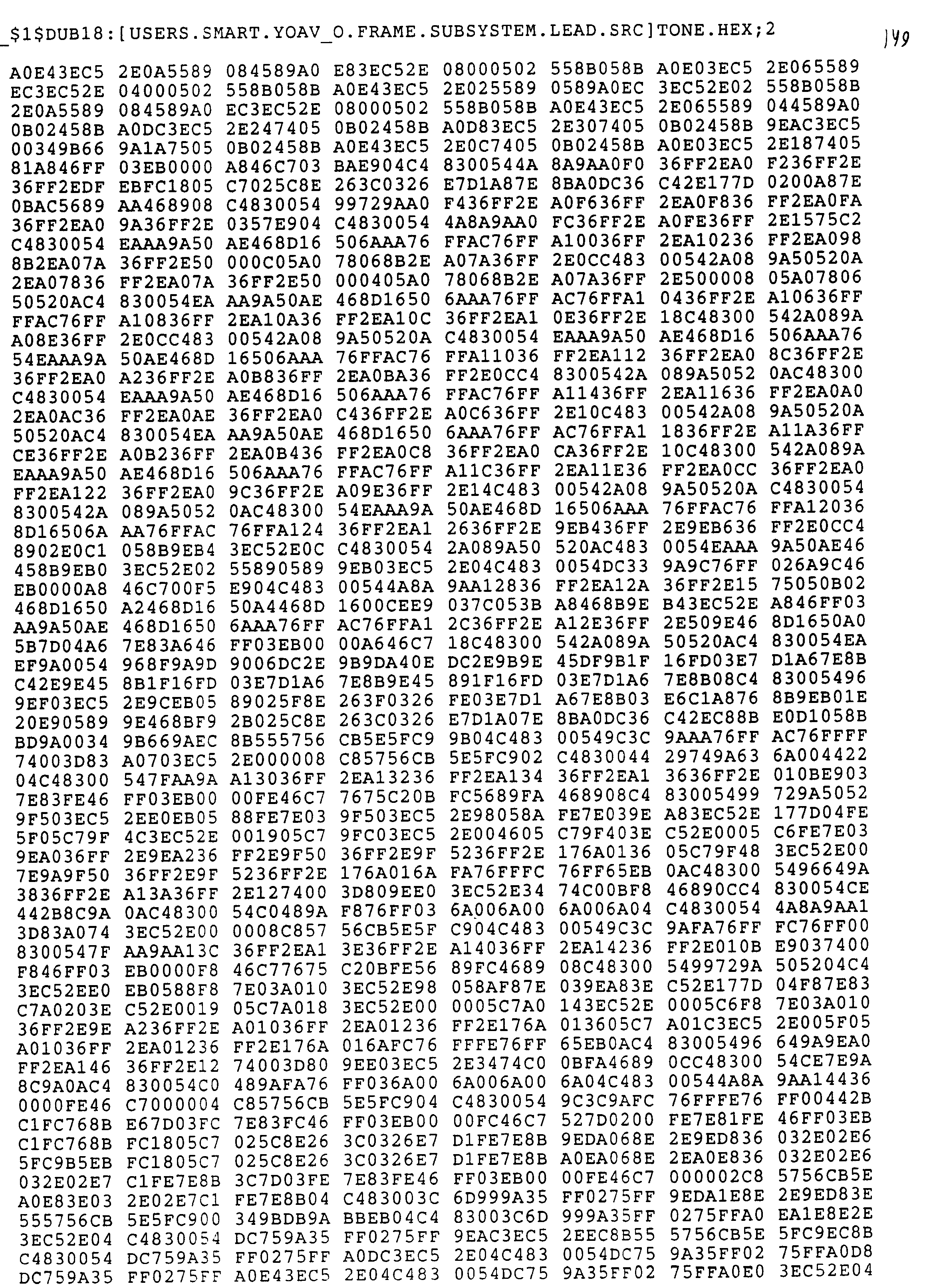

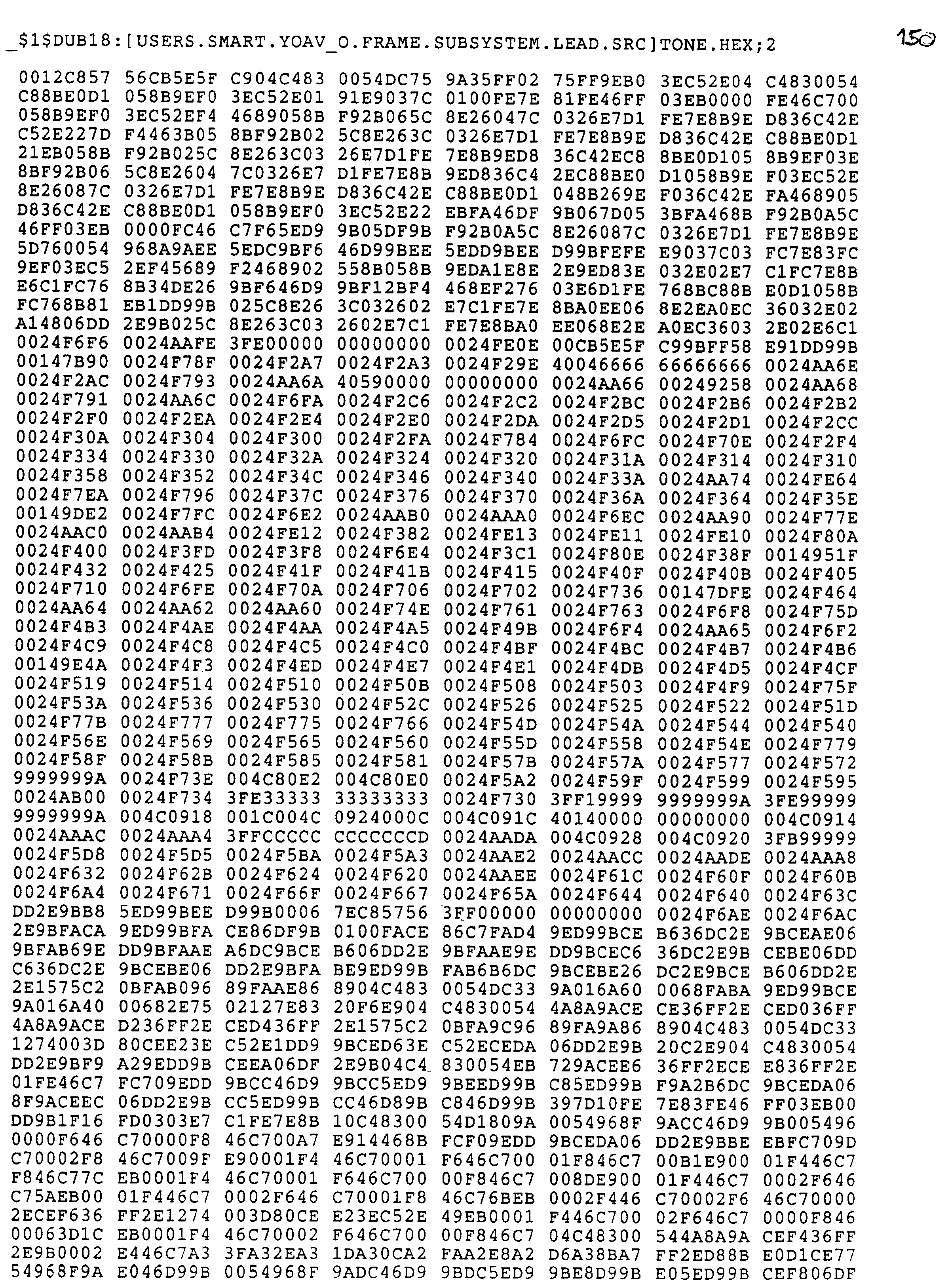

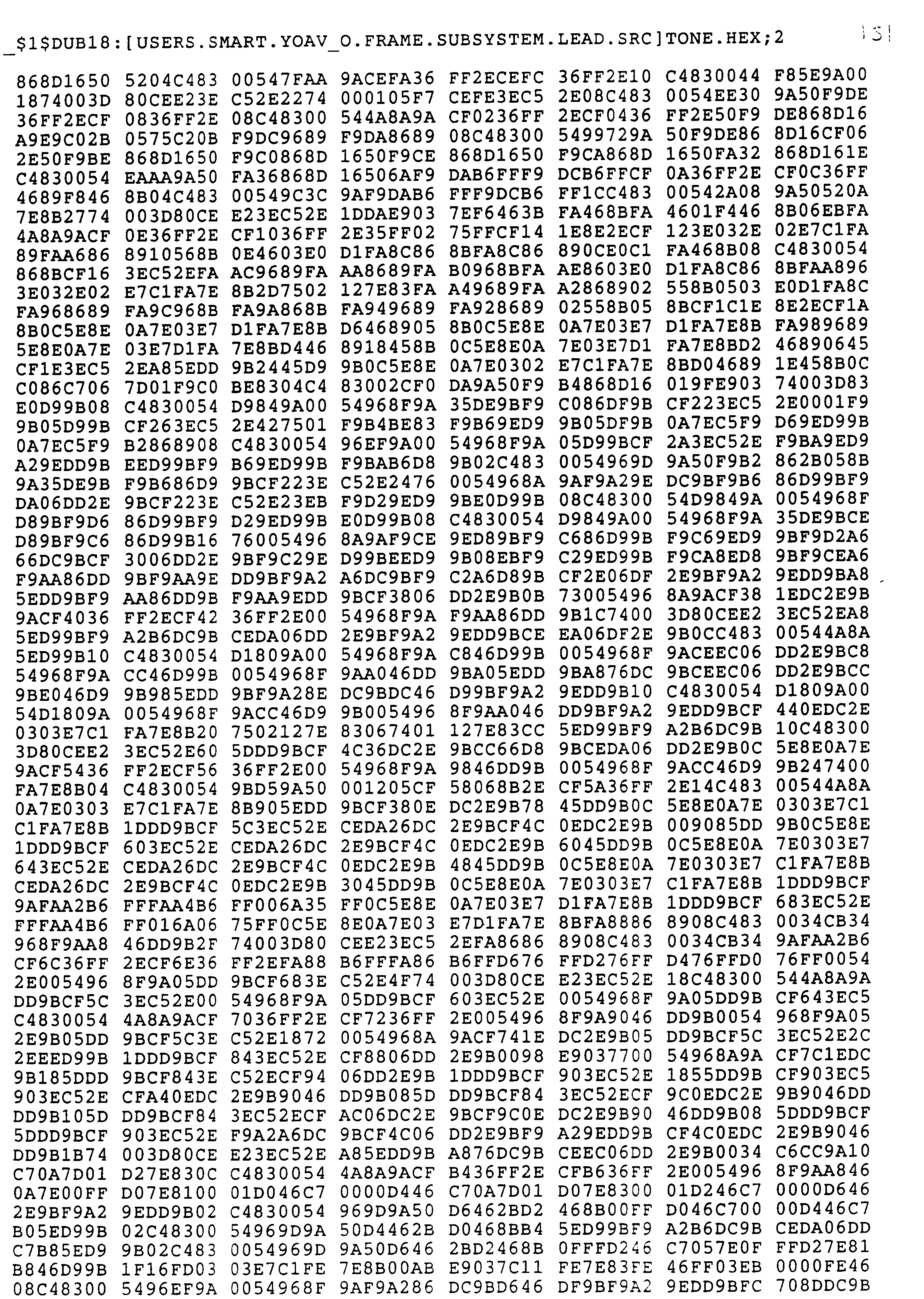

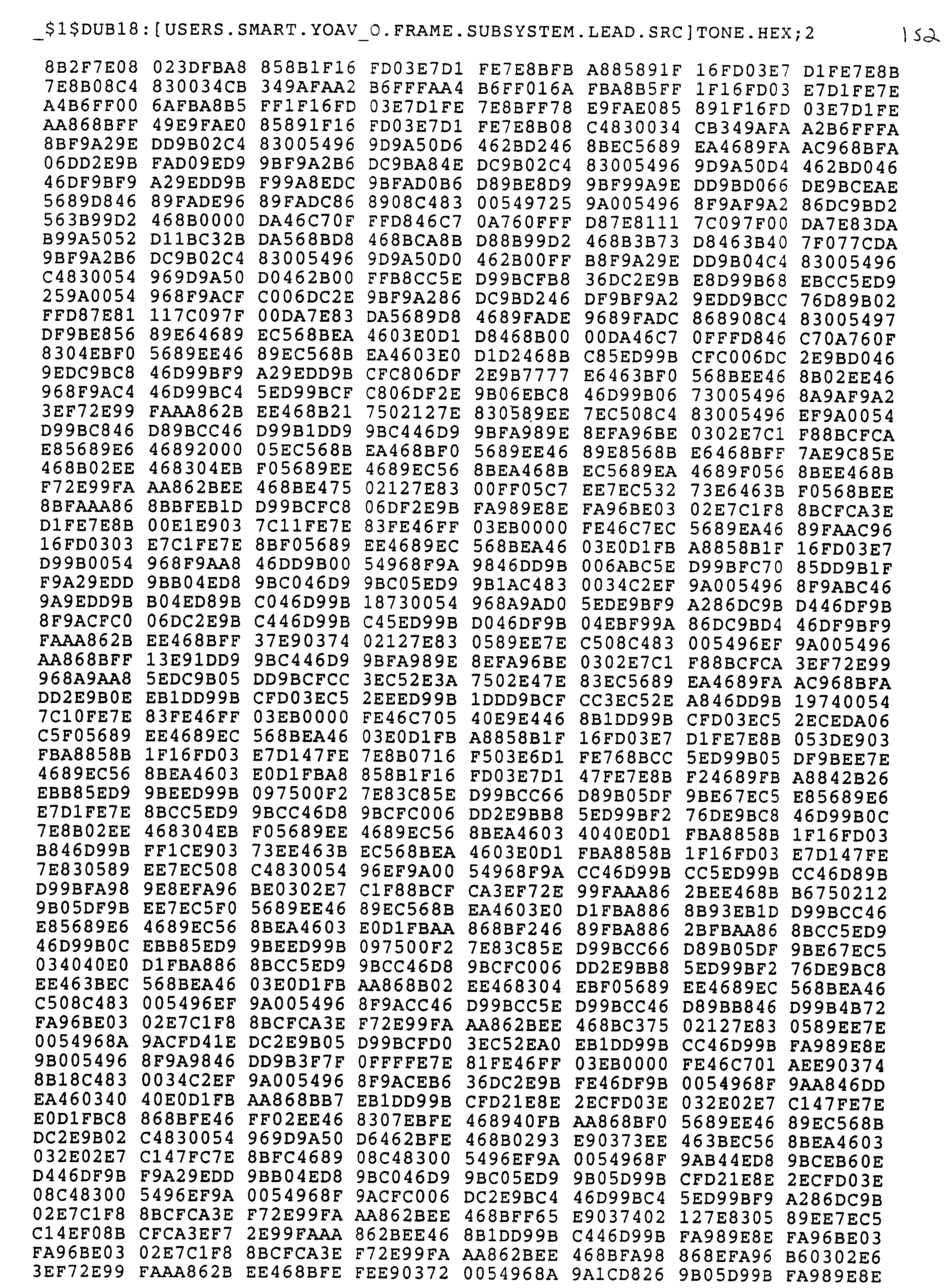

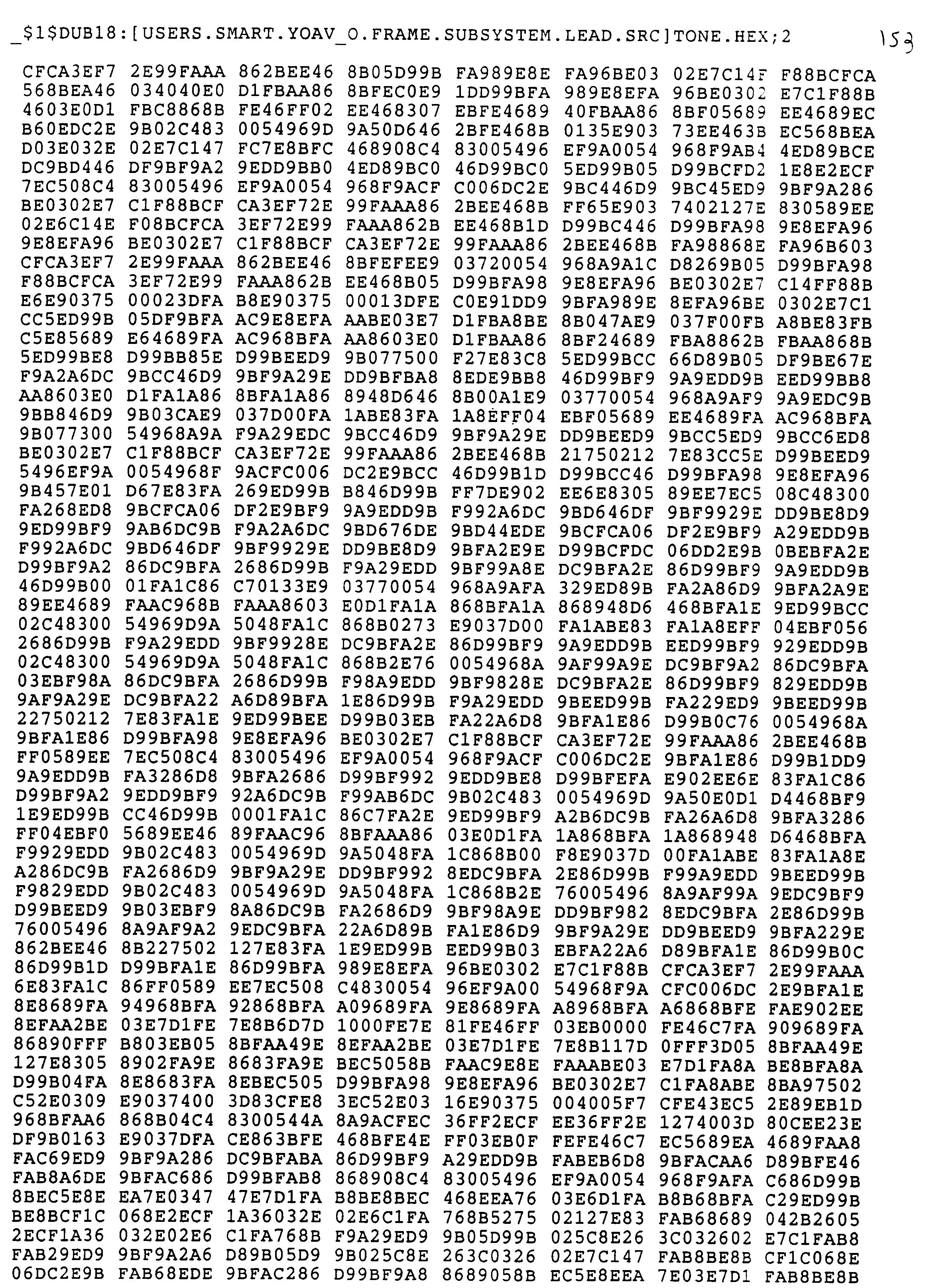

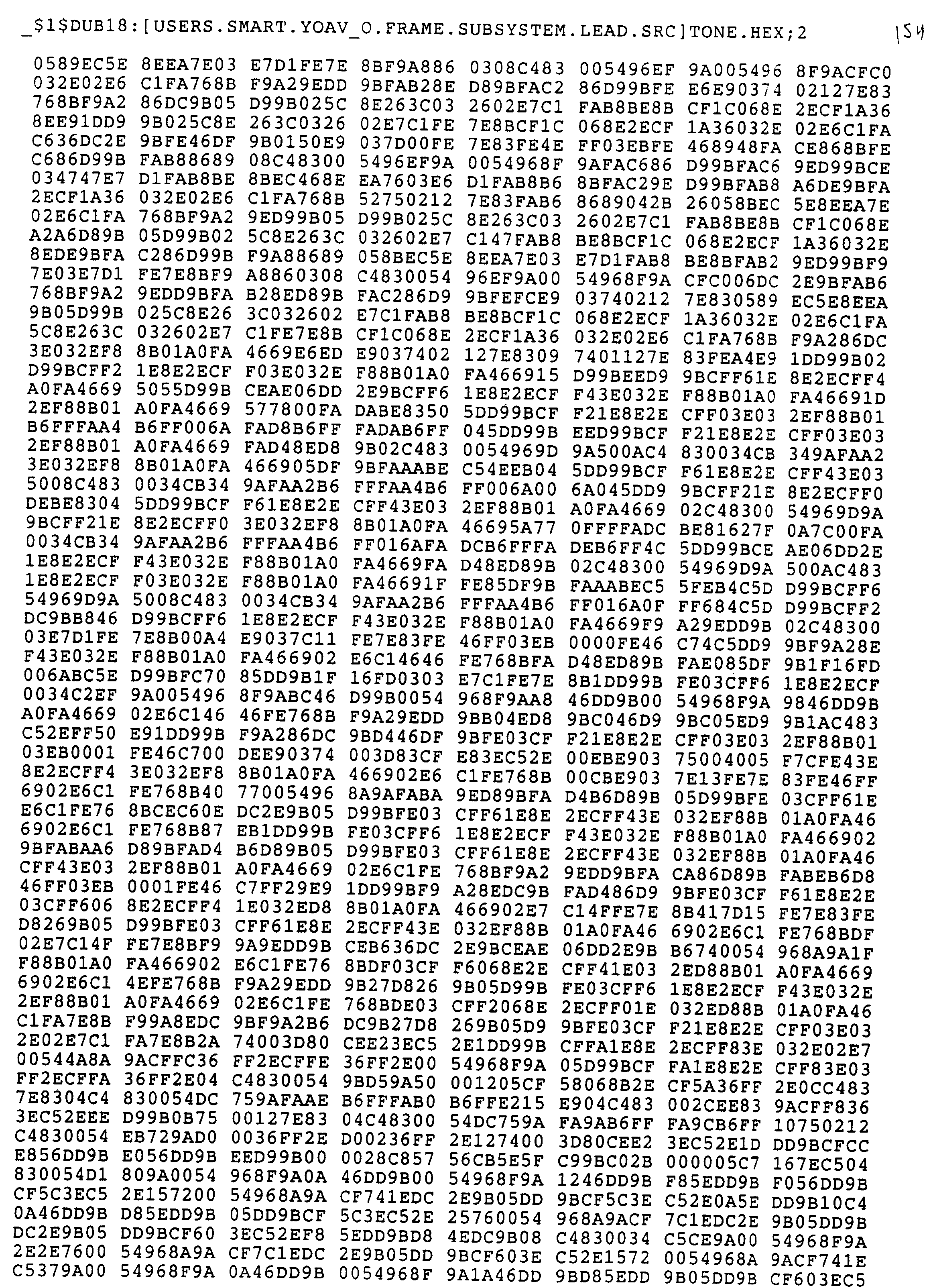

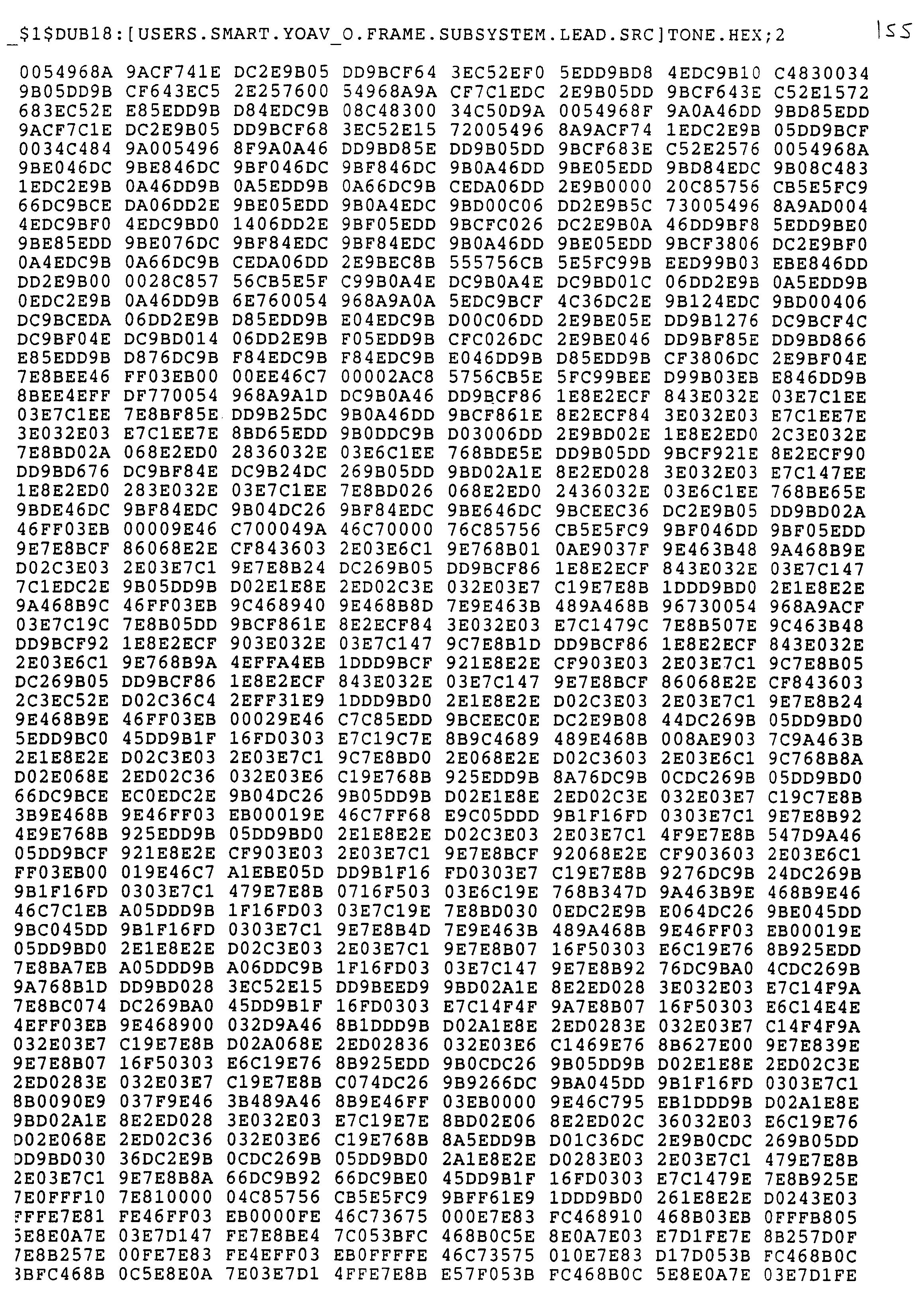

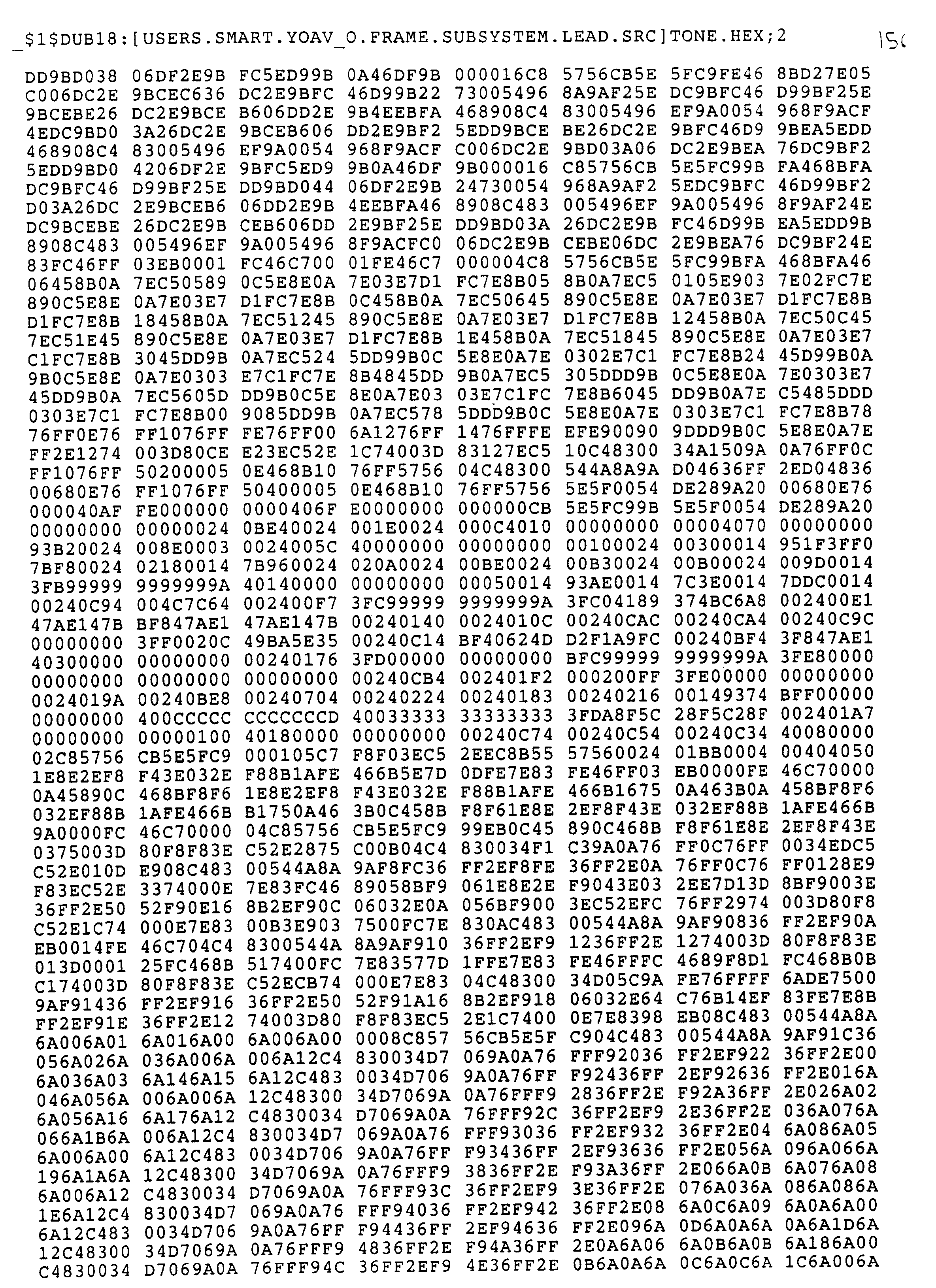

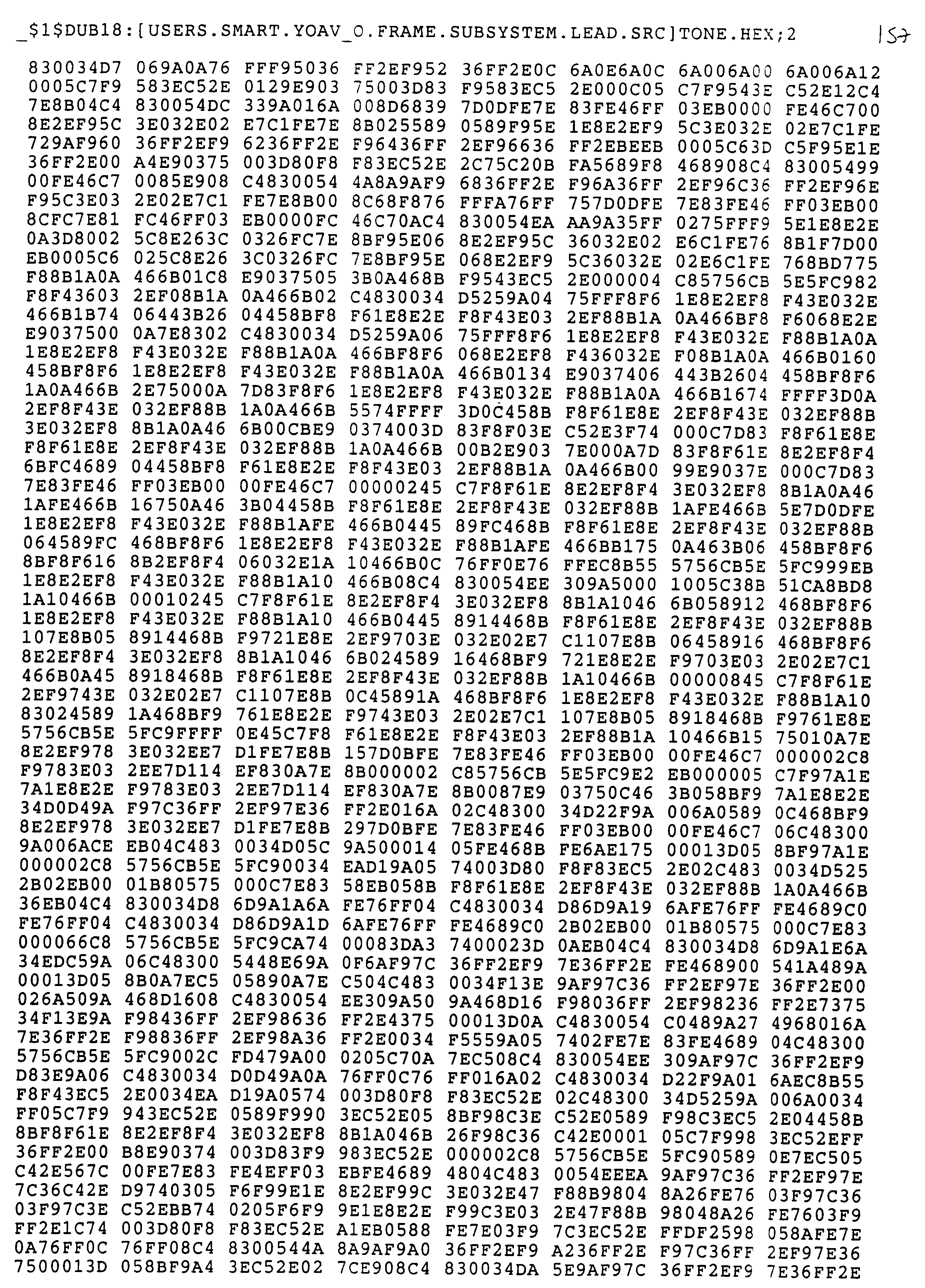

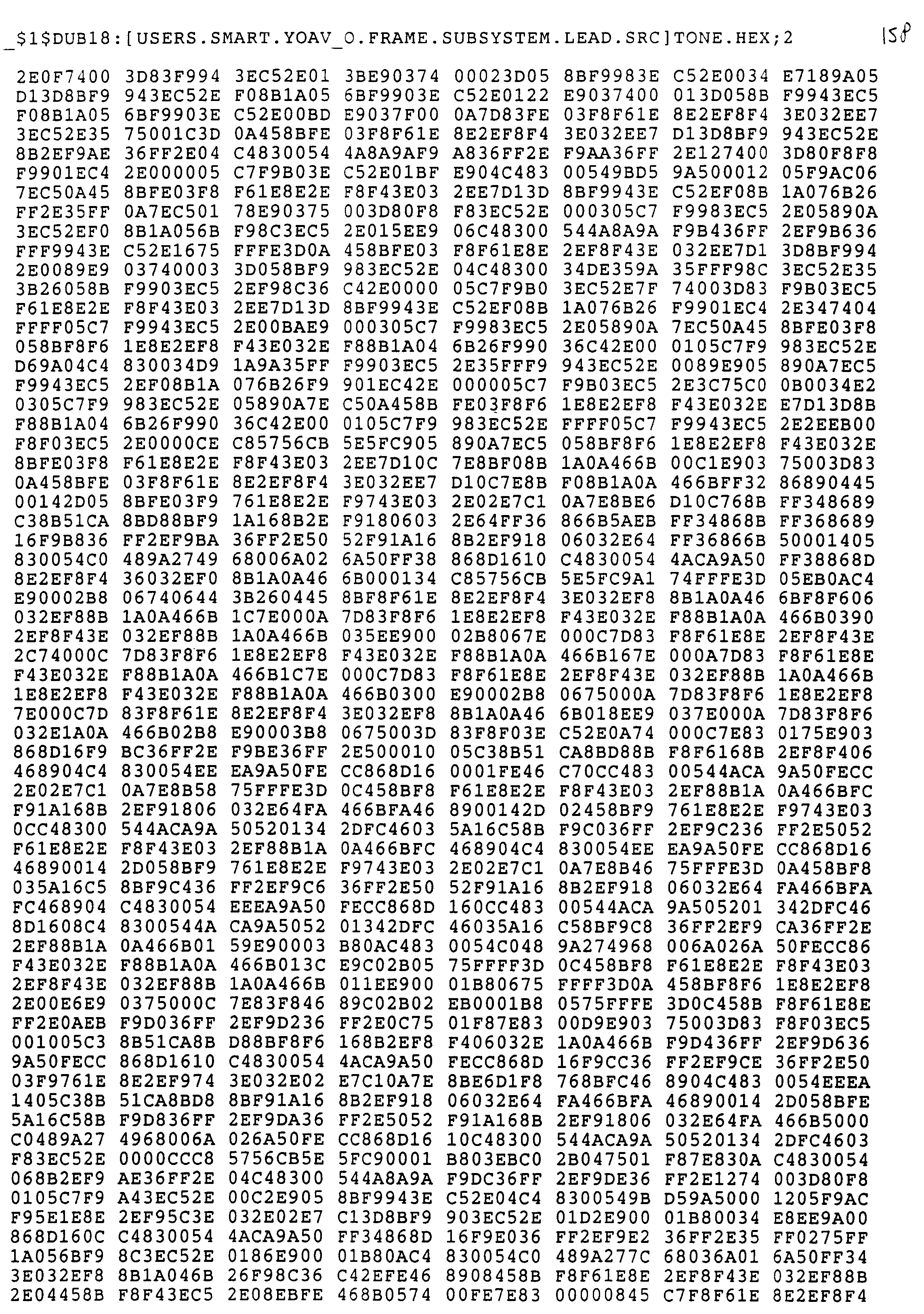

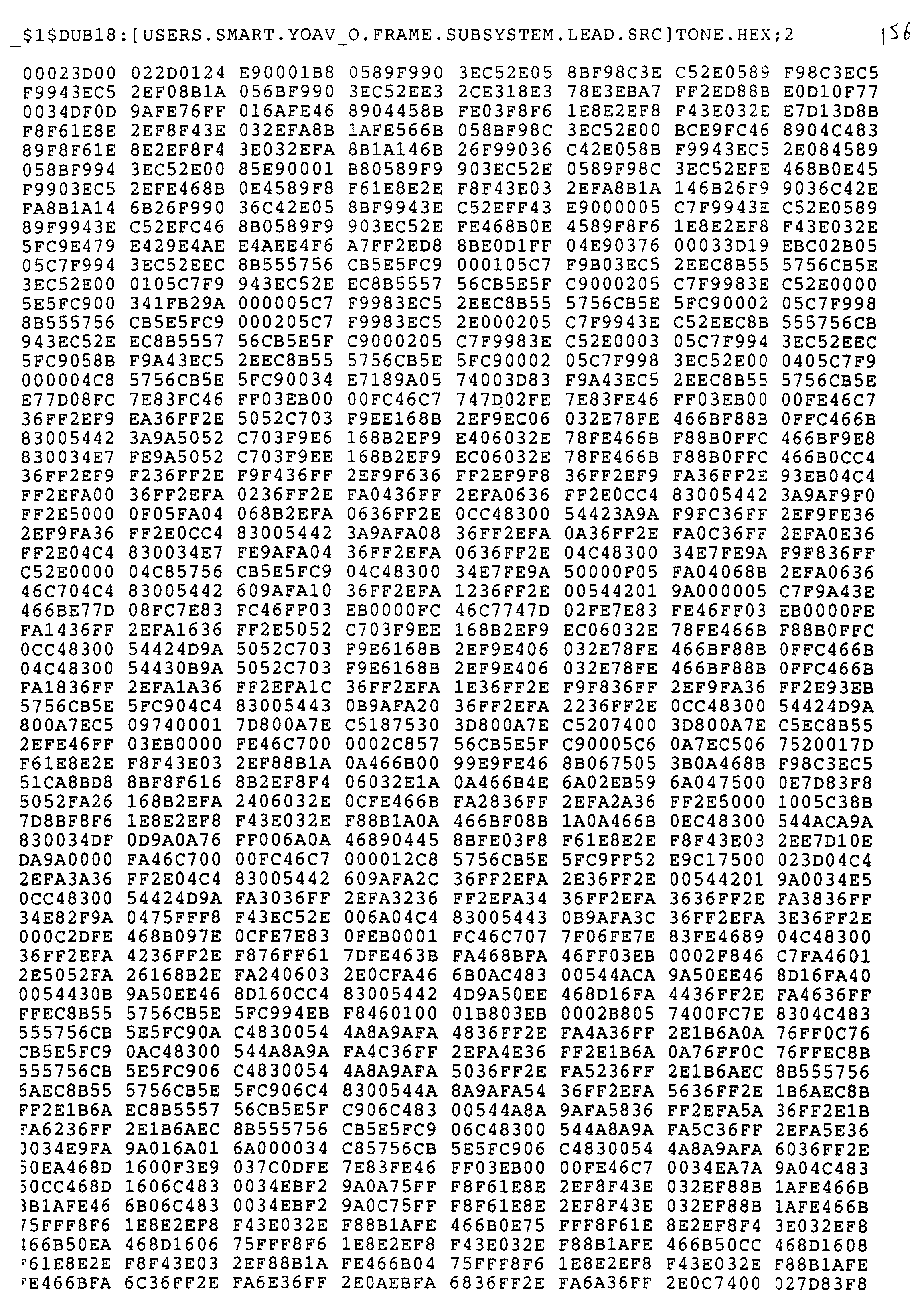

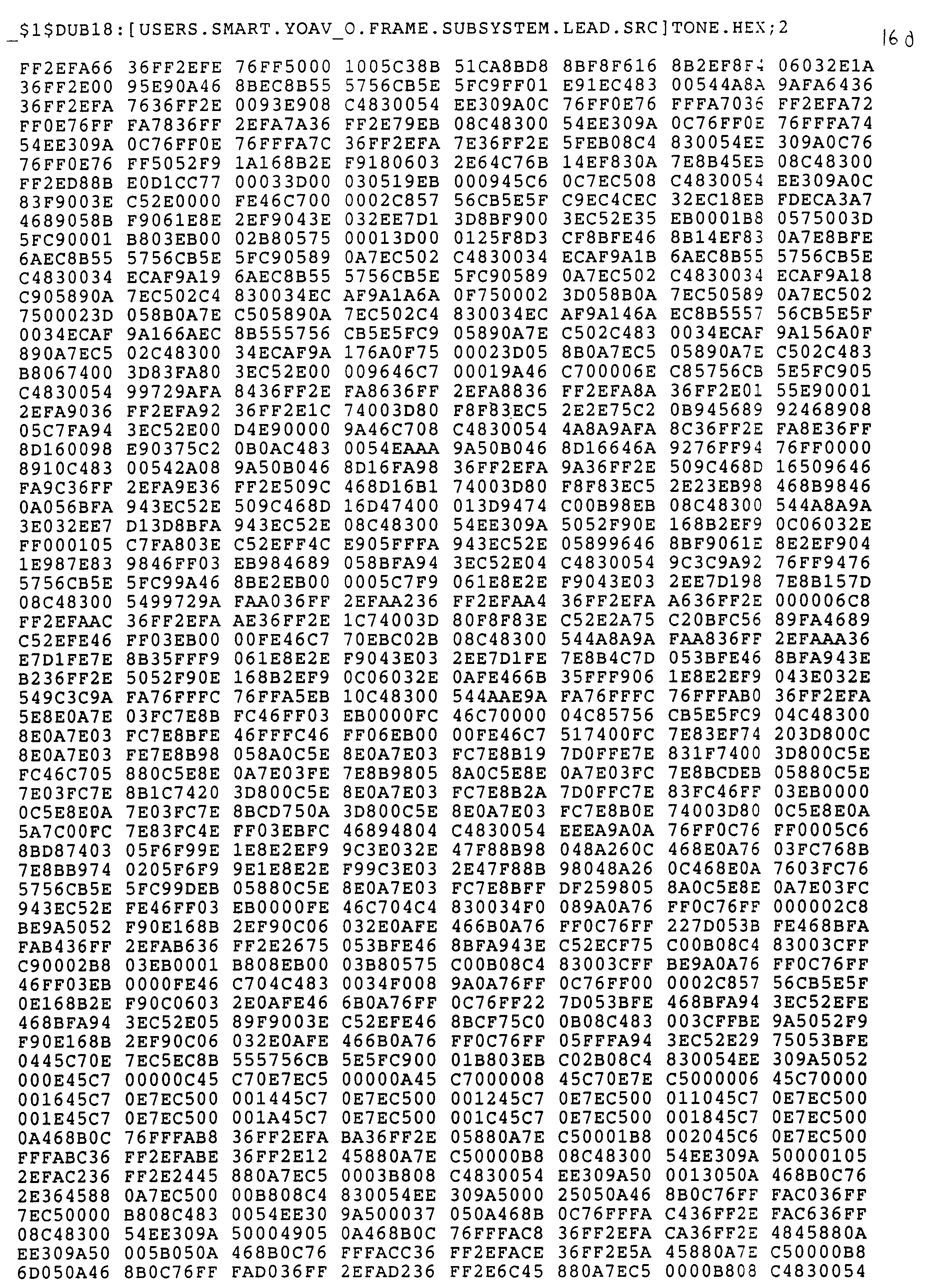

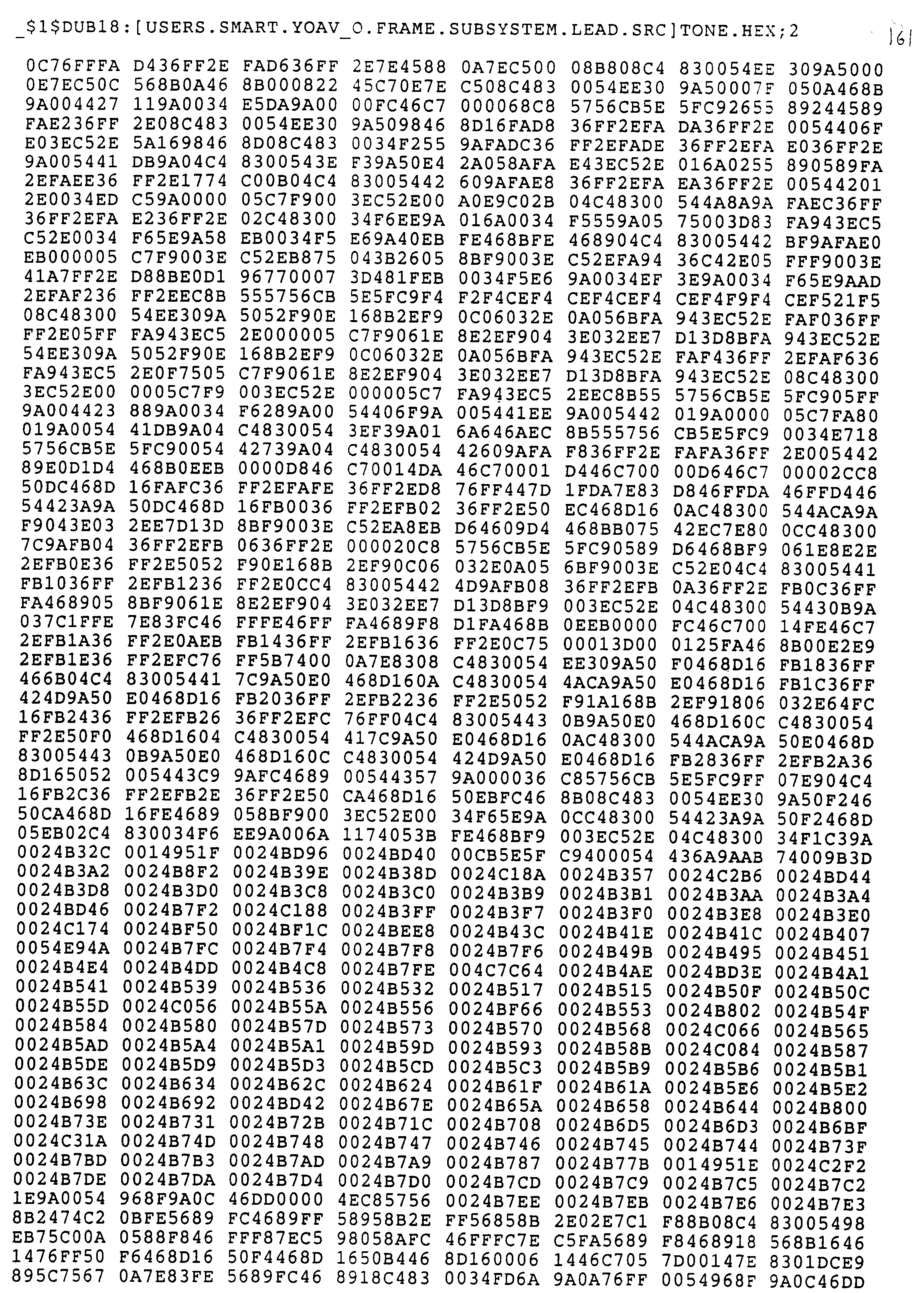

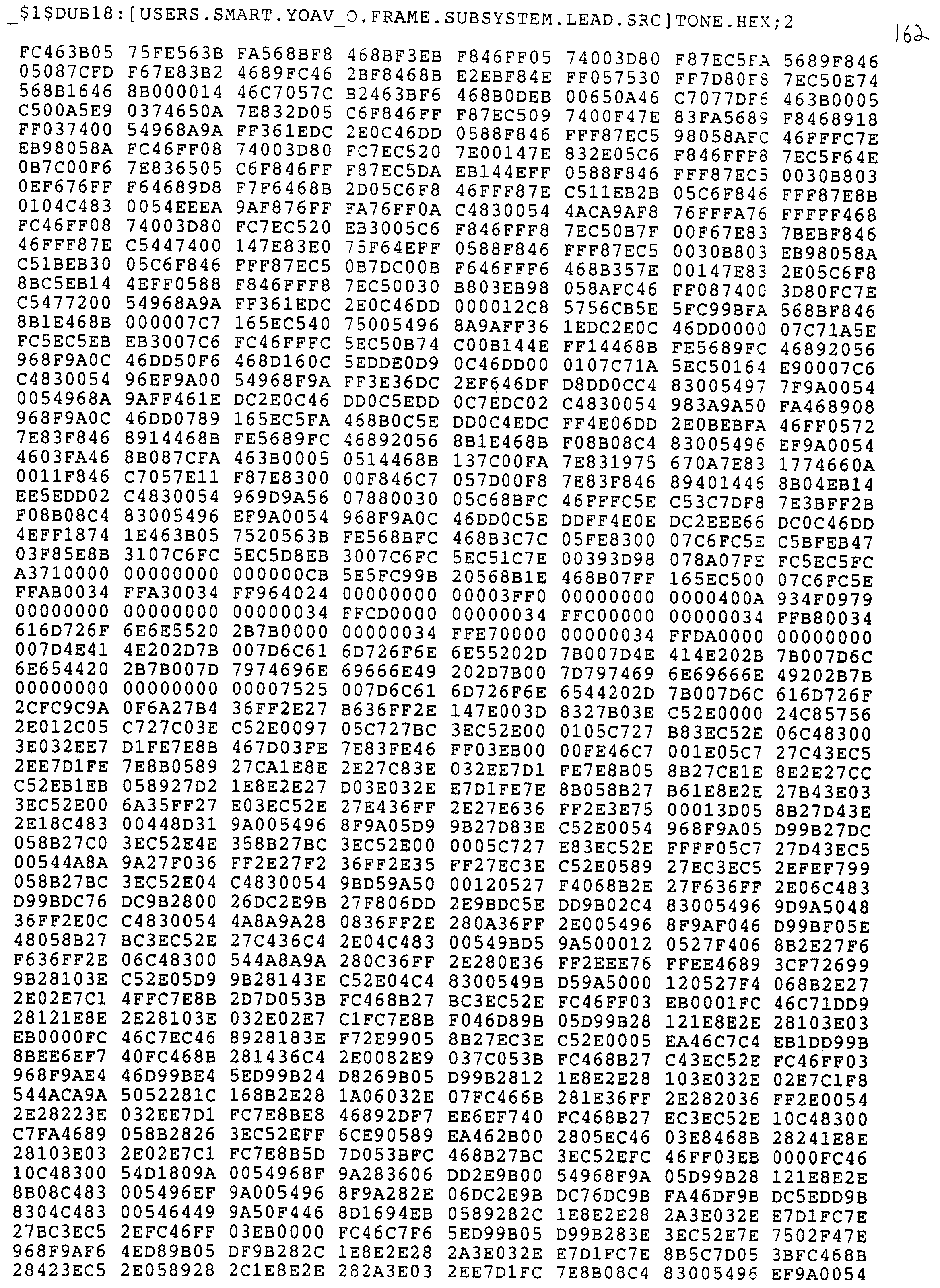

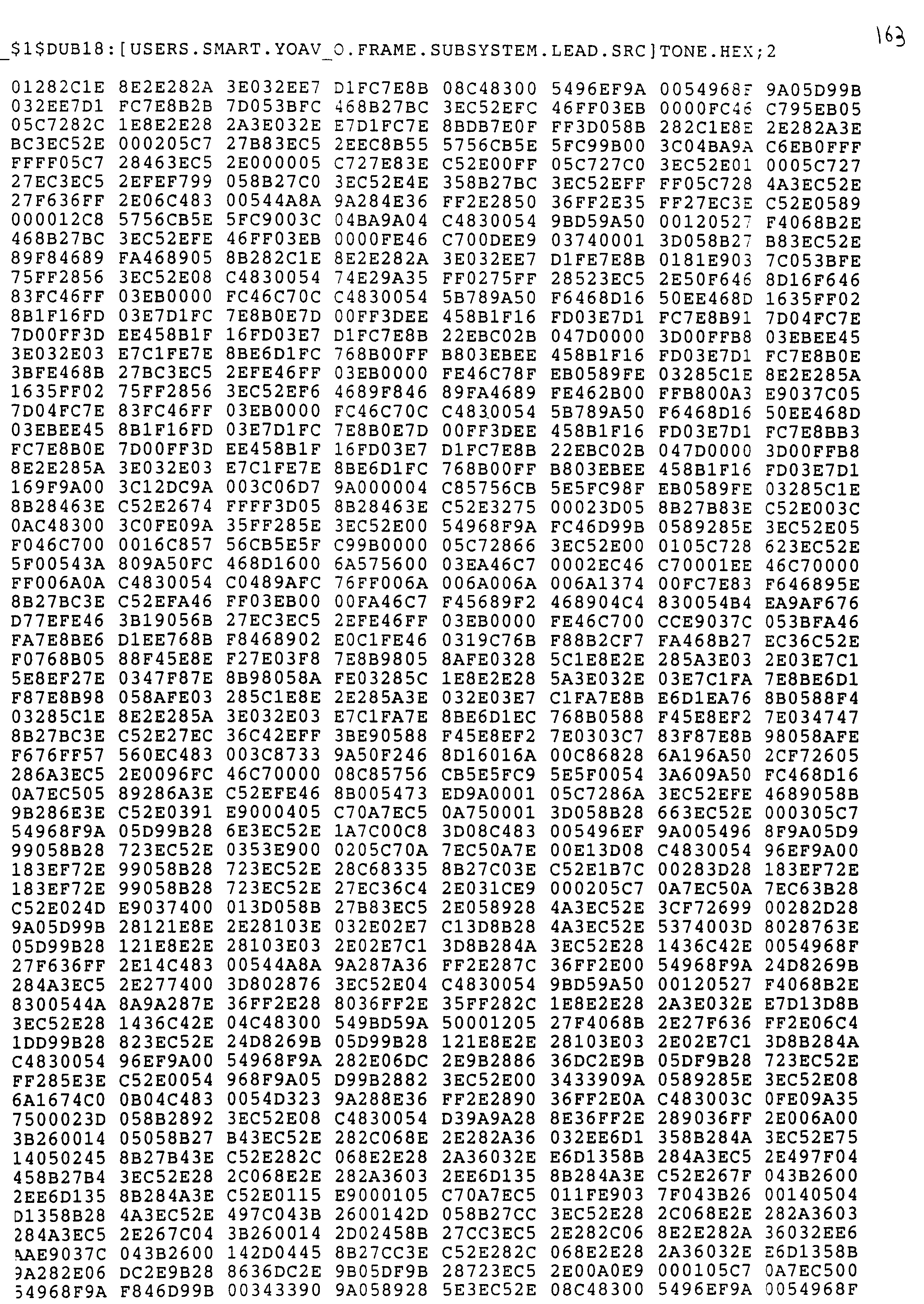

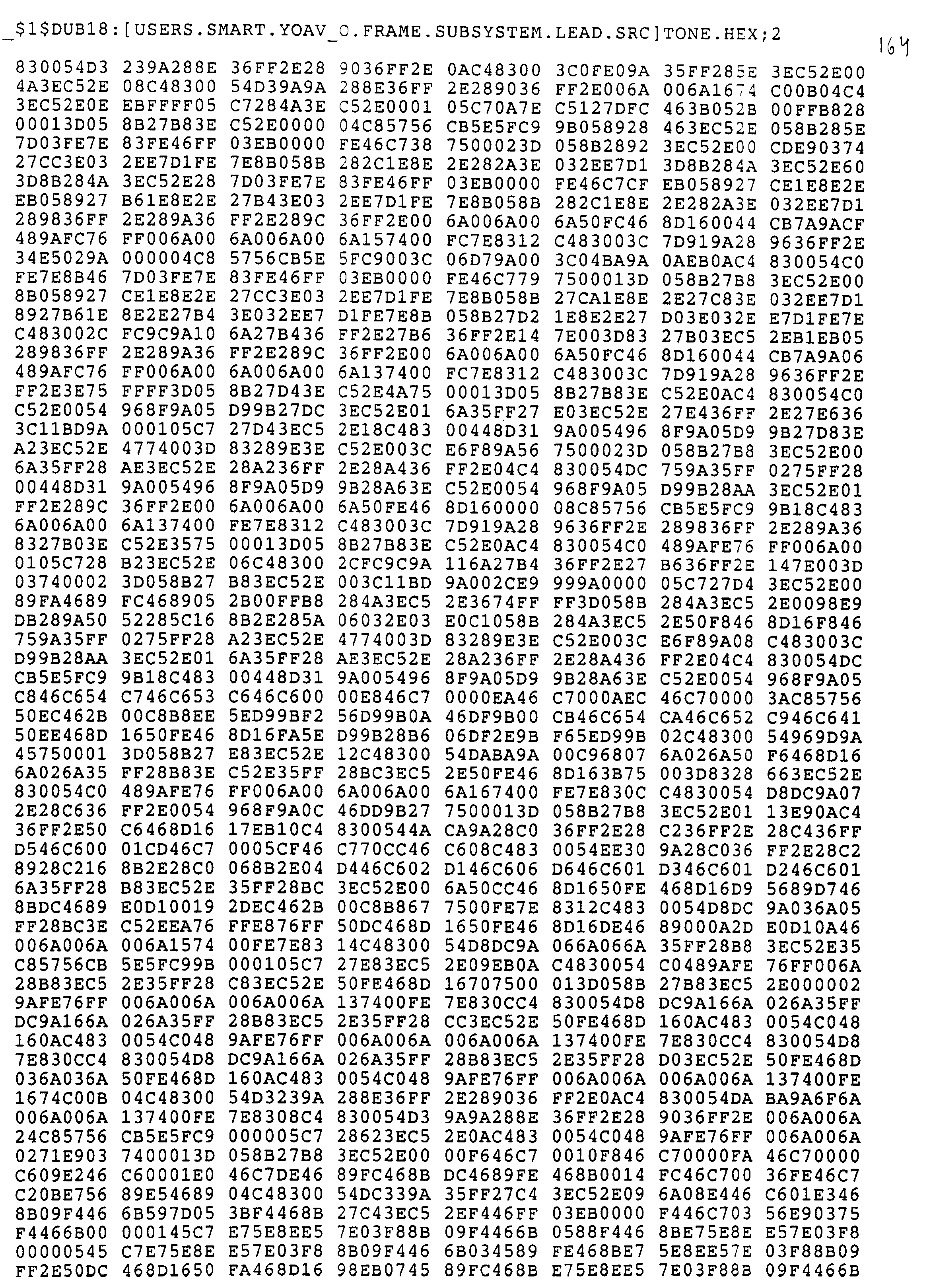

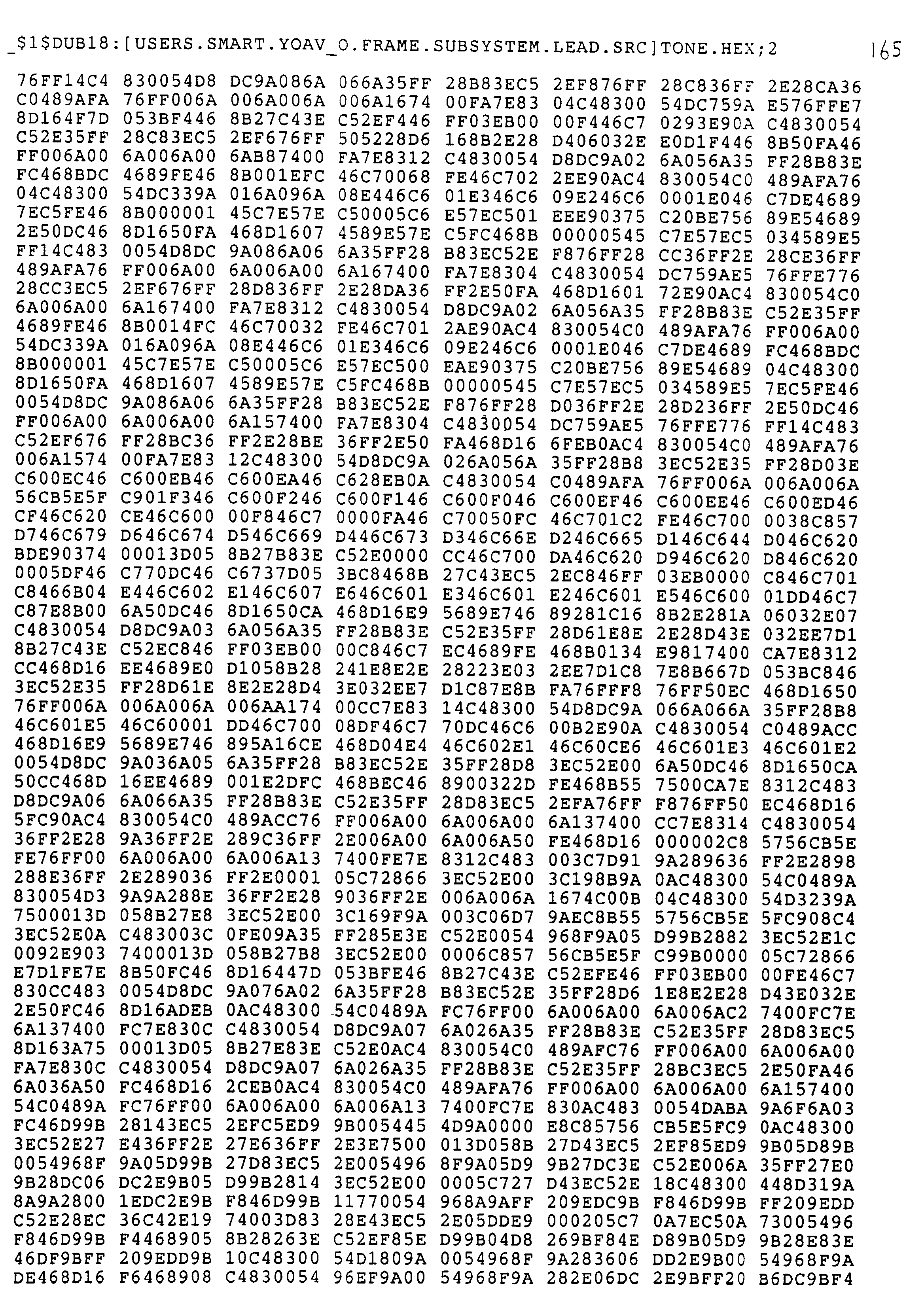

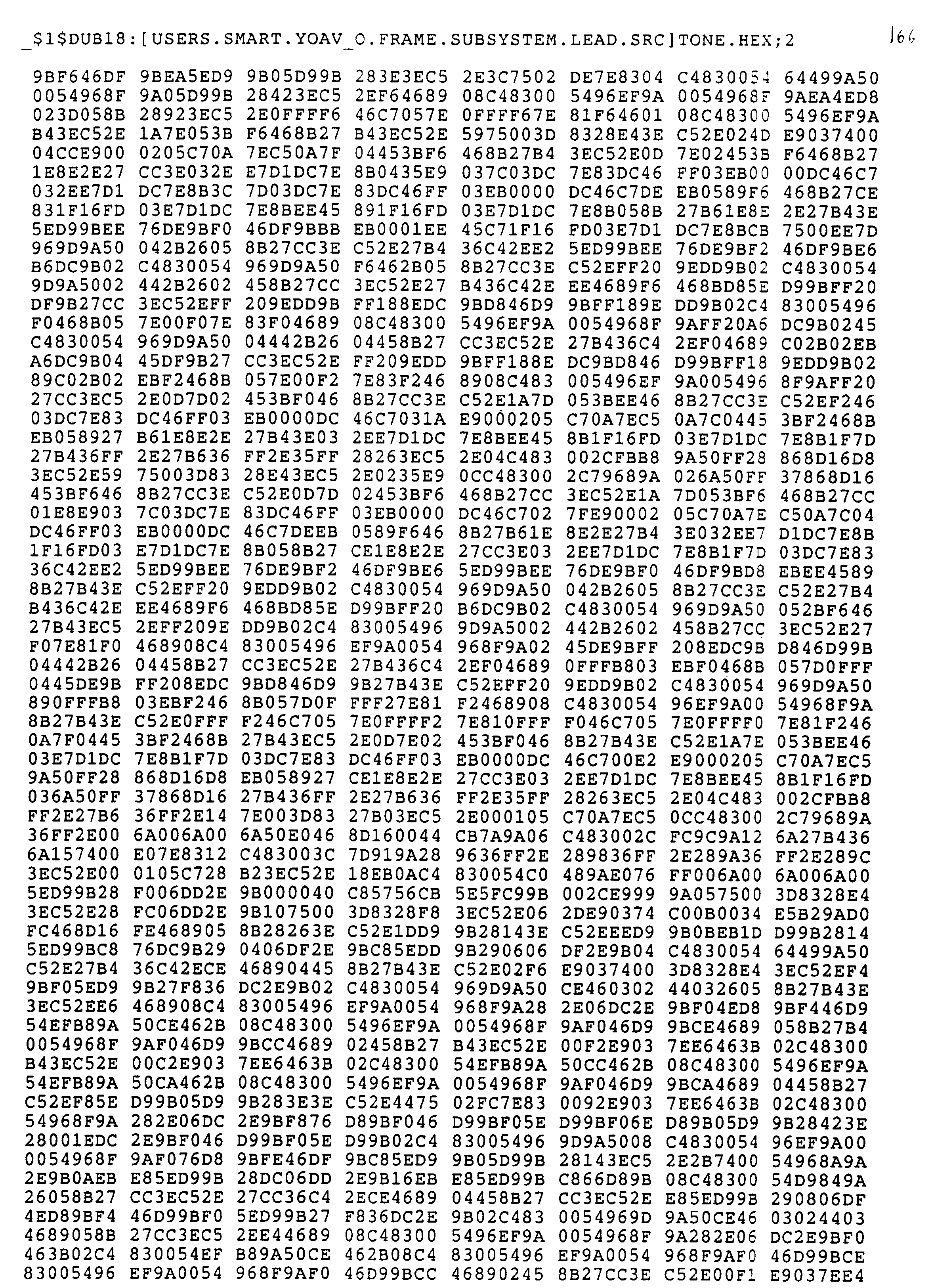

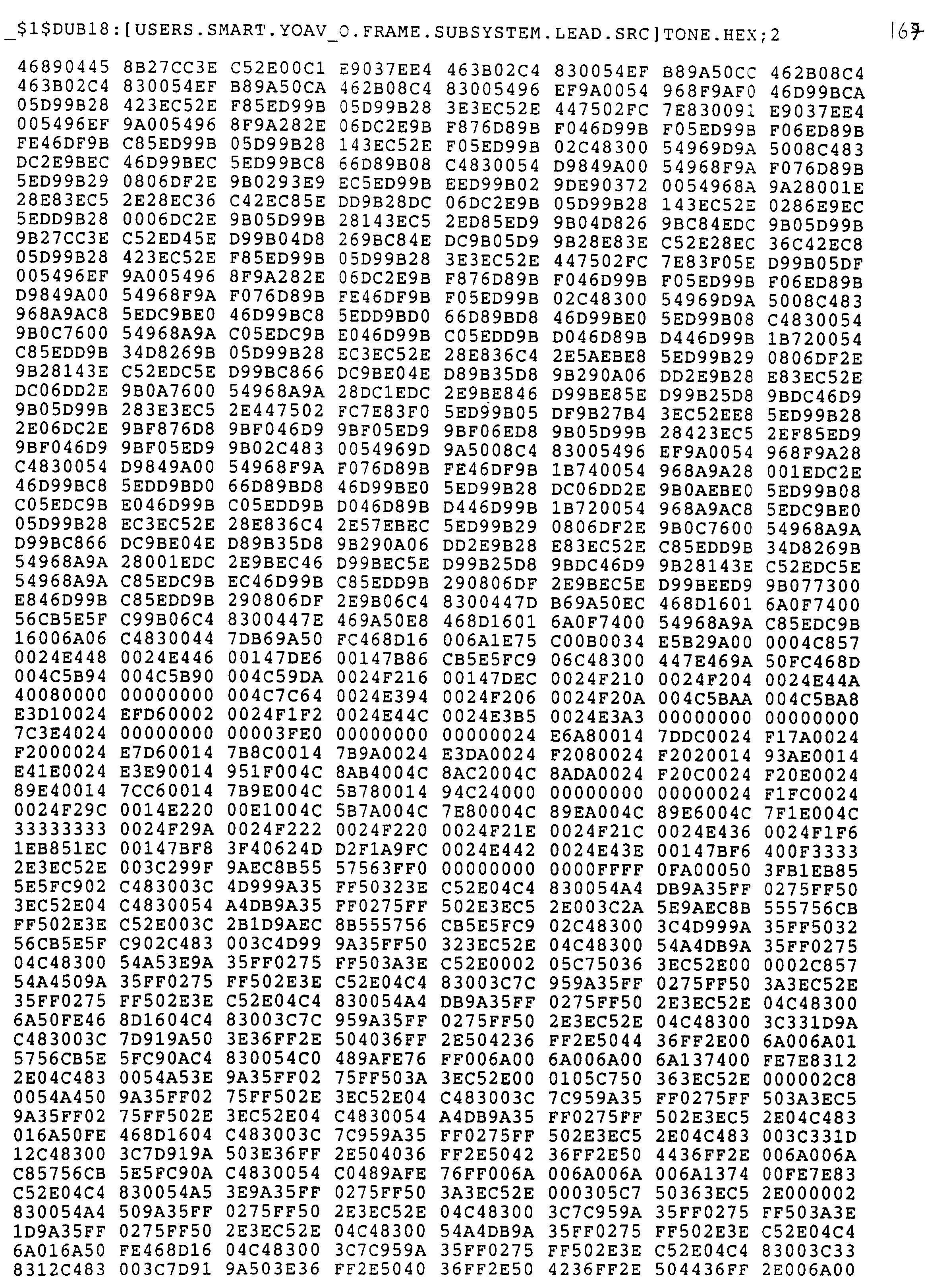

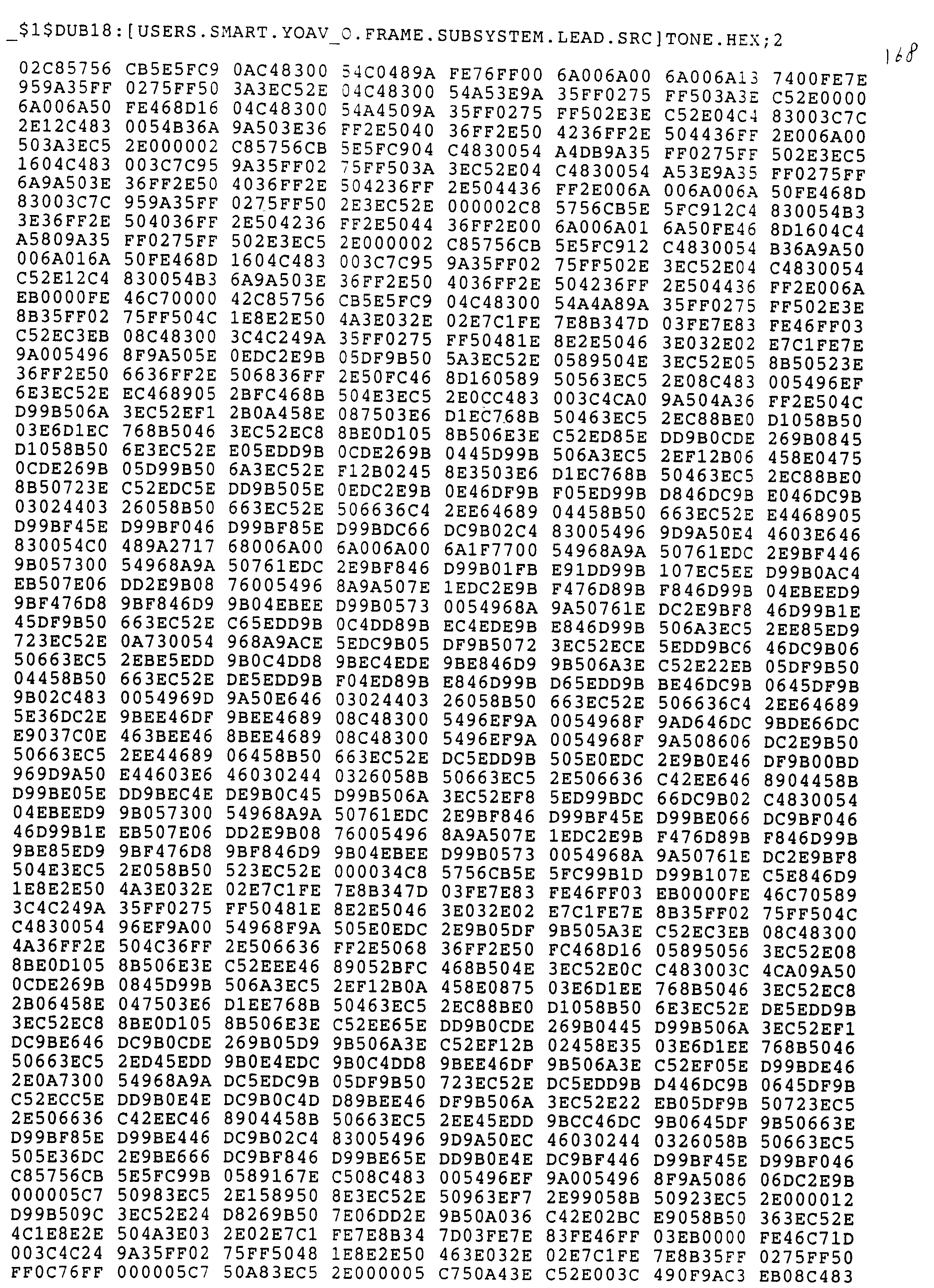

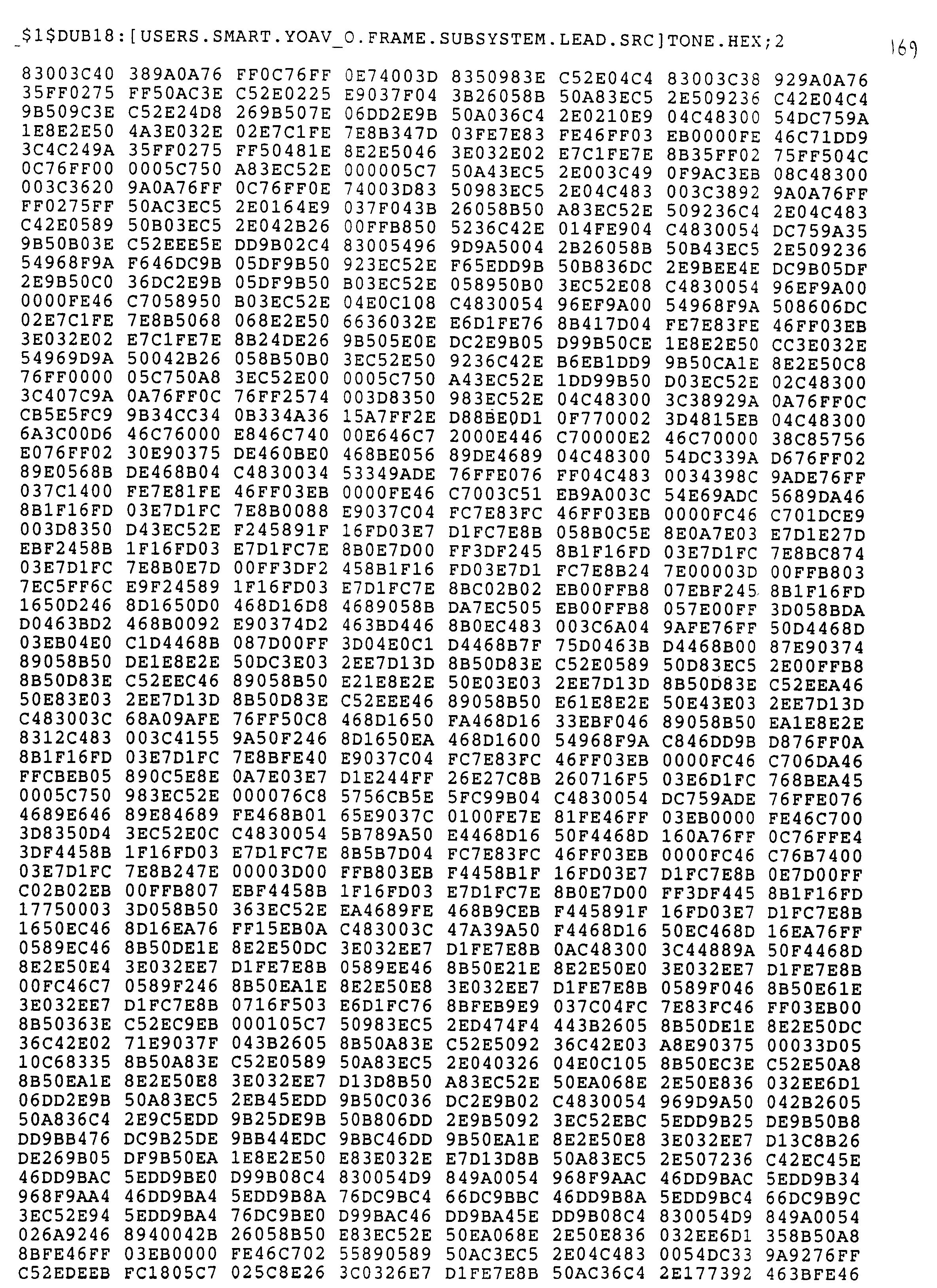

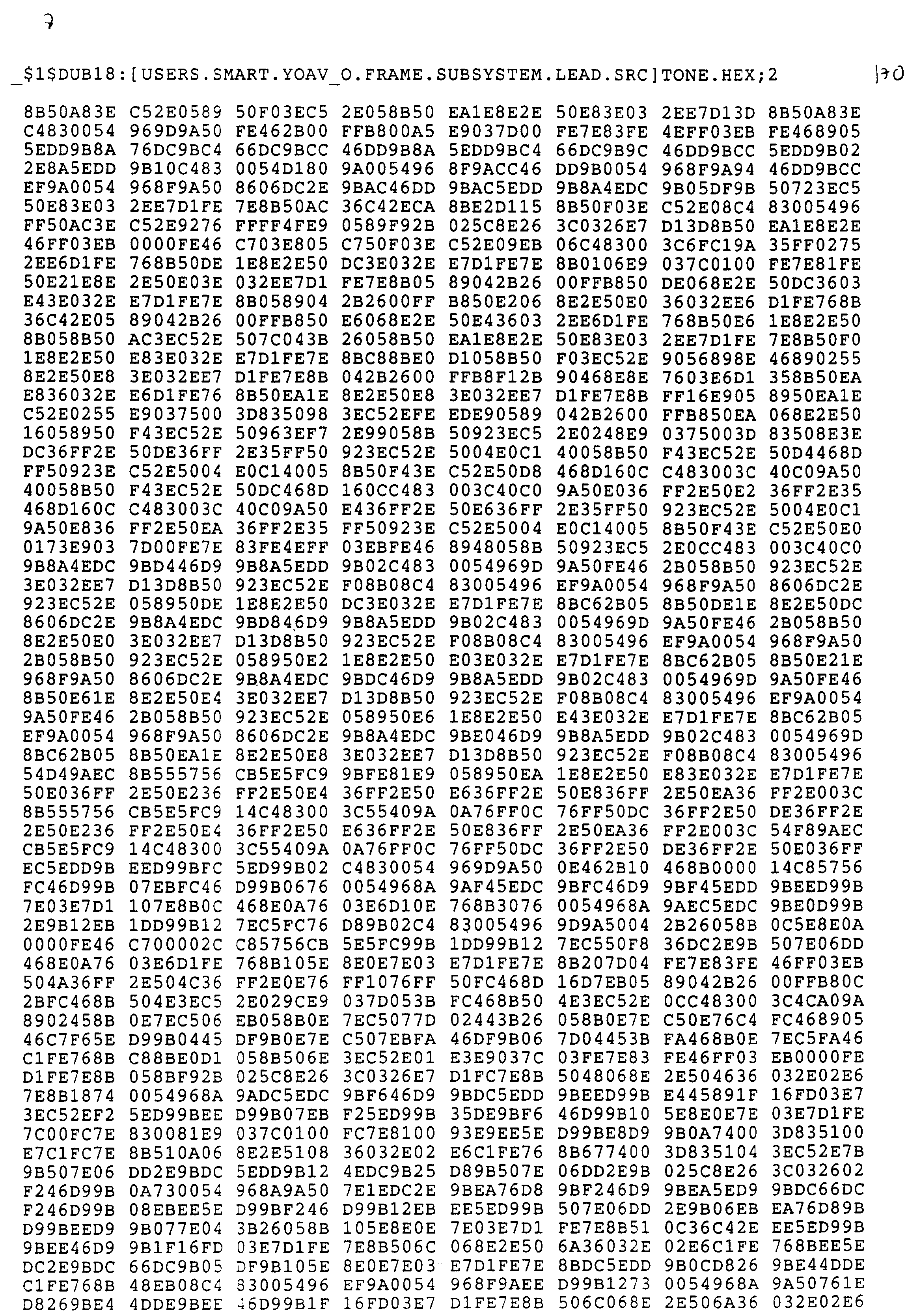

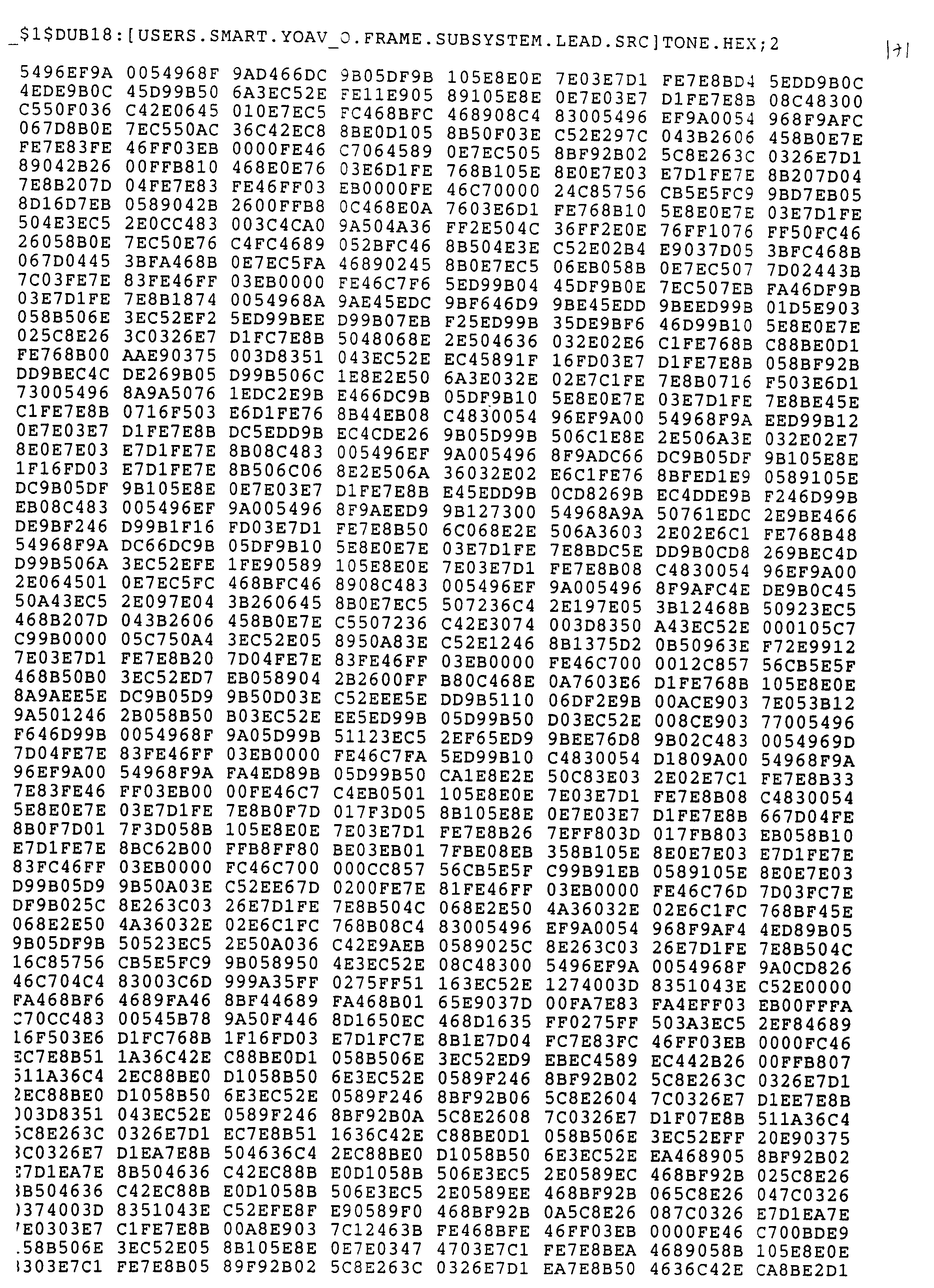

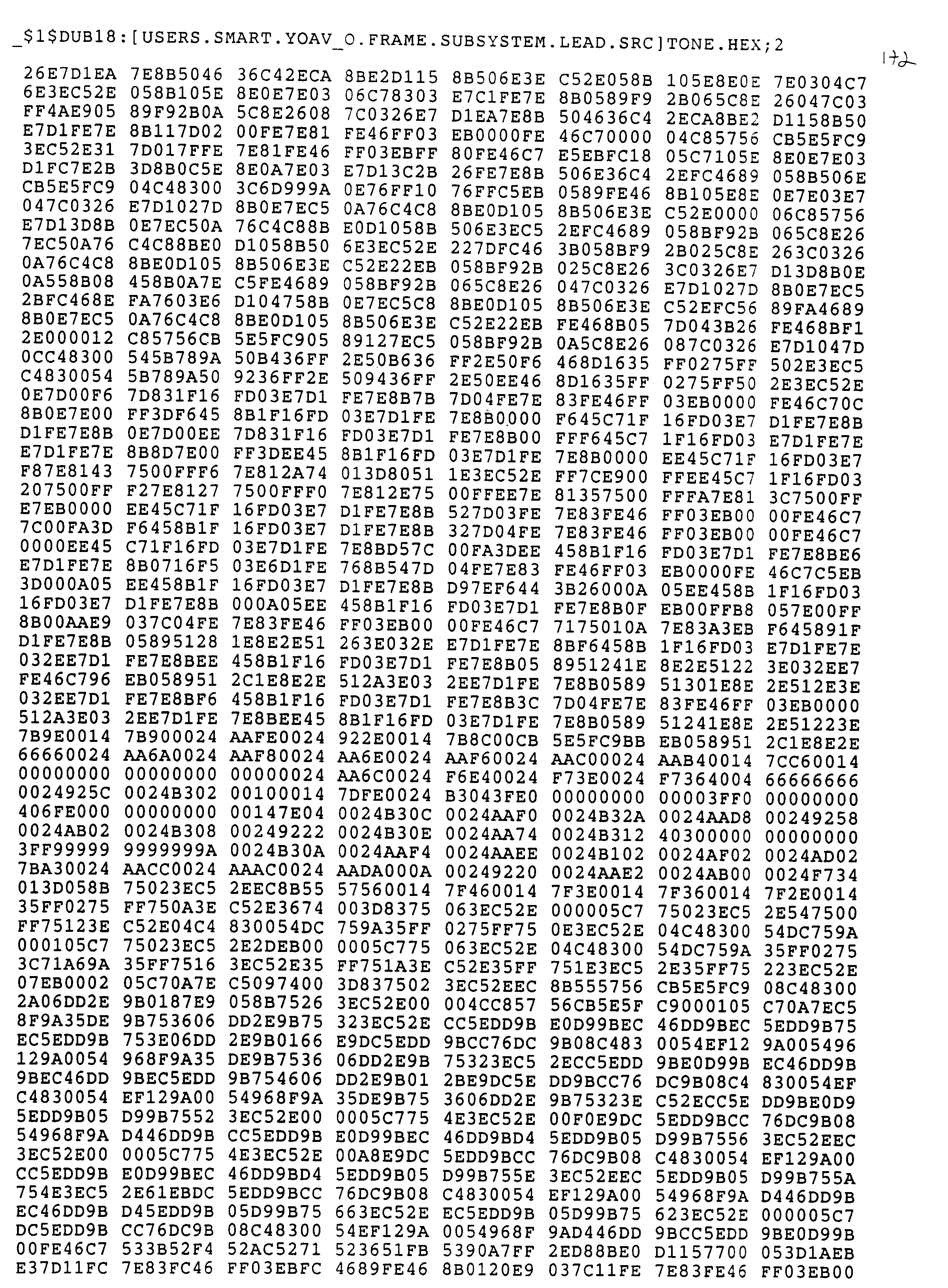

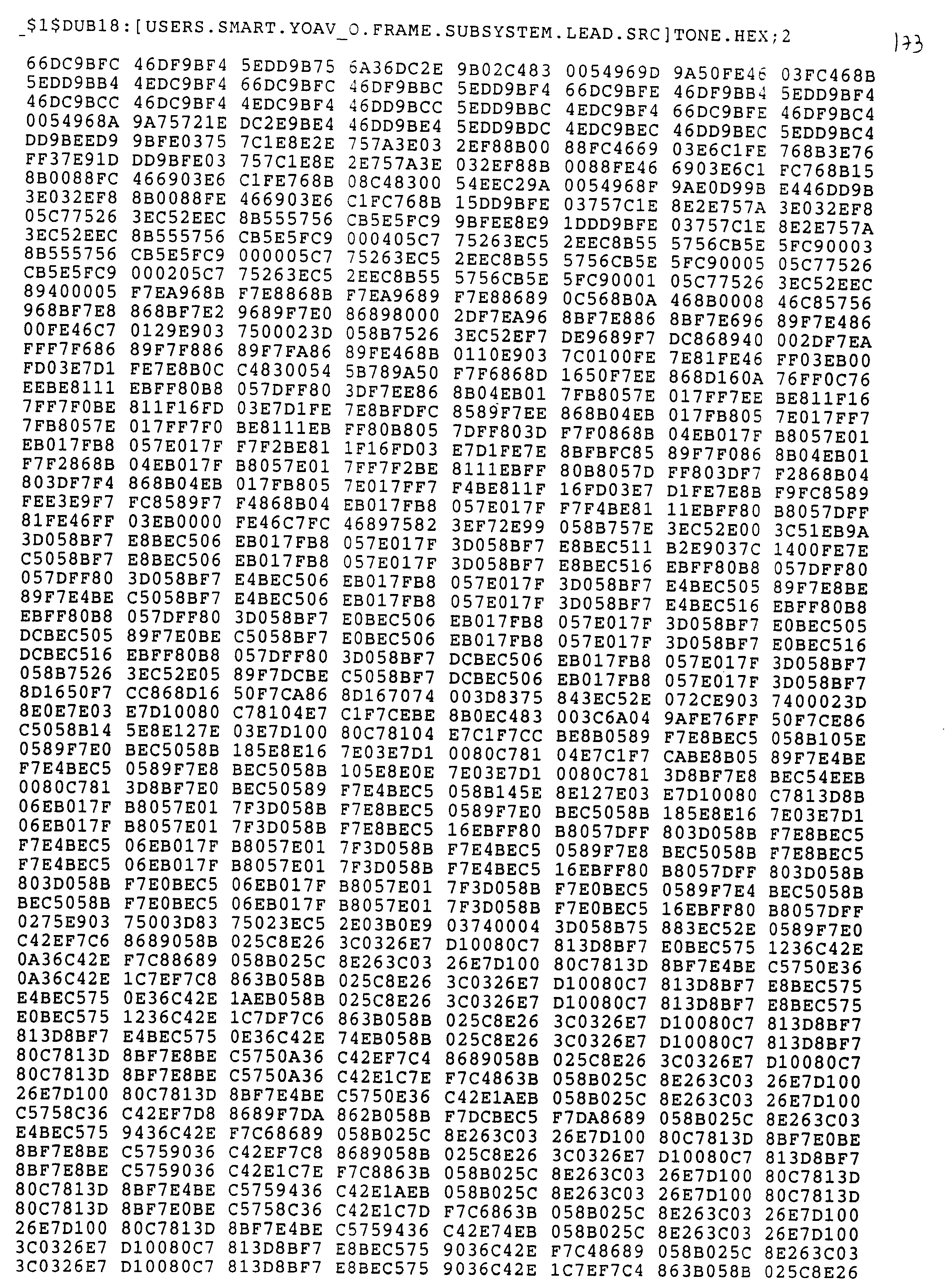

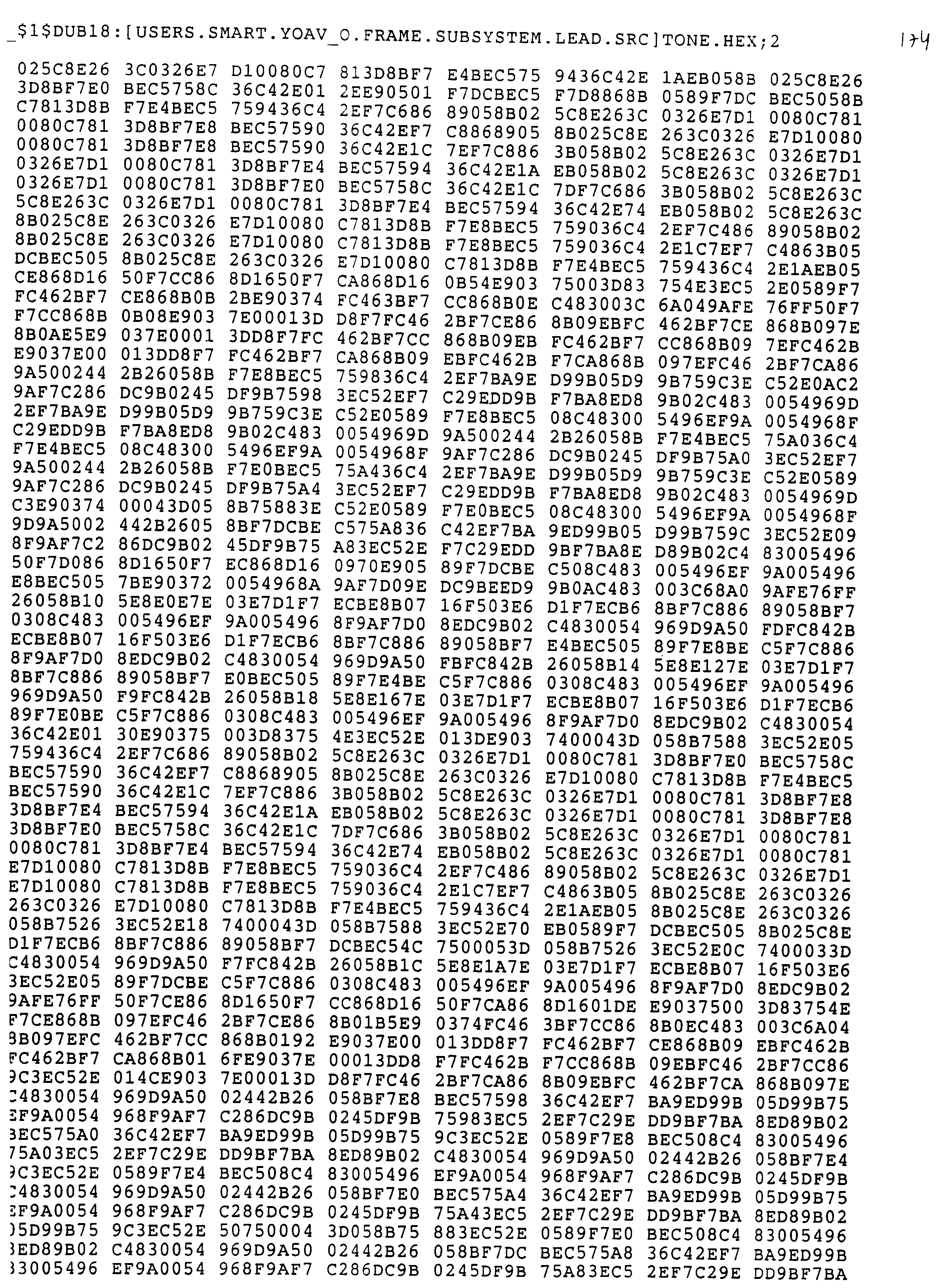

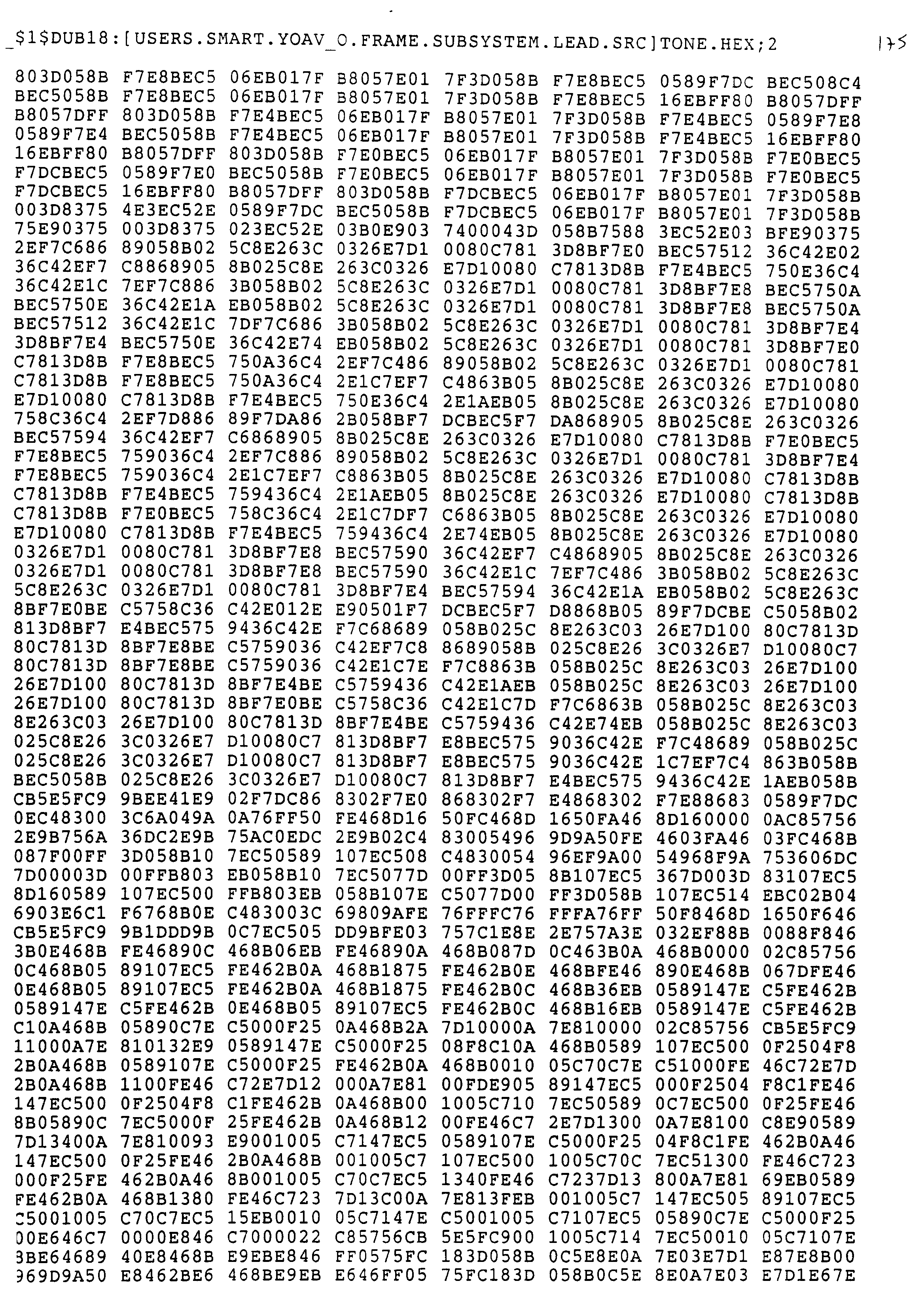

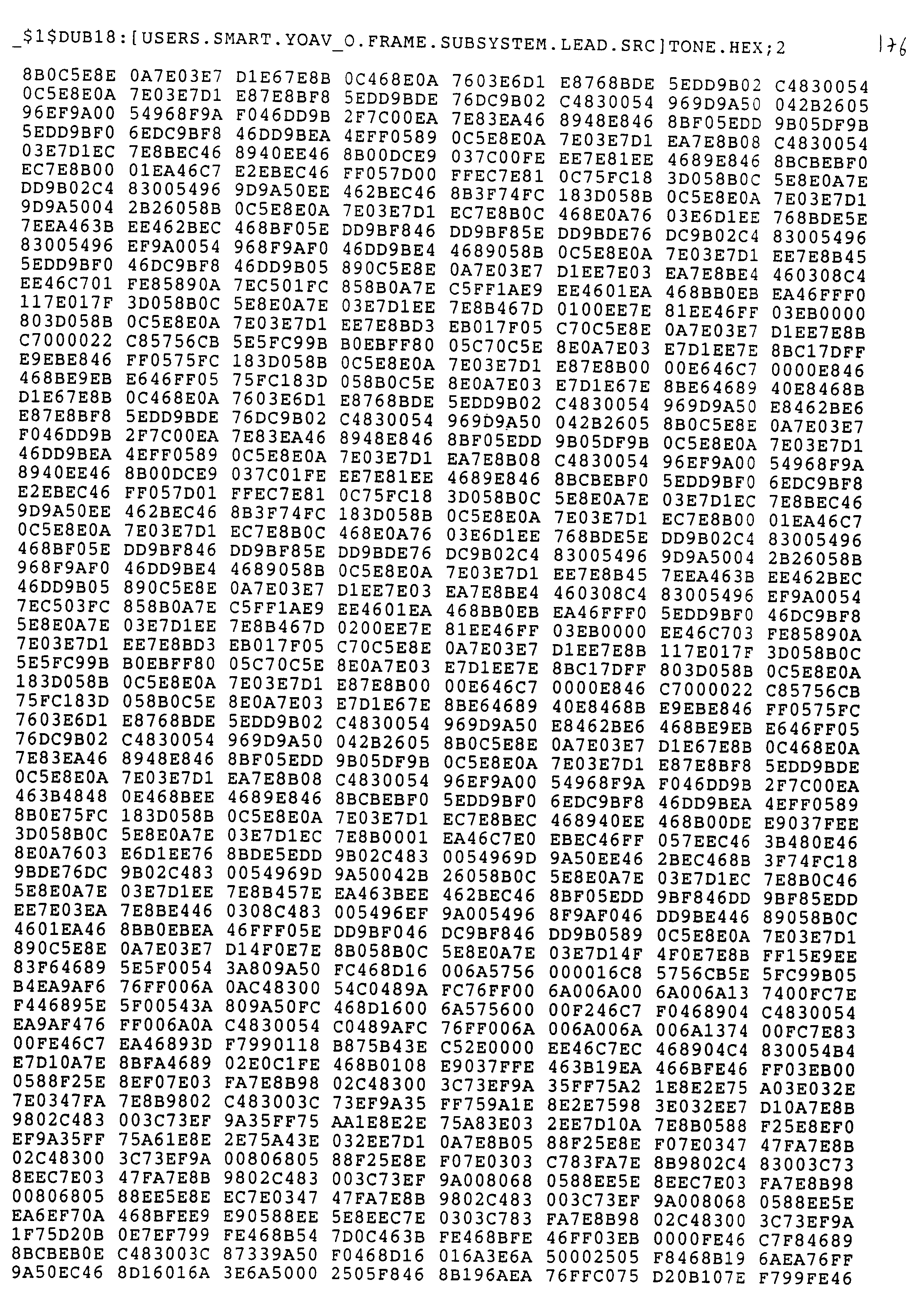

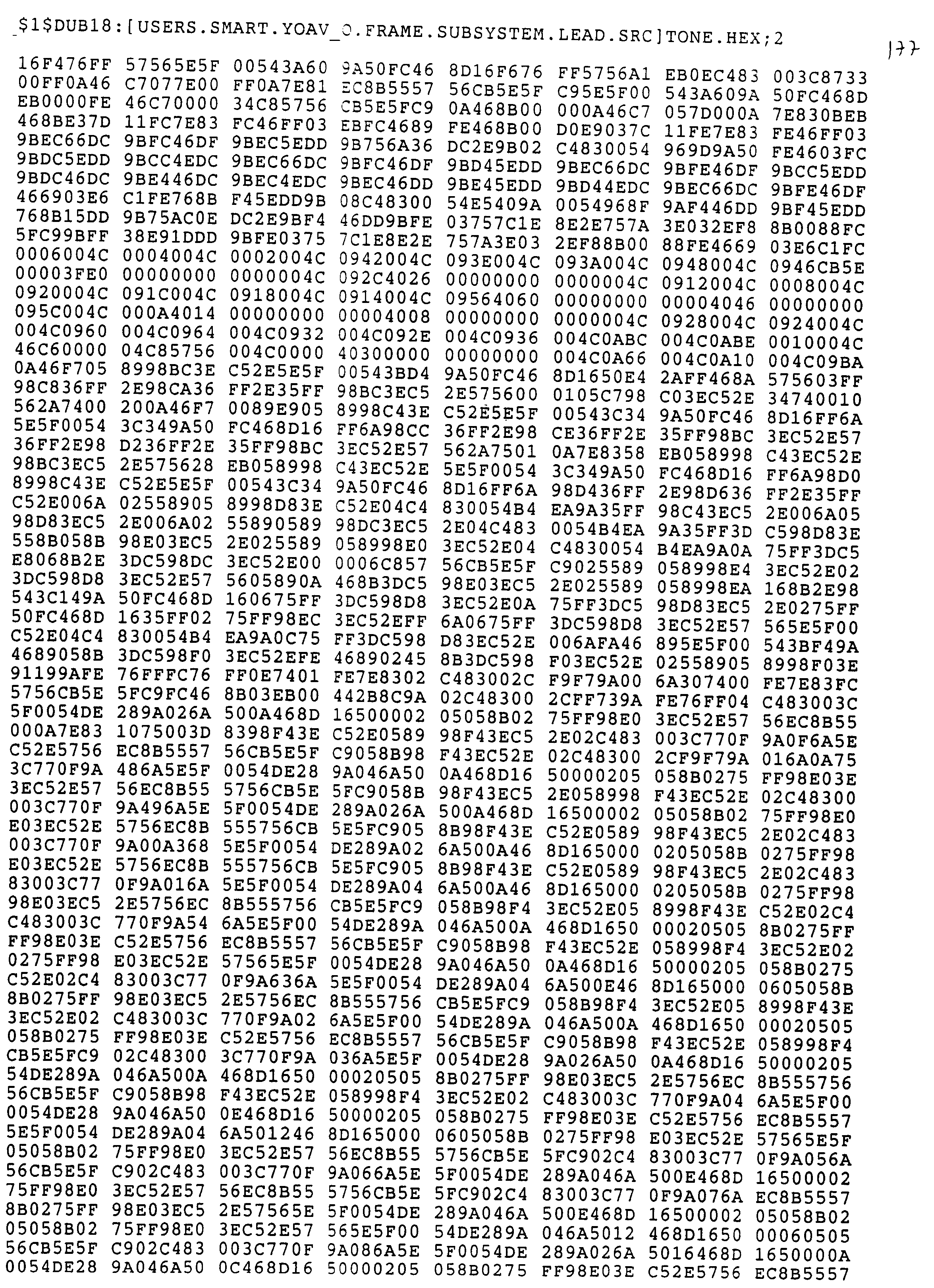

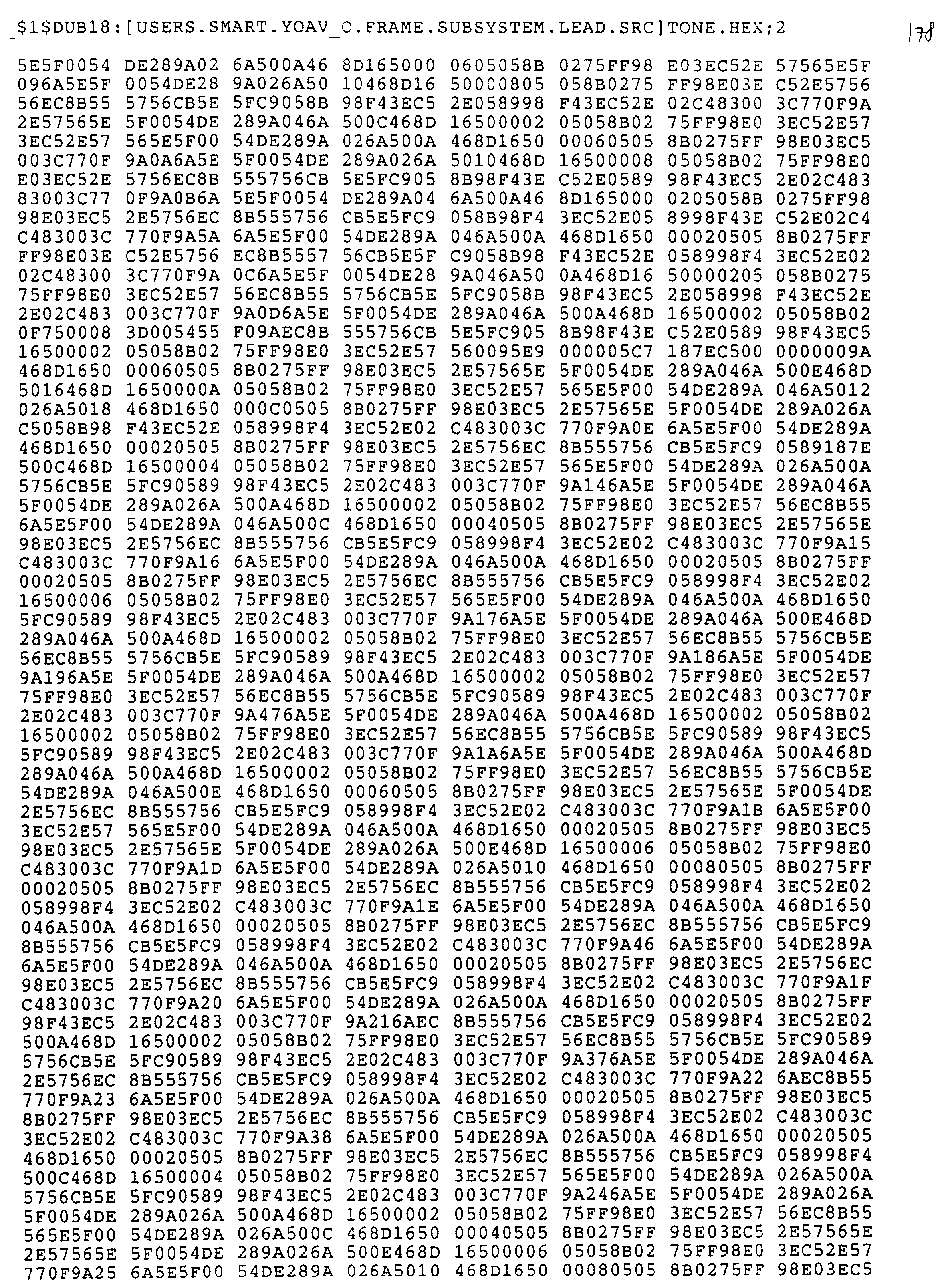

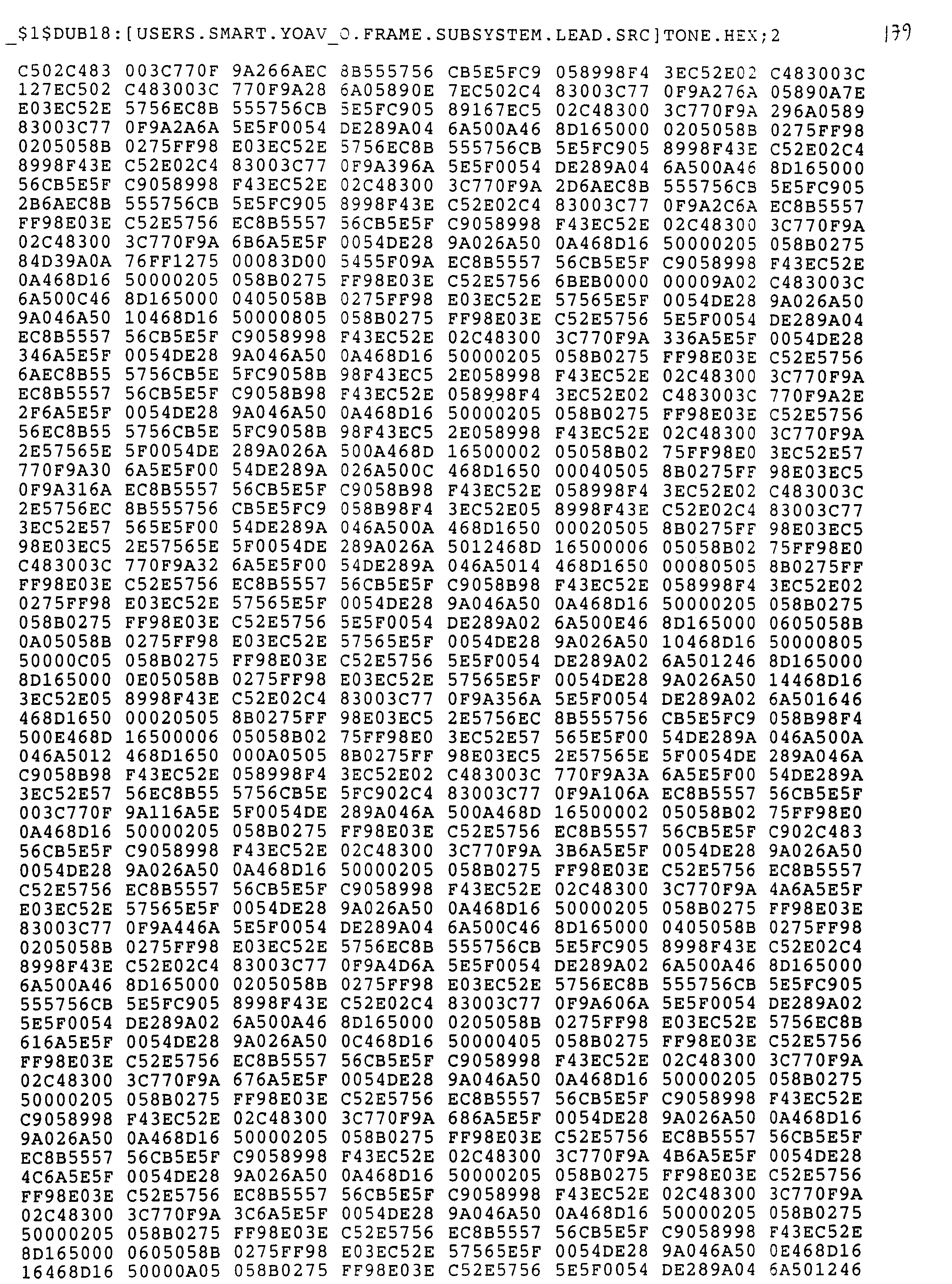

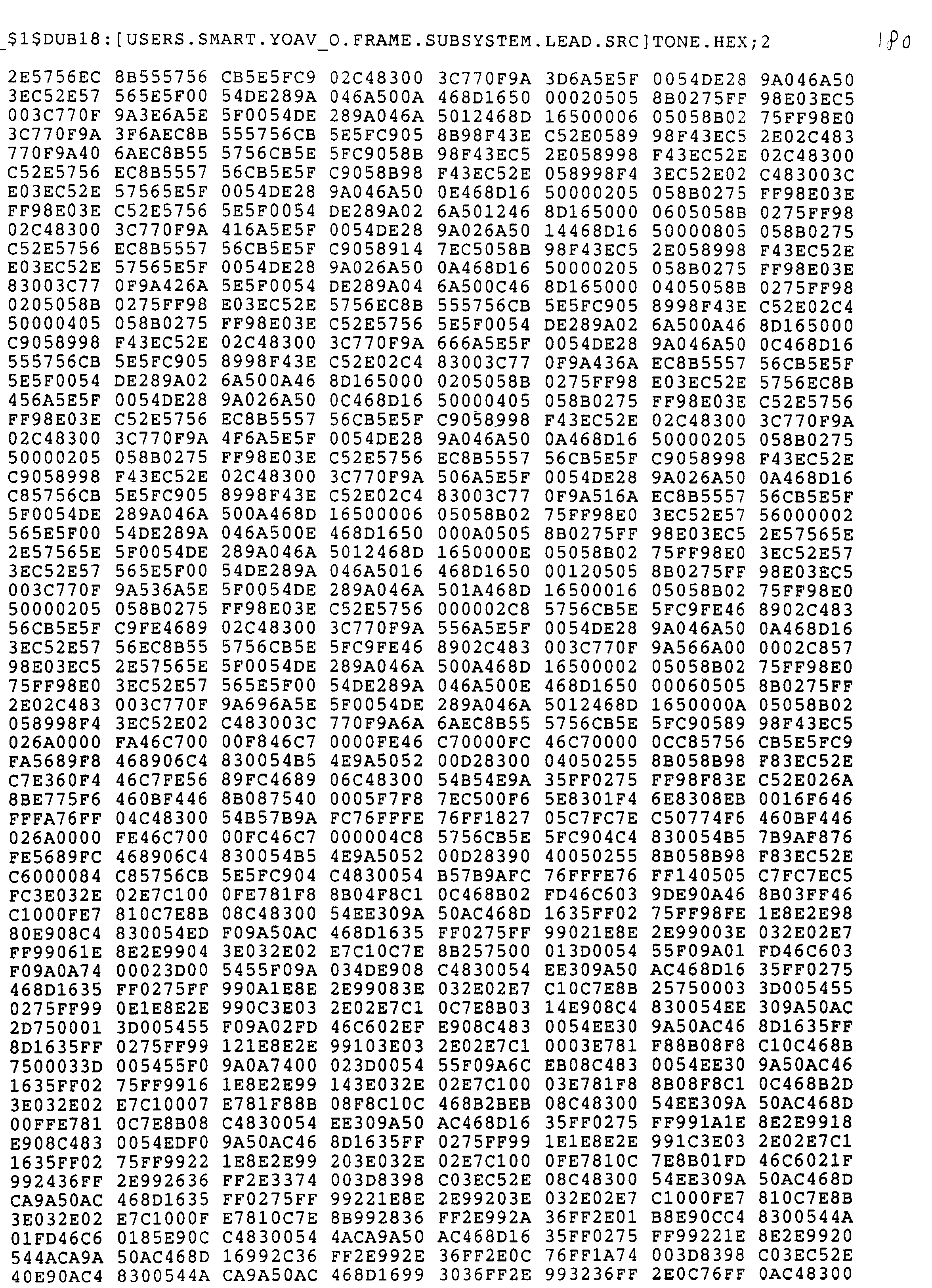

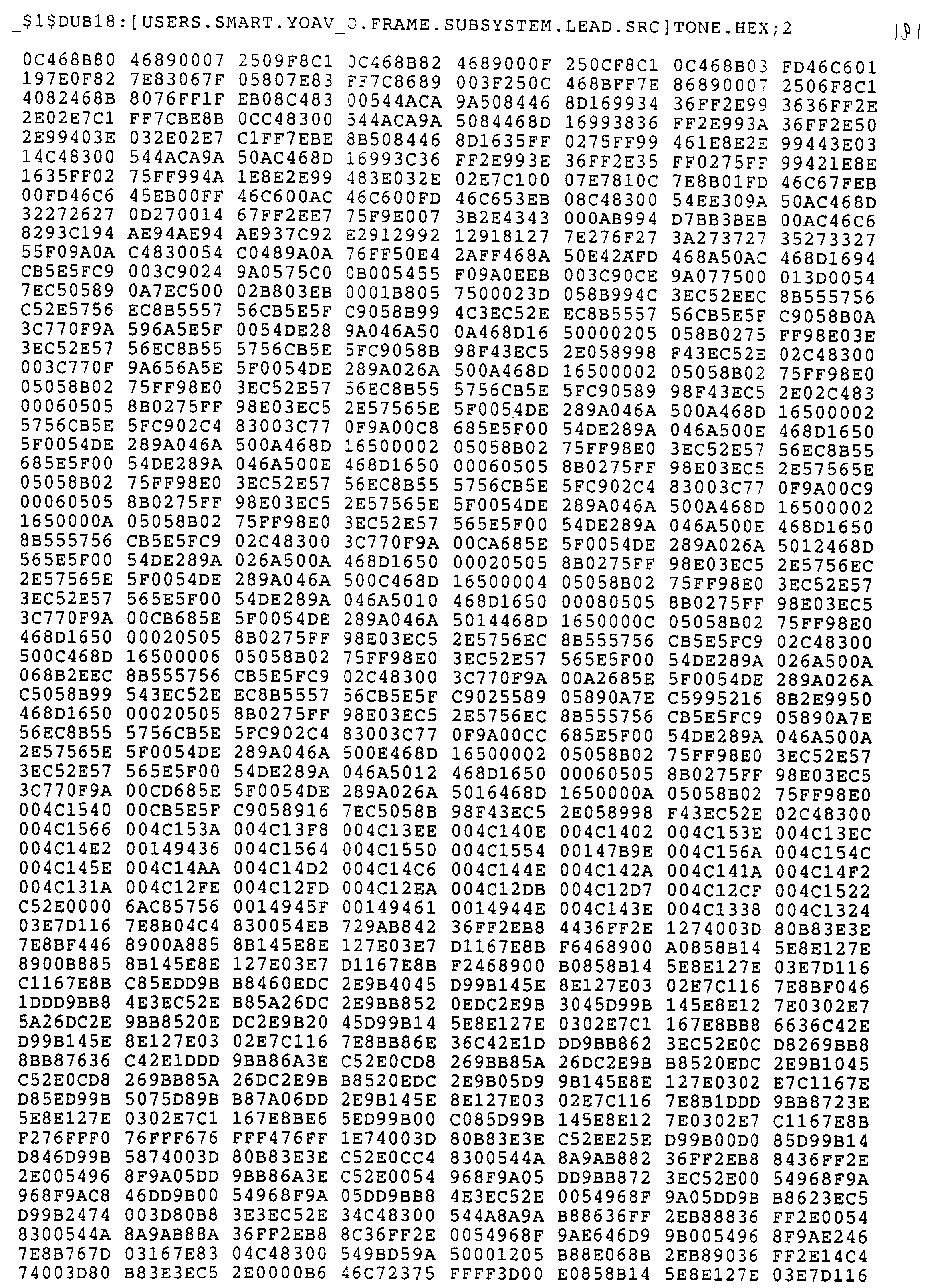

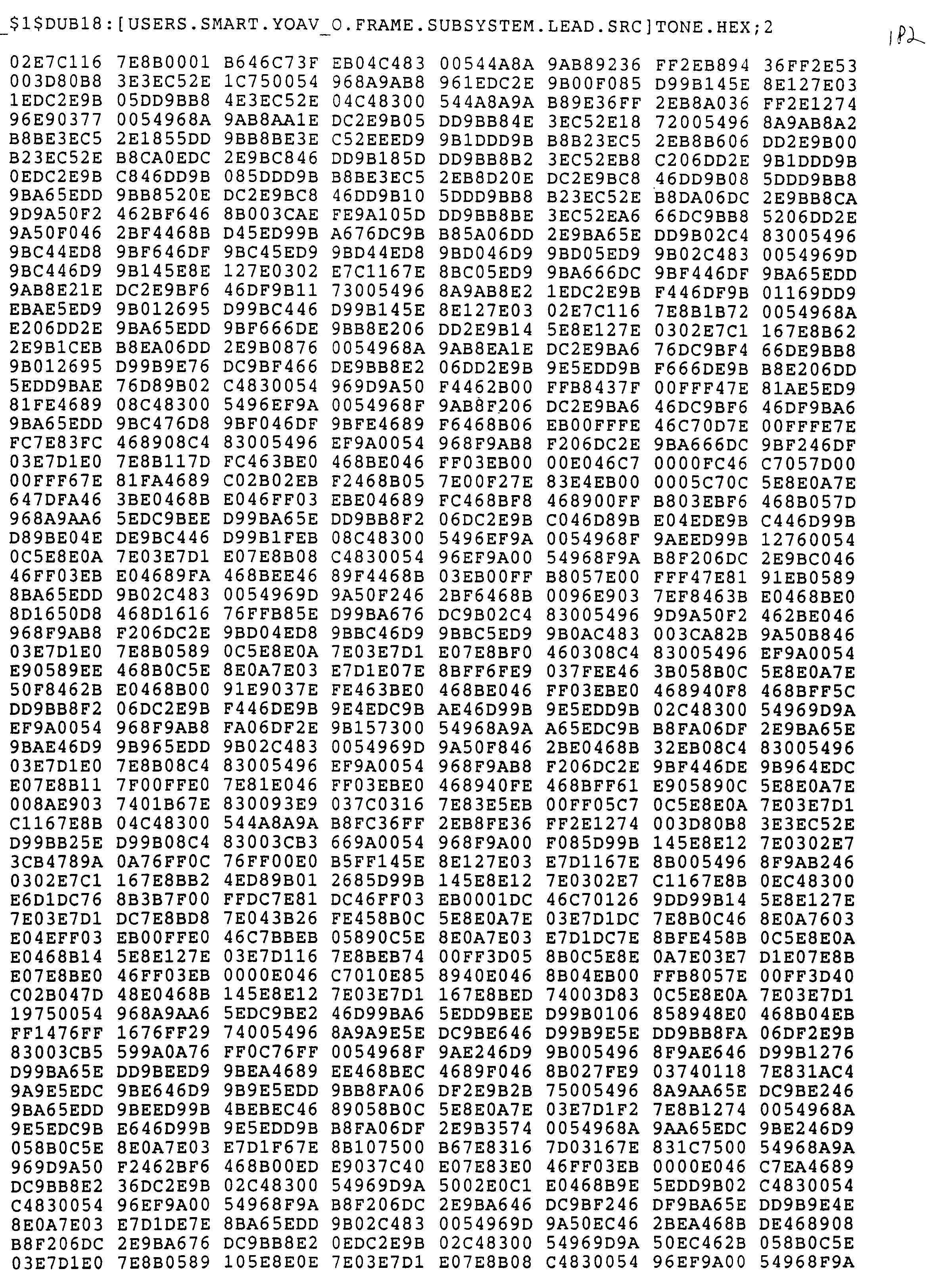

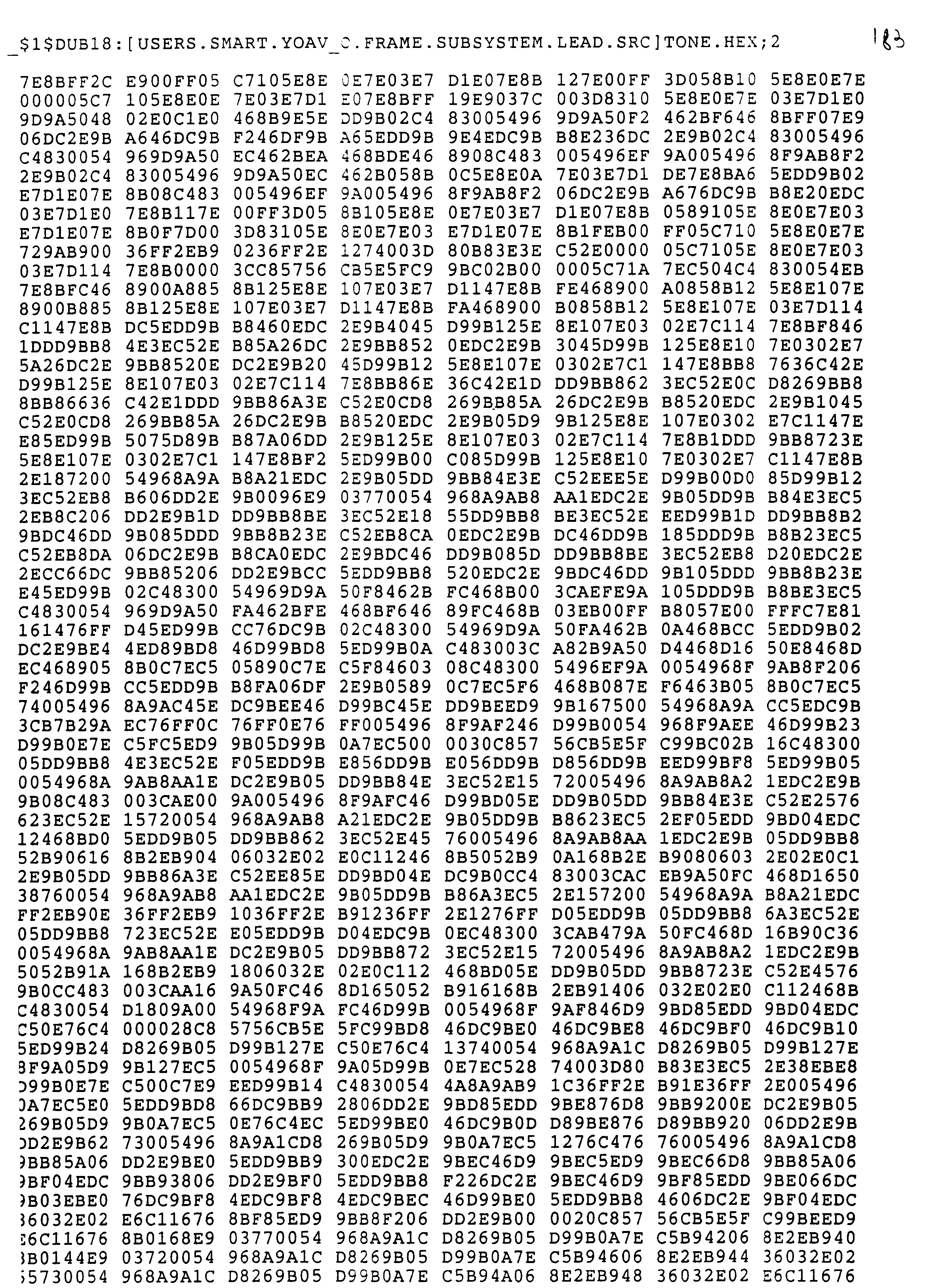

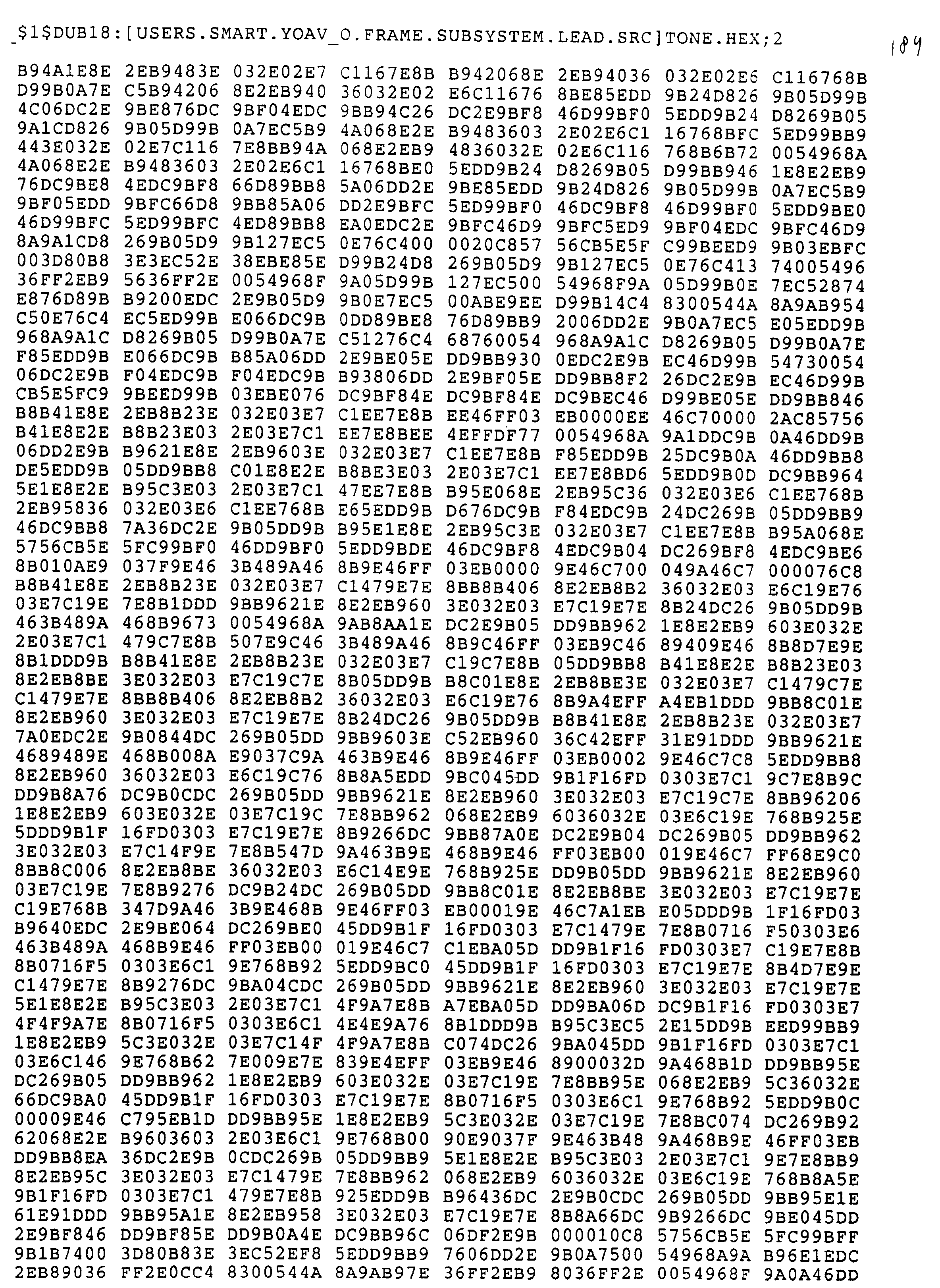

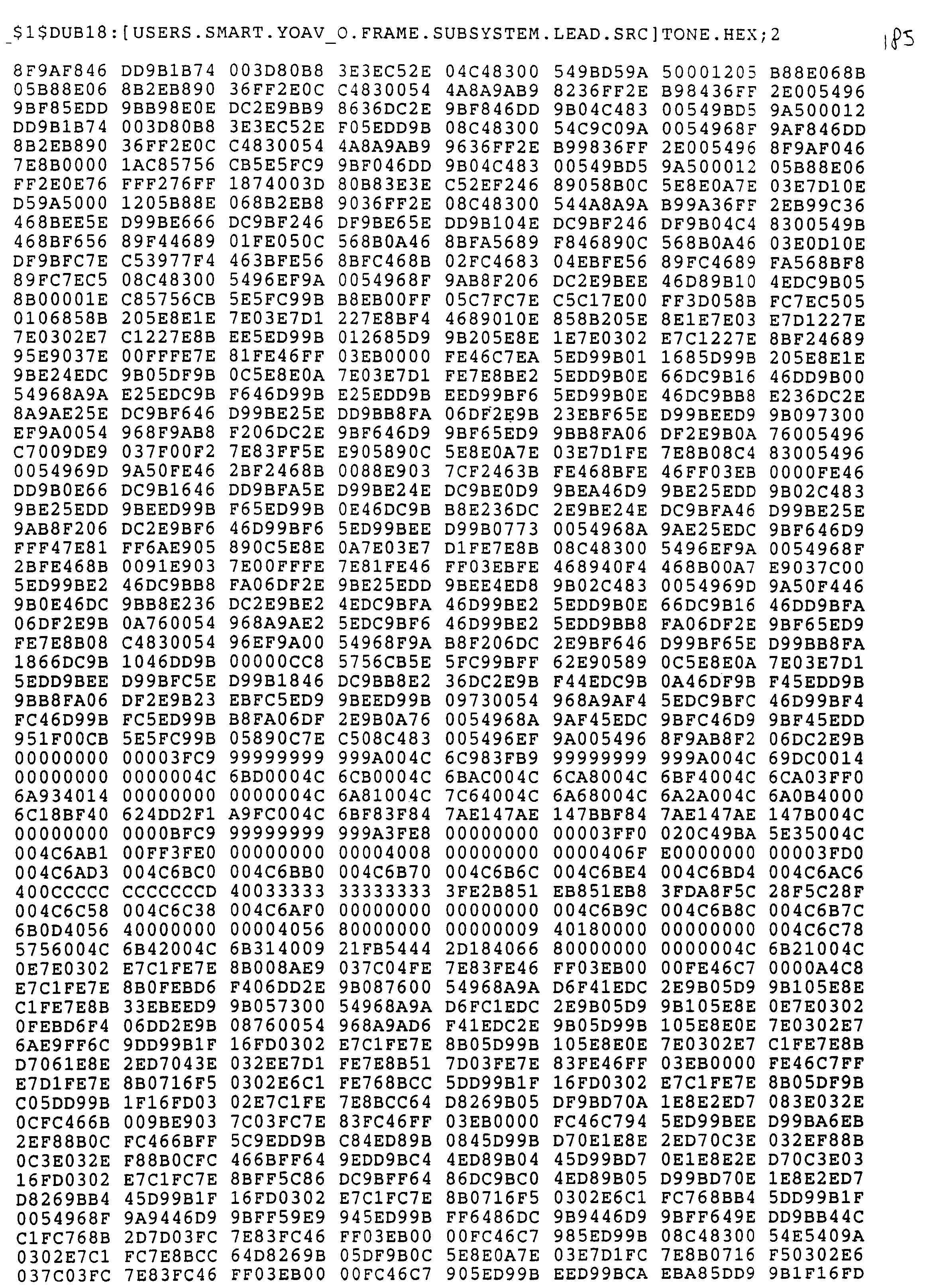

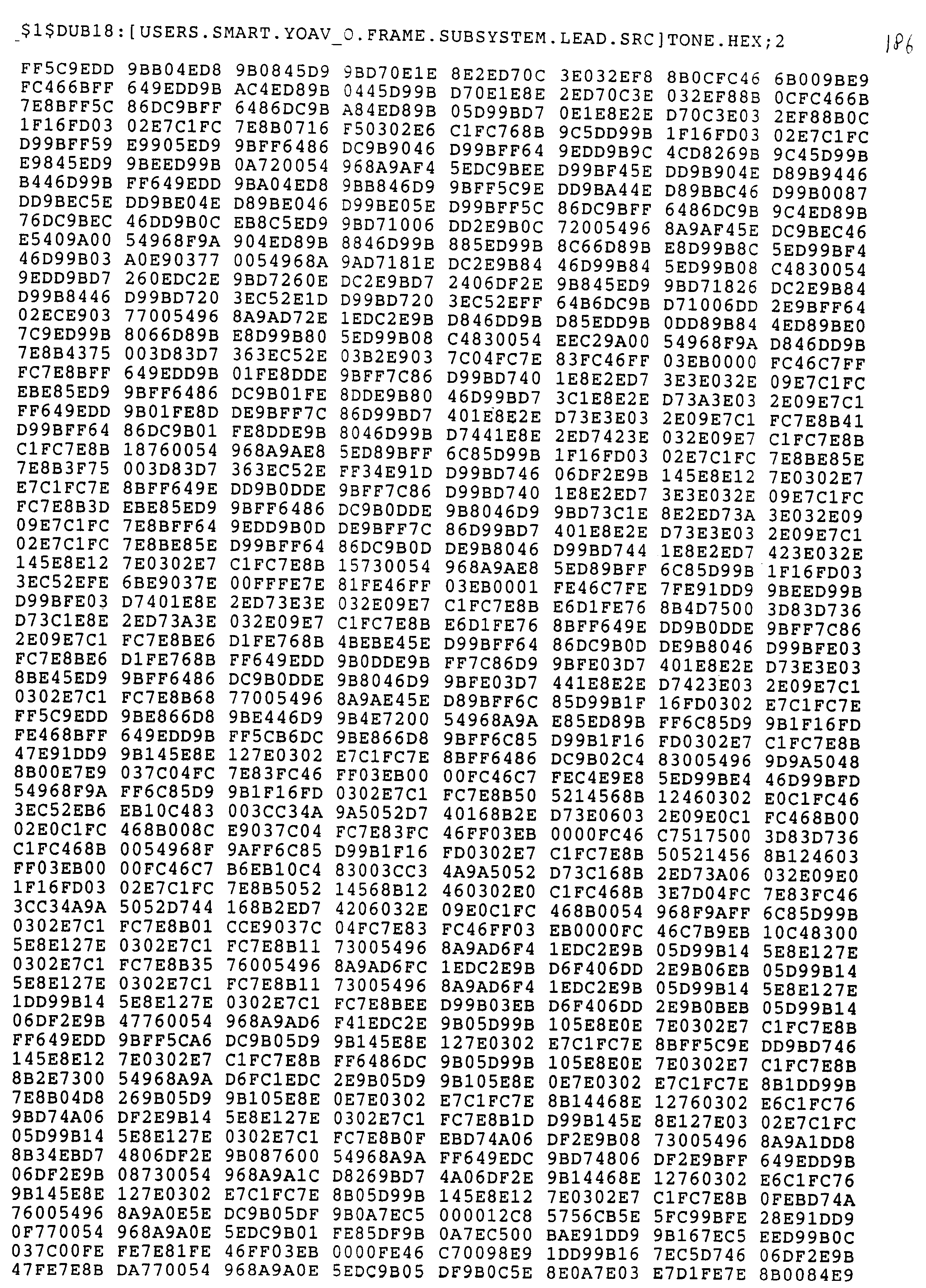

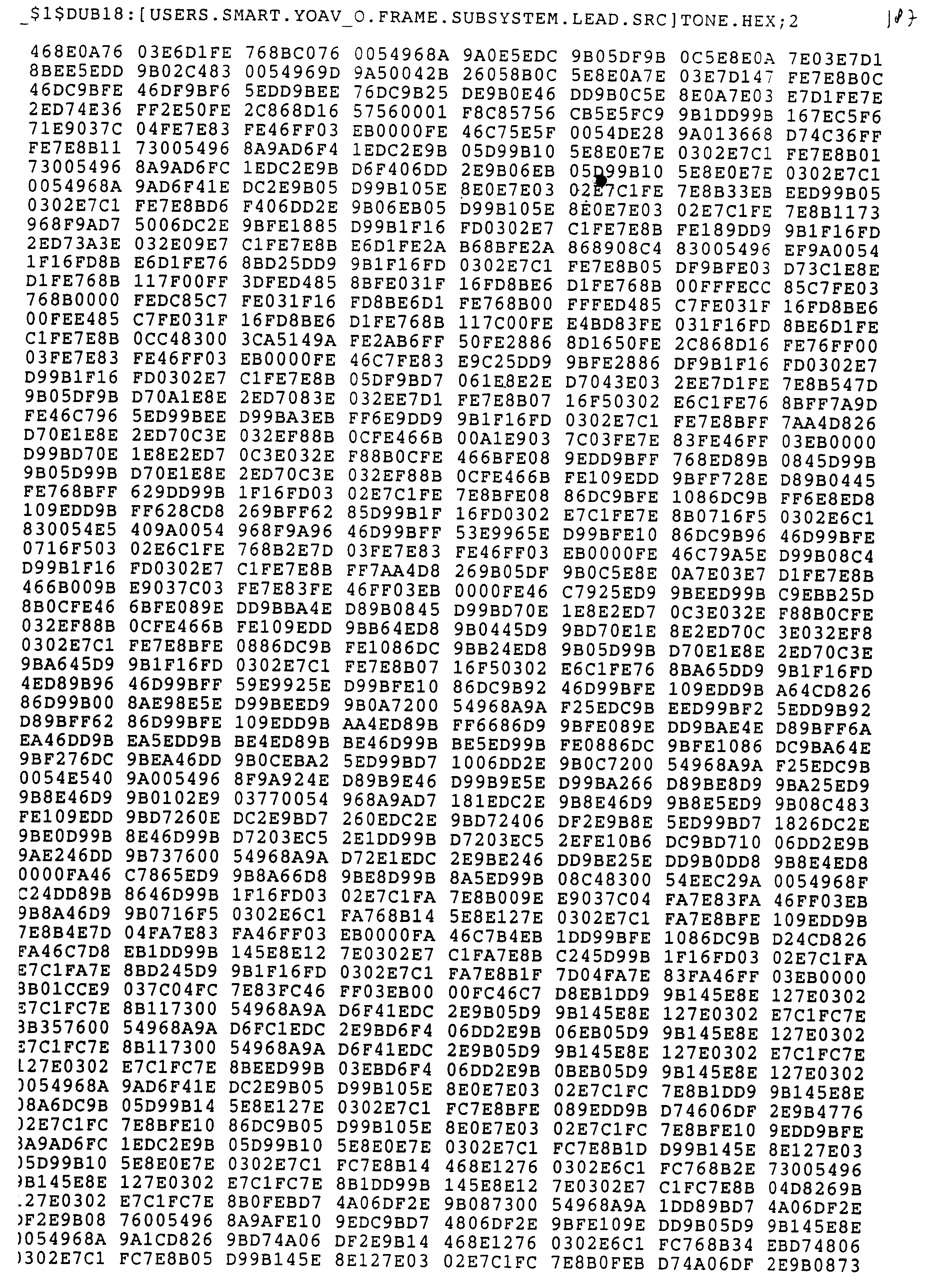

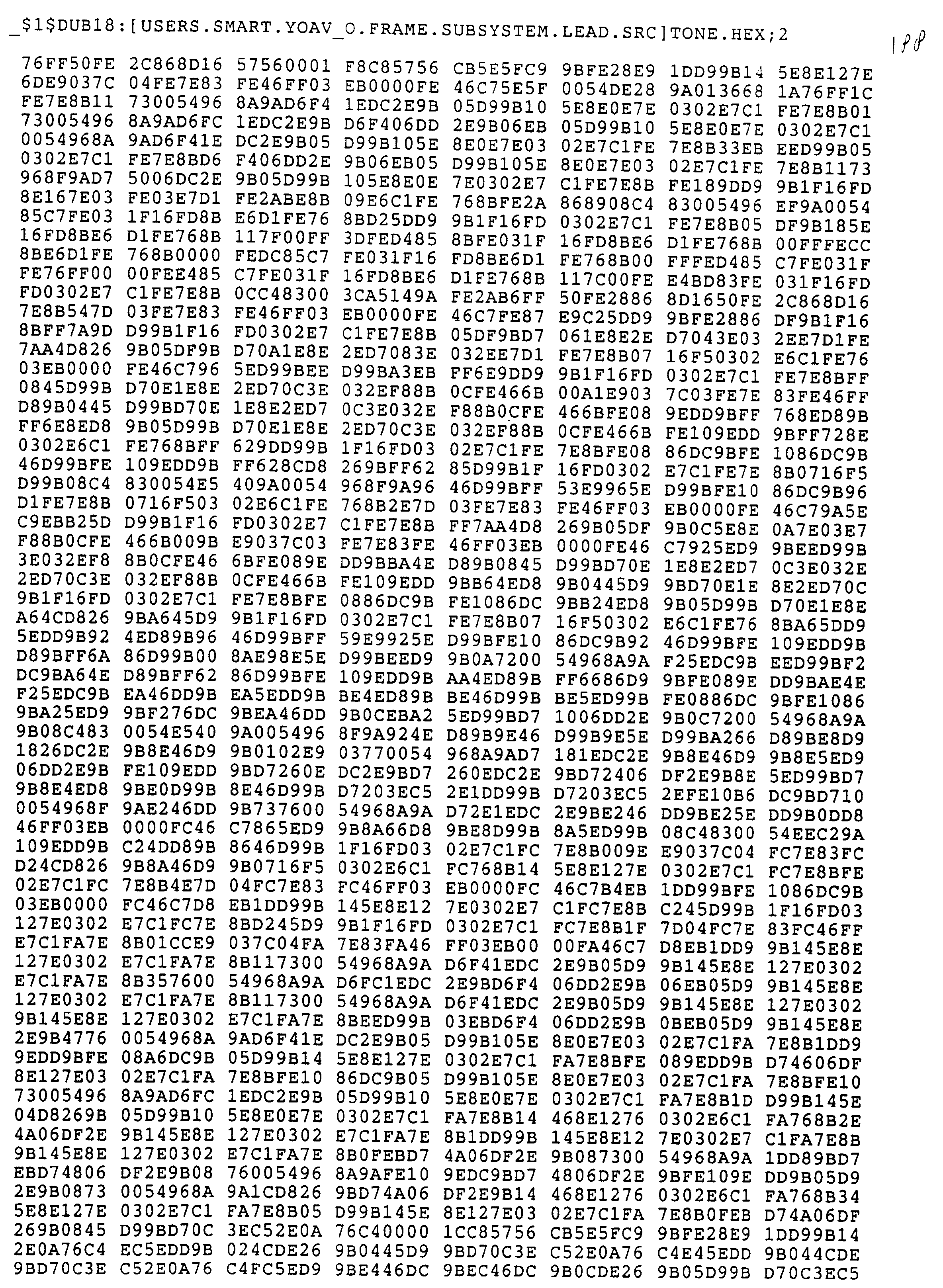

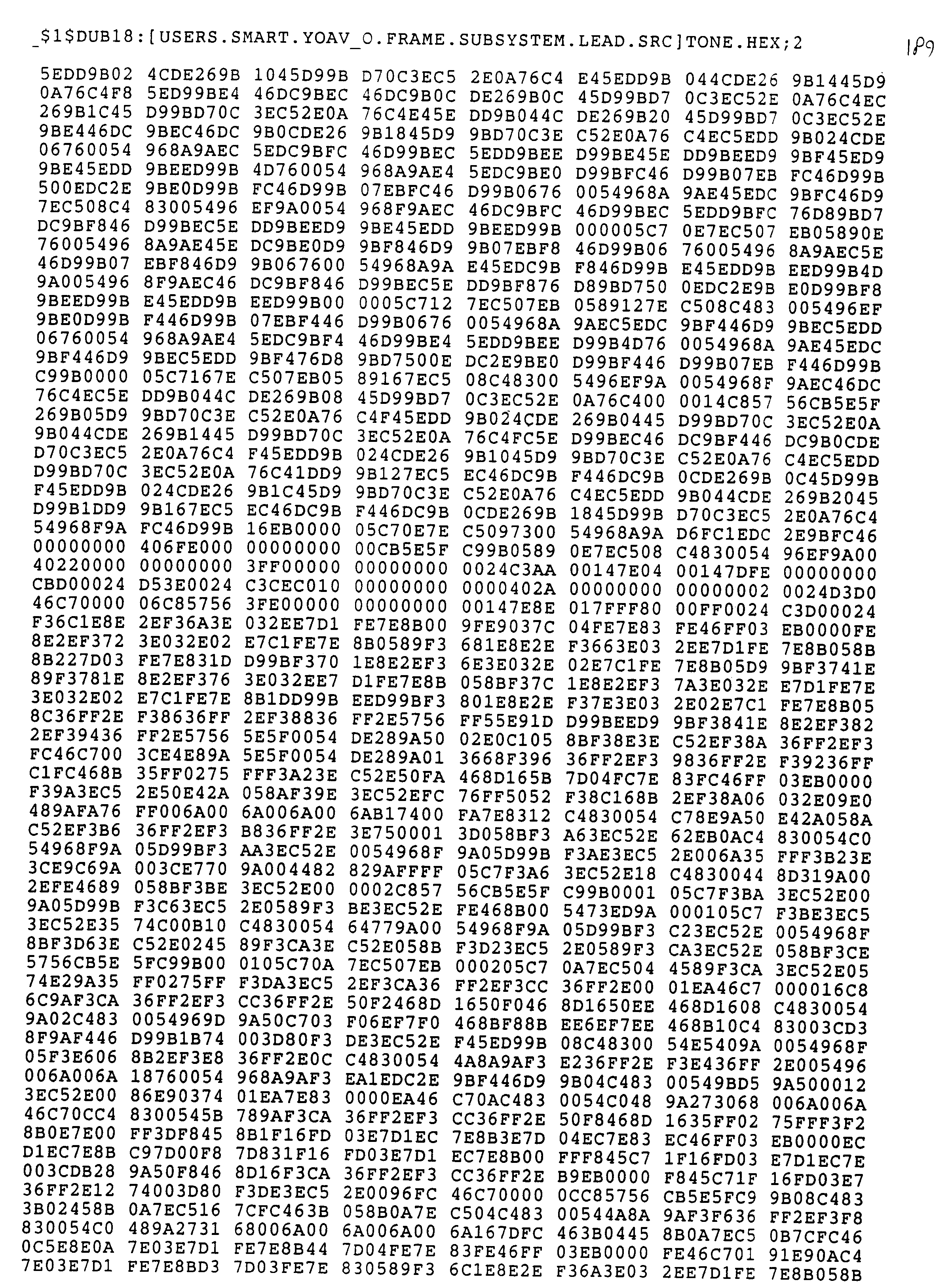

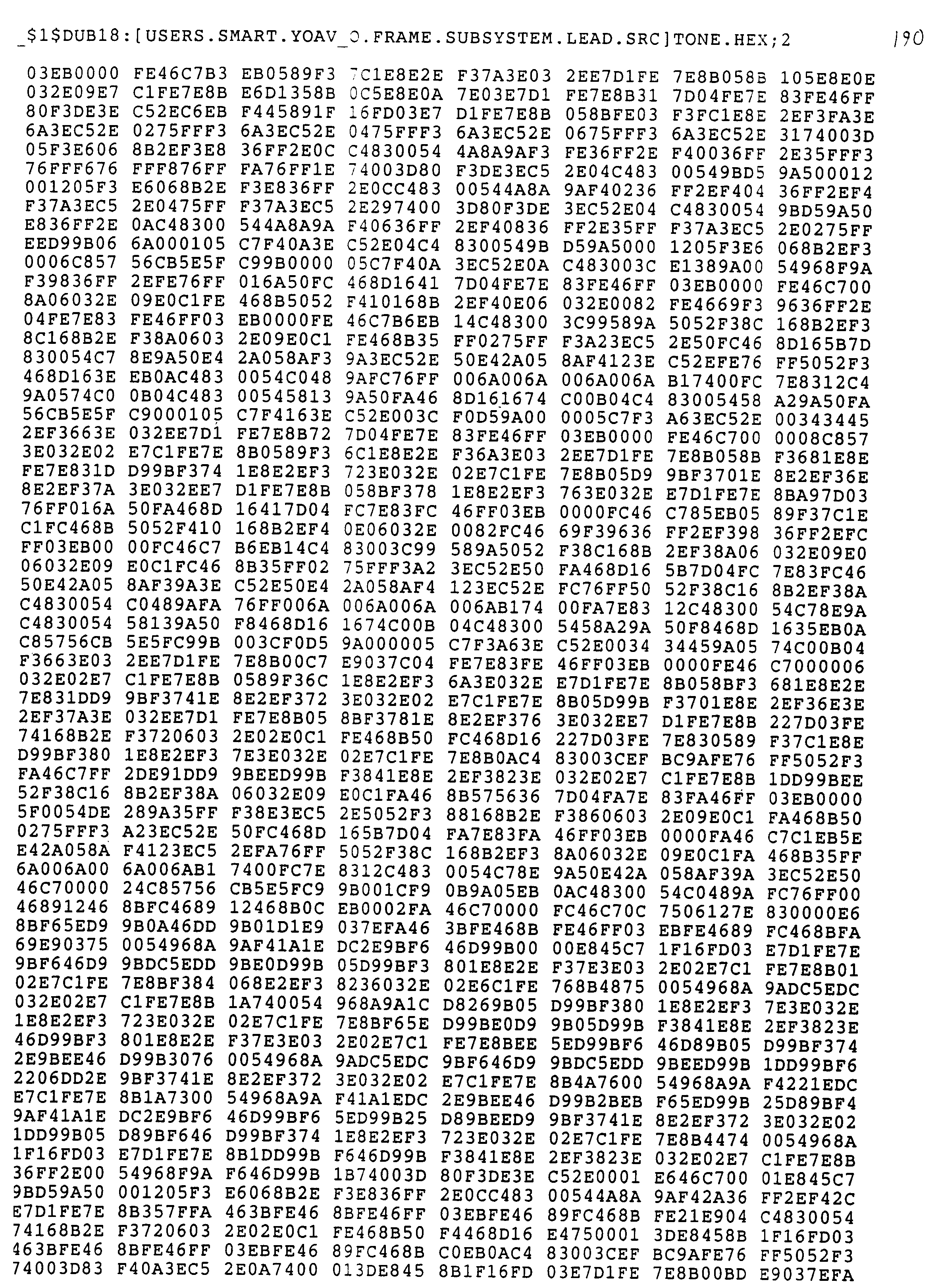

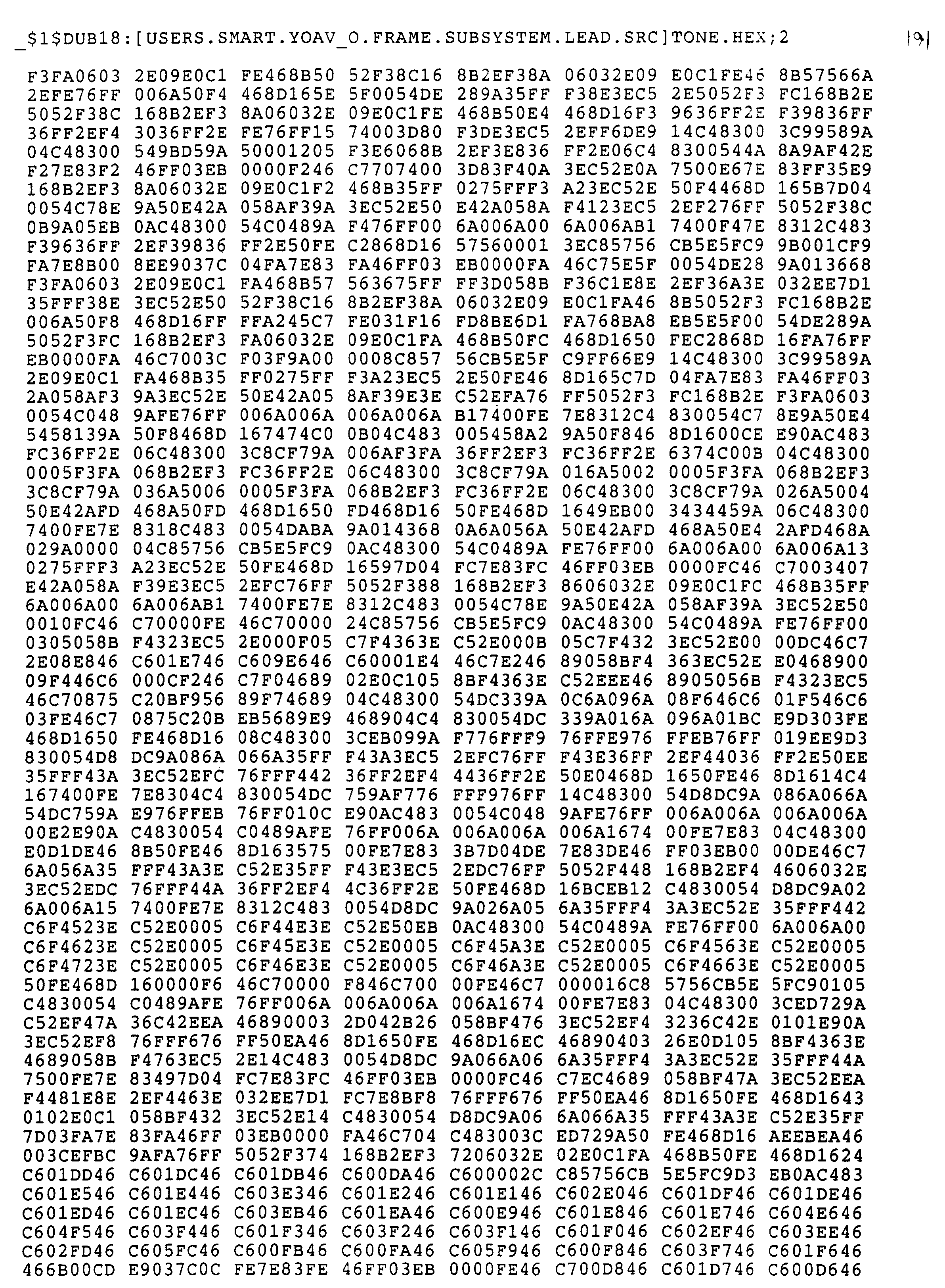

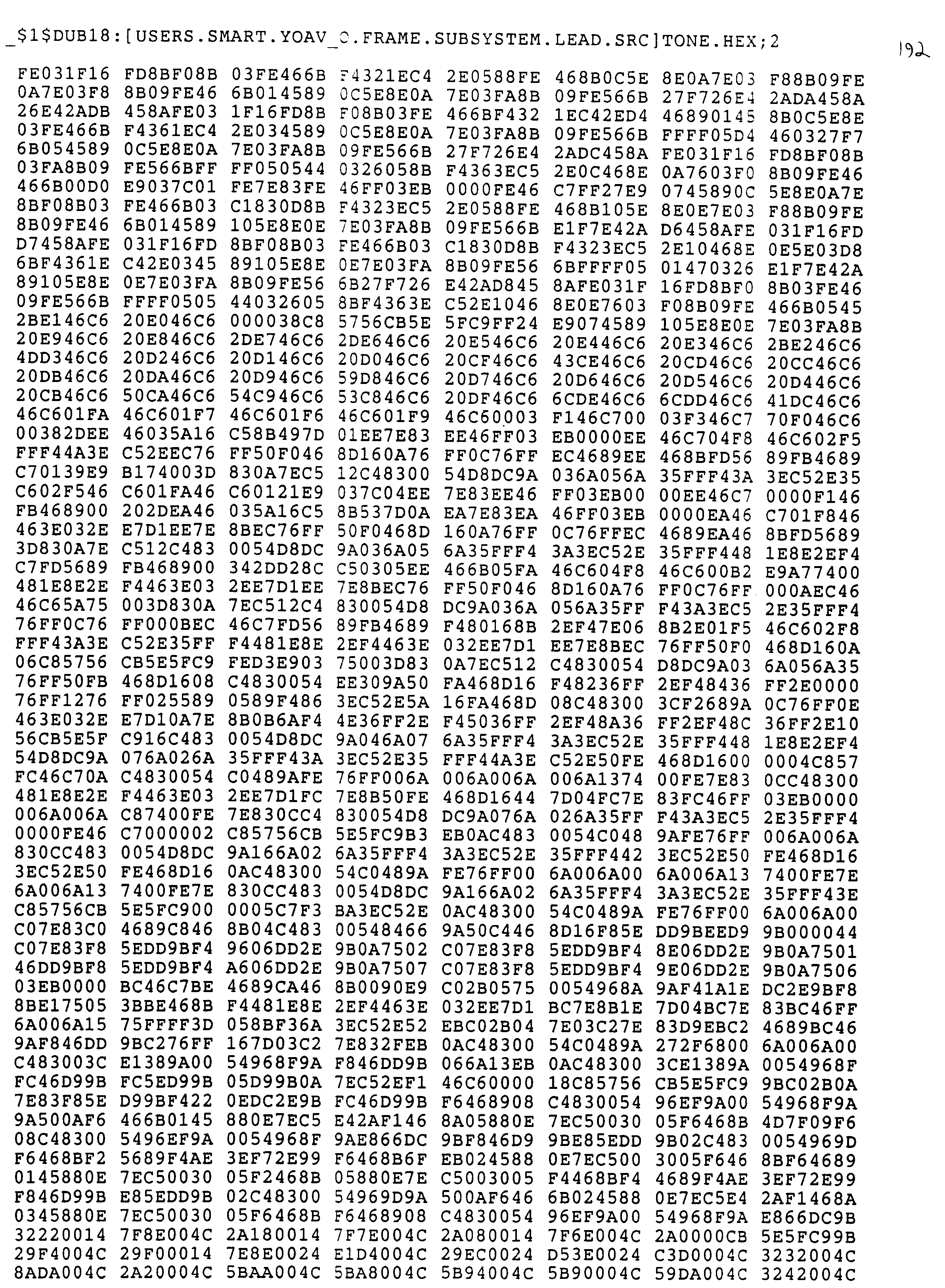

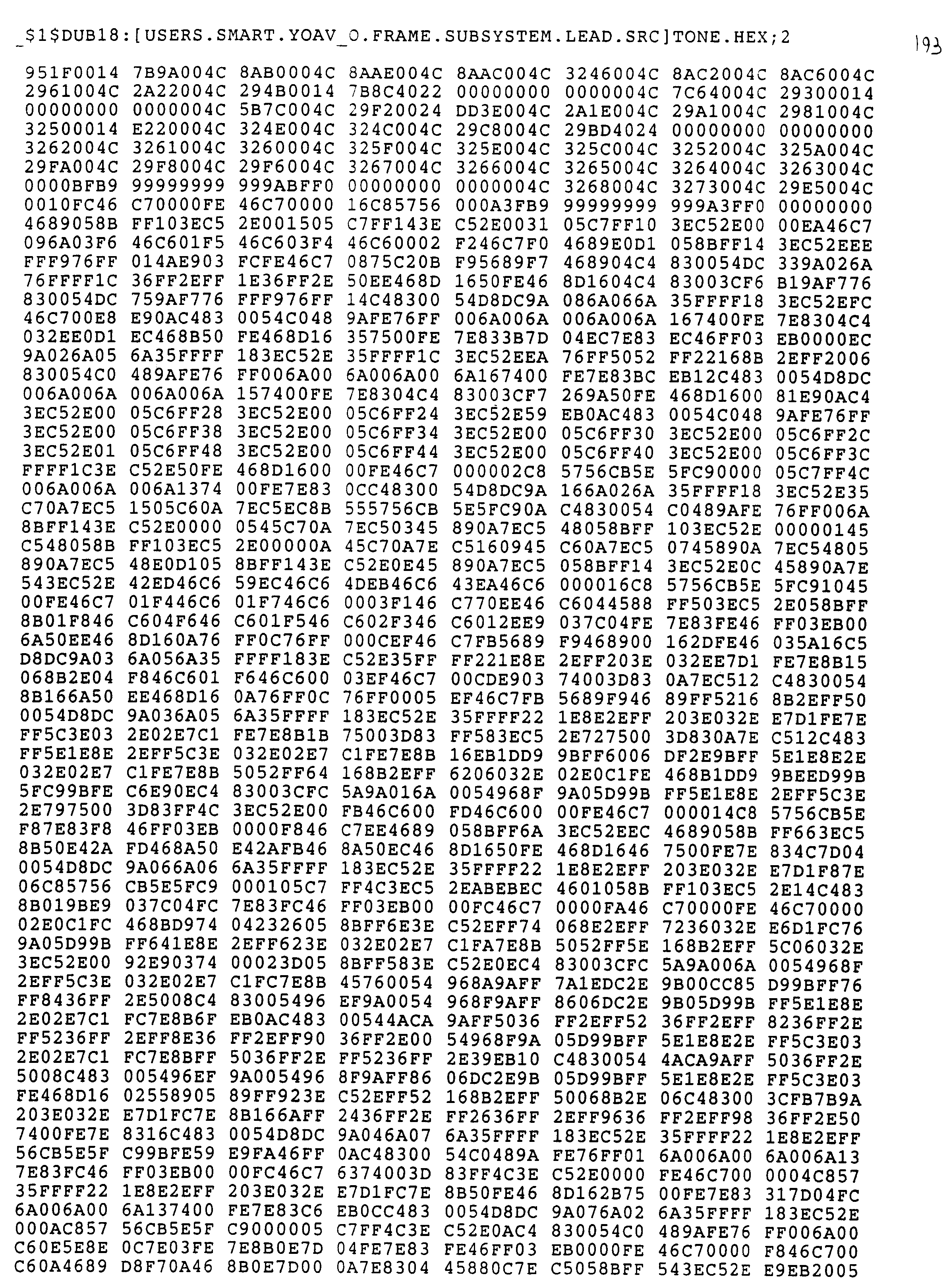

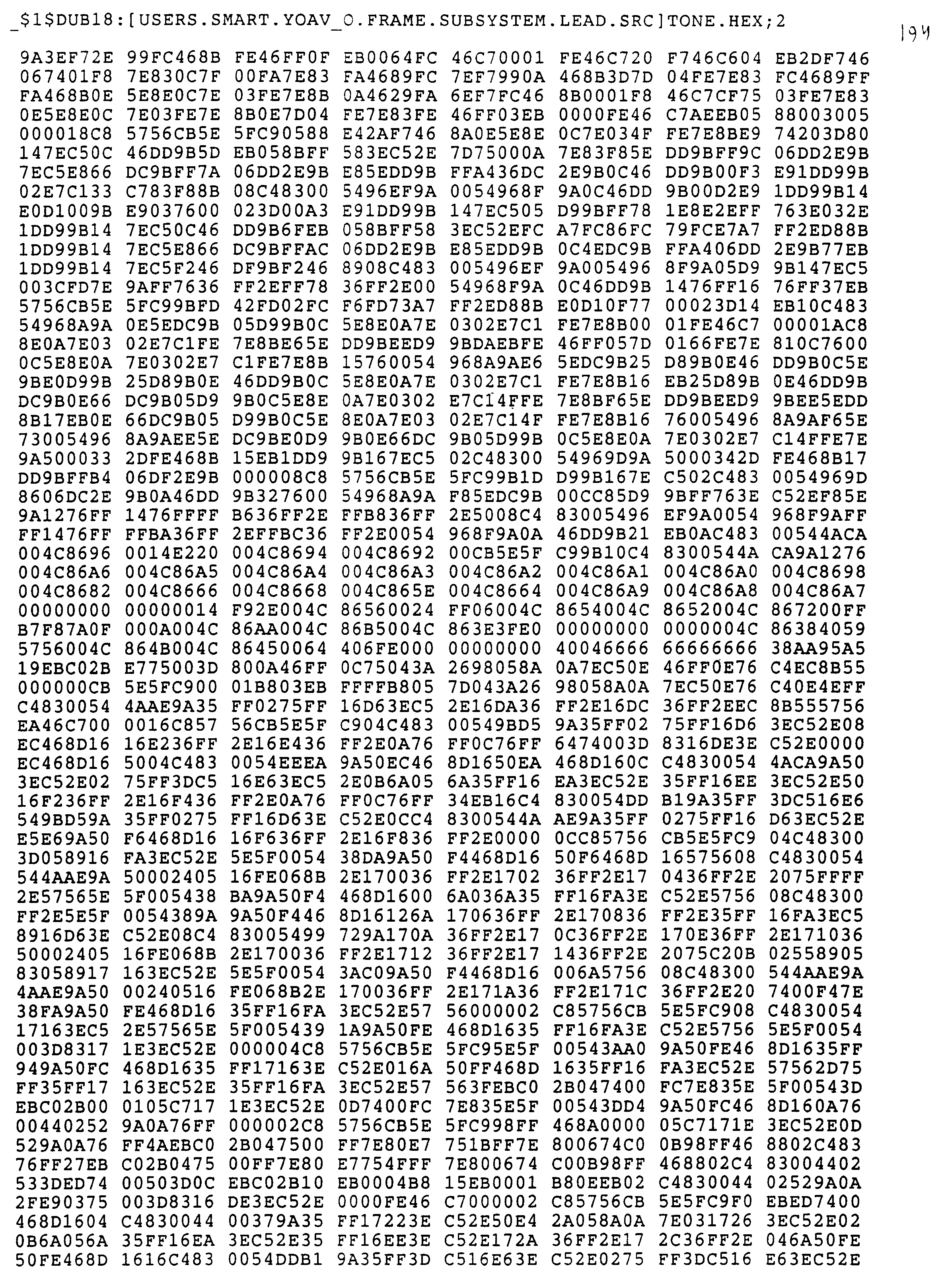

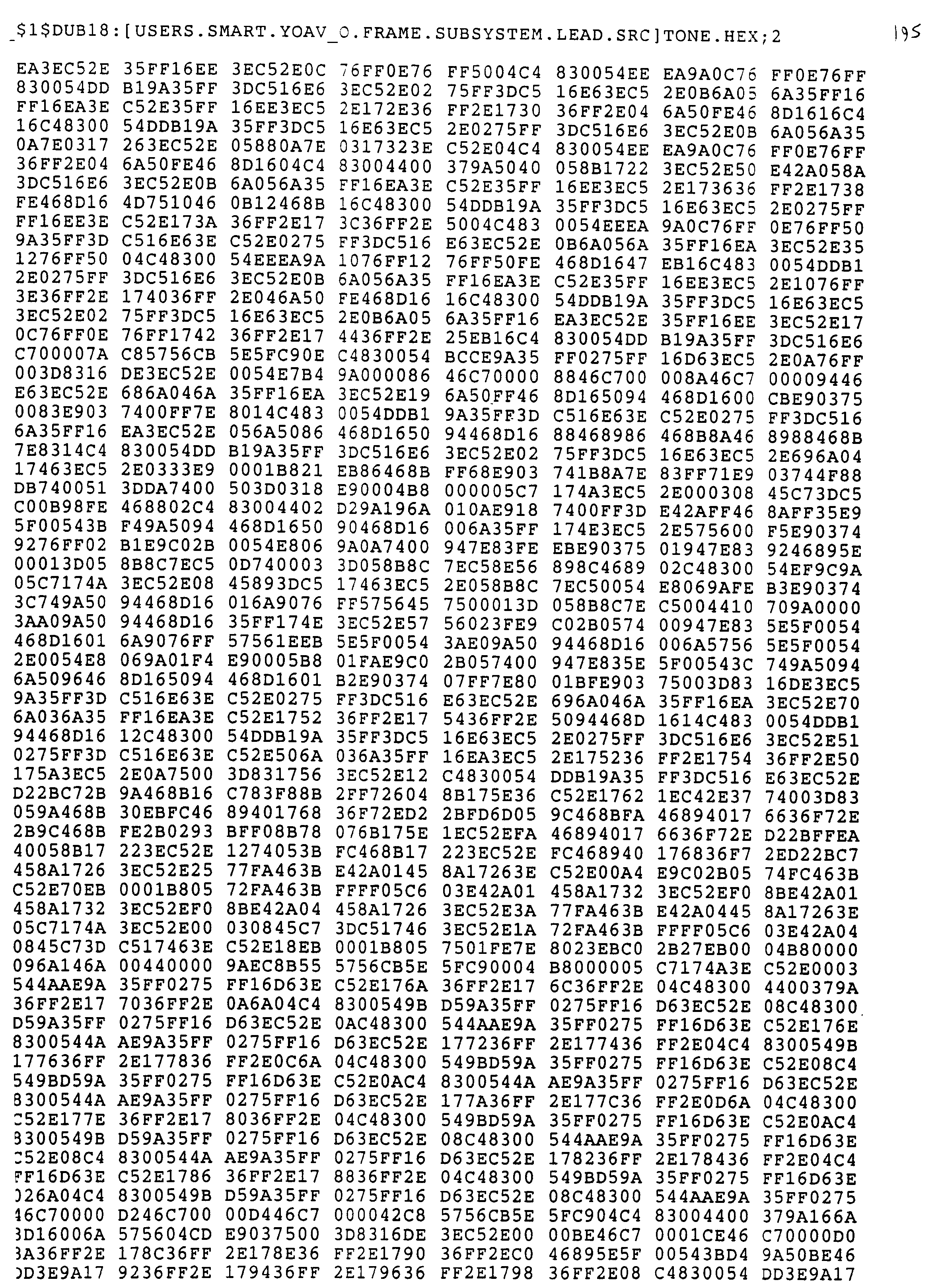

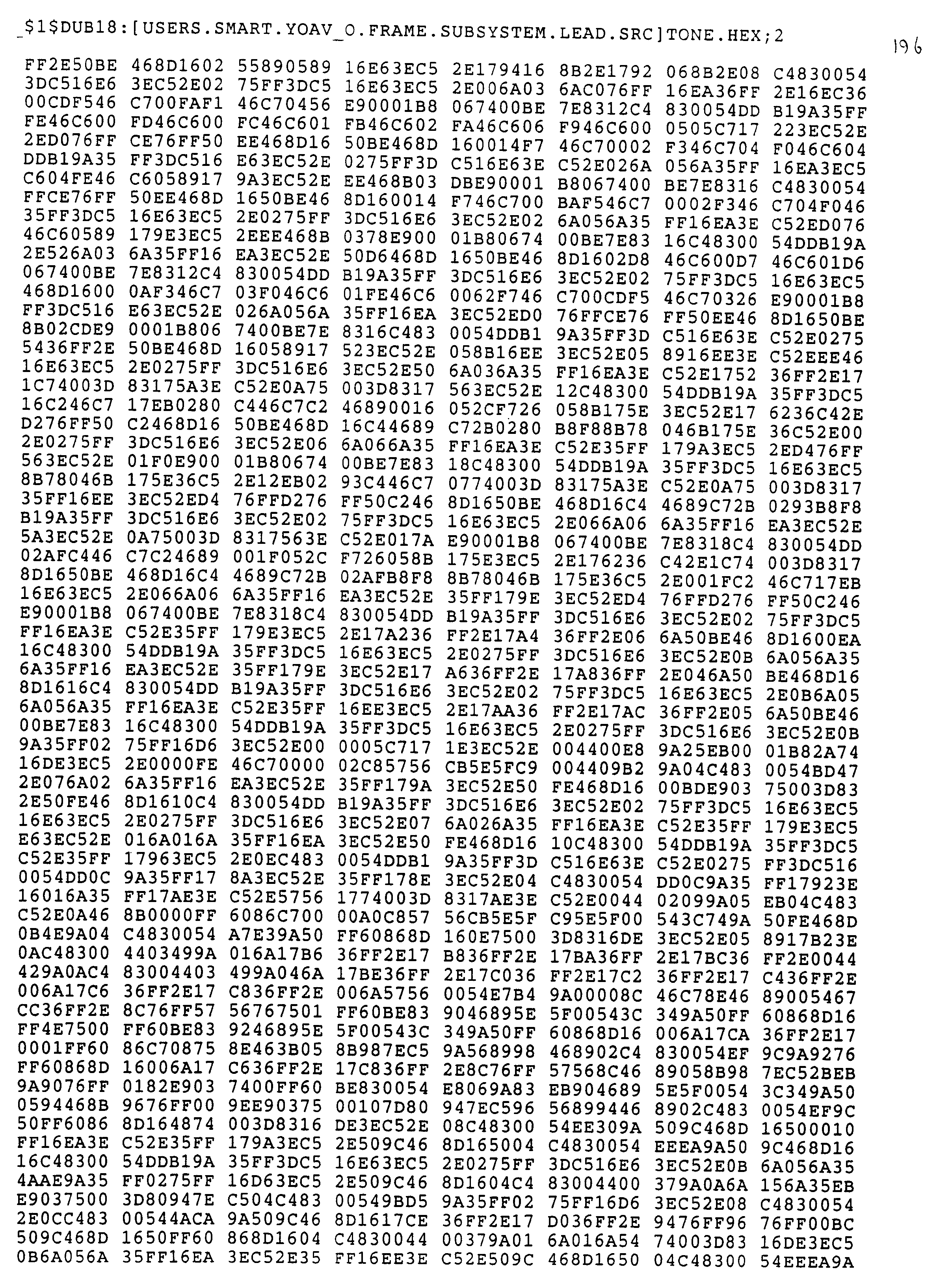

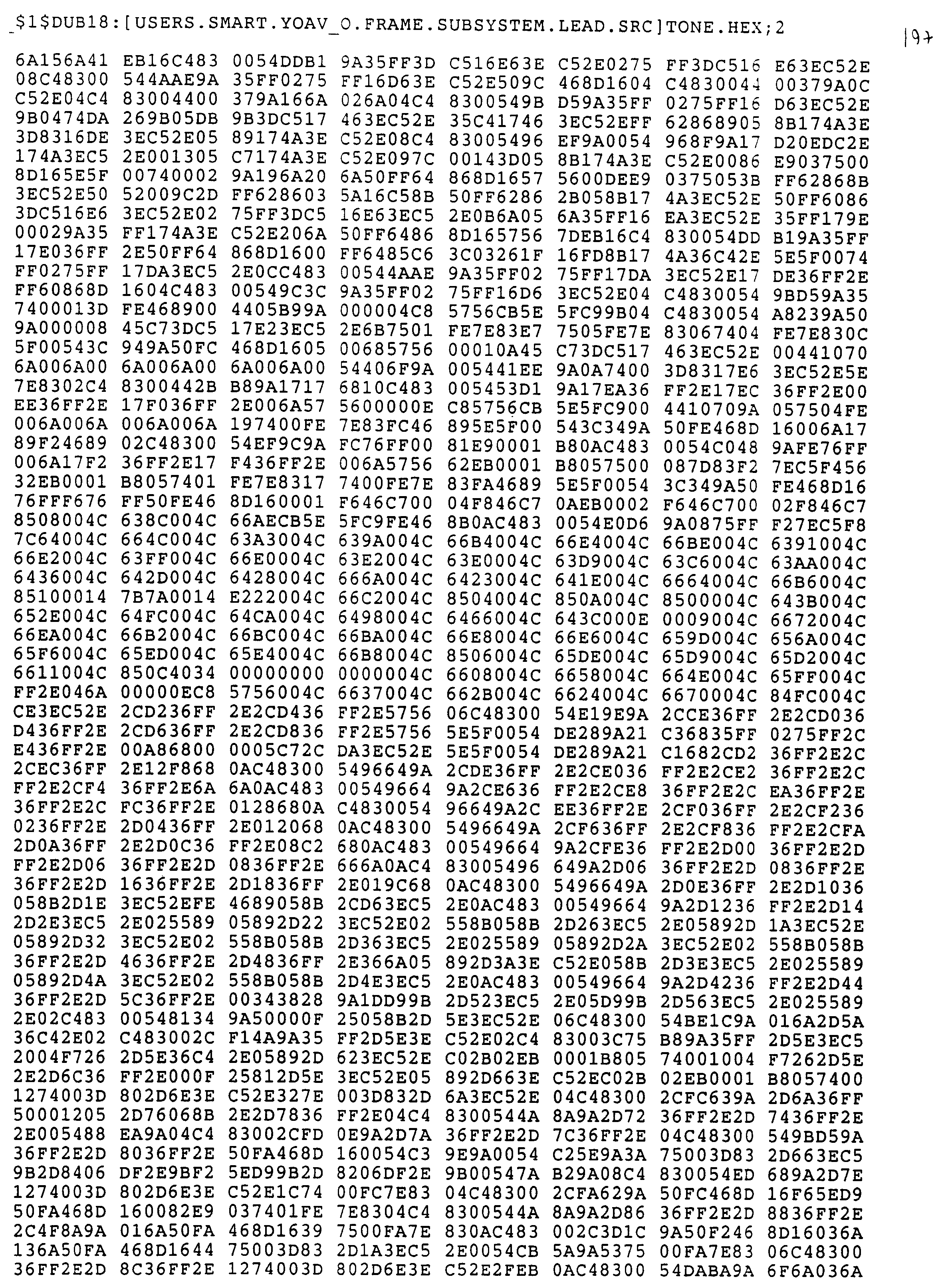

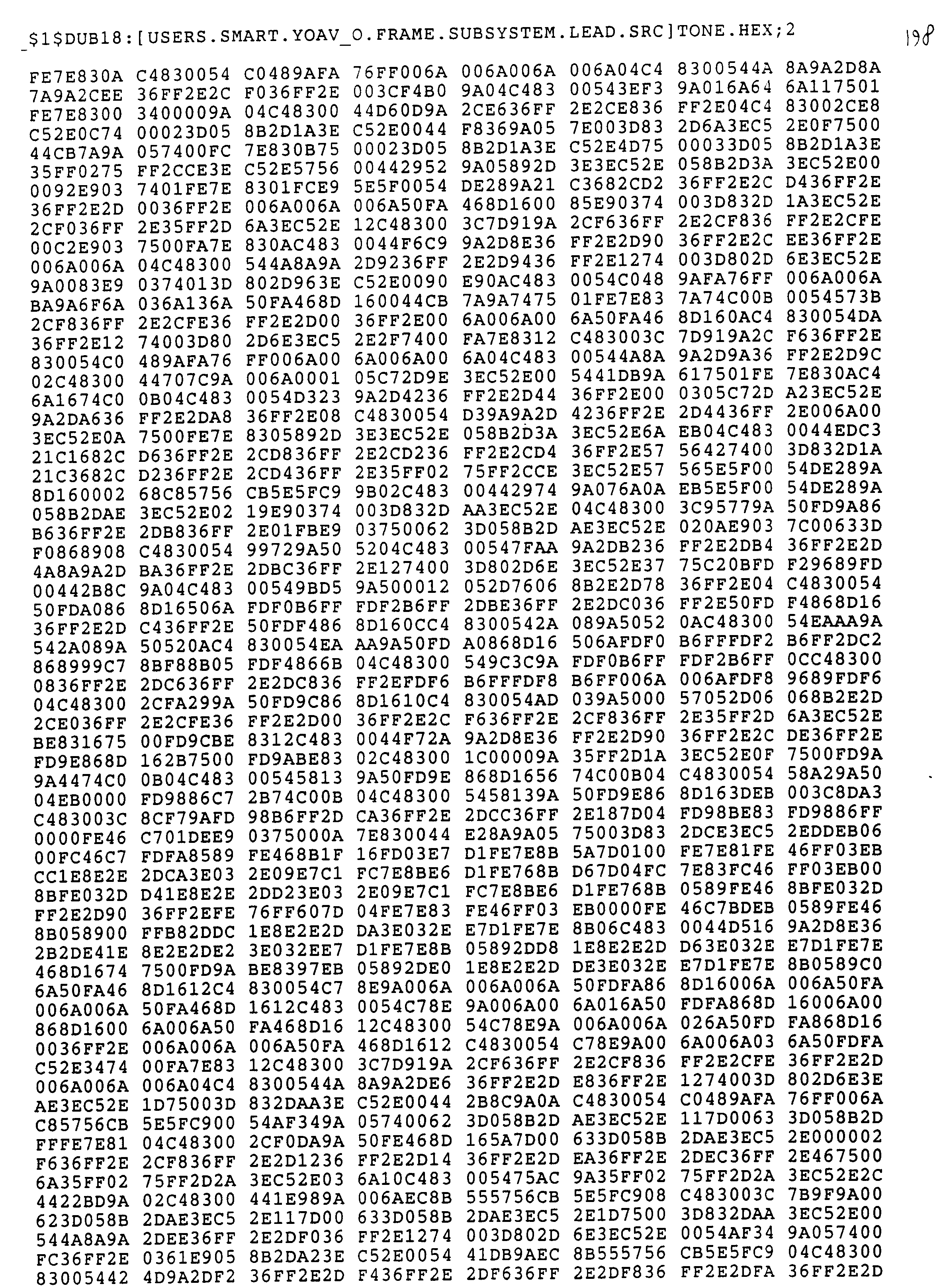

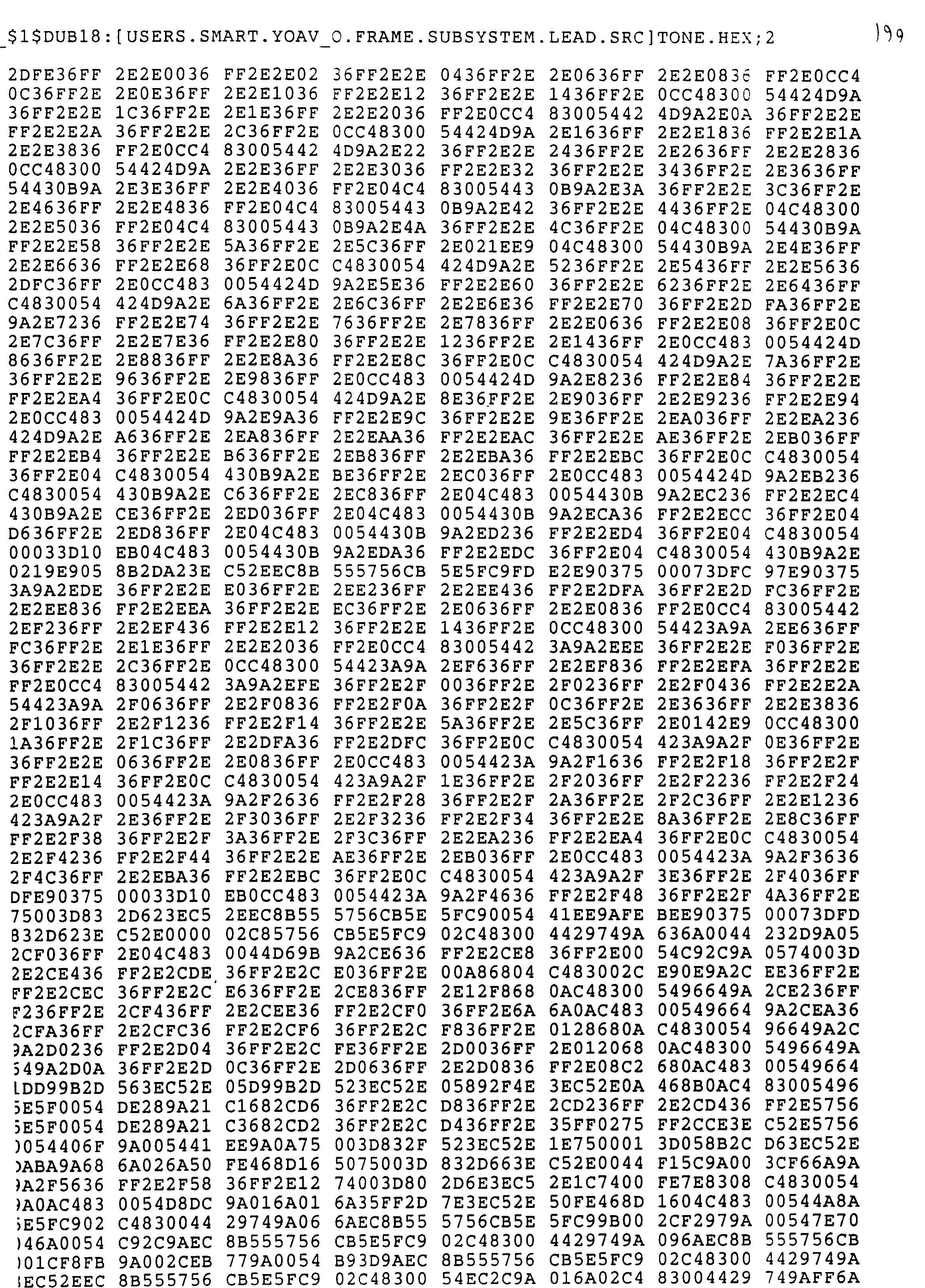

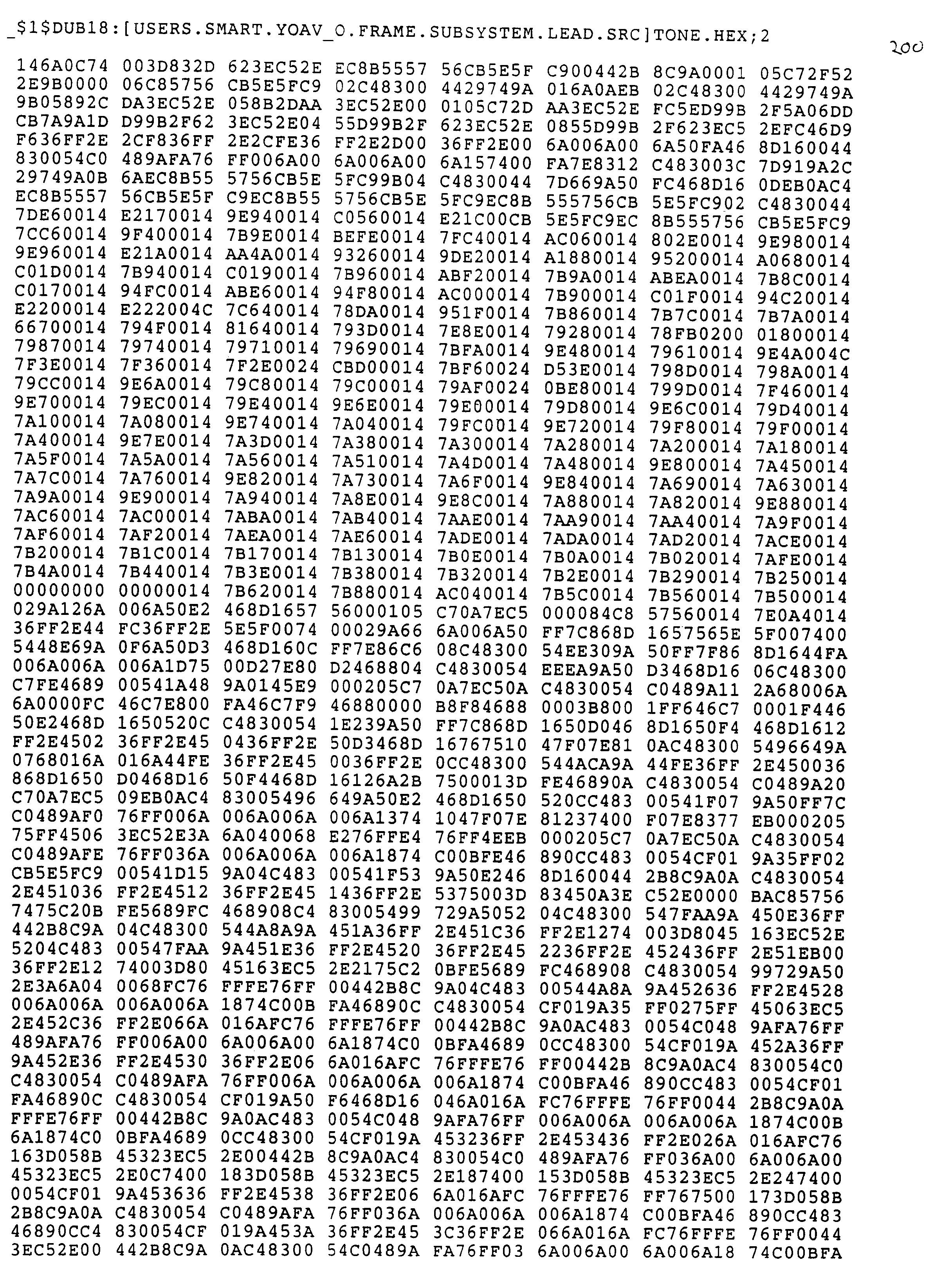

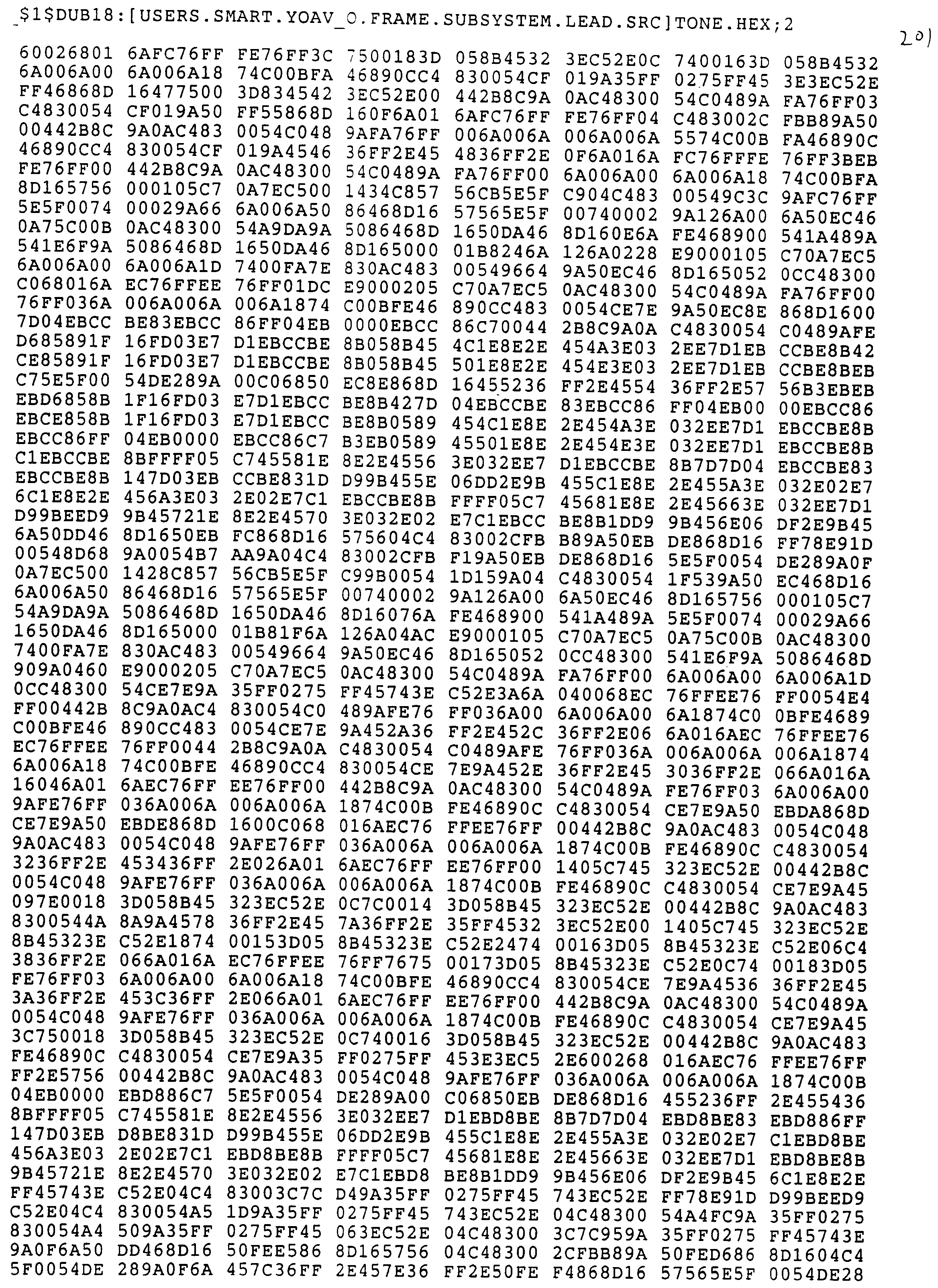

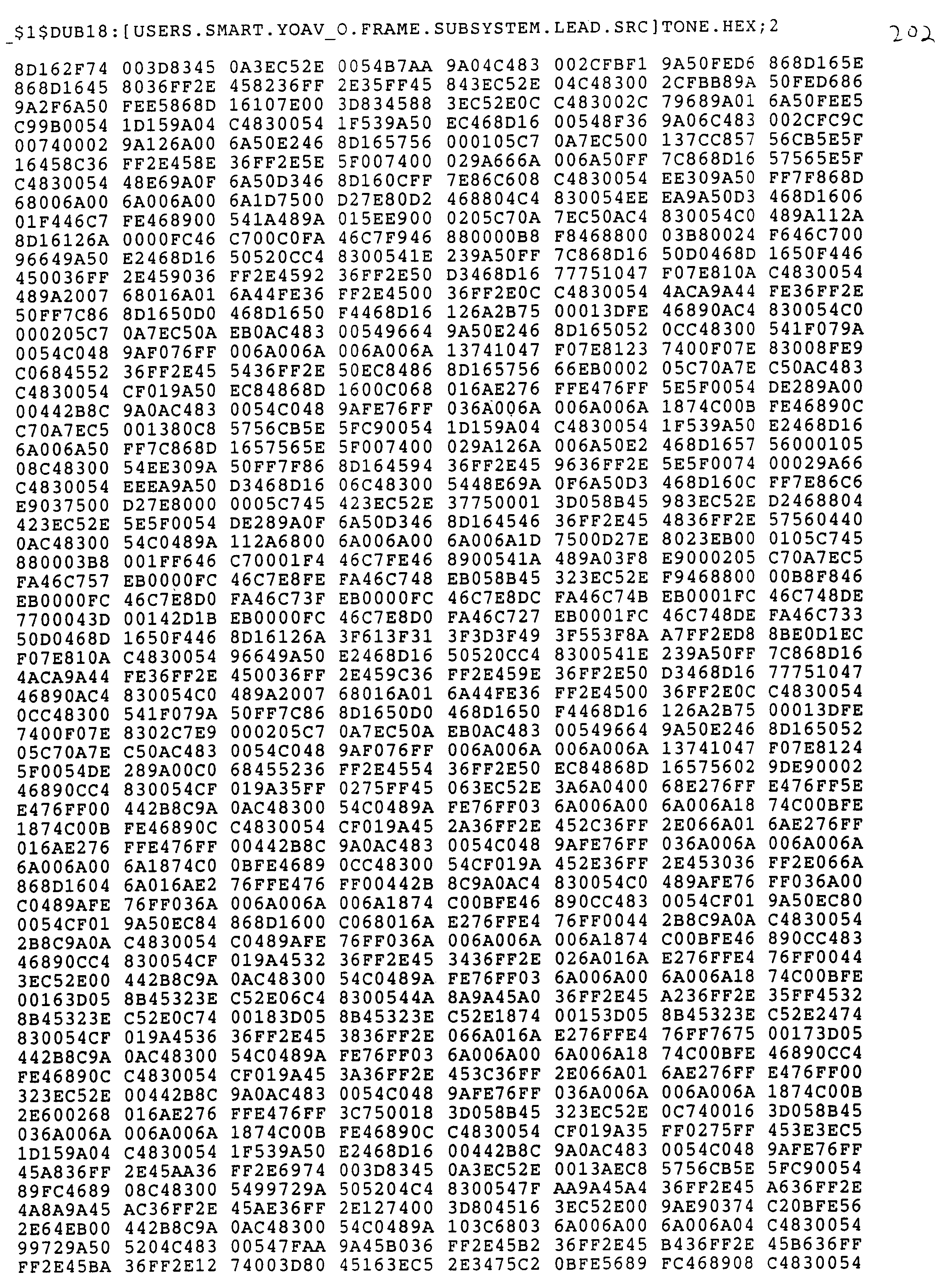

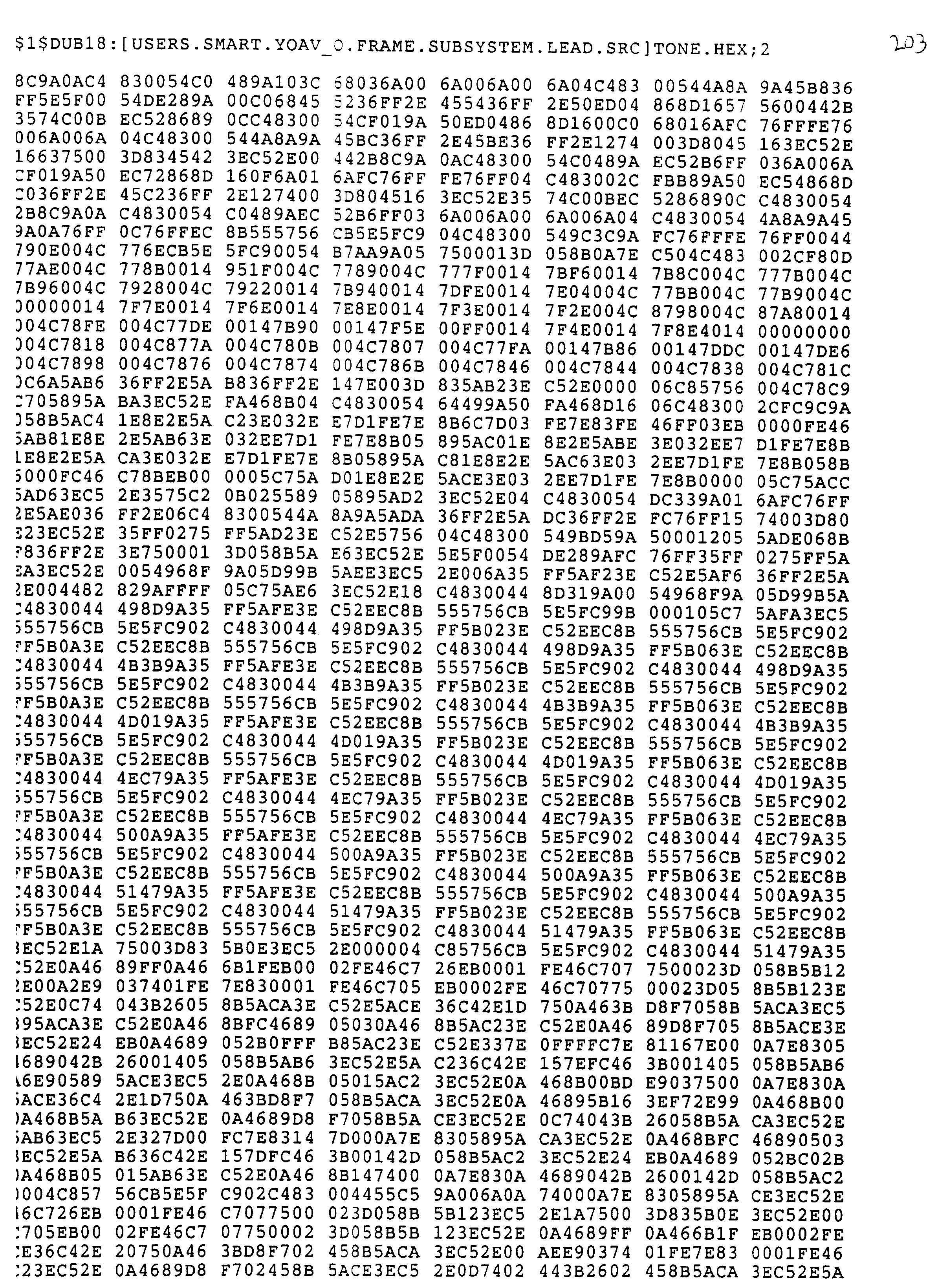

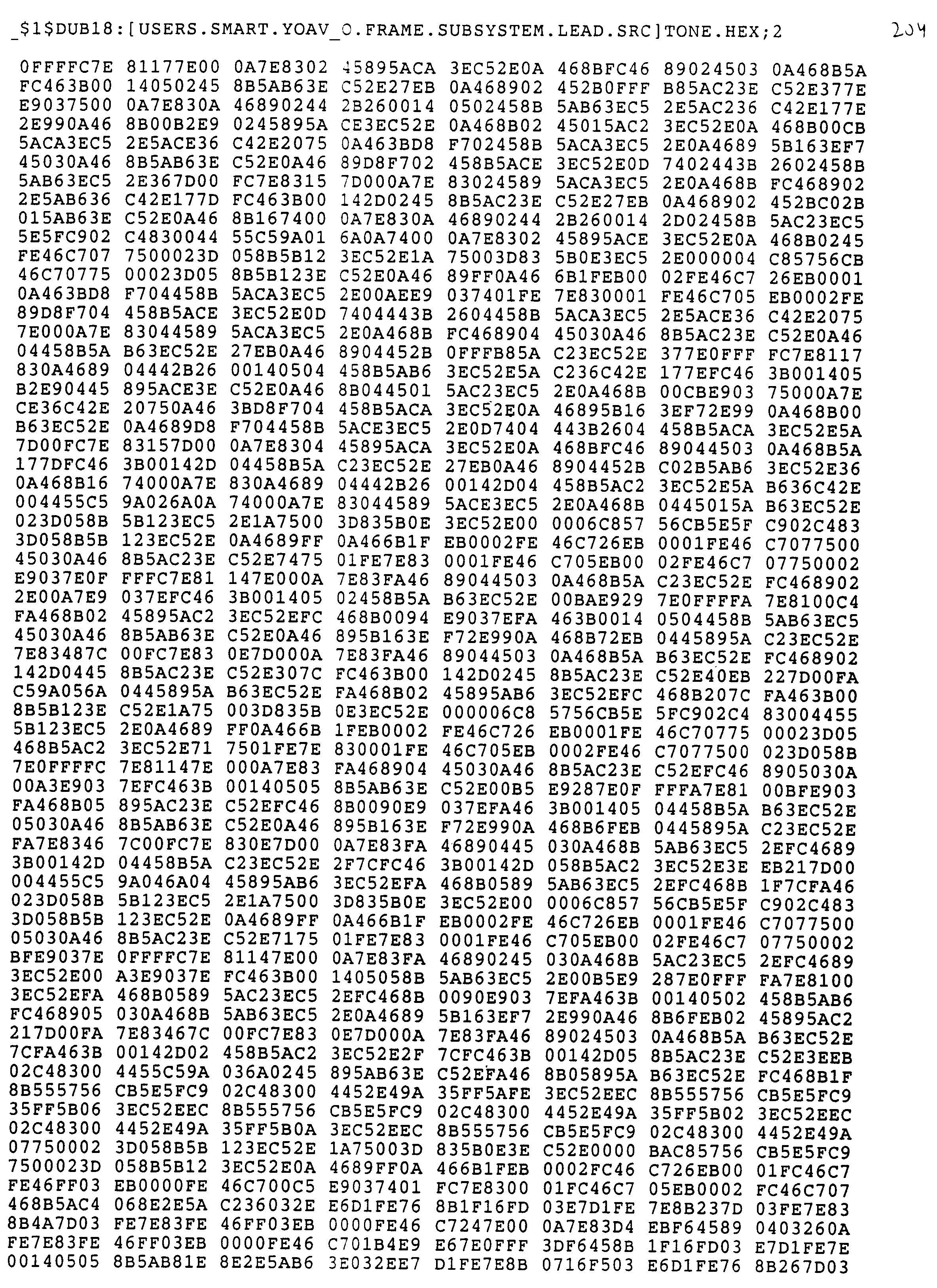

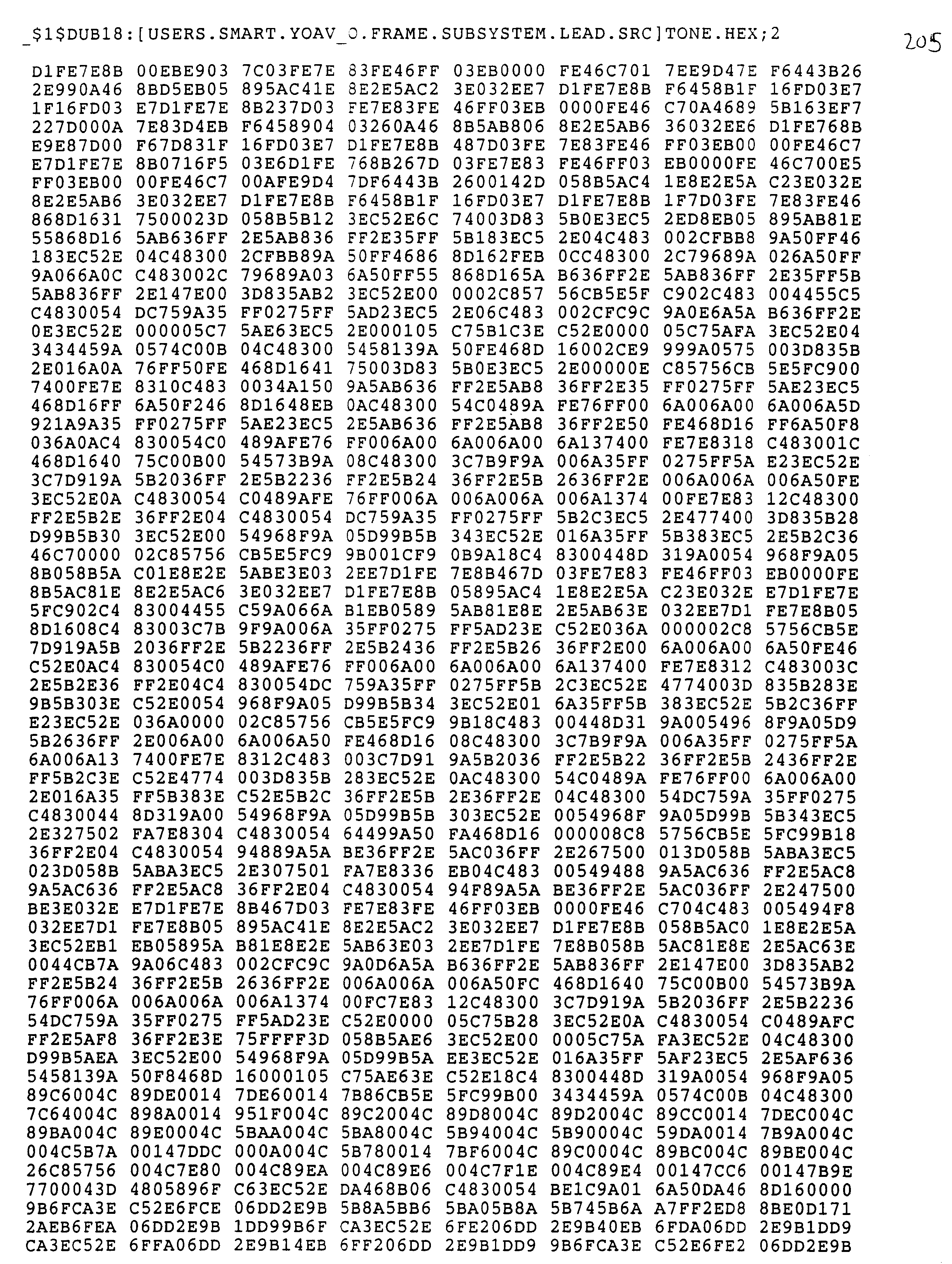

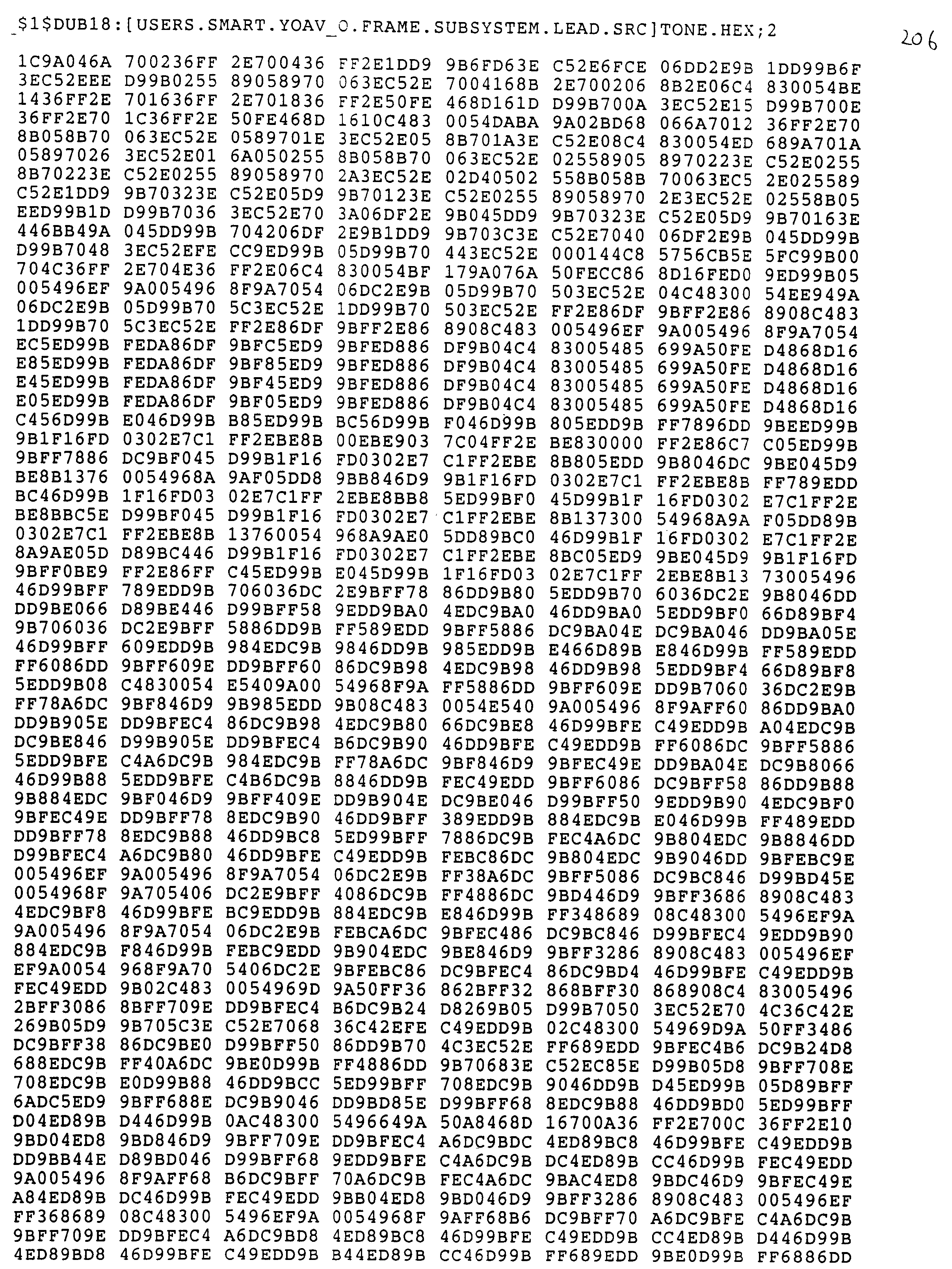

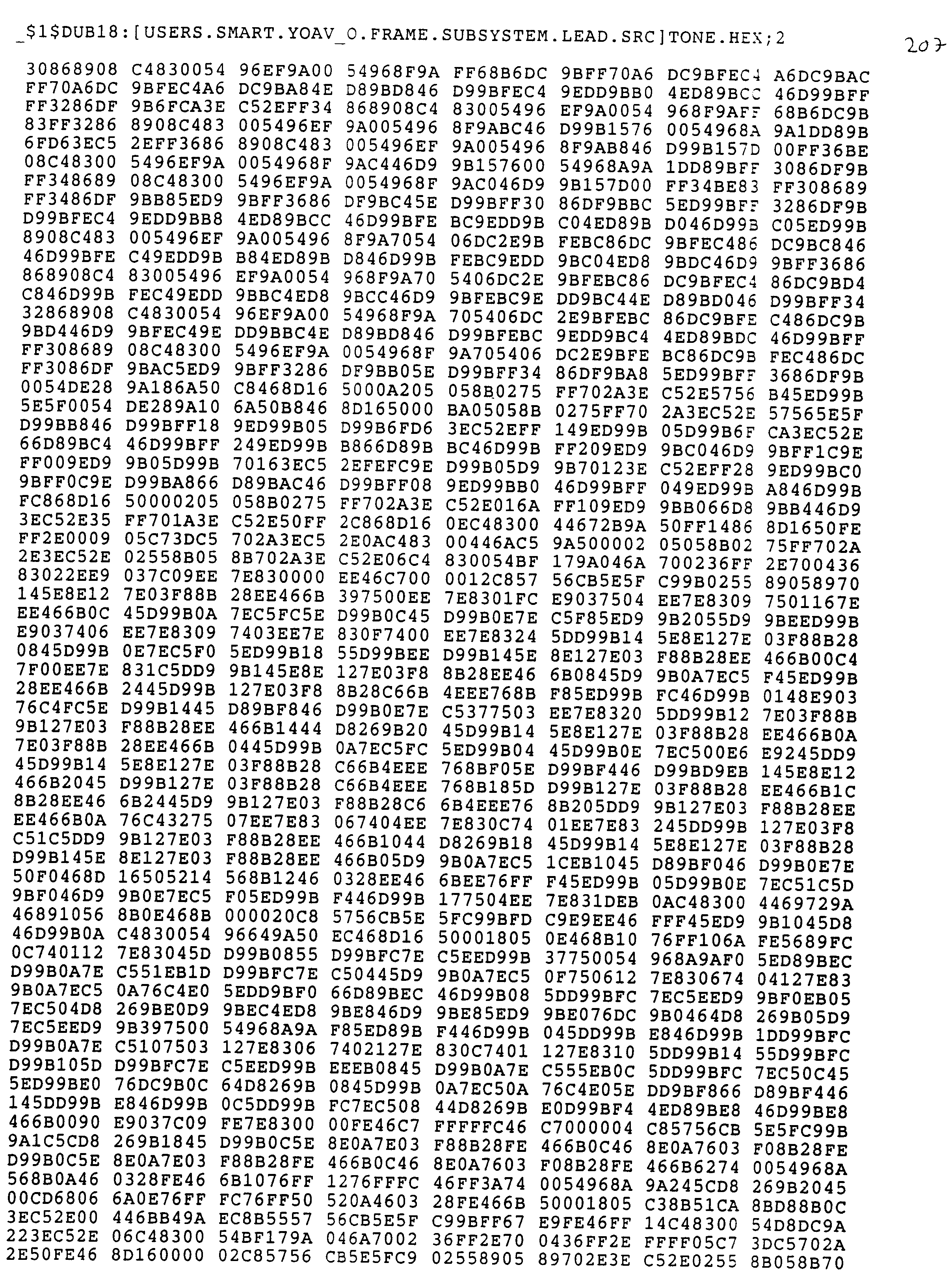

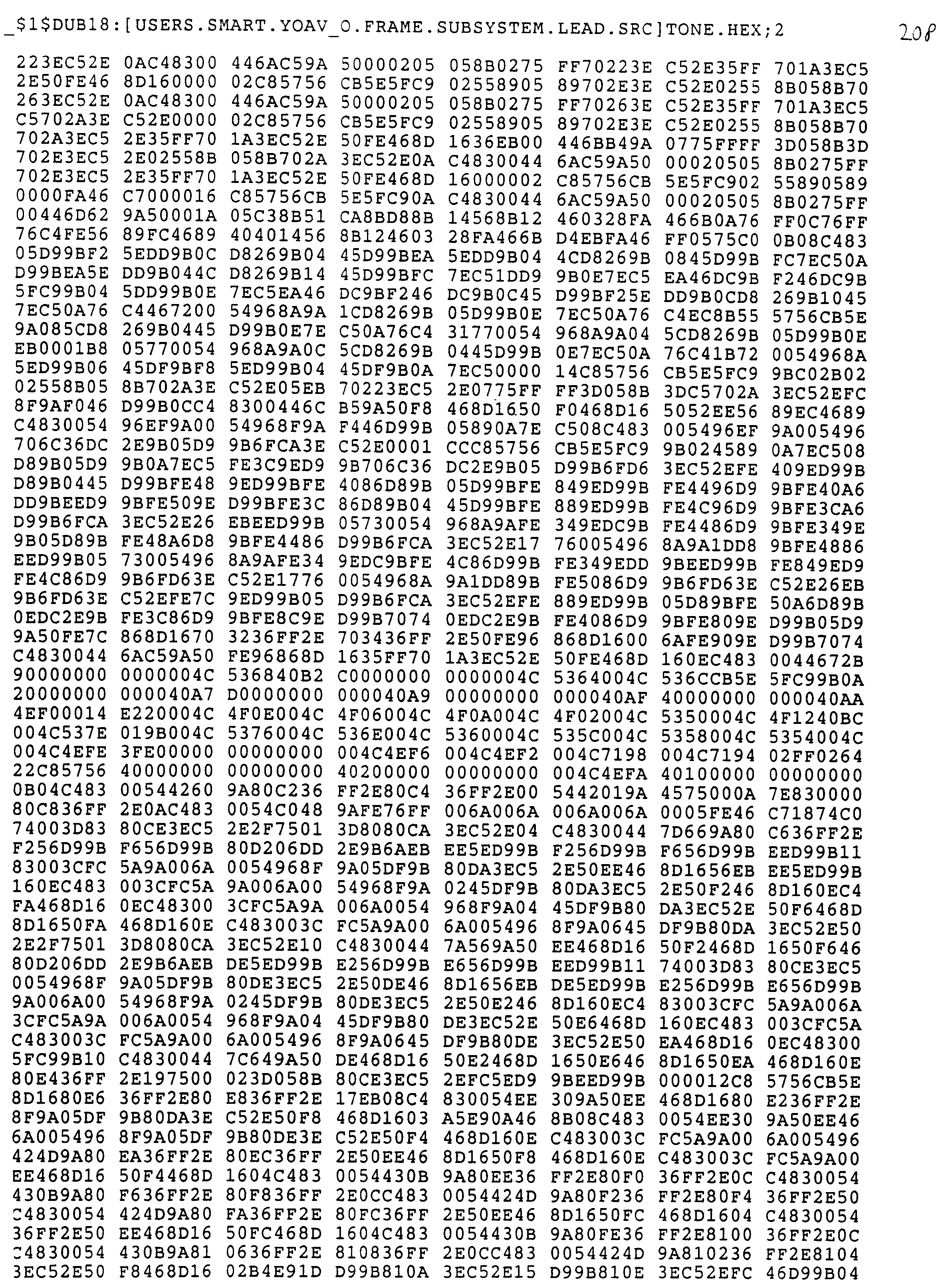

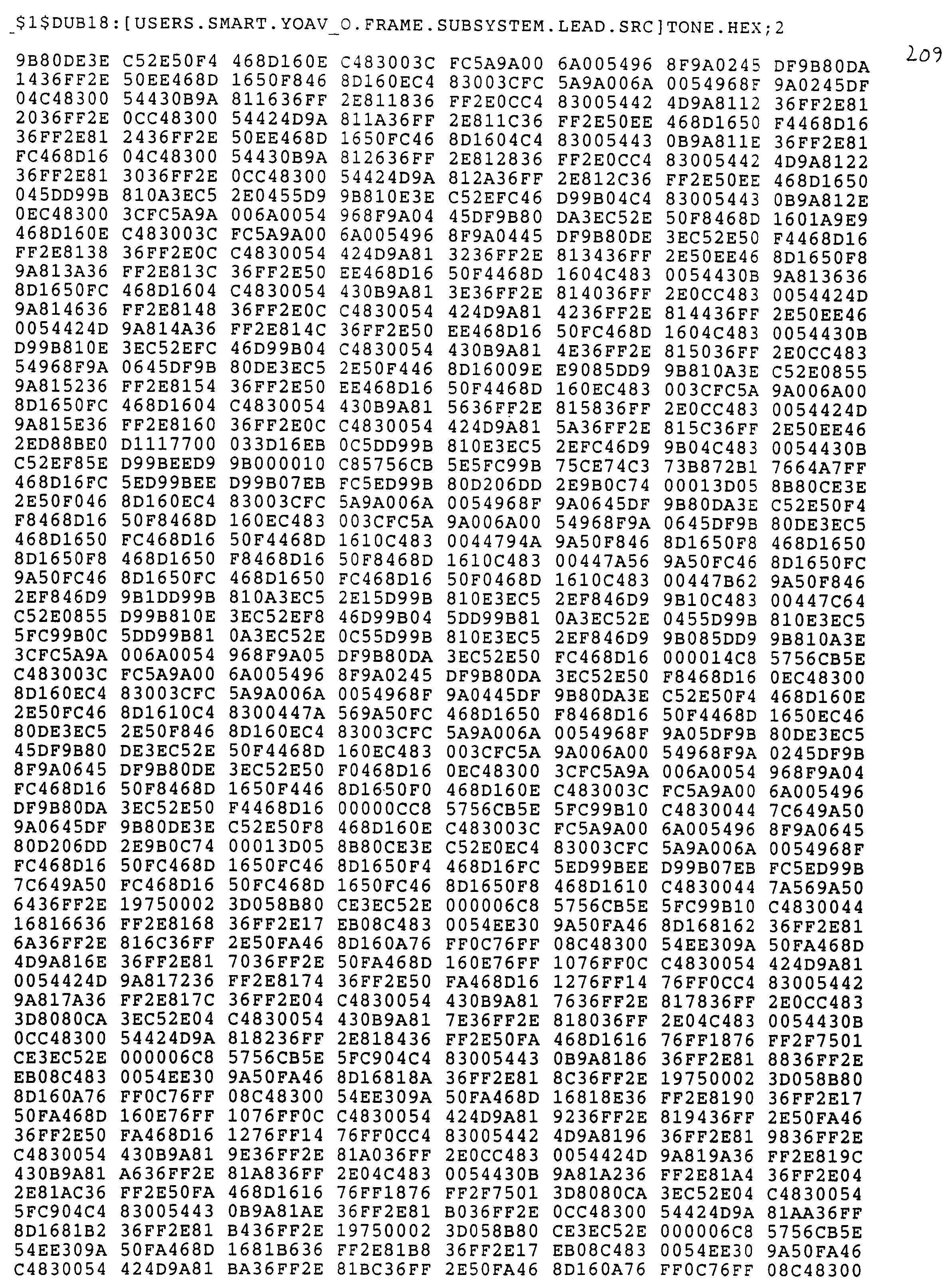

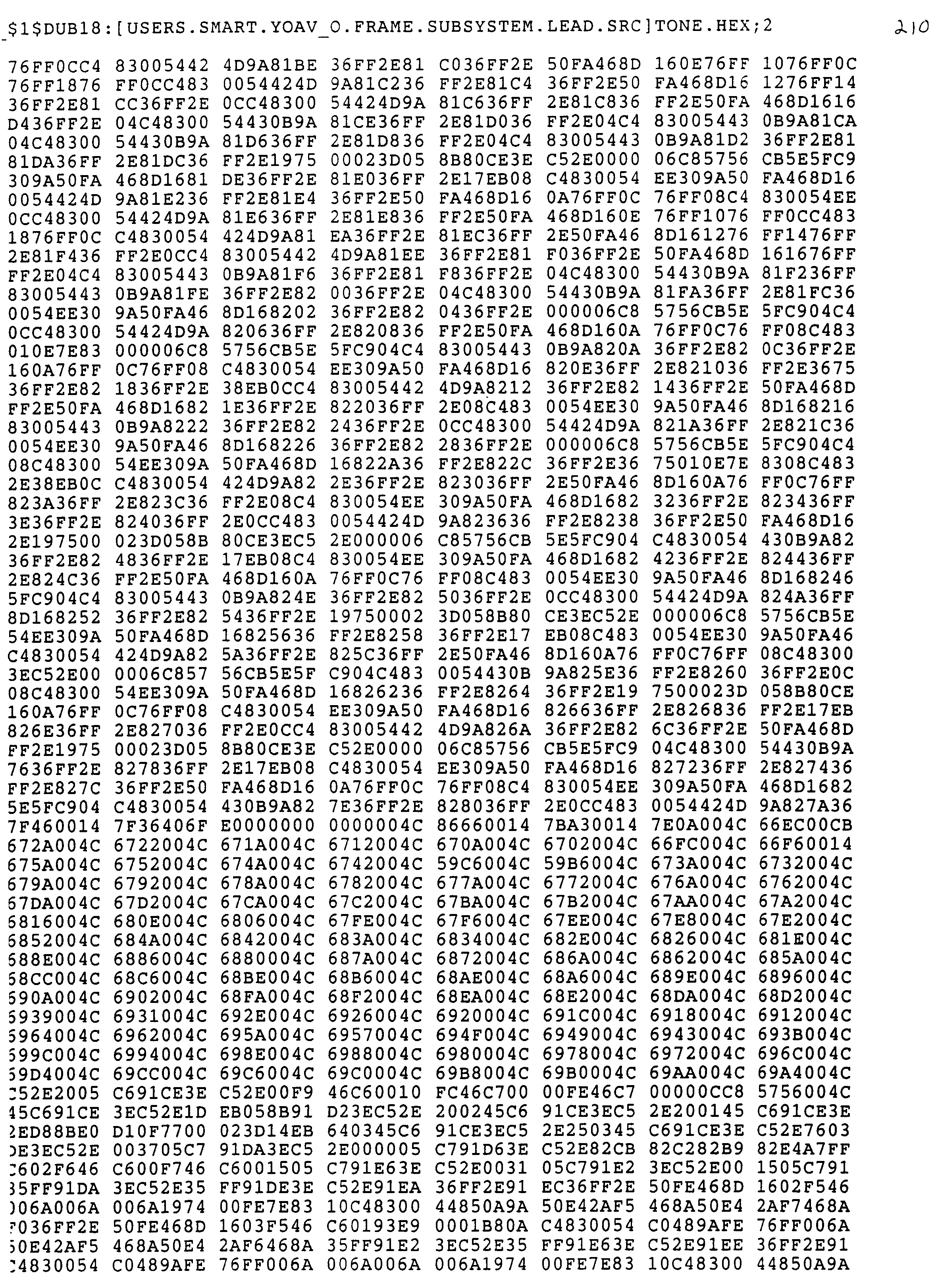

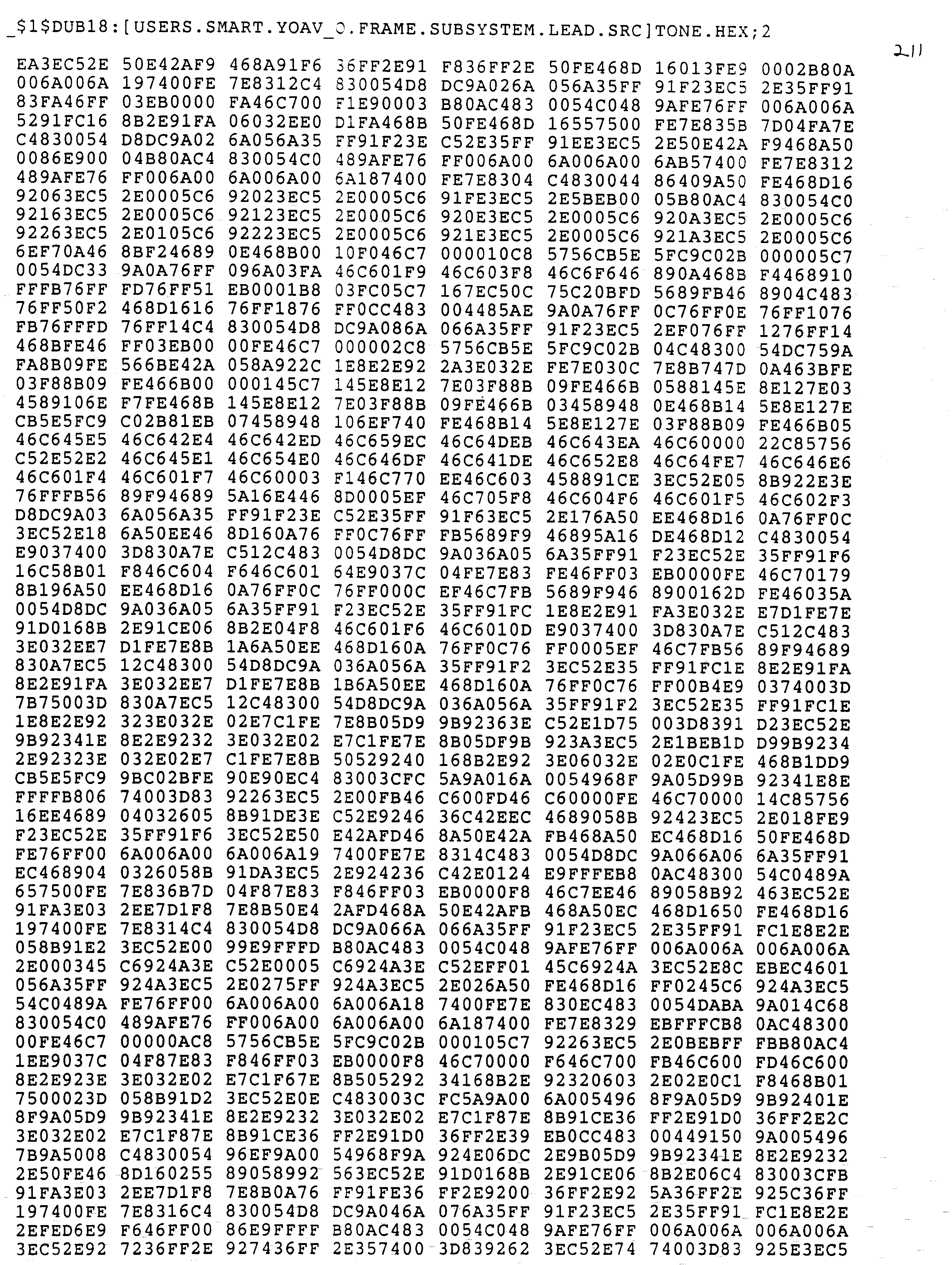

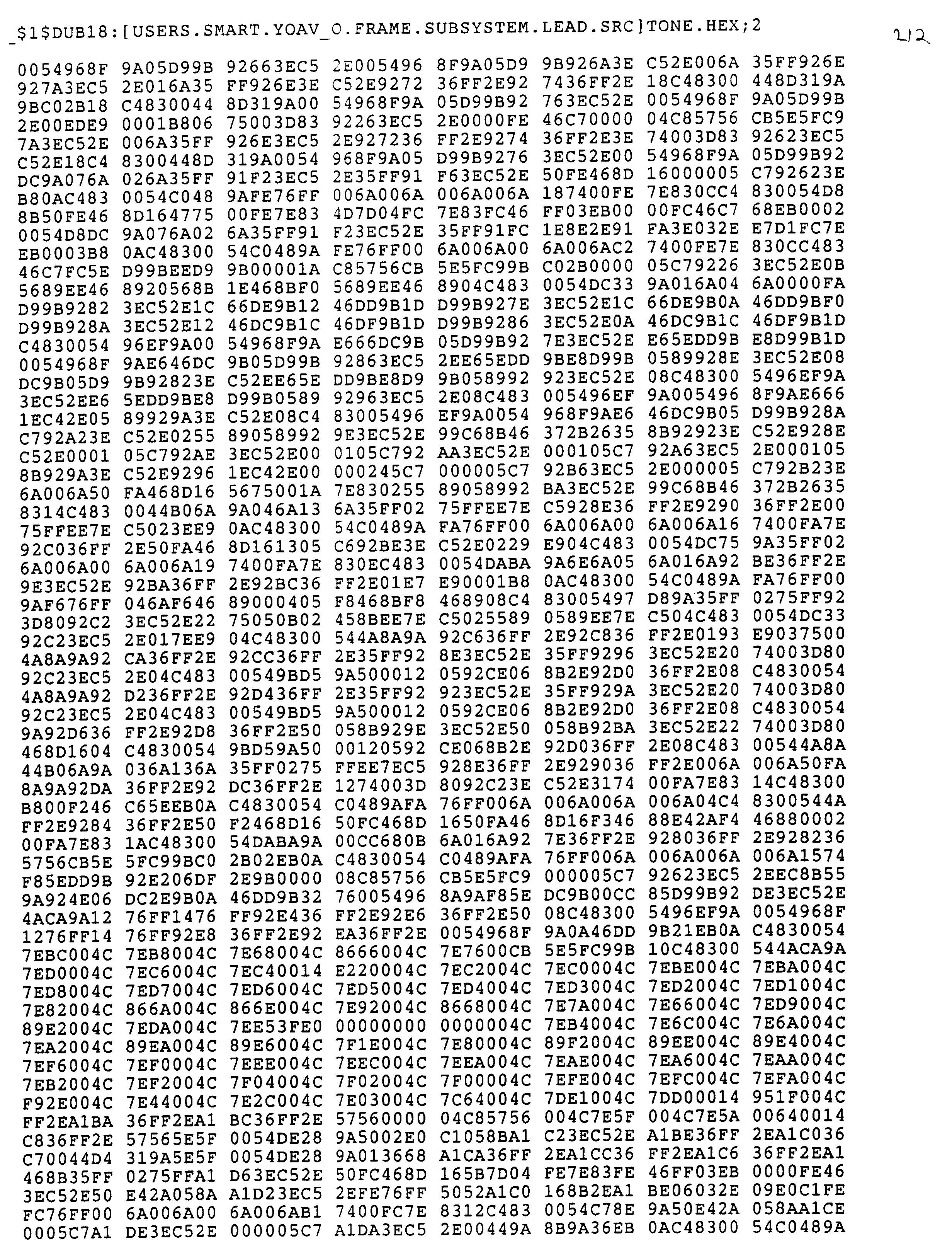

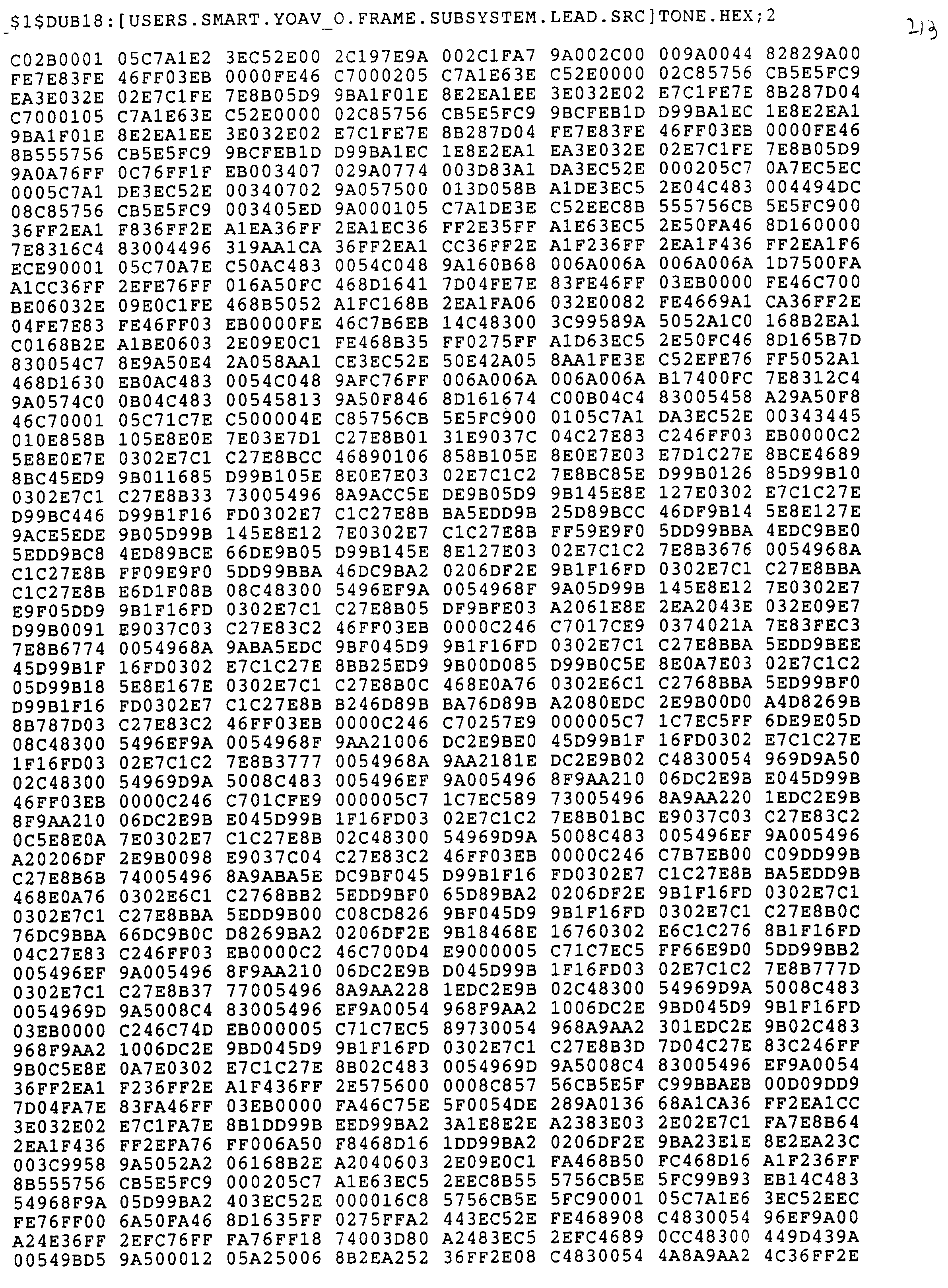

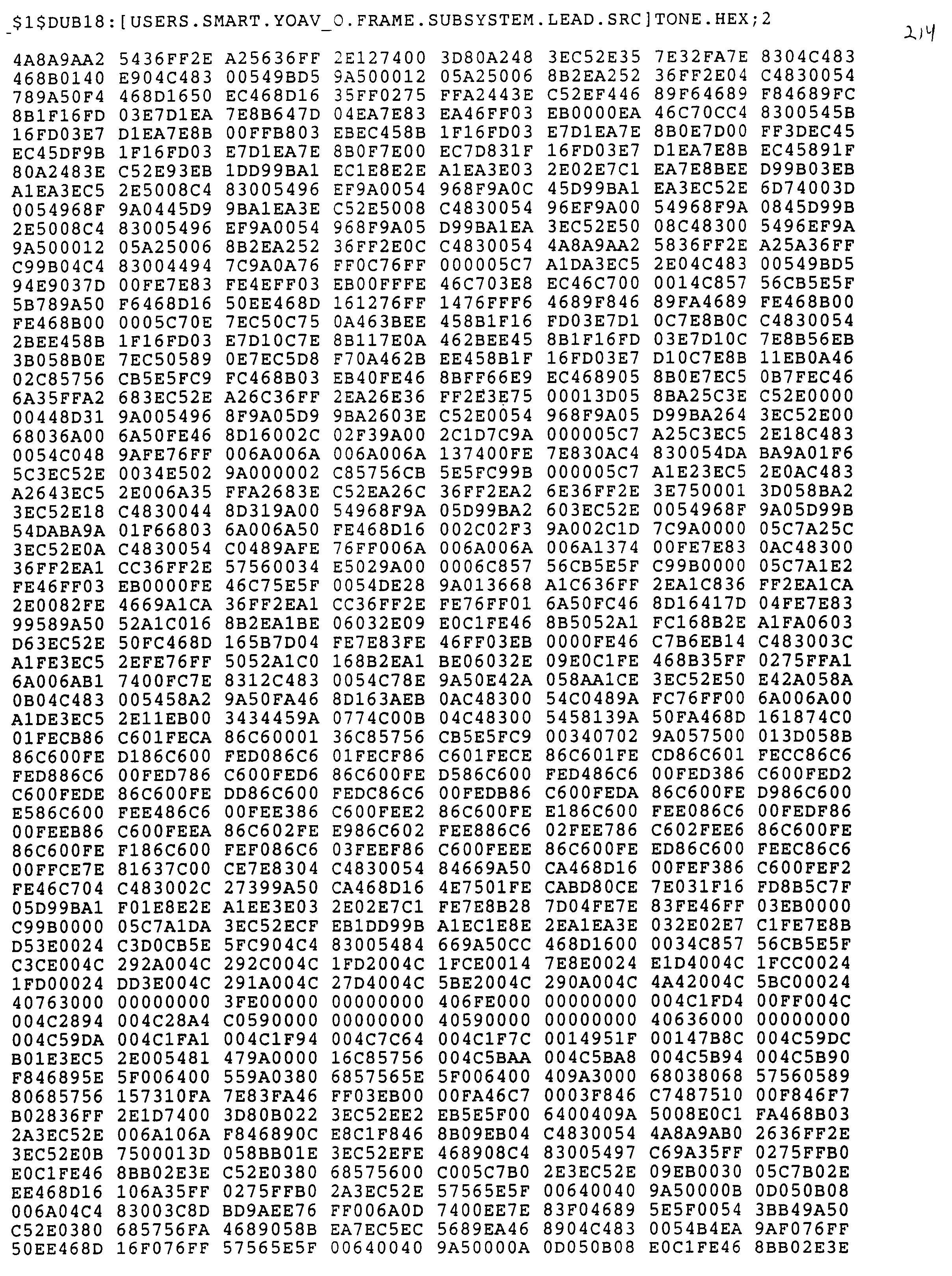

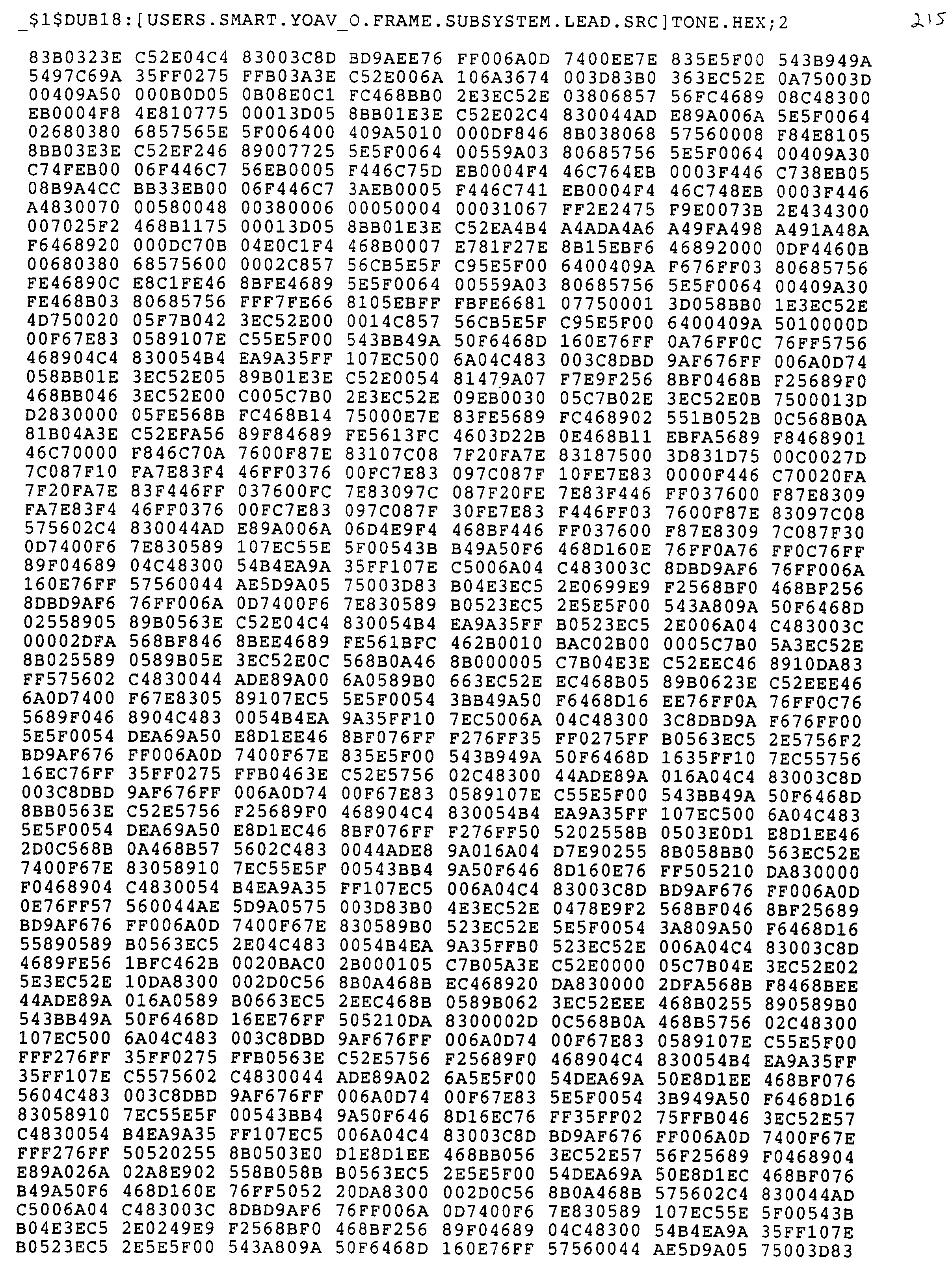

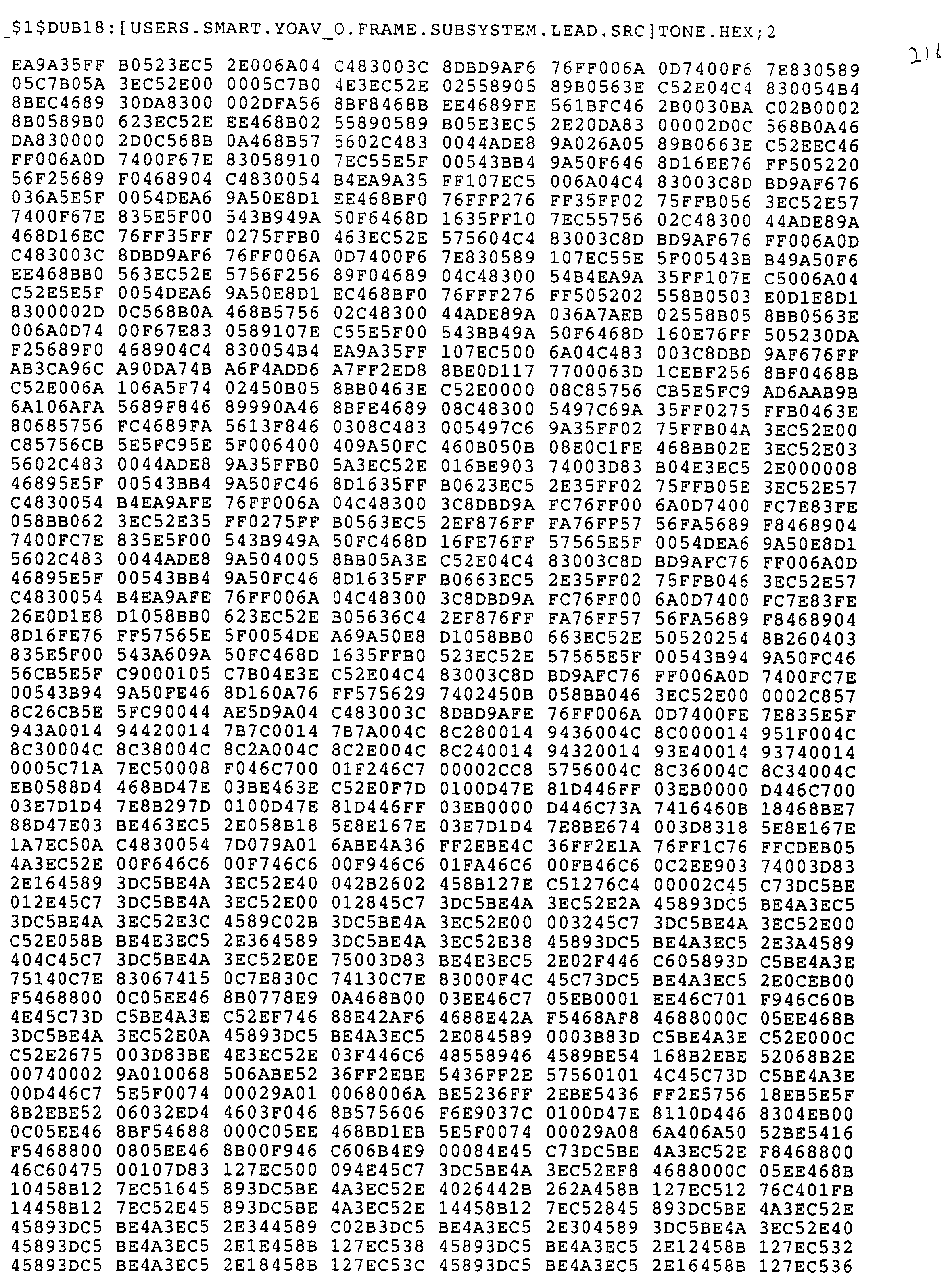

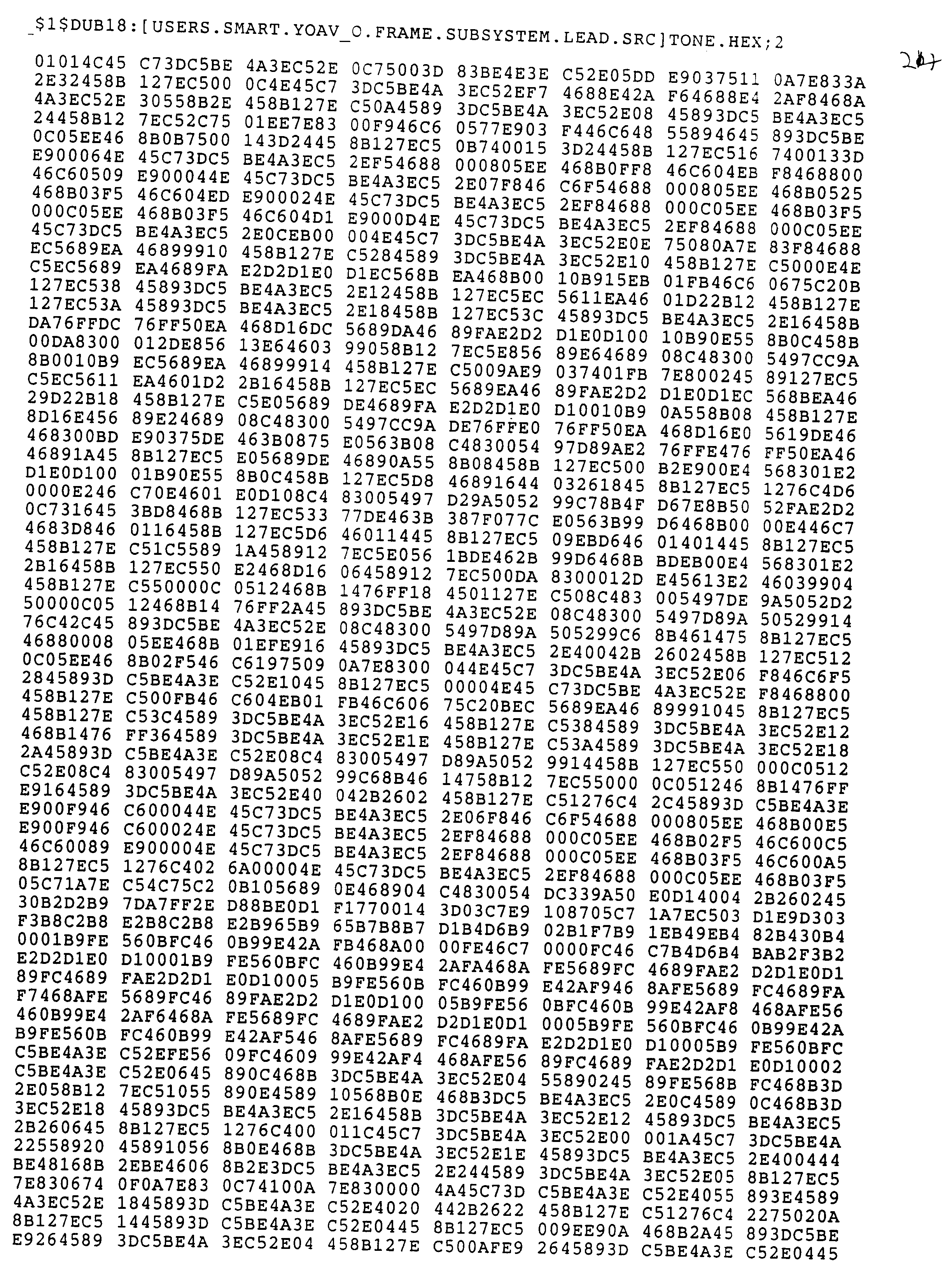

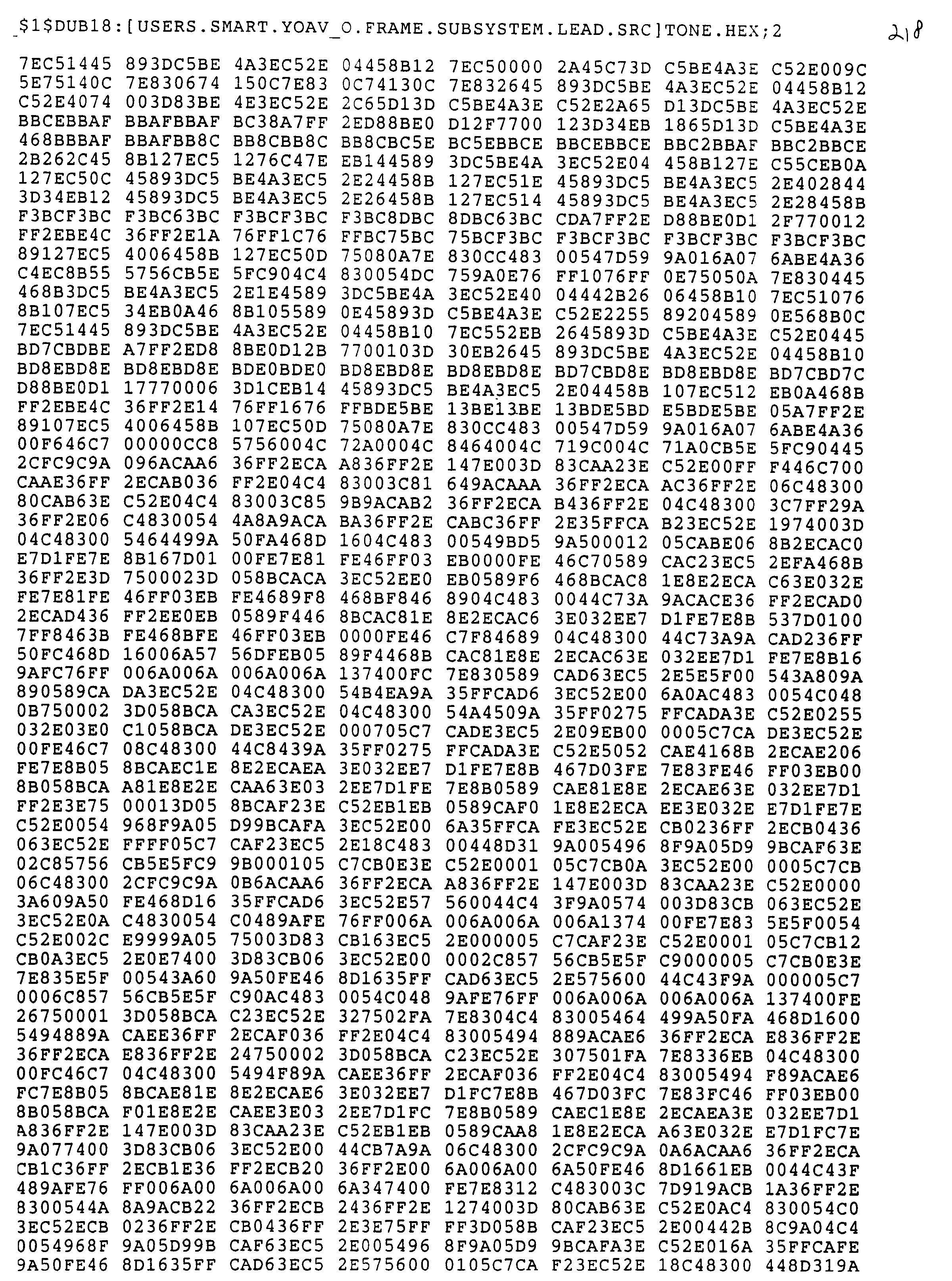

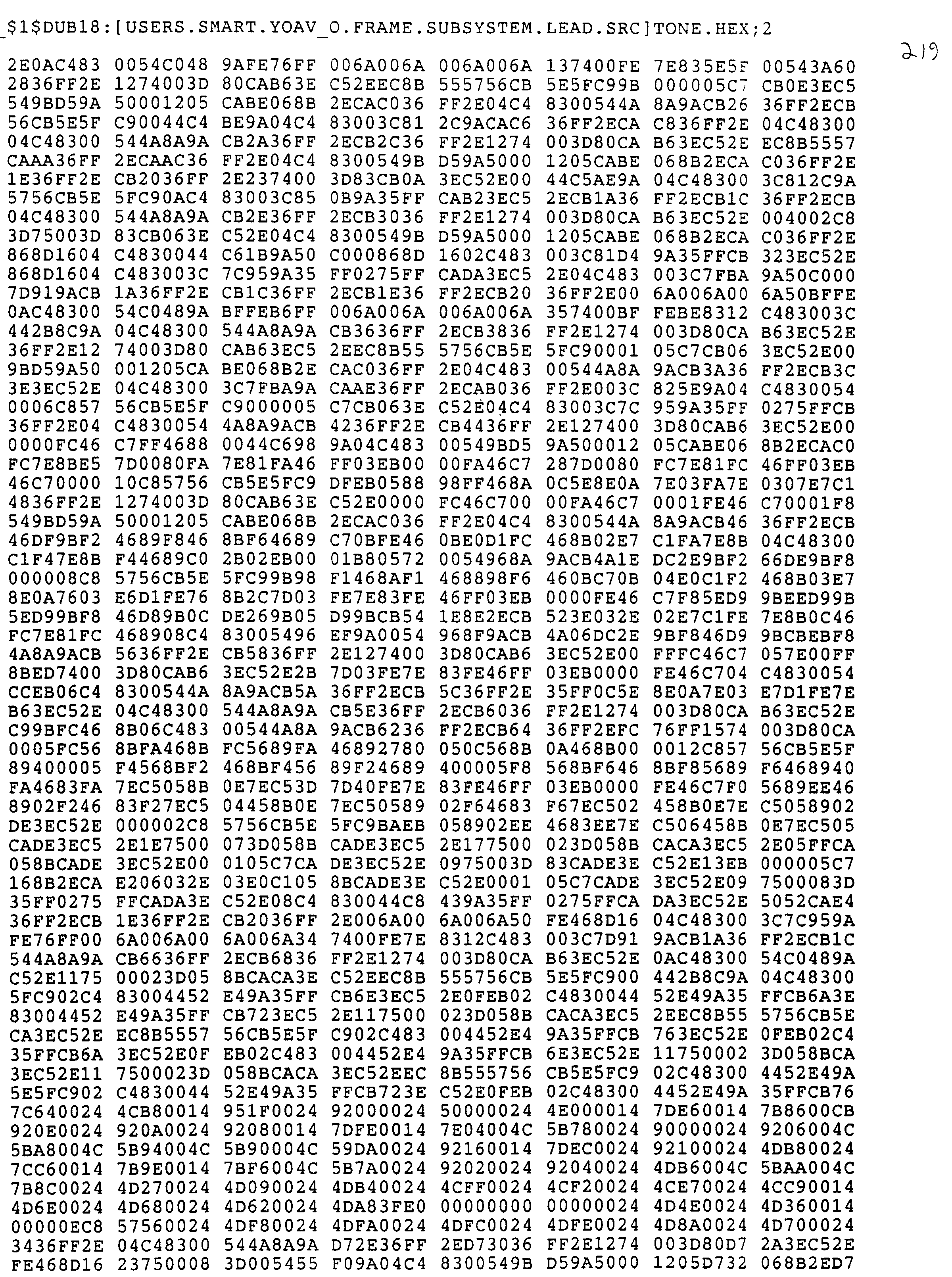

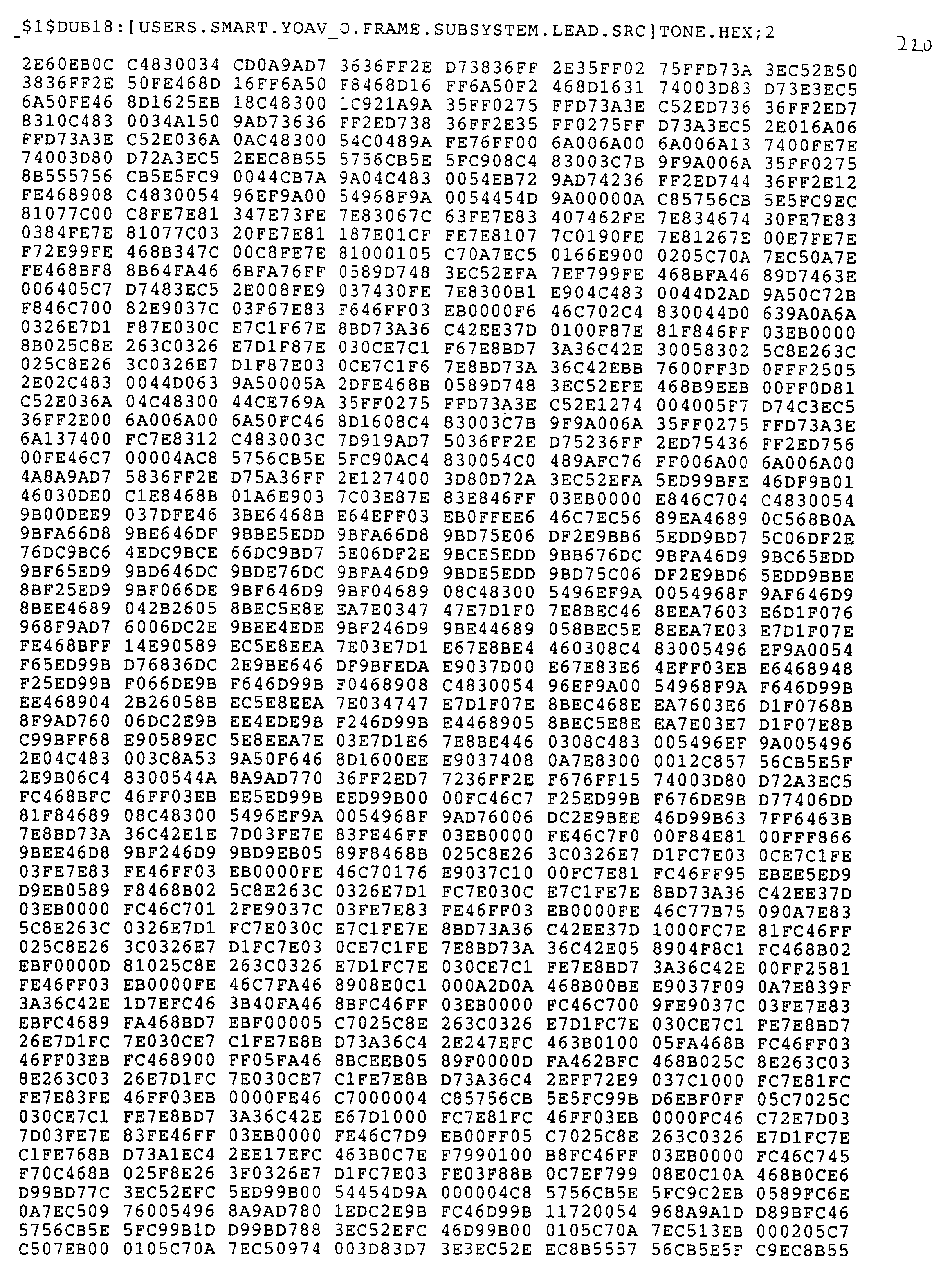

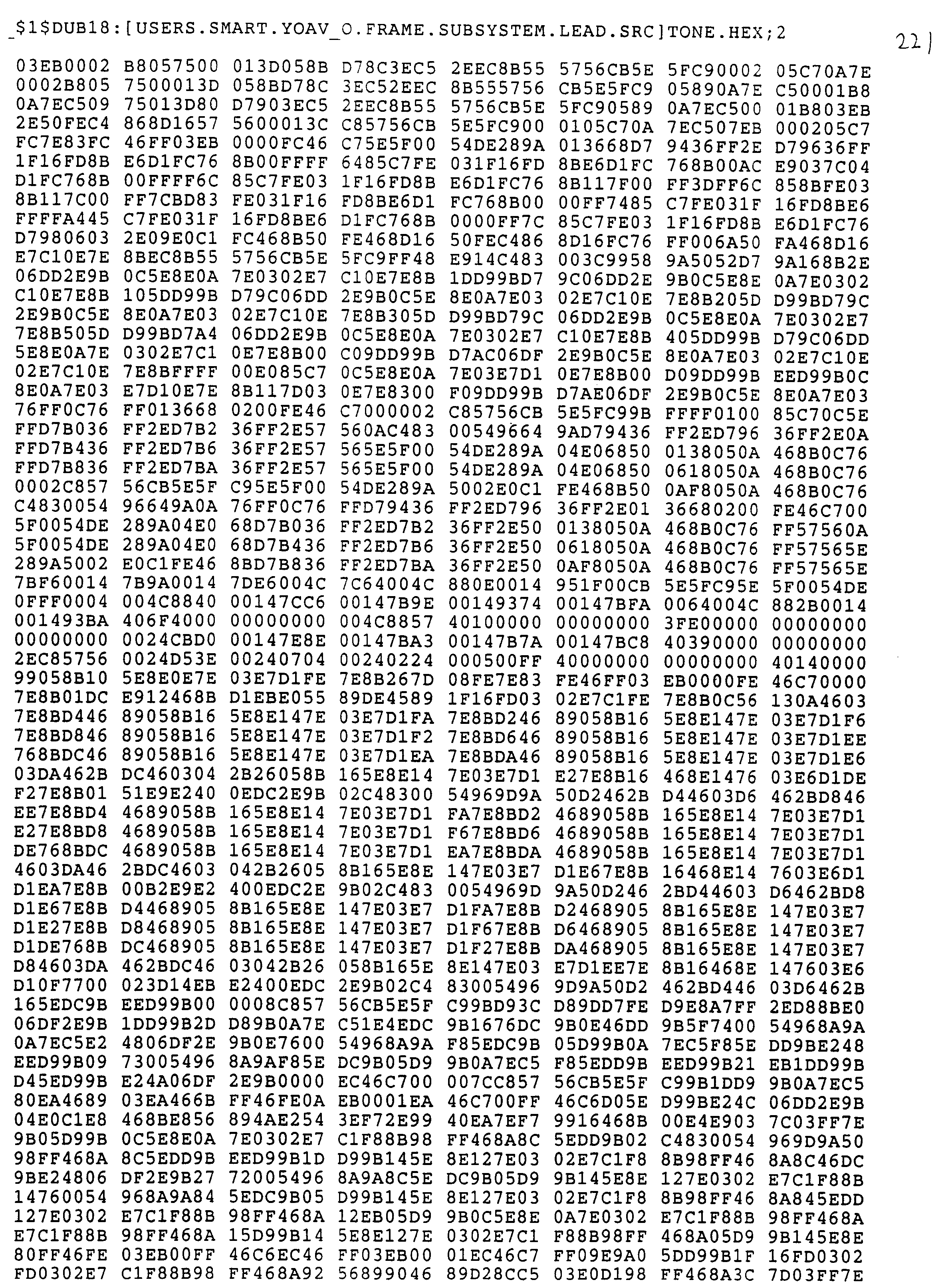

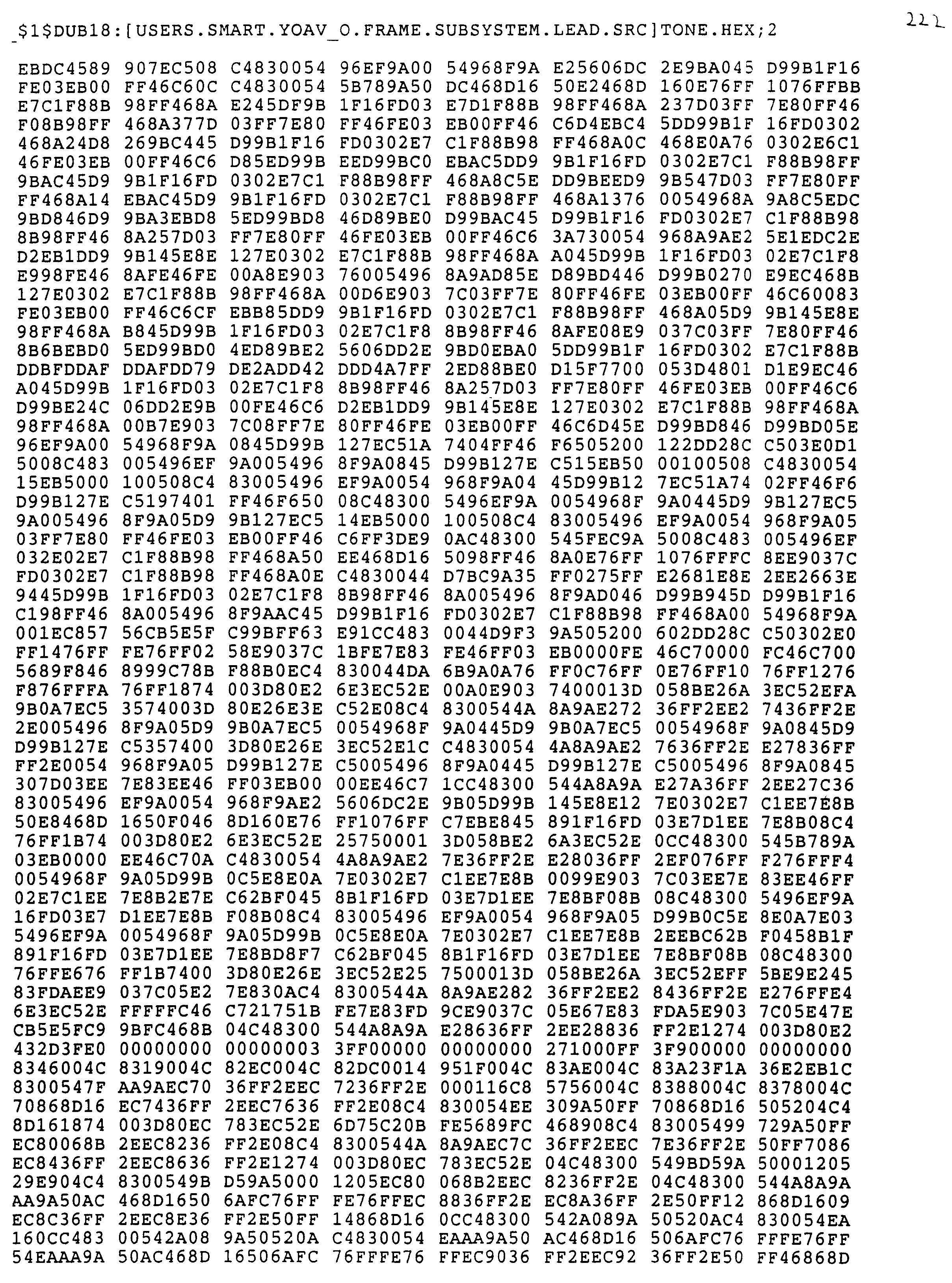

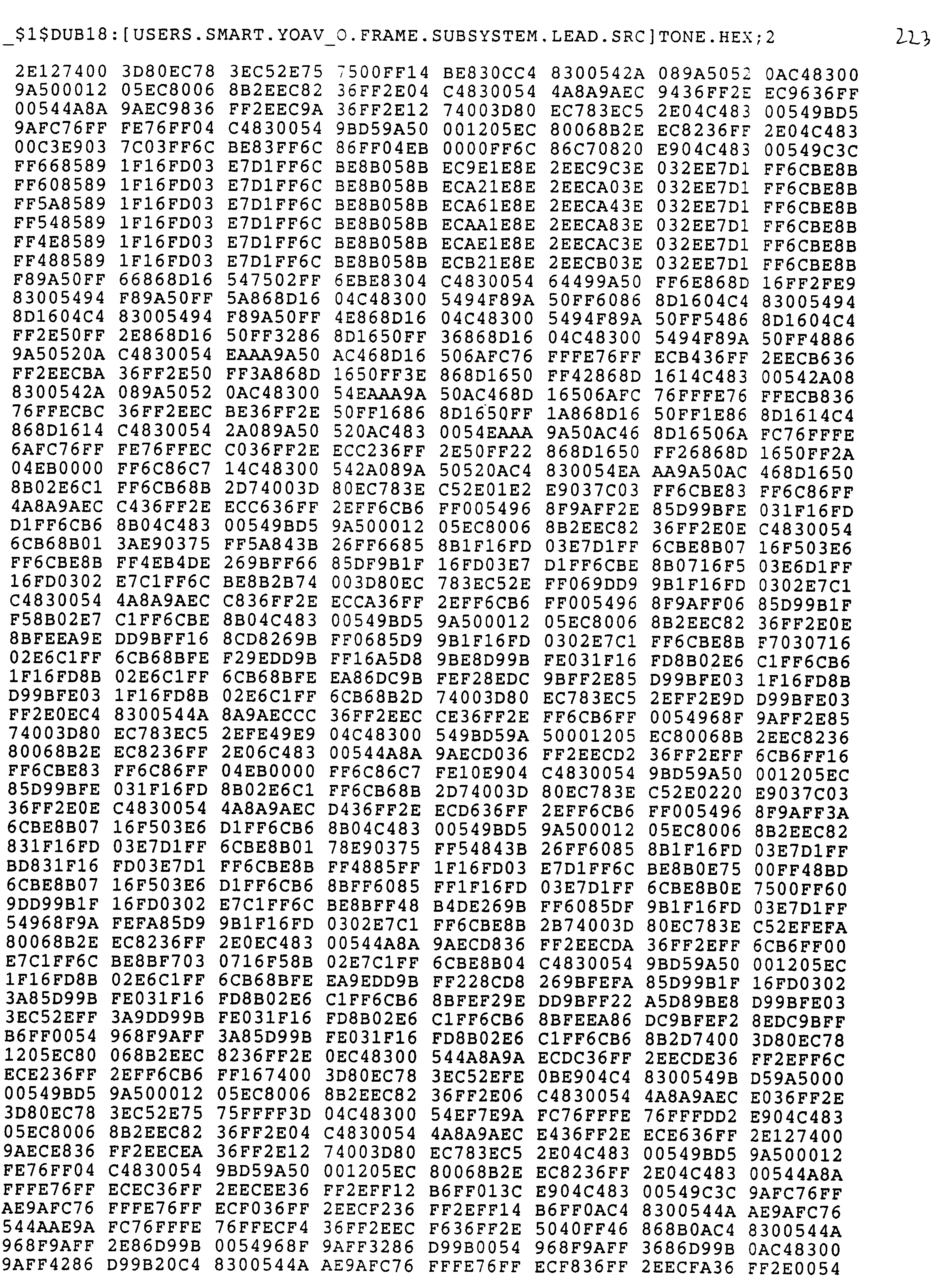

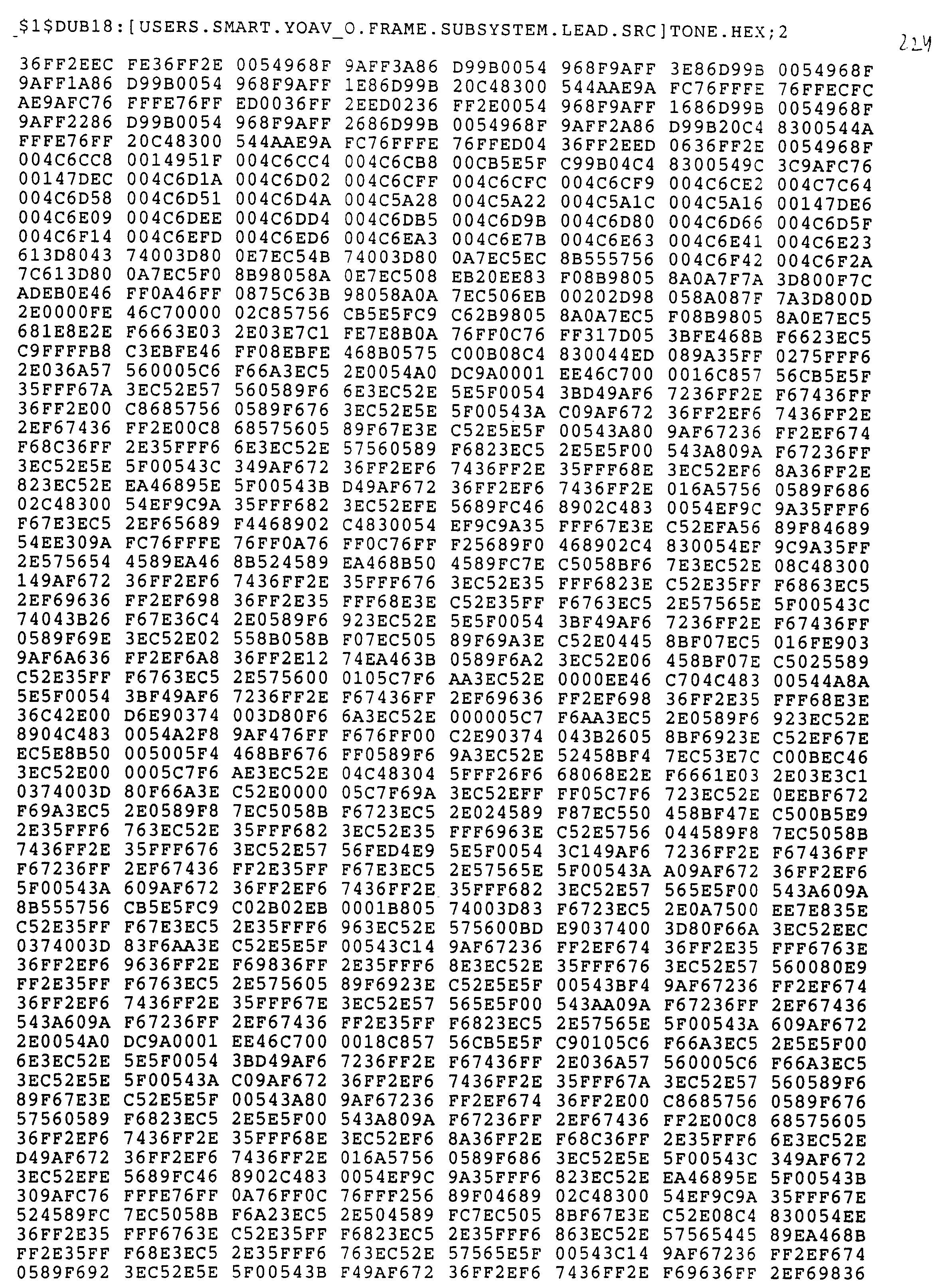

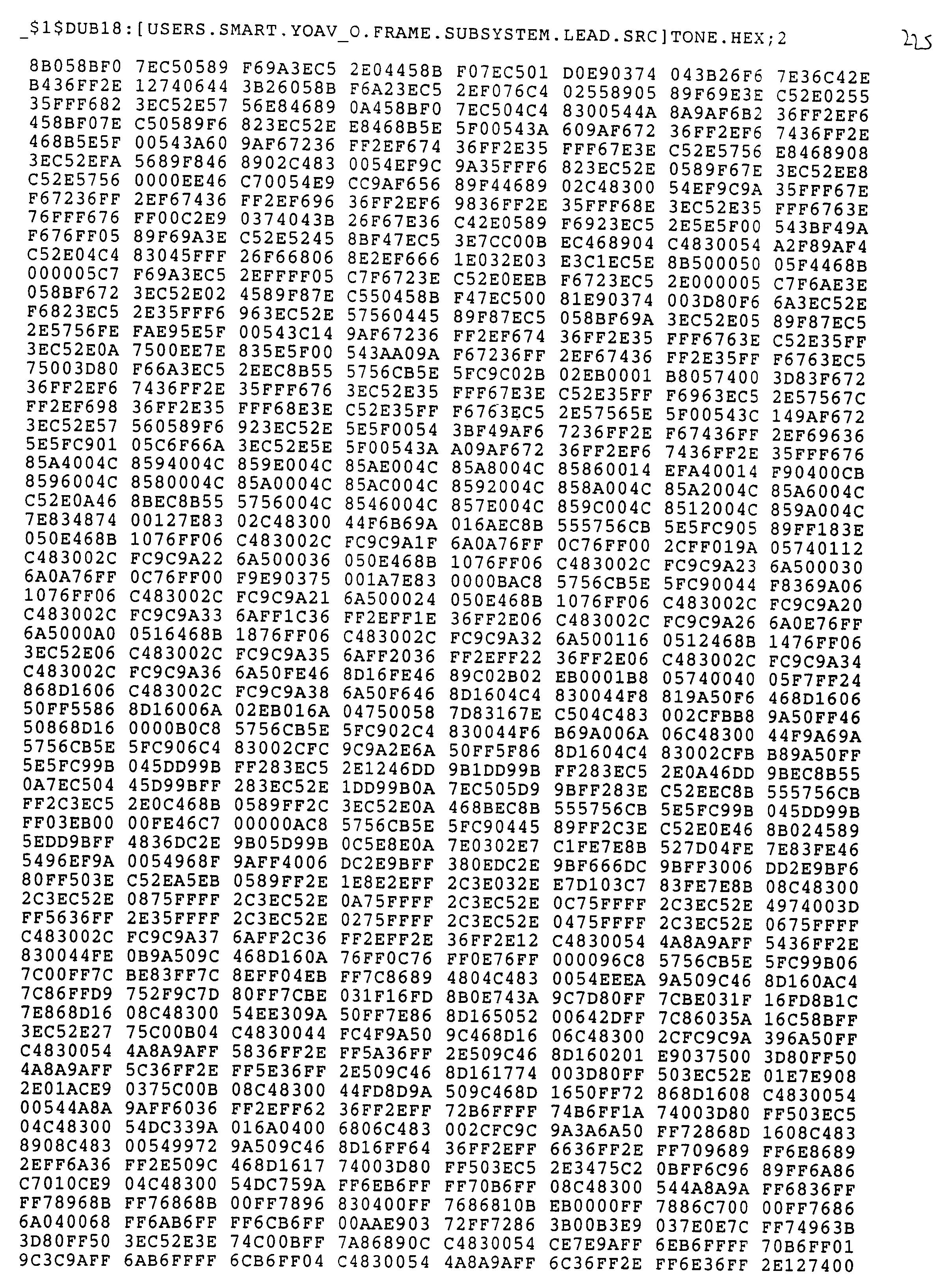

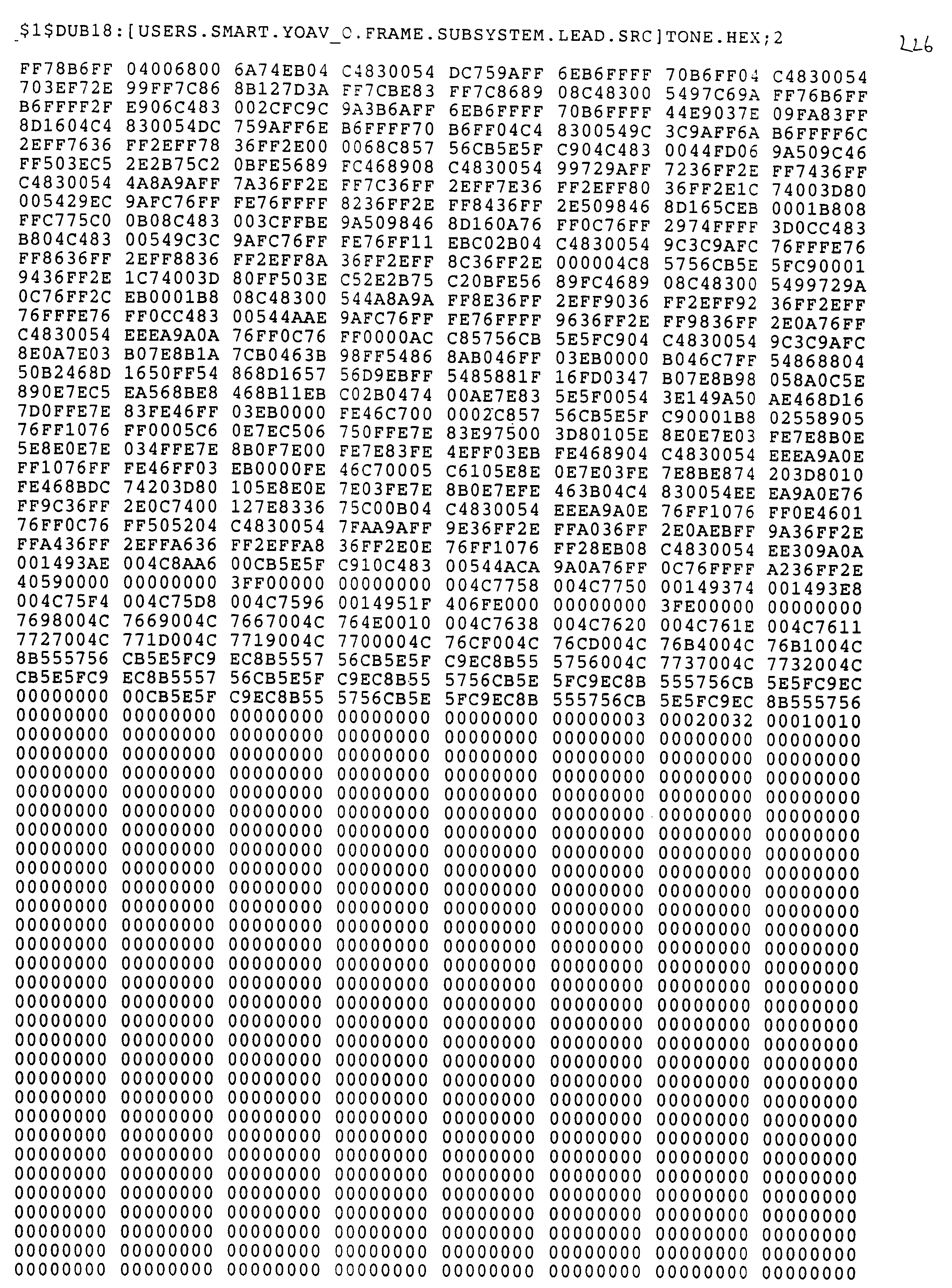

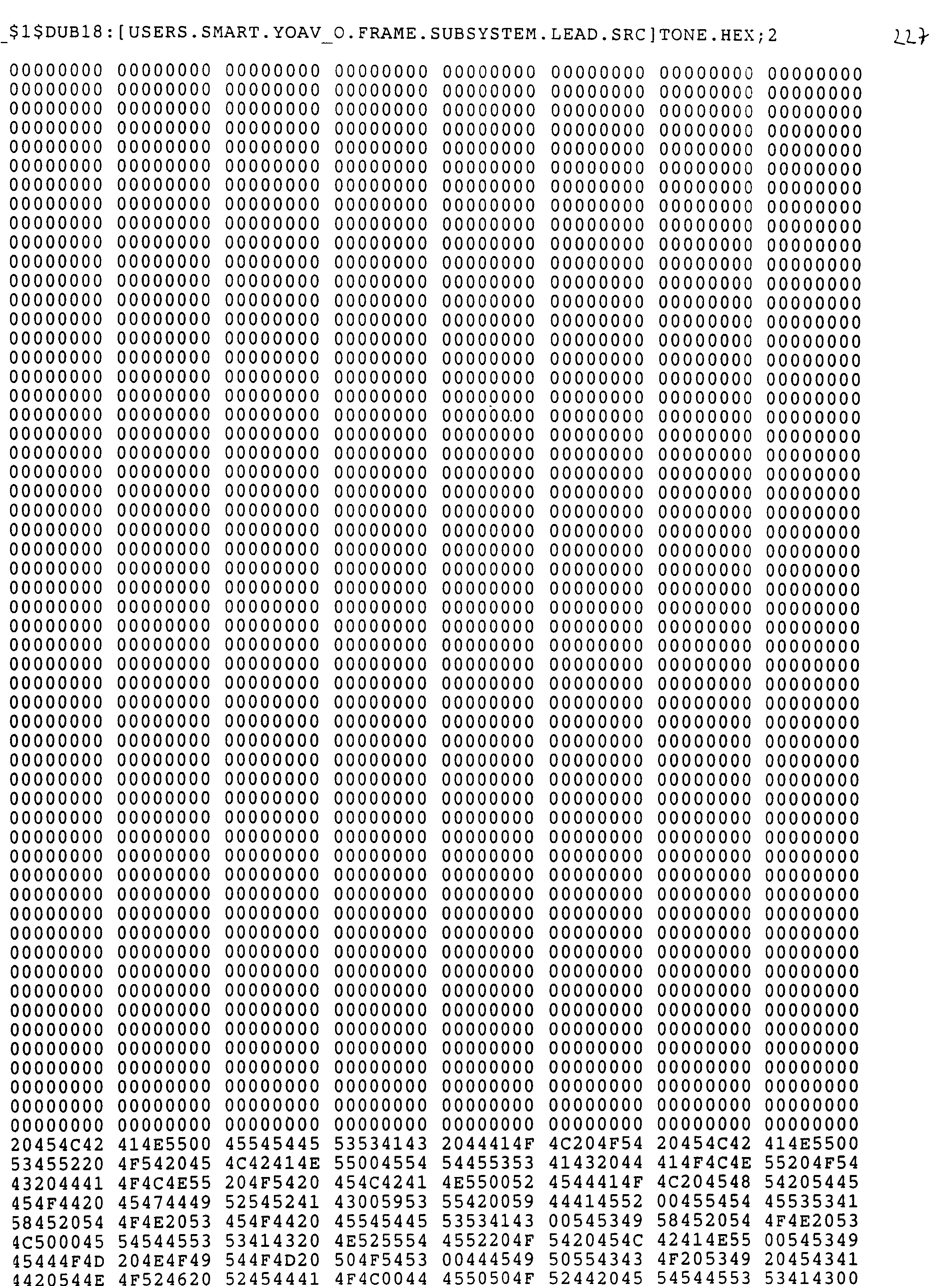

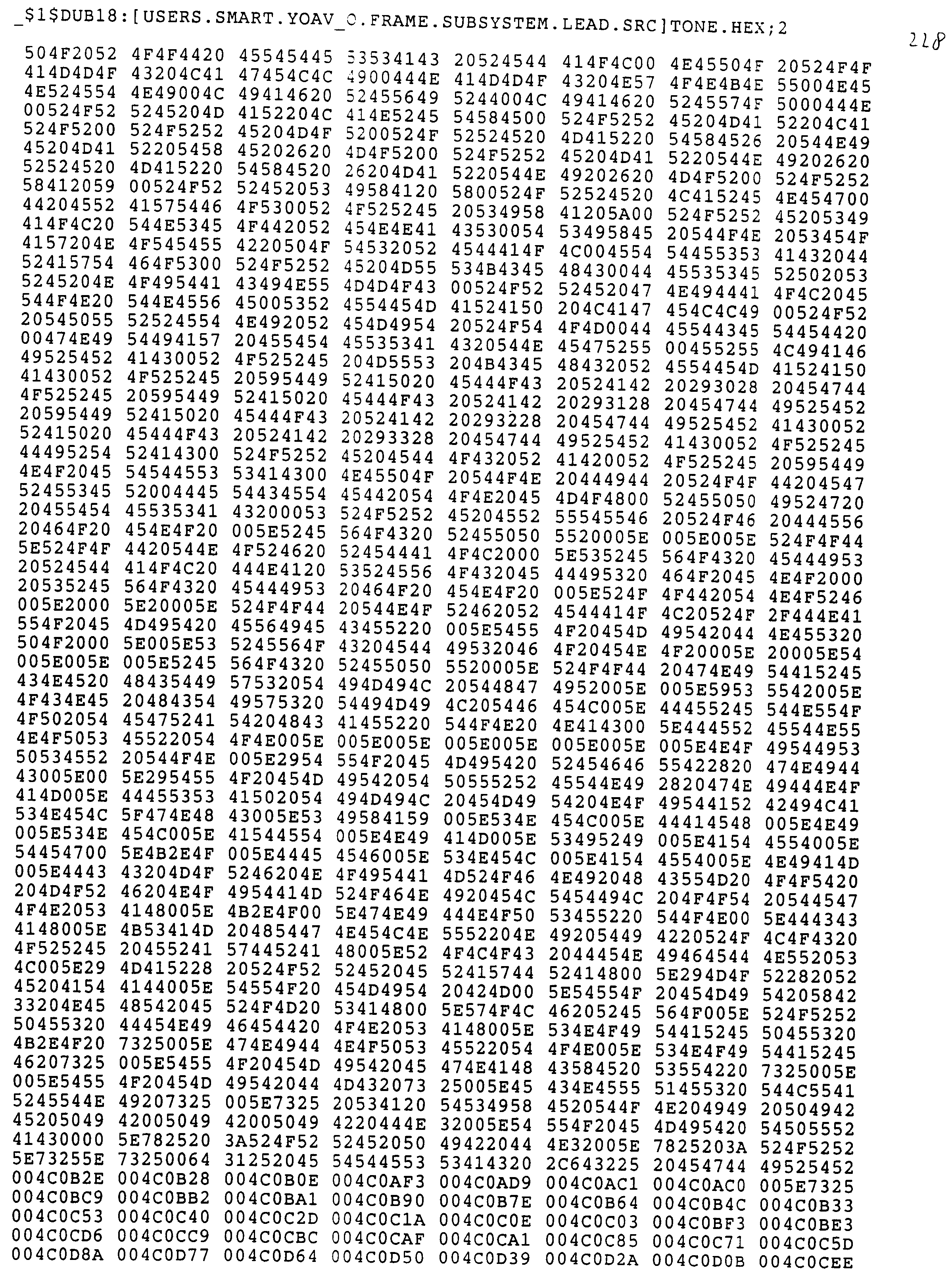

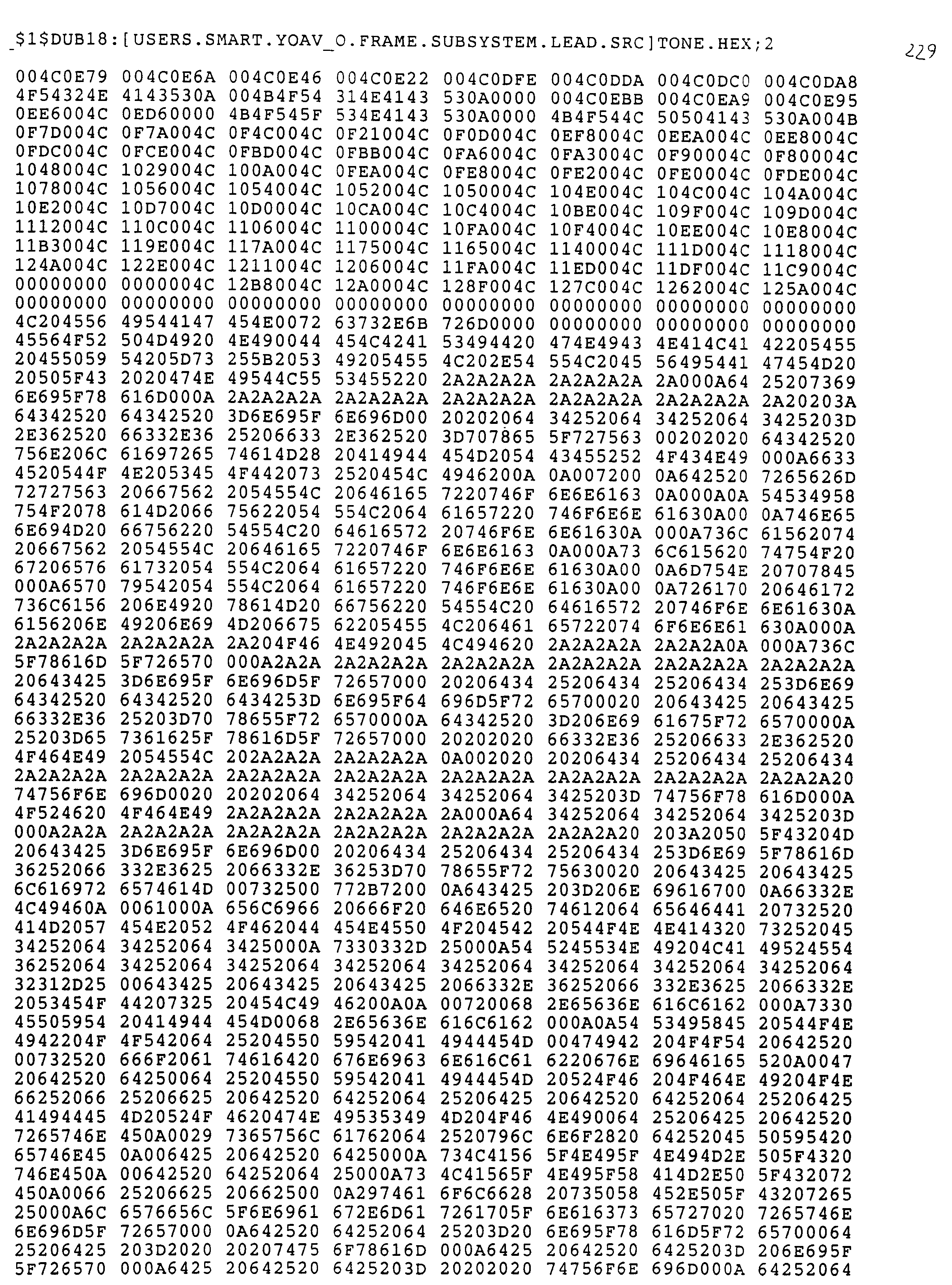

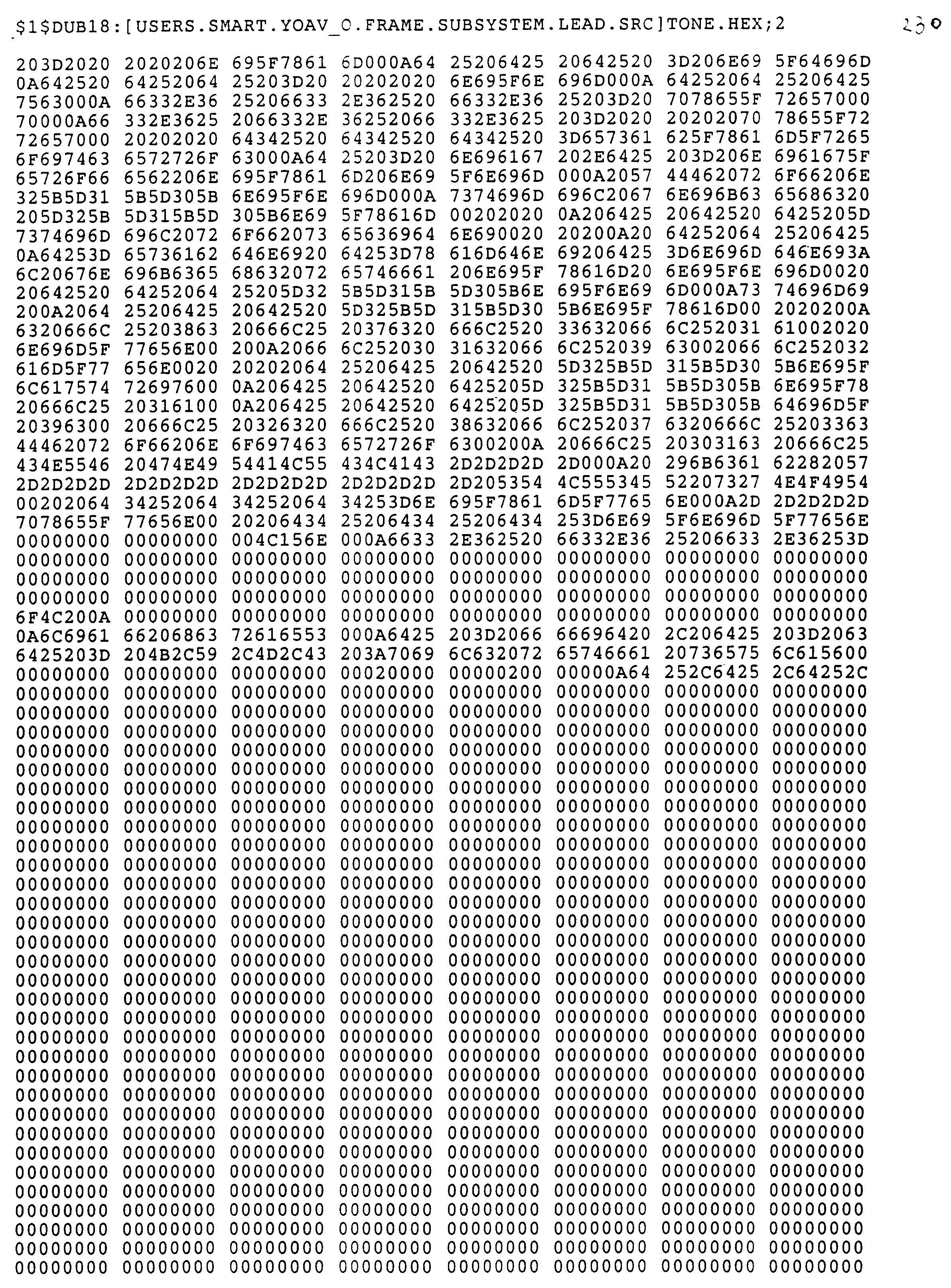

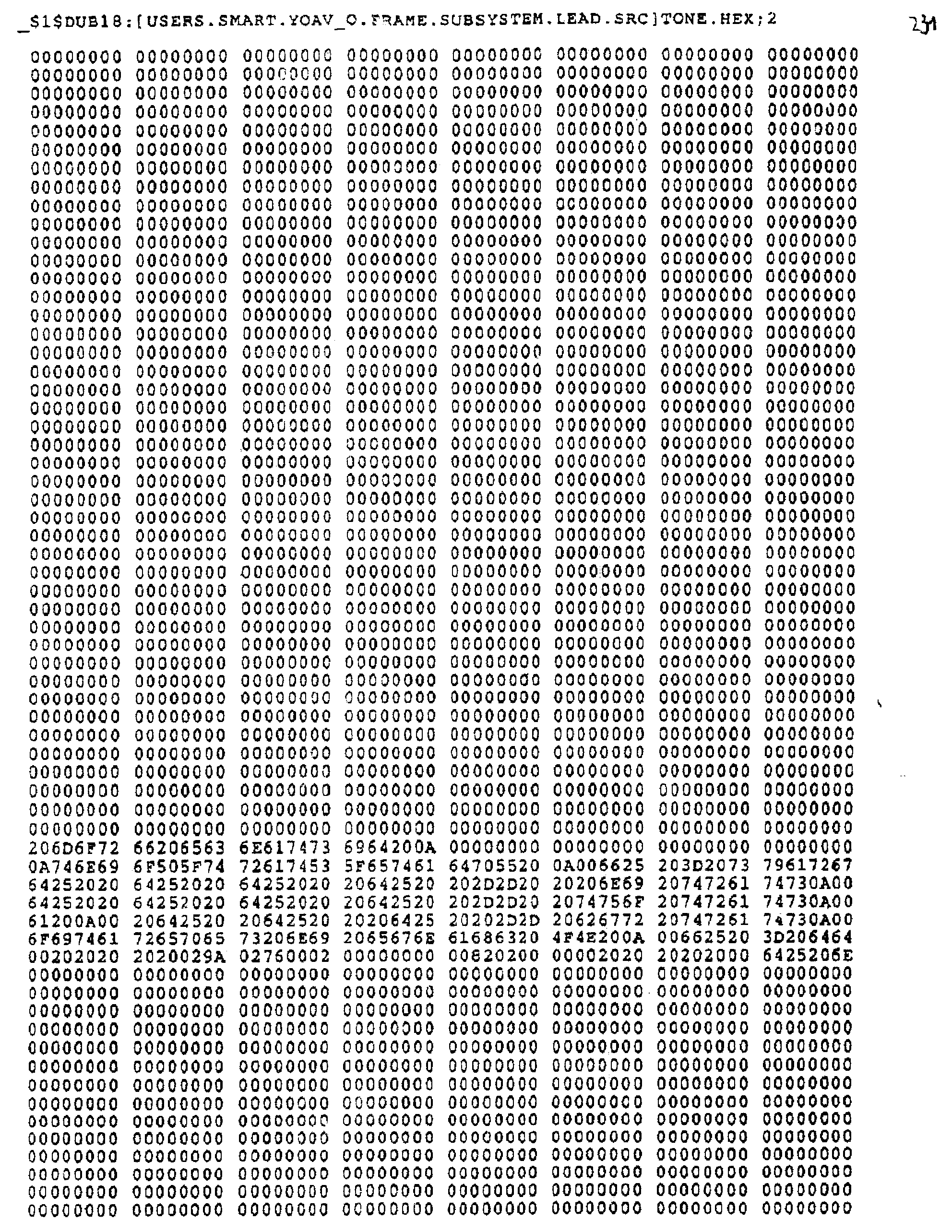

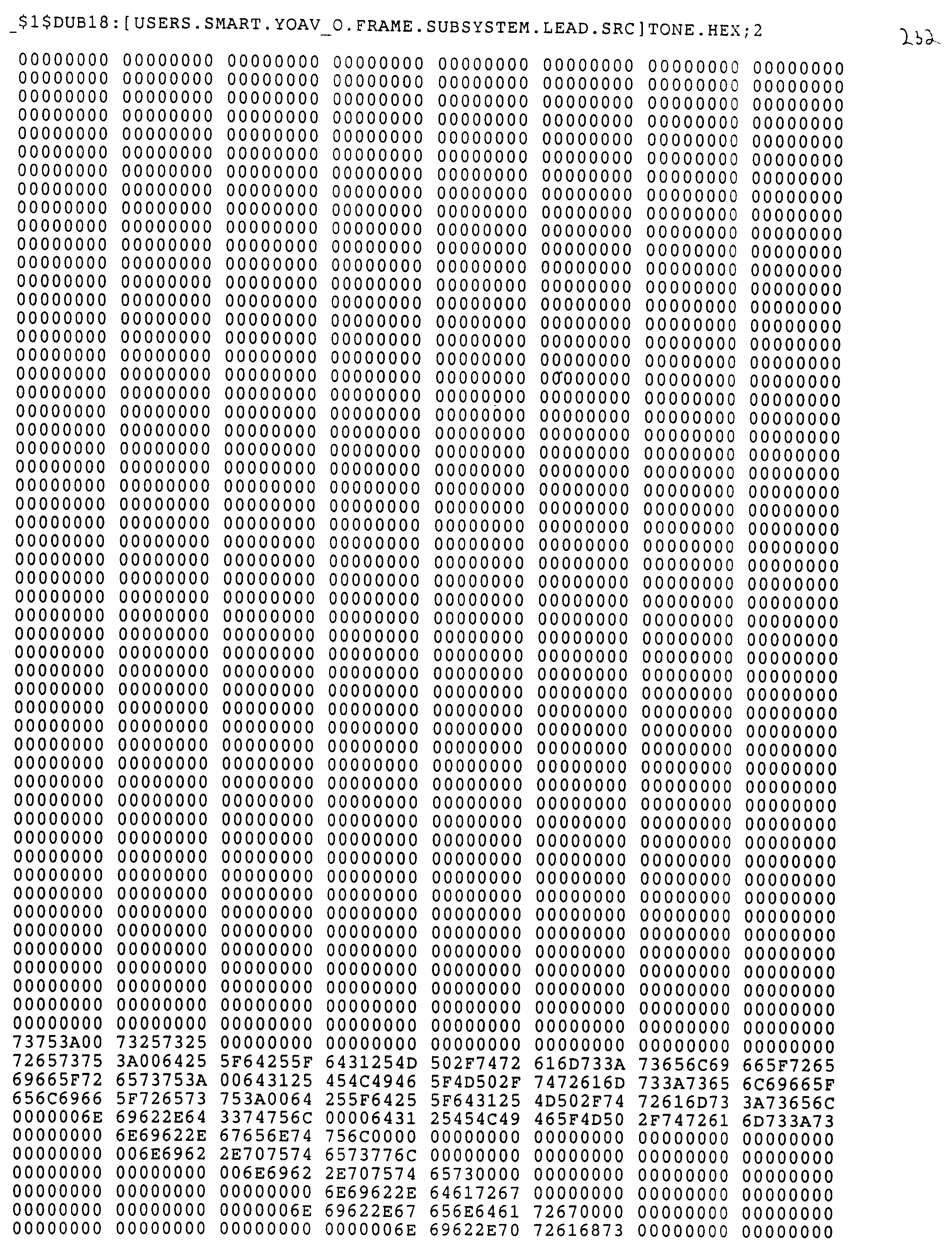

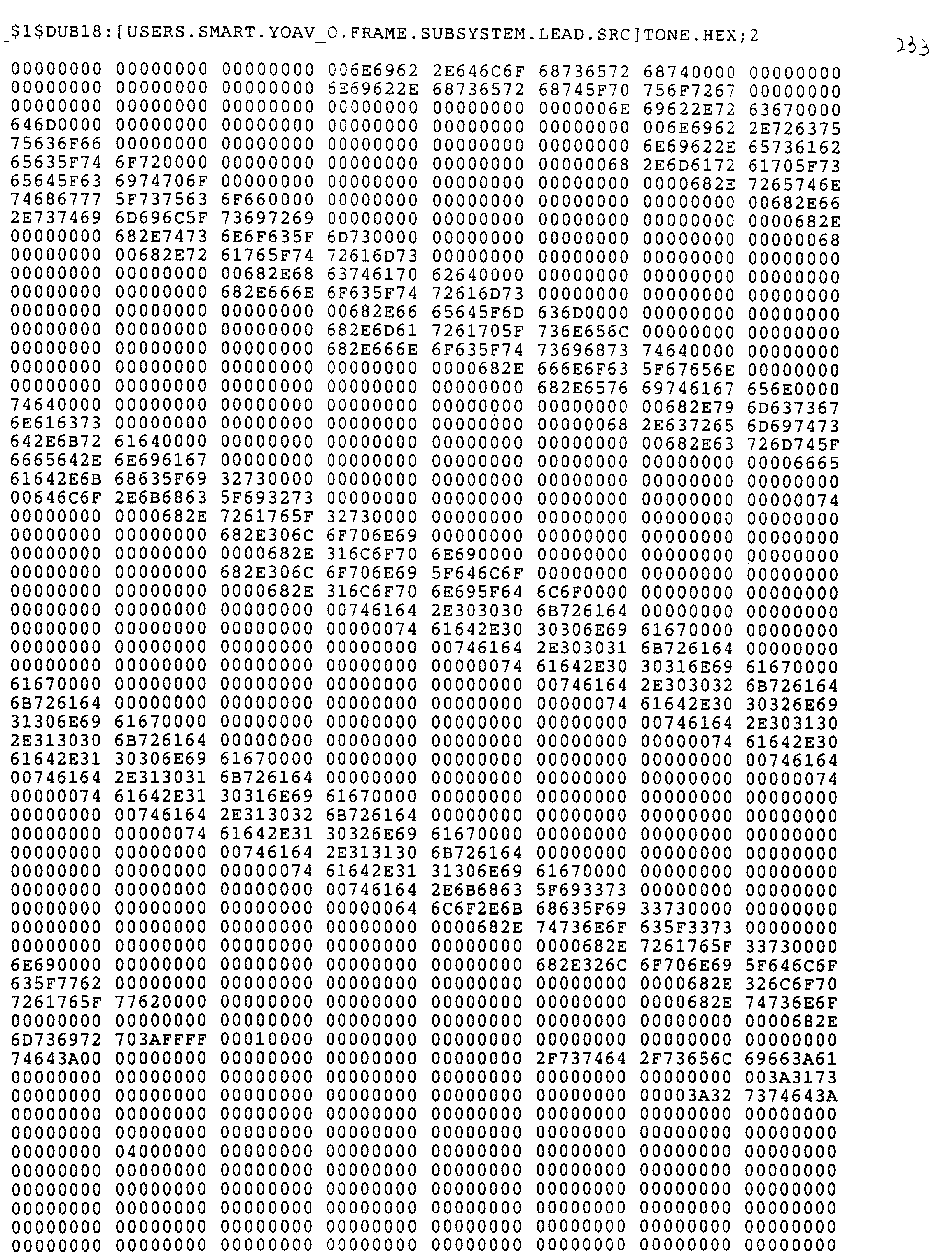

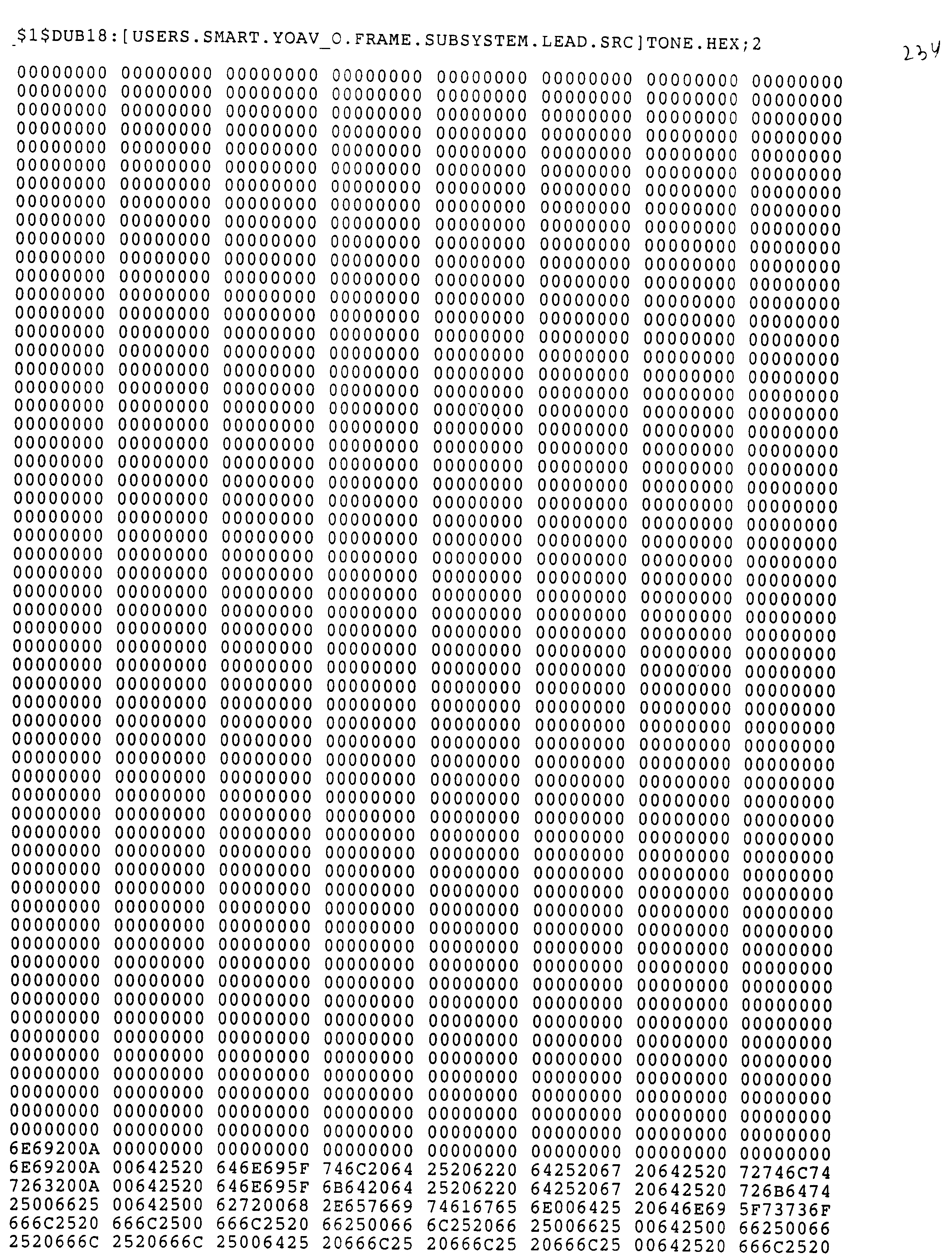

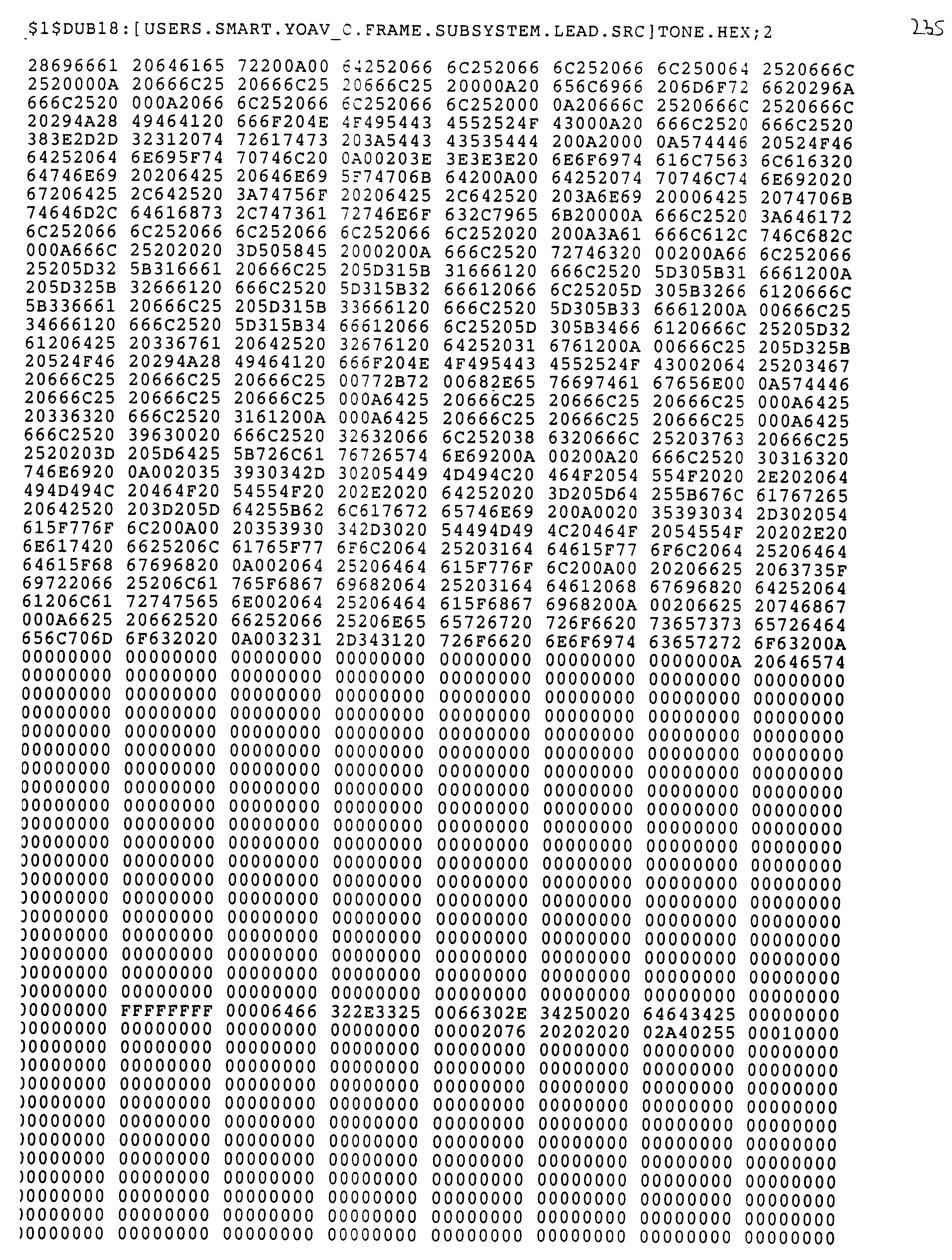

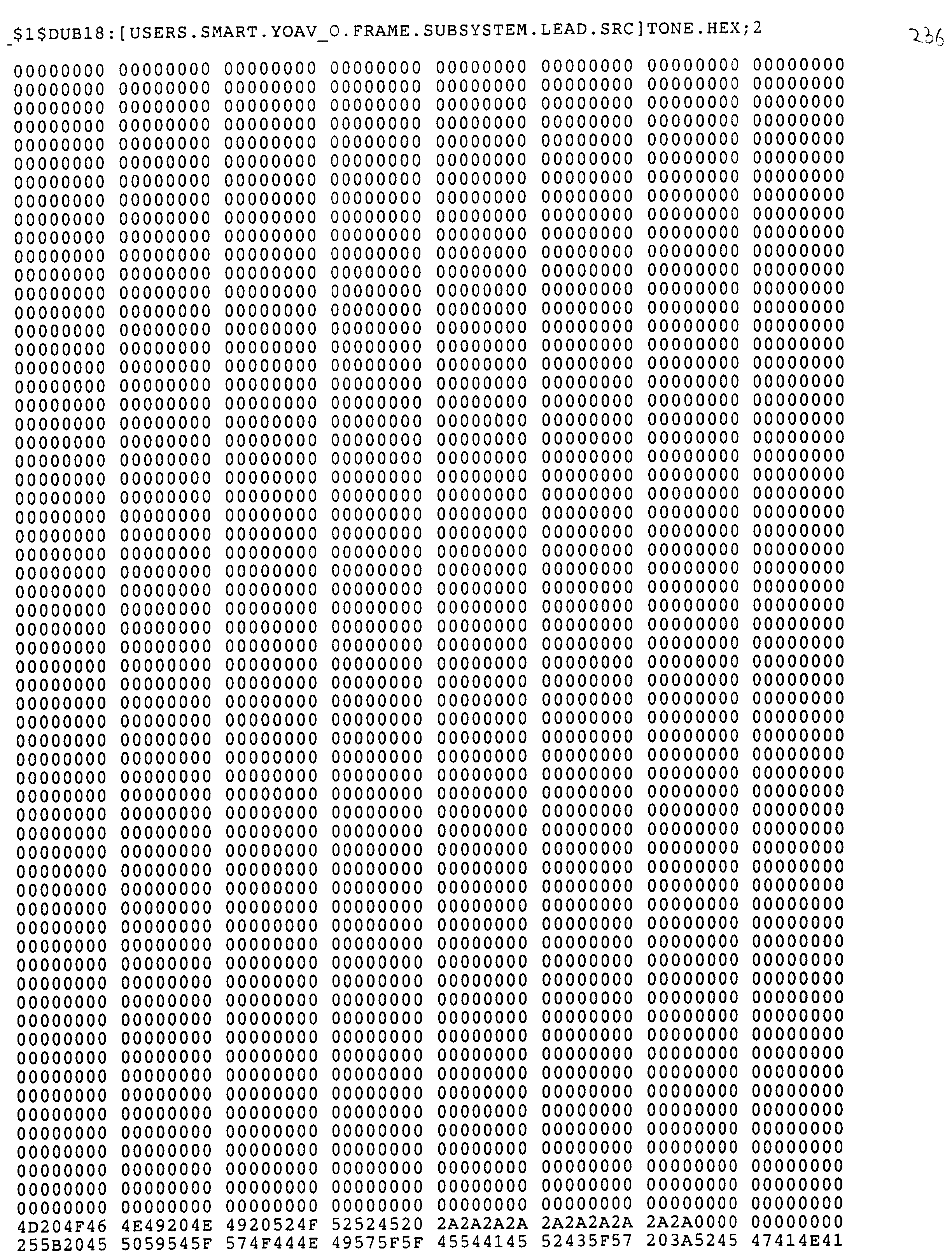

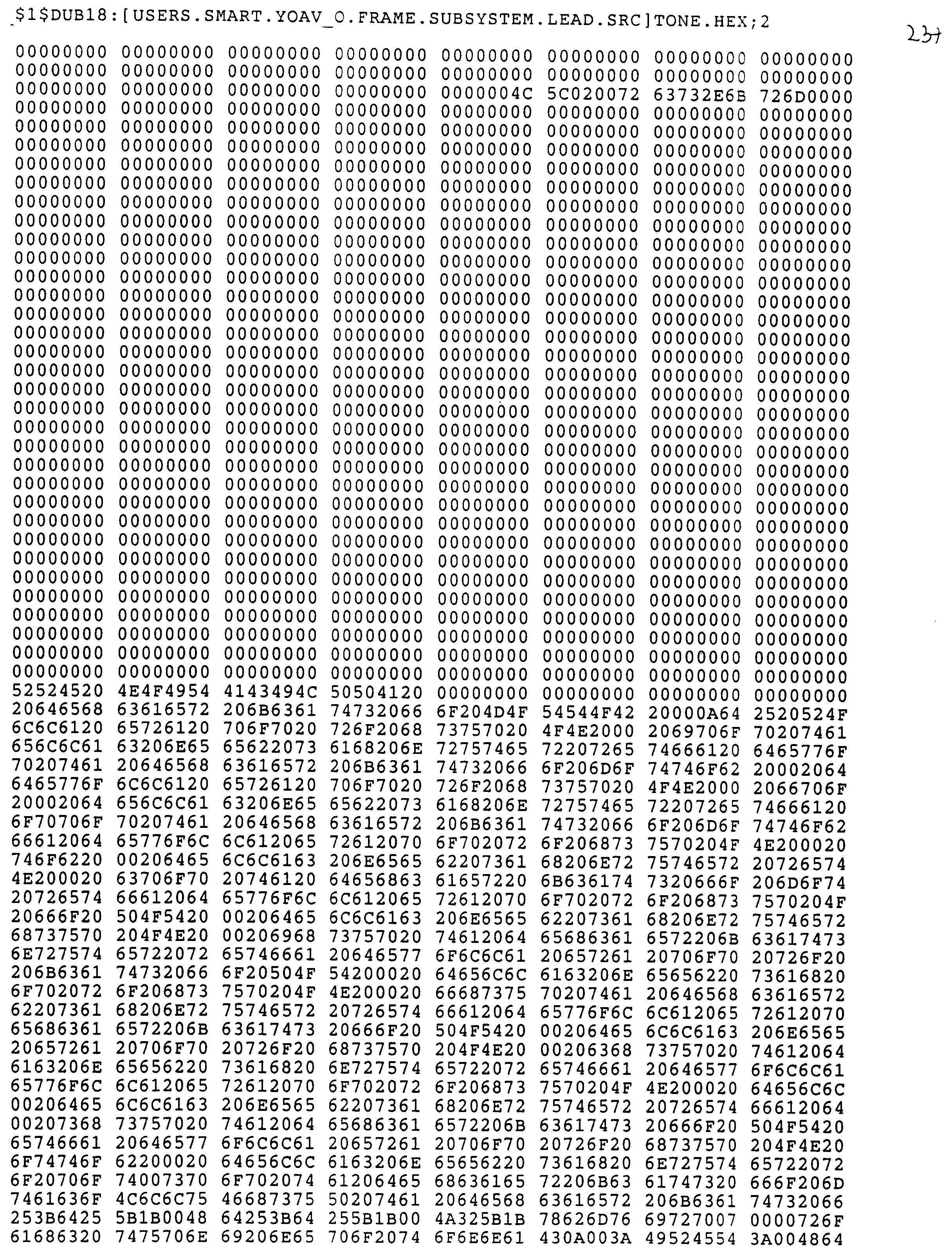

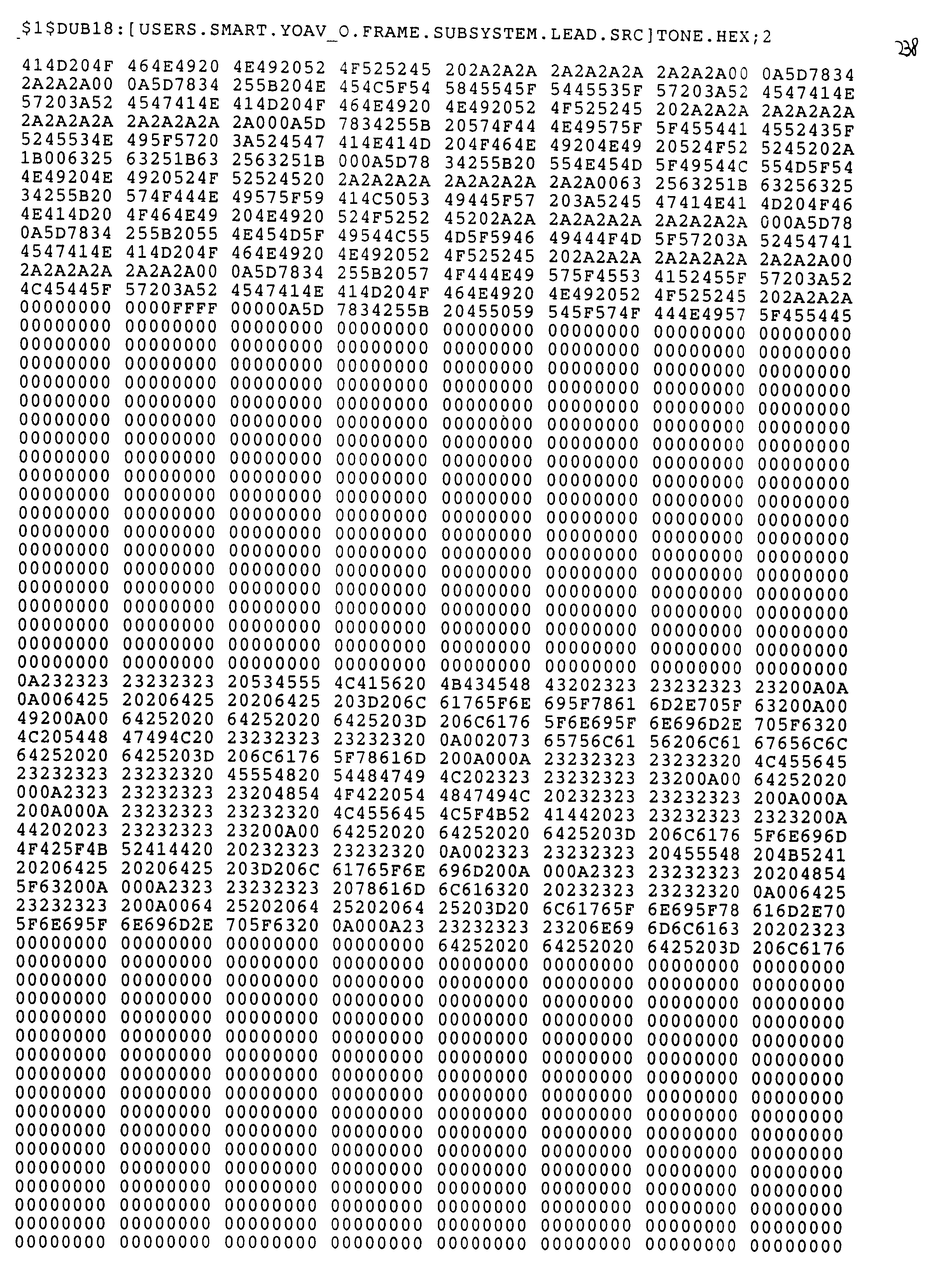

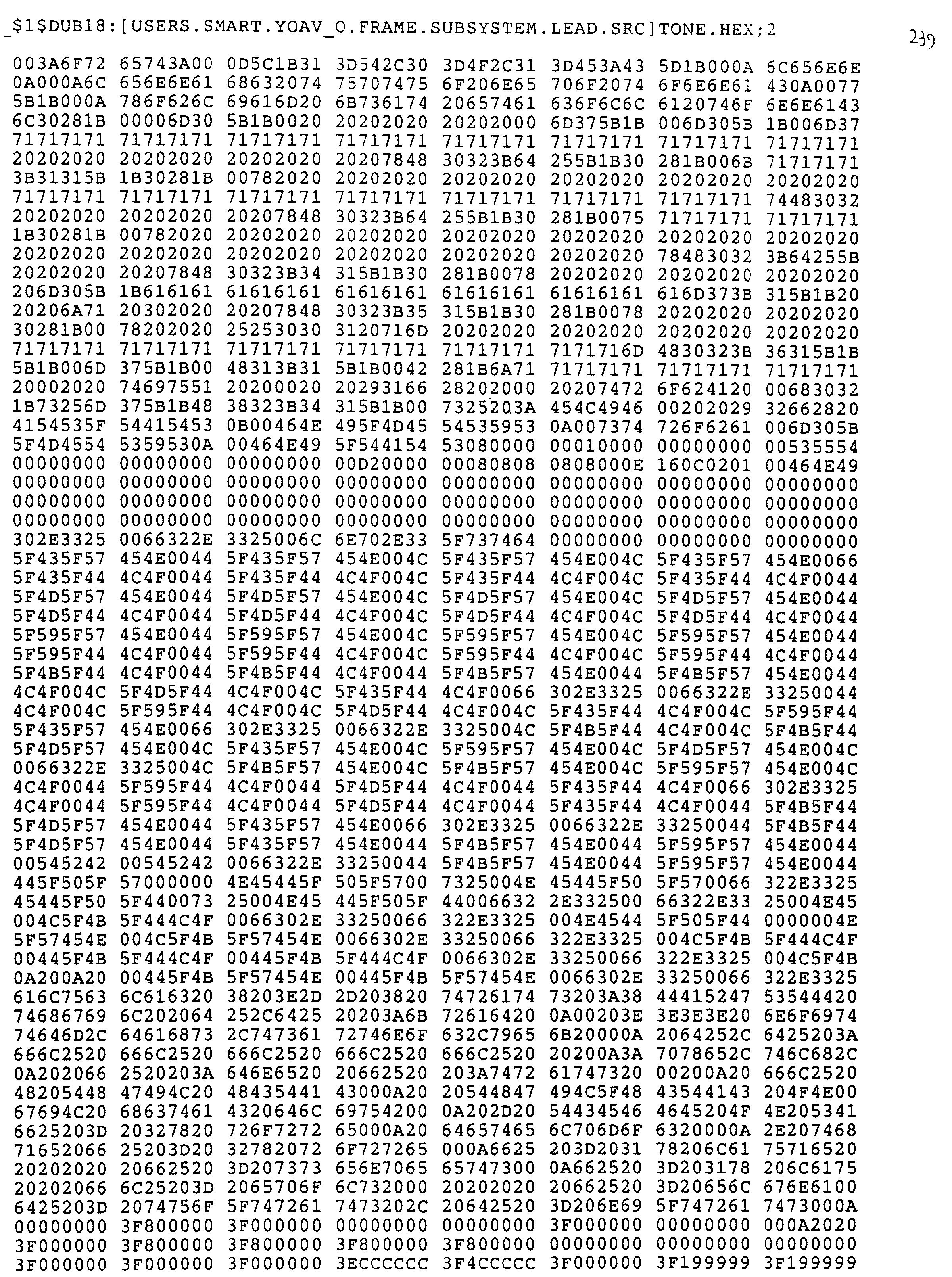

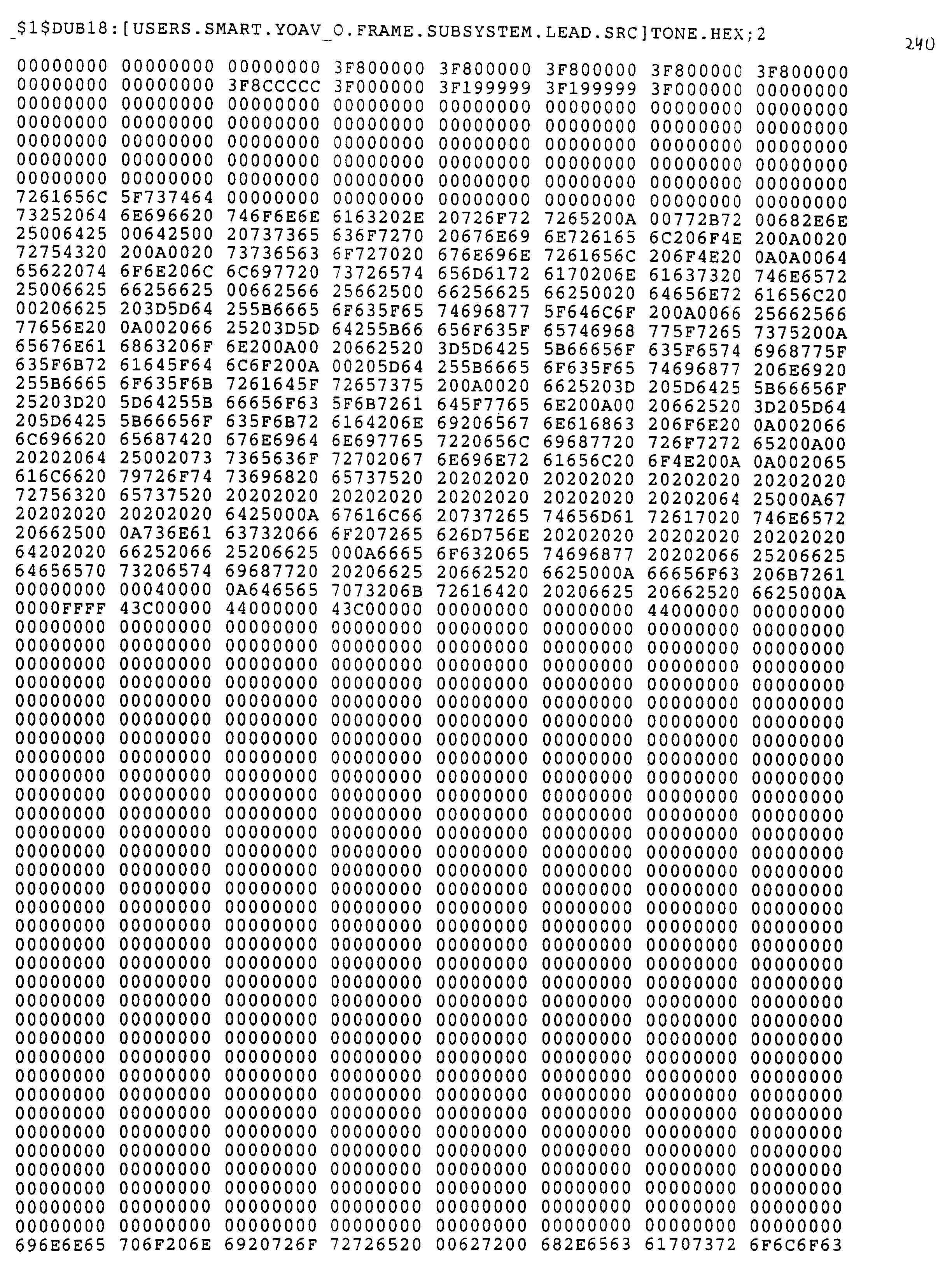

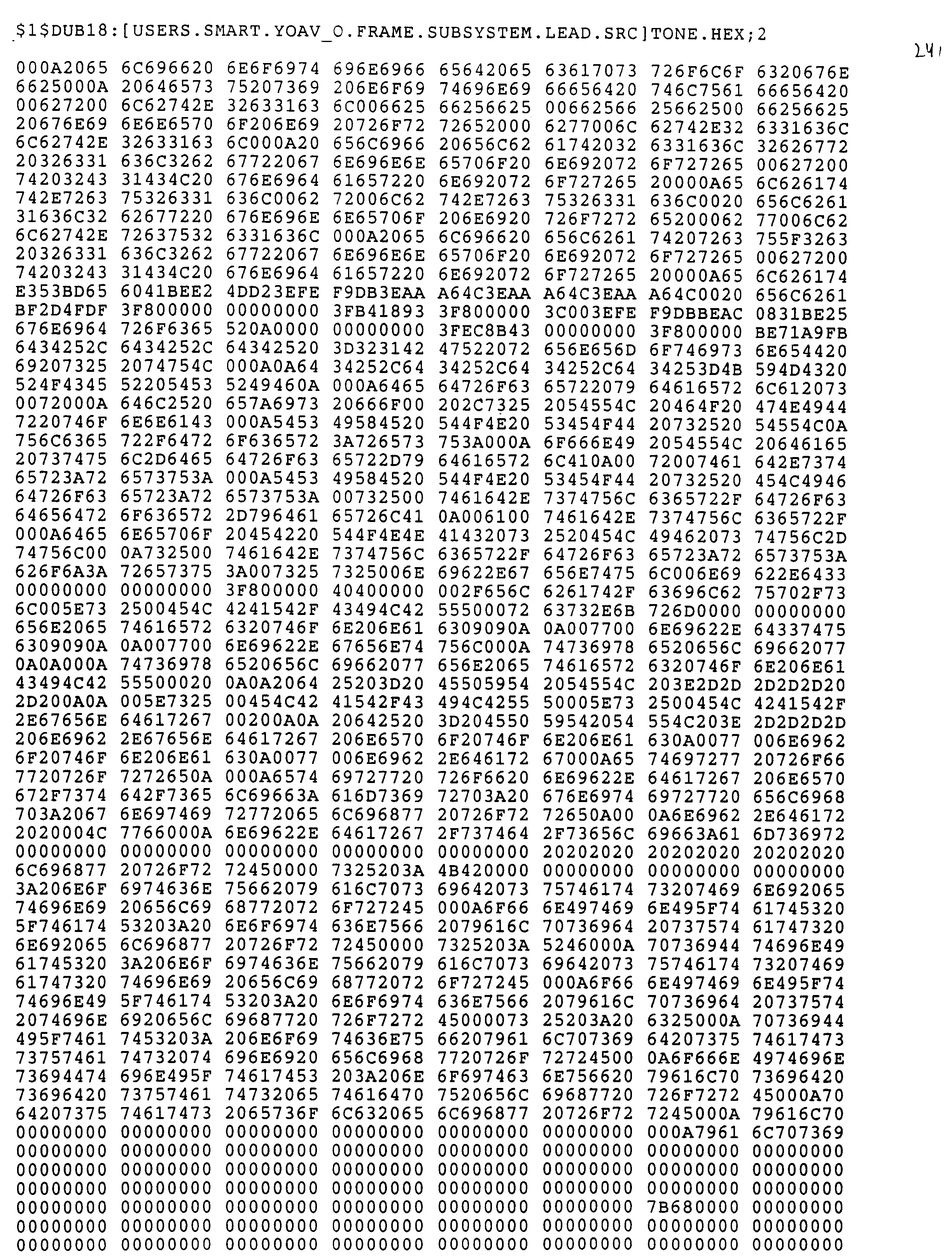

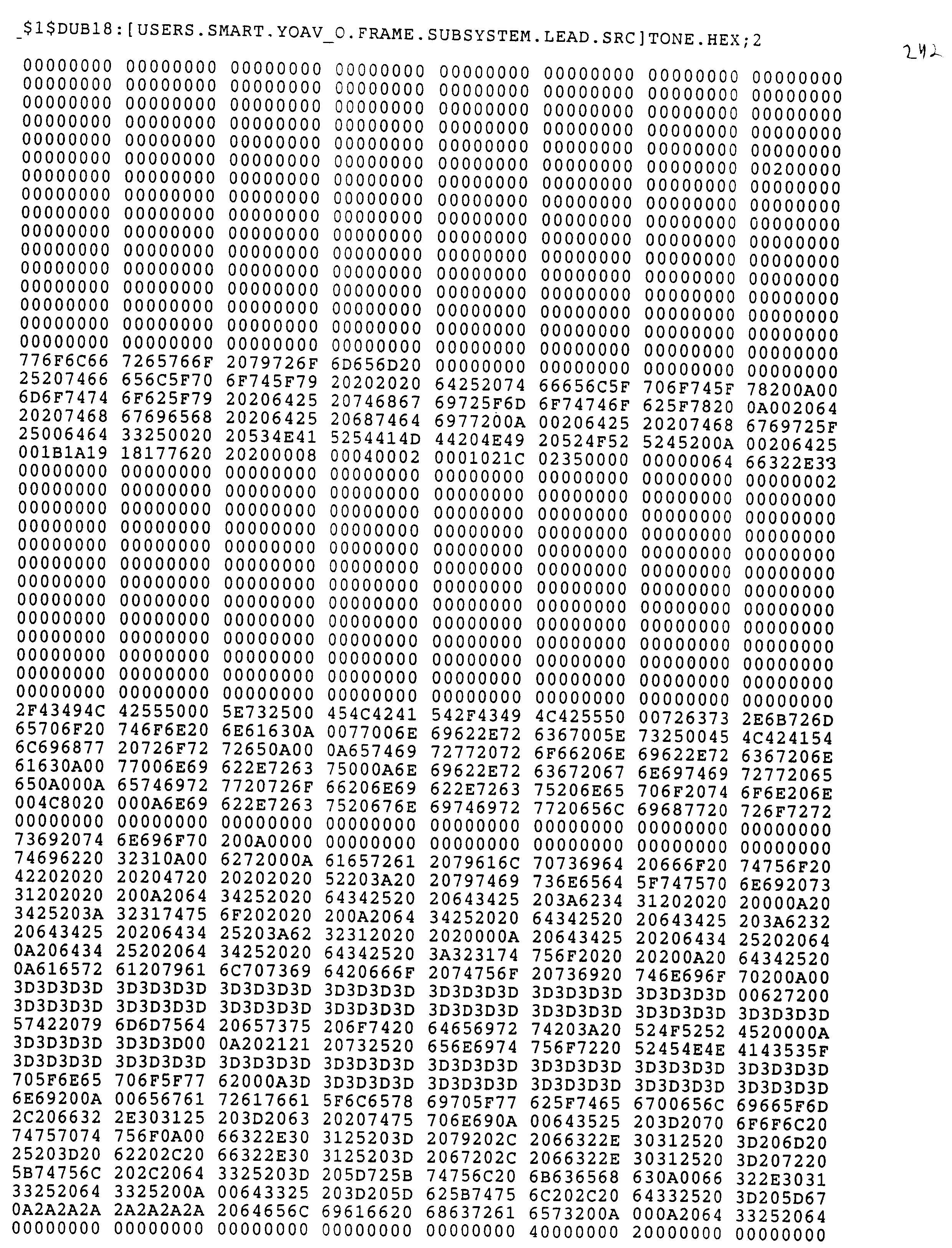

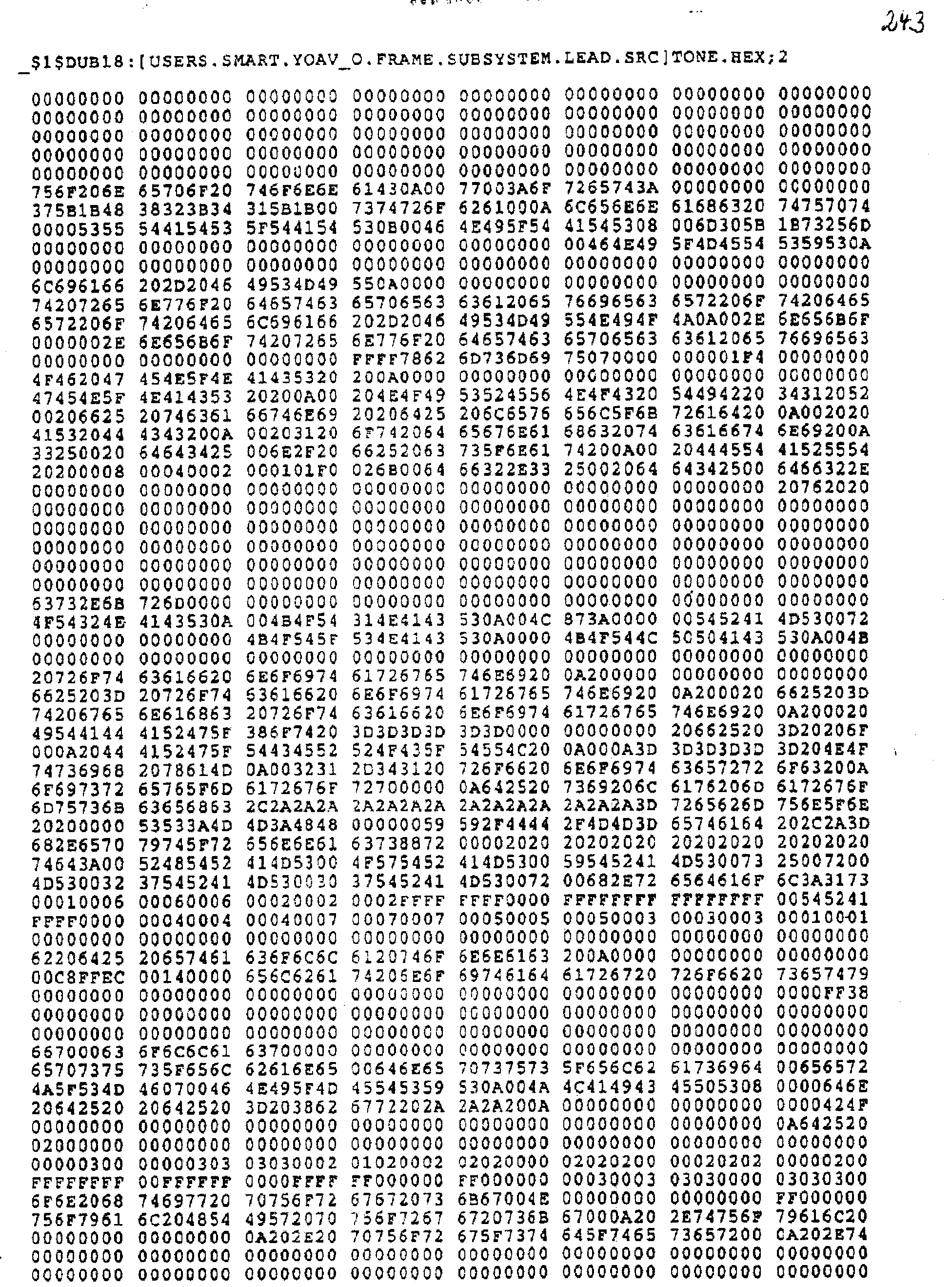

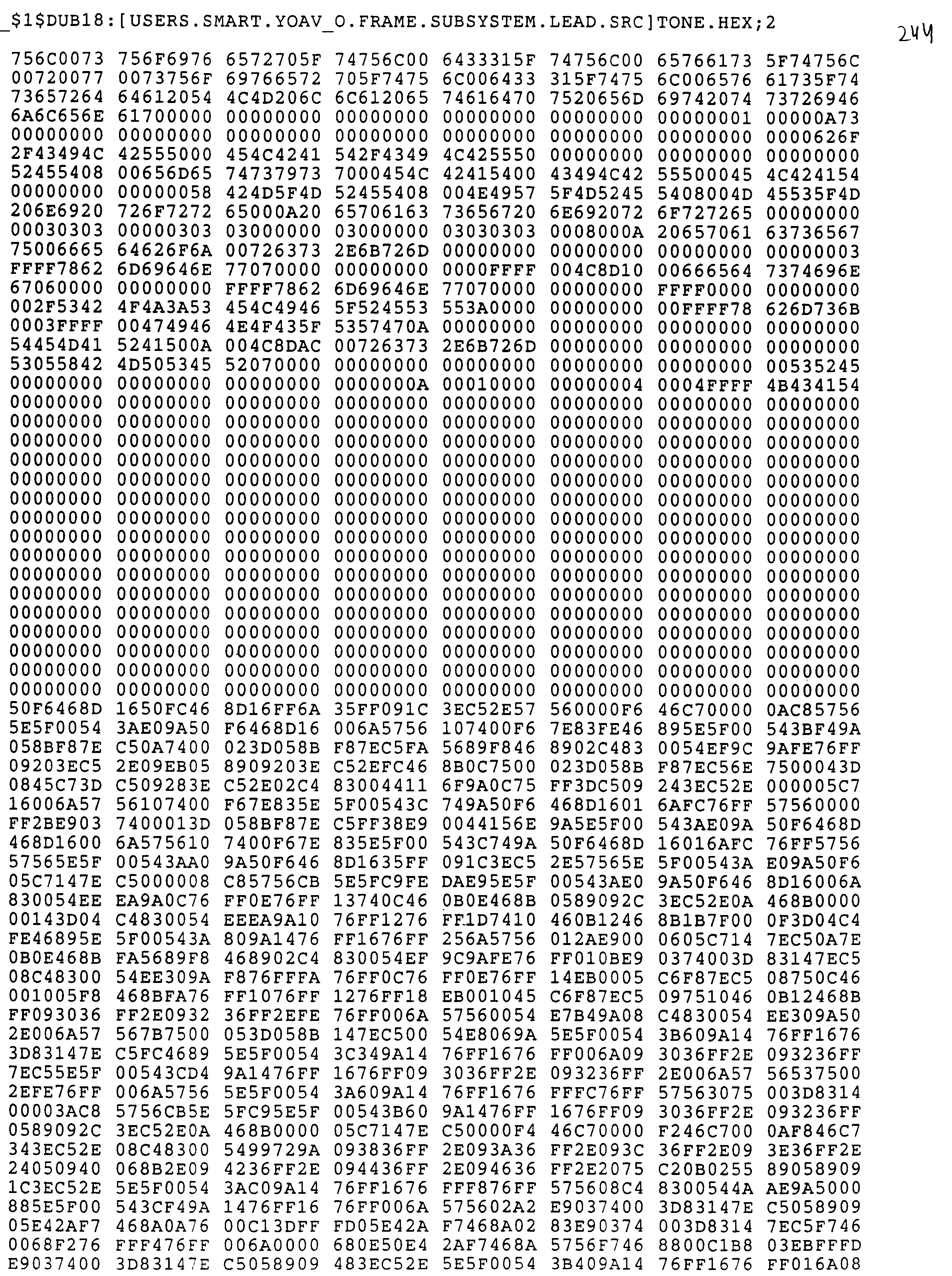

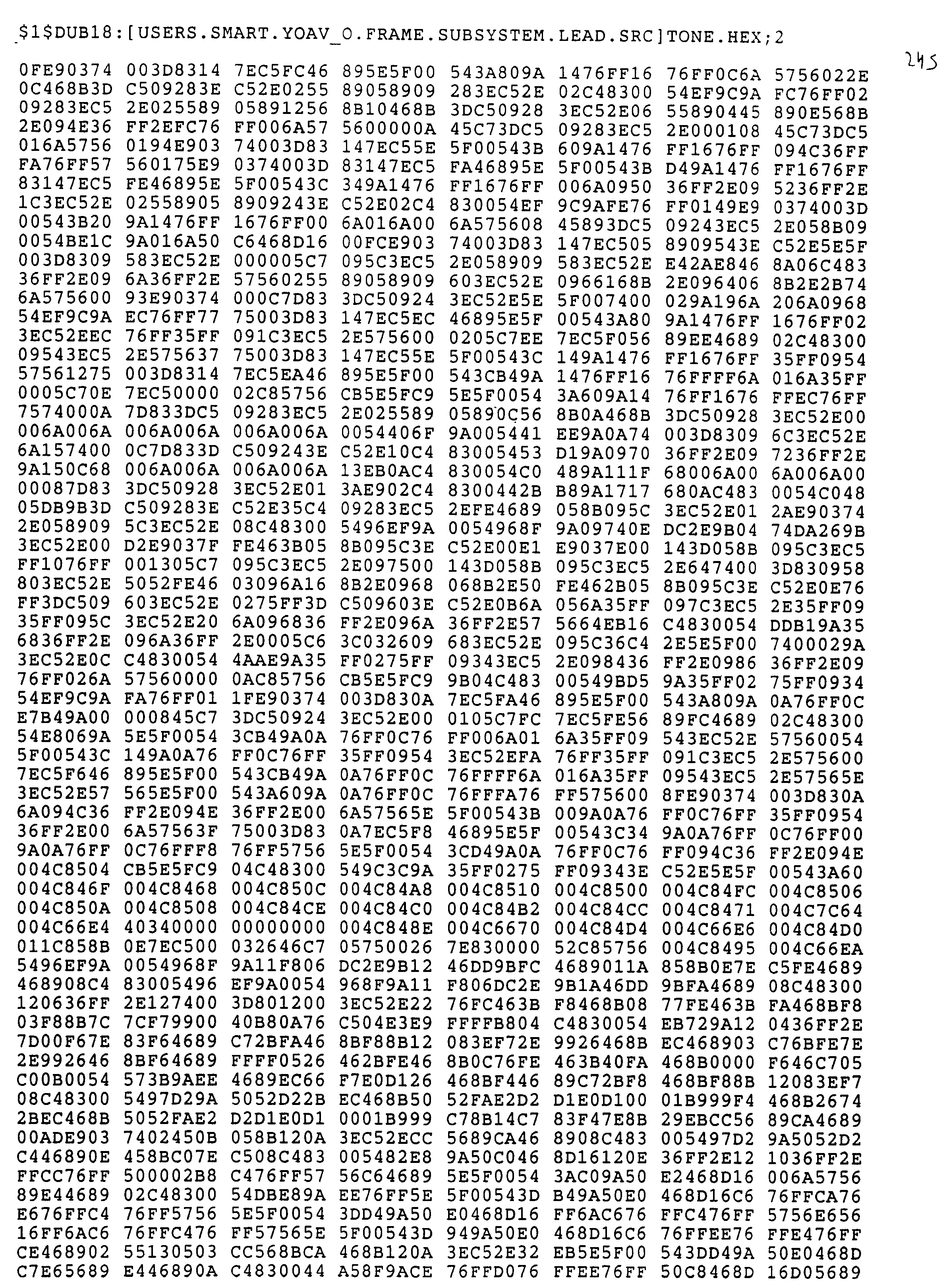

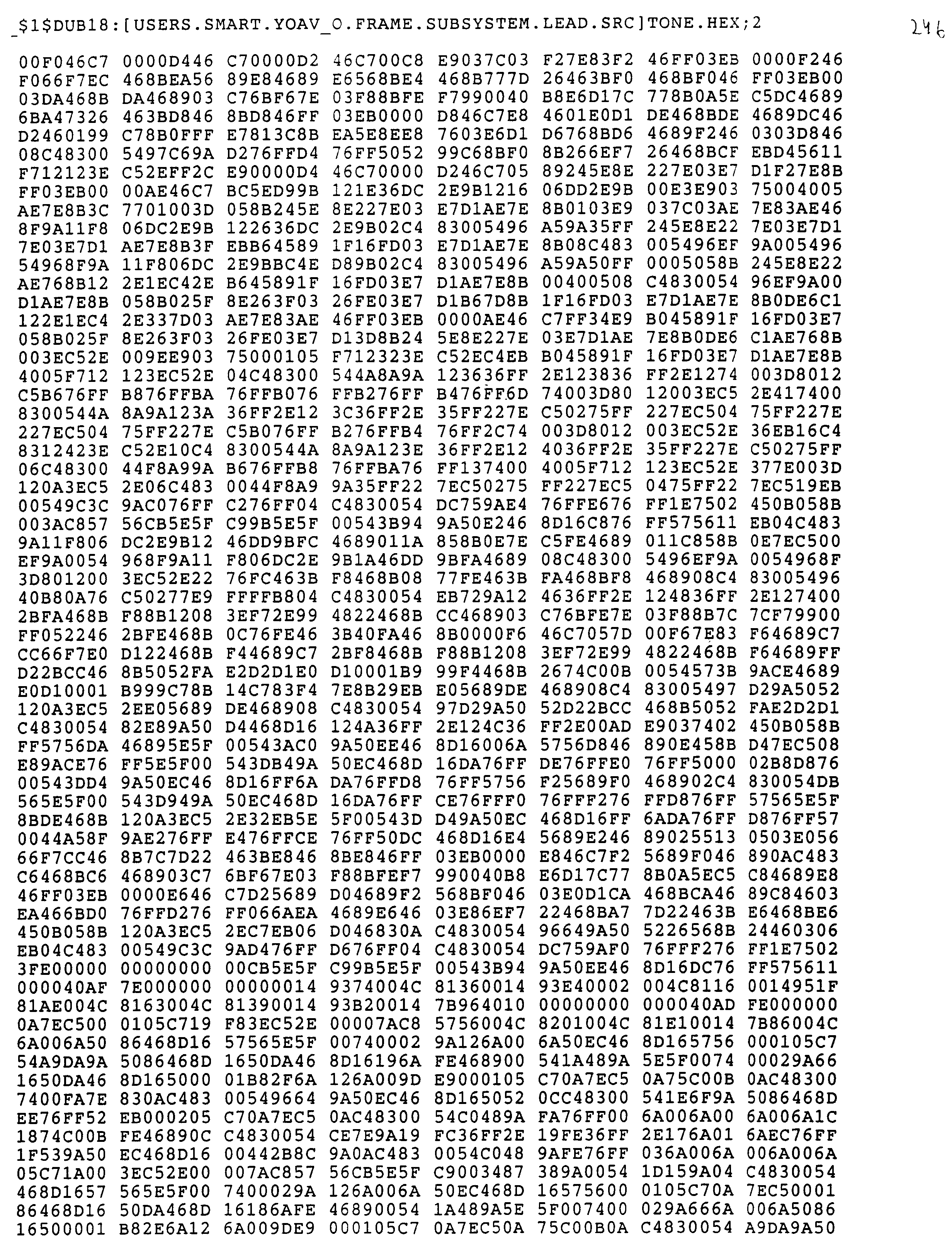

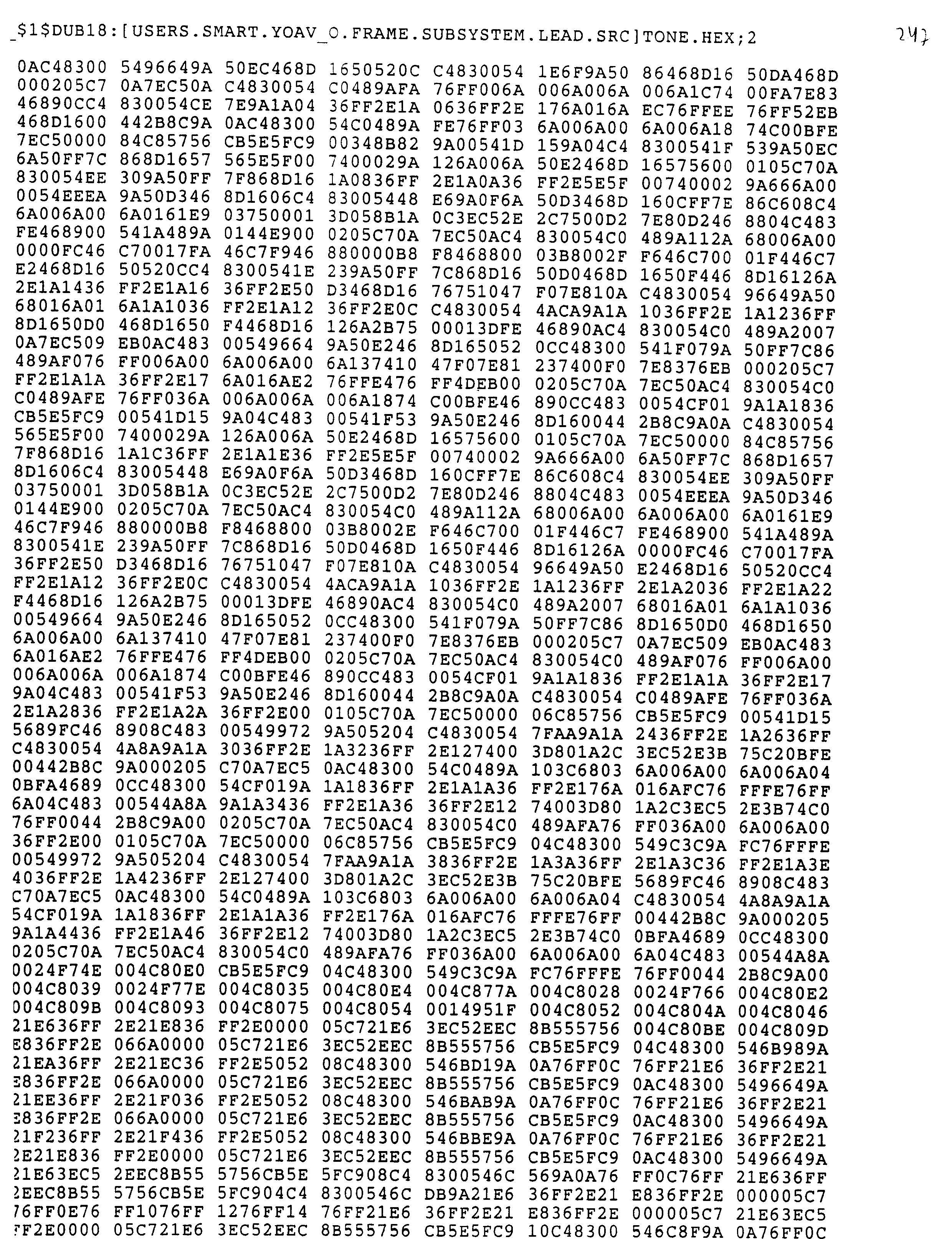

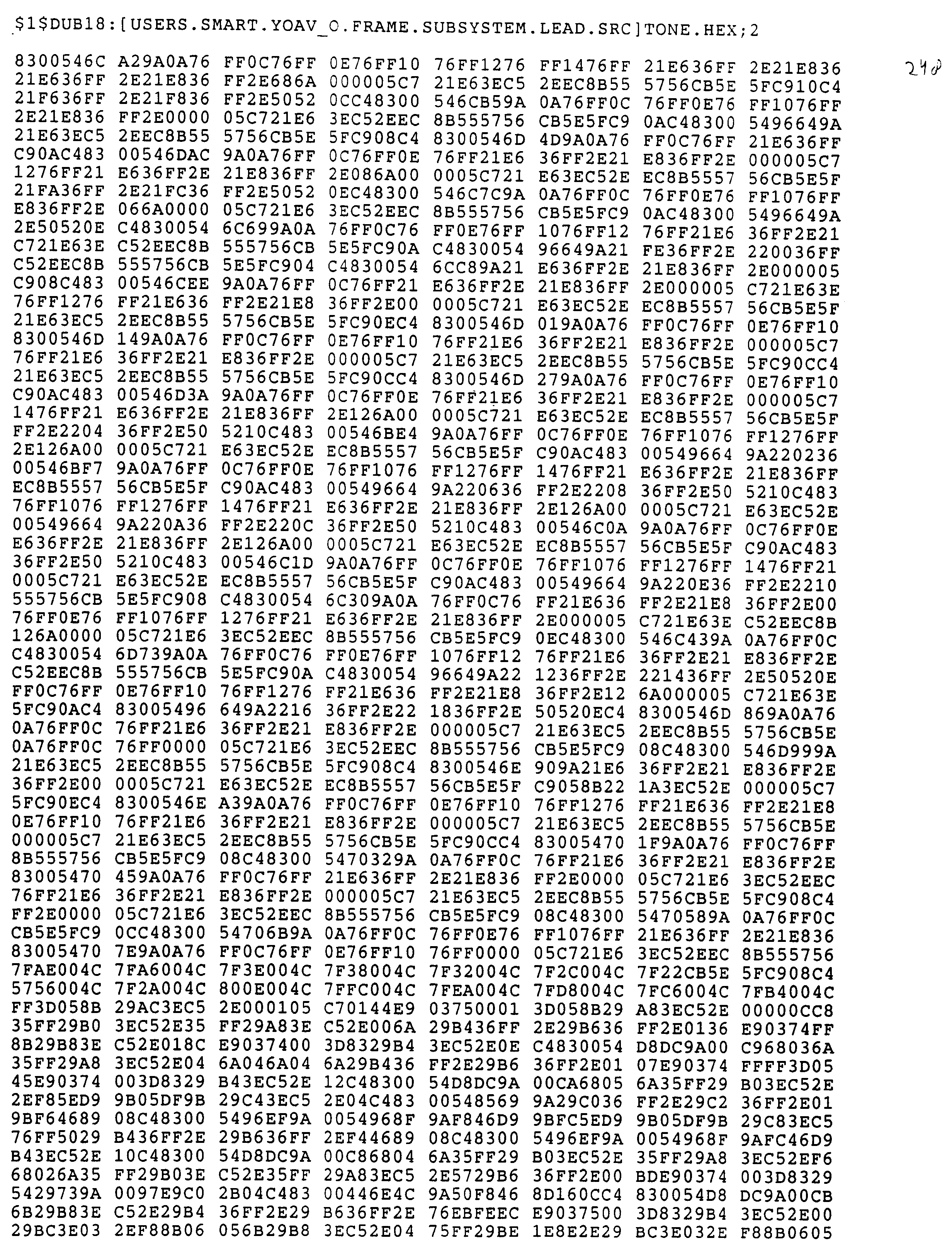

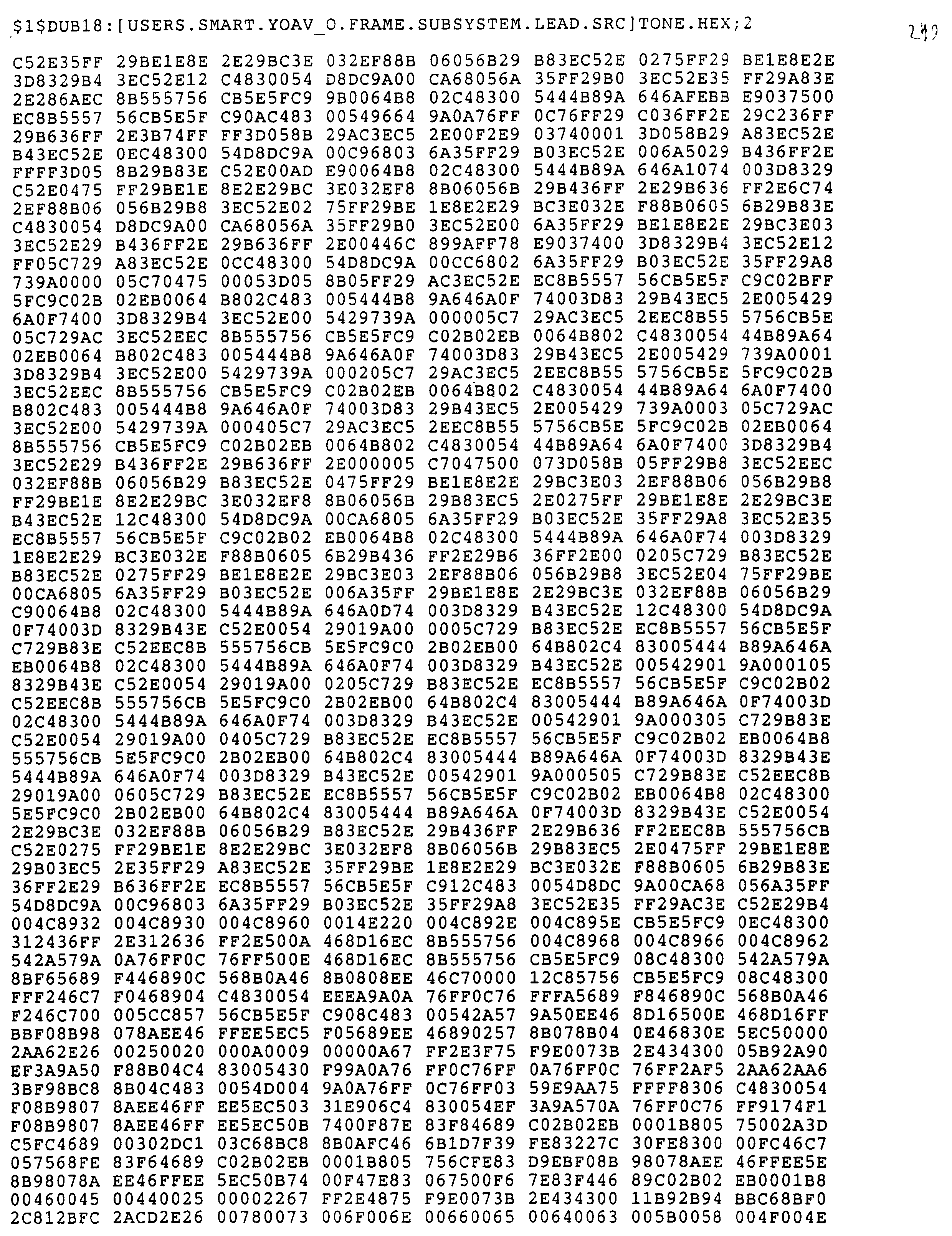

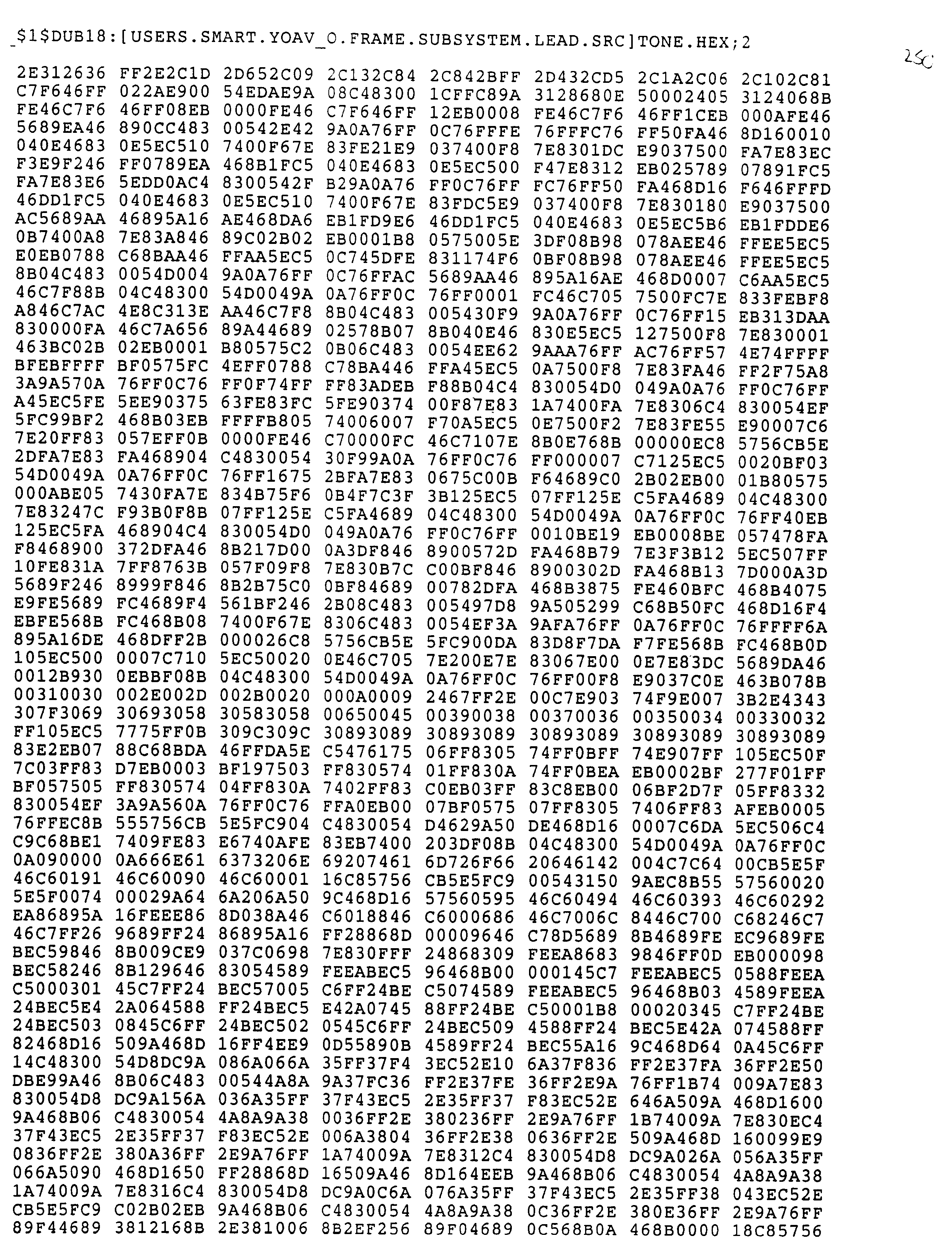

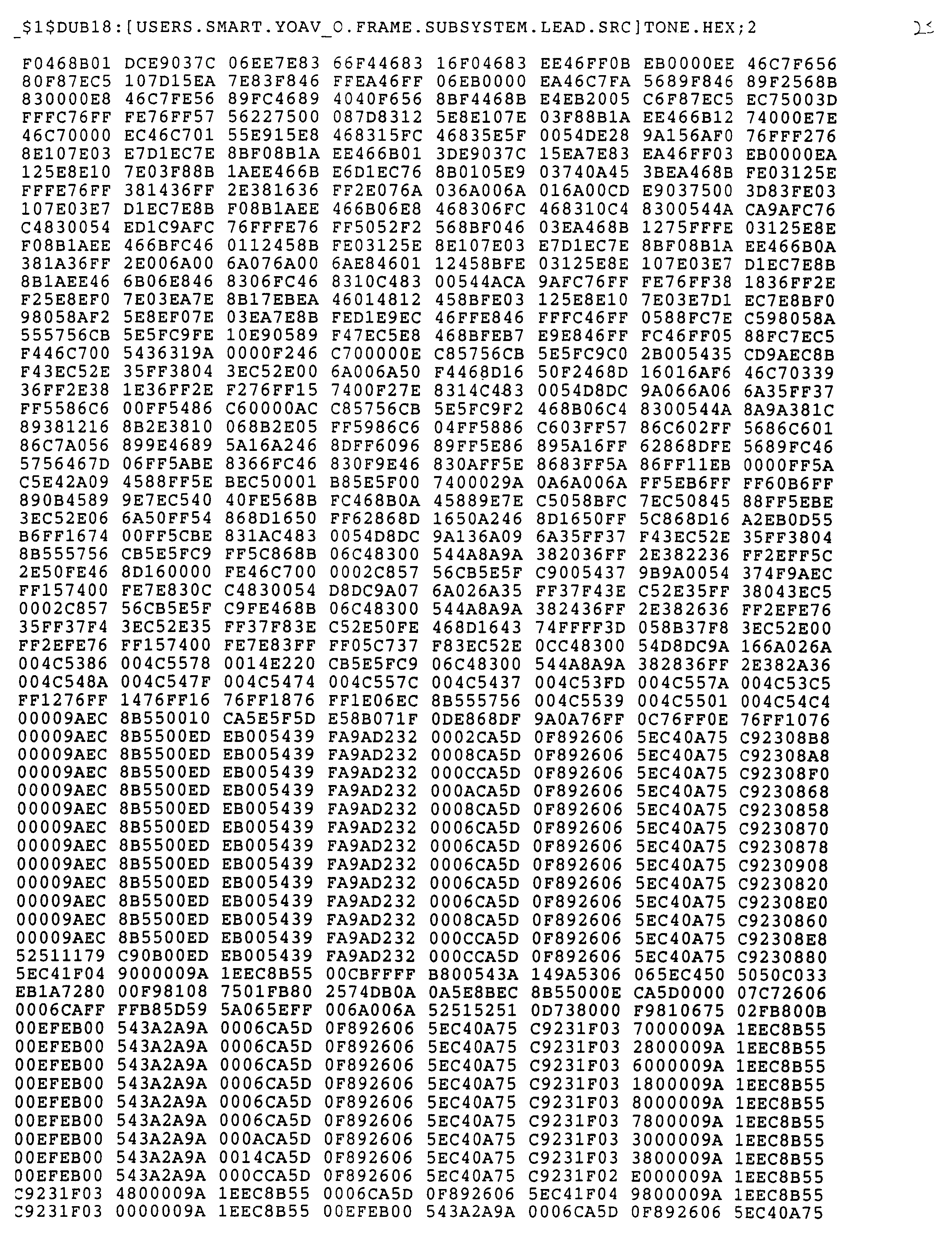

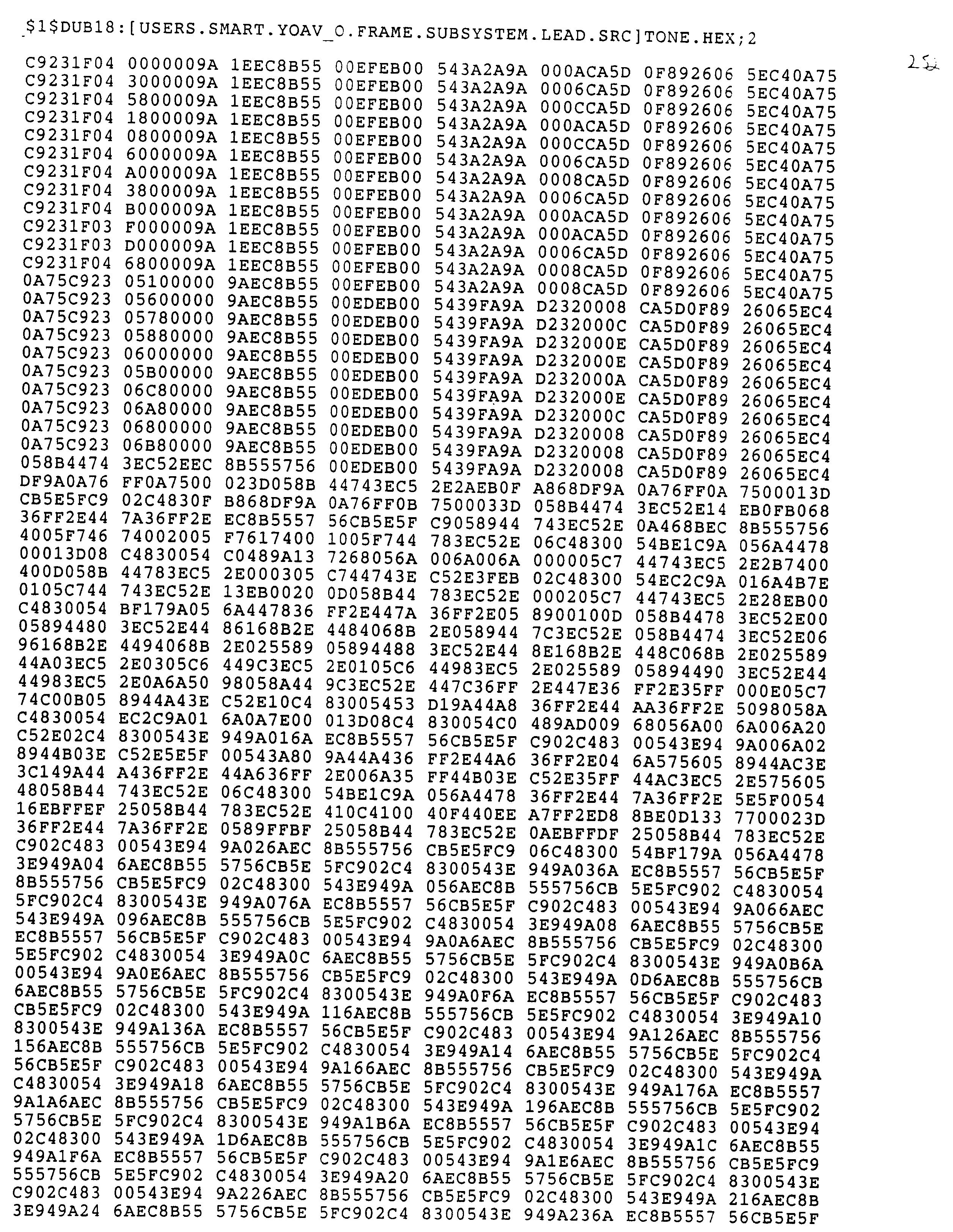

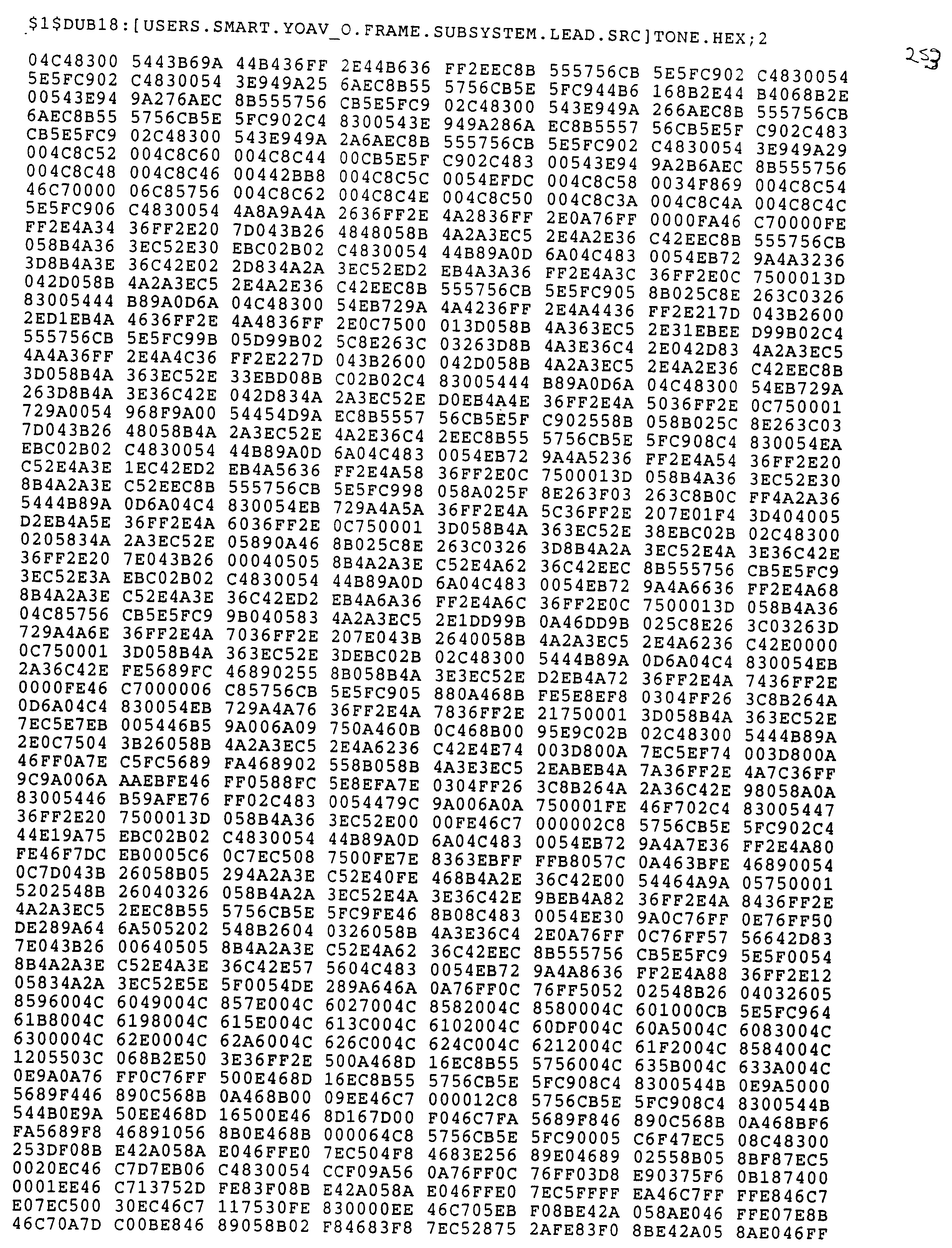

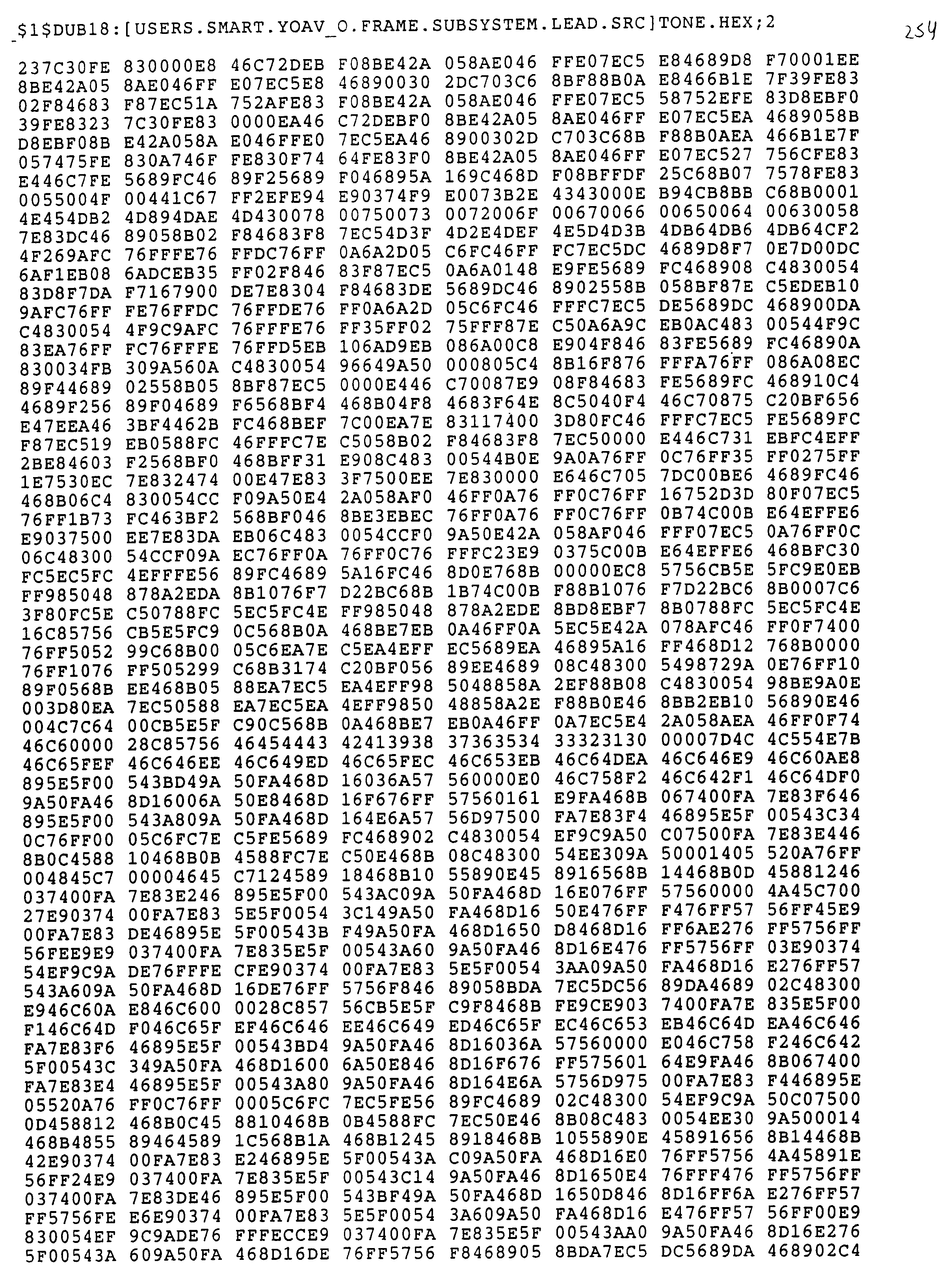

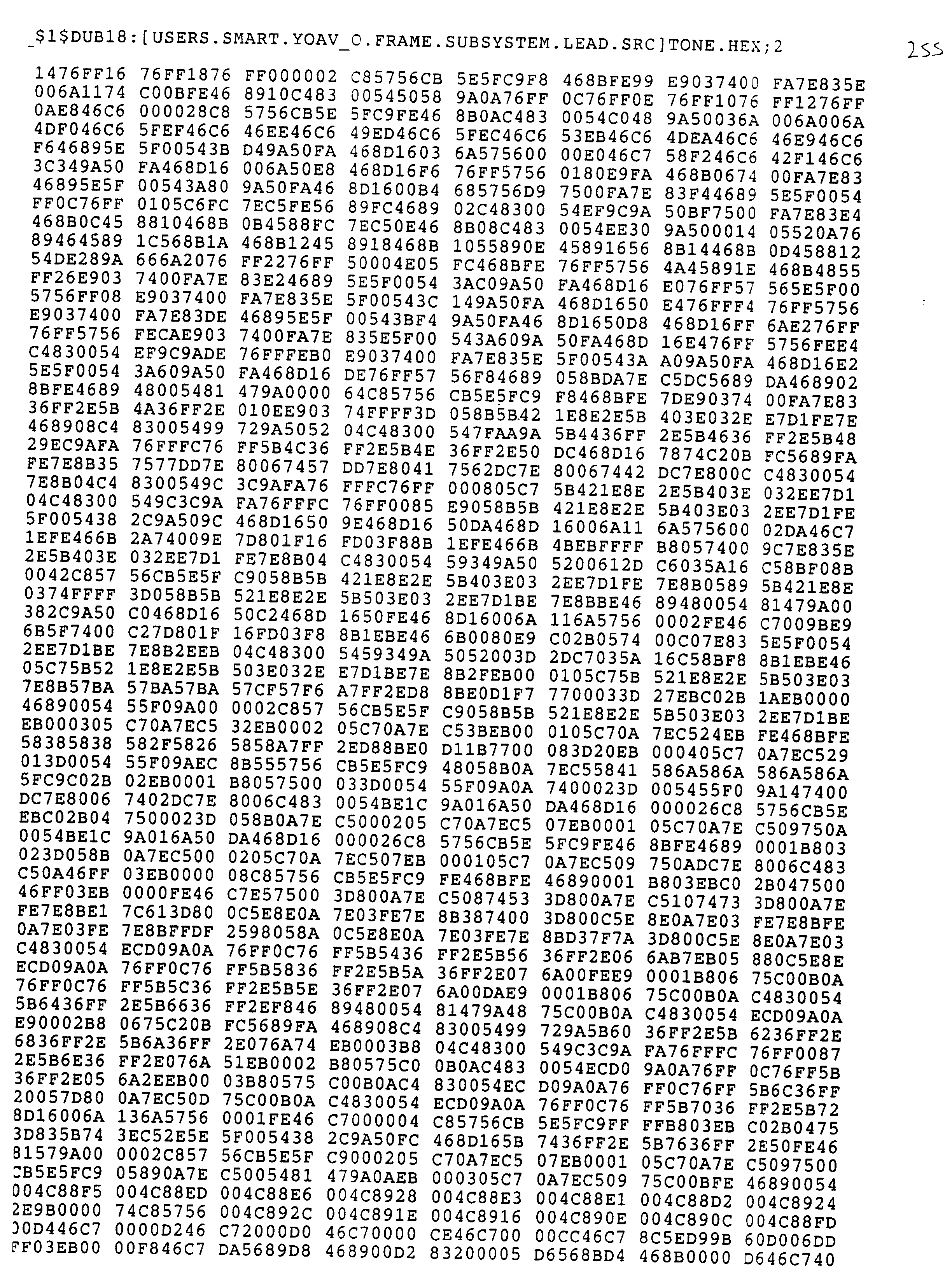

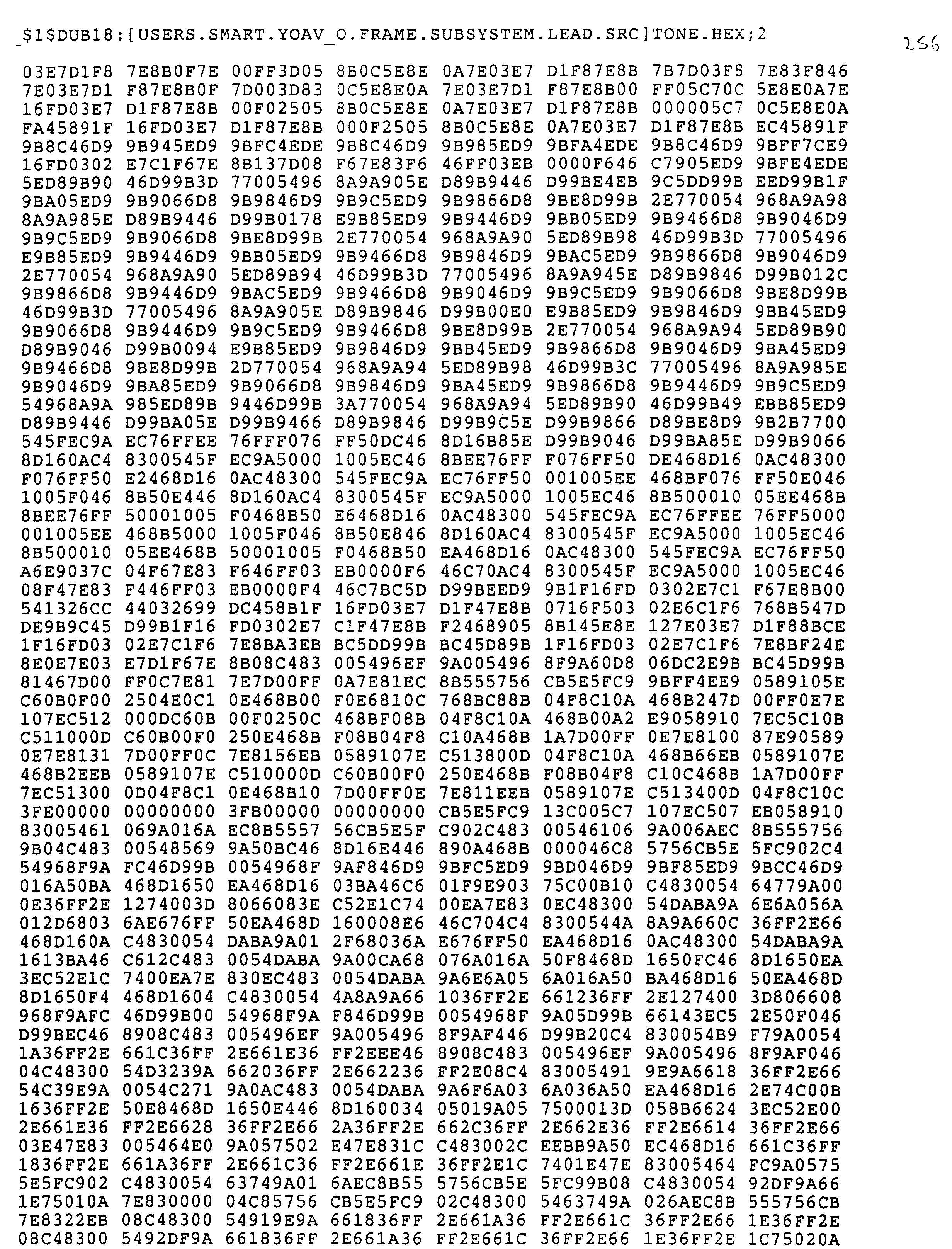

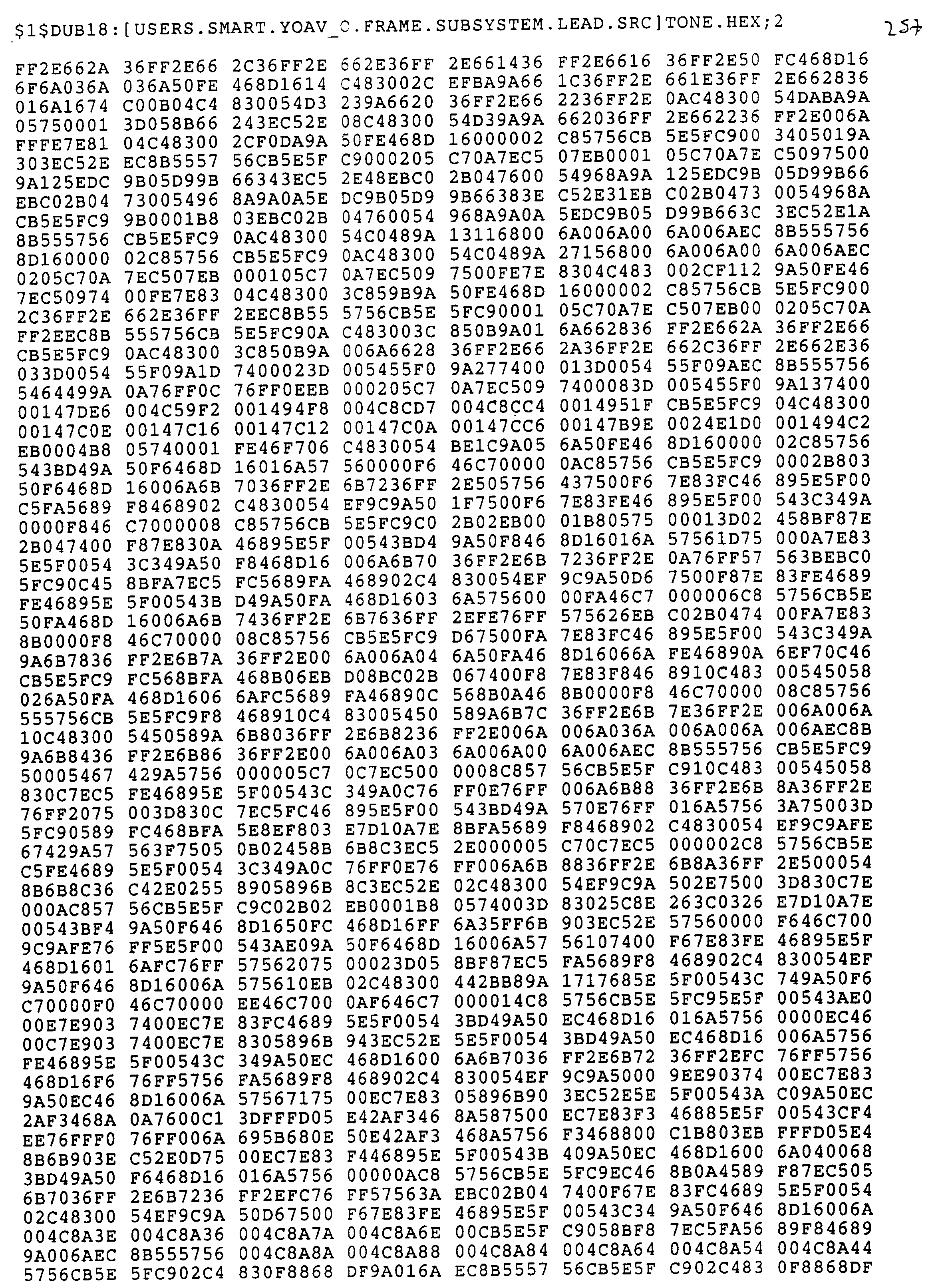

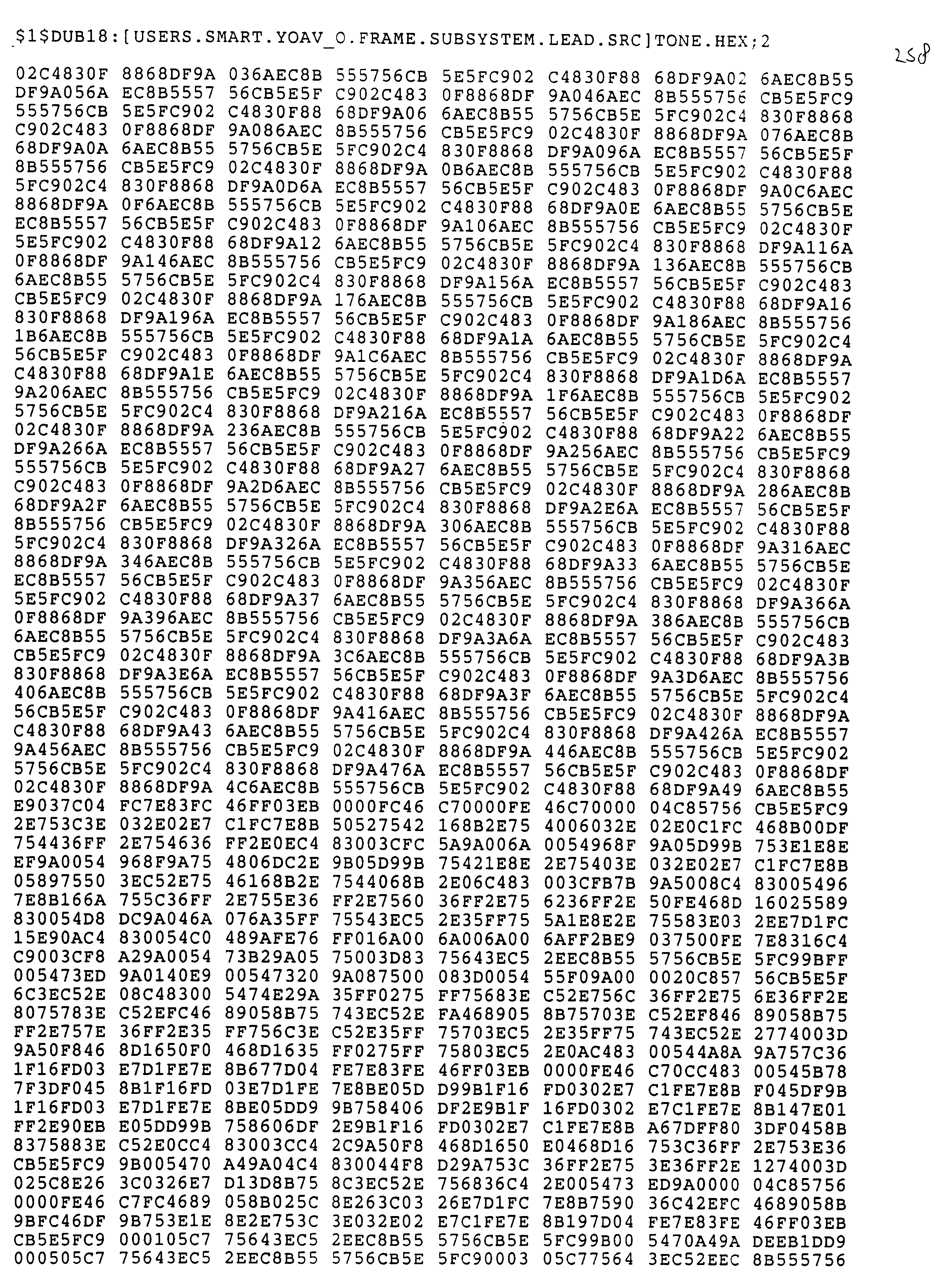

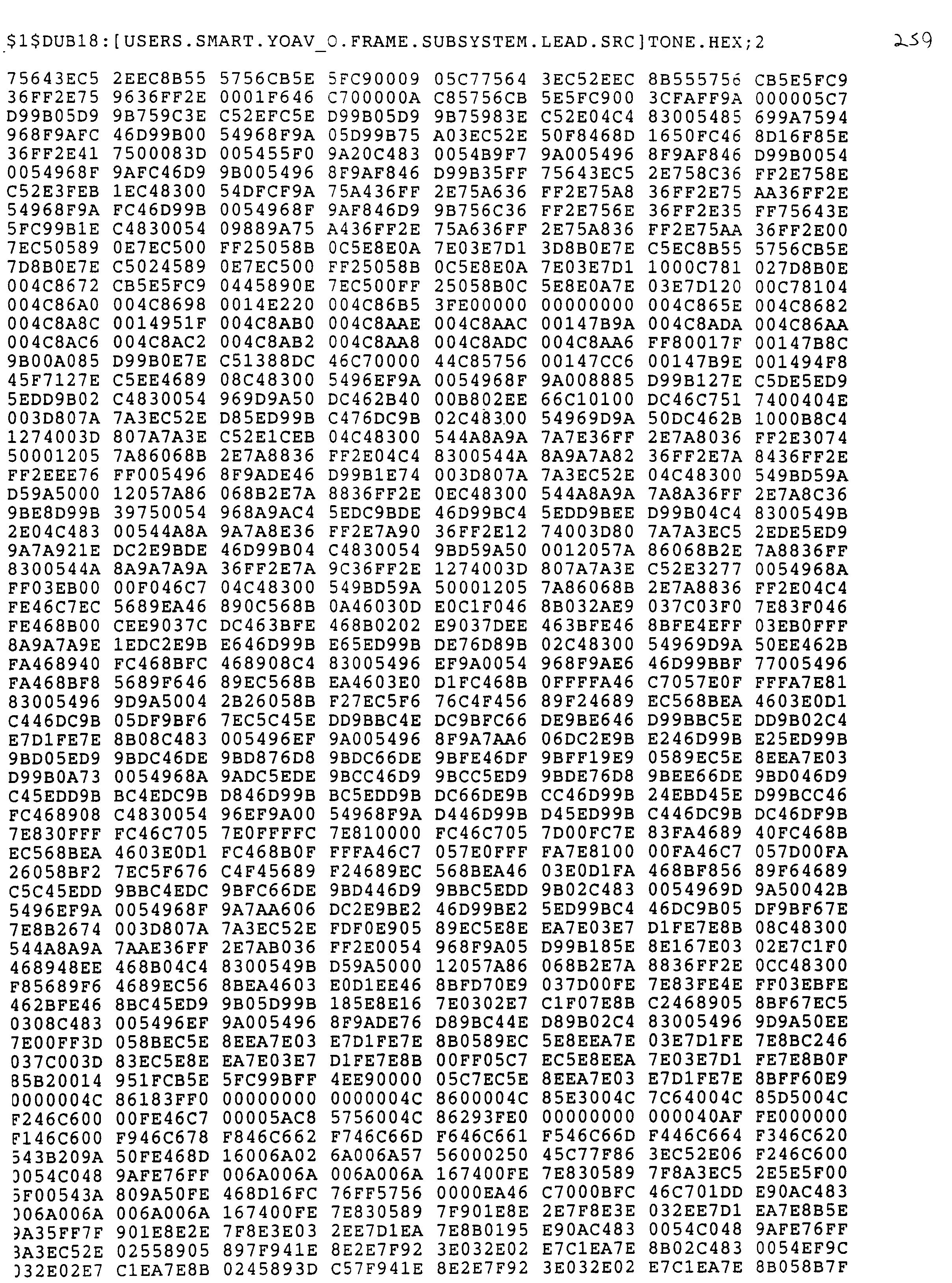

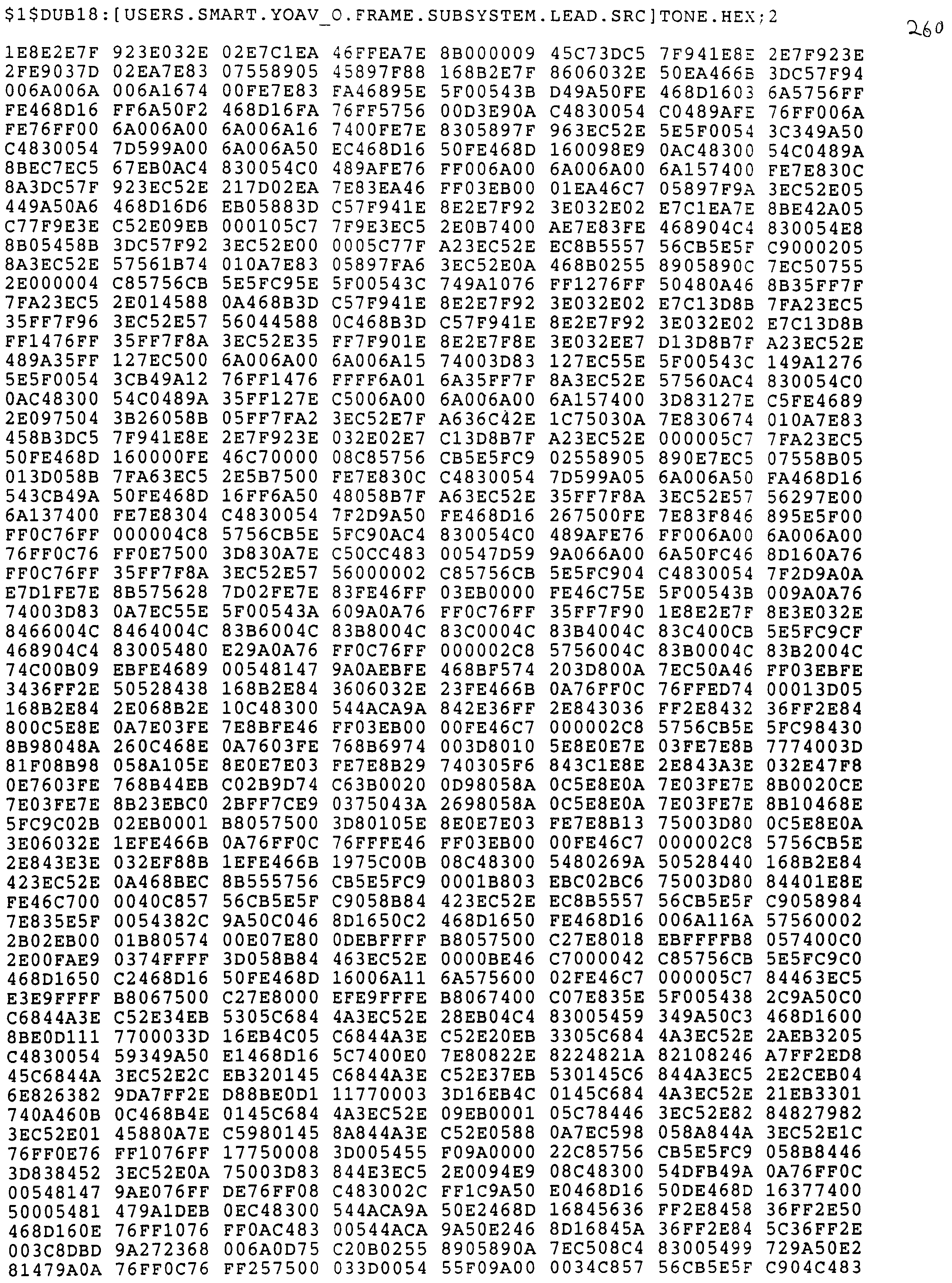

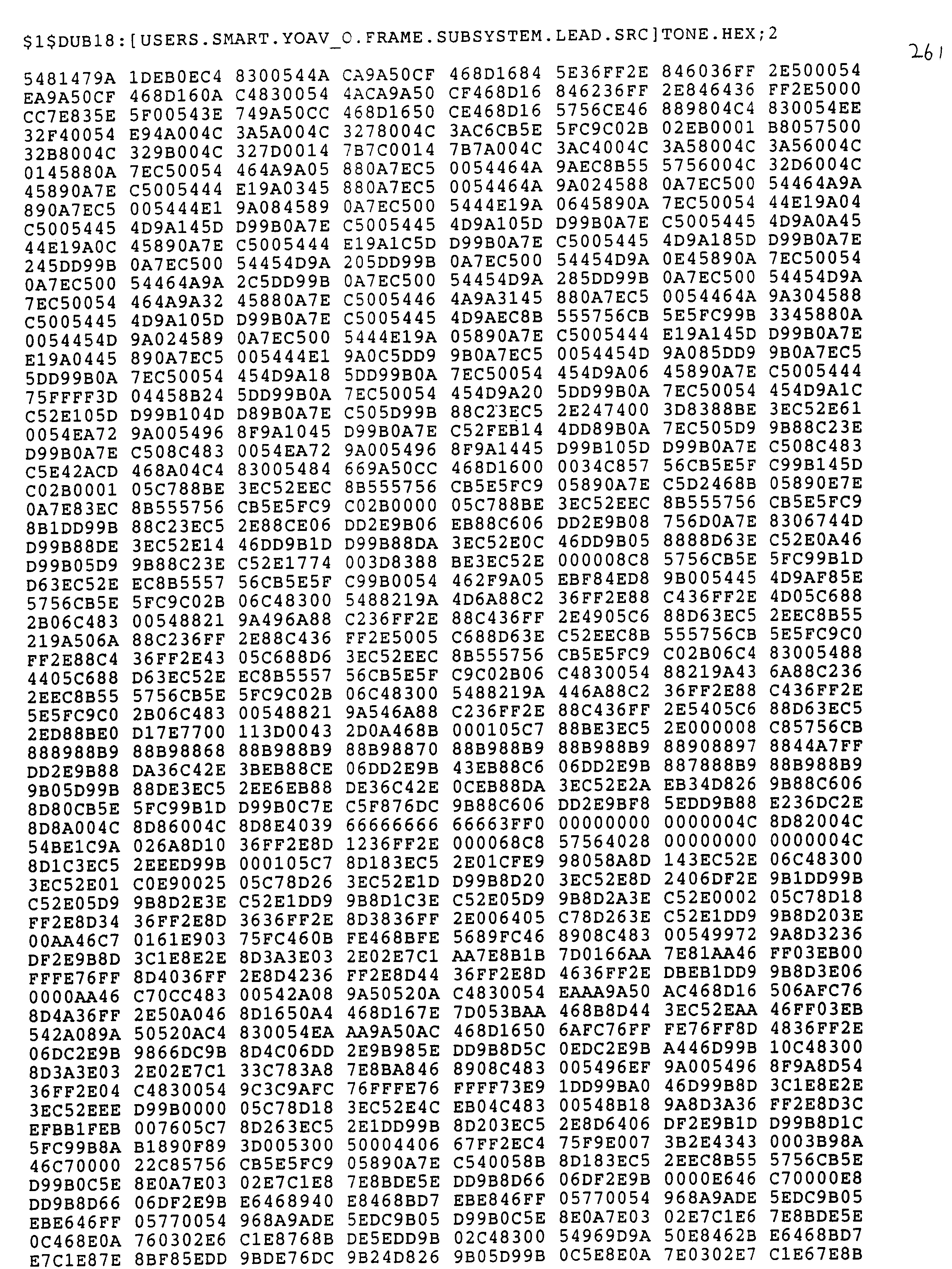

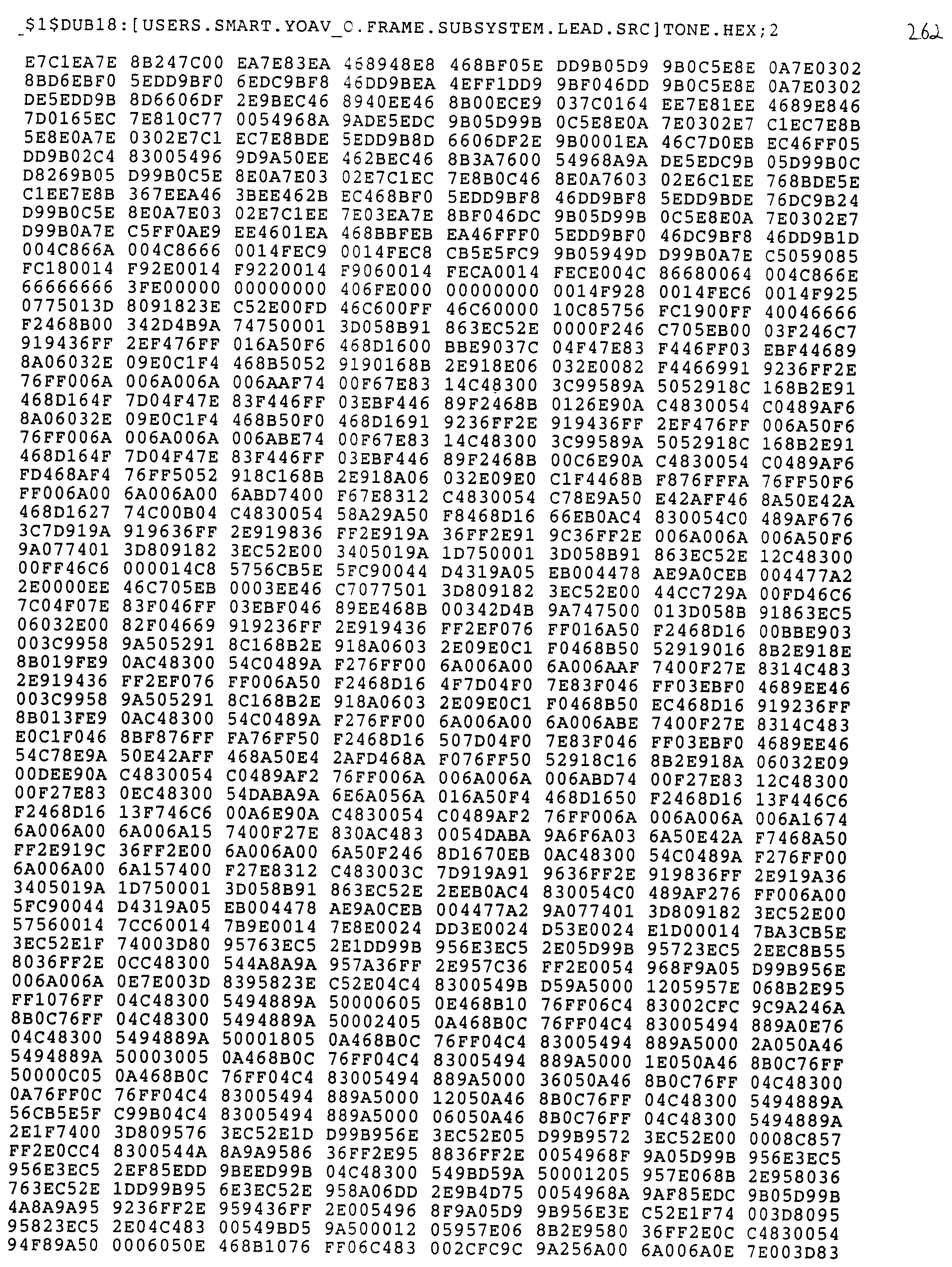

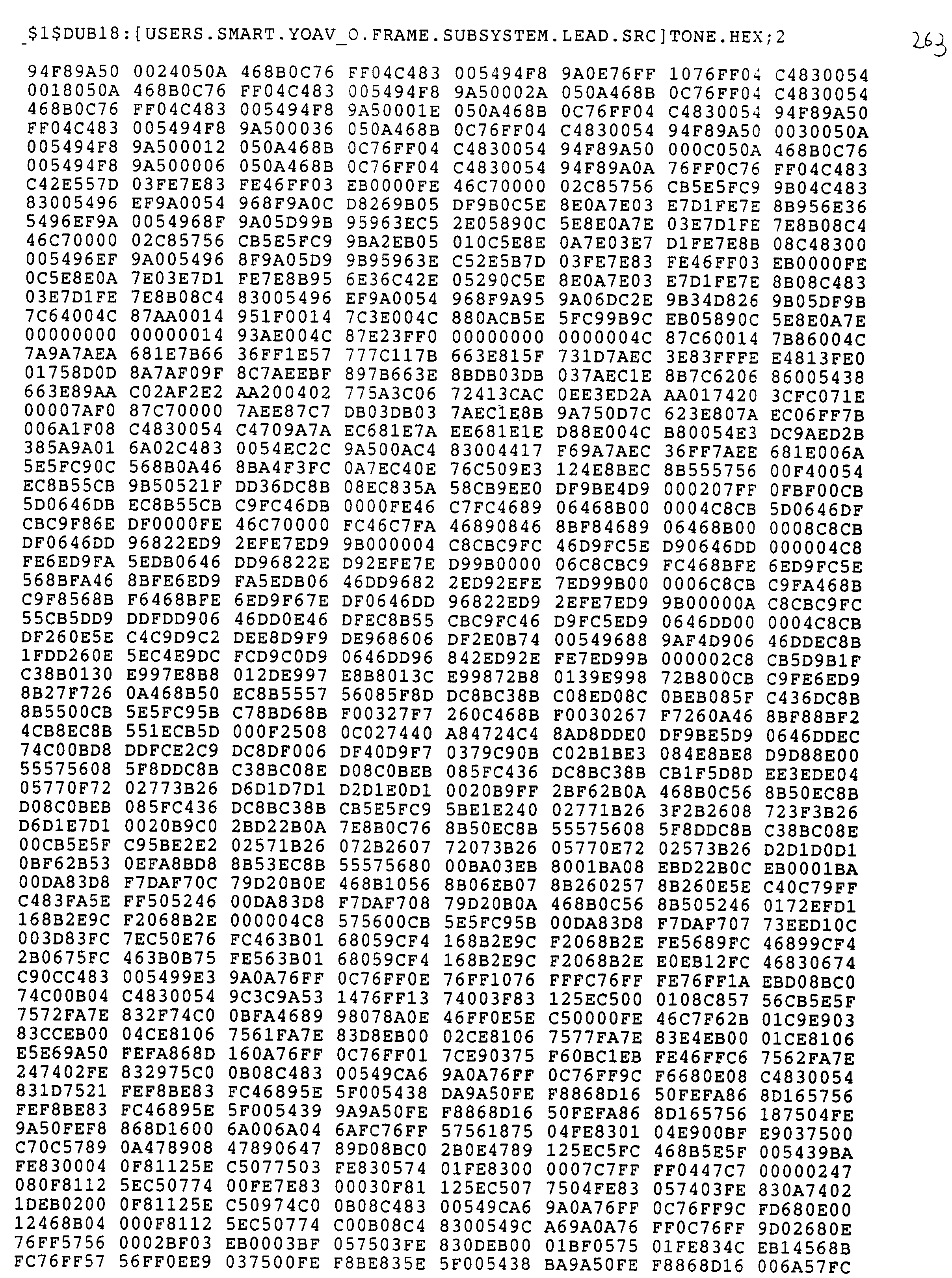

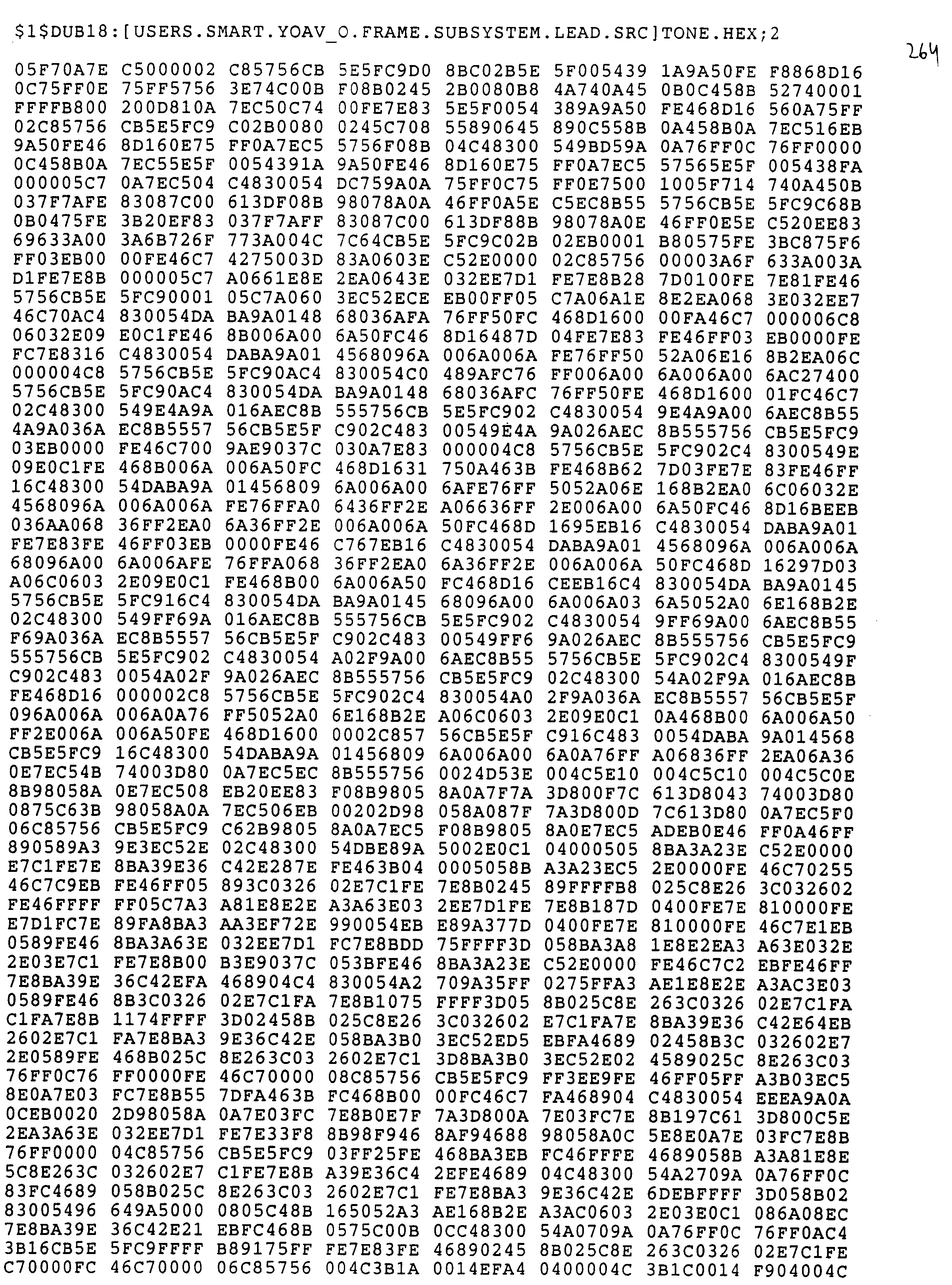

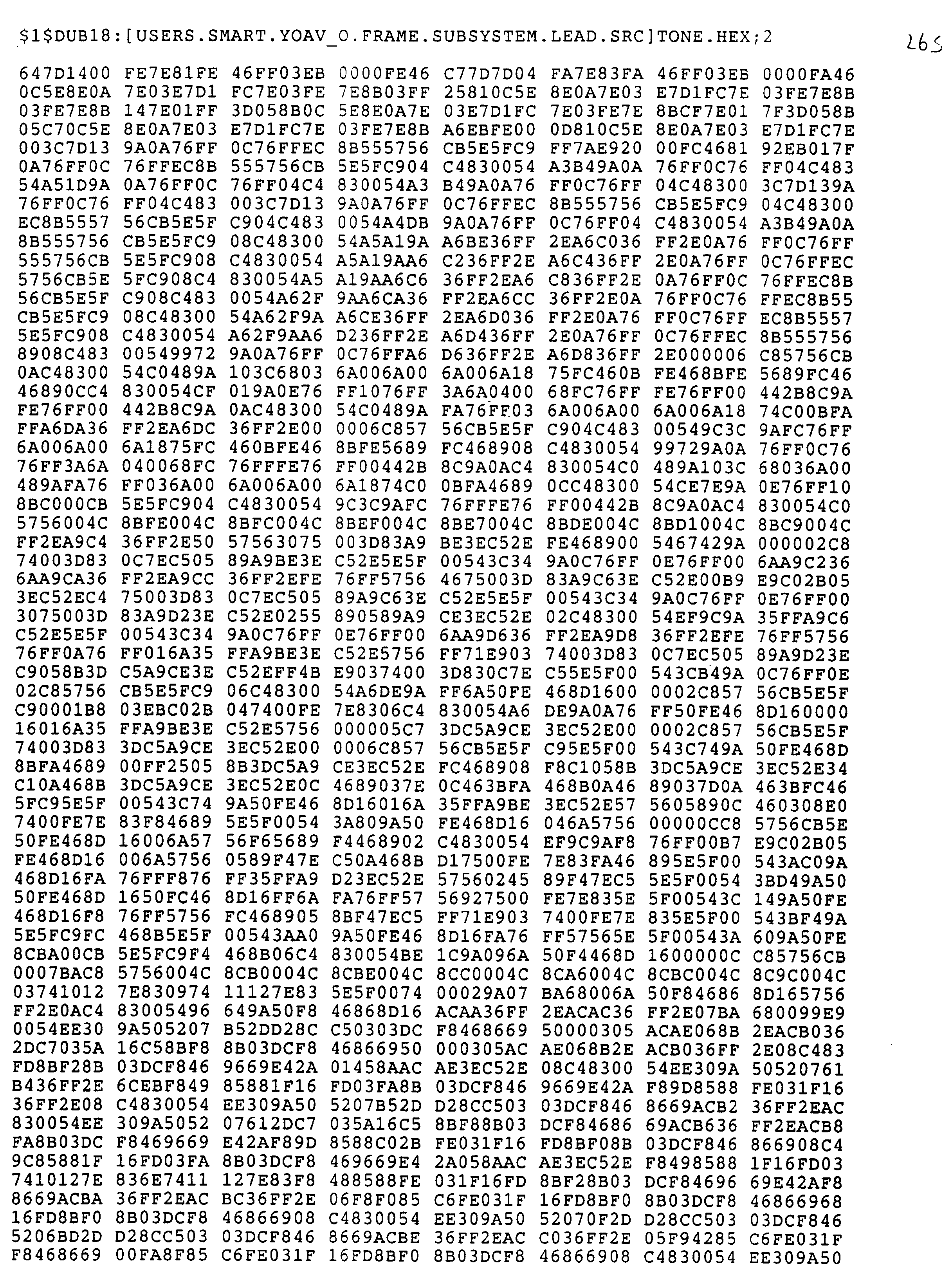

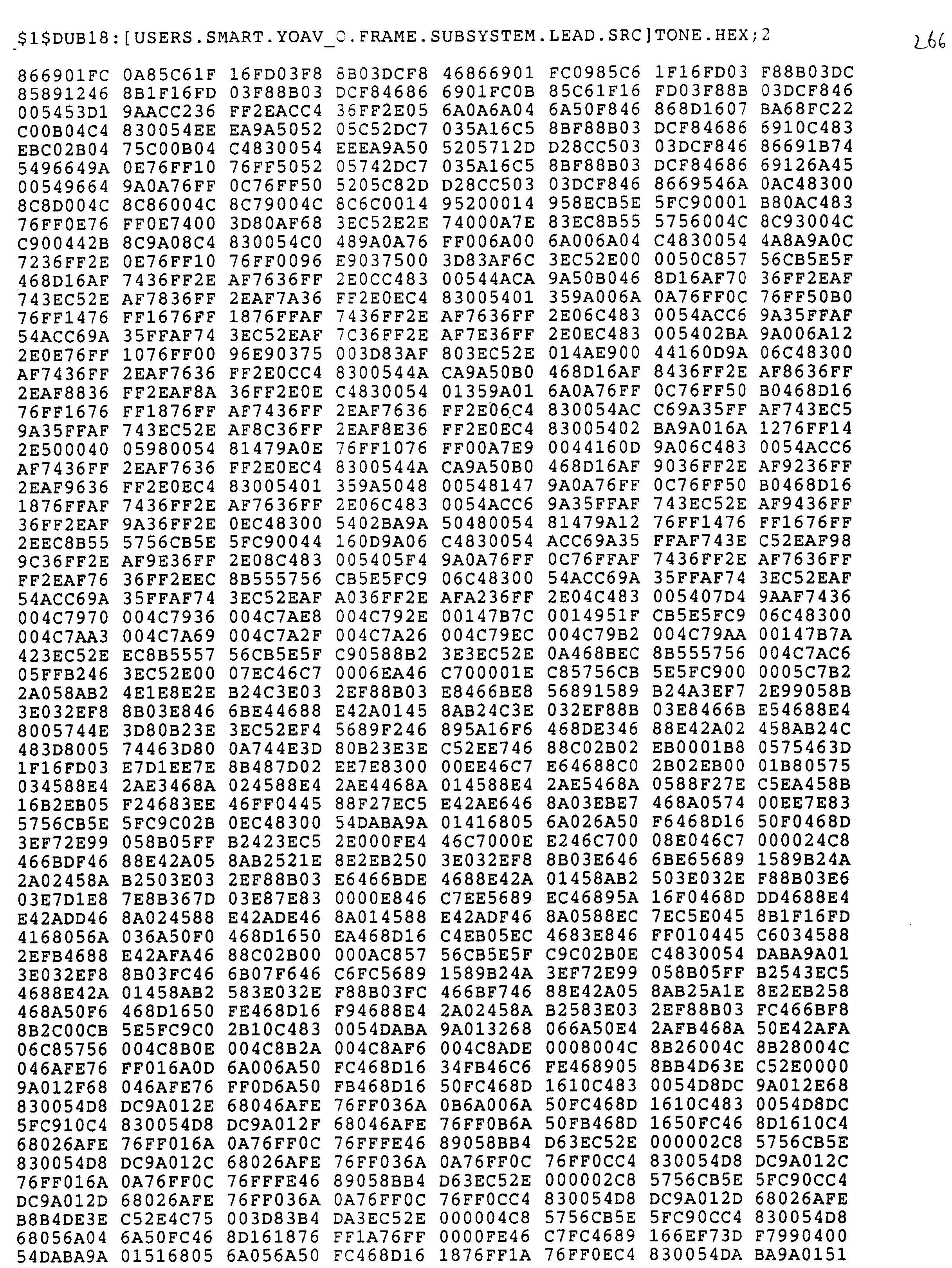

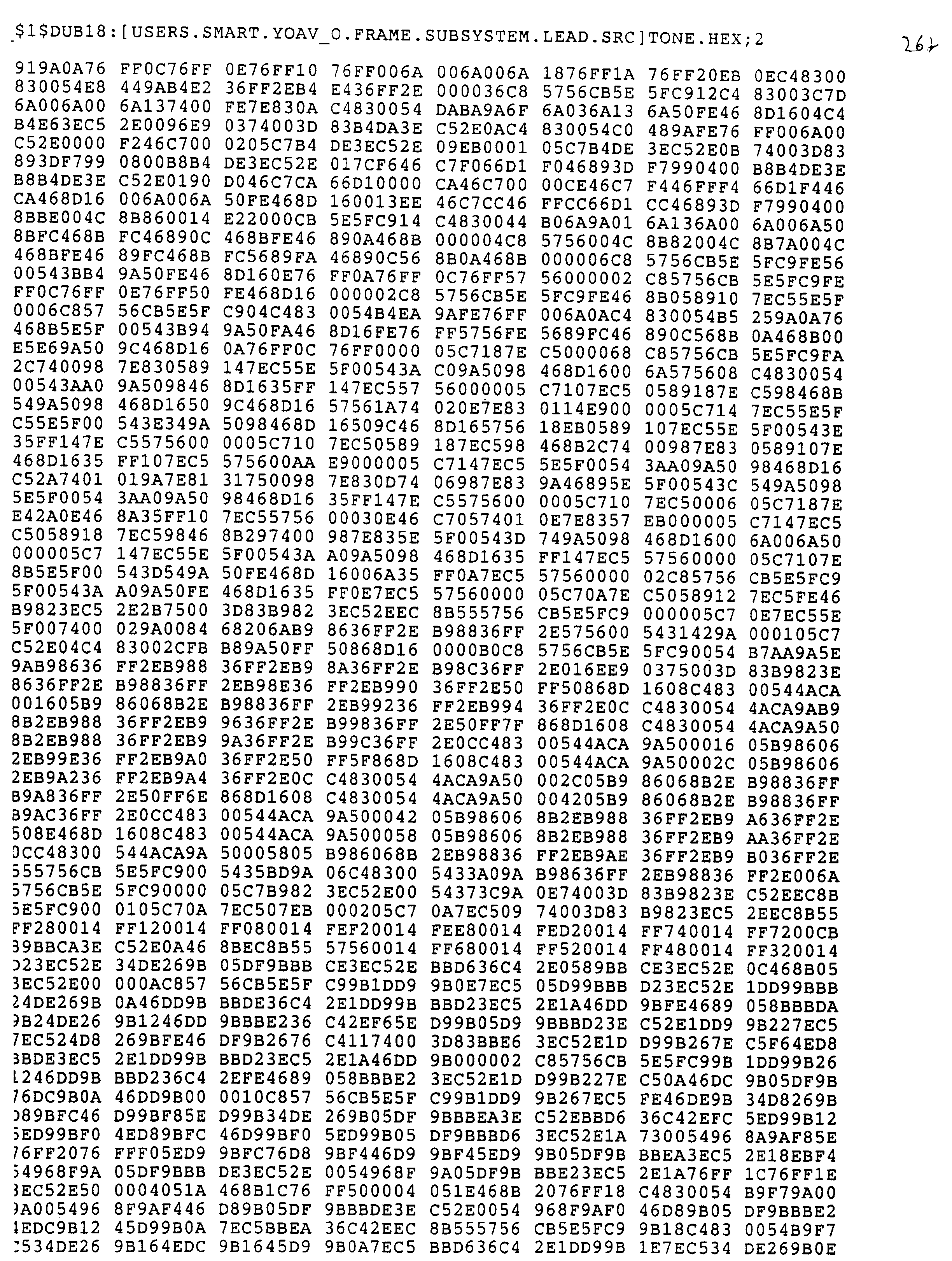

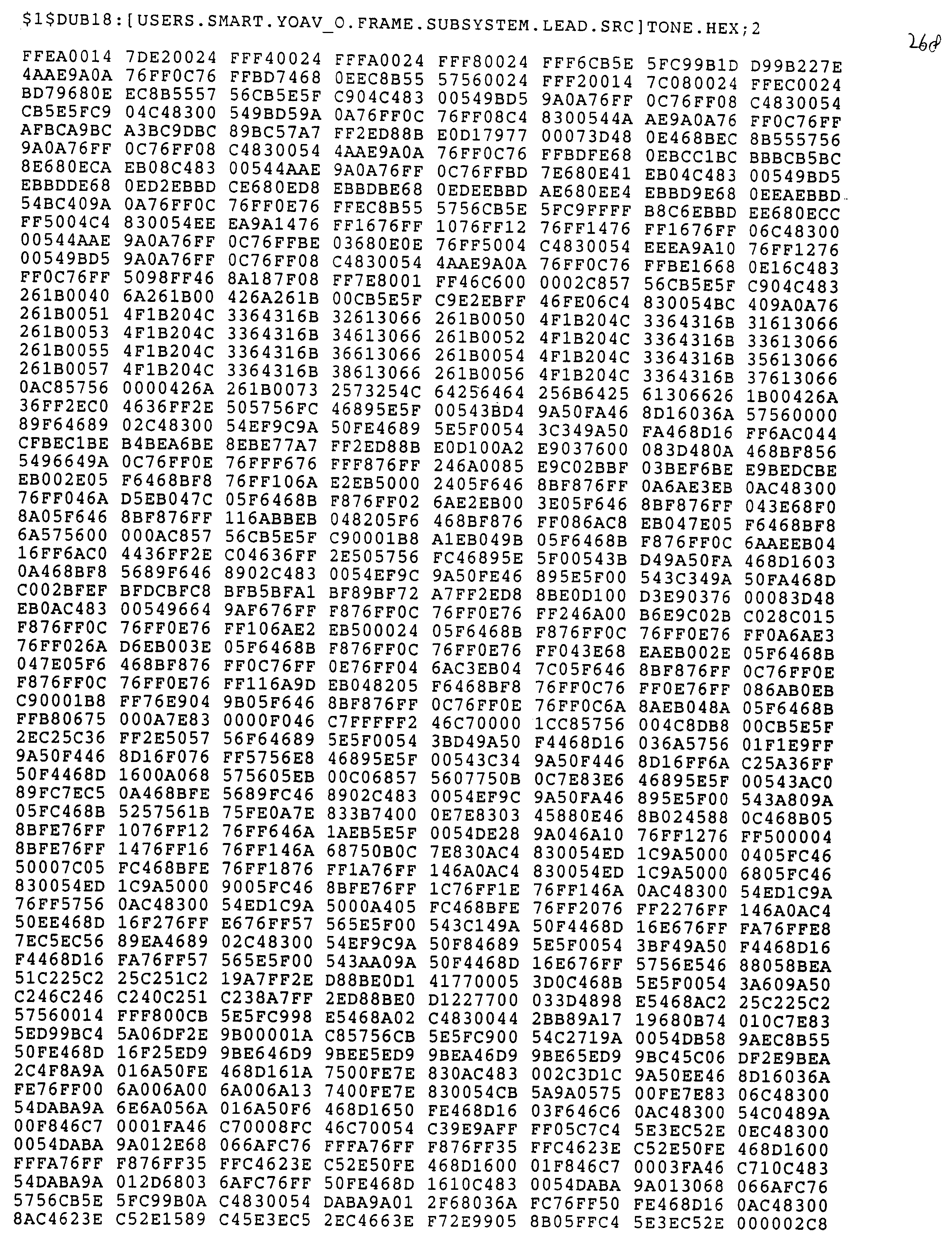

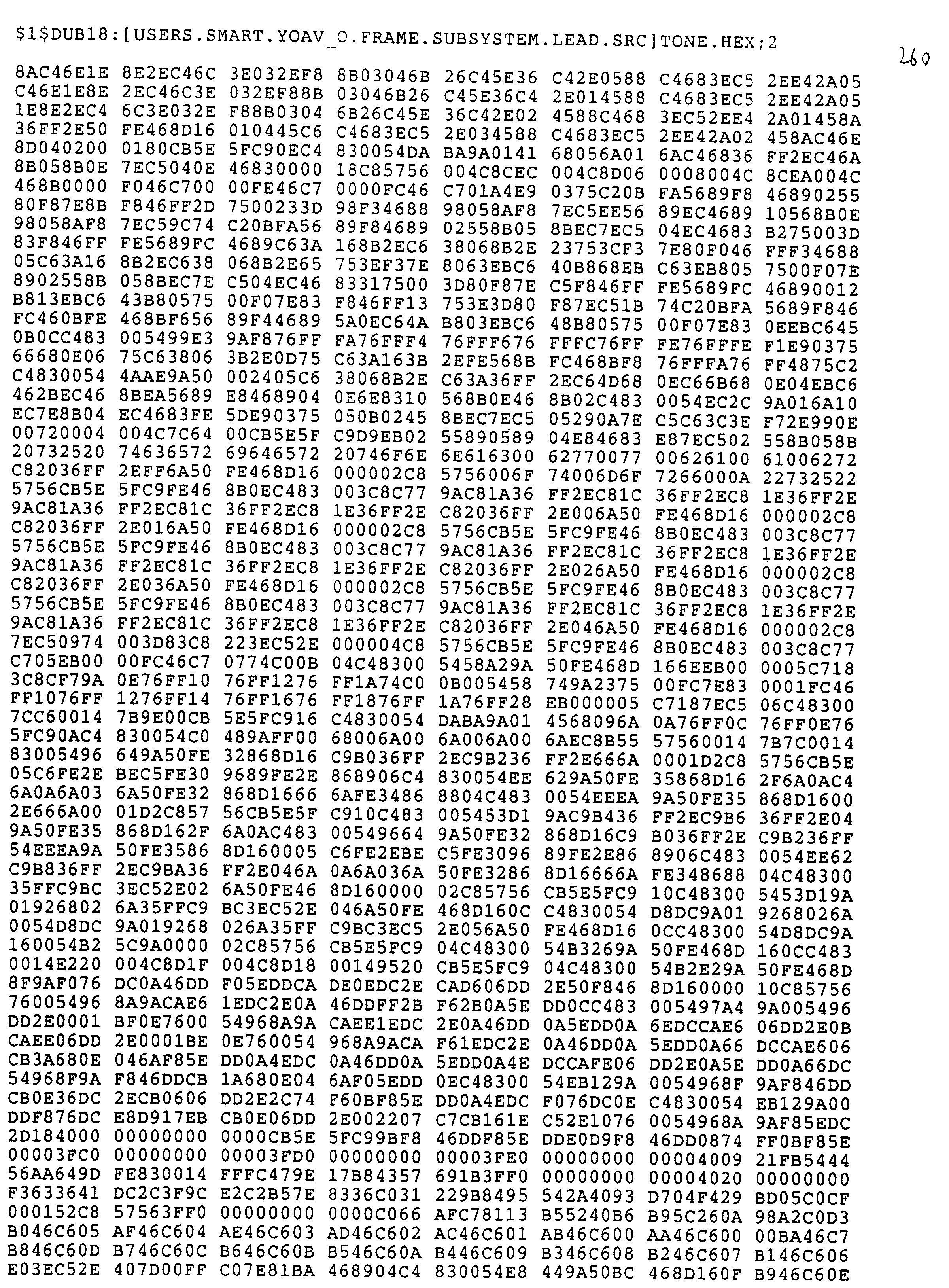

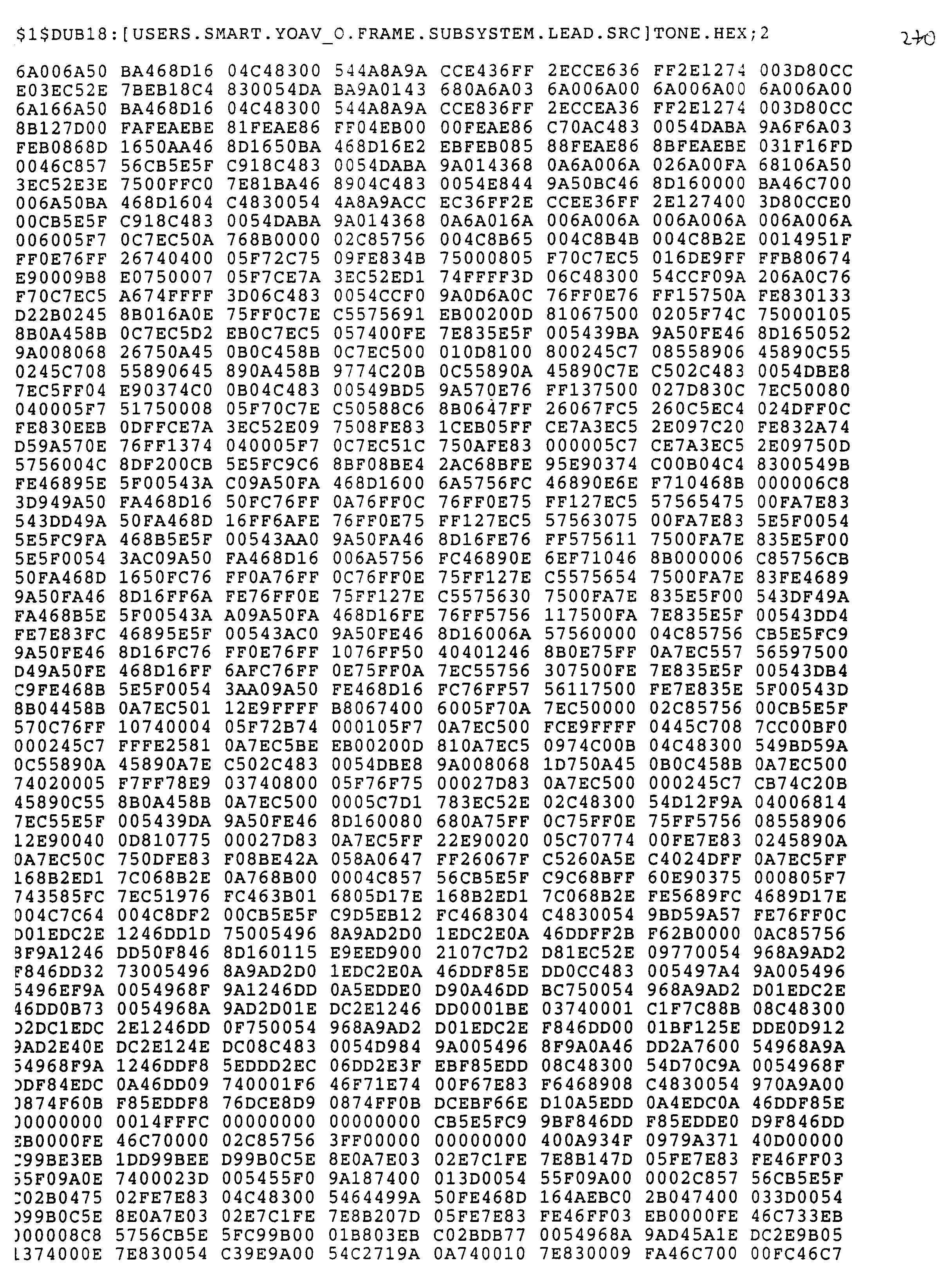

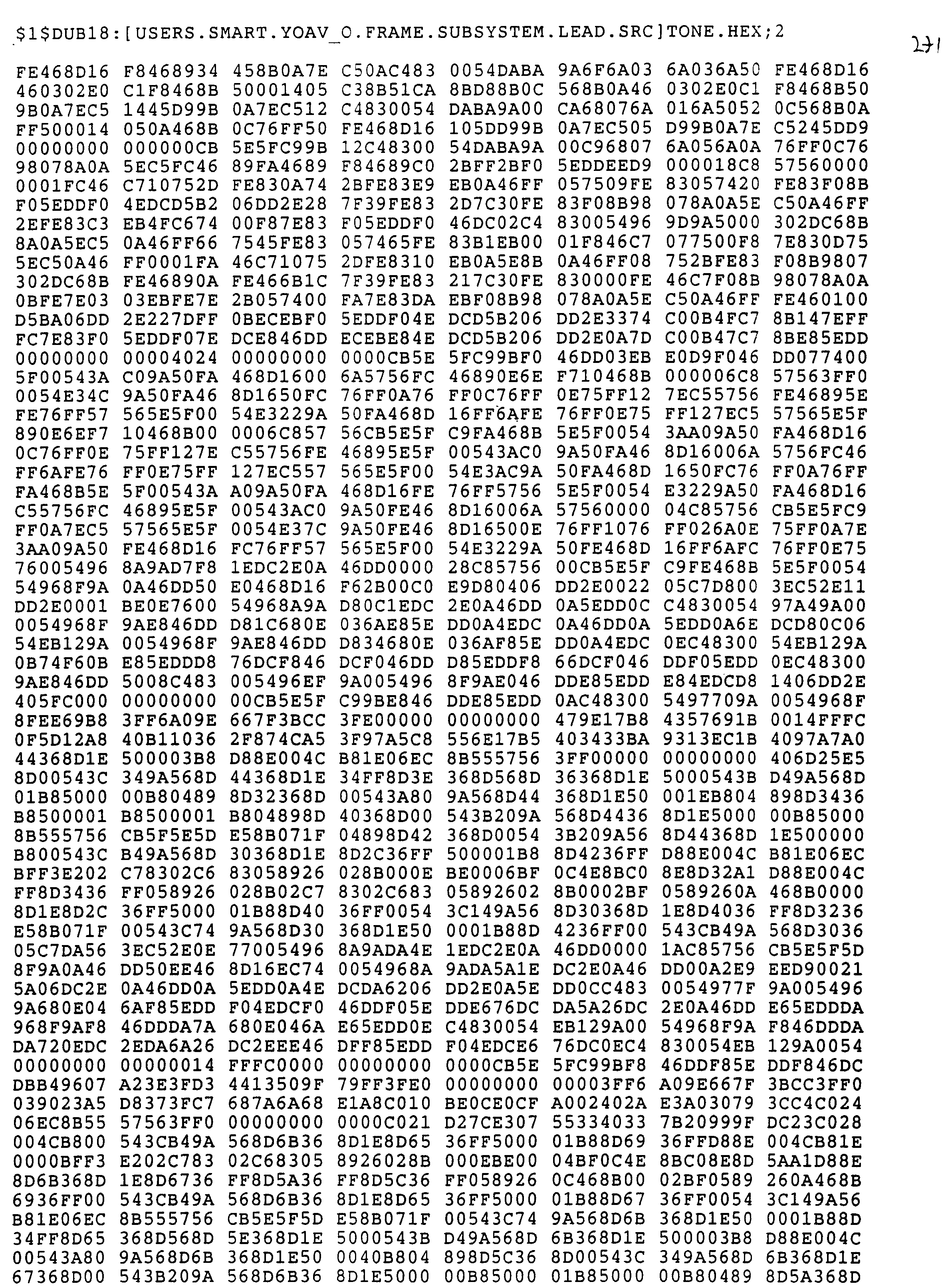

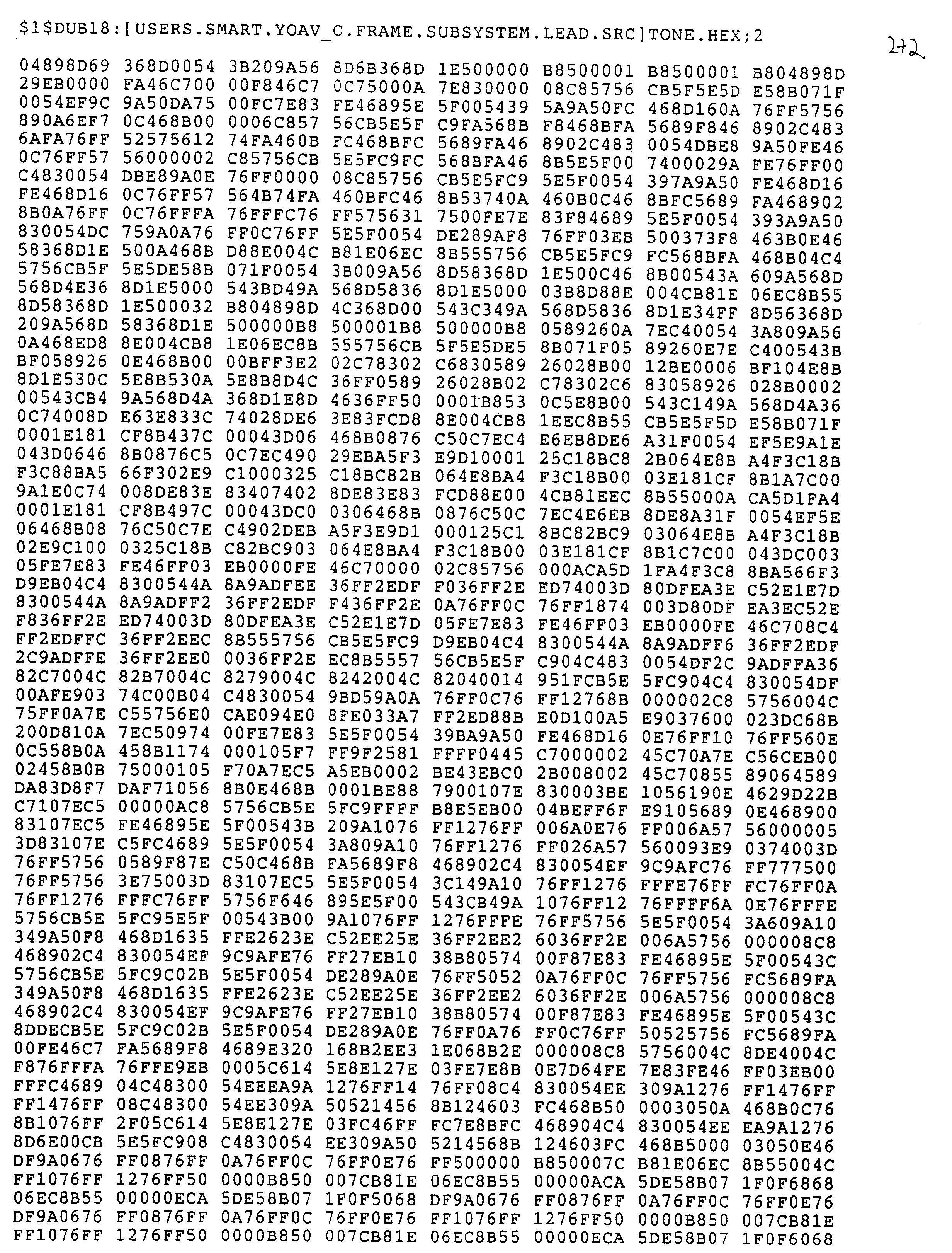

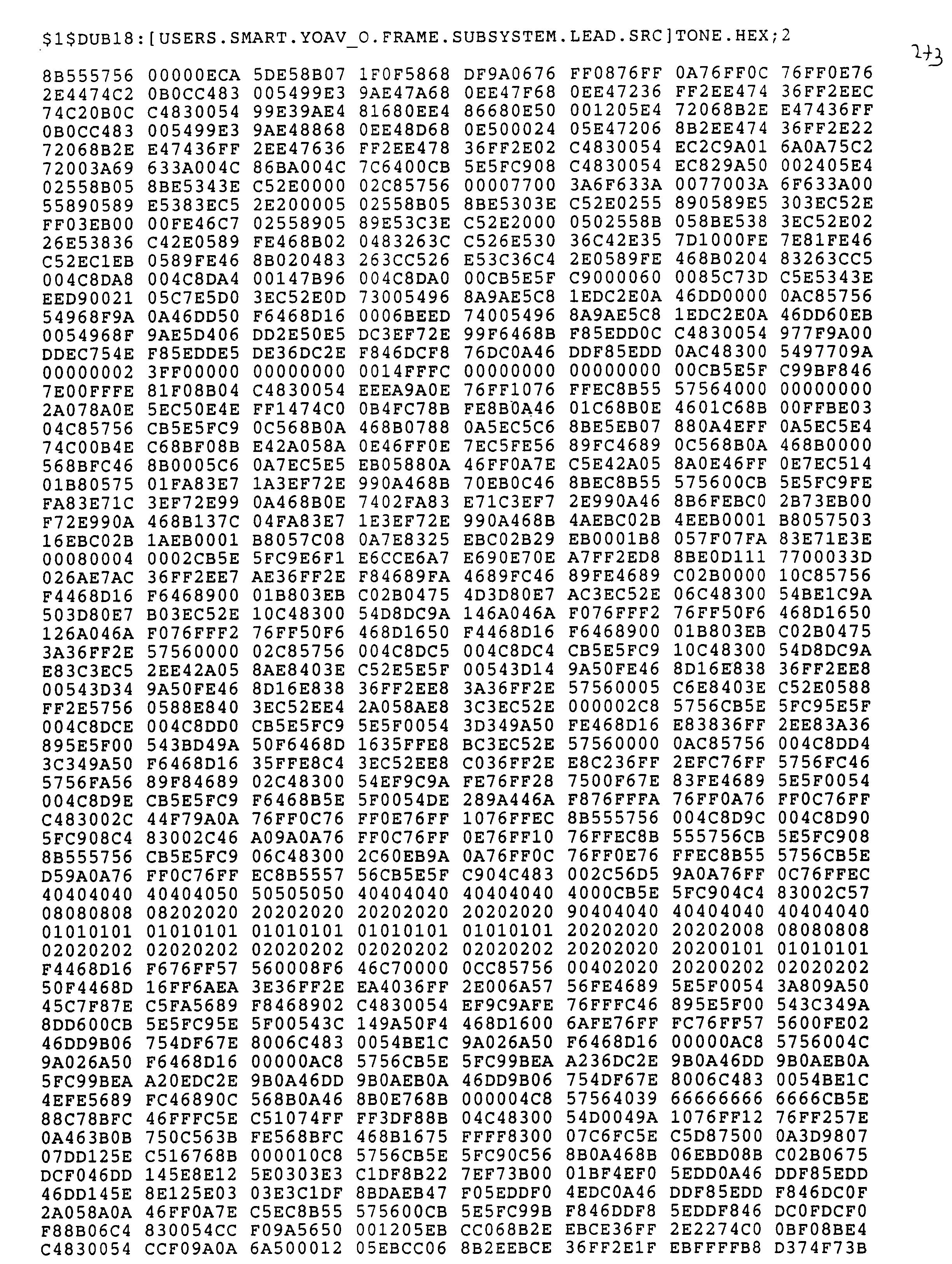

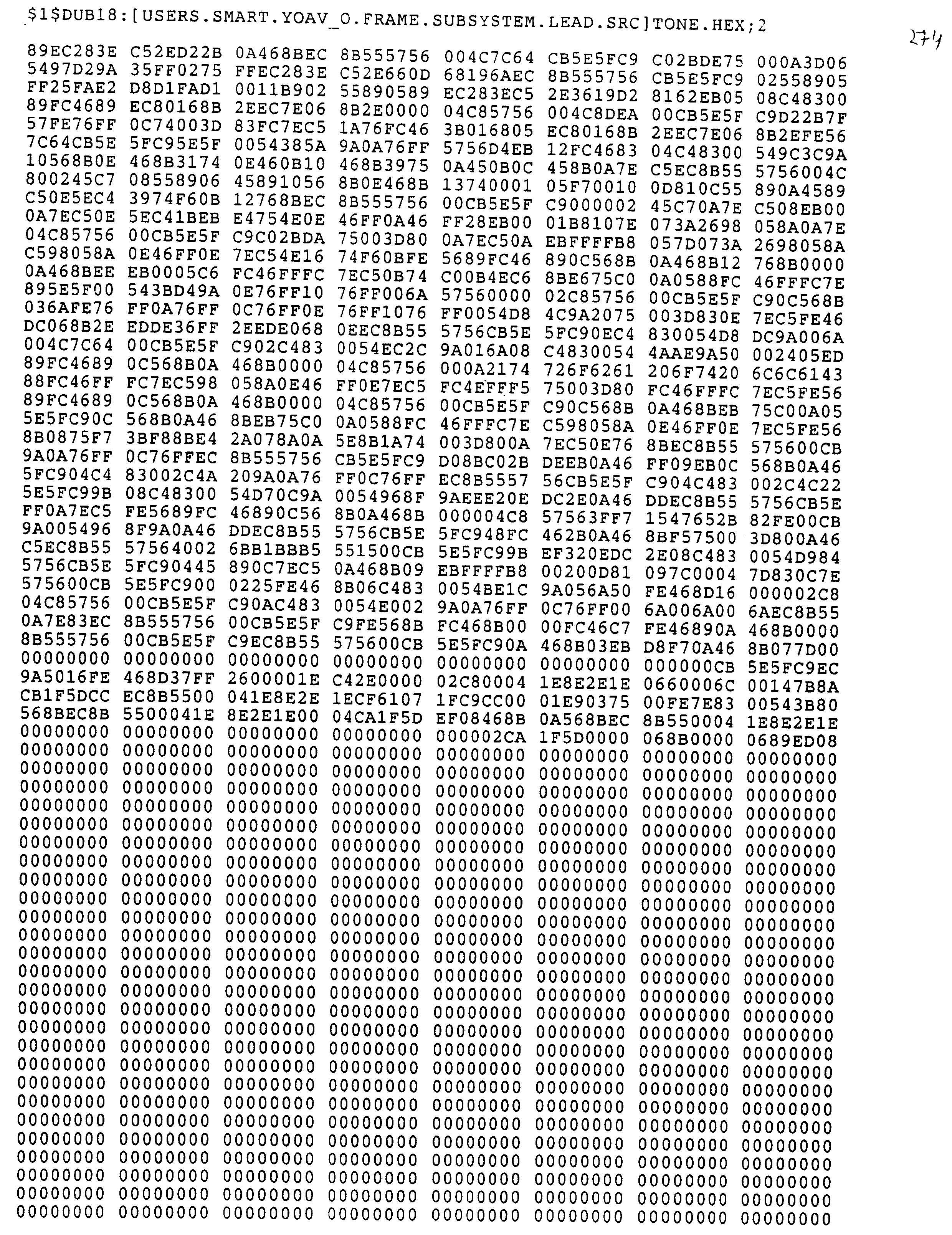

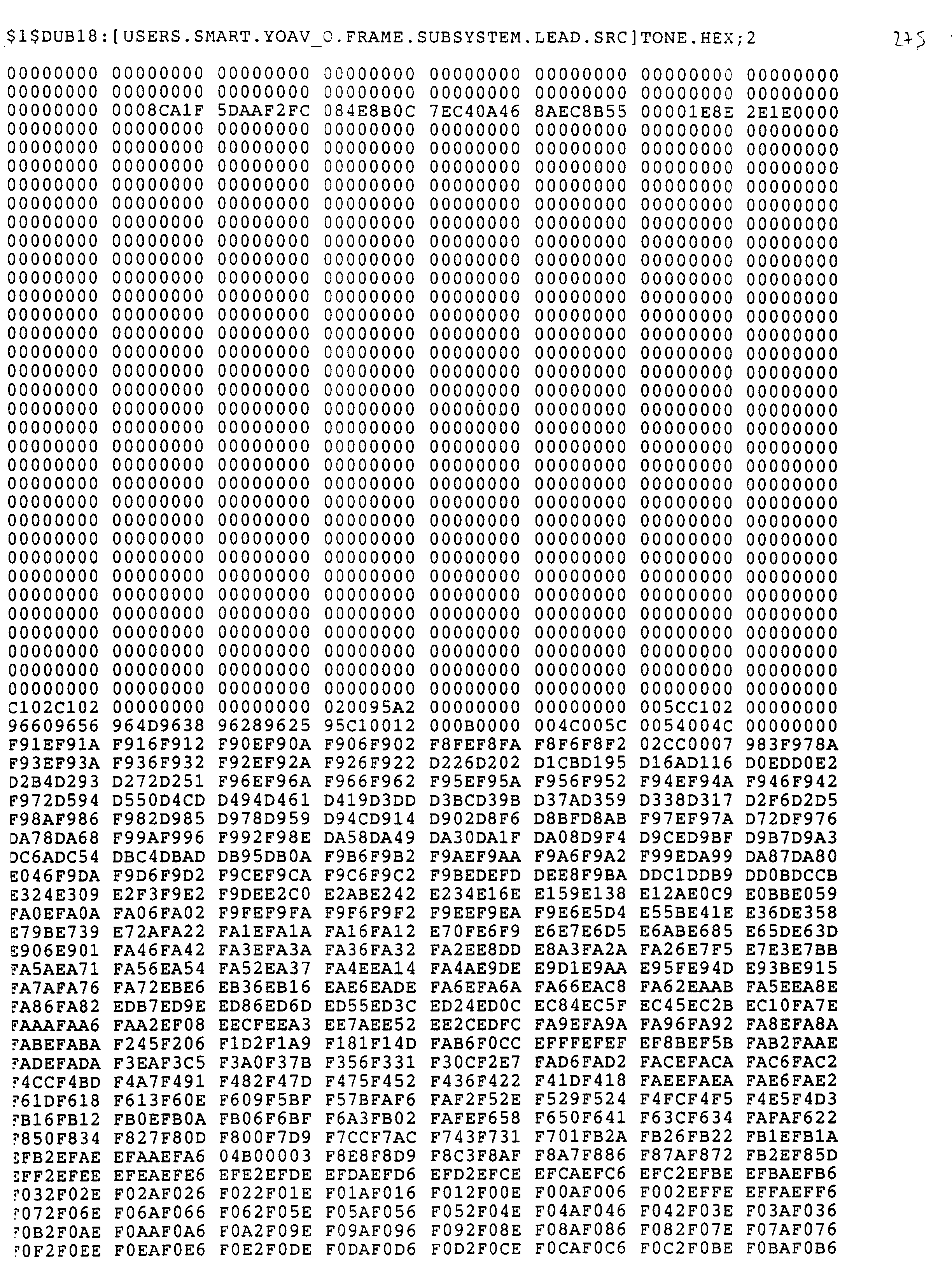

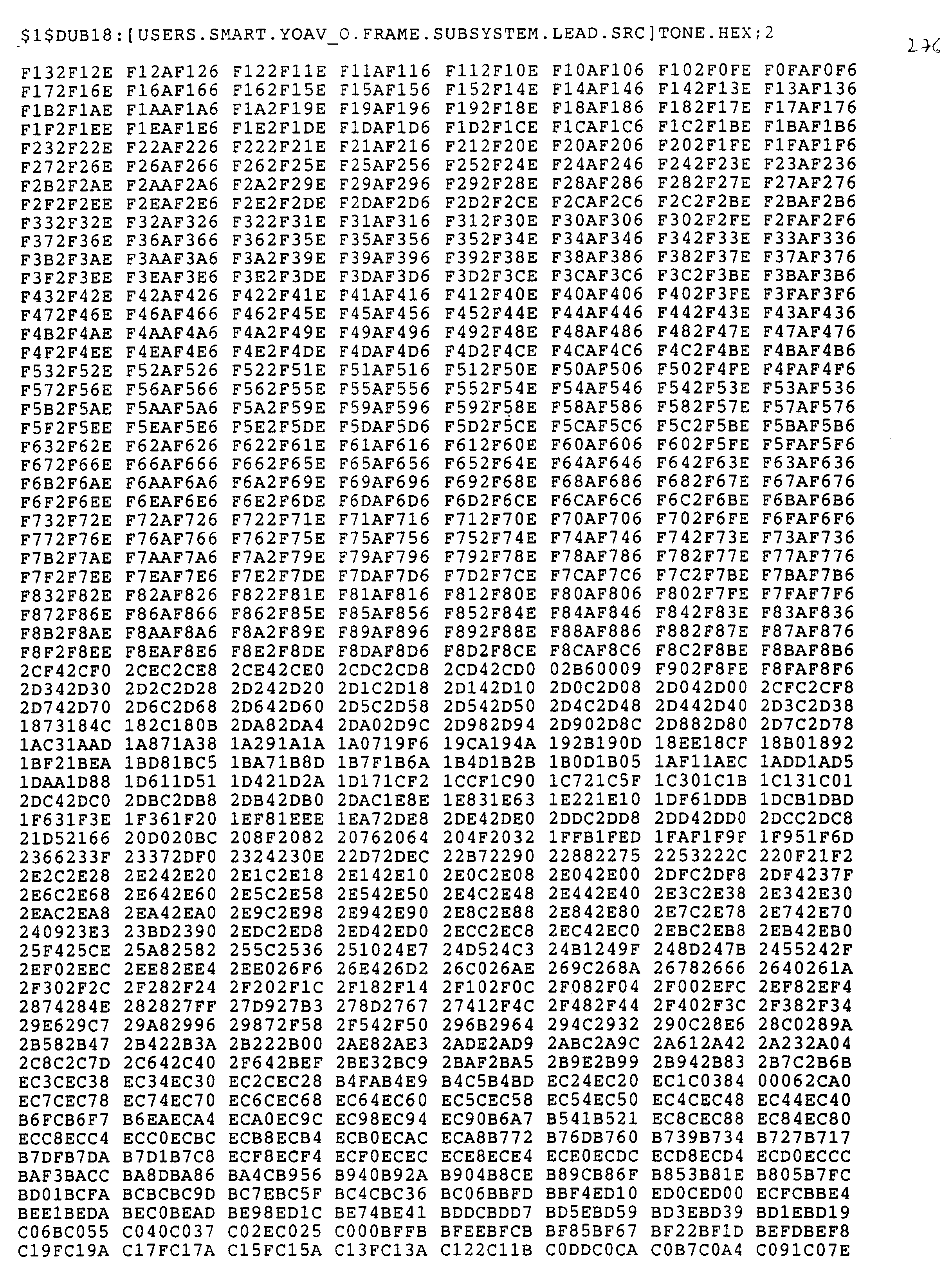

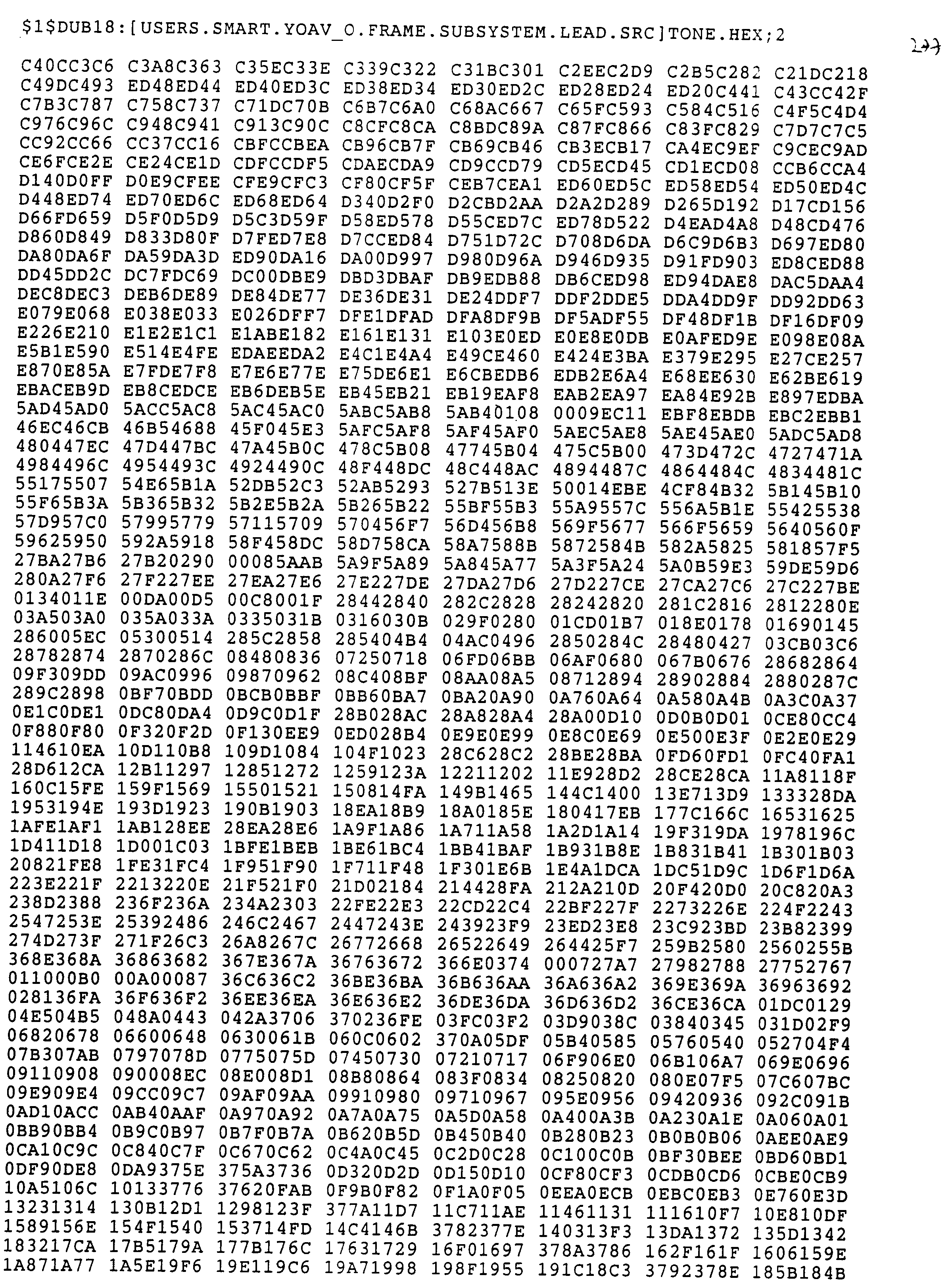

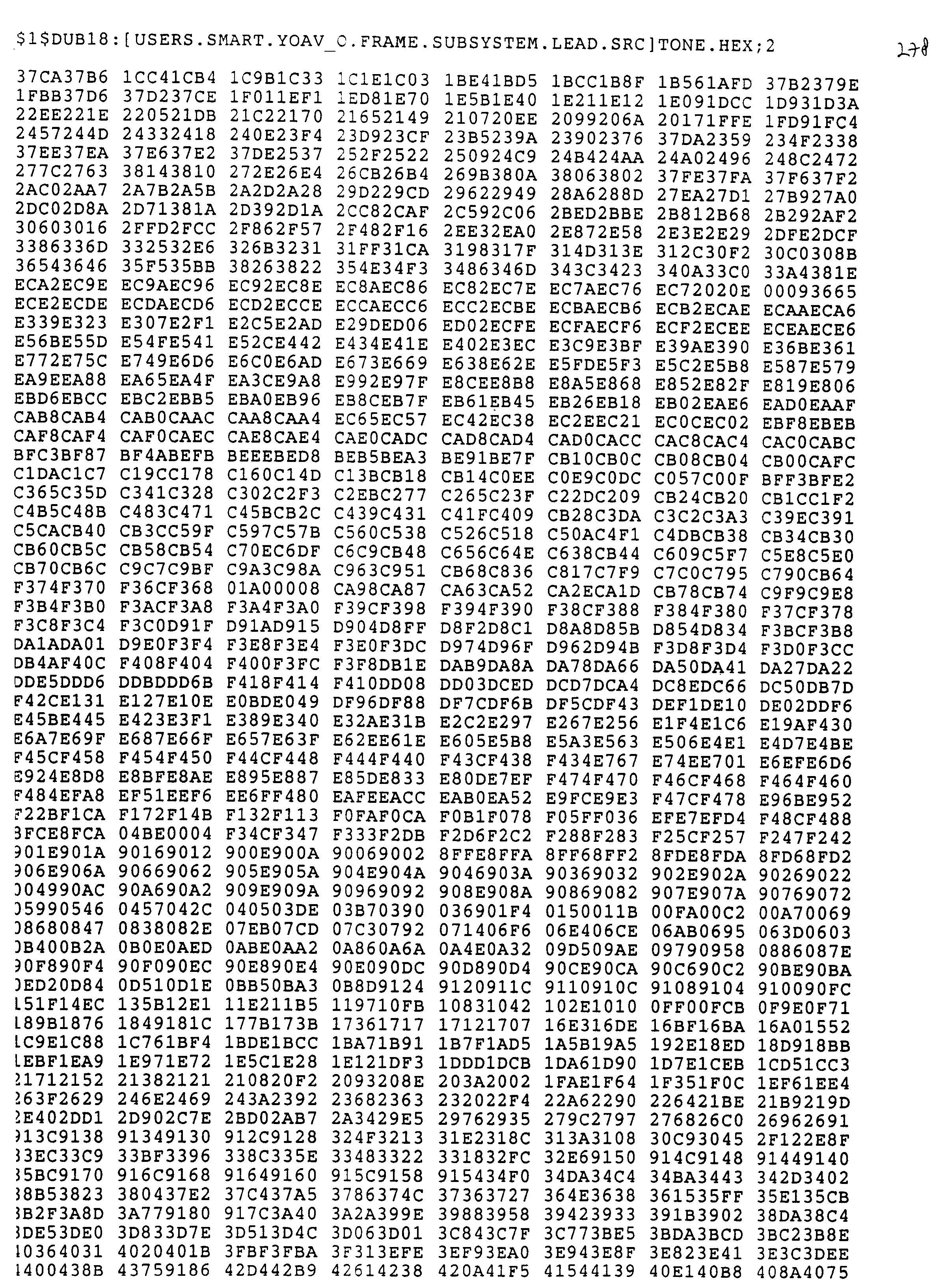

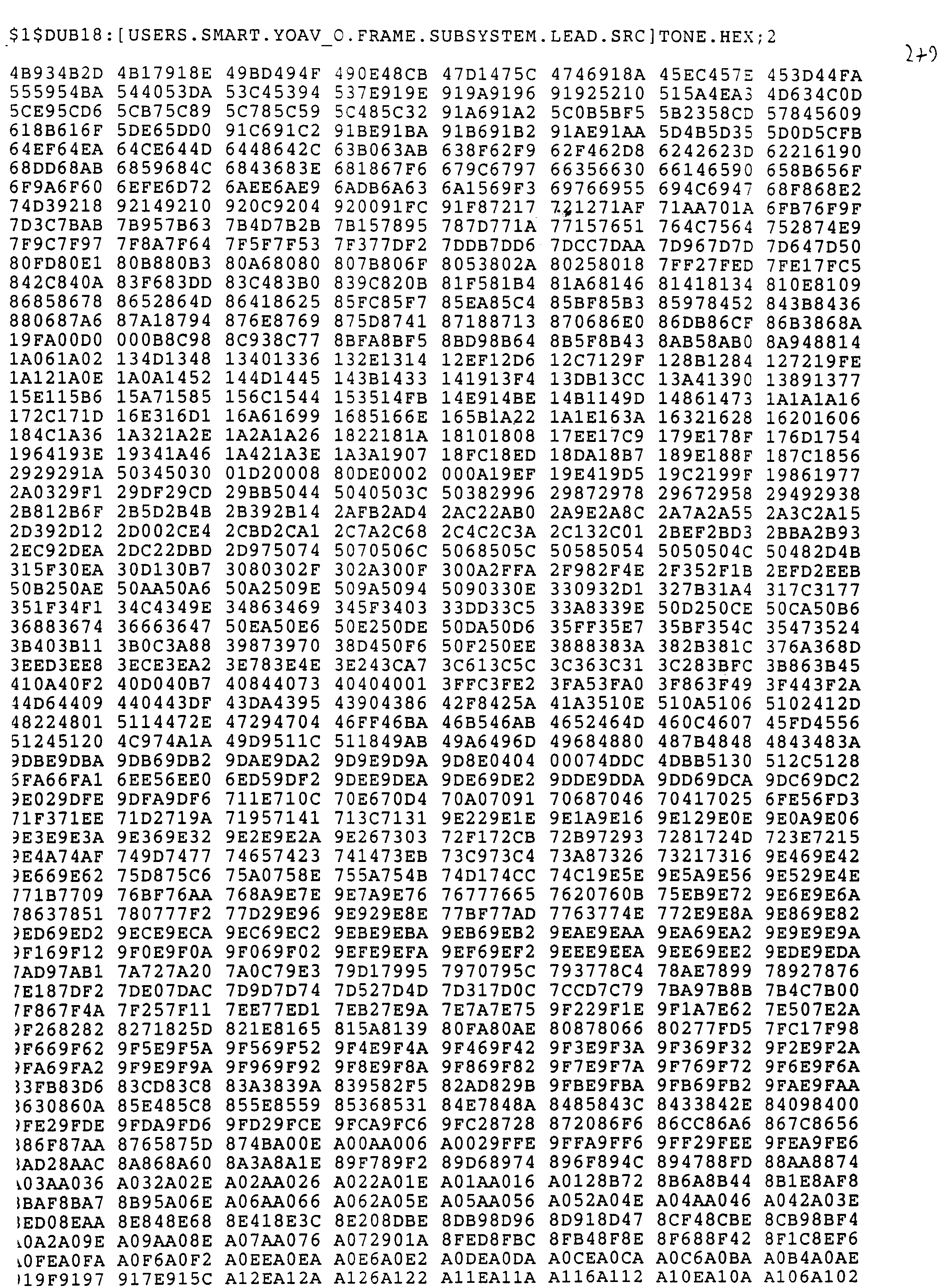

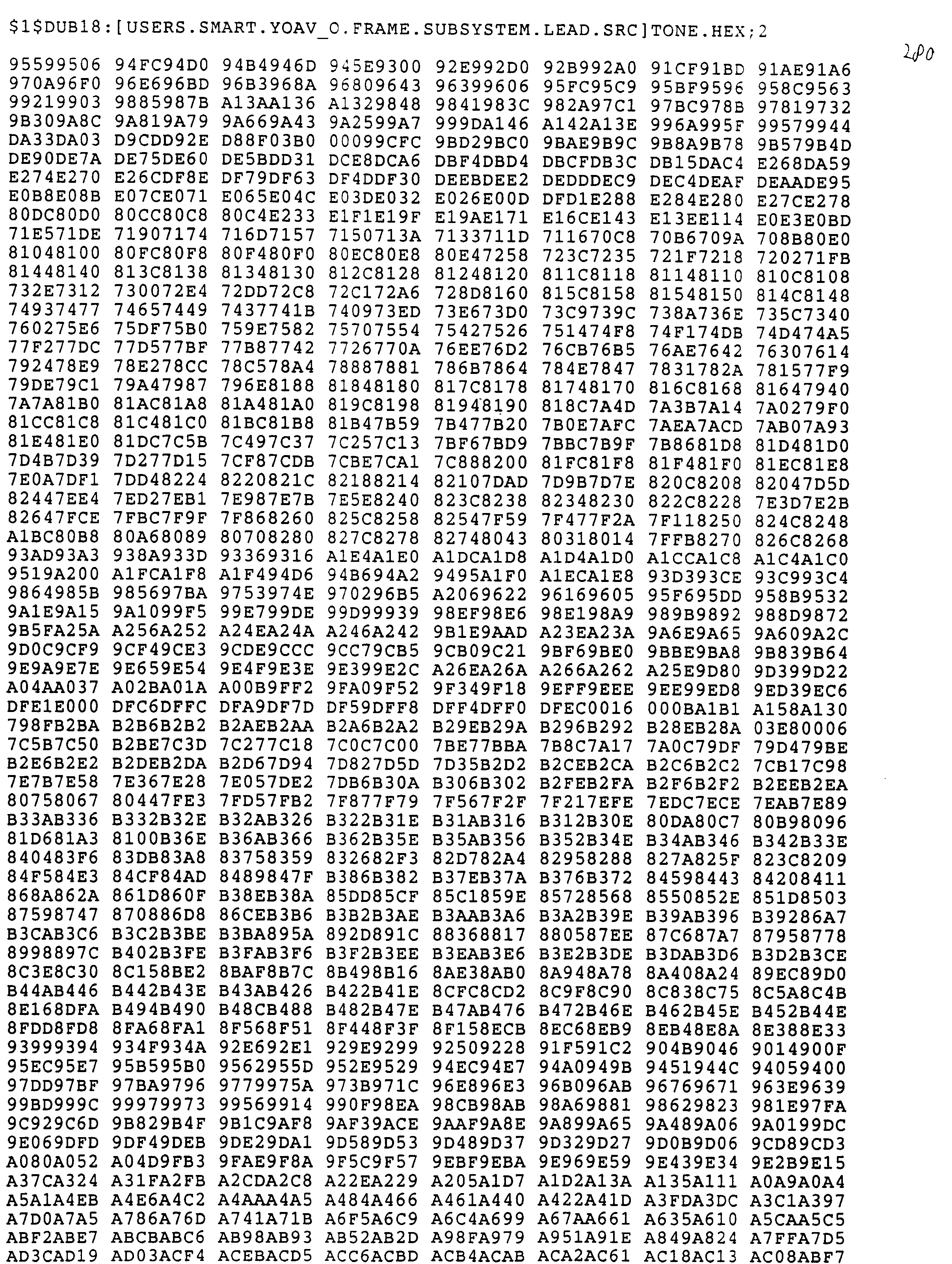

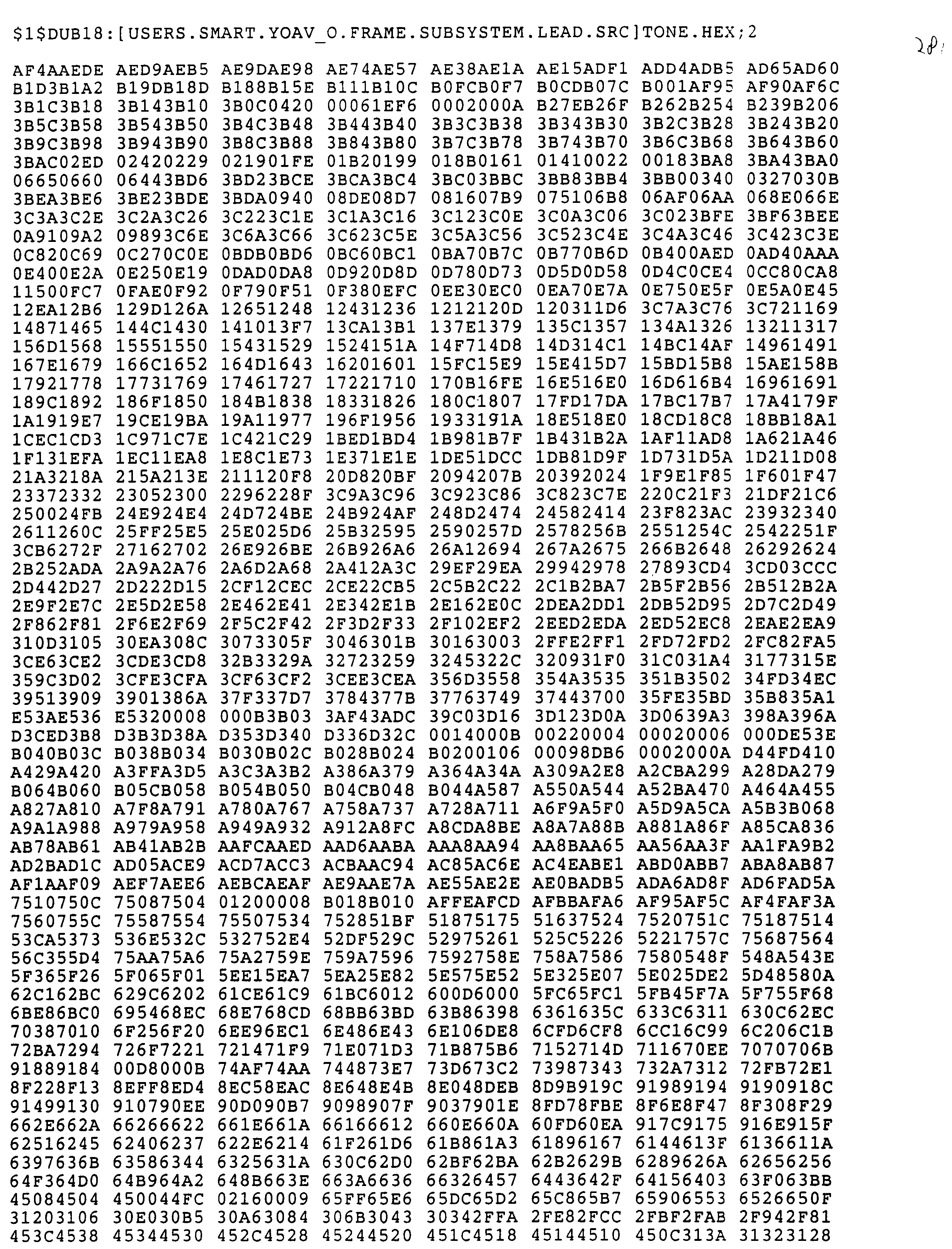

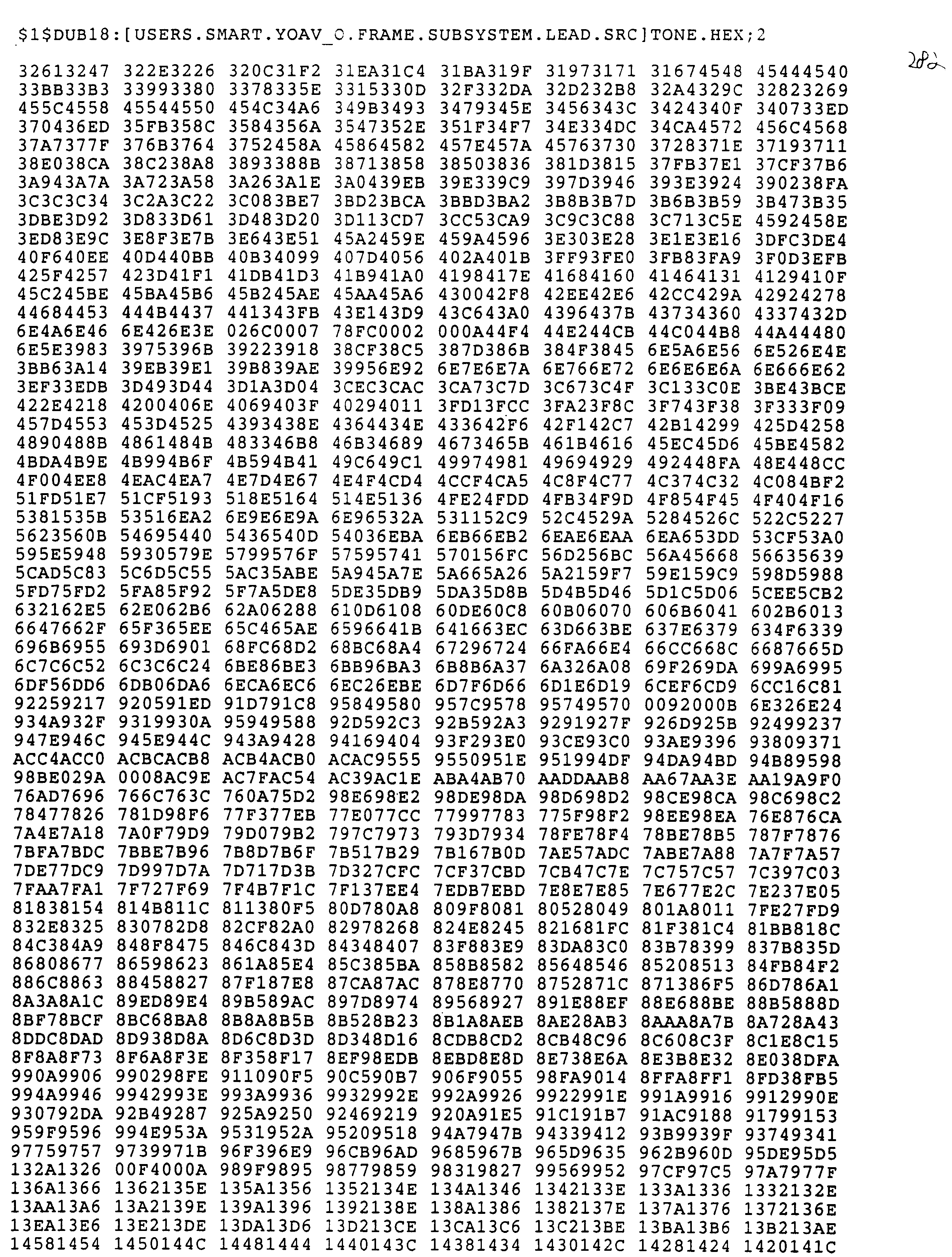

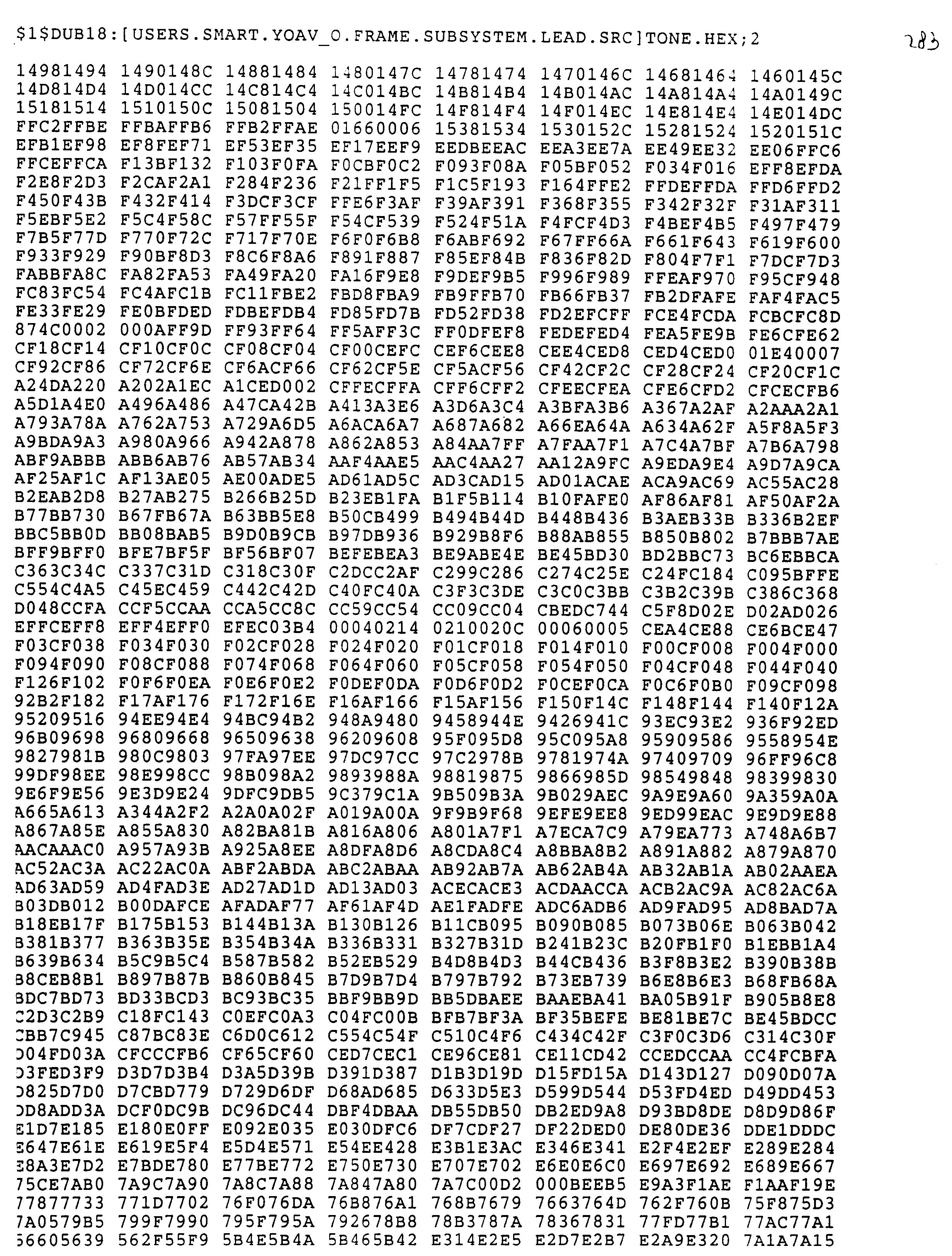

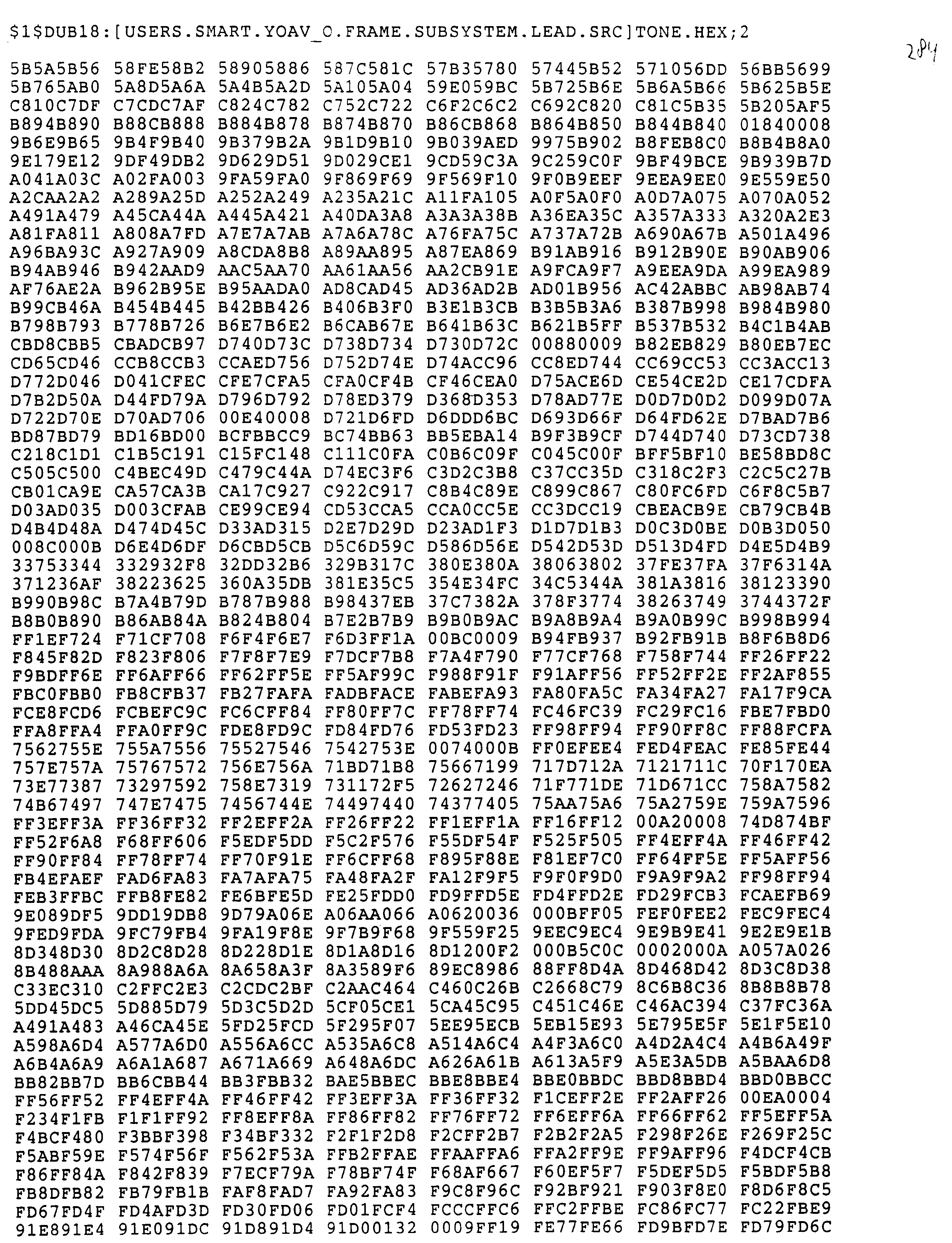

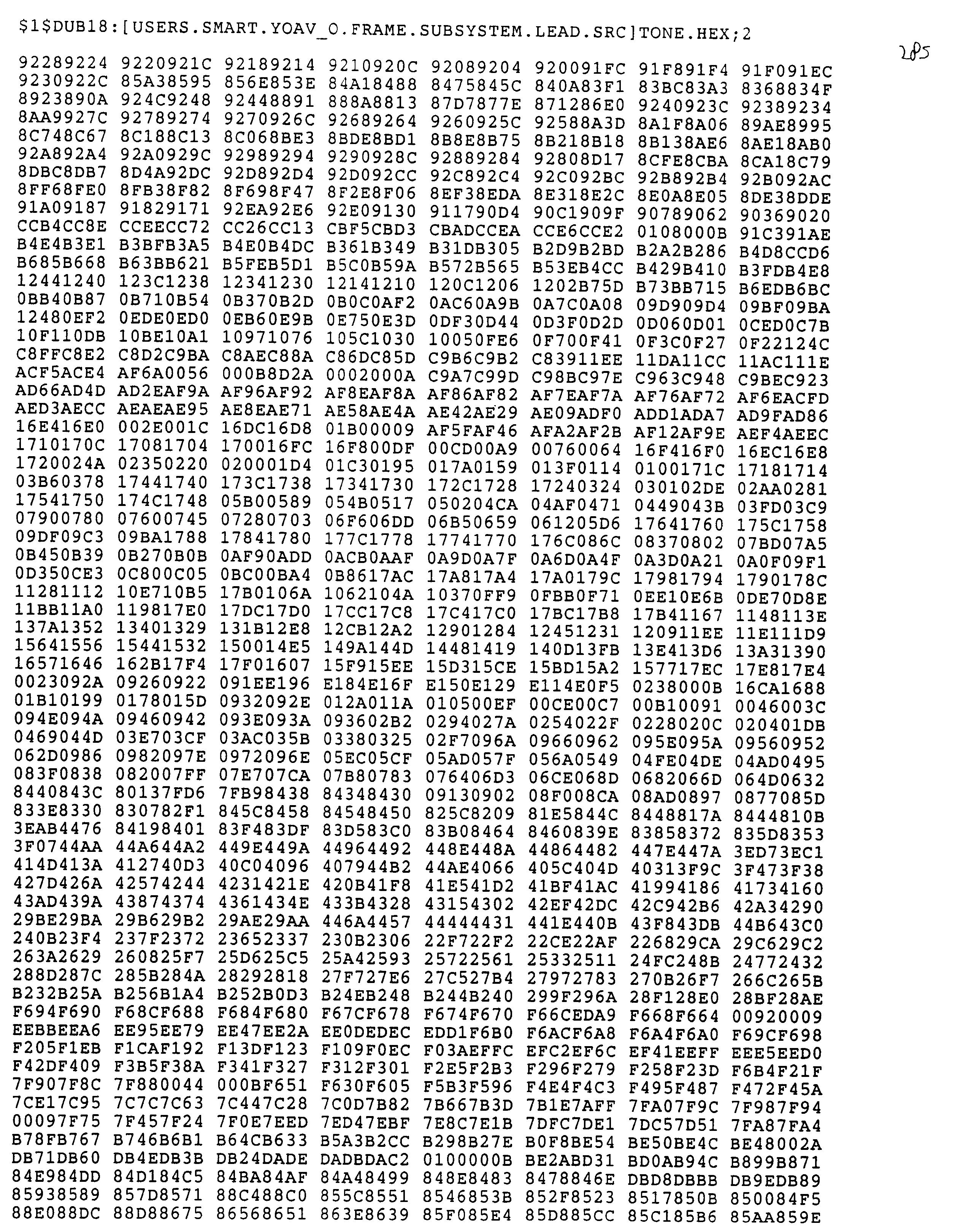

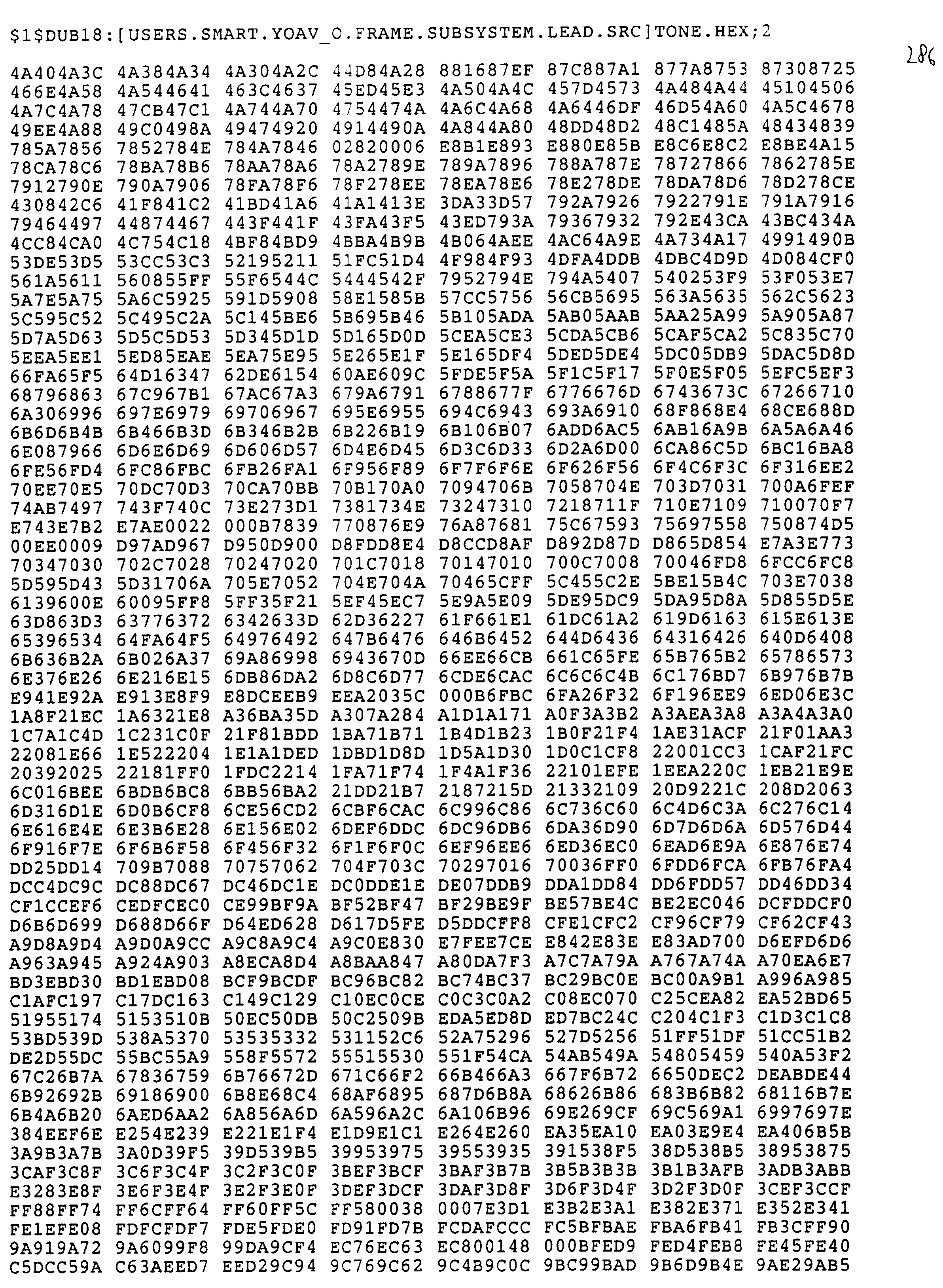

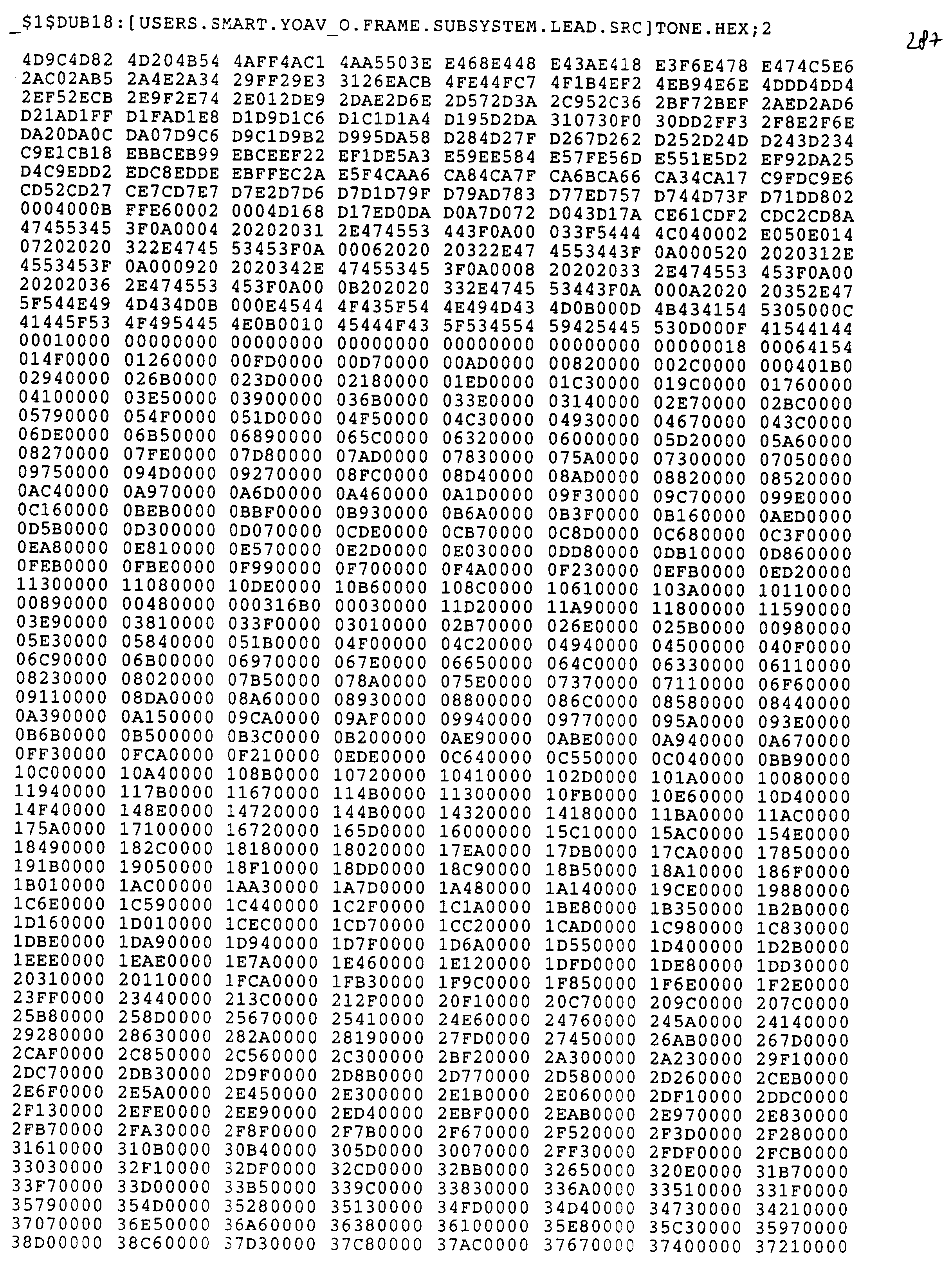

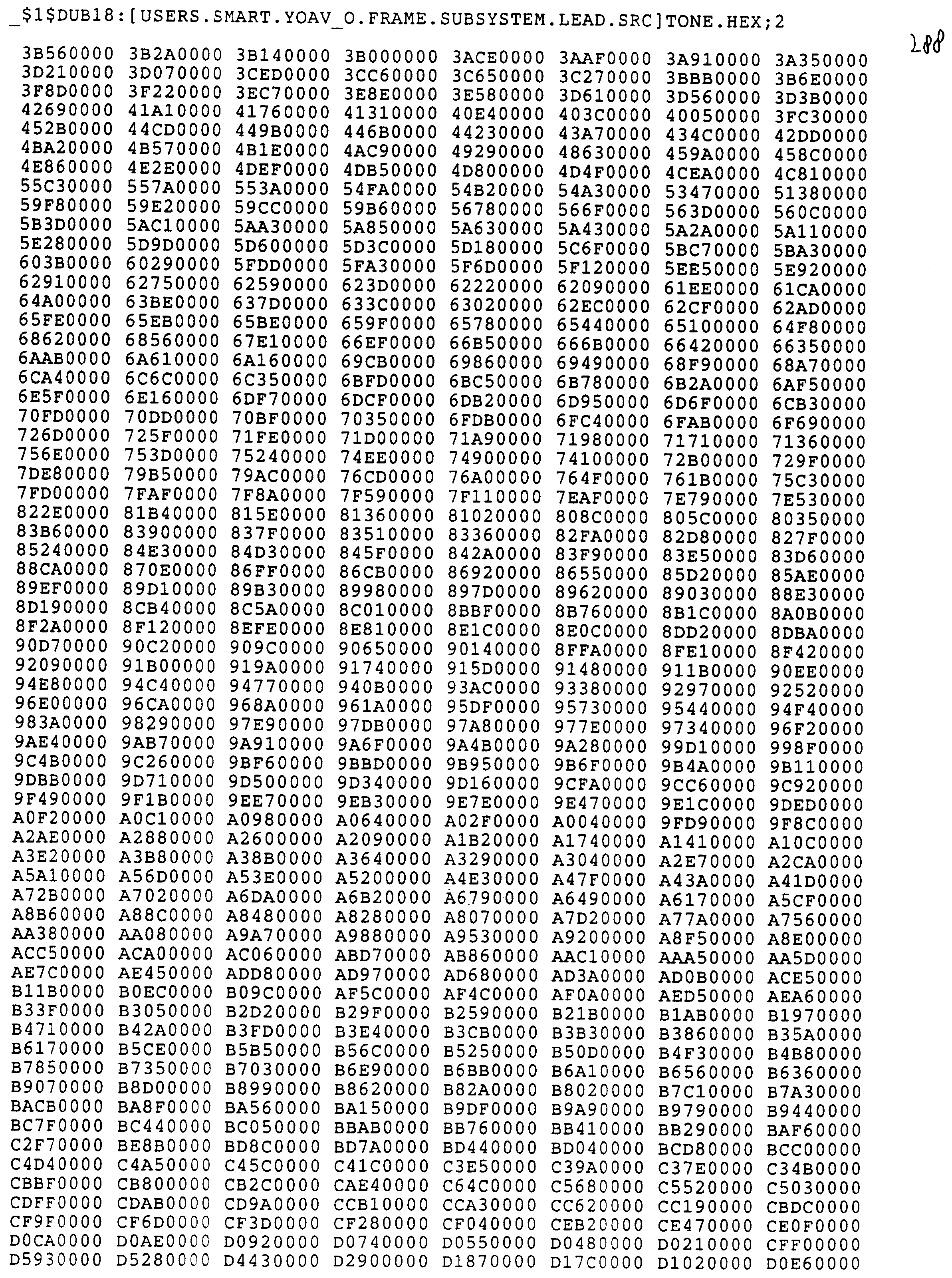

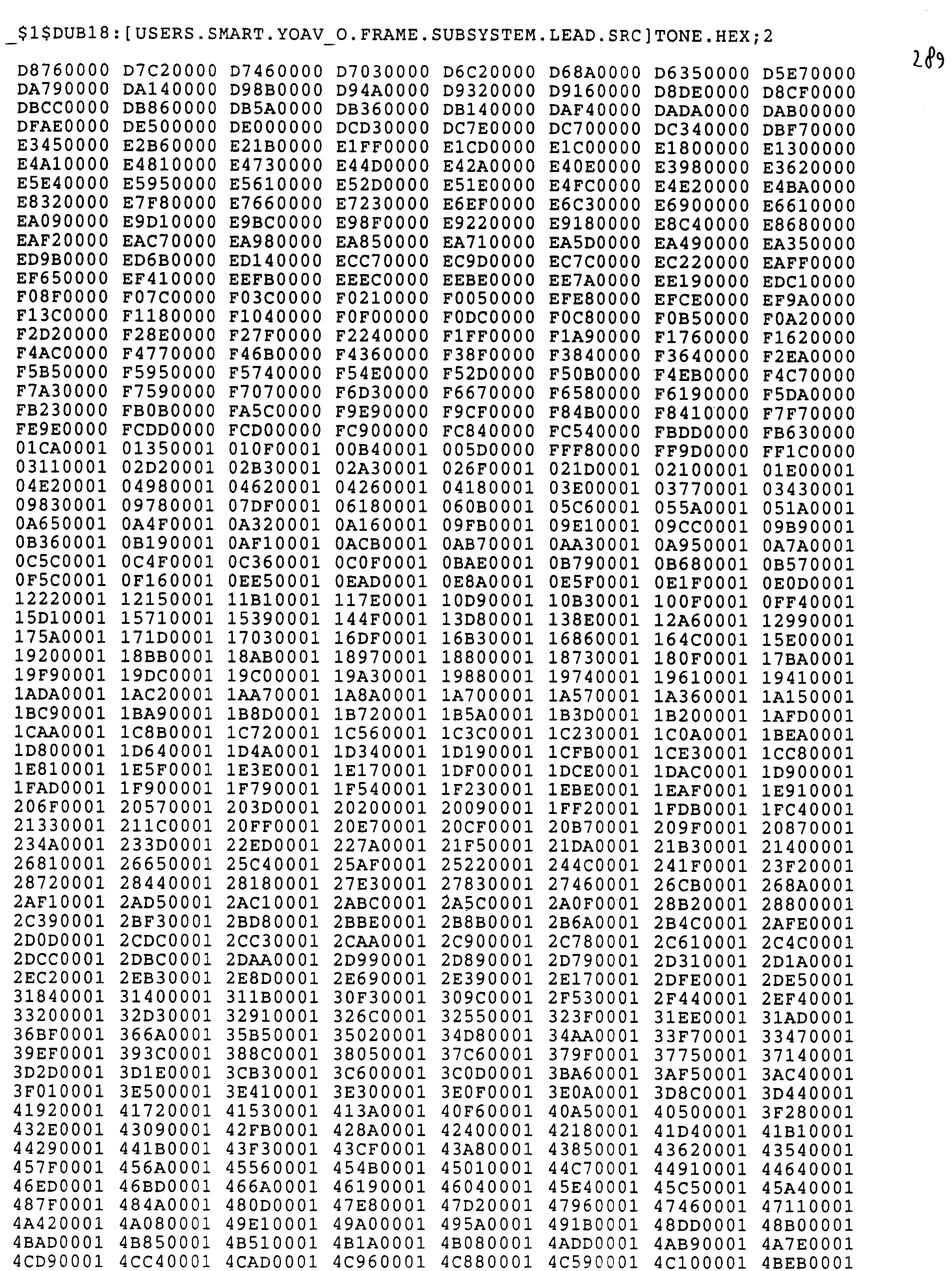

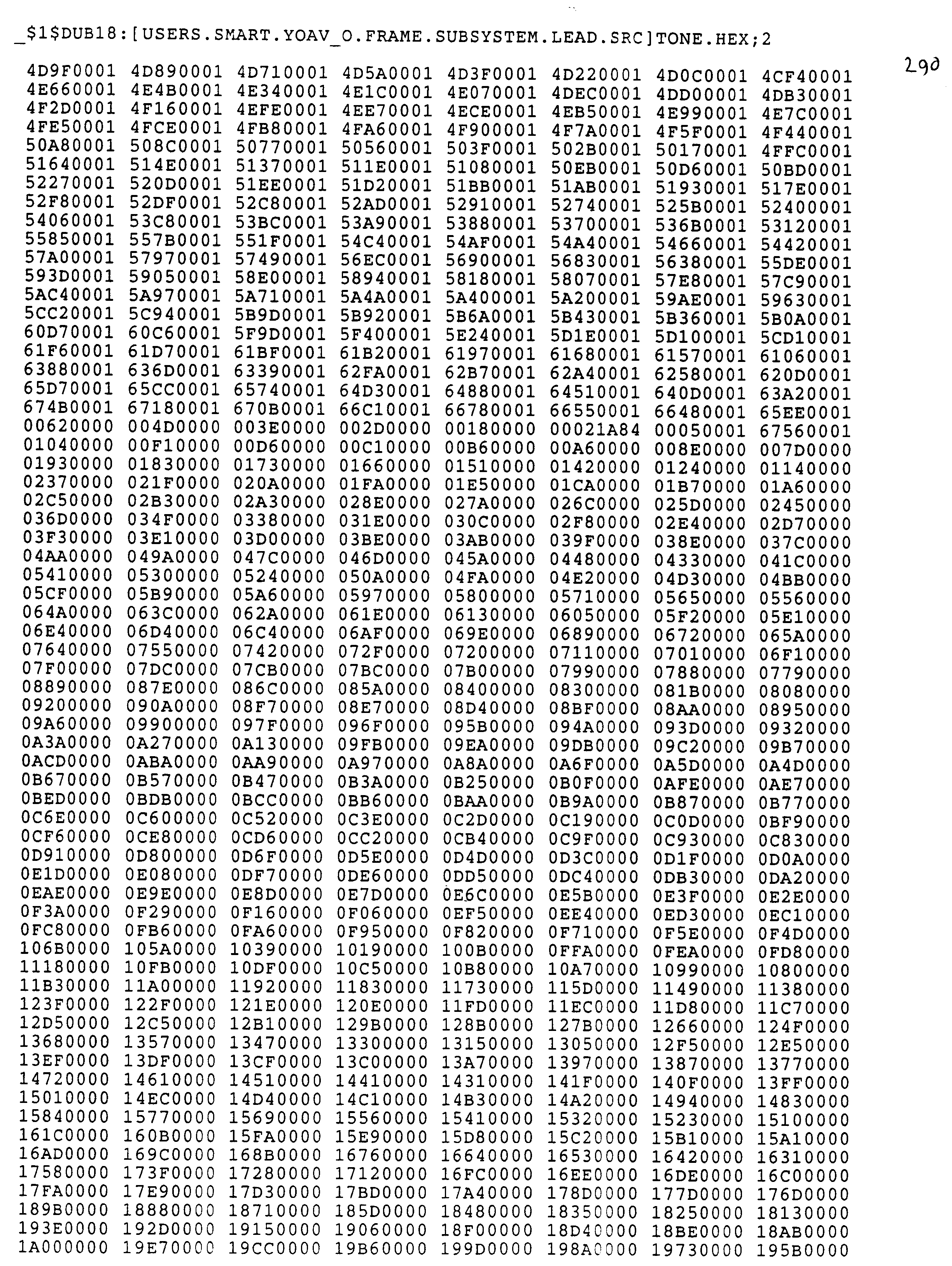

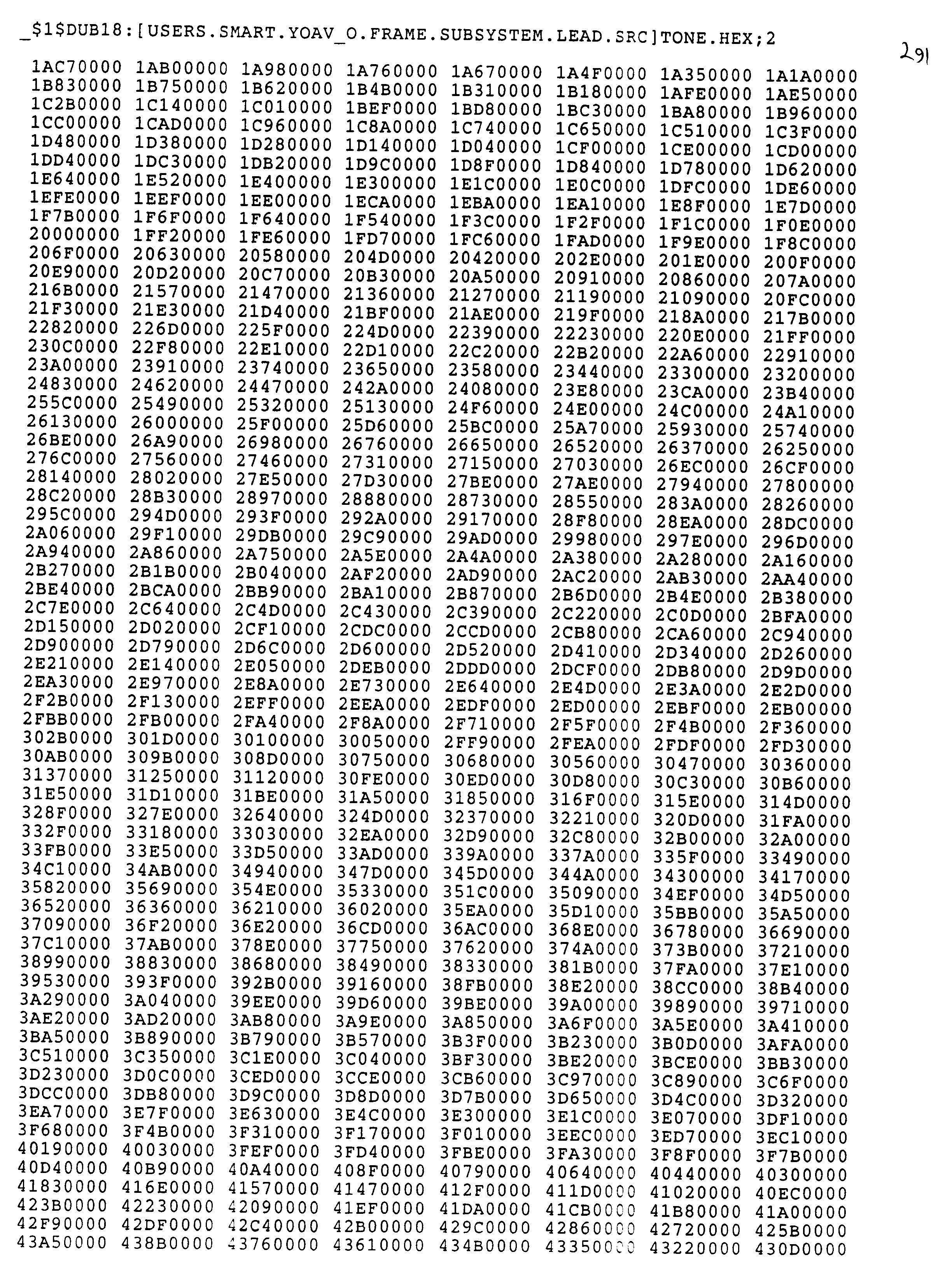

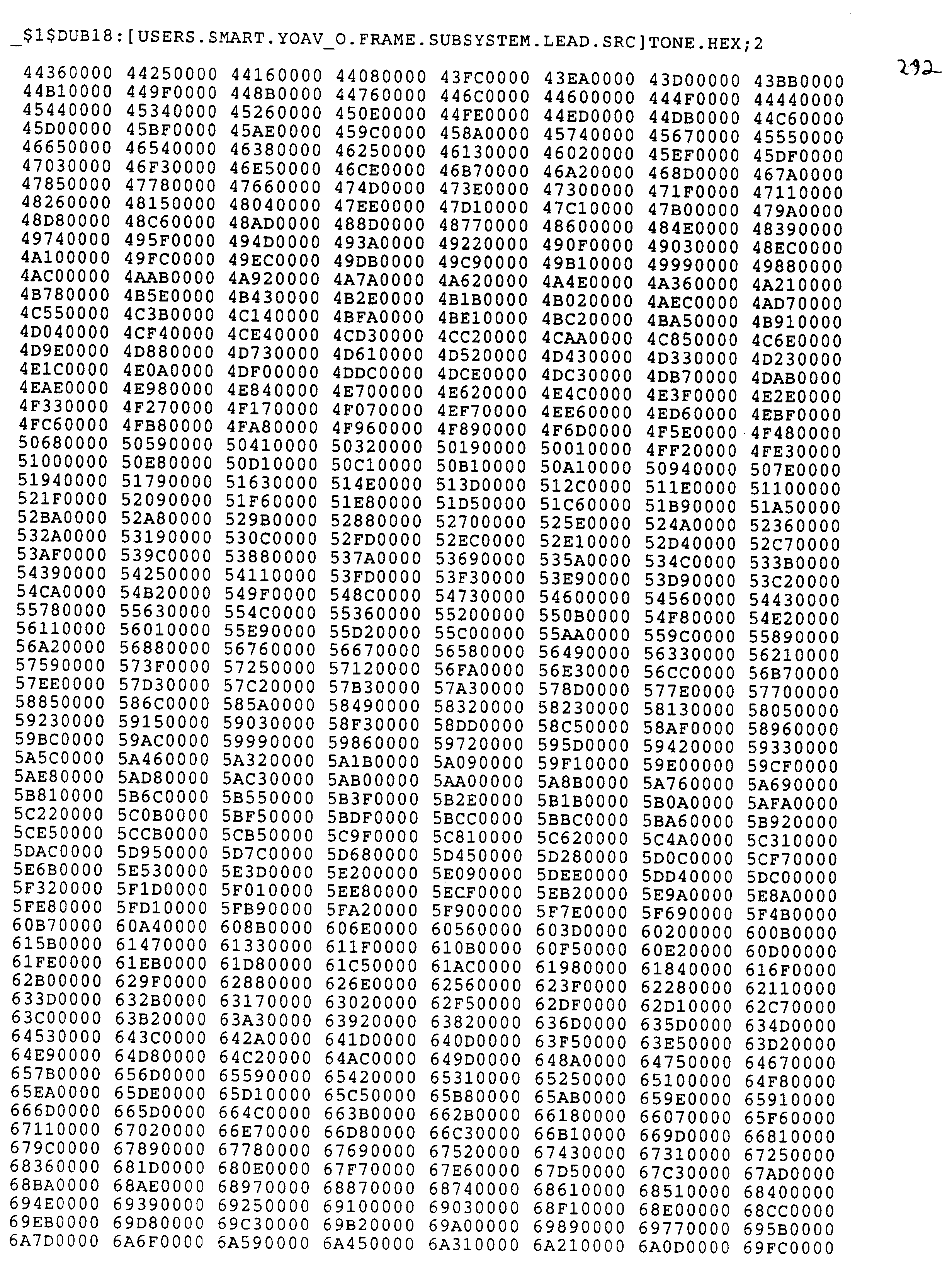

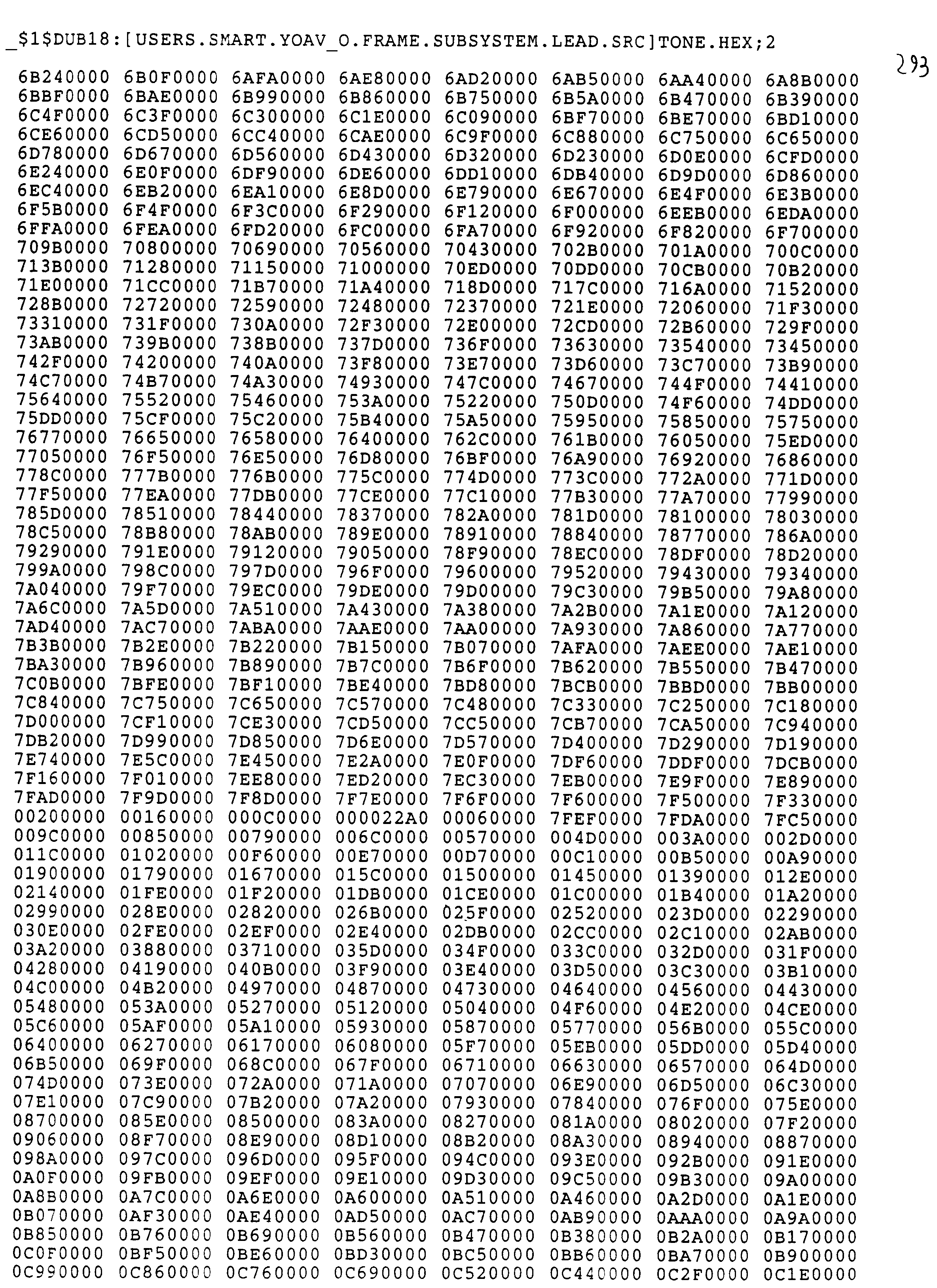

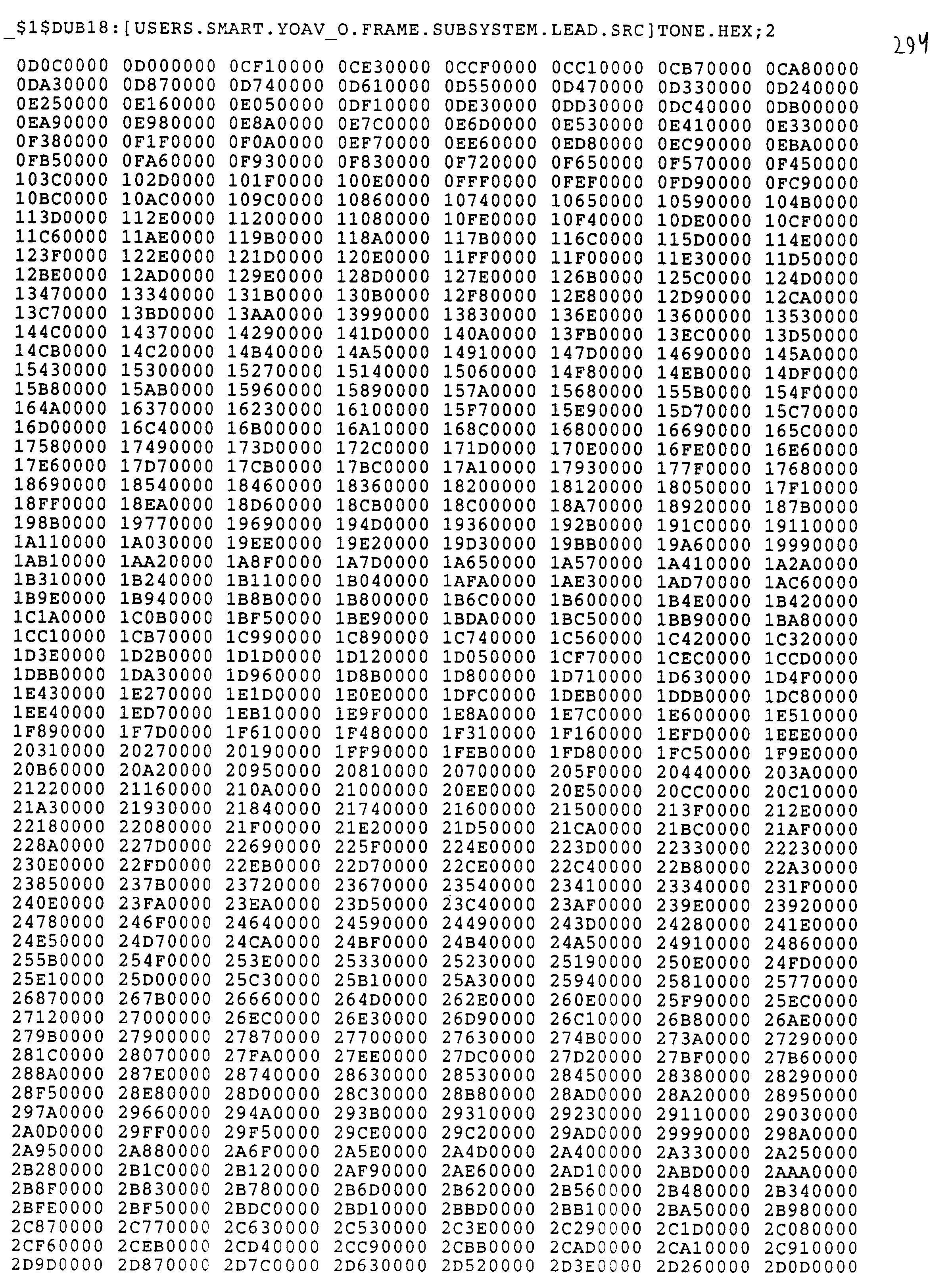

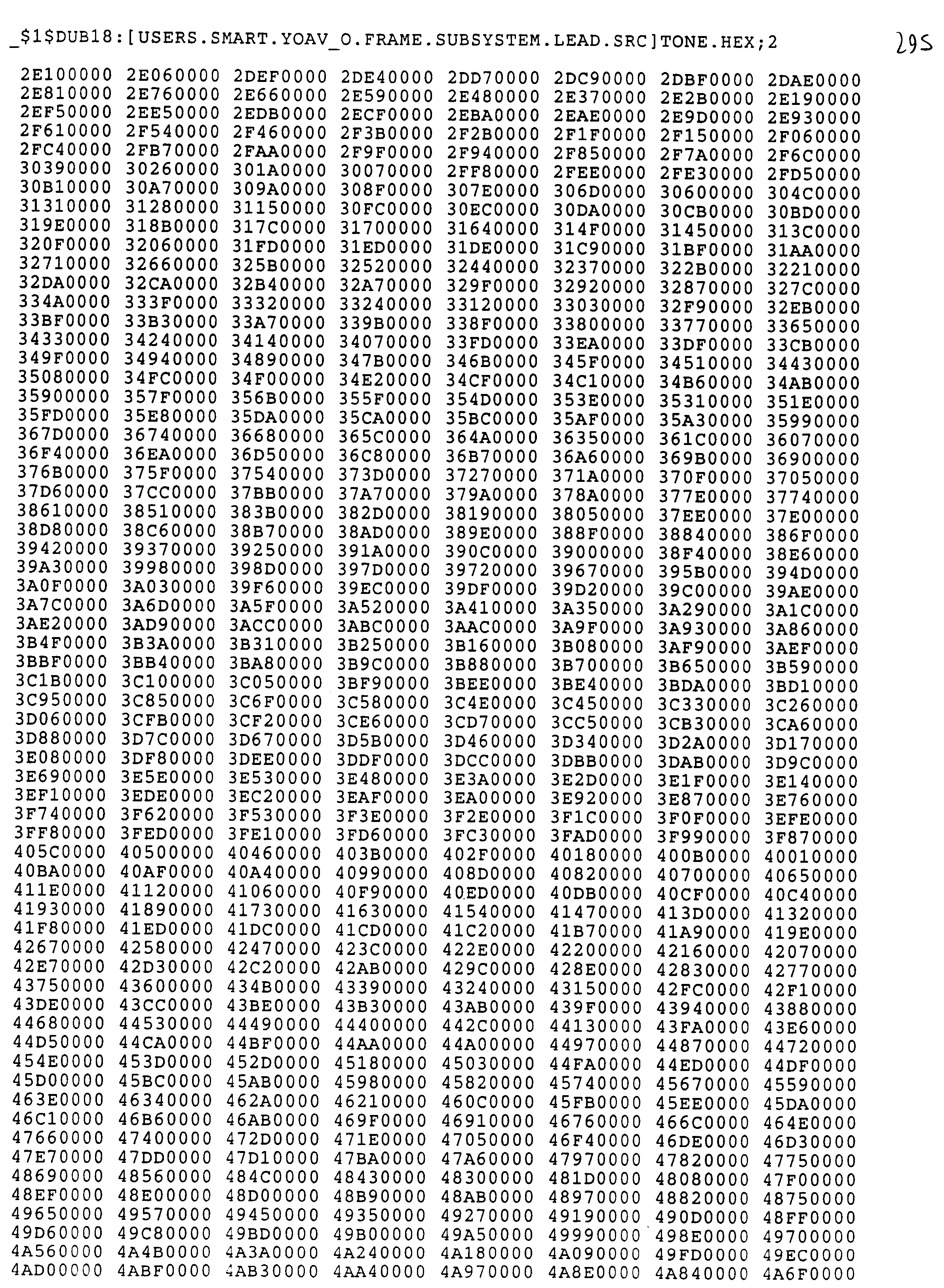

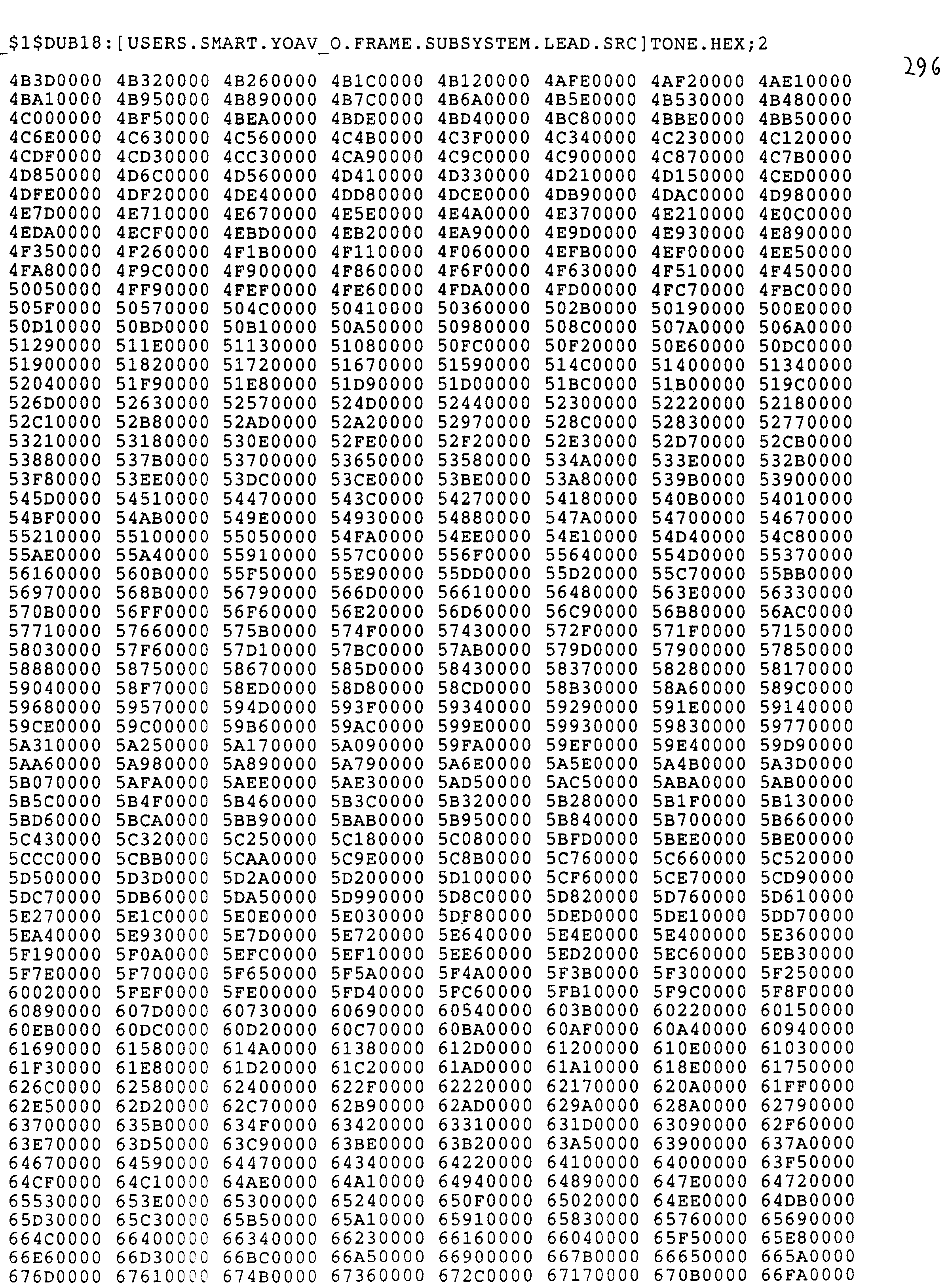

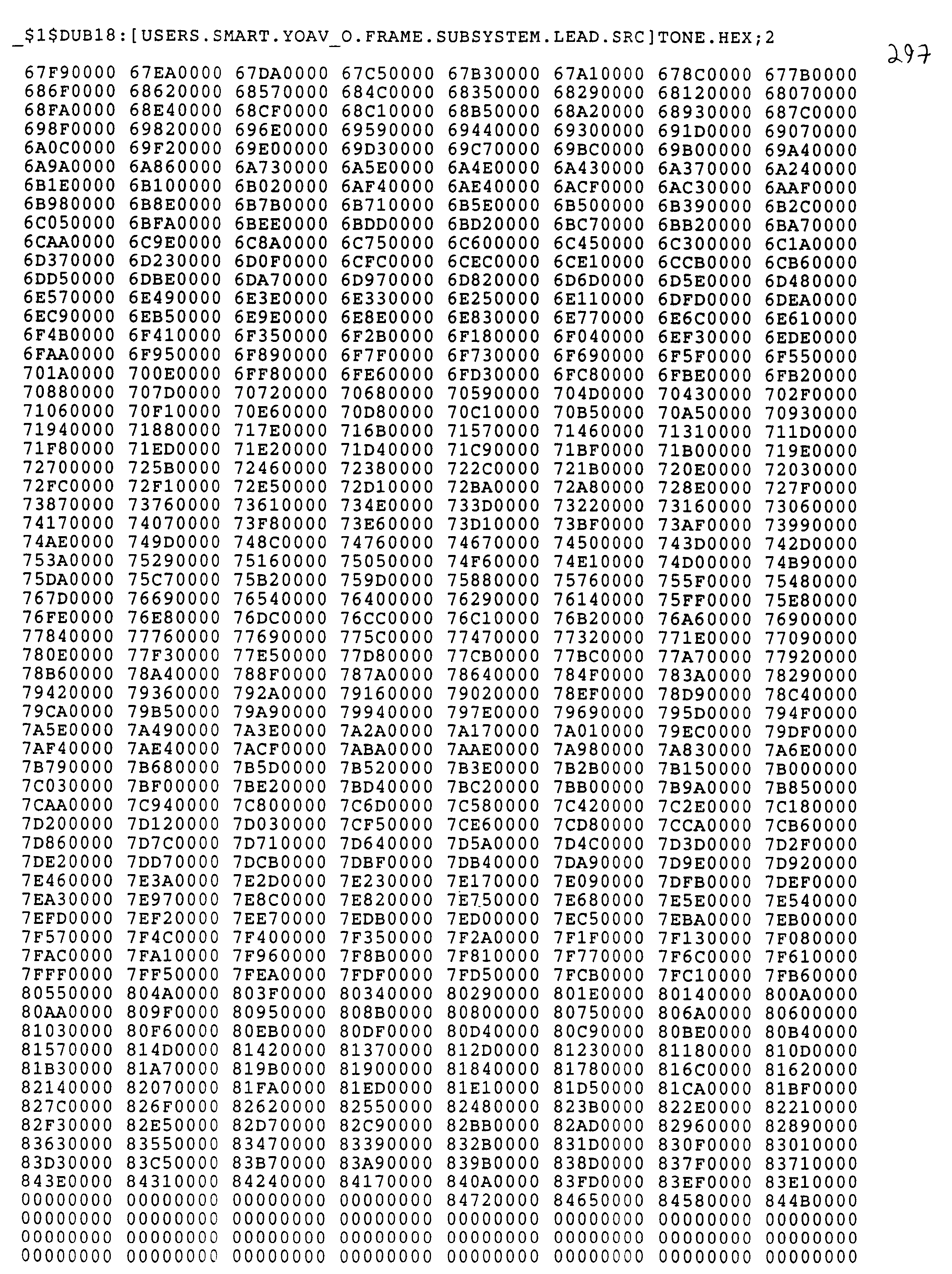

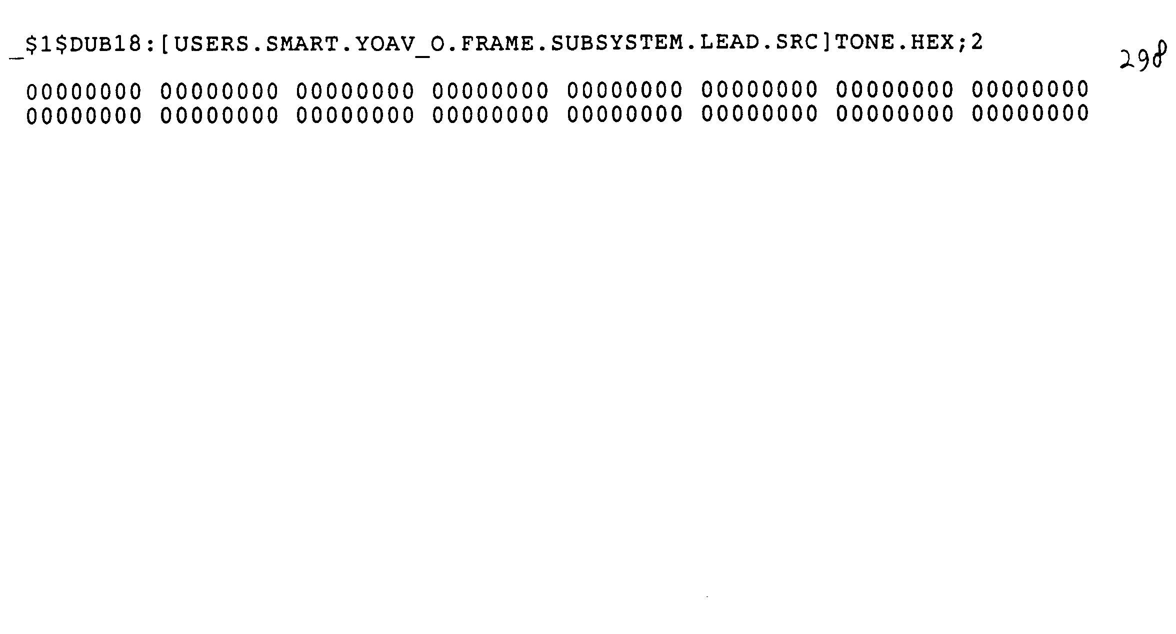

## Claims

1. An electronic separation scanner comprising:
a tool library comprising a plurality of tools, each individual one of the plurality of tools comprising a user interface operative to prompt a user to select values for at least one tone enhancement parameter;
an optical-mechanical scanning unit operative to electronically scan a color image in accordance with at least one user-selected tone enhancement parameter value; and
a selective tool disabler operative to selectively disable access of the user to at least one of the plurality of tools.

2. An electronic separation scanner according to claim 1 wherein the selective tool disabler includes:
a set of rules determining a relationship between use of at least one first tool and disabling of a corresponding set of at least one second tools; and
a user selection monitor operative to receive an indication of use of a first tool and to disable access of the user to the corresponding set of at least one second tools.

3. An electronic separation scanner according to claim 1 wherein the selective tool disabler includes:
a set of rules determining a relationship between type of usage of individual first tools and disabling of a corresponding set of at least one second tools; and
a tool usage monitor operative to receive a characterization of usage of a user-selected first tool and to disable access of the user to the corresponding set of at least one second tool in accordance with the set of rules.

4. An electronic separation scanner according to any of the preceding claims wherein the selective tool disabler comprises a tool sequence generator operative to determine a tool sequence in which at least first and second tools are sequentially presented to the user, the first tool comprising an indication prompting the user to select values for a first set of first tone enhancement parameters and the second tool comprising an indication prompting the user to select values for a second set of second tone enhancement parameters.

5. A tone enhancement tool access control system for controlling user access to tools which allow user selection of tone enhancement parameter values according to which a color image is electronically scanned, the system comprising:
a tool library comprising a plurality of tools, each individual one of the plurality of tools comprising a user interface operative to prompt a user to select values for at least one tone enhancement parameter; and
a selective tool disabler operative to selectively disable access of a user to at least one of the plurality of tools.

6. An electronic separation scanning method comprising the steps of:
providing a tool library comprising a plurality of tools, each individual one of the plurality of tools comprising a user interface operative to prompt a user to select values for at least one tone enhancement parameter;
selectively disabling access of the user to at least one of the plurality of tools; and
electronically scanning a color image in accordance with at least one user-selected tone enhancement parameter value.

7. An electronic separation scanning method according to claim 6 wherein the selectively disabling step includes the steps of:
providing a set of rules determining a relationship between use of at least one first tool and disabling of a corresponding set of at least one second tools; and
receiving an indication of use of a first tool and disabling access of the user to the corresponding set of at least one second tools in accordance with the set of rules.

8. An electronic separation scanning method according to claim 6 wherein the selectively disabling step includes the steps of:
providing a set of rules determining a relationship between type of usage of individual first tools and disabling of a corresponding set of at least one second tools; and
receiving a characterization of usage of a user-selected first tool and disabling access of the user to the corresponding set of at least one second tool in accordance with the set of rules.

9. An electronic separation scanning method according to any of the preceding claims 6-8 wherein the disabling step comprises the step of determining a tool sequence in which at least first and second tools are sequentially presented to the user, the first tool comprising an indication prompting the user to select values for a first set of first tone enhancement parameters and the second tool comprising an indication prompting the user to select values for a second set of second tone enhancement parameters.

10. A tone enhancement tool access control method for controlling user access to tools which allow user selection of tone enhancement parameter values according to which a color image is electronically scanned, the method comprising the steps of:
providing a tool library comprising a plurality of tools, each individual one of the plurality of tools comprising a user interface operative to prompt a user to select values for at least one tone enhancement parameter; and
selectively disabling access of a user to at least one of the plurality of tools.
